# EUROPEAN PATENT SPECIFICATION

(11) **EP 4 219 794 B1**
(45) Date of publication and mention of the grant of the patent: **07.05.2025**
(21) Application number: 23163829.7
(22) Date of filing: 22.03.2018
(51) Int. Cl.: C25B 9/19, C25B 11/00, C25B 15/00

(54) **METHOD FOR PRODUCING A NEW ELECTROLYZER**
VERFAHREN ZUR HERSTELLUNG EINES NEUEN ELEKTROLYSEURS
PROCÉDÉ DE FABRICATION D'UN NOUVEL ÉLECTROLYSEUR

(30) Priority: 22.03.2017 JP 2017056525; 22.03.2017 JP 2017056524; 20.03.2018 JP 2018053149; 20.03.2018 JP 2018053217; 20.03.2018 JP 2018053144; 20.03.2018 JP 2018053231; 20.03.2018 JP 2018053145; 20.03.2018 JP 2018053139; 20.03.2018 JP 2018053146
(43) Date of publication of application: 02.08.2023
(62) Divisional of application: 18771300.3
(73) Proprietor: Asahi Kasei Kabushiki Kaisha, Tokyo 1000006 (JP)
(72) Inventor: Funakawa, Akiyasu, Tokyo, 101-8101 (JP); Kado, Yoshifumi, Tokyo, 101-8101 (JP); Hachiya, Toshinori, Tokyo, 101-8101 (JP); Koike, Jun, Tokyo, 101-8101 (JP)
(74) Representative: dompatent von Kreisler Selting Werner - Partnerschaft von Patent- und Rechtsanwälten mbB

(56) References cited:
- JP-A- 2012 180 537
- JP-A- 2014 114 488
- JP-A- S5 447 877

## Description

### Technical Field

The present invention relates to a method for producing an electrolyzer.

### Background Art

For electrolysis of an alkali metal chloride aqueous solution such as salt solution and electrolysis of water, methods by use of an electrolyzer including a membrane, more specifically an ion exchange membrane or microporous membrane have been employed. This electrolyzer includes many electrolytic cells connected in series therein, in many cases. A membrane is interposed between each of electrolytic cell to perform electrolysis. In an electrolytic cell, a cathode chamber including a cathode and an anode chamber including an anode are disposed back to back with a partition wall (back plate) interposed therebetween or via pressing by means of press pressure, bolt tightening, or the like.

The anode and the cathode for use in these electrolyzers now are each fixed to the anode chamber or the cathode chamber of an electrolytic cell by a method such as welding and folding, and thereafter, stored or transported to customers. Meanwhile, each membrane in a state of being singly wound around a vinyl chloride (VC) pipe is stored or transported to customers. Each customer arranges the electrolytic cell on the frame of an electrolyzer and interposes the membrane between electrolytic cells to assemble the electrolyzer. In this manner, electrolytic cells are produced, and an electrolyzer is assembled by each customer. Patent Literatures 1 and 2 each disclose a structure formed by integrating a membrane and an electrode as a structure applicable to such an electrolyzer.

Patent Literature 3 discloses a method for manufacturing an electrolytic cell having at least an anode, an ion exchange rnernbrane and a cathode as components and includes: a preparation step for preparing condensed water by condensing evaporated steam produced by the evaporation and condensation of a sodium hydroxide solution; a contact step for bringing at least one of the ion exchange membrane or the cathode into contact with the condensed water; and an assembly step for assembling the components simultaneously with or after the contact step.

Patent Literature 4 discloses an ozone water generator having an electrolytic cell, in which two electrodes opposing to each other through an ion exchange membrane are accornrnodated, and generates ozone water by dissolving ozone gas, generated by the electrolysis of water in the electrolytic cell, into water.

Patent Literature 5 discloses a method of producing caustic alkali metal from alkali rnetal chloride by use of anion exchange membrane, the alkali metal chloride being electrolyzed with the anion exchange resin membrane stuck to both the anode and the cathode.

### Citation List

### Patent Literature

Patent Literature 1
   Japanese Patent Laid-Open No. 58-048686
Patent Literature 2
   Japanese Patent Laid-Open No. 55-148775
Patent Literature 3
   JP 2012 180537 A
Patent Literature 4
   JP 2014 114488 A
Patent Literature 5
   JP S54 47877 A

### Summary of Invention

### Technical Problem

When electrolysis operation is started and continued, each part deteriorates and electrolytic performance are lowered due to various factors, and each part is replaced at a certain time point. The membrane can be easily renewed by extracting from an electrolytic cell and inserting a new membrane. In contrast, the anode and the cathode are fixed to the electrolytic cell, and thus, there is a problem of occurrence of an extremely complicated work on renewing the electrode, in which the electrolytic cell is removed from the electrolyzer and conveyed to a dedicated renewing plant, fixing such as welding is removed and the old electrode is striped off, then a new electrode is placed and fixed by a method such as welding, and the cell is conveyed to the electrolysis plant and placed back to the electrolyzer. It is considered herein that the structure formed by integrating a membrane and an electrode via thermal compression described in Patent Literatures 1 and 2 is used for the renewing described above, but the structure, which can be produced at a laboratory level relatively easily, is not easily produced so as to be adapted to an electrolytic cell in an actual commercially-available size (e.g., 1.5 m in length, 3 m in width). Moreover, electrolytic performance (such as electrolysis voltage, current efficiency, and common salt concentration in caustic soda) and durability are extremely poor, and chlorine gas and hydrogen gas are generated on the electrode interfacing the membrane. Thus, when used in electrolysis for a long period, complete delamination occurs, and the structure cannot be practically used.

The present invention has been made in view of the above problems possessed by the conventional art and is intended to provide an electrode for electrolysis, a laminate, a wound body, an electrolyzer, a method for producing an electrolyzer, a method for renewing an electrode, a method for renewing a laminate, and a method for producing a wound body below.

### (First object)

It is an object of the present invention to provide an electrode for electrolysis, a laminate, and a wound body that make transport and handling easier, markedly simplify a work when a new electrolyzer is started or a degraded electrode is renewed, and furthermore also can maintain or improve the electrolytic performance.

### (Second object)

It is an object of the present invention to provide a laminate that can improve the work efficiency during electrode renewing in an electrolyzer and further can exhibit excellent electrolytic performance also after renewing.

### (Third object)

It is an object of the present invention to provide a laminate that can improve the work efficiency during electrode renewing in an electrolyzer and further can exhibit excellent electrolytic performance also after renewing, from a viewpoint different from the second object described above.

### (Fourth object)

It is a fourth object of the present invention to provide an electrolyzer, a method for producing an electrolyzer, and a method for renewing a laminate that have excellent electrolytic performance as well as can prevent damage of a membrane.

### (Fifth object)

It is an object of the present invention to provide a method for producing an electrolyzer, a method for renewing an electrode, and a method for producing a wound body that can improve the work efficiency during electrode renewing in an electrolyzer.

### (Sixth object)

It is an object of the present invention to provide a method for producing an electrolyzer that can improve the work efficiency during electrode renewing in an electrolyzer, from a viewpoint different from the fifth object described above.

### (Seventh object)

It is an object of the present invention to provide a method for producing an electrolyzer that can improve the work efficiency during electrode renewing in an electrolyzer, from a viewpoint different from the fifth and sixth objects described above.

### Solution to Problem

As a result of the intensive studies by the present inventors to achieve the first object, production of an electrode for electrolysis that has a small mass per unit area and can be bonded to a membrane such as an ion exchange membrane and a microporous membrane or a degraded electrode with a weak force makes transport and handling easier, can markedly simplify a work when a new electrolyzer is started or a degraded part is renewed, and furthermore can markedly improve the characteristics in comparison with the electrolytic performance in the conventional art. Additionally, the present inventors have found that the characteristics can be equivalent to or be improved than the electrolytic performance of a conventional electrolytic cell, for which renewing work is complicated.

That is, disclosed but not claimed is the following.
[1] An electrode for electrolysis having a mass per unit area of 48 mg/cm² or less and a force applied per unit mass·unit area of 0.08 N/mg·cm² or more.
[2] The electrode for electrolysis according to [1], wherein the electrode for electrolysis comprises a substrate for electrode for electrolysis and a catalytic layer, and the substrate for electrode for electrolysis has a thickness of 300 µm or less.
[3] The electrode for electrolysis according to [1] or [2], wherein a proportion measured by a method (3) below is 75% or more:
   [Method (3)]
   A membrane (170 mm square), which is obtained by applying inorganic material particles and a binder to both surfaces of a membrane of a perfluorocarbon polymer into which an ion exchange group is introduced, and a sample of electrode for electrolysis (130 mm square) are laminated in this order; and the laminate is placed on a curved surface of a polyethylene pipe (outer diameter: 145 mm) such that the sample of electrode for electrolysis in this laminate is positioned outside under conditions of a temperature of 23±2°C and a relative humidity of 30±5%, the laminate and the pipe are sufficiently immersed in pure water, excess water deposited on a surface of the laminate and the pipe is removed, and one minute after this removal, then a proportion (%) of an area of a portion, in which the sample of electrode for electrolysis is in close contact with the membrane obtained by applying the inorganic material particles and the binder to both the surfaces of the membrane of the perfluorocarbon polymer into which the ion exchange group is introduced, is measured.
[4] The electrode for electrolysis according to any of [1] to [3], wherein the electrode for electrolysis has a porous structure and has an opening ratio of 5 to 90%.
[5] The electrode for electrolysis according to any of [1] to [4], wherein the electrode has a porous structure and has an opening ratio of 10 to 80%.
[6] The electrode for electrolysis according to any of [1] to [5], wherein the electrode for electrolysis has a thickness of 315 µm or less.
[7] The electrode for electrolysis according to any of [1] to [6], wherein a value obtained by measuring the electrode for electrolysis by a method (A) below is 40 mm or less:
   [Method (A)]
   Under conditions of a temperature of 23±2°C and a relative humidity of 30±5%, a sample obtained by laminating the ion exchange membrane and the electrode for electrolysis is wound around and fixed onto a curved surface of a core material being made of polyvinyl chloride and having an outer diameter ϕ of 32 mm, and left to stand for 6 hours; thereafter, when the electrode for electrolysis is separated from the sample and placed on a flat plate, heights in a vertical direction at both edges of the electrode for electrolysis L₁ and L₂ are measured, and an average value thereof is used as a measurement value.
[8] The electrode for electrolysis according to any one of [1] to [7], wherein a ventilation resistance is 24 kPa·s/m or less when the electrode for electrolysis has a size of 50 mm × 50 mm, the ventilation resistance being measured under conditions of the temperature of 24°C, the relative humidity of 32%, a piston speed of 0.2 cm/s, and a ventilation volume of 0.4 cc/cm²/s.
[9] The electrode for electrolysis according to any of [1] to [8], wherein the electrode comprises at least one element selected from nickel (Ni) and titanium (Ti).
[10] A laminate comprising the electrode for electrolysis according to any of [1] to [9].
[11] A wound body comprising the electrode for electrolysis according to any of [1] to [9] or the laminate according to [10].

As a result of the intensive studies to achieve the second object, the present inventors have found that a laminate that includes an electrode to be bonded to a membrane such as an ion exchange membrane and a microporous membrane and to a feed conductor such as a degraded existing electrode with a weak force makes transport and handling easier, can markedly simplify a work when a new electrolyzer is started or a degraded part is renewed, and furthermore can also maintain or improve the electrolytic performance.

That is, disclosed but not claimed are the following aspects.
[2-1]
   A laminate comprising:
   an electrode for electrolysis, and
   a membrane or feed conductor in contact with the electrode for electrolysis,
   wherein a force applied per unit mass·unit area of the electrode for electrolysis on the membrane or feed conductor is less than 1.5 N/mg·cm².
[2-2]
   The laminate according to [2-1], wherein the force applied per unit mass·unit area of the electrode for electrolysis on the membrane or feed conductor is more than 0.005 N/mg·cm².
[2-3]
   The laminate according to [2-1] or [2-2], wherein the feed conductor is a wire mesh, a metal nonwoven fabric, a perforated metal, an expanded metal, or a foamed metal.
[2-4]
   The laminate according to any of [2-1] to [2-3], comprising, as at least one surface layer of the membrane, a layer comprising a mixture of hydrophilic oxide particles and a polymer into which ion exchange groups are introduced.
[2-5]
   The laminate according to any of [2-1] to [2-4], wherein a liquid is interposed between the electrode for electrolysis and the membrane or feed conductor.

As a result of the intensive studies to achieve the third object, the present inventors have found that the problems described above can be solved by a laminate in which a membrane and an electrode for electrolysis are partially fixed.

That is, disclosed but not claimed are the following aspects.
[3-1]
   A laminate comprising:
   a membrane, and
   an electrode for electrolysis fixed in at least one region of a surface of the membrane,
   wherein a proportion of the region on the surface of the membrane is more than 0% and less than 93%.
[3-2]
   The laminate according to [3-1], wherein the electrode for electrolysis comprises at least one catalytic component selected from the group consisting of Ru, Rh, Pd, Ir, Pt, Au, Ti, V, Cr, Mn, Fe, Co, Ni, Cu, Zn, Y, Zr, Nb, Mo, Ag, Ta, W, Re, Os, Al, In, Sn, Sb, Ga, Ge, B, C, N, O, Si, P, S, La, Ce, Pr, Nd, Pm, Sm, Eu, Gd, Tb, and Dy.
[3-3]
   The laminate according to [3-1] or [3-2], wherein at least a portion of the electrode for electrolysis penetrates the membrane and thereby is fixed in the region.
[3-4]
   The laminate according to any one of [3-1] to [3-3], wherein at least a portion of the electrode for electrolysis is located inside the membrane and thereby fixed in the region.
[3-5]
   The laminate according to any one of [3-1] to [3-4], further comprising a fixing member for fixing the membrane and the electrode for electrolysis.
[3-6]
   The laminate according to [3-5], wherein at least a portion of the fixing member externally grips the membrane and the electrode for electrolysis.
[3-7]
   The laminate according to [3-5] or [3-6], wherein at least a portion of the fixing member fixes the membrane and the electrode for electrolysis by magnetic force.
[3-8]
   The laminate according to any one of [3-1] to [3-7], wherein
   the membrane comprises an ion exchange membrane comprising a surface layer comprising an organic resin, and
   the organic resin is present in the region.
[3-9]
   The laminate according to any one of [3-1] to [3-8], wherein the membrane comprises a first ion exchange resin layer and a second ion exchange resin layer having an EW different from that of the first ion exchange resin layer.
[3-10]
   The laminate according to any one of [3-1] to [3-8], wherein the membrane comprises a first ion exchange resin layer and a second ion exchange resin layer having a functional group different from that of the first ion exchange resin layer.

As a result of the intensive studies to achieve the fourth object, the present inventors have found that the problems described above can be solved by sandwiching at least a portion of a laminate of a membrane and an electrode for electrolysis between an anode side gasket and a cathode side gasket.

That is, disclosed but not claimed are the following aspects.
[4-1]
   An electrolyzer comprising:
   an anode,
   an anode frame that supports the anode,
   an anode side gasket that is arranged on the anode frame,
   a cathode that is opposed to the anode,
   a cathode frame that supports the cathode,
   a cathode side gasket that is arranged on the cathode frame and is opposed to the anode side gasket, and
   a laminate of a membrane and an electrode for electrolysis, the laminate being arranged between the anode side gasket and the cathode side gasket,
   wherein at least a portion of the laminate is sandwiched between the anode side gasket and the cathode side gasket, and
   a ventilation resistance is 24 kPa·s/m or less when the electrode for electrolysis has a size of 50 mm × 50 mm, the ventilation resistance being measured under conditions of a temperature of 24°C, a relative humidity of 32%, a piston speed of 0.2 cm/s, and a ventilation volume of 0.4 cc/cm²/s.
[4-2]
   The electrolyzer according to [4-1], wherein the electrode for electrolysis has a thickness of 315 µm or less.
[4-3]
   The electrolyzer according to [4-1] or [4-2], wherein a value obtained by measuring the electrode for electrolysis by a method (A) below is 40 mm or less: [4-Method (A)]
   Under conditions of a temperature of 23±2°C and a relative humidity of 30±5%, a sample obtained by laminating the ion exchange membrane and the electrode for electrolysis is wound around and fixed onto a curved surface of a core material being made of polyvinyl chloride and having an outer diameter ϕ of 32 mm, and left to stand for 6 hours; thereafter, when the electrode for electrolysis is separated from the sample and placed on a flat plate, heights in a vertical direction at both edges of the electrode for electrolysis L1 and L2 are measured, and an average value thereof is used as a measurement value.
[4-4]
   The electrolyzer according to any of [4-1] to [4-3], wherein a mass per unit area of the electrode for electrolysis is 48 mg/cm² or less.
[4-5]
   The electrolyzer according to any of [4-1] to [4-4], wherein a force applied per unit mass·unit area of the electrode for electrolysis is more than 0.005 N/mg·cm².
[4-6]
   The electrolyzer according to any of [4-1] to [4-5], wherein an outermost perimeter of the laminate is located farther outside than an outermost perimeter each of the anode side gasket and the cathode side gasket in a direction of a conducting surface.
[4-7]
   The electrolyzer according to any of [4-1] to [4-6], wherein the electrode for electrolysis comprises at least one catalytic component selected from the group consisting of Ru, Rh, Pd, Ir, Pt, Au, Ti, V, Cr, Mn, Fe, Co, Ni, Cu, Zn, Y, Zr, Nb, Mo, Ag, Ta, W, Re, Os, Al, In, Sn, Sb, Ga, Ge, B, C, N, O, Si, P, S, La, Ce, Pr, Nd, Pm, Sm, Eu, Gd, Tb, and Dy.
[4-8]
   The electrolyzer according to any of [4-1] to [4-7], wherein at least a portion of the electrode for electrolysis penetrates the membrane and thereby is fixed in the laminate.
[4-9]
   The electrolyzer according to any of [4-1] to [4-7], wherein at least a portion of the electrode for electrolysis is located inside the membrane and thereby fixed in the laminate.
[4-10]
   The electrolyzer according to any of [4-1] to [4-9], wherein the laminate further comprises a fixing member for fixing the membrane and the electrode for electrolysis.
[4-11]
   The electrolyzer according to [4-10], wherein, in the laminate, at least a portion of the fixing member penetrates and thereby fixes the membrane and the electrode for electrolysis.
[4-12]
   The electrolyzer according to [4-10] or [4-11], wherein, in the laminate, the fixing member comprises a soluble material that is soluble in a electrolyte solution.
[4-13]
   The electrolyzer according to any of [4-10] to [4-12], wherein, in the laminate, at least a portion of the fixing member externally grips the membrane and the electrode for electrolysis.
[4-14]
   The electrolyzer according to any of [4-10] to [4-13], wherein, in the laminate, at least a portion of the fixing member fixes the membrane and the electrode for electrolysis by magnetic force.
[4-15]
   The electrolyzer according to any of [4-1] to [4-14], wherein
   the membrane comprises an ion exchange membrane comprising a surface layer comprising an organic resin, and
   the electrode for electrolysis is fixed by the organic resin.
[4-16]
   The electrolyzer according to any of [4-1] to [4-15], wherein the membrane comprises a first ion exchange resin layer and a second ion exchange resin layer having an EW different from that of the first ion exchange resin layer.
[4-17]
   A method for producing the electrolyzer according to any of [4-1] to [4-16], the method comprising:
   a step of sandwiching the laminate between the anode side gasket and the cathode side gasket.
[4-18]
   A method for renewing the laminate in the electrolyzer according to any of [4-1] to [4-16], the method comprising:
   a step of separating the laminate from the anode side gasket and the cathode side gasket to thereby remove the laminate from the electrolyzer, and
   a step of sandwiching a new laminate between the anode side gasket and the cathode side gasket.

As a result of the intensive studies to achieve the fifth object, the present inventors have found that the problems described above can be solved by use of an electrode for electrolysis or a laminate of the electrode for electrolysis and a new membrane, being in a wound body form.

That is, disclosed but not claimed are the following aspects.
[5-1]
   A method for producing a new electrolyzer by arranging an electrode for electrolysis or a laminate of the electrode for electrolysis and a new membrane in an existing electrolyzer comprising an anode, a cathode that is opposed to the anode, and a membrane that is arranged between the anode and the cathode,
   wherein the electrode for electrolysis or the laminate, being in a wound body form, is used.
[5-2]
   The method for producing the electrolyzer according to [5-1], comprising a step (A) of retaining the electrode for electrolysis or the laminate in a wound state to thereby obtain the wound body.
[5-3]
   The method for producing the electrolyzer according to [5-1] or [5-2], comprising a step (B) of releasing the wound state of the wound body.
[5-4]
   The method for producing the electrolyzer according to [5-3], comprising a step (C) of arranging the electrode for electrolysis or the laminate on a surface of at least one of the anode and the cathode after the step (B).
[5-5]
   A method for renewing an existing electrode by using an electrode for electrolysis,
   wherein the electrode for electrolysis being in a wound body form is used.
[5-6]
   The method for renewing the electrode according to [5-5], comprising a step (A') of retaining the electrode for electrolysis in a wound state to thereby obtain the wound body.
[5-7]
   The method for renewing the electrode according to [5-5] or [5-6], comprising a step (B') of releasing the wound state of the wound body.
[5-8]
   The method for renewing the electrode according to [5-7], comprising a step (C') of arranging the electrode for electrolysis on a surface of the existing electrode after the step (B').
[5-9]
   A method for producing a wound body to be used for renewing an existing electrolyzer comprising an anode, a cathode that is opposed to the anode, and a membrane that is arranged between the anode and the cathode, the method comprising:
   a step of winding an electrode for electrolysis or a laminate of the electrode for electrolysis and a new membrane to thereby obtain the wound body.

As a result of the intensive studies to achieve the sixth object, the present inventors have found that the problems described above can be solved by integrating an electrode for electrolysis with a new membrane at a temperature at which the membrane does not melt, thereby having completed the present invention.

That is, the present invention includes the following aspects.
[6-1]
   A method for producing a new electrolyzer by arranging a laminate in an existing electrolyzer comprising an anode, a cathode that is opposed to the anode, and a membrane that is arranged between the anode and the cathode, the method comprising:
   a step (A) of integrating an electrode for electrolysis with a new membrane at a temperature at which the membrane does not melt to thereby obtain the laminate,
   wherein the method for the integration is a method in which a liquid is interposed between the electrode for electrolysis and the new membrane, wherein the surface tension of the liquid integrates the electrode and the new membrane and wherein a temperature at which the membrane does not melt is a ternperature below the softening point of the membrane; and
   a step (B) of replacing the membrane in the existing electrolyzer by the laminate after the step (A), wherein the laminate is arranged on the surface of the anode or the cathode of the existing electrolyzer.
[6-2]
   The method for producing the electrolyzer according to [6-1], wherein the integration is carried out under normal pressure.

As a result of the intensive studies to achieve the seventh object, the present inventors have found that the problems described above can be solved by an operation in an electrolyzer frame.

That is, disclosed but not claimed are the following aspects.
[7-1]
   A method for producing a new electrolyzer by arranging a laminate comprising an electrode for electrolysis and a new membrane in an existing electrolyzer comprising an anode, a cathode that is opposed to the anode, a membrane that is fixed between the anode and the cathode, and an electrolyzer frame that supports the anode, the cathode, and the membrane, the method comprising:
   a step (A) of releasing a fixing of the membrane in the electrolyzer frame, and
   a step (B) of replacing the membrane by the laminate after the step (A).
[7-2]
   The method for producing the electrolyzer according to [7-1], wherein the step (A) is carried out by sliding the anode and the cathode in an arrangement direction thereof, respectively.
[7-3]
   The method for producing the electrolyzer according to [7-1] or [7-2], wherein the laminate is fixed in the electrolyzer frame by pressing from the anode and the cathode after the step (B).
[7-4]
   The method for producing the electrolyzer according to any of [7-1] to [7-3], wherein the laminate is fixed on a surface of at least one of the anode and the cathode at a temperature at which the laminate does not melt in the step (B).
[7-5]
   A method for producing a new electrolyzer by arranging an electrode for electrolysis in an existing electrolyzer comprising an anode, a cathode that is opposed to the anode, a membrane that is fixed between the anode and the cathode, and an electrolyzer frame that supports the anode, the cathode, and the membrane, the method comprising:
   a step (A) of releasing a fixing of the membrane in the electrolyzer frame, and
   a step (B') of arranging the electrode for electrolysis between the membrane and the anode or the cathode after the step (A).

### Advantageous Effects of Invention

(1) According to the electrode for electrolysis of the present disclosure, it is possible to make transport and handling easier, to markedly simplify a work when a new electrolyzer is started or a degraded electrode is renewed, and furthermore, to also maintain or improve the electrolytic performance.
(2) According to the laminate of the present disclosure, it is possible to improve the work efficiency during electrode renewing in an electrolyzer and furthermore, to exhibit excellent electrolytic performance also after renewing.
(3) According to the laminate of the present disclosure, it is possible to improve the work efficiency during electrode renewing in an electrolyzer and further, to develop excellent electrolytic performance also after renewing, from a viewpoint different from (2) described above.
(4) According to electrolyzer of the present disclosure, the electrolyzer has excellent electrolytic performance as well as can prevent damage of the membrane.
(5) According to the method for producing an electrolyzer of the present disclosure, it is possible to improve the work efficiency during electrode renewing in an electrolyzer.
(6) According to the method for producing an electrolyzer of the present invention, it is possible to improve the work efficiency during electrode renewing in an electrolyzer, from a viewpoint different from (5) described above.
(7) According to the method for producing an electrolyzer of the present disclosure, it is possible to improve the work efficiency during electrode renewing in an electrolyzer, from a viewpoint different from (5) and (6) described above.

### Brief Description of Drawings

[Figure 1] Figure 1 illustrates a cross-sectional schematic view of an electrode for electrolysis according to one embodiment of the present invention.
[Figure 2] Figure 2 illustrates a cross-sectional schematic view showing one embodiment of an ion exchange membrane.
[Figure 3] Figure 3 illustrates a schematic view for explaining the aperture ratio of reinforcement core materials constituting the ion exchange membrane.
[Figure 4] Figure 4 illustrates a schematic view for explaining a method for forming the continuous holes of the ion exchange membrane.
[Figure 5] Figure 5 illustrates a cross-sectional schematic view of an electrolytic cell.
[Figure 6] Figure 6 illustrates a cross-sectional schematic view showing a state of two electrolytic cells connected in series.
[Figure 7] Figure 7 illustrates a schematic view of an electrolyzer.
[Figure 8] Figure 8 illustrates a schematic perspective view showing a step of assembling the electrolyzer.
[Figure 9] Figure 9 illustrates a cross-sectional schematic view of a reverse current absorber included in the electrolytic cell.
[Figure 10] Figure 10 illustrates a schematic view of a method for evaluating a force applied per unit mass·unit area (1) described in Examples.
[Figure 11] Figure 11 illustrates a schematic view of a method for evaluating winding around a column of 280 mm in diameter (1) described in Examples.
[Figure 12] Figure 12 illustrates a schematic view of a method for evaluating winding around a column of 280 mm in diameter (2) described in Examples.
[Figure 13] Figure 13 illustrates a schematic view of a method for evaluating winding around a column of 145 mm in diameter (3) described in Examples.
[Figure 14] Figure 14 illustrates a schematic view of elastic deformation test of the electrode described in Examples.
[Figure 15] Figure 15 illustrates a schematic view of a method for evaluating softness after plastic deformation.
[Figure 16] Figure 16 illustrates a schematic view of an electrode produced in Comparative Example 13.
[Figure 17] Figure 17 illustrates a schematic view of a structure used for placing the electrode produced in Comparative Example 13 on a nickel mesh feed conductor.
[Figure 18] Figure 18 illustrates a schematic view of an electrode produced in Comparative Example 14.
[Figure 19] Figure 19 illustrates a schematic view of a structure used for placing the electrode produced in Comparative Example 14 on a nickel mesh feed conductor.
[Figure 20] Figure 20 illustrates a schematic view of an electrode produced in Comparative Example 15.
[Figure 21] Figure 21 illustrates a schematic view of a structure used for placing the electrode produced in Comparative Example 15 on a nickel mesh feed conductor.
[Figure 22] Figure 22 illustrates a cross-sectional schematic view of an electrode for electrolysis in one embodiment of the present invention.
[Figure 23] Figure 23 illustrates a cross-sectional schematic view showing one embodiment of an ion exchange membrane.
[Figure 24] Figure 24 illustrates a schematic view for explaining the aperture ratio of reinforcement core materials constituting the ion exchange membrane.
[Figure 25] Figure 25 illustrates a schematic view for explaining a method for forming the continuous holes of the ion exchange membrane.
[Figure 26] Figure 26 illustrates a cross-sectional schematic view of an electrolytic cell.
[Figure 27] Figure 27 illustrates a cross-sectional schematic view showing a state of two electrolytic cells connected in series.
[Figure 28] Figure 28 illustrates a schematic view of an electrolyzer.
[Figure 29] Figure 29 illustrates a schematic perspective view showing a step of assembling the electrolyzer.
[Figure 30] Figure 30 illustrates a cross-sectional schematic view of a reverse current absorber included in the electrolytic cell.
[Figure 31] Figure 31 illustrates a schematic view of a method for evaluating a force applied per unit mass·unit area (1) described in Examples.
[Figure 32] Figure 32 illustrates a schematic view of a method for evaluating winding around a column of 280 mm in diameter (1) described in Examples.
[Figure 33] Figure 33 illustrates a schematic view of a method for evaluating winding around a column of 280 mm in diameter (2) described in Examples.
[Figure 34] Figure 34 illustrates a schematic view of a method for evaluating winding around a column of 145 mm in diameter (3) described in Examples.
[Figure 35] Figure 35 illustrates a schematic view of elastic deformation test of the electrode described in Examples.
[Figure 36] Figure 36 illustrates a schematic view of a method for evaluating softness after plastic deformation.
[Figure 37] Figure 37 illustrates a schematic view of an electrode produced in Example 34.
[Figure 38] Figure 38 illustrates a schematic view of a structure used for placing the electrode produced in Example 34 on a nickel mesh feed conductor.
[Figure 39] Figure 39 illustrates a schematic view of an electrode produced in Example 35.
[Figure 40] Figure 40 illustrates a schematic view of a structure used for placing the electrode produced in Example 35 on a nickel mesh feed conductor.
[Figure 41] Figure 41 illustrates a schematic view of an electrode produced in Example 36.
[Figure 42] Figure 42 illustrates a schematic view of a structure used for placing the electrode produced in Example 36 on a nickel mesh feed conductor.
[Figure 43] Figure 43 illustrates a cross-sectional schematic view of an electrode for electrolysis in one embodiment of the present invention.
[Figure 44] Figure 44 illustrates a cross-sectional schematic view illustrating one embodiment of an ion exchange membrane.
[Figure 45] Figure 45 illustrates a schematic view for explaining the aperture ratio of reinforcement core materials constituting the ion exchange membrane.
[Figure 46] Figure 46 illustrates a schematic view for explaining a method for forming the continuous holes of the ion exchange membrane.
[Figure 47] Figure 47A illustrates a cross-sectional schematic view of a laminate illustrating an aspect in which at least a portion of an electrode for electrolysis penetrates a membrane and thereby is fixed. Figure 47B illustrates an explanatory view illustrating a step of obtaining the structure of Figure 47A.
[Figure 48] Figure 48A illustrates a cross-sectional schematic view of a laminate illustrating an aspect in which at least a portion of an electrode for electrolysis is located inside the membrane and thereby fixed. Figure 48B illustrates an explanatory view illustrating a step of obtaining the structure of Figure 48A.
[Figure 49] Figures 49A to 49C illustrate cross-sectional schematic views of a laminate illustrating an aspect in which a yarn-like fixing member is used for fixing as a fixing member for fixing a membrane and an electrode for electrolysis.
[Figure 50] Figure 50 illustrates a cross-sectional schematic view of a laminate illustrating an aspect in which an organic resin is used for fixing as a fixing member for fixing a membrane and an electrode for electrolysis.
[Figure 51] Figure 51A illustrates a cross-sectional schematic view of a laminate illustrating an aspect in which at least a portion of a fixing member externally grips a membrane and an electrode for electrolysis to fix them. Figure 51B illustrates a cross-sectional schematic view of the laminate illustrating an aspect in which at least a portion of a fixing member fixes the membrane and the electrode for electrolysis by magnetic force.
[Figure 52] Figure 52 illustrates a cross-sectional schematic view of an electrolytic cell.
[Figure 53] Figure 53 illustrates a cross-sectional schematic view showing a state of two electrolytic cells connected in series.
[Figure 54] Figure 54 illustrates a schematic view of an electrolyzer.
[Figure 55] Figure 55 illustrates a schematic perspective view showing a step of assembling the electrolyzer.
[Figure 56] Figure 56 illustrates a cross-sectional schematic view of a reverse current absorber that may be included in an electrolytic cell.
[Figure 57] Figure 57 illustrates an explanatory view showing a laminate in Example 1.
[Figure 58] Figure 58 illustrates an explanatory view showing a laminate in Example 2.
[Figure 59] Figure 59 illustrates an explanatory view showing a laminate in Example 3.
[Figure 60] Figure 60 illustrates an explanatory view showing a laminate in Example 4.
[Figure 61] Figure 61 illustrates an explanatory view showing a laminate in Example 5.
[Figure 62] Figure 62 illustrates an explanatory view showing a laminate in Example 6.
[Figure 63] Figure 63 illustrates a cross-sectional schematic view of an electrolytic cell.
[Figure 64] Figure 64A illustrates a cross-sectional schematic view showing a state of two electrolytic cells connected in series in a conventional electrolyzer.
Figure 64B illustrates a cross-sectional schematic view showing a state of two electrolytic cells connected in series in the electrolyzer of the present embodiment.
[Figure 65] Figure 65 illustrates a schematic view of an electrolyzer.
[Figure 66] Figure 66 illustrates a schematic perspective view showing a step of assembling the electrolyzer.
[Figure 67] Figure 67 illustrates a cross-sectional schematic view of a reverse current absorber that may be included in an electrolytic cell.
[Figure 68] Figure 68 illustrates a cross-sectional schematic view of an electrode for electrolysis in one embodiment of the present invention.
[Figure 69] Figure 69 illustrates a cross-sectional schematic view illustrating one embodiment of an ion exchange membrane.
[Figure 70] Figure 70 illustrates a schematic view for explaining the aperture ratio of reinforcement core materials constituting the ion exchange membrane.
[Figure 71] Figure 71 illustrates a schematic view for explaining a method for forming the continuous holes of the ion exchange membrane.
[Figure 72] Figure 72 illustrates an explanatory view for explaining the positional relation between the laminate and the gaskets.
[Figure 73] Figure 73 illustrates an explanatory view for explaining the positional relation between the laminate and the gaskets.
[Figure 74] Figure 74A illustrates a cross-sectional schematic view of a laminate illustrating an aspect in which at least a portion of an electrode for electrolysis penetrates a membrane and thereby is fixed. Figure 74B illustrates an explanatory view illustrating a step of obtaining the structure of Figure 12A.
[Figure 75] Figure 75A illustrates a cross-sectional schematic view of a laminate illustrating an aspect in which at least a portion of an electrode for electrolysis is located inside the membrane and thereby fixed. Figure 13B illustrates an explanatory view illustrating a step of obtaining the structure of Figure 75A.
[Figure 76] Figures 76A to C illustrate cross-sectional schematic views of a laminate illustrating an aspect in which a yarn-like fixing member is used for fixing as a fixing member for fixing a membrane and an electrode for electrolysis.
[Figure 77] Figure 77 illustrates a cross-sectional schematic view of a laminate illustrating an aspect in which an organic resin is used for fixing as a fixing member for fixing a membrane and an electrode for electrolysis.
[Figure 78] Figure 78A illustrates a cross-sectional schematic view of a laminate illustrating an aspect in which at least a portion of a fixing member externally grips a membrane and an electrode for electrolysis to fix them. Figure 78B illustrates a cross-sectional schematic view of the laminate illustrating an aspect in which at least a portion of a fixing member fixes the membrane and the electrode for electrolysis by magnetic force.
[Figure 79] Figure 79 illustrates a schematic view of a method for evaluating a force applied per unit mass·unit area (1) described in Examples.
[Figure 80] Figure 80 illustrates a schematic view of a method for evaluating winding around a column of 280 mm in diameter (1) described in Examples.
[Figure 81] Figure 81 illustrates a schematic view of a method for evaluating winding around a column of 280 mm in diameter (2) described in Examples.
[Figure 82] Figure 82 illustrates a schematic view of a method for evaluating winding around a column of 145 mm in diameter (3) described in Examples.
[Figure 83] Figure 83 illustrates a schematic view of flexibility evaluation of the electrode described in Examples.
[Figure 84] Figure 84 illustrates a schematic view of a method for evaluating softness after plastic deformation.
[Figure 85] Figure 85 illustrates a schematic view of an electrode produced in Example 35.
[Figure 86] Figure 86 illustrates a schematic view of a structure used for placing the electrode produced in Example 35 on a nickel mesh feed conductor.
[Figure 87] Figure 87 illustrates a schematic view of an electrode produced in Example 36.
[Figure 88] Figure 88 illustrates a schematic view of a structure used for placing the electrode produced in Example 36 on a nickel mesh feed conductor.
[Figure 89] Figure 89 illustrates a schematic view of an electrode produced in Example 37.
[Figure 90] Figure 90 illustrates a schematic view of a structure used for placing the electrode produced in Example 37 on a nickel mesh feed conductor.
[Figure 91] Figure 91 illustrates a cross-sectional schematic view of an electrolytic cell.
[Figure 92] Figure 92 illustrates a cross-sectional schematic view showing a state of two electrolytic cells connected in series.
[Figure 93] Figure 93 illustrates a schematic view of an electrolyzer.
[Figure 94] Figure 94 illustrates a schematic perspective view showing a step of assembling the electrolyzer.
[Figure 95] Figure 95 illustrates a cross-sectional schematic view of a reverse current absorber that may be included in an electrolytic cell.
[Figure 96] Figure 96 illustrates a cross-sectional schematic view of an electrode for electrolysis in one embodiment of the present invention.
[Figure 97] Figure 97 illustrates a cross-sectional schematic view illustrating one embodiment of an ion exchange membrane.
[Figure 98] Figure 98 illustrates a schematic view for explaining the aperture ratio of reinforcement core materials constituting the ion exchange membrane.
[Figure 99] Figure 99 illustrates a schematic view for explaining a method for forming the continuous holes of the ion exchange membrane.
[Figure 100] Figure 100 illustrates a schematic view of a laminate produced in Example 1.
[Figure 101] Figure 101 illustrates a schematic view of the case where the laminate produced in Example 1 is wound to form a wound body.
[Figure 102] Figure 102 illustrates a schematic view of a laminate produced in Example 4.
[Figure 103] Figure 103 illustrates a cross-sectional schematic view of an electrolytic cell.
[Figure 104] Figure 104 illustrates a cross-sectional schematic view showing a state of two electrolytic cells connected in series.
[Figure 105] Figure 105 illustrates a schematic view of an electrolyzer.
[Figure 106] Figure 106 illustrates a schematic perspective view showing a step of assembling the electrolyzer.
[Figure 107] Figure 107 illustrates a cross-sectional schematic view of a reverse current absorber that may be included in an electrolytic cell.
[Figure 108] Figure 108 illustrates a cross-sectional schematic view of an electrode for electrolysis in one embodiment of the present invention.
[Figure 109] Figure 109 illustrates a cross-sectional schematic view illustrating one embodiment of an ion exchange membrane.
[Figure 110] Figure 110 illustrates a schematic view for explaining the aperture ratio of reinforcement core materials constituting the ion exchange membrane.
[Figure 111] Figure 111 illustrates a schematic view for explaining a method for forming the continuous holes of the ion exchange membrane.
[Figure 112] Figure 112 illustrates a cross-sectional schematic view of an electrolytic cell.
[Figure 113] Figure 113 illustrates a cross-sectional schematic view showing a state of two electrolytic cells connected in series.
[Figure 114] Figure 114 illustrates a schematic view of an electrolyzer.
[Figure 115] Figure 115 illustrates a schematic perspective view showing a step of assembling the electrolyzer.
[Figure 116] Figure 116 illustrates a cross-sectional schematic view of a reverse current absorber that may be included in an electrolytic cell.
[Figure 117] Figure 117(A) illustrates a schematic view of an electrolyzer for explaining one example of each step according to a first aspect of the present embodiment. Figure 117(B) illustrates a schematic perspective view corresponding to Figure 117(A).
[Figure 118] Figure 118(A) illustrates a schematic view of an electrolyzer for explaining one example of each step according to a second aspect of the present embodiment. Figure 118(B) illustrates a schematic perspective view corresponding to Figure 118(A).
[Figure 119] Figure 119 illustrates a cross-sectional schematic view of an electrode for electrolysis in one embodiment of the present invention.
[Figure 120] Figure 120 illustrates a cross-sectional schematic view illustrating one embodiment of an ion exchange membrane.
[Figure 121] Figure 121 illustrates a schematic view for explaining the aperture ratio of reinforcement core materials constituting the ion exchange membrane.
[Figure 122] Figure 122 illustrates a schematic view for explaining a method for forming the continuous holes of the ion exchange membrane.

### Description of Embodiments

Hereinbelow, the <First embodiment> to <Seventh embodiment> will be each described in detail, with reference to drawings as required.

The accompanying drawings illustrate one example of the embodiments, and embodiments should not be construed to be limited thereto.

In the drawings, positional relations such as top, bottom, left, and right are based on the positional relations shown in the drawing unless otherwise noted. The dimensions and ratios in the drawings are not limited to those shown.

### <First embodiment> (not in accordance with the invention as claimed)

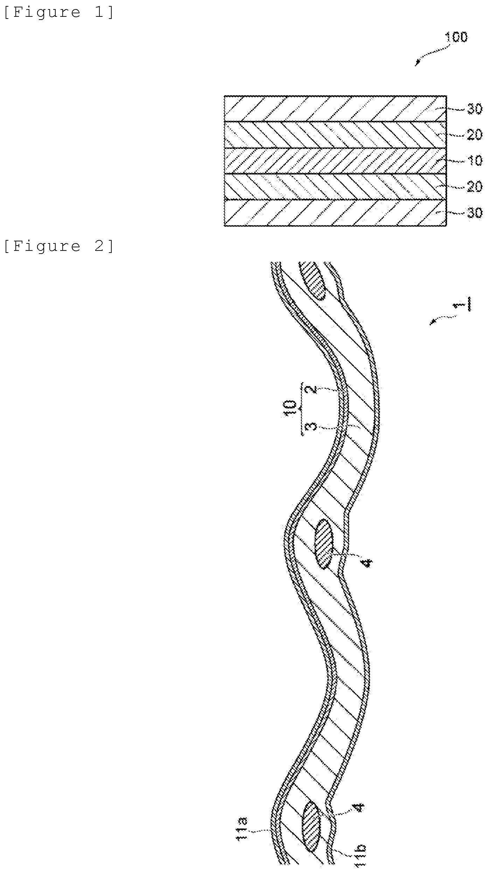

Here, a first embodiment of the present invention will be described in detail with reference to Figures 1 to 21.

### [Electrode for electrolysis]

An electrode for electrolysis of the first embodiment (hereinafter, in the section of <First embodiment>, simply referred to as "the present embodiment") can provide a good handling property, has a good adhesive force to a membrane such as an ion exchange membrane and a microporous membrane, a degraded electrode, a feed conductor having no catalyst coating, and the like, and further, has a mass per unit area of 48 mg/cm² or less from the viewpoint of economy. The mass per unit area is preferably 30 mg/cm² or less, further preferably 20 mg/cm² or less in respect of the above, and furthermore is preferably 15 mg/cm² or less from the comprehensive viewpoint including handling property, adhesion, and economy. The lower limit value is not particularly limited but is of the order of 1 mg/cm², for example.

The mass per unit area described above can be within the range described above by appropriately adjusting an opening ratio described below, thickness of the electrode, and the like, for example. More specifically, for example, when the thickness is constant, a higher opening ratio tends to lead to a smaller mass per unit area, and a lower opening ratio tends to lead to a larger mass per unit area.

The electrode for electrolysis of the present embodiment has a force applied per unit mass·unit area of 0.08 N/(mg·cm²) or more from the viewpoint of enabling a good handling property to be provided and having a good adhesive force to a membrane such as an ion exchange membrane and a microporous membrane, a degraded electrode, a feed conductor having no catalyst coating, and the like. The force applied per unit mass·unit area is preferably 0.1 N/(mg·cm²) or more, more preferably 0.14 N/(mg·cm²) or more in respect of the above, and more preferably 0.2 N/(mg·cm²) or more from the viewpoint of further facilitating handling in a large size (e.g., a size of 1.5 m × 2.5 m). The upper limit value is not particularly limited, but is preferably 1.6 N/(mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less. The upper limit value is even still more preferably 1.1 N/mg·cm² or less, further still more preferably 1.10 N/mg·cm² or less, particularly preferably 1.0 N/mg·cm² or less, especially preferably 1.00 N/mg·cm² or less.

From the viewpoint that the electrode for electrolysis of the present embodiment, if being an electrode having a broad elastic deformation region, can provide a better handling property and has a better adhesive force to a membrane such as an ion exchange membrane and a microporous membrane, a degraded electrode, a feed conductor having no catalyst coating, and the like, the thickness of the electrode for electrolysis is preferably 315 µm or less, more preferably 220 µm or less, further preferably 170 µm or less, further more preferably 150 µm or less, particularly preferably 145 µm or less, still more preferably 140 µm or less, even still more preferably 138 µm or less, further still more preferably 135 µm or less. A thickness of 135 µm or less can provide a good handling property. Further, from a similar viewpoint as above, the thickness is preferably 130 µm or less, more preferably less than 130 µm, further preferably 115 µm or less, further more preferably 65 µm or less. The lower limit value is not particularly limited, but is preferably 1 µm or more, more preferably 5 µm or more for practical reasons, more preferably 20 µm or more. In the present embodiment, "having a broad elastic deformation region" means that, when an electrode for electrolysis is wound to form a wound body, warpage derived from winding is unlikely to occur after the wound state is released. The thickness of the electrode for electrolysis refers to, when a catalyst layer mentioned below is included, the total thickness of both the substrate for electrode for electrolysis and the catalyst layer.

The electrode for electrolysis of the present embodiment, which has a good adhesive force to a membrane such as an ion exchange membrane and a microporous membrane, a degraded electrode, a feed conductor having no catalyst coating, and the like, as described above, can be integrated with a membrane such as an ion exchange membrane and a microporous membrane and used. For this reason, on renewing the electrode, the electrode can be renewed by a work as simple as renewing the membrane, without a complicated substituting work such as stripping off the electrode fixed on the electrolytic cell, and thus, the work efficiency is markedly improved. Even in the case where only a feed conductor is placed in a new electrolytic cell (i.e., an electrode including no catalyst layer placed), only attaching the electrode for electrolysis of the present embodiment to the feed conductor enables the electrode to function. Thus, it may be also possible to markedly reduce or eliminate catalyst coating.

Further, according to the electrode for electrolysis of the present embodiment, it is possible to make the electrolytic performance comparable to or higher than those of a new electrode.

The electrode for electrolysis of the present embodiment can be stored or transported to customers in a state where the electrode is wound around a vinyl chloride pipe or the like (in a rolled state or the like), making handling markedly easier.

The force applied can be measured by methods (i) or (ii) described below, which are as described in Examples in detail. As for the force applied, the value obtained by the measurement of the method (i) (also referred to as "the force applied (1)") and the value obtained by the measurement of the method (ii) (also referred to as "the force applied (2)") may be the same or different, and either of the values is 0.08 N/(mg·cm²) or more.

The force applied described above can be within the range described above by appropriately adjusting an opening ratio described below, thickness of the electrode, arithmetic average surface roughness, and the like, for example. More specifically, for example, a higher opening ratio tends to lead to a smaller force applied, and a lower opening ratio tends to lead to a larger force applied.

### [Method (i)]

A nickel plate obtained by blast processing with alumina of grain-size number 320 (thickness 1.2 mm, 200 mm square), an ion exchange membrane which is obtained by applying inorganic material particles and a binder to both surfaces of a membrane of a perfluorocarbon polymer into which an ion exchange group is introduced (170 mm square, the detail of the ion exchange membrane referred to herein is as described in Examples), and a sample of electrode for electrolysis (130 mm square) are laminated in this order. After this laminate is sufficiently immersed in pure water, excess water deposited on the surface of the laminate is removed to obtain a sample for measurement. The arithmetic average surface roughness (Ra) of the nickel plate after the blast treatment was 0.7 µm. The specific method for calculating the arithmetic average surface roughness (Ra) is as described in Examples.

Under conditions of a temperature of 23±2°C and a relative humidity of 30±5%, only the sample of electrode for electrolysis in this sample for measurement is raised in a vertical direction at 10 mm/minute using a tensile and compression testing machine, and the load when the sample of electrode for electrolysis is raised by 10 mm in a vertical direction is measured. This measurement is repeated three times, and the average value is calculated.

This average value is divided by the area of the overlapping portion of the sample of electrode for electrolysis and the ion exchange membrane and the mass of the portion overlapping the ion exchange membrane in the sample of electrode for electrolysis to calculate the force applied per unit mass·unit area (1) (N/mg·cm²).

The force applied per unit mass·unit area (1) obtained by the method (i) is 0.08 N/(mg·cm²) or more, preferably 0.1 N/(mg·cm²) or more from the viewpoint of enabling a good handling property to be provided and having a good adhesive force to a membrane such as an ion exchange membrane and a microporous membrane, a degraded electrode, and a feed conductor having no catalyst coating, and more preferably 0.2 N/(mg·cm²) or more from the viewpoint of further facilitating handling in a large size (e.g., a size of 1.5 m × 2.5 m). The upper limit value is not particularly limited, but is preferably 1.6 N/(mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less. The upper limit value is even still more preferably 1.1 N/mg·cm² or less, further still more preferably 1.10 N/mg·cm² or less, particularly preferably 1.0 N/mg·cm² or less, especially preferably 1.00 N/mg·cm² or less.

When the electrode for electrolysis of the present embodiment satisfies the force applied (1), the electrode can be integrated with a membrane such as an ion exchange membrane and a microporous membrane, for example, and used. Thus, on renewing the electrode, the substituting work for the cathode and anode fixed on the electrolytic cell by a method such as welding is eliminated, and the work efficiency is markedly improved. Additionally, by use of the electrode for electrolysis of the present embodiment as an electrode integrated with the ion exchange membrane, it is possible to make the electrolytic performance comparable to or higher than those of a new electrode.

On shipping a new electrolytic cell, an electrode fixed on an electrolytic cell has been subjected to catalyst coating conventionally. Since only combination of an electrode having no catalyst coating with the electrode for electrolysis of the present embodiment can allow the electrode to function as an electrode, it is possible to markedly reduce or eliminate the production step and the amount of the catalyst for catalyst coating. A conventional electrode of which catalyst coating is markedly reduced or eliminated can be electrically connected to the electrode for electrolysis of the present embodiment and allowed to serve as a feed conductor for passage of an electric current.

### [Method (ii)]

A nickel plate obtained by blast processing with alumina of grain-size number 320 (thickness 1.2 mm, 200 mm square, a nickel plate similar to that of the method (i) above) and a sample of electrode for electrolysis (130 mm square) are laminated in this order. After this laminate is sufficiently immersed in pure water, excess water deposited on the surface of the laminate is removed to obtain a sample for measurement. Under conditions of a temperature of 23±2°C and a relative humidity of 30±5%, only the sample of electrode for electrolysis in this sample for measurement is raised in a vertical direction at 10 mm/minute using a tensile and compression testing machine, and the load when the sample of electrode for electrolysis is raised by 10 mm in a vertical direction is measured. This measurement is repeated three times, and the average value is calculated.

This average value is divided by the area of the overlapping portion of the sample of electrode for electrolysis and the nickel plate and the mass of the sample of electrode for electrolysis in the portion overlapping the nickel plate to calculate the adhesive force per unit mass·unit area (2) (N/mg·cm²).

The force applied per unit mass·unit area (2) obtained by the method (ii) is 0.08 N/(mg·cm²) or more, preferably 0.1 N/(mg·cm²) or more from the viewpoint of enabling a good handling property to be provided and having a good adhesive force to a membrane such as an ion exchange membrane and a microporous membrane, a degraded electrode, and a feed conductor having no catalyst coating, and more preferably 0.14 N/(mg·cm²) or more from the viewpoint of further facilitating handling in a large size (e.g., a size of 1.5 m × 2.5 m). The upper limit value is not particularly limited, but is preferably 1.6 N/(mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less. The upper limit value is even still more preferably 1.1 N/mg·cm² or less, further still more preferably 1.10 N/mg·cm² or less, particularly preferably 1.0 N/mg·cm² or less, especially preferably 1.00 N/mg·cm² or less.

The electrode for electrolysis of the present embodiment, if satisfies the force applied (2), can be stored or transported to customers in a state where the electrode is wound around a vinyl chloride pipe or the like (in a rolled state or the like), making handling markedly easier. By attaching the electrode for electrolysis of the present embodiment to a degraded electrode, it is possible to make the electrolytic performance comparable to or higher than those of a new electrode.

In the present embodiment, as the liquid included between the membrane such as an ion exchange membrane and a microporous membrane, the electrode for electrolysis or the feed conductor (degraded electrode or electrode having no catalyst coating) and the electrode for electrolysis, any liquid, such as water and organic solvents, can be used as long as the liquid generates a surface tension. The larger the surface tension of the liquid, the larger the force applied between the membrane and the electrode for electrolysis or the metal plate and the electrode for electrolysis. Thus, a liquid having a larger surface tension is preferred. Examples of the liquid include the following (the numerical value in the parentheses is the surface tension of the liquid):
hexane (20.44 mN/m), acetone (23.30 mN/m), methanol (24.00 mN/m), ethanol (24.05 mN/m), ethylene glycol (50.21 mN/m), and water (72.76 mN/m).

A liquid having a large surface tension allows the membrane and the electrode for electrolysis or the metal porous plate or metal plate (feed conductor) and the electrode for electrolysis to be integrated (to be a laminate) to thereby facilitate renewing of the electrode. The liquid between the membrane and the electrode for electrolysis or the metal porous plate or metal plate (feed conductor) and the electrode for electrolysis may be present in an amount such that the both adhere to each other by the surface tension. As a result, after the laminate is placed in an electrolytic cell, the liquid, if mixed into the electrolyte solution, does not affect electrolysis itself due to the small amount of the liquid.

From a practical viewpoint, a liquid having a surface tension of 20 mN/m to 80 mN/m, such as ethanol, ethylene glycol, and water, is preferably used as the liquid. Particularly preferred is water or an alkaline aqueous solution prepared by dissolving caustic soda, potassium hydroxide, lithium hydroxide, sodium hydrogen carbonate, potassium hydrogen carbonate, sodium carbonate, potassium carbonate, or the like in water. Alternatively, the surface tension can be adjusted by allowing these liquids to contain a surfactant. When a surfactant is contained, the adhesion between the membrane and the electrode for electrolysis or the metal plate and the electrode for electrolysis varies to enable the handling property to be adjusted. The surfactant is not particularly limited, and both ionic surfactants and nonionic surfactants may be used.

The electrode for electrolysis of the present embodiment preferably includes a substrate for electrode for electrolysis and a catalyst layer. The thickness of the substrate for electrode for electrolysis (gauge thickness) is not particularly limited, but is preferably 300 µm or less, more preferably 205 µm or less, further preferably 155 µm or less, further preferably 135 µm or less, further more preferably 125 µm or less, still more preferably 120 µm or less, even still more preferably 100 µm or less from the viewpoint of enabling a good handling property to be provided, having a good adhesive force to a membrane such as an ion exchange membrane and a microporous membrane, a degraded electrode, and a feed conductor having no catalyst coating, being capable of being suitably rolled in a roll and satisfactorily folded, and facilitating handling in a large size (e.g., a size of 1.5 m × 2.5 m), and further still more preferably 50 µm or less from the viewpoint of a handling property and economy. The lower limit value is not particularly limited, but is 1 µm, for example, preferably 5 µm, more preferably 15 µm.

The proportion measured by the following method (2) of the electrode for electrolysis of the present embodiment is not particularly limited, but is preferably 90% or more, more preferably 92% or more from the viewpoint of enabling a good handling property to be provided and having a good adhesive force to a membrane such as an ion exchange membrane and a microporous membrane, a degraded electrode, and a feed conductor having no catalyst coating, and further preferably 95% or more from the viewpoint of further facilitating handling in a large size (e.g., a size of 1.5 m × 2.5 m). The upper limit value is 100%.

### [Method (2)]

An ion exchange membrane (170 mm square) and a sample of electrode for electrolysis (130 mm square) are laminated in this order. The laminate is placed on a curved surface of a polyethylene pipe (outer diameter: 280 mm) such that the sample of electrode for electrolysis in this laminate is positioned outside under conditions of a temperature of 23±2°C and a relative humidity of 30±5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode for electrolysis is measured.

The proportion measured by the following method (3) of the electrode for electrolysis of the present embodiment is not particularly limited, but is preferably 75% or more, more preferably 80% or more from the viewpoint of enabling a good handling property to be provided, having a good adhesive force to a membrane such as an ion exchange membrane and a microporous membrane, a degraded electrode, and a feed conductor having no catalyst coating and being capable of being suitably rolled in a roll and satisfactorily folded, and is further preferably 90% or more from the viewpoint of further facilitating handling in a large size (e.g., a size of 1.5 m × 2.5 m). The upper limit value is 100%.

### [Method (3)]

An ion exchange membrane (170 mm square) and a sample of electrode for electrolysis (130 mm square) are laminated in this order. The laminate is placed on a curved surface of a polyethylene pipe (outer diameter: 145 mm) such that the sample of electrode for electrolysis in this laminate is positioned outside under conditions of a temperature of 23±2°C and a relative humidity of 30±5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode for electrolysis is measured.

The electrode for electrolysis of the present embodiment preferably has, but is not particularly limited to, a porous structure and an opening ratio or void ratio of 5 to 90% or less from the viewpoint of enabling a good handling property to be provided, having a good adhesive force to a membrane such as an ion exchange membrane and a microporous membrane, a degraded electrode, and a feed conductor having no catalyst coating, and preventing accumulation of gas to be generated during electrolysis. The opening ratio is more preferably 10 to 80% or less, further preferably 20 to 75%.

The opening ratio is a proportion of the opening portions per unit volume. The calculation method may differ depending on that opening portions in submicron size are considered or that only visible openings are considered. In the present embodiment, a volume V was calculated from the values of the gauge thickness, width, and length of the electrode, and further, a weight W was measured to thereby calculate an opening ratio A by the following formula. $A = \left(1-\left(W/\left(V\times ρ\right)\right)\times 100\right.$

ρ is the density of the electrode material (g/cm³). For example, ρ of nickel is 8.908 g/cm³, and ρ of titanium is 4.506 g/cm³. The opening ratio is appropriately adjusted by changing the area of metal to be perforated per unit area in the case of perforated metal, changing the values of the SW (short diameter), LW (long diameter), and feed in the case of expanded metal, changing the line diameter of metal fiber and mesh number in the case of mesh, changing the pattern of a photoresist to be used in the case of electroforming, changing the metal fiber diameter and fiber density in the case of nonwoven fabric, changing the mold for forming voids in the case of foamed metal, or the like.

The value obtained by measurement by the following method (A) of the electrode for electrolysis in the present embodiment is preferably 40 mm or less, more preferably 29 mm or less, further preferably 10 mm or less, further more preferably 6.5 mm or less from the viewpoint of the handling property. The specific measuring method is as described in Examples.

### [Method (A)]

Under conditions of a temperature of 23±2°C and a relative humidity of 30±5%, a sample obtained by laminating the ion exchange membrane and the electrode for electrolysis is wound around and fixed onto a curved surface of a core material being made of polyvinyl chloride and having an outer diameter ϕ of 32 mm, and left to stand for 6 hours; thereafter, when the electrode for electrolysis is separated from the sample and placed on a flat plate, heights in a vertical direction at both edges of the electrode for electrolysis L₁ and L₂ are measured, and an average value thereof is used as a measurement value.

In the electrode for electrolysis in the present embodiment, the ventilation resistance is preferably 24 kPa·s/m or less when the electrode for electrolysis has a size of 50 mm × 50 mm, the ventilation resistance being measured under the conditions of the temperature of 24°C, the relative humidity of 32%, a piston speed of 0.2 cm/s, and a ventilation volume of 0.4 cc/cm²/s (hereinbelow, also referred to as "measurement condition 1") (hereinbelow, also referred to as "ventilation resistance 1"). A larger ventilation resistance means that air is unlikely to flow and refers to a state of a high density. In this state, the product from electrolysis remains in the electrode and the reaction substrate is more unlikely to diffuse inside the electrode, and thus, the electrolytic performance (such as voltage) tends to deteriorate. The concentration on the membrane surface tends to increase. Specifically, the caustic concentration increases on the cathode surface, and the supply of brine tends to decrease on the anode surface. As a result, the product accumulates at a high concentration on the interface at which the membrane is in contact with the electrode. This accumulation leads to damage of the membrane and tends to also lead to increase in the voltage and damage of the membrane on the cathode surface and damage of the membrane on the anode surface. In the present embodiment, in order to prevent these defects, the ventilation resistance is preferably set at 24kPa.s/m or less. From a similar viewpoint as above, the ventilation resistance is more preferably less than 0.19 kPa·s/m, further preferably 0.15 kPa·s/m or less, further more preferably 0.07 kPa·s/m or less.

In the present embodiment, when the ventilation resistance is larger than a certain value, NaOH generated in the electrode tends to accumulate on the interface between the electrode and the membrane to result in a high concentration in the case of the cathode, and the supply of brine tends to decrease to cause the brine concentration to be lower in the case of the anode. In order to prevent damage to the membrane that may be caused by such accumulation, the ventilation resistance is preferably less than 0.19 kPa·s/m, more preferably 0.15 kPa·s/m or less, further preferably 0.07 kPa·s/m or less.

In contrast, when the ventilation resistance is low, the area of the electrode is reduced and the electrolysis area is reduced. Thus, the electrolytic performance (such as voltage) tends to deteriorate. When the ventilation resistance is zero, the feed conductor functions as the electrode because no electrode for electrolysis is provided, and the electrolytic performance (such as voltage) tends to markedly deteriorate. From this viewpoint, a preferable lower limit value identified as the ventilation resistance 1 is not particularly limited, but is preferably more than 0 kPa·s/m, more preferably 0.0001 kPa·s/m or more, further preferably 0.001 kPa·s/m or more.

When the ventilation resistance 1 is 0.07 kPa·s/m or less, a sufficient measurement accuracy may not be achieved because of the measurement method therefor. From this viewpoint, it is also possible to evaluate an electrode for electrolysis having a ventilation resistance 1 of 0.07 kPa·s/m or less by means of a ventilation resistance (hereinbelow, also referred to as "ventilation resistance 2") obtained by the following measurement method (hereinbelow, also referred to as "measurement condition 2"). That is, the ventilation resistance 2 is a ventilation resistance measured, when the electrode for electrolysis has a size of 50 mm × 50 mm, under conditions of the temperature of 24°C, the relative humidity of 32%, a piston speed of 2 cm/s, and a ventilation volume of 4 cc/cm²/s.

The specific methods for measuring the ventilation resistances 1 and 2 are described in Examples.

The ventilation resistances 1 and 2 can be within the range described above by appropriately adjusting an opening ratio, thickness of the electrode, and the like, for example. More specifically, for example, when the thickness is constant, a higher opening ratio tends to lead to smaller ventilation resistances 1 and 2, and a lower opening ratio tends to lead to larger ventilation resistances 1 and 2.

Hereinbelow, one aspect of the electrode for electrolysis of the present embodiment will be described.

The electrode for electrolysis according to the present embodiment preferably includes a substrate for electrode for electrolysis and a catalyst layer. The catalyst layer may be composed of a plurality of layers as shown below or may be a single-layer configuration.

As shown in Figure 1, an electrode for electrolysis 100 according to the present embodiment includes a substrate for electrode for electrolysis 10 and a pair of first layers 20 with which both the surfaces of the substrate for electrode for electrolysis 10 are covered. The entire substrate for electrode for electrolysis 10 is preferably covered with the first layers 20. This covering is likely to improve the catalyst activity and durability of the electrode. One first layer 20 may be laminated only on one surface of the substrate for electrode for electrolysis 10.

Also shown in Figure 1, the surfaces of the first layers 20 may be covered with second layers 30. The entire first layers 20 are preferably covered by the second layers 30. Alternatively, one second layer 30 may be laminated only one surface of the first layer 20.

### (Substrate for electrode for electrolysis)

As the substrate for electrode for electrolysis 10, for example, nickel, nickel alloys, stainless steel, and further, valve metals including titanium can be used, although not limited thereto. At least one element selected from nickel (Ni) and titanium (Ti) is preferably included. That is, the substrate for electrode for electrolysis preferably includes at least one element selected from nickel (Ni) and titanium (Ti).

When stainless steel is used in an alkali aqueous solution of a high concentration, iron and chromium are eluted and the electrical conductivity of stainless steel is of the order of one-tenth of that of nickel. In consideration of the foregoing, a substrate containing nickel (Ni) is preferable as the substrate for electrode for electrolysis.

Alternatively, when the substrate for electrode for electrolysis 10 is used in a salt solution of a high concentration near the saturation under an atmosphere in which chlorine gas is generated, the material of the substrate for electrode 10 is also preferably titanium having high corrosion resistance.

The form of the substrate for electrode for electrolysis 10 is not particularly limited, and a form suitable for the purpose can be selected. As the form, any of a perforated metal, nonwoven fabric, foamed metal, expanded metal, metal porous foil formed by electroforming, so-called woven mesh produced by knitting metal lines, and the like can be used. Among these, a perforated metal or expanded metal is preferable. Electroforming is a technique for producing a metal thin film having a precise pattern by using photolithography and electroplating in combination. It is a method including forming a pattern on a substrate with a photoresist and electroplating the portion not protected by the resist to provide a metal thin film.

As for the form of the substrate for electrode for electrolysis, a suitable specification depends on the distance between the anode and the cathode in the electrolyzer. In the case where the distance between the anode and the cathode is finite, an expanded metal or perforated metal form can be used, and in the case of a so-called zero-gap base electrolyzer, in which the ion exchange membrane is in contact with the electrode, a woven mesh produced by knitting thin lines, foamed metal, metal nonwoven fabric, expanded metal, perforated metal, metal porous foil, and the like can be used, although not limited thereto.

Examples of the substrate for electrode for electrolysis 10 include a metal foil, a wire mesh, a metal nonwoven fabric, a perforated metal, an expanded metal, or a foamed metal.

As a plate material before processed into a perforated metal or expanded metal, rolled plate materials and electrolytic foils are preferable. An electrolytic foil is preferably further subjected to a plating treatment by use of the same element as the base material thereof, as the post-treatment, to thereby form asperities on the surface thereof.

The thickness of the substrate for electrode for electrolysis 10 is, as mentioned above, preferably 300 µm or less, more preferably 205 µm or less, further preferably 155 µm or less, further more preferably 135 µm or less, even further more preferably 125 µm or less, still more preferably 120 µm or less, even still more preferably 100 µm or less, and further still more preferably 50 µm or less from the viewpoint of a handling property and economy. The lower limit value is not particularly limited, but is 1 µm, for example, preferably 5 µm, more preferably 15 µm.

In the substrate for electrode for electrolysis, the residual stress during processing is preferably relaxed by annealing the substrate for electrode for electrolysis in an oxidizing atmosphere. It is preferable to form asperities using a steel grid, alumina grid, or the like on the surface of the substrate for electrode for electrolysis followed by an acid treatment to increase the surface area thereof, in order to improve the adhesion to a catalyst layer with which the surface is covered. It is preferable to give a plating treatment by use of the same element as the substrate to increase the surface area.

To bring the first layer 20 into close contact with the surface of the substrate for electrode for electrolysis 10, the substrate for electrode for electrolysis 10 is preferably subjected to a treatment of increasing the surface area. Examples of the treatment of increasing the surface area include a blast treatment using a cut wire, steel grid, alumina grid or the like, an acid treatment using sulfuric acid or hydrochloric acid, and a plating treatment using the same element to that of the substrate. The arithmetic average surface roughness (Ra) of the substrate surface is not particularly limited, but is preferably 0.05 µm to 50 µm, more preferably 0.1 to 10 µm, further preferably 0.1 to 5 µm.

Next, a case where the electrode for electrolysis of the present embodiment is used as an anode for common salt electrolysis will be described.

### (First layer)

In Figure 1, a first layer 20 as a catalyst layer contains at least one of ruthenium oxides, iridium oxides, and titanium oxides. Examples of the ruthenium oxide include RuO₂. Examples of the iridium oxide include IrO₂. Examples of the titanium oxide include TiO₂. The first layer 20 preferably contains two oxides: a ruthenium oxide and a titanium oxide or three oxides: a ruthenium oxide, an iridium oxide, and a titanium oxide. This makes the first layer 20 more stable and additionally improves the adhesion with the second layer 30.

When the first layer 20 contains two oxides: a ruthenium oxide and a titanium oxide, the first layer 20 contains preferably 1 to 9 mol, more preferably 1 to 4 mol of the titanium oxide based on 1 mol of the ruthenium oxide contained in the first layer 20. With the composition ratio of the two oxides in this range, the electrode for electrolysis 100 exhibits excellent durability.

When the first layer 20 contains three oxides: a ruthenium oxide, an iridium oxide, and a titanium oxide, the first layer 20 contains preferably 0.2 to 3 mol, more preferably 0.3 to 2.5 mol of the iridium oxide based on 1 mol of the ruthenium oxide contained in the first layer 20. The first layer 20 contains preferably 0.3 to 8 mol, more preferably 1 to 7 mol of the titanium oxide based on 1 mol of the ruthenium oxide contained in the first layer 20. With the composition ratio of the three oxides in this range, the electrode for electrolysis 100 exhibits excellent durability.

When the first layer 20 contains at least two of a ruthenium oxide, an iridium oxide, and a titanium oxide, these oxides preferably form a solid solution. Formation of the oxide solid solution allows the electrode for electrolysis 100 to exhibit excellent durability.

In addition to the compositions described above, oxides of various compositions can be used as long as at least one oxide of a ruthenium oxide, an iridium oxide, and titanium oxide is contained. For example, an oxide coating called DSA(R), which contains ruthenium, iridium, tantalum, niobium, titanium, tin, cobalt, manganese, platinum, and the like, can be used as the first layer 20.

The first layer 20 need not be a single layer and may include a plurality of layers. For example, the first layer 20 may include a layer containing three oxides and a layer containing two oxides. The thickness of the first layer 20 is preferably 0.05 to 10 µm, more preferably 0.1 to 8 µm.

### (Second layer)

The second layer 30 preferably contains ruthenium and titanium. This enables the chlorine overvoltage immediately after electrolysis to be further lowered.

The second layer 30 preferably contains a palladium oxide, a solid solution of a palladium oxide and platinum, or an alloy of palladium and platinum. This enables the chlorine overvoltage immediately after electrolysis to be further lowered.

A thicker second layer 30 can maintain the electrolytic performance for a longer period, but from the viewpoint of economy, the thickness is preferably 0.05 to 3 µm.

Next, a case where the electrode for electrolysis of the present embodiment is used as a cathode for common salt electrolysis will be described.

### (First layer)

Examples of components of the first layer 20 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

When the first layer 20 contains at least one of platinum group metals, platinum group metal oxides, platinum group metal hydroxides, and alloys containing a platinum group metal, the platinum group metals, platinum group metal oxides, platinum group metal hydroxides, and alloys containing a platinum group metal preferably contain at least one platinum group metal of platinum, palladium, rhodium, ruthenium, and iridium.

As the platinum group metal, platinum is preferably contained.

As the platinum group metal oxide, a ruthenium oxide is preferably contained.

As the platinum group metal hydroxide, a ruthenium hydroxide is preferably contained.

As the platinum group metal alloy, an alloy of platinum with nickel, iron, and cobalt is preferably contained.

Further, as required, an oxide or hydroxide of a lanthanoid element is preferably contained as a second component. This allows the electrode for electrolysis 100 to exhibit excellent durability.

As the oxide or hydroxide of a lanthanoid element, at least one selected from lanthanum, cerium, praseodymium, neodymium, promethium, samarium, europium, gadolinium, terbium, and dysprosium is preferably contained.

Further, as required, an oxide or hydroxide of a transition metal is preferably contained as a third component.

Addition of the third component enables the electrode for electrolysis 100 to exhibit more excellent durability and the electrolysis voltage to be lowered.

Examples of a preferable combination include ruthenium only, ruthenium + nickel, ruthenium + cerium, ruthenium + lanthanum, ruthenium + lanthanum + platinum, ruthenium + lanthanum + palladium, ruthenium + praseodymium, ruthenium + praseodymium + platinum, ruthenium + praseodymium + platinum + palladium, ruthenium + neodymium, ruthenium + neodymium + platinum, ruthenium + neodymium + manganese, ruthenium + neodymium + iron, ruthenium + neodymium + cobalt, ruthenium + neodymium + zinc, ruthenium + neodymium + gallium, ruthenium + neodymium + sulfur, ruthenium + neodymium + lead, ruthenium + neodymium + nickel, ruthenium + neodymium + copper, ruthenium + samarium, ruthenium + samarium + manganese, ruthenium + samarium + iron, ruthenium + samarium + cobalt, ruthenium + samarium + zinc, ruthenium + samarium + gallium, ruthenium + samarium + sulfur, ruthenium + samarium + lead, ruthenium + samarium + nickel, platinum + cerium, platinum + palladium + cerium, platinum + palladium + lanthanum + cerium, platinum + iridium, platinum + palladium, platinum + iridium + palladium, platinum + nickel + palladium, platinum + nickel + ruthenium, alloys of platinum and nickel, alloys of platinum and cobalt, and alloys of platinum and iron.

When platinum group metals, platinum group metal oxides, platinum group metal hydroxides, and alloys containing a platinum group metal are not contained, the main component of the catalyst is preferably nickel element.

At least one of nickel metal, oxides, and hydroxides is preferably contained.

As the second component, a transition metal may be added. As the second component to be added, at least one element of titanium, tin, molybdenum, cobalt, manganese, iron, sulfur, zinc, copper, and carbon is preferably contained.

Examples of a preferable combination include nickel + tin, nickel + titanium, nickel + molybdenum, and nickel + cobalt.

As required, an intermediate layer can be placed between the first layer 20 and the substrate for electrode for electrolysis 10. The durability of the electrode for electrolysis 100 can be improved by placing the intermediate layer.

As the intermediate layer, those having affinity to both the first layer 20 and the substrate for electrode for electrolysis 10 are preferable. As the intermediate layer, nickel oxides, platinum group metals, platinum group metal oxides, and platinum group metal hydroxides are preferable. The intermediate layer can be formed by applying and baking a solution containing a component that forms the intermediate layer. Alternatively, a surface oxide layer also can be formed by subjecting a substrate to a thermal treatment at a temperature of 300 to 600°C in an air atmosphere. Besides, the layer can be formed by a known method such as a thermal spraying method and ion plating method.

### (Second layer)

Examples of components of the first layer 30 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. The first layer 30 may or may not contain at least one of platinum group metals, platinum group metal oxides, platinum group metal hydroxides, and alloys containing a platinum group metal. Examples of a preferable combination of elements contained in the second layer include the combinations enumerated for the first layer. The combination of the first layer and the second layer may be a combination in which the compositions are the same and the composition ratios are different or may be a combination of different compositions.

As the thickness of the catalyst layer, the total thickness of the catalyst layer formed and the intermediate layer is preferably 0.01 µm to 20 µm. With a thickness of 0.01 µm or more, the catalyst layer can sufficiently serve as the catalyst. With a thickness of 20 µm or less, it is possible to form a robust catalyst layer that is unlikely to fall off from the substrate. The thickness is more preferably 0.05 µm to 15 µm. The thickness is more preferably 0.1 µm to 10 µm. The thickness is further preferably 0.2 µm to 8 µm.

The thickness of the electrode, that is, the total thickness of the substrate for electrode for electrolysis and the catalyst layer is preferably 315 µm or less, more preferably 220 µm or less, further preferably 170 µm or less, further more preferably 150 µm or less, particularly preferably 145 µm or less, still more preferably 140 µm or less, even still more preferably 138 µm or less, further still more preferably 135 µm or less in respect of the handling property of the electrode. A thickness of 135 µm or less can provide a good handling property. Further, from a similar viewpoint as above, the thickness is preferably 130 µm or less, more preferably less than 130 µm, further preferably 115 µm or less, further more preferably 65 µm or less. The lower limit value is not particularly limited, but is preferably 1 µm or more, more preferably 5 µm or more for practical reasons, more preferably 20 µm or more. The thickness of the electrode can be determined by measurement with a digimatic thickness gauge (Mitutoyo Corporation, minimum scale 0.001 mm). The thickness of the substrate for electrode for electrolysis was measured in the same manner as the thickness of the electrode. The thickness of the catalyst layer can be determined by subtracting the thickness of the substrate for electrode for electrolysis from the thickness of the electrode.

### (Method for producing electrode for electrolysis)

Next, one embodiment of the method for producing the electrode for electrolysis 100 will be described in detail.

In the present embodiment, the electrode for electrolysis 100 can be produced by forming the first layer 20, preferably the second layer 30, on the substrate for electrode for electrolysis by a method such as baking of a coating film under an oxygen atmosphere (pyrolysis), or ion plating, plating, or thermal spraying. Among these, the pyrolysis method, plating method, and ion plating method are preferable because the catalyst layer can be formed while deformation of the substrate for electrode for electrolysis is prevented. When the viewpoint of productivity is added, the plating method and pyrolysis method are further preferable. The production method of the present embodiment as mentioned can achieve a high productivity of the electrode for electrolysis 100. Specifically, in the pyrolysis method, a catalyst layer is formed on the substrate for electrode for electrolysis by an application step of applying a coating liquid containing a catalyst, a drying step of drying the coating liquid, and a pyrolysis step of performing pyrolysis. Pyrolysis herein means that a metal salt which is to be a precursor is decomposed by heating into a metal or metal oxide and a gaseous substance. The decomposition product depends on the metal species to be used, type of the salt, and the atmosphere under which pyrolysis is performed, and many metals tend to form oxides in an oxidizing atmosphere. In an industrial process of producing an electrode for electrolysis, pyrolysis is usually performed in air, and a metal oxide or a metal hydroxide is formed in many cases.

### (Formation of first layer of anode)

### (Application step)

The first layer 20 is obtained by applying a solution in which at least one metal salt of ruthenium, iridium, and titanium is dissolved (first coating liquid) onto the substrate for electrode for electrolysis and then pyrolyzing (baking) the coating liquid in the presence of oxygen. The content of ruthenium, iridium, and titanium in the first coating liquid is substantially equivalent to that of the first layer 20.

The metal salts may be chlorides, nitrates, sulfates, metal alkoxides, and any other forms. The solvent of the first coating liquid can be selected depending on the type of the metal salt, and water and alcohols such as butanol can be used. As the solvent, water or a mixed solvent of water and an alcohol is preferable. The total metal concentration in the first coating liquid in which the metal salts are dissolved is not particularly limited, but is preferably in the range of 10 to 150 g/L in association with the thickness of the coating film to be formed by a single coating.

Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

### (Drying step and pyrolysis step)

After being applied onto the substrate for electrode for electrolysis 100, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.

The cycle of application, drying, and pyrolysis described above is repeated to form a covering (the first layer 20) to a predetermined thickness. After the first layer 20 is formed and then further post-baked for a long period as required can further improve the stability of the first layer 20.

### (Formation of second layer of anode)

The second layer 30, which is formed as required, is obtained, for example, by applying a solution containing a palladium compound and a platinum compound or a solution containing a ruthenium compound and a titanium compound (second coating liquid) onto the first layer 20 and then pyrolyzing the coating liquid in the presence of oxygen.

### (Formation of first layer of cathode by pyrolysis method)

### (Application step)

The first layer 20 is obtained by applying a solution in which metal salts of various combination are dissolved (first coating liquid) onto the substrate for electrode for electrolysis and then pyrolyzing (baking) the coating liquid in the presence of oxygen. The content of the metal in the first coating liquid is substantially equivalent to that in the first layer 20.

The metal salts may be chlorides, nitrates, sulfates, metal alkoxides, and any other forms. The solvent of the first coating liquid can be selected depending on the type of the metal salt, and water and alcohols such as ethanol and butanol can be used. As the solvent, water or a mixed solvent of water and an alcohol is preferable. The total metal concentration in the first coating liquid in which the metal salts are dissolved is, but is not particularly limited to, preferably in the range of 10 to 150 g/L in association with the thickness of the coating film to be formed by a single coating.

Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

### (Drying step and pyrolysis step)

After being applied onto the substrate for electrode for electrolysis 10, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.

The cycle of application, drying, and pyrolysis described above is repeated to form a covering (the first layer 20) to a predetermined thickness. After the first layer 20 is formed and then further baked for a long period as required, heating in the range of 350°C to 650°C for one minute to 90 minutes can further improve the stability of the first layer 20.

### (Formation of intermediate layer)

The intermediate layer, which is formed as required, is obtained, for example, by applying a solution containing a palladium compound or platinum compound (second coating liquid) onto the substrate and then pyrolyzing the coating liquid in the presence of oxygen. Alternatively, a nickel oxide intermediate layer may be formed on the substrate surface only by heating the substrate, with no solution applied thereon, in the range of 300°C to 580°C for one minute to 60 minutes.

### (Formation of first layer of cathode by ion plating)

The first layer 20 can be formed also by ion plating.

An example includes a method in which the substrate is fixed in a chamber and the metal ruthenium target is irradiated with an electron beam. Evaporated metal ruthenium particles are positively charged in plasma in the chamber to deposit on the substrate negatively charged. The plasma atmosphere is argon and oxygen, and ruthenium deposits as ruthenium oxide on the substrate.

### (Formation of first layer of cathode by plating)

The first layer 20 can be formed also by a plating method.

As an example, when the substrate is used as the cathode and subjected to electrolytic plating in an electrolyte solution containing nickel and tin, alloy plating of nickel and tin can be formed.

### (Formation of first layer of cathode by thermal spraying)

The first layer 20 can be formed also by thermal spraying.

As an example, plasma spraying nickel oxide particles onto the substrate can form a catalyst layer in which metal nickel and nickel oxide are mixed.

The electrode for electrolysis of the present embodiment can be integrated with a membrane such as an ion exchange membrane and a microporous membrane and used. Thus, the electrode can be used as a membrane-integrated electrode. Then, the substituting work for the cathode and anode on renewing the electrode is eliminated, and the work efficiency is markedly improved.

The electrode for electrolysis of the present embodiment forms a laminate with a membrane such as an ion exchange membrane and a microporous membrane to be an integrated piece of the membrane and the electrode, and then can make the electrolytic performance comparable to or higher than those of a new electrode. The membrane is not particularly limited as long as the membrane can be laminated with the electrode, and will be described in detail below.

### [Ion exchange membrane]

The ion exchange membrane has a membrane body containing a hydrocarbon polymer or fluorine-containing polymer having an ion exchange group and a coating layer provided on at least one surface of the membrane body. The coating layer contains inorganic material particles and a binder, and the specific surface area of the coating layer is 0.1 to 10 m²/g. In the ion exchange membrane having such a structure, the influence of gas generated during electrolysis on electrolytic performance is small, and stable electrolytic performance can be exhibited.

The ion exchange membrane described above includes either one of a sulfonic acid layer having an ion exchange group derived from a sulfo group (a group represented by -SO₃⁻, hereinbelow also referred to as a "sulfonic acid group") or a carboxylic acid layer having an ion exchange group derived from a carboxyl group (a group represented by -CO₂⁻, hereinbelow also referred to as a "carboxylic acid group"). From the viewpoint of strength and dimension stability, reinforcement core materials are preferably further included.

The inorganic material particles and binder will be described in detail in the section of description of the coating layer below.

Figure 2 illustrates a cross-sectional schematic view showing one embodiment of an ion exchange membrane. An ion exchange membrane 1 has a membrane body 10 containing a hydrocarbon polymer or fluorine-containing polymer having an ion exchange group and coating layers 11a and 11b formed on both the surfaces of the membrane body 10.

In the ion exchange membrane 1, the membrane body 10 includes a sulfonic acid layer 3 and a carboxylic acid layer 2, and reinforcement core materials 4 enhance the strength and dimension stability. The ion exchange membrane 1, including the sulfonic acid layer 3 and the carboxylic acid layer 2, is suitably used as an ion exchange membrane.

The ion exchange membrane may include either one of the sulfonic acid layer and the carboxylic acid layer. The ion exchange membrane may not be necessarily reinforced by reinforcement core materials, and the arrangement of the reinforcement core materials is not limited to the example in Figure 2.

### (Membrane body)

First, the membrane body 10 constituting the ion exchange membrane 1 will be described.

The membrane body 10 should be one that has a function of selectively allowing cations to permeate and comprises a hydrocarbon polymer or a fluorine-containing polymer having an ion exchange group. Its configuration and material are not particularly limited, and preferred ones can be appropriately selected.

The hydrocarbon polymer or fluorine-containing polymer having an ion exchange group in the membrane body 10 can be obtained from a hydrocarbon polymer or fluorine-containing polymer having an ion exchange group precursor capable of forming an ion exchange group by hydrolysis or the like. Specifically, for example, after a polymer comprising a main chain of a fluorinated hydrocarbon, having, as a pendant side chain, a group convertible into an ion exchange group by hydrolysis or the like (ion exchange group precursor), and being meltprocessable (hereinbelow, referred to as the "fluorine-containing polymer (a)" in some cases) is used to prepare a precursor of the membrane body 10, the membrane body 10 can be obtained by converting the ion exchange group precursor into an ion exchange group.

The fluorine-containing polymer (a) can be produced, for example, by copolymerizing at least one monomer selected from the following first group and at least one monomer selected from the following second group and/or the following third group. The fluorine-containing polymer (a) can be also produced by homopolymerization of one monomer selected from any of the following first group, the following second group, and the following third group.

Examples of the monomers of the first group include vinyl fluoride compounds. Examples of the vinyl fluoride compounds include vinyl fluoride, tetrafluoroethylene, hexafluoropropylene, vinylidene fluoride, trifluoroethylene, chlorotrifluoroethylene, and perfluoro alkyl vinyl ethers. Particularly when the ion exchange membrane is used as a membrane for alkali electrolysis, the vinyl fluoride compound is preferably a perfluoro monomer, and a perfluoro monomer selected from the group consisting of tetrafluoroethylene, hexafluoropropylene, and perfluoro alkyl vinyl ethers is preferable.

Examples of the monomers of the second group include vinyl compounds having a functional group convertible into a carboxylic acid-type ion exchange group (carboxylic acid group). Examples of the vinyl compounds having a functional group convertible into a carboxylic acid group include monomers represented by CF₂=CF(OCF₂CYF)ₛ-O(CZF)ₜ-COOR, wherein s represents an integer of 0 to 2, t represents an integer of 1 to 12, Y and Z each independently represent F or CF₃, and R represents a lower alkyl group (a lower alkyl group is an alkyl group having 1 to 3 carbon atoms, for example).

Among these, compounds represented by CF₂=CF(OCF₂CYF)-O(CF₂)ₘ-COOR are preferable. Wherein n represents an integer of 0 to 2, m represents an integer of 1 to 4, Y represents F or CF₃, and R represents CH₃, C₂H₅, or C₃H₇.

When the ion exchange membrane is used as a cation exchange membrane for alkali electrolysis, a perfluoro compound is preferably at least used as the monomer, but the alkyl group (see the above R) of the ester group is lost from the polymer at the time of hydrolysis, and therefore the alkyl group (R) need not be a perfluoroalkyl group in which all hydrogen atoms are replaced by fluorine atoms.

Of the above monomers, the monomers represented below are more preferable as the monomers of the second group:

CF₂=CFOCF₂-CF(CF₃)OCF₂COOCH₃,

CF₂=CFOCF₂CF(CF₃)O(CF₂)₂COOCH₃,

CF₂=CF[OCF₂-CF(CF₃)]₂O(CF₂)₂COOCH₃,

CF₂=CFOCF₂CF(CF₃)O(CF₂)₃COOCH₃,

CF₂=CFO(CF₂)₂COOCH₃, and

CF₂=CFO(CF₂)₃COOCH₃.

Examples of the monomers of the third group include vinyl compounds having a functional group convertible into a sulfone-type ion exchange group (sulfonic acid group). As the vinyl compounds having a functional group convertible into a sulfonic acid group, for example, monomers represented by CF₂=CFO-X-CF₂-SO₂F are preferable, wherein X represents a perfluoroalkylene group. Specific examples of these include the monomers represented below:

CF₂=CFOCF₂CF₂SO₂F,

CF₂=CFOCF₂CF(CF₃)OCF₂CF₂SO₂F,

CF₂=CFOCF₂CF(CF₃)OCF₂CF₂CF₂SO₂F,

CF₂=CF(CF₂)₂SO₂F,

CF₂=CFO[CF₂CF(CF₃)O]₂CF₂CF₂SO₂F, and

CF₂=CFOCF₂CF(CF₂OCF₃)OCF₂CF₂SO₂F.

Among these, CF₂=CFOCF₂CF(CF₃)OCF₂CF₂CF₂SO₂F and CF₂=CFOCF₂CF(CF₃)OCF₂CF₂SO₂F are more preferable.

The copolymer obtained from these monomers can be produced by a polymerization method developed for homopolymerization and copolymerization of ethylene fluoride, particularly a general polymerization method used for tetrafluoroethylene. For example, in a nonaqueous method, a polymerization reaction can be performed in the presence of a radical polymerization initiator such as a perfluorocarbon peroxide or an azo compound under the conditions of a temperature of 0 to 200°C and a pressure of 0.1 to 20 MPa using an inert solvent such as a perfluorohydrocarbon or a chlorofluorocarbon.

In the above copolymerization, the type of combination of the above monomers and their proportion are not particularly limited and are selected and determined depending on the type and amount of the functional group desired to be imparted to the fluorine-containing polymer to be obtained. For example, when a fluorine-containing polymer containing only a carboxylic acid group is formed, at least one monomer should be selected from each of the first group and the second group described above and copolymerized. In addition, when a fluorine-containing polymer containing only a sulfonic acid group is formed, at least one monomer should be selected from each of the first group and the third group and copolymerized. Further, when a fluorine-containing polymer having a carboxylic acid group and a sulfonic acid group is formed, at least one monomer should be selected from each of the first group, the second group, and the third group described above and copolymerized. In this case, the target fluorine-containing polymer can be obtained also by separately preparing a copolymer comprising the monomers of the first group and the second group described above and a copolymer comprising the monomers of the first group and the third group described above, and then mixing the copolymers. The mixing proportion of the monomers is not particularly limited, and when the amount of the functional groups per unit polymer is increased, the proportion of the monomers selected from the second group and the third group described above should be increased.

The total ion exchange capacity of the fluorine-containing copolymer is not particularly limited, but is preferably 0.5 to 2.0 mg equivalent/g, more preferably 0.6 to 1.5 mg equivalent/g. The total ion exchange capacity herein refers to the equivalent of the exchange group per unit weight of the dry resin and can be measured by neutralization titration or the like.

In the membrane body 10 of the ion exchange membrane 1, a sulfonic acid layer 3 containing a fluorine-containing polymer having a sulfonic acid group and a carboxylic acid layer 2 containing a fluorine-containing polymer having a carboxylic acid group are laminated. By providing the membrane body 10 having such a layer configuration, selective permeability for cations such as sodium ions can be further improved.

The ion exchange membrane 1 is arranged in an electrolyzer such that, usually, the sulfonic acid layer 3 is located on the anode side of the electrolyzer and the carboxylic acid layer 2 is located on the cathode side of the electrolyzer.

The sulfonic acid layer 3 is preferably constituted by a material having low electrical resistance and has a membrane thickness larger than that of the carboxylic acid layer 2 from the viewpoint of membrane strength. The membrane thickness of the sulfonic acid layer 3 is preferably 2 to 25 times, more preferably 3 to 15 times that of the carboxylic acid layer 2.

The carboxylic acid layer 2 preferably has high anion exclusion properties even if it has a small membrane thickness. The anion exclusion properties here refer to the property of trying to hinder intrusion and permeation of anions into and through the ion exchange membrane 1. In order to raise the anion exclusion properties, it is effective to dispose a carboxylic acid layer having a small ion exchange capacity to the sulfonic acid layer.

As the fluorine-containing polymer for use in the sulfonic acid layer 3, preferable is a polymer obtained by using CF₂=CFOCF₂CF(CF₃)OCF₂CF₂SO₂F as the monomer of the third group.

As the fluorine-containing polymer for use in the carboxylic acid layer 2, preferable is a polymer obtained by using CF₂=CFOCF₂CF(CF₂)O(CF₂)₂COOCH₃ as the monomer of the second group.

### (Coating layer)

The ion exchange membrane has a coating layer on at least one surface of the membrane body. As shown in Figure 2, in the ion exchange membrane 1, coating layers 11a and 11b are formed on both the surfaces of the membrane body 10.

The coating layers contain inorganic material particles and a binder.

The average particle size of the inorganic material particles is preferably 0.90 µm or more. When the average particle size of the inorganic material particles is 0.90 µm or more, durability to impurities is extremely improved, in addition to attachment of gas. That is, enlarging the average particle size of the inorganic material particles as well as satisfying the value of the specific surface area mentioned above can achieve a particularly marked effect. Irregular inorganic material particles are preferable because the average particle size and specific surface area as above are satisfied. Inorganic material particles obtained by melting and inorganic material particles obtained by grinding raw ore can be used. Inorganic material particles obtained by grinding raw ore can preferably be used.

The average particle size of the inorganic material particles can be 2 µm or less. When the average particle size of the inorganic material particles is 2 µm or less, it is possible to prevent damage of the membrane due to the inorganic material particles. The average particle size of the inorganic material particle is more preferably 0.90 to 1.2 µm.

Here, the average particle size can be measured by a particle size analyzer ("SALD2200", SHIMADZU CORPORATION).

The inorganic material particles preferably have irregular shapes. Such shapes improve resistance to impurities further. The inorganic material particles preferably have a broad particle size distribution.

The inorganic material particles preferably contain at least one inorganic material selected from the group consisting of oxides of Group IV elements in the Periodic Table, nitrides of Group IV elements in the Periodic Table, and carbides of Group IV elements in the Periodic Table. From the viewpoint of durability, zirconium oxide particle is more preferable.

The inorganic material particles are preferably inorganic material particles produced by grinding the raw ore of the inorganic material particles or inorganic material particles, as spherical particles having a uniform diameter, obtained by melt-purifying the raw ore of the inorganic material particles.

Examples of means for grinding raw ore include, but are not particularly limited to, ball mills, bead mills, colloid mills, conical mills, disc mills, edge mills, grain mills, hammer mills, pellet mills, VSI mills, Wiley mills, roller mills, and jet mills. After grinding, the particles are preferably washed. As the washing method, the particles are preferably treated with acid. This treatment can reduce impurities such as iron attached to the surface of the inorganic material particles.

The coating layer preferably contains a binder. The binder is a component that forms the coating layers by retaining the inorganic material particles on the surface of the ion exchange membrane. The binder preferably contains a fluorine-containing polymer from the viewpoint of durability to the electrolyte solution and products from electrolysis.

As the binder, a fluorine-containing polymer having a carboxylic acid group or sulfonic acid group is more preferable, from the viewpoint of durability to the electrolyte solution and products from electrolysis and adhesion to the surface of the ion exchange membrane. When a coating layer is provided on a layer containing a fluorine-containing polymer having a sulfonic acid group (sulfonic acid layer), a fluorine-containing polymer having a sulfonic acid group is further preferably used as the binder of the coating layer. Alternatively, when a coating layer is provided on a layer containing a fluorine-containing polymer having a carboxylic acid group (carboxylic acid layer), a fluorine-containing polymer having a carboxylic acid group is further preferably used as the binder of the coating layer.

In the coating layer, the content of the inorganic material particles is preferably 40 to 90% by mass, more preferably 50 to 90% by mass. The content of the binder is preferably 10 to 60% by mass, more preferably 10 to 50% by mass.

The distribution density of the coating layer in the ion exchange membrane is preferably 0.05 to 2 mg per 1 cm². When the ion exchange membrane has asperities on the surface thereof, the distribution density of the coating layer is preferably 0.5 to 2 mg per 1 cm².

As the method for forming the coating layer, which is not particularly limited, a known method can be used. An example is a method including applying by a spray or the like a coating liquid obtained by dispersing inorganic material particles in a solution containing a binder.

### (Reinforcement core materials)

The ion exchange membrane preferably has reinforcement core materials arranged inside the membrane body.

The reinforcement core materials are members that enhance the strength and dimensional stability of the ion exchange membrane. By arranging the reinforcement core materials inside the membrane body, particularly expansion and contraction of the ion exchange membrane can be controlled in the desired range. Such an ion exchange membrane does not expand or contract more than necessary during electrolysis and the like and can maintain excellent dimensional stability for a long term.

The configuration of the reinforcement core materials is not particularly limited, and, for example, the reinforcement core materials may be formed by spinning yarns referred to as reinforcement yarns. The reinforcement yarns here refer to yarns that are members constituting the reinforcement core materials, can provide the desired dimensional stability and mechanical strength to the ion exchange membrane, and can be stably present in the ion exchange membrane. By using the reinforcement core materials obtained by spinning such reinforcement yarns, better dimensional stability and mechanical strength can be provided to the ion exchange membrane.

The material of the reinforcement core materials and the reinforcement yarns used for these is not particularly limited but is preferably a material resistant to acids, alkalis, etc., and a fiber comprising a fluorine-containing polymer is preferable because longterm heat resistance and chemical resistance are required.

Examples of the fluorine-containing polymer to be used in the reinforcement core materials include polytetrafluoroethylene (PTFE), tetrafluoroethyleneperfluoroalkyl vinyl ether copolymers (PFA), tetrafluoroethylene-ethylene copolymers (ETFE), tetrafluoroethylene-hexafluoropropylene copolymers, trifluorochloroethylene-ethylene copolymers, and vinylidene fluoride polymers (PVDF). Among these, fibers comprising polytetrafluoroethylene are preferably used from the viewpoint of heat resistance and chemical resistance.

The yarn diameter of the reinforcement yarns used for the reinforcement core materials is not particularly limited, but is preferably 20 to 300 deniers, more preferably 50 to 250 deniers. The weave density (fabric count per unit length) is preferably 5 to 50/inch. The form of the reinforcement core materials is not particularly limited, for example, a woven fabric, a nonwoven fabric, and a knitted fabric are used, but is preferably in the form of a woven fabric. The thickness of the woven fabric to be used is preferably 30 to 250 µm, more preferably 30 to 150 µm.

As the woven fabric or knitted fabric, monofilaments, multifilaments, or yarns thereof, a slit yarn, or the like can be used, and various types of weaving methods such as a plain weave, a leno weave, a knit weave, a cord weave, and a seersucker can be used.

The weave and arrangement of the reinforcement core materials in the membrane body are not particularly limited, and preferred arrangement can be appropriately provided considering the size and form of the ion exchange membrane, physical properties desired for the ion exchange membrane, the use environment, and the like.

For example, the reinforcement core materials may be arranged along one predetermined direction of the membrane body, but from the viewpoint of dimensional stability, it is preferred that the reinforcement core materials be arranged along a predetermined first direction, and other reinforcement core materials be arranged along a second direction substantially perpendicular to the first direction. By arranging the plurality of reinforcement core materials substantially orthogonally inside the membrane body, it is possible to impart better dimensional stability and mechanical strength in many directions. For example, arrangement in which the reinforcement core materials arranged along the longitudinal direction (warp yarns) and the reinforcement core materials arranged along the transverse direction (weft yarns) are woven on the surface side of the membrane body is preferred. The arrangement is more preferably in the form of plain weave driven and woven by allowing warps and wefts to run over and under each other alternately, leno weave in which two warps are woven into wefts while twisted, basket weave driven and woven by inserting, into two or more parallelly-arranged warps, wefts of the same number, or the like, from the viewpoint of dimension stability, mechanical strength and easyproduction.

It is preferred that particularly, the reinforcement core materials be arranged along both directions, the MD (Machine Direction) and TD (Transverse Direction) of the ion exchange membrane. In other words, the reinforcement core materials are preferably plain-woven in the MD and TD. Here, the MD refers to the direction in which the membrane body and various core materials (for example, the reinforcement core materials, reinforcement yarns, and sacrifice yarns described later) are conveyed in an ion exchange membrane production step described later (flow direction), and the TD refers to the direction substantially perpendicular to the MD. Yarns woven along the MD are referred to as MD yarns, and yarns woven along the TD are referred to as TD yarns. Usually, the ion exchange membrane used for electrolysis is rectangular, and in many cases, the longitudinal direction is the MD, and the width direction is the TD. By weaving the reinforcement core materials that are MD yarns and the reinforcement core materials that are TD yarns, it is possible to impart better dimensional stability and mechanical strength in many directions.

The arrangement interval of the reinforcement core materials is not particularly limited, and preferred arrangement can be appropriately provided considering physical properties desired for the ion exchange membrane, the use environment, and the like.

The aperture ratio for the reinforcement core materials is not particularly limited, but is preferably 30% or more, more preferably 50% or more and 90% or less. The aperture ratio is preferably 30% or more from the viewpoint of the electrochemical properties of the ion exchange membrane, and preferably 90% or less from the viewpoint of the mechanical strength of the ion exchange membrane.

The aperture ratio for the reinforcement core materials herein refers to a ratio of a total area of a surface through which substances such as ions (an electrolyte solution and cations contained therein (e.g., sodium ions)) can pass (B) to the area of either one surface of the membrane body (A) (B/A). The total area of the surface through which substances such as ions can pass (B) can refer to the total areas of regions in which in the ion exchange membrane, cations, an electrolytic solution, and the like are not blocked by the reinforcement core materials and the like contained in the ion exchange membrane.

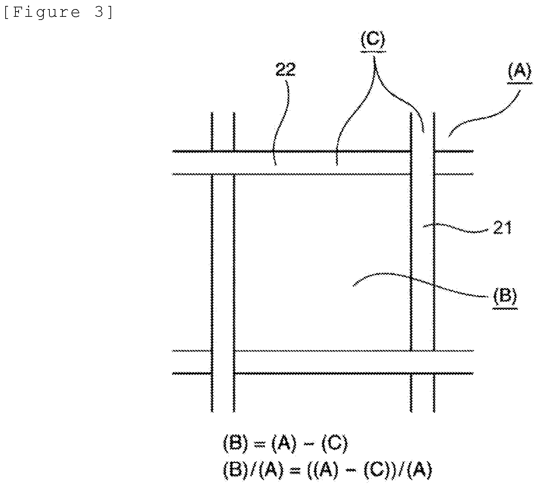

Figure 3 illustrates a schematic view for explaining the aperture ratio of reinforcement core materials constituting the ion exchange membrane. Figure 3, in which a portion of the ion exchange membrane is enlarged, shows only the arrangement of the reinforcement core materials 21 and 22 in the regions, omitting illustration of the other members.

By subtracting the total area of the reinforcement core materials (C) from the area of the region surrounded by the reinforcement core materials 21 arranged along the longitudinal direction and the reinforcement core materials 22 arranged along the transverse direction, the region including the area of the reinforcement core materials (A), the total area of regions through which substances such as ions can pass (B) in the area of the above-described region (A) can be obtained. That is, the aperture ratio can be determined by the following formula (I): $Aperture ratio = \left(B\right) / \left(A\right) = \left(\left(A\right)-\left(C\right)\right) / \left(A\right)$

Among the reinforcement core materials, a particularly preferred form is tape yarns or highly oriented monofilaments comprising PTFE from the viewpoint of chemical resistance and heat resistance. Specifically, reinforcement core materials forming a plain weave in which 50 to 300 denier tape yarns obtained by slitting a high strength porous sheet comprising PTFE into a tape form, or 50 to 300 denier highly oriented monofilaments comprising PTFE are used and which has a weave density of 10 to 50 yarns or monofilaments/inch and has a thickness in the range of 50 to 100 µm are more preferred. The aperture ratio of an ion exchange membrane comprising such reinforcement core materials is further preferably 60% or more.

Examples of the shape of the reinforcement yarns include round yarns and tape yarns.

### (Continuous holes)

The ion exchange membrane preferably has continuous holes inside the membrane body.

The continuous holes refer to holes that can be flow paths for ions generated in electrolysis and an electrolyte solution. The continuous holes, which are tubular holes formed inside the membrane body, are formed by dissolution of sacrifice core materials (or sacrifice yarns) described below. The shape, diameter, or the like of the continuous holes can be controlled by selecting the shape or diameter of the sacrifice core materials (sacrifice yarns).

Forming the continuous holes inside the ion exchange membrane can ensure the mobility of an electrolyte solution on electrolysis. The shape of the continuous holes is not particularly limited, but may be the shape of sacrifice core materials to be used for formation of the continuous holes in accordance with the production method described below.

The continuous holes are preferably formed so as to alternately pass on the anode side (sulfonic acid layer side) and the cathode side (carboxylic acid layer side) of the reinforcement core materials. With such a structure, in a portion in which continuous holes are formed on the cathode side of the reinforcement core materials, ions (e.g., sodium ions) transported through the electrolyte solution with which the continuous holes are filled can flow also on the cathode side of the reinforcement core materials. As a result, the flow of cations is not interrupted, and thus, it is possible to further reduce the electrical resistance of the ion exchange membrane.

The continuous holes may be formed along only one predetermined direction of the membrane body constituting the ion exchange membrane, but are preferably formed in both the longitudinal direction and the transverse direction of the membrane body from the viewpoint of exhibiting more stable electrolytic performance.

### [Production method]

A suitable example of a method for producing an ion exchange membrane includes a method including the following steps (1) to (6):
Step (1): the step of producing a fluorine-containing polymer having an ion exchange group or an ion exchange group precursor capable of forming an ion exchange group by hydrolysis,
Step (2): the step of weaving at least a plurality of reinforcement core materials, as required, and sacrifice yarns having a property of dissolving in an acid or an alkali, and forming continuous holes, to obtain a reinforcing material in which the sacrifice yarns are arranged between the reinforcement core materials adjacent to each other,
Step (3): the step of forming into a film the above fluorine-containing polymer having an ion exchange group or an ion exchange group precursor capable of forming an ion exchange group by hydrolysis,
Step (4): the step of embedding the above reinforcing materials, as required, in the above film to obtain a membrane body inside which the reinforcing materials are arranged,
Step (5): the step of hydrolyzing the membrane body obtained in the step (4) (hydrolysis step), and
Step (6): the step of providing a coating layer on the membrane body obtained in the step (5) (application step).

Hereinafter, each of the steps will be described in detail.

### Step (1): Step of producing fluorine-containing polymer

In the step (1), raw material monomers described in the first group to the third group above are used to produce a fluorine-containing polymer. In order to control the ion exchange capacity of the fluorine-containing polymer, the mixture ratio of the raw material monomers should be adjusted in the production of the fluorine-containing polymer forming the layers.

### Step (2): Step of producing reinforcing materials

The reinforcing material is a woven fabric obtained by weaving reinforcement yarns or the like. The reinforcing material is embedded in the membrane to thereby form reinforcement core materials. When an ion exchange membrane having continuous holes is formed, sacrifice yarns are additionally woven into the reinforcing material. The amount of the sacrifice yarns contained in this case is preferably 10 to 80% by mass, more preferably 30 to 70% by mass based on the entire reinforcing material. Weaving the sacrifice yarns can also prevent yarn slippage of the reinforcement core materials.

As the sacrifice yarns, which have solubility in the membrane production step or under an electrolysis environment, rayon, polyethylene terephthalate (PET), cellulose, polyamide, and the like are used. Monofilaments or multifilaments having a thickness of 20 to 50 deniers and comprising polyvinyl alcohol and the like are also preferred.

In the step (2), the aperture ratio, arrangement of the continuous holes, and the like can be controlled by adjusting the arrangement of the reinforcement core materials and the sacrifice yarns.

### Step (3): Step of film formation

In the step (3), the fluorine-containing polymer obtained in the step (1) is formed into a film by using an extruder. The film may be a single-layer configuration, a two-layer configuration of a sulfonic acid layer and a carboxylic acid layer as mentioned above, or a multilayer configuration of three layers or more.

Examples of the film forming method include the following:
a method in which a fluorine-containing polymer having a carboxylic acid group and a fluorine-containing polymer having a sulfonic acid group are separately formed into films; and
a method in which fluorine-containing polymer having a carboxylic acid group and a fluorine-containing polymer having a sulfonic acid group are coextruded into a composite film.

The number of each film may be more than one. Coextrusion of different films is preferred because of its contribution to an increase in the adhesive strength in the interface.

### Step (4): Step of obtaining membrane body

In the step (4), the reinforcing material obtained in the step (2) is embedded in the film obtained in the step (3) to provide a membrane body including the reinforcing material therein.

Preferable examples of the method for forming a membrane body include (i) a method in which a fluorine-containing polymer having a carboxylic acid group precursor (e.g., carboxylate functional group) (hereinafter, a layer comprising the same is referred to as the first layer) located on the cathode side and a fluorine-containing polymer having a sulfonic acid group precursor (e.g., sulfonyl fluoride functional group) (hereinafter, a layer comprising the same is referred to as the second layer) are formed into a film by a coextrusion method, and, by using a heat source and a vacuum source as required, a reinforcing material and the second layer/first layer composite film are laminated in this order on breathable heat-resistant release paper on a flat plate or drum having many pores on the surface thereof and integrated at a temperature at which each polymer melts while air among each of the layers was evacuated by reduced pressure; and (ii) a method in which, in addition to the second layer/first layer composite film, a fluorine-containing polymer having a sulfonic acid group precursor is singly formed into a film (the third layer) in advance, and, by using a heat source and a vacuum source as required, the third layer film, the reinforcement core materials, and the composite film comprising the second layer/first layer are laminated in this order on breathable heat-resistant release paper on a flat plate or drum having many pores on the surface thereof and integrated at a temperature at which each polymer melts while air among each of the layers was evacuated by reduced pressure.

Coextrusion of the first layer and the second layer herein contributes to an increase in the adhesive strength at the interface.

The method including integration under a reduced pressure is characterized by making the third layer on the reinforcing material thicker than that of a pressureapplication press method. Further, since the reinforcing material is fixed on the inner surface of the membrane body, the method has a property of sufficiently retaining the mechanical strength of the ion exchange membrane.

The variations of lamination described here are exemplary, and coextrusion can be performed after a preferred lamination pattern (for example, the combination of layers) is appropriately selected considering the desired layer configuration of the membrane body and physical properties, and the like.

For the purpose of further improving the electric properties of the ion exchange membrane, it is also possible to additionally interpose a fourth layer comprising a fluorine-containing polymer having both a carboxylic acid group precursor and a sulfonic acid group precursor between the first layer and the second layer or to use a fourth layer comprising a fluorine-containing polymer having both a carboxylic acid group precursor and a sulfonic acid group precursor instead of the second layer.

The method for forming the fourth layer may be a method in which a fluorine-containing polymer having a carboxylic acid group precursor and a fluorine-containing polymer having a sulfonic acid group precursor are separately produced and then mixed or may be a method in which a monomer having a carboxylic acid group precursor and a monomer having a sulfonic acid group precursor are copolymerized.

When the fourth layer is used as a component of the ion exchange membrane, a coextruded film of the first layer and the fourth layer is formed, in addition to this, the third layer and the second layer are separately formed into films, and lamination may be performed by the method mentioned above. Alternatively, the three layers of the first layer/fourth layer/second layer may be simultaneously formed into a film by coextrusion.

In this case, the direction in which the extruded film flows is the MD. As mentioned above, it is possible to form a membrane body containing a fluorine-containing polymer having an ion exchange group on a reinforcing material.

Additionally, the ion exchange membrane preferably has protruded portions composed of the fluorine-containing polymer having a sulfonic acid group, that is, projections, on the surface side composed of the sulfonic acid layer. As a method for forming such projections, which is not particularly limited, a known method also can be employed including forming projections on a resin surface. A specific example of the method is a method of embossing the surface of the membrane body. For example, the above projections can be formed by using release paper embossed in advance when the composite film mentioned above, reinforcing material, and the like are integrated. In the case where projections are formed by embossing, the height and arrangement density of the projections can be controlled by controlling the emboss shape to be transferred (shape of the release paper).

### (5) Hydrolysis step

In the step (5), a step of hydrolyzing the membrane body obtained in the step (4) to convert the ion exchange group precursor into an ion exchange group (hydrolysis step) is performed.

In the step (5), it is also possible to form dissolution holes in the membrane body by dissolving and removing the sacrifice yarns included in the membrane body with acid or alkali. The sacrifice yarns may remain in the continuous holes without being completely dissolved and removed. The sacrifice yarns remaining in the continuous holes may be dissolved and removed by the electrolyte solution when the ion exchange membrane is subjected to electrolysis.

The sacrifice yarn has solubility in acid or alkali in the step of producing an ion exchange membrane or under an electrolysis environment. The sacrifice yarns are eluted out to thereby form continuous holes at corresponding sites.

The step (5) can be performed by immersing the membrane body obtained in the step (4) in a hydrolysis solution containing acid or alkali. An example of the hydrolysis solution that can be used is a mixed solution containing KOH and dimethyl sulfoxide (DMSO).

The mixed solution preferably contains KOH of 2.5 to 4.0 N and DMSO of 25 to 35% by mass.

The temperature for hydrolysis is preferably 70 to 100°C. The higher the temperature, the larger can be the apparent thickness. The temperature is more preferably 75 to 100°C.

The time for hydrolysis is preferably 10 to 120 minutes. The longer the time, the larger can be the apparent thickness. The time is more preferably 20 to 120 minutes.

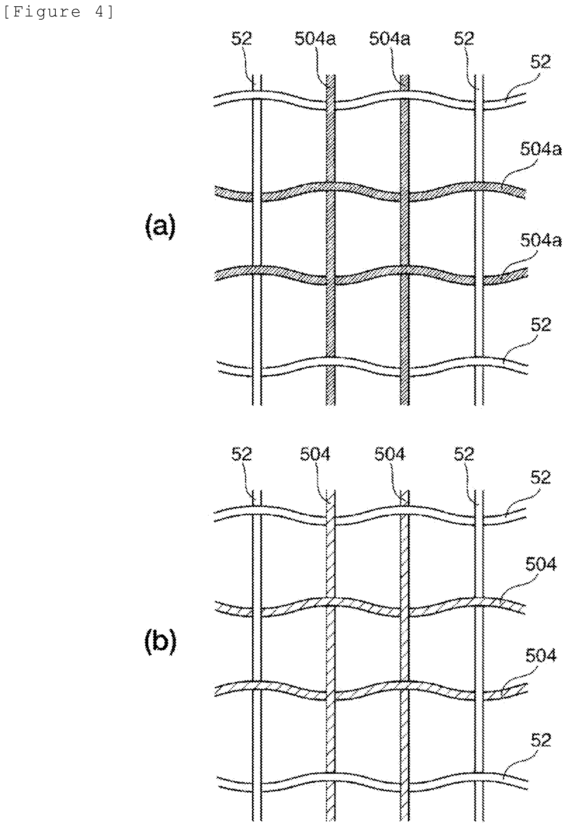

The step of forming continuous holes by eluting the sacrifice yarn will be now described in more detail. Figures 4(a) and (b) are schematic views for explaining a method for forming the continuous holes of the ion exchange membrane.

Figures 4(a) and (b) show reinforcement yarns 52, sacrifice yarns 504a, and continuous holes 504 formed by the sacrifice yarns 504a only, omitting illustration of the other members such as a membrane body.

First, the reinforcement yarns 52 that are to constitute reinforcement core materials in the ion exchange membrane and the sacrifice yarns 504a for forming the continuous holes 504 in the ion exchange membrane are used as interwoven reinforcing materials. Then, in the step (5), the sacrifice yarns 504a are eluted to form the continuous holes 504.

The above method is simple because the method for interweaving the reinforcement yarns 52 and the sacrifice yarns 504a may be adjusted depending on the arrangement of the reinforcement core materials and continuous holes in the membrane body of the ion exchange membrane.

Figure 4(a) exemplifies the plain-woven reinforcing material in which the reinforcement yarns 52 and sacrifice yarns 504a are interwoven along both the longitudinal direction and the lateral direction in the paper, and the arrangement of the reinforcement yarns 52 and the sacrifice yarns 504a in the reinforcing material may be varied as required.

### (6) Application step

In the step (6), a coating layer can be formed by preparing a coating liquid containing inorganic material particles obtained by grinding raw ore or melting raw ore and a binder, applying the coating liquid onto the surface of the ion exchange membrane obtained in the step (5), and drying the coating liquid.

A preferable binder is a binder obtained by hydrolyzing a fluorine-containing polymer having an ion exchange group precursor with an aqueous solution containing dimethyl sulfoxide (DMSO) and potassium hydroxide (KOH) and then immersing the polymer in hydrochloric acid to replace the counterion of the ion exchange group by H+ (e.g., a fluorine-containing polymer having a carboxyl group or sulfo group). Thereby, the polymer is more likely to dissolve in water or ethanol mentioned below, which is preferable.

This binder is dissolved in a mixed solution of water and ethanol. The volume ratio between water and ethanol is preferably 10:1 to 1:10, more preferably 5:1 to 1:5, further preferably 2:1 to 1:2. The inorganic material particles are dispersed with a ball mill into the dissolution liquid thus obtained to thereby provide a coating liquid. In this case, it is also possible to adjust the average particle size and the like of the particles by adjusting the time and rotation speed during the dispersion. The preferable amount of the inorganic material particles and the binder to be blended is as mentioned above.

The concentration of the inorganic material particles and the binder in the coating liquid is not particularly limited, but a thin coating liquid is preferable. This enables uniform application onto the surface of the ion exchange membrane.

Additionally, a surfactant may be added to the dispersion when the inorganic material particles are dispersed. As the surfactant, nonionic surfactants are preferable, and examples thereof include HS-210, NS-210, P-210, and E-212 manufactured by NOF CORPORATION.

The coating liquid obtained is applied onto the surface of the ion exchange membrane by spray application or roll coating to thereby provide an ion exchange membrane.

### [Microporous membrane]

The microporous membrane of the present embodiment is not particularly limited as long as the membrane can be formed into a laminate with the electrode for electrolysis, as mentioned above. Various microporous membranes may be employed.

The porosity of the microporous membrane of the present embodiment is not particularly limited, but can be 20 to 90, for example, and is preferably 30 to 85. The above porosity can be calculated by the following formula: Porosity = (1 - (the weight of the membrane in a dried state) / (the weight calculated from the volume calculated from the thickness, width, and length of the membrane and the density of the membrane material)) × 100

The average pore size of the microporous membrane of the present embodiment is not particularly limited, and can be 0.01 µm to 10 µm, for example, preferably 0.05 µm to 5 µm. With respect to the average pore size, for example, the membrane is cut vertically to the thickness direction, and the section is observed with an FE-SEM. The average pore size can be obtained by measuring the diameter of about 100 pores observed and averaging the measurements.

The thickness of the microporous membrane of the present embodiment is not particularly limited, and can be 10 µm to 1000 µm, for example, preferably 50 µm to 600 µm. The above thickness can be measured by using a micrometer (manufactured by Mitutoyo Corporation) or the like, for example.

Specific examples of the microporous membrane as mentioned above include Zirfon Perl UTP 500 manufactured by Agfa (also referred to as a Zirfon membrane in the present embodiment) and those described in International Publication No. WO 2013-183584 and International Publication No. WO 2016-203701.

### [Laminate]

The laminate of the present embodiment comprises the electrode for electrolysis of the present embodiment, and a membrane or feed conductor in contact with the electrode for electrolysis. The laminate of the present embodiment, as configured as described above, can improve the work efficiency during electrode renewing in an electrolyzer and further, can exhibit excellent electrolytic performance also after renewing.

That is, according to the laminate of the present embodiment, on renewing the electrode, the electrode can be renewed by a work as simple as renewing the membrane, without a complicated work such as stripping off the electrode fixed on the electrolytic cell, and thus, the work efficiency is markedly improved.

Further, according to the laminate of the present invention, it is possible to maintain the electrolytic performance comparable to those of a new electrode or improve the electrolytic performance. Even in the case where only a feed conductor is placed in a new electrolytic cell (i.e., an electrode including no catalyst layer placed), only attaching the electrode for electrolysis of the present embodiment to the feed conductor enables the electrode to function. Thus, it may be also possible to markedly reduce or eliminate catalyst coating.

The laminate of the present embodiment can be stored or transported to customers in a state where the laminate is wound around a vinyl chloride pipe or the like (in a rolled state or the like), making handling markedly easier.

As the feed conductor of the present embodiment, various substrates mentioned below such as a degraded electrode (i.e., the existing electrode) and an electrode having no catalyst coating can be employed.

In the laminate of the present embodiment, the force applied per unit mass·unit area of the electrode for electrolysis on the membrane or feed conductor is preferably 0.08 N/(mg·cm²) or more, more preferably 0.1 N/(mg·cm²) or more, further preferably 0.14 N/(mg·cm²) or more, and further more preferably, from the viewpoint of further facilitating handling in a large size (e.g., a size of 1.5 m × 2.5 m), is 0.2 N/(mg·cm²) or more. The upper limit value is not particularly limited, but is preferably 1.6 N/(mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less. The upper limit value is even still more preferably 1.1 N/mg·cm² or less, further still more preferably 1.10 N/mg·cm² or less, particularly preferably 1.0 N/mg·cm² or less, especially preferably 1.00 N/mg·cm² or less.

### [Wound body]

The wound body of the present embodiment includes the electrode for electrolysis of the present embodiment or the laminate of the present embodiment. That is, the wound body of the present embodiment is obtained by winding the electrode for electrolysis of the present embodiment or the laminate of the present embodiment. Downsizing the electrode for electrolysis of the present embodiment or the laminate of the present embodiment by winding, as the wound body of the present embodiment, can further improve the handling property.

### [Electrolyzer]

The electrolyzer of the present embodiment includes the electrode for electrolysis of the present embodiment. Hereinafter, the case of performing common salt electrolysis by using an ion exchange membrane as the membrane is taken as an example, and one embodiment of the electrolyzer will be described in detail.

### [Electrolytic cell]

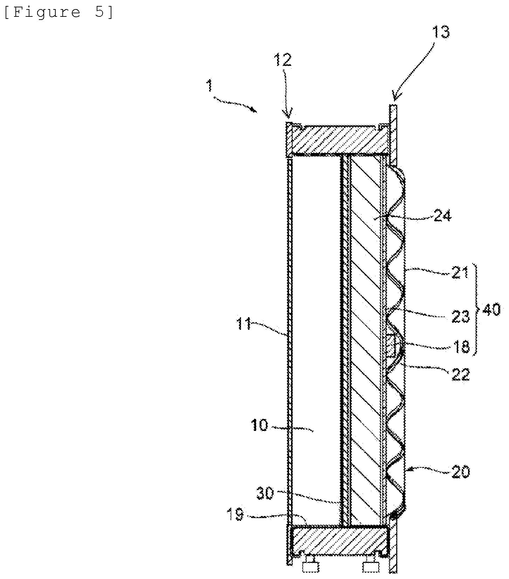

Figure 5 illustrates a cross-sectional view of an electrolytic cell 1.

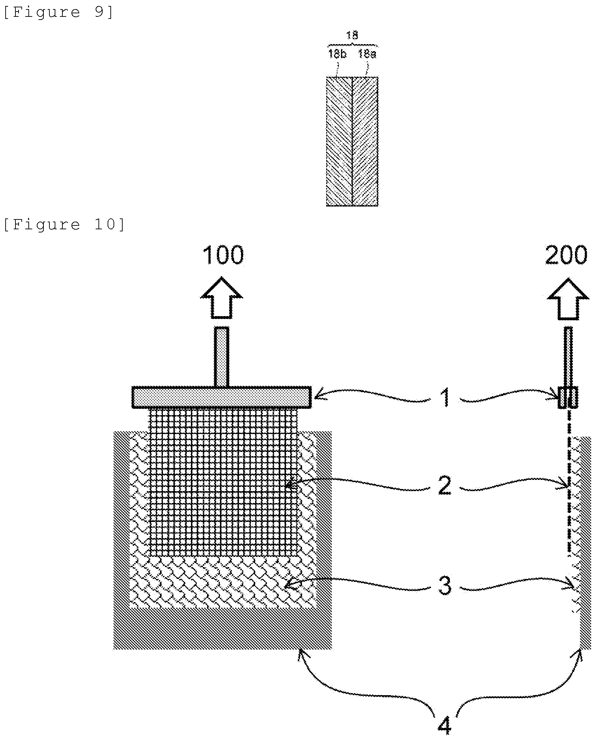

The electrolytic cell 1 comprises an anode chamber 10, a cathode chamber 20, a partition wall 30 placed between the anode chamber 10 and the cathode chamber 20, an anode 11 placed in the anode chamber 10, and a cathode 21 placed in the cathode chamber 20. As required, the electrolytic cell 1 has a substrate 18a and a reverse current absorbing layer 18b formed on the substrate 18a and may comprise a reverse current absorber 18 placed in the cathode chamber. The anode 11 and the cathode 21 belonging to the electrolytic cell 1 are electrically connected to each other. In other words, the electrolytic cell 1 comprises the following cathode structure. The cathode structure 40 comprises the cathode chamber 20, the cathode 21 placed in the cathode chamber 20, and the reverse current absorber 18 placed in the cathode chamber 20, the reverse current absorber 18 has the substrate 18a and the reverse current absorbing layer 18b formed on the substrate 18a, as shown in Figure 9, and the cathode 21 and the reverse current absorbing layer 18b are electrically connected. The cathode chamber 20 further has a collector 23, a support 24 supporting the collector, and a metal elastic body 22. The metal elastic body 22 is placed between the collector 23 and the cathode 21. The support 24 is placed between the collector 23 and the partition wall 30. The collector 23 is electrically connected to the cathode 21 via the metal elastic body 22. The partition wall 30 is electrically connected to the collector 23 via the support 24. Accordingly, the partition wall 30, the support 24, the collector 23, the metal elastic body 22, and the cathode 21 are electrically connected. The cathode 21 and the reverse current absorbing layer 18b are electrically connected. The cathode 21 and the reverse current absorbing layer may be directly connected or may be indirectly connected via the collector, the support, the metal elastic body, the partition wall, or the like. The entire surface of the cathode 21 is preferably covered with a catalyst layer for reduction reaction. The form of electrical connection may be a form in which the partition wall 30 and the support 24, the support 24 and the collector 23, and the collector 23 and the metal elastic body 22 are each directly attached and the cathode 21 is laminated on the metal elastic body 22. Examples of a method for directly attaching these constituent members to one another include welding and the like. Alternatively, the reverse current absorber 18, the cathode 21, and the collector 23 may be collectively referred to as a cathode structure 40.

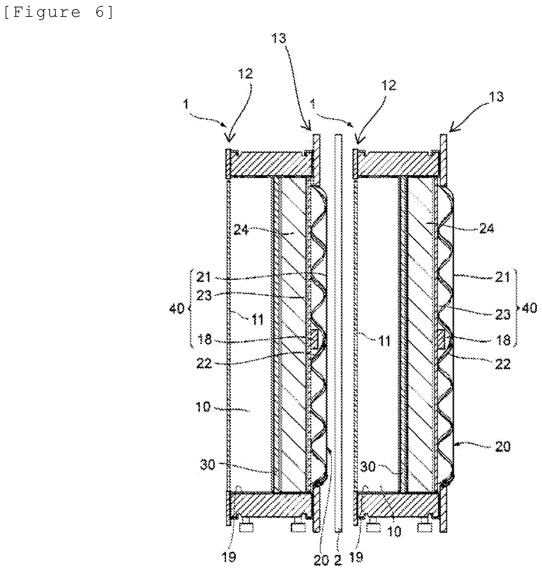

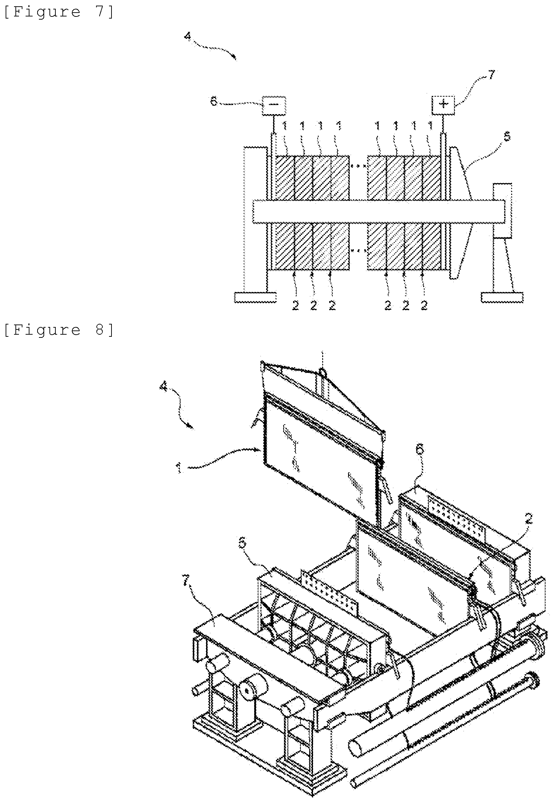

Figure 6 illustrates a cross-sectional view of two electrolytic cells 1 that are adjacent in the electrolyzer 4. Figure 7 shows an electrolyzer 4. Figure 8 shows a step of assembling the electrolyzer 4. As shown in Figure 6, an electrolytic cell 1, a cation exchange membrane 2, and an electrolytic cell 1 are arranged in series in the order mentioned. An ion exchange membrane 2 is arranged between the anode chamber of one electrolytic cell 1 among the two electrolytic cells that are adjacent in the electrolyzer and the cathode chamber of the other electrolytic cell 1. That is, the anode chamber 10 of the electrolytic cell 1 and the cathode chamber 20 of the electrolytic cell 1 adjacent thereto is separated by the cation exchange membrane 2. As shown in Figure 7, the electrolyzer 4 is composed of a plurality of electrolytic cells 1 connected in series via the ion exchange membrane 2. That is, the electrolyzer 4 is a bipolar electrolyzer comprising the plurality of electrolytic cells 1 arranged in series and ion exchange membranes 2 each arranged between adjacent electrolytic cells 1. As shown in Figure 8, the electrolyzer 4 is assembled by arranging the plurality of electrolytic cells 1 in series via the ion exchange membrane 2 and coupling the cells by means of a press device 5.

The electrolyzer 4 has an anode terminal 7 and a cathode terminal 6 to be connected to a power supply. The anode 11 of the electrolytic cell 1 located at farthest end among the plurality of electrolytic cells 1 coupled in series in the electrolyzer 4 is electrically connected to the anode terminal 7. The cathode 21 of the electrolytic cell located at the end opposite to the anode terminal 7 among the plurality of electrolytic cells 1 coupled in series in the electrolyzer 4 is electrically connected to the cathode terminal 6. The electric current during electrolysis flows from the side of the anode terminal 7, through the anode and cathode of each electrolytic cell 1, toward the cathode terminal 6. At the both ends of the coupled electrolytic cells 1, an electrolytic cell having an anode chamber only (anode terminal cell) and an electrolytic cell having a cathode chamber only (cathode terminal cell) may be arranged. In this case, the anode terminal 7 is connected to the anode terminal cell arranged at the one end, and the cathode terminal 6 is connected to the cathode terminal cell arranged at the other end.

In the case of electrolyzing brine, brine is supplied to each anode chamber 10, and pure water or a low-concentration sodium hydroxide aqueous solution is supplied to each cathode chamber 20. Each liquid is supplied from an electrolyte solution supply pipe (not shown in Figure), through an electrolyte solution supply hose (not shown in Figure), to each electrolytic cell 1. The electrolyte solution and products from electrolysis are recovered from an electrolyte solution recovery pipe (not shown in Figure). During electrolysis, sodium ions in the brine migrate from the anode chamber 10 of the one electrolytic cell 1, through the ion exchange membrane 2, to the cathode chamber 20 of the adjacent electrolytic cell 1. Thus, the electric current during electrolysis flows in the direction in which the electrolytic cells 1 are coupled in series. That is, the electric current flows, through the cation exchange membrane 2, from the anode chamber 10 toward the cathode chamber 20. As the brine is electrolyzed, chlorine gas is generated on the side of the anode 11, and sodium hydroxide (solute) and hydrogen gas are generated on the side of the cathode 21.

### (Anode chamber)

The anode chamber 10 has the anode 11 or anode feed conductor 11. When the electrode for electrolysis of the present embodiment is inserted to the anode side, 11 serves as the anode feed conductor. When the electrode for electrolysis of the present embodiment is not inserted to the anode side, 11 serves as the anode. The anode chamber 10 has an anode-side electrolyte solution supply unit that supplies an electrolyte solution to the anode chamber 10, a baffle plate that is arranged above the anode-side electrolyte solution supply unit so as to be substantially parallel or oblique to the partition wall 30, and an anode-side gas liquid separation unit arranged above the baffle plate to separate gas from the electrolyte solution including the gas mixed.

### (Anode)

When the electrode for electrolysis of the present embodiment is not inserted to the anode side, the anode 11 is provided in the frame of the anode chamber 10. As the anode 11, a metal electrode such as so-called DSA(R) can be used. DSA is an electrode including a titanium substrate of which surface is covered with an oxide comprising ruthenium, iridium, and titanium as components.

As the form, any of a perforated metal, nonwoven fabric, foamed metal, expanded metal, metal porous foil formed by electroforming, so-called woven mesh produced by knitting metal lines, and the like can be used.

### (Anode feed conductor)

When the electrode for electrolysis of the present embodiment is inserted to the anode side, the anode feed conductor 11 is provided in the frame of the anode chamber 10. As the anode feed conductor 11, a metal electrode such as so-called DSA(R) can be used, and titanium having no catalyst coating can be also used. Alternatively, DSA having a thinner catalyst coating can be also used. Further, a used anode can be also used.

As the form, any of a perforated metal, nonwoven fabric, foamed metal, expanded metal, metal porous foil formed by electroforming, so-called woven mesh produced by knitting metal lines, and the like can be used.

### (Anode-side electrolyte solution supply unit)

The anode-side electrolyte solution supply unit, which supplies the electrolyte solution to the anode chamber 10, is connected to the electrolyte solution supply pipe. The anode-side electrolyte solution supply unit is preferably arranged below the anode chamber 10. As the anode-side electrolyte solution supply unit, for example, a pipe on the surface of which aperture portions are formed (dispersion pipe) and the like can be used. Such a pipe is more preferably arranged along the surface of the anode 11 and parallel to the bottom 19 of the electrolytic cell. This pipe is connected to an electrolyte solution supply pipe (liquid supply nozzle) that supplies the electrolyte solution into the electrolytic cell 1. The electrolyte solution supplied from the liquid supply nozzle is conveyed with a pipe into the electrolytic cell 1 and supplied from the aperture portions provided on the surface of the pipe to inside the anode chamber 10. Arranging the pipe along the surface of the anode 11 and parallel to the bottom 19 of the electrolytic cell is preferable because the electrolyte solution can be uniformly supplied to inside the anode chamber 10.

### (Anode-side gas liquid separation unit)

The anode-side gas liquid separation unit is preferably arranged above the baffle plate. The anode-side gas liquid separation unit has a function of separating produced gas such as chlorine gas from the electrolyte solution during electrolysis. Unless otherwise specified, above means the upper direction in the electrolytic cell 1 in Figure 5, and below means the lower direction in the electrolytic cell 1 in Figure 5.

During electrolysis, produced gas generated in the electrolytic cell 1 and the electrolyte solution form a mixed phase (gas-liquid mixed phase), which is then emitted out of the system. Subsequently, pressure fluctuations inside the electrolytic cell 1 cause vibration, which may result in physical damage of the ion exchange membrane. In order to prevent this event, the electrolytic cell 1 of the present embodiment is preferably provided with an anode-side gas liquid separation unit to separate the gas from the liquid. The anode-side gas liquid separation unit is preferably provided with a defoaming plate to eliminate bubbles. When the gas-liquid mixed phase flow passes through the defoaming plate, bubbles burst to thereby enable the electrolyte solution and the gas to be separated. As a result, vibration during electrolysis can be prevented.

### (Baffle plate)

The baffle plate is preferably arranged above the anode-side electrolyte solution supply unit and arranged substantially in parallel with or obliquely to the partition wall 30. The baffle plate is a partition plate that controls the flow of the electrolyte solution in the anode chamber 10. When the baffle plate is provided, it is possible to cause the electrolyte solution (brine or the like) to circulate internally in the anode chamber 10 to thereby make the concentration uniform. In order to cause internal circulation, the baffle plate is preferably arranged so as to separate the space in proximity to the anode 11 from the space in proximity to the partition wall 30. From such a viewpoint, the baffle plate is preferably placed so as to be opposed to the surface of the anode 11 and to the surface of the partition wall 30. In the space in proximity to the anode partitioned by the baffle plate, as electrolysis proceeds, the electrolyte solution concentration (brine concentration) is lowered, and produced gas such as chlorine gas is generated. This results in a difference in the gas-liquid specific gravity between the space in proximity to anode 11 and the space in proximity to the partition wall 30 partitioned by the baffle plate. By use of the difference, it is possible to promote the internal circulation of the electrolyte solution in the anode chamber 10 to thereby make the concentration distribution of the electrolyte solution in the anode chamber 10 more uniform.

Although not shown in Figure 5, a collector may be additionally provided inside the anode chamber 10. The material and configuration of such a collector may be the same as those of the collector of the cathode chamber mentioned below. In the anode chamber 10, the anode 11 per se may also serve as the collector.

### (Partition wall)

The partition wall 30 is arranged between the anode chamber 10 and the cathode chamber 20. The partition wall 30 may be referred to as a separator, and the anode chamber 10 and the cathode chamber 20 are partitioned by the partition wall 30. As the partition wall 30, one known as a separator for electrolysis can be used, and an example thereof includes a partition wall formed by welding a plate comprising nickel to the cathode side and a plate comprising titanium to the anode side.

### (Cathode chamber)

In the cathode chamber 20, when the electrode for electrolysis of the present embodiment is inserted to the cathode side, 21 serves as a cathode feed conductor. When the electrode for electrolysis of the present embodiment is not inserted to the cathode side, 21 serves as a cathode. When a reverse current absorber is included, the cathode or cathode feed conductor 21 is electrically connected to the reverse current absorber. The cathode chamber 20, similarly to the anode chamber 10, preferably has a cathode-side electrolyte solution supply unit and a cathode-side gas liquid separation unit. Among the components constituting the cathode chamber 20, components similar to those constituting the anode chamber 10 will be not described.

### (Cathode)

When the electrode for electrolysis of the present embodiment is not inserted to the cathode side, a cathode 21 is provided in the frame of the cathode chamber 20. The cathode 21 preferably has a nickel substrate and a catalyst layer that covers the nickel substrate. Examples of the components of the catalyst layer on the nickel substrate include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. The cathode 21 may be subjected to a reduction treatment, as required. As the substrate of the cathode 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

### (Cathode feed conductor)

When the electrode for electrolysis of the present embodiment is inserted to the cathode side, a cathode feed conductor 21 is provided in the frame of the cathode chamber 20. The cathode feed conductor 21 may be covered with a catalytic component. The catalytic component may be a component that is originally used as the cathode and remains. Examples of the components of the catalyst layer include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. As the substrate of the cathode feed conductor 21, nickel, nickel alloys, and nickel-plated iron or stainless may be used.

As the feed conductor 21, nickel, nickel alloys, and nickel-plated iron or stainless, having no catalyst coating may be used.

As the form, any of a perforated metal, nonwoven fabric, foamed metal, expanded metal, metal porous foil formed by electroforming, so-called woven mesh produced by knitting metal lines, and the like can be used.

### (Reverse current absorbing layer)

A material having a redox potential less noble than the redox potential of the element for the catalyst layer of the cathode mentioned above may be selected as a material for the reverse current absorbing layer. Examples thereof include nickel and iron.

### (Collector)

The cathode chamber 20 preferably comprises the collector 23. The collector 23 improves current collection efficiency. In the present embodiment, the collector 23 is a porous plate and is preferably arranged in substantially parallel to the surface of the cathode 21.

The collector 23 preferably comprises an electrically conductive metal such as nickel, iron, copper, silver, and titanium. The collector 23 may be a mixture, alloy, or composite oxide of these metals. The collector 23 may have any form as long as the form enables the function of the collector and may have a plate or net form.

### (Metal elastic body)

Placing the metal elastic body 22 between the collector 23 and the cathode 21 presses each cathode 21 of the plurality of electrolytic cells 1 connected in series onto the ion exchange membrane 2 to reduce the distance between each anode 11 and each cathode 21. Then, it is possible to lower the voltage to be applied entirely across the plurality of electrolytic cells 1 connected in series. Lowering of the voltage enables the power consumption to be reduced. With the metal elastic body 22 placed, the pressing pressure caused by the metal elastic body 22 enables the electrode for electrolysis to be stably maintained in place when the laminate including the electrode for electrolysis according to the present invention is placed in the electrolytic cell.

As the metal elastic body 22, spring members such as spiral springs and coils and cushioning mats may be used. As the metal elastic body 22, a suitable one may be appropriately employed, in consideration of a stress to press the ion exchange membrane and the like. The metal elastic body 22 may be provided on the surface of the collector 23 on the side of the cathode chamber 20 or may be provided on the surface of the partition wall on the side of the anode chamber 10. Both the chambers are usually partitioned such that the cathode chamber 20 becomes smaller than the anode chamber 10. Thus, from the viewpoint of the strength of the frame and the like, the metal elastic body 22 is preferably provided between the collector 23 and the cathode 21 in the cathode chamber 20. The metal elastic body 23 preferably comprises an electrically conductive metal such as nickel, iron, copper, silver, and titanium.

### (Support)

The cathode chamber 20 preferably comprises the support 24 that electrically connects the collector 23 to the partition wall 30. This can achieve an efficient current flow.

The support 24 preferably comprises an electrically conductive metal such as nickel, iron, copper, silver, and titanium. The support 24 may have any shape as long as the support can support the collector 23 and may have a rod, plate, or net shape. The support 24 has a plate shape, for example. A plurality of supports 24 are arranged between the partition wall 30 and the collector 23. The plurality of supports 24 are aligned such that the surfaces thereof are in parallel to each other. The supports 24 are arranged substantially perpendicular to the partition wall 30 and the collector 23.

### (Anode side gasket and cathode side gasket)

The anode side gasket is preferably arranged on the frame surface constituting the anode chamber 10. The cathode side gasket is preferably arranged on the frame surface constituting the cathode chamber 20. Electrolytic cells are connected to each other such that the anode side gasket included in one electrolytic cell and the cathode side gasket of an electrolytic cell adjacent to the cell sandwich the ion exchange membrane 2 (see Figures 5 and 6). These gaskets can impart airtightness to connecting points when the plurality of electrolytic cells 1 is connected in series via the ion exchange membrane 2.

The gaskets form a seal between the ion exchange membrane and electrolytic cells. Specific examples of the gaskets include picture frame-like rubber sheets at the center of which an aperture portion is formed. The gaskets are required to have resistance against corrosive electrolyte solutions or produced gas and be usable for a long period. Thus, in respect of chemical resistance and hardness, vulcanized products and peroxide-crosslinked products of ethylene-propylene-diene rubber (EPDM rubber) and ethylene-propylene rubber (EPM rubber) are usually used as the gaskets. Alternatively, gaskets of which region to be in contact with liquid (liquid contact portion) is covered with a fluorine-containing resin such as polytetrafluoroethylene (PTFE) and tetrafluoroethylene-perfluoroalkyl vinyl ether copolymers (PFA) may be employed as required. These gaskets each may have an aperture portion so as not to inhibit the flow of the electrolyte solution, and the shape of the aperture portion is not particularly limited. For example, a picture frame-like gasket is attached with an adhesive or the like along the peripheral edge of each aperture portion of the anode chamber frame constituting the anode chamber 10 or the cathode chamber frame constituting the cathode chamber 20. Then, for example, in the case where the two electrolytic cells 1 are connected via the ion exchange membrane 2 (see Figure 6), each electrolytic cell 1 onto which the gasket is attached should be tightened via ion exchange membrane 2. This tightening can prevent the electrolyte solution, alkali metal hydroxide, chlorine gas, hydrogen gas, and the like generated from electrolysis from leaking out of the electrolytic cells 1.

### (Ion exchange membrane 2)

The ion exchange membrane 2 is as described in the section of the ion exchange membrane described above.

### (Water electrolysis)

The electrolyzer of the present embodiment, as an electrolyzer in the case of electrolyzing water, has a configuration in which the ion exchange membrane in an electrolyzer for use in the case of electrolyzing common salt mentioned above is replaced by a microporous membrane. The raw material to be supplied, which is water, is different from that for the electrolyzer in the case of electrolyzing common salt mentioned above. As for the other components, components similar to that of the electrolyzer in the case of electrolyzing common salt can be employed also in the electrolyzer in the case of electrolyzing water. Since chlorine gas is generated in the anode chamber in the case of common salt electrolysis, titanium is used as the material of the anode chamber, but in the case of water electrolysis, only oxygen gas is generated in the anode chamber. Thus, a material identical to that of the cathode chamber can be used. An example thereof is nickel. For anode coating, catalyst coating for oxygen generation is suitable. Examples of the catalyst coating include metals, oxides, and hydroxides of the platinum group metals and transition metal group metals. For example, elements such as platinum, iridium, palladium, ruthenium, nickel, cobalt, and iron can be used.

### <Second embodiment> (not in accordance with the invention as claimed)

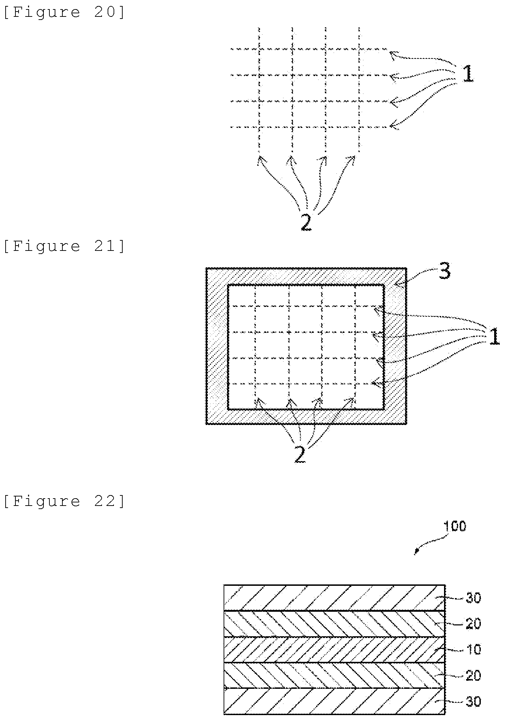

Here, a second embodiment of the present invention will be described in detail with reference to Figures 22 to 42.

### [Laminate]

A laminate of the second embodiment (hereinafter, in the section of <Second embodiment>, simply referred to as "the present embodiment") comprises an electrode for electrolysis and a membrane or feed conductor in contact with the electrode for electrolysis, wherein a force applied per unit mass·unit area of the electrode for electrolysis on the membrane or feed conductor is less than 1.5 N/mg·cm². The laminate of the present embodiment, as configured as described above, can improve the work efficiency during electrode renewing in an electrolyzer and further, can exhibit excellent electrolytic performance also after renewing.

That is, according to the laminate of the present embodiment, on renewing the electrode, the electrode can be renewed by a work as simple as renewing the membrane, without a complicated work such as stripping off the existing electrode fixed on the electrolytic cell, and thus, the work efficiency is markedly improved.

Further, according to the laminate of the present invention, it is possible to maintain or improve the electrolytic performance of a new electrode. Thus, the electrode fixed on a conventional new electrolytic cell and serving as an anode and/or a cathode is only required to serve as a feed conductor. Thus, it may be also possible to markedly reduce or eliminate catalyst coating.

The laminate of the present embodiment can be stored or transported to customers in a state where the laminate is wound around a vinyl chloride pipe or the like (in a rolled state or the like), making handling markedly easier.

As the feed conductor of the present embodiment, various substrates mentioned below such as a degraded electrode (i.e., the existing electrode) and an electrode having no catalyst coating can be employed.

The laminate of the present embodiment may have partially a fixed portion as long as the laminate has the configuration described above. That is, in the case where the laminate of the present embodiment has a fixed portion, a portion not having the fixing is subjected to measurement, and the resulting force applied per unit mass·unit area of the electrode for electrolysis should be less than 1.5 N/mg·cm².

### [Electrode for electrolysis]

The electrode for electrolysis of the present embodiment has a force applied per unit mass·unit area of less than 1.5 N/mg·cm², preferably 1.2 N/mg·cm² or less, more preferably 1.20 N/mg·cm² or less from the viewpoint of enabling a good handling property to be provided and having a good adhesive force to a membrane such as an ion exchange membrane and a microporous membrane, a feed conductor (a degraded electrode and an electrode having no catalyst coating), and the like. The force is further preferably 1.1 N/mg·cm² or less, further preferably 1.10 N/mg·cm² or less, still more preferably 1.0 N/mg·cm² or less, even still more preferably 1.00 N/mg·cm² or less.

From the viewpoint of further improving the electrolytic performance, the force is preferably more than 0.005 N/(mg·cm²), more preferably 0.08 N/(mg·cm²) or more, further preferably 0.1 N/mg·cm² or more, further more preferably 0.14 N/(mg·cm²) or more. The force is further more preferably 0.2 N/(mg·cm²) or more from the viewpoint of further facilitating handling in a large size (e.g., a size of 1.5 m × 2.5 m).

The force applied described above can be within the range described above by appropriately adjusting an opening ratio described below, thickness of the electrode, arithmetic average surface roughness, and the like, for example. More specifically, for example, a higher opening ratio tends to lead to a smaller force applied, and a lower opening ratio tends to lead to a larger force applied.

The mass per unit area is preferably 48 mg/cm² or less, more preferably 30 mg/cm² or less, further preferably 20 mg/cm² or less from the viewpoint of enabling a good handling property to be provided, having a good adhesive force to a membrane such as an ion exchange membrane and a microporous membrane, a degraded electrode, a feed conductor having no catalyst coating, and economy, and furthermore is preferably 15 mg/cm² or less from the comprehensive viewpoint including handling property, adhesion, and economy. The lower limit value is not particularly limited but is of the order of 1 mg/cm², for example.

The mass per unit area described above can be within the range described above by appropriately adjusting an opening ratio described below, thickness of the electrode, and the like, for example. More specifically, for example, when the thickness is constant, a higher opening ratio tends to lead to a smaller mass per unit area, and a lower opening ratio tends to lead to a larger mass per unit area.

The force applied can be measured by methods (i) or (ii) described below, which are as described in Examples, specifically. As for the force applied, the value obtained by the measurement of the method (i) (also referred to as "the force applied (1)") and the value obtained by the measurement of the method (ii) (also referred to as "the force applied (2)") may be the same or different, and either of the values is less than 1.5 N/mg·cm².

### [Method (i)]

A nickel plate obtained by blast processing with alumina of grain-size number 320 (thickness 1.2 mm, 200 mm square), an ion exchange membrane which is obtained by applying inorganic material particles and a binder to both surfaces of a membrane of a perfluorocarbon polymer into which an ion exchange group is introduced (170 mm square, the detail of the ion exchange membrane referred to herein is as described in Examples), and a sample of electrode (130 mm square) are laminated in this order. After this laminate is sufficiently immersed in pure water, excess water deposited on the surface of the laminate is removed to obtain a sample for measurement. The arithmetic average surface roughness (Ra) of the nickel plate after the blast treatment is 0.5 to 0.8 µm. The specific method for calculating the arithmetic average surface roughness (Ra) is as described in Examples.

Under conditions of a temperature of 23±2°C and a relative humidity of 30±5%, only the sample of electrode in this sample for measurement is raised in a vertical direction at 10 mm/minute using a tensile and compression testing machine, and the load when the sample of electrode is raised by 10 mm in a vertical direction is measured. This measurement is repeated three times, and the average value is calculated.

This average value is divided by the area of the overlapping portion of the sample of electrode and the ion exchange membrane and the mass of the portion overlapping the ion exchange membrane in the sample of electrode to calculate the force applied per unit mass·unit area (1) (N/mg·cm²).

The force applied per unit mass·unit area (1) obtained by the method (i) is less than 1.5 N/mg·cm², preferably 1.2 N/mg·cm² or less, more preferably 1.20 N/mg·cm² or less, further preferably 1.1 N/mg·cm² or less, further more preferably 1.10 N/mg·cm² or less, still more preferably 1.0 N/mg·cm² or less, even still more preferably 1.00 N/mg·cm² or less from the viewpoint of enabling a good handling property to be provided and having a good adhesive force to a membrane such as an ion exchange membrane and a microporous membrane, a degraded electrode, and a feed conductor having no catalyst coating. The force is preferably more than 0.005 N/(mg·cm²), more preferably 0.08 N/(mg·cm²) or more, further preferably 0.1 N/(mg·cm²) or more from the viewpoint of further improving the electrolytic performance, and furthermore, is further more preferably 0.14 N/(mg·cm²), still more preferably 0.2 N/(mg·cm²) or more from the viewpoint of further facilitating handling in a large size (e.g., a size of 1.5 m × 2.5 m).

When the electrode for electrolysis of the present embodiment satisfies the force applied (1), the electrode can be integrated with a membrane such as an ion exchange membrane and a microporous membrane or a feed conductor, for example, and used (i.e., as a laminate). Thus, on renewing the electrode, the substituting work for the cathode and anode fixed on the electrolytic cell by a method such as welding is eliminated, and the work efficiency is markedly improved. Additionally, by use of the electrode for electrolysis of the present embodiment as a laminate integrated with the ion exchange membrane, microporous membrane, or feed conductor, it is possible to make the electrolytic performance comparable to or higher than those of a new electrode.

On shipping a new electrolytic cell, an electrode fixed on an electrolytic cell has been subjected to catalyst coating conventionally. Since only combination of an electrode having no catalyst coating with the electrode for electrolysis of the present embodiment can allow the electrode to function as an electrode, it is possible to markedly reduce or eliminate the production step and the amount of the catalyst for catalyst coating. A conventional electrode of which catalyst coating is markedly reduced or eliminated can be electrically connected to the electrode for electrolysis of the present embodiment and allowed to serve as a feed conductor for passage of an electric current.

### [Method (ii)]

A nickel plate obtained by blast processing with alumina of grain-size number 320 (thickness 1.2 mm, 200 mm square, a nickel plate similar to that of the method (i) above) and a sample of electrode (130 mm square) are laminated in this order. After this laminate is sufficiently immersed in pure water, excess water deposited on the surface of the laminate is removed to obtain a sample for measurement. Under conditions of a temperature of 23±2°C and a relative humidity of 30±5%, only the sample of electrode in this sample for measurement is raised in a vertical direction at 10 mm/minute using a tensile and compression testing machine, and the load when the sample of electrode is raised by 10 mm in a vertical direction is measured. This measurement is repeated three times, and the average value is calculated.

This average value is divided by the area of the overlapping portion of the sample of electrode and the nickel plate and the mass of the sample of electrode in the portion overlapping the nickel plate to calculate the adhesive force per unit mass·unit area (2) (N/mg·cm²).

The force applied per unit mass·unit area (2) obtained by the method (ii) is less than 1.5 N/mg·cm², preferably 1.2 N/mg·cm² or less, more preferably 1.20 N/mg·cm² or less, further preferably 1.1 N/mg·cm² or less, further more preferably 1.10 N/mg·cm² or less, still more preferably 1.0 N/mg·cm² or less, even still more preferably 1.00 N/mg·cm² or less from the viewpoint of enabling a good handling property to be provided and having a good adhesive force to a membrane such as an ion exchange membrane and a microporous membrane, a degraded electrode, and a feed conductor having no catalyst coating. The force is preferably more than 0.005 N/(mg·cm²), more preferably 0.08 N/(mg·cm²) or more, further preferably 0.1 N/(mg·cm²) or more from the viewpoint of further improving the electrolytic performance, and is further more preferably 0.14 N/(mg·cm²) or more from the viewpoint of further facilitating handling in a large size (e.g., a size of 1.5 m × 2.5 m).

The electrode for electrolysis of the present embodiment, if satisfies the force applied (2), can be stored or transported to customers in a state where the electrode is wound around a vinyl chloride pipe or the like (in a rolled state or the like), making handling markedly easier. By attaching the electrode for electrolysis of the present embodiment to a degraded existing electrode to provide a laminate, it is possible to make the electrolytic performance comparable to or higher than those of a new electrode.

From the viewpoint that the electrode for electrolysis of the present embodiment, if being an electrode having a broad elastic deformation region, can provide a better handling property and has a better adhesive force to a membrane such as an ion exchange membrane and a microporous membrane, a degraded electrode, a feed conductor having no catalyst coating, and the like, the thickness of the electrode for electrolysis is preferably 315 µm or less, more preferably 220 µm or less, further preferably 170 µm or less, further more preferably 150 µm or less, particularly preferably 145 µm or less, still more preferably 140 µm or less, even still more preferably 138 µm or less, further still more preferably 135 µm or less. A thickness of 135 µm or less can provide a good handling property. Further, from a similar viewpoint as above, the thickness is preferably 130 µm or less, more preferably less than 130 µm. further preferably 115 µm or less, further more preferably 65 µm or less. The lower limit value is not particularly limited, but is preferably 1 µm or more, more preferably 5 µm or more for practical reasons, more preferably 20 µm or more. In the present embodiment, "having a broad elastic deformation region" means that, when an electrode for electrolysis is wound to form a wound body, warpage derived from winding is unlikely to occur after the wound state is released. The thickness of the electrode for electrolysis refers to, when a catalyst layer mentioned below is included, the total thickness of both the substrate for electrode for electrolysis and the catalyst layer.

The electrode for electrolysis of the present embodiment preferably includes a substrate for electrode for electrolysis and a catalyst layer. The thickness of the substrate for electrode for electrolysis (gauge thickness) is, but is not particularly limited to, preferably 300 µm or less, more preferably 205 µm or less, further preferably 155 µm or less, further more preferably 135 µm or less, even further more preferably 125 µm or less, still more preferably 120 µm or less, even still more preferably 100 µm or less from the viewpoint of enabling a good handling property to be provided, having a good adhesive force to a membrane such as an ion exchange membrane and a microporous membrane, a degraded electrode (feed conductor), and an electrode (feed conductor) having no catalyst coating, being capable of being suitably rolled in a roll and satisfactorily folded, and facilitating handling in a large size (e.g., a size of 1.5 m × 2.5 m), and is further still more preferably 50 µm or less from the viewpoint of a handling property and economy. The lower limit value is not particularly limited, but is 1 µm, for example, preferably 5 µm, more preferably 15 µm.

In the present embodiment, a liquid is preferably interposed between the membrane such as an ion exchange membrane and a microporous membrane and the electrode, or the metal porous plate or metal plate (i.e., feed conductor) such as a degraded existing electrode and electrode having no catalyst coating and the electrode for electrolysis. As the liquid, any liquid, such as water and organic solvents, can be used as long as the liquid generates a surface tension. The larger the surface tension of the liquid, the larger the force applied between the membrane and the electrode for electrolysis or the metal porous plate or metal plate and the electrode for electrolysis. Thus, a liquid having a larger surface tension is preferred. Examples of the liquid include the following (the numerical value in the parentheses is the surface tension of the liquid at 20°C) :
hexane (20.44 mN/m), acetone (23.30 mN/m), methanol (24.00 mN/m), ethanol (24.05 mN/m), ethylene glycol (50.21 mN/m), and water (72.76 mN/m).

A liquid having a large surface tension allows the membrane and the electrode for electrolysis or the metal porous plate or metal plate (feed conductor) and the electrode for electrolysis to be integrated (to be a laminate) to thereby facilitate renewing of the electrode. The liquid between the membrane and the electrode for electrolysis or the metal porous plate or metal plate (feed conductor) and the electrode for electrolysis may be present in an amount such that the both adhere to each other by the surface tension. As a result, after the laminate is placed in an electrolytic cell, the liquid, if mixed into the electrolyte solution, does not affect electrolysis itself due to the small amount of the liquid.

From a practical viewpoint, a liquid having a surface tension of 24 mN/m to 80 mN/m, such as ethanol, ethylene glycol, and water, is preferably used as the liquid. Particularly preferred is water or an alkaline aqueous solution prepared by dissolving caustic soda, potassium hydroxide, lithium hydroxide, sodium hydrogen carbonate, potassium hydrogen carbonate, sodium carbonate, potassium carbonate, or the like in water. Alternatively, the surface tension can be adjusted by allowing these liquids to contain a surfactant. When a surfactant is contained, the adhesion between the membrane and the electrode for electrolysis or the metal porous plate or metal plate (feed conductor) and the electrode for electrolysis varies to enable the handling property to be adjusted. The surfactant is not particularly limited, and both ionic surfactants and nonionic surfactants may be used.

The proportion measured by the following method (2) of the electrode for electrolysis of the present embodiment is not particularly limited, but is preferably 90% or more, more preferably 92% or more from the viewpoint of enabling a good handling property to be provided and having a good adhesive force to a membrane such as an ion exchange membrane and a microporous membrane, a degraded electrode (feed conductor), and an electrode (feed conductor) having no catalyst coating, and further preferably 95% or more from the viewpoint of further facilitating handling in a large size (e.g., a size of 1.5 m × 2.5 m). The upper limit value is 100%.

### [Method (2)]

An ion exchange membrane (170 mm square) and a sample of electrode (130 mm square) are laminatedin this order. The laminate is placed on a curved surface of a polyethylene pipe (outer diameter: 280 mm) such that the sample of electrode in this laminate is positioned outside under conditions of a temperature of 23±2°C and a relative humidity of 30±5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode is measured.

The proportion measured by the following method (3) of the electrode for electrolysis of the present embodiment is not particularly limited, but is preferably 75% or more, more preferably 80% or more from the viewpoint of enabling a good handling property to be provided, having a good adhesive force to a membrane such as an ion exchange membrane and a microporous membrane, a degraded electrode (feed conductor), and an electrode (feed conductor) having no catalyst coating, and being capable of being suitably rolled in a roll and satisfactorily folded, and is further preferably 90% or more from the viewpoint of further facilitating handling in a large size (e.g., a size of 1.5 m × 2.5 m). The upper limit value is 100%.

### [Method (3)]

An ion exchange membrane (170 mm square) and a sample of electrode (130 mm square) are laminated in this order. The laminate is placed on a curved surface of a polyethylene pipe (outer diameter: 145 mm) such that the sample of electrode in this laminate is positioned outside under conditions of a temperature of 23±2°C and a relative humidity of 30±5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode is measured.

The electrode for electrolysis of the present embodiment preferably has a porous structure and an opening ratio or void ratio of 5 to 90% or less from the viewpoint of enabling a good handling property to be provided, having a good adhesive force to a membrane such as an ion exchange membrane and a microporous membrane, a degraded electrode (feed conductor), and an electrode (feed conductor) having no catalyst coating, and preventing accumulation of gas to be generated during electrolysis, although not particularly limited. The opening ratio is more preferably 10 to 80% or less, further preferably 20 to 75%.

The opening ratio is a proportion of the opening portions per unit volume. The calculation method may differ depending on that opening portions in submicron size are considered or that only visible openings are considered. In the present embodiment, a volume V was calculated from the values of the gauge thickness, width, and length of the electrode, and further, a weight W was measured to thereby calculate an opening ratio A by the following formula. $A = \left(1-\left(W/\left(V\times ρ\right)\right)\times 100\right.$

ρ is the density of the electrode material (g/cm³). For example, ρ of nickel is 8.908 g/cm³, and ρ of titanium is 4.506 g/cm³. The opening ratio is appropriately adjusted by changing the area of metal to be perforated per unit area in the case of perforated metal, changing the values of the SW (short diameter), LW (long diameter), and feed in the case of expanded metal, changing the line diameter of metal fiber and mesh number in the case of mesh, changing the pattern of a photoresist to be used in the case of electroforming, changing the metal fiber diameter and fiber density in the case of nonwoven fabric, changing the mold for forming voids in the case of foamed metal, or the like.

The value obtained by measurement by the following method (A) of the electrode for electrolysis in the present embodiment is preferably 40 mm or less, more preferably 29 mm or less, further preferably 10 mm or less, further more preferably 6.5 mm or less from the viewpoint of the handling property. The specific measuring method is as described in Examples.

### [Method (A)]

Under conditions of a temperature of 23±2°C and a relative humidity of 30±5%, a sample obtained by laminating the ion exchange membrane and the electrode for electrolysis is wound around and fixed onto a curved surface of a core material being made of polyvinyl chloride and having an outer diameter ϕ of 32 mm, and left to stand for 6 hours; thereafter, when the electrode for electrolysis is separated from the sample and placed on a flat plate, heights in a vertical direction at both edges of the electrode for electrolysis L₁ and L₂ are measured, and an average value thereof is used as a measurement value.

In the electrode for electrolysis in the present embodiment, the ventilation resistance is preferably 24 kPa·s/m or less when the electrode for electrolysis has a size of 50 mm × 50 mm, the ventilation resistance being measured under conditions of the temperature of 24°C, the relative humidity of 32%, a piston speed of 0.2 cm/s, and a ventilation volume of 0.4 cc/cm²/s (hereinbelow, also referred to as "measurement condition 1") (hereinbelow, also referred to as "ventilation resistance 1"). A larger ventilation resistance means that air is unlikely to flow and refers to a state of a high density. In this state, the product from electrolysis remains in the electrode and the reaction substrate is more unlikely to diffuse inside the electrode, and thus, the electrolytic performance (such as voltage) tends to deteriorate. The concentration on the membrane surface tends to increase. Specifically, the caustic concentration increases on the cathode surface, and the supply of brine tends to decrease on the anode surface. As a result, the product accumulates at a high concentration on the interface at which the membrane is in contact with the electrode. This accumulation leads to damage of the membrane and tends to also lead to increase in the voltage and damage of the membrane on the cathode surface and damage of the membrane on the anode surface. In the present embodiment, in order to prevent these defects, the ventilation resistance is preferably set at 24kPa.s/m or less. From a similar viewpoint as above, the ventilation resistance is more preferably less than 0.19 kPa·s/m, further preferably 0.15 kPa·s/m or less, further more preferably 0.07 kPa·s/m or less.

In the present embodiment, when the ventilation resistance is larger than a certain value, NaOH generated in the electrode tends to accumulate on the interface between the electrode and the membrane to result in a high concentration in the case of the cathode, and the supply of brine tends to decrease to cause the brine concentration to be lower in the case of the anode. In order to prevent damage to the membrane that may be caused by such accumulation, the ventilation resistance is preferably less than 0.19 kPa·s/m, more preferably 0.15 kPa·s/m or less, further preferably 0.07 kPa·s/m or less.

In contrast, when the ventilation resistance is low, the area of the electrode is reduced and the electrolysis area is reduced. Thus, the electrolytic performance (such as voltage) tends to deteriorate. When the ventilation resistance is zero, the feed conductor functions as the electrode because no electrode for electrolysis is provided, and the electrolytic performance (such as voltage) tends to markedly deteriorate. From this viewpoint, a preferable lower limit value identified as the ventilation resistance 1 is not particularly limited, but is preferably more than 0 kPa·s/m, more preferably 0.0001 kPa·s/m or more, further preferably 0.001 kPa·s/m or more.

When the ventilation resistance 1 is 0.07 kPa·s/m or less, a sufficient measurement accuracy may not be achieved because of the measurement method therefor. From this viewpoint, it is also possible to evaluate an electrode for electrolysis having a ventilation resistance 1 of 0.07 kPa·s/m or less by means of a ventilation resistance (hereinbelow, also referred to as "ventilation resistance 2") obtained by the following measurement method (hereinbelow, also referred to as "measurement condition 2"). That is, the ventilation resistance 2 is a ventilation resistance measured, when the electrode for electrolysis has a size of 50 mm × 50 mm, under conditions of the temperature of 24°C, the relative humidity of 32%, a piston speed of 2 cm/s, and a ventilation volume of 4 cc/cm²/s.

The specific methods for measuring the ventilation resistances 1 and 2 are described in Examples.

The ventilation resistances 1 and 2 can be within the range described above by appropriately adjusting an opening ratio, thickness of the electrode, and the like, for example. More specifically, for example, when the thickness is constant, a higher opening ratio tends to lead to smaller ventilation resistances 1 and 2, and a lower opening ratio tends to lead to larger ventilation resistances 1 and 2.

In the electrode for electrolysis of the present embodiment, as mentioned above, the force applied per unit mass·unit area of the electrode for electrolysis on the membrane or feed conductor is less than 1.5 N/mg·cm². In this manner, the electrode for electrolysis of the present embodiment abuts with a moderate adhesive force on the membrane or feed conductor (e.g., the existing anode or cathode in the electrolyzer) to thereby enable a laminate with the membrane or feed conductor to be constituted. That is, it is not necessary to cause the membrane or feed conductor to firmly adhere to the electrode for electrolysis by a complicated method such as thermal compression. The laminate is formed only by a relatively weak force, for example, a surface tension derived from moisture contained in the membrane such as an ion exchange membrane and a microporous membrane, and thus, a laminate of any scale can be easily constituted. Additionally, such a laminate exhibits excellent electrolytic performance. Thus, the laminate of the present embodiment is suitable for electrolysis applications, and can be particularly preferably used for applications related to members of electrolyzers and renewing the members.

Hereinbelow, one aspect of the electrode for electrolysis of the present embodiment will be described.

The electrode for electrolysis according to the present embodiment preferably includes a substrate for electrode for electrolysis and a catalyst layer. The catalyst layer may be composed of a plurality of layers as shown below or may be a single-layer configuration.

As shown in Figure 22, an electrode for electrolysis 100 according to the present embodiment includes a substrate for electrode for electrolysis 10 and a pair of first layers 20 with which both the surfaces of the substrate for electrode for electrolysis 10 are covered. The entire substrate for electrode for electrolysis 10 is preferably covered with the first layers 20. This covering is likely to improve the catalyst activity and durability of the electrode for electrolysis. One first layer 20 may be laminated only on one surface of the substrate for electrode for electrolysis 10.

Also shown in Figure 22, the surfaces of the first layers 20 may be covered with second layers 30. The entire first layers 20 are preferably covered by the second layers 30. Alternatively, one second layer 30 may be laminated only one surface of the first layer 20.

### (Substrate for electrode for electrolysis)

As the substrate for electrode for electrolysis 10, for example, nickel, nickel alloys, stainless steel, or valve metals including titanium can be used, although not limited thereto. The substrate 10 preferably contains at least one element selected from nickel (Ni) and titanium (Ti).

When stainless steel is used in an alkali aqueous solution of a high concentration, iron and chromium are eluted and the electrical conductivity of stainless steel is of the order of one-tenth of that of nickel. In consideration of the foregoing, a substrate containing nickel (Ni) is preferable as the substrate for electrode for electrolysis.

Alternatively, when the substrate for electrode for electrolysis 10 is used in a salt solution of a high concentration near the saturation under an atmosphere in which chlorine gas is generated, the material of the substrate for electrode 10 is also preferably titanium having high corrosion resistance.

The form of the substrate for electrode for electrolysis 10 is not particularly limited, and a form suitable for the purpose can be selected. As the form, any of a perforated metal, nonwoven fabric, foamed metal, expanded metal, metal porous foil formed by electroforming, so-called woven mesh produced by knitting metal lines, and the like can be used. Among these, a perforated metal or expanded metal is preferable. Electroforming is a technique for producing a metal thin film having a precise pattern by using photolithography and electroplating in combination. It is a method including forming a pattern on a substrate with a photoresist and electroplating the portion not protected by the resist to provide a metal thin film.

As for the form of the substrate for electrode for electrolysis, a suitable specification depends on the distance between the anode and the cathode in the electrolyzer. In the case where the distance between the anode and the cathode is finite, an expanded metal or perforated metal form can be used, and in the case of a so-called zero-gap base electrolyzer, in which the ion exchange membrane is in contact with the electrode, a woven mesh produced by knitting thin lines, wire mesh, foamed metal, metal nonwoven fabric, expanded metal, perforated metal, metal porous foil, and the like can be used, although not limited thereto.

Examples of the substrate for electrode for electrolysis 10 include a metal porous foil, a wire mesh, a metal nonwoven fabric, a perforated metal, an expanded metal, and a foamed metal.

As a plate material before processed into a perforated metal or expanded metal, rolled plate materials and electrolytic foils are preferable. An electrolytic foil is preferably further subjected to a plating treatment by use of the same element as the base material thereof, as the post-treatment, to thereby form asperities on one or both of the surfaces.

The thickness of the substrate for electrode for electrolysis 10 is, as mentioned above, preferably 300 µm or less, more preferably 205 µm or less, further preferably 155 µm or less, further more preferably 135 µm or less, even further more preferably 125 µm or less, still more preferably 120 µm or less, even still more preferably 100 µm or less, and further still more preferably 50 µm or less from the viewpoint of a handling property and economy. The lower limit value is not particularly limited, but is 1 µm, for example, preferably 5 µm, more preferably 15 µm.

In the substrate for electrode for electrolysis, the residual stress during processing is preferably relaxed by annealing the substrate for electrode for electrolysis in an oxidizing atmosphere. It is preferable to form asperities using a steel grid, alumina powder, or the like on the surface of the substrate for electrode for electrolysis followed by an acid treatment to increase the surface area thereof, in order to improve the adhesion to a catalyst layer with which the surface is covered. Alternatively, it is preferable to give a plating treatment by use of the same element as the substrate to increase the surface area.

To bring the first layer 20 into close contact with the surface of the substrate for electrode for electrolysis 10, the substrate for electrode for electrolysis 10 is preferably subjected to a treatment of increasing the surface area. Examples of the treatment of increasing the surface area include a blast treatment using a cut wire, steel grid, alumina grid or the like, an acid treatment using sulfuric acid or hydrochloric acid, and a plating treatment using the same element to that of the substrate. The arithmetic average surface roughness (Ra) of the substrate surface is not particularly limited, but is preferably 0.05 µm to 50 µm, more preferably 0.1 to 10 µm, further preferably 0.1 to 8 µm.

Next, a case where the electrode for electrolysis of the present embodiment is used as an anode for common salt electrolysis will be described.

### (First layer)

In Figure 22, a first layer 20 as a catalyst layer contains at least one of ruthenium oxides, iridium oxides, and titanium oxides. Examples of the ruthenium oxide include RuO₂. Examples of the iridium oxide include IrO₂. Examples of the titanium oxide include TiO₂. The first layer 20 preferably contains two oxides: a ruthenium oxide and a titanium oxide or three oxides: a ruthenium oxide, an iridium oxide, and a titanium oxide. This makes the first layer 20 more stable and additionally improves the adhesion with the second layer 30.

When the first layer 20 contains two oxides: a ruthenium oxide and a titanium oxide, the first layer 20 contains preferably 1 to 9 mol, more preferably 1 to 4 mol of the titanium oxide based on 1 mol of the ruthenium oxide contained in the first layer 20. With the composition ratio of the two oxides in this range, the electrode for electrolysis 100 exhibits excellent durability.

When the first layer 20 contains three oxides: a ruthenium oxide, an iridium oxide, and a titanium oxide, the first layer 20 contains preferably 0.2 to 3 mol, more preferably 0.3 to 2.5 mol of the iridium oxide based on 1 mol of the ruthenium oxide contained in the first layer 20. The first layer 20 contains preferably 0.3 to 8 mol, more preferably 1 to 7 mol of the titanium oxide based on 1 mol of the ruthenium oxide contained in the first layer 20. With the composition ratio of the three oxides in this range, the electrode for electrolysis 100 exhibits excellent durability.

When the first layer 20 contains at least two of a ruthenium oxide, an iridium oxide, and a titanium oxide, these oxides preferably form a solid solution. Formation of the oxide solid solution allows the electrode for electrolysis 100 to exhibit excellent durability.

In addition to the compositions described above, oxides of various compositions can be used as long as at least one oxide of a ruthenium oxide, an iridium oxide, and titanium oxide is contained. For example, an oxide coating called DSA(R), which contains ruthenium, iridium, tantalum, niobium, titanium, tin, cobalt, manganese, platinum, and the like, can be used as the first layer 20.

The first layer 20 need not be a single layer and may include a plurality of layers. For example, the first layer 20 may include a layer containing three oxides and a layer containing two oxides. The thickness of the first layer 20 is preferably 0.05 to 10 µm, more preferably 0.1 to 8 µm.

### (Second layer)

The second layer 30 preferably contains ruthenium and titanium. This enables the chlorine overvoltage immediately after electrolysis to be further lowered.

The second layer 30 preferably contains a palladium oxide, a solid solution of a palladium oxide and platinum, or an alloy of palladium and platinum. This enables the chlorine overvoltage immediately after electrolysis to be further lowered.

A thicker second layer 30 can maintain the electrolytic performance for a longer period, but from the viewpoint of economy, the thickness is preferably 0.05 to 3 µm.

Next, a case where the electrode for electrolysis of the present embodiment is used as a cathode for common salt electrolysis will be described.

### (First layer)

Examples of components of the first layer 20 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

The first layer 20 may or may not contain at least one of platinum group metals, platinum group metal oxides, platinum group metal hydroxides, and alloys containing a platinum group metal.

When the first layer 20 contains at least one of platinum group metals, platinum group metal oxides, platinum group metal hydroxides, and alloys containing a platinum group metal, the platinum group metals, platinum group metal oxides, platinum group metal hydroxides, and alloys containing a platinum group metal preferably contain at least one platinum group metal of platinum, palladium, rhodium, ruthenium, and iridium.

As the platinum group metal, platinum is preferably contained.

As the platinum group metal oxide, a ruthenium oxide is preferably contained.

As the platinum group metal hydroxide, a ruthenium hydroxide is preferably contained.

As the platinum group metal alloy, an alloy of platinum with nickel, iron, and cobalt is preferably contained.

Further, as required, an oxide or hydroxide of a lanthanoid element is preferably contained as a second component. This allows the electrode for electrolysis 100 to exhibit excellent durability.

As the oxide or hydroxide of a lanthanoid element, at least one selected from lanthanum, cerium, praseodymium, neodymium, promethium, samarium, europium, gadolinium, terbium, and dysprosium is preferably contained.

Further, as required, an oxide or hydroxide of a transition metal is preferably contained as a third component.

Addition of the third component enables the electrode for electrolysis 100 to exhibit more excellent durability and the electrolysis voltage to be lowered.

Examples of a preferable combination include ruthenium only, ruthenium + nickel, ruthenium + cerium, ruthenium + lanthanum, ruthenium + lanthanum + platinum, ruthenium + lanthanum + palladium, ruthenium + praseodymium, ruthenium + praseodymium + platinum, ruthenium + praseodymium + platinum + palladium, ruthenium + neodymium, ruthenium + neodymium + platinum, ruthenium + neodymium + manganese, ruthenium + neodymium + iron, ruthenium + neodymium + cobalt, ruthenium + neodymium + zinc, ruthenium + neodymium + gallium, ruthenium + neodymium + sulfur, ruthenium + neodymium + lead, ruthenium + neodymium + nickel, ruthenium + neodymium + copper, ruthenium + samarium, ruthenium + samarium + manganese, ruthenium + samarium + iron, ruthenium + samarium + cobalt, ruthenium + samarium + zinc, ruthenium + samarium + gallium, ruthenium + samarium + sulfur, ruthenium + samarium + lead, ruthenium + samarium + nickel, platinum + cerium, platinum + palladium + cerium, platinum + palladium + lanthanum + cerium, platinum + iridium, platinum + palladium, platinum + iridium + palladium, platinum + nickel + palladium, platinum + nickel + ruthenium, alloys of platinum and nickel, alloys of platinum and cobalt, and alloys of platinum and iron.

When platinum group metals, platinum group metal oxides, platinum group metal hydroxides, and alloys containing a platinum group metal are not contained, the main component of the catalyst is preferably nickel element.

At least one of nickel metal, oxides, and hydroxides is preferably contained.

As the second component, a transition metal may be added. As the second component to be added, at least one element of titanium, tin, molybdenum, cobalt, manganese, iron, sulfur, zinc, copper, and carbon is preferably contained.

Examples of a preferable combination include nickel + tin, nickel + titanium, nickel + molybdenum, and nickel + cobalt.

As required, an intermediate layer can be placed between the first layer 20 and the substrate for electrode for electrolysis 10. The durability of the electrode for electrolysis 100 can be improved by placing the intermediate layer.

As the intermediate layer, those having affinity to both the first layer 20 and the substrate for electrode for electrolysis 10 are preferable. As the intermediate layer, nickel oxides, platinum group metals, platinum group metal oxides, and platinum group metal hydroxides are preferable. The intermediate layer can be formed by applying and baking a solution containing a component that forms the intermediate layer. Alternatively, a surface oxide layer also can be formed by subjecting a substrate to a thermal treatment at a temperature of 300 to 600°C in an air atmosphere. Besides, the layer can be formed by a known method such as a thermal spraying method and ion plating method.

### (Second layer)

Examples of components of the first layer 30 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

The first layer 30 may or may not contain at least one of platinum group metals, platinum group metal oxides, platinum group metal hydroxides, and alloys containing a platinum group metal. Examples of a preferable combination of elements contained in the second layer include the combinations enumerated for the first layer. The combination of the first layer and the second layer may be a combination in which the compositions are the same and the composition ratios are different or may be a combination of different compositions.

As the thickness of the catalyst layer, the total thickness of the catalyst layer formed and the intermediate layer is preferably 0.01 µm to 20 µm. With a thickness of 0.01 µm or more, the catalyst layer can sufficiently serve as the catalyst. With a thickness of 20 µm or less, it is possible to form a robust catalyst layer that is unlikely to fall off from the substrate. The thickness is more preferably 0.05 µm to 15 µm. The thickness is more preferably 0.1 µm to 10 µm. The thickness is further preferably 0.2 µm to 8 µm.

The thickness of the electrode for electrolysis, that is, the total thickness of the substrate for electrode for electrolysis and the catalyst layer is preferably 315 µm or less, more preferably 220 µm or less, further preferably 170 µm or less, further more preferably 150 µm or less, particularly preferably 145 µm or less, still more preferably 140 µm or less, even still more preferably 138 µm or less, further still more preferably 135 µm or less in respect of the handling property of the electrode for electrolysis. A thickness of 135 µm or less can provide a good handling property. Further, from a similar viewpoint as above, the thickness is preferably 130 µm or less, more preferably less than 130 µm, further preferably 115 µm or less, further more preferably 65 µm or less. The lower limit value is not particularly limited, but is preferably 1 µm or more, more preferably 5 µm or more for practical reasons, more preferably 20 µm or more. The thickness of the electrode can be determined by measurement with a digimatic thickness gauge (Mitutoyo Corporation, minimum scale 0.001 mm). The thickness of the substrate for electrode for electrolysis can be measured in the same manner as in the case of the electrode for electrolysis. The thickness of the catalyst layer can be determined by subtracting the thickness of the substrate for electrode for electrolysis from the thickness of the electrode for electrolysis.

### (Method for producing electrode for electrolysis)

Next, one embodiment of the method for producing the electrode for electrolysis 100 will be described in detail.

In the present embodiment, the electrode for electrolysis 100 can be produced by forming the first layer 20, preferably the second layer 30, on the substrate for electrode for electrolysis by a method such as baking of a coating film under an oxygen atmosphere (pyrolysis), or ion plating, plating, or thermal spraying. The production method of the present embodiment as mentioned can achieve a high productivity of the electrode for electrolysis 100. Specifically, a catalyst layer is formed on the substrate for electrode for electrolysis by an application step of applying a coating liquid containing a catalyst, a drying step of drying the coating liquid, and a pyrolysis step of performing pyrolysis. Pyrolysis herein means that a metal salt which is to be a precursor is decomposed by heating into a metal or metal oxide and a gaseous substance. The decomposition product depends on the metal species to be used, type of the salt, and the atmosphere under which pyrolysis is performed, and many metals tend to form oxides in an oxidizing atmosphere. In an industrial process of producing an electrode, pyrolysis is usually performed in air, and a metal oxide or a metal hydroxide is formed in many cases.

### (Formation of first layer of anode)

### (Application step)

The first layer 20 is obtained by applying a solution in which at least one metal salt of ruthenium, iridium, and titanium is dissolved (first coating liquid) onto the substrate for electrode for electrolysis and then pyrolyzing (baking) the coating liquid in the presence of oxygen. The content of ruthenium, iridium, and titanium in the first coating liquid is substantially equivalent to that of the first layer 20.

The metal salts may be chlorides, nitrates, sulfates, metal alkoxides, and any other forms. The solvent of the first coating liquid can be selected depending on the type of the metal salt, and water and alcohols such as butanol can be used. As the solvent, water or a mixed solvent of water and an alcohol is preferable. The total metal concentration in the first coating liquid in which the metal salts are dissolved is not particularly limited, but is preferably in the range of 10 to 150 g/L in association with the thickness of the coating film to be formed by a single coating.

Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

### (Drying step and pyrolysis step)

After being applied onto the substrate for electrode for electrolysis 100, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.

The cycle of application, drying, and pyrolysis described above is repeated to form a covering (the first layer 20) to a predetermined thickness. After the first layer 20 is formed and then further post-baked for a long period as required can further improve the stability of the first layer 20.

### (Formation of second layer)

The second layer 30, which is formed as required, is obtained, for example, by applying a solution containing a palladium compound and a platinum compound or a solution containing a ruthenium compound and a titanium compound (second coating liquid) onto the first layer 20 and then pyrolyzing the coating liquid in the presence of oxygen.

### (Formation of first layer of cathode by pyrolysis method)

### (Application step)

The first layer 20 is obtained by applying a solution in which metal salts of various combination are dissolved (first coating liquid) onto the substrate for electrode for electrolysis and then pyrolyzing (baking) the coating liquid in the presence of oxygen. The content of the metal in the first coating liquid is substantially equivalent to that in the first layer 20.

The metal salts may be chlorides, nitrates, sulfates, metal alkoxides, and any other forms. The solvent of the first coating liquid can be selected depending on the type of the metal salt, and water and alcohols such as butanol can be used. As the solvent, water or a mixed solvent of water and an alcohol is preferable. The total metal concentration in the first coating liquid in which the metal salts are dissolved is not particularly limited, but is preferably in the range of 10 to 150 g/L in association with the thickness of the coating film to be formed by a single coating.

Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

### (Drying step and pyrolysis step)

After being applied onto the substrate for electrode for electrolysis 10, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.

The cycle of application, drying, and pyrolysis described above is repeated to form a covering (the first layer 20) to a predetermined thickness. After the first layer 20 is formed and then further post-baked for a long period as required can further improve the stability of the first layer 20.

### (Formation of intermediate layer)

The intermediate layer, which is formed as required, is obtained, for example, by applying a solution containing a palladium compound or platinum compound (second coating liquid) onto the substrate and then pyrolyzing the coating liquid in the presence of oxygen. Alternatively, a nickel oxide intermediate layer may be formed on the substrate surface only by heating the substrate, without applying a solution thereon.

### (Formation of first layer of cathode by ion plating)

The first layer 20 can be formed also by ion plating. An example includes a method in which the substrate is fixed in a chamber and the metal ruthenium target is irradiated with an electron beam. Evaporated metal ruthenium particles are positively charged in plasma in the chamber to deposit on the substrate negatively charged. The plasma atmosphere is argon and oxygen, and ruthenium deposits as ruthenium oxide on the substrate.

### (Formation of first layer of cathode by plating)

The first layer 20 can be formed also by a plating method.

As an example, when the substrate is used as the cathode and subjected to electrolytic plating in an electrolyte solution containing nickel and tin, alloy plating of nickel and tin can be formed.

### (Formation of first layer of cathode by thermal spraying)

The first layer 20 can be formed also by thermal spraying.

As an example, plasma spraying nickel oxide particles onto the substrate can form a catalyst layer in which metal nickel and nickel oxide are mixed.

The electrode for electrolysis of the present embodiment can be integrated with a membrane such as an ion exchange membrane and a microporous membrane and used. Thus, the electrode can be used as a membrane-integrated electrode. Then, the substituting work for the cathode and anode on renewing the electrode is eliminated, and the work efficiency is markedly improved.

The electrode integrated with the membrane such as an ion exchange membrane and a microporous membrane can make the electrolytic performance comparable to or higher than those of a new electrode.

Hereinafter, the ion exchange membrane will be described in detail.

### [Ion exchange membrane]

The ion exchange membrane has a membrane body containing a hydrocarbon polymer or fluorine-containing polymer having an ion exchange group and a coating layer provided on at least one surface of the membrane body. The coating layer contains inorganic material particles and a binder, and the specific surface area of the coating layer is 0.1 to 10 m²/g. In the ion exchange membrane having such a structure, the influence of gas generated during electrolysis on electrolytic performance is small, and stable electrolytic performance can be exhibited.

The membrane of a perfluorocarbon polymer into which an ion exchange group is introduced described above includes either one of a sulfonic acid layer having an ion exchange group derived from a sulfo group (a group represented by -SO₃⁻, hereinbelow also referred to as a "sulfonic acid group") or a carboxylic acid layer having an ion exchange group derived from a carboxyl group (a group represented by -CO₂⁻, hereinbelow also referred to as a "carboxylic acid group"). From the viewpoint of strength and dimension stability, reinforcement core materials are preferably further included.

The inorganic material particles and binder will be described in detail in the section of description of the coating layer below.

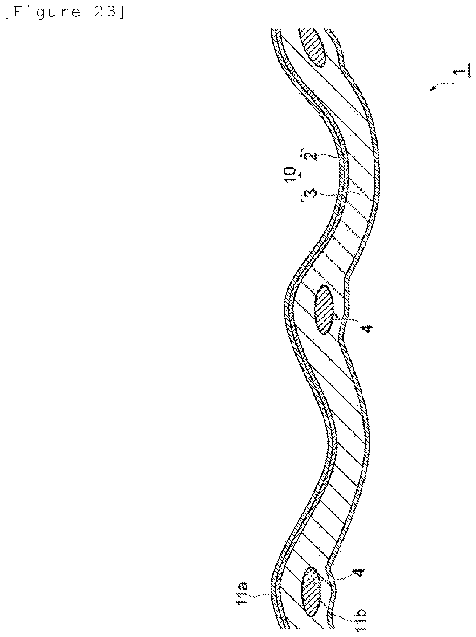

Figure 23 illustrates a cross-sectional schematic view showing one embodiment of an ion exchange membrane. An ion exchange membrane 1 has a membrane body 10 containing a hydrocarbon polymer or fluorine-containing polymer having an ion exchange group and coating layers 11a and 11b formed on both the surfaces of the membrane body 10.

In the ion exchange membrane 1, the membrane body 10 comprises a sulfonic acid layer 3 having an ion exchange group derived from a sulfo group (a group represented by -SO₃-, hereinbelow also referred to as a "sulfonic acid group") and a carboxylic acid layer 2 having an ion exchange group derived from a carboxyl group (a group represented by -CO₂-, hereinbelow also referred to as a "carboxylic acid group"), and the reinforcement core materials 4 enhance the strength and dimension stability. The ion exchange membrane 1, as comprising the sulfonic acid layer 3 and the carboxylic acid layer 2, is suitably used as an anion exchange membrane.

The ion exchange membrane may include either one of the sulfonic acid layer and the carboxylic acid layer. The ion exchange membrane may not be necessarily reinforced by reinforcement core materials, and the arrangement of the reinforcement core materials is not limited to the example in Figure 23.

### (Membrane body)

First, the membrane body 10 constituting the ion exchange membrane 1 will be described.

The membrane body 10 should be one that has a function of selectively allowing cations to permeate and comprises a hydrocarbon polymer or a fluorine-containing polymer having an ion exchange group. Its configuration and material are not particularly limited, and preferred ones can be appropriately selected.

The hydrocarbon polymer or fluorine-containing polymer having an ion exchange group in the membrane body 10 can be obtained from a hydrocarbon polymer or fluorine-containing polymer having an ion exchange group precursor capable of forming an ion exchange group by hydrolysis or the like. Specifically, for example, after a polymer comprising a main chain of a fluorinated hydrocarbon, having, as a pendant side chain, a group convertible into an ion exchange group by hydrolysis or the like (ion exchange group precursor), and being melt-processable (hereinbelow, referred to as the "fluorine-containing polymer (a)" in some cases) is used to prepare a precursor of the membrane body 10, the membrane body 10 can be obtained by converting the ion exchange group precursor into an ion exchange group.

The fluorine-containing polymer (a) can be produced, for example, by copolymerizing at least one monomer selected from the following first group and at least one monomer selected from the following second group and/or the following third group. The fluorine-containing polymer (a) can be also produced by homopolymerization of one monomer selected from any of the following first group, the following second group, and the following third group.

Examples of the monomers of the first group include vinyl fluoride compounds. Examples of the vinyl fluoride compounds include vinyl fluoride, tetrafluoroethylene, hexafluoropropylene, vinylidene fluoride, trifluoroethylene, chlorotrifluoroethylene, and perfluoro alkyl vinyl ethers. Particularly when the ion exchange membrane is used as a membrane for alkali electrolysis, the vinyl fluoride compound is preferably a perfluoro monomer, and a perfluoro monomer selected from the group consisting of tetrafluoroethylene, hexafluoropropylene, and perfluoro alkyl vinyl ethers is preferable.

Examples of the monomers of the second group include vinyl compounds having a functional group convertible into a carboxylic acid-type ion exchange group (carboxylic acid group). Examples of the vinyl compounds having a functional group convertible into a carboxylic acid group include monomers represented by CF₂=CF(OCF₂CYF)ₛ-O(CZF)ₜ-COOR, wherein s represents an integer of 0 to 2, t represents an integer of 1 to 12, Y and Z each independently represent F or CF₃, and R represents a lower alkyl group (a lower alkyl group is an alkyl group having 1 to 3 carbon atoms, for example).

Among these, compounds represented by CF₂=CF(OCF₂CYF)ₙ-O(CF₂)ₘ-COOR are preferable. Wherein n represents an integer of 0 to 2, m represents an integer of 1 to 4, Y represents F or CF₃, and R represents CH₃, C₂H₅, or C₃H₇.

When the ion exchange membrane is used as a cation exchange membrane for alkali electrolysis, a perfluoro compound is preferably at least used as the monomer, but the alkyl group (see the above R) of the ester group is lost from the polymer at the time of hydrolysis, and therefore the alkyl group (R) need not be a perfluoroalkyl group in which all hydrogen atoms are replaced by fluorine atoms.

Of the above monomers, the monomers represented below are more preferable as the monomers of the second group:

CF₂=CFOCF₂-CF(CF₃)OCF₂COOCH₃,

CF₂=CFOCF₂CF(CF₃)O(CF₂)₂COOCH₃,

CF₂=CF[OCF₂-CF(CF₃)]₂O(CF₂)₂COOCH₃,

CF₂=CFOCF₂CF(CF₃)O(CF₂)₃COOCH₃,

CF₂=CFO(CF₂)₂COOCH₃, and

CF₂=CFO(CF₂)₃COOCH₃.

Examples of the monomers of the third group include vinyl compounds having a functional group convertible into a sulfone-type ion exchange group (sulfonic acid group). As the vinyl compounds having a functional group convertible into a sulfonic acid group, for example, monomers represented by CF₂=CFO-X-CF₂-SO₂F are preferable, wherein X represents a perfluoroalkylene group. Specific examples of these include the monomers represented below:

CF₂=CFOCF₂CF₂SO₂F,

CF₂=CFOCF₂CF(CF₃)OCF₂CF₂SO₂F,

CF₂=CFOCF₂CF(CF₃)OCF₂CF₂CF₂SO₂F,

CF₂=CF(CF₂)₂SO₂F,

CF₂=CFO[CF₂CF(CF₃)O]₂CF₂CF₂SO₂F, and

CF₂=CFOCF₂CF(CF₂OCF₃)OCF₂CF₂SO₂F.

Among these, CF₂=CFOCF₂CF(CF₃)OCF₂CF₂CF₂SO₂F and CF₂=CFOCF₂CF(CF₃)OCF₂CF₂SO₂F are more preferable.

The copolymer obtained from these monomers can be produced by a polymerization method developed for homopolymerization and copolymerization of ethylene fluoride, particularly a general polymerization method used for tetrafluoroethylene. For example, in a nonaqueous method, a polymerization reaction can be performed in the presence of a radical polymerization initiator such as a perfluorocarbon peroxide or an azo compound under the conditions of a temperature of 0 to 200°C and a pressure of 0.1 to 20 MPa using an inert solvent such as a perfluorohydrocarbon or a chlorofluorocarbon.

In the above copolymerization, the type of combination of the above monomers and their proportion are not particularly limited and are selected and determined depending on the type and amount of the functional group desired to be imparted to the fluorine-containing polymer to be obtained. For example, when a fluorine-containing polymer containing only a carboxylic acid group is formed, at least one monomer should be selected from each of the first group and the second group described above and copolymerized. In addition, when a fluorine-containing polymer containing only a sulfonic acid group is formed, at least one monomer should be selected from each of the first group and the third group and copolymerized. Further, when a fluorine-containing polymer having a carboxylic acid group and a sulfonic acid group is formed, at least one monomer should be selected from each of the first group, the second group, and the third group described above and copolymerized. In this case, the target fluorine-containing polymer can be obtained also by separately preparing a copolymer comprising the monomers of the first group and the second group described above and a copolymer comprising the monomers of the first group and the third group described above, and then mixing the copolymers. The mixing proportion of the monomers is not particularly limited, and when the amount of the functional groups per unit polymer is increased, the proportion of the monomers selected from the second group and the third group described above should be increased.

The total ion exchange capacity of the fluorine-containing copolymer is not particularly limited, but is preferably 0.5 to 2.0 mg equivalent/g, more preferably 0.6 to 1.5 mg equivalent/g. The total ion exchange capacity herein refers to the equivalent of the exchange group per unit weight of the dry resin and can be measured by neutralization titration or the like.

In the membrane body 10 of the ion exchange membrane 1, a sulfonic acid layer 3 containing a fluorine-containing polymer having a sulfonic acid group and a carboxylic acid layer 2 containing a fluorine-containing polymer having a carboxylic acid group are laminated. By providing the membrane body 10 having such a layer configuration, selective permeability for cations such as sodium ions can be further improved.

The ion exchange membrane 1 is arranged in an electrolyzer such that, usually, the sulfonic acid layer 3 is located on the anode side of the electrolyzer and the carboxylic acid layer 2 is located on the cathode side of the electrolyzer.

The sulfonic acid layer 3 is preferably constituted by a material having low electrical resistance and has a membrane thickness larger than that of the carboxylic acid layer 2 from the viewpoint of membrane strength. The membrane thickness of the sulfonic acid layer 3 is preferably 2 to 25 times, more preferably 3 to 15 times that of the carboxylic acid layer 2.

The carboxylic acid layer 2 preferably has high anion exclusion properties even if it has a small membrane thickness. The anion exclusion properties here refer to the property of trying to hinder intrusion and permeation of anions into and through the ion exchange membrane 1. In order to raise the anion exclusion properties, it is effective to dispose a carboxylic acid layer having a small ion exchange capacity to the sulfonic acid layer.

As the fluorine-containing polymer for use in the sulfonic acid layer 3, preferable is a polymer obtained by using CF₂=CFOCF₂CF(CF₃)OCF₂CF₂SO₂F as the monomer of the third group.

As the fluorine-containing polymer for use in the carboxylic acid layer 2, preferable is a polymer obtained by using CF₂=CFOCF₂CF(CF₂)O(CF₂)₂COOCH₃ as the monomer of the second group.

### (Coating layer)

The ion exchange membrane has a coating layer on at least one surface of the membrane body. As shown in Figure 23, in the ion exchange membrane 1, coating layers 11a and 11b are formed on both the surfaces of the membrane body 10.

The coating layers contain inorganic material particles and a binder.

The average particle size of the inorganic material particles is preferably 0.90 µm or more. When the average particle size of the inorganic material particles is 0.90 µm or more, durability to impurities is extremely improved, in addition to attachment of gas. That is, enlarging the average particle size of the inorganic material particles as well as satisfying the value of the specific surface area mentioned above can achieve a particularly marked effect. Irregular inorganic material particles are preferable because the average particle size and specific surface area as above are satisfied. Inorganic material particles obtained by melting and inorganic material particles obtained by grinding raw ore can be used. Inorganic material particles obtained by grinding raw ore can preferably be used.

The average particle size of the inorganic material particles can be 2 µm or less. When the average particle size of the inorganic material particles is 2 µm or less, it is possible to prevent damage of the membrane due to the inorganic material particles. The average particle size of the inorganic material particle is more preferably 0.90 to 1.2 µm.

Here, the average particle size can be measured by a particle size analyzer ("SALD2200", SHIMADZU CORPORATION).

The inorganic material particles preferably have irregular shapes. Such shapes improve resistance to impurities further. The inorganic material particles preferably have a broad particle size distribution.

The inorganic material particles preferably contain at least one inorganic material selected from the group consisting of oxides of Group IV elements in the Periodic Table, nitrides of Group IV elements in the Periodic Table, and carbides of Group IV elements in the Periodic Table. From the viewpoint of durability, zirconium oxide particle is more preferable.

The inorganic material particles are preferably inorganic material particles produced by grinding the raw ore of the inorganic material particles or inorganic material particles, as spherical particles having a uniform diameter, obtained by melt-purifying the raw ore of the inorganic material particles.

Examples of means for grinding raw ore include, but are not particularly limited to, ball mills, bead mills, colloid mills, conical mills, disc mills, edge mills, grain mills, hammer mills, pellet mills, VSI mills, Wiley mills, roller mills, and jet mills. After grinding, the particles are preferably washed. As the washing method, the particles are preferably treated with acid. This treatment can reduce impurities such as iron attached to the surface of the inorganic material particles.

The coating layer preferably contains a binder. The binder is a component that forms the coating layers by retaining the inorganic material particles on the surface of the ion exchange membrane. The binder preferably contains a fluorine-containing polymer from the viewpoint of durability to the electrolyte solution and products from electrolysis.

As the binder, a fluorine-containing polymer having a carboxylic acid group or sulfonic acid group is more preferable, from the viewpoint of durability to the electrolyte solution and products from electrolysis and adhesion to the surface of the ion exchange membrane. When a coating layer is provided on a layer containing a fluorine-containing polymer having a sulfonic acid group (sulfonic acid layer), a fluorine-containing polymer having a sulfonic acid group is further preferably used as the binder of the coating layer. Alternatively, when a coating layer is provided on a layer containing a fluorine-containing polymer having a carboxylic acid group (carboxylic acid layer), a fluorine-containing polymer having a carboxylic acid group is further preferably used as the binder of the coating layer.

In the coating layer, the content of the inorganic material particles is preferably 40 to 90% by mass, more preferably 50 to 90% by mass. The content of the binder is preferably 10 to 60% by mass, more preferably 10 to 50% by mass.

The distribution density of the coating layer in the ion exchange membrane is preferably 0.05 to 2 mg per 1 cm². When the ion exchange membrane has asperities on the surface thereof, the distribution density of the coating layer is preferably 0.5 to 2 mg per 1 cm².

As the method for forming the coating layer, which is not particularly limited, a known method can be used. An example is a method including applying by a spray or the like a coating liquid obtained by dispersing inorganic material particles in a solution containing a binder.

### (Reinforcement core materials)

The ion exchange membrane preferably has reinforcement core materials arranged inside the membrane body.

The reinforcement core materials are members that enhance the strength and dimensional stability of the ion exchange membrane. By arranging the reinforcement core materials inside the membrane body, particularly expansion and contraction of the ion exchange membrane can be controlled in the desired range. Such an ion exchange membrane does not expand or contract more than necessary during electrolysis and the like and can maintain excellent dimensional stability for a long term.

The configuration of the reinforcement core materials is not particularly limited, and, for example, the reinforcement core materials may be formed by spinning yarns referred to as reinforcement yarns. The reinforcement yarns here refer to yarns that are members constituting the reinforcement core materials, can provide the desired dimensional stability and mechanical strength to the ion exchange membrane, and can be stably present in the ion exchange membrane. By using the reinforcement core materials obtained by spinning such reinforcement yarns, better dimensional stability and mechanical strength can be provided to the ion exchange membrane.

The material of the reinforcement core materials and the reinforcement yarns used for these is not particularly limited but is preferably a material resistant to acids, alkalis, etc., and a fiber comprising a fluorine-containing polymer is preferable because long-term heat resistance and chemical resistance are required.

Examples of the fluorine-containing polymer to be used in the reinforcement core materials include polytetrafluoroethylene (PTFE), tetrafluoroethylene-perfluoroalkyl vinyl ether copolymers (PFA), tetrafluoroethylene-ethylene copolymers (ETFE), tetrafluoroethylene-hexafluoropropylene copolymers, trifluorochloroethylene-ethylene copolymers, and vinylidene fluoride polymers (PVDF). Among these, fibers comprising polytetrafluoroethylene are preferably used from the viewpoint of heat resistance and chemical resistance.

The yarn diameter of the reinforcement yarns used for the reinforcement core materials is not particularly limited, but is preferably 20 to 300 deniers, more preferably 50 to 250 deniers. The weave density (fabric count per unit length) is preferably 5 to 50/inch. The form of the reinforcement core materials is not particularly limited, for example, a woven fabric, a nonwoven fabric, and a knitted fabric are used, but is preferably in the form of a woven fabric. The thickness of the woven fabric to be used is preferably 30 to 250 µm, more preferably 30 to 150 µm.

As the woven fabric or knitted fabric, monofilaments, multifilaments, or yarns thereof, a slit yarn, or the like can be used, and various types of weaving methods such as a plain weave, a leno weave, a knit weave, a cord weave, and a seersucker can be used.

The weave and arrangement of the reinforcement core materials in the membrane body are not particularly limited, and preferred arrangement can be appropriately provided considering the size and form of the ion exchange membrane, physical properties desired for the ion exchange membrane, the use environment, and the like.

For example, the reinforcement core materials may be arranged along one predetermined direction of the membrane body, but from the viewpoint of dimensional stability, it is preferred that the reinforcement core materials be arranged along a predetermined first direction, and other reinforcement core materials be arranged along a second direction substantially perpendicular to the first direction. By arranging the plurality of reinforcement core materials substantially orthogonally inside the membrane body, it is possible to impart better dimensional stability and mechanical strength in many directions. For example, arrangement in which the reinforcement core materials arranged along the longitudinal direction (warp yarns) and the reinforcement core materials arranged along the transverse direction (weft yarns) are woven on the surface side of the membrane body is preferred. The arrangement is more preferably in the form of plain weave driven and woven by allowing warps and wefts to run over and under each other alternately, leno weave in which two warps are woven into wefts while twisted, basket weave driven and woven by inserting, into two or more parallelly-arranged warps, wefts of the same number, or the like, from the viewpoint of dimension stability, mechanical strength and easy-production.

It is preferred that particularly, the reinforcement core materials be arranged along both directions, the MD (Machine Direction) and TD (Transverse Direction) of the ion exchange membrane. In other words, the reinforcement core materials are preferably plain-woven in the MD and TD. Here, the MD refers to the direction in which the membrane body and various core materials (for example, the reinforcement core materials, reinforcement yarns, and sacrifice yarns described later) are conveyed in an ion exchange membrane production step described later (flow direction), and the TD refers to the direction substantially perpendicular to the MD. Yarns woven along the MD are referred to as MD yarns, and yarns woven along the TD are referred to as TD yarns. Usually, the ion exchange membrane used for electrolysis is rectangular, and in many cases, the longitudinal direction is the MD, and the width direction is the TD. By weaving the reinforcement core materials that are MD yarns and the reinforcement core materials that are TD yarns, it is possible to impart better dimensional stability and mechanical strength in many directions.

The arrangement interval of the reinforcement core materials is not particularly limited, and preferred arrangement can be appropriately provided considering physical properties desired for the ion exchange membrane, the use environment, and the like.

The aperture ratio for the reinforcement core materials is not particularly limited, but is preferably 30% or more, more preferably 50% or more and 90% or less. The aperture ratio is preferably 30% or more from the viewpoint of the electrochemical properties of the ion exchange membrane, and preferably 90% or less from the viewpoint of the mechanical strength of the ion exchange membrane.

The aperture ratio for the reinforcement core materials herein refers to a ratio of a total area of a surface through which substances such as ions (an electrolyte solution and cations contained therein (e.g., sodium ions)) can pass (B) to the area of either one surface of the membrane body (A) (B/A). The total area of the surface through which substances such as ions can pass (B) can refer to the total areas of regions in which in the ion exchange membrane, cations, an electrolytic solution, and the like are not blocked by the reinforcement core materials and the like contained in the ion exchange membrane.

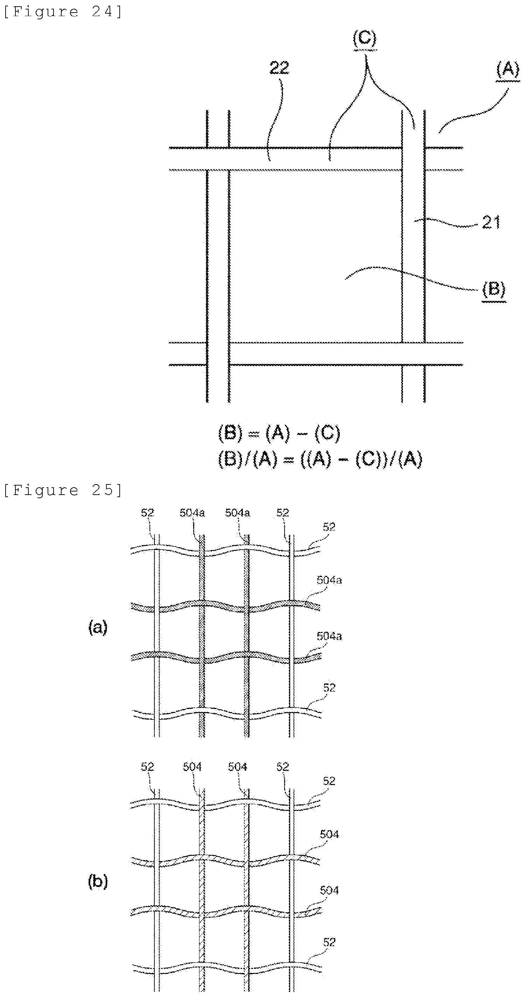

Figure 24 illustrates a schematic view for explaining the aperture ratio of reinforcement core materials constituting the ion exchange membrane. Figure 24, in which a portion of the ion exchange membrane is enlarged, shows only the arrangement of the reinforcement core materials 21 and 22 in the regions, omitting illustration of the other members.

By subtracting the total area of the reinforcement core materials (C) from the area of the region surrounded by the reinforcement core materials 21 arranged along the longitudinal direction and the reinforcement core materials 22 arranged along the transverse direction, the region including the area of the reinforcement core materials (A), the total area of regions through which substances such as ions can pass (B) in the area of the above-described region (A) can be obtained. That is, the aperture ratio can be determined by the following formula (I): $Aperture ratio = \left(B\right) / \left(A\right) = \left(\left(A\right)-\left(C\right)\right) / \left(A\right)$

Among the reinforcement core materials, a particularly preferred form is tape yarns or highly oriented monofilaments comprising PTFE from the viewpoint of chemical resistance and heat resistance. Specifically, reinforcement core materials forming a plain weave in which 50 to 300 denier tape yarns obtained by slitting a high strength porous sheet comprising PTFE into a tape form, or 50 to 300 denier highly oriented monofilaments comprising PTFE are used and which has a weave density of 10 to 50 yarns or monofilaments/inch and has a thickness in the range of 50 to 100 µm are more preferred. The aperture ratio of an ion exchange membrane comprising such reinforcement core materials is further preferably 60% or more.

Examples of the shape of the reinforcement yarns include round yarns and tape yarns.

### (Continuous holes)

The ion exchange membrane preferably has continuous holes inside the membrane body.

The continuous holes refer to holes that can be flow paths for ions generated in electrolysis and an electrolyte solution. The continuous holes, which are tubular holes formed inside the membrane body, are formed by dissolution of sacrifice core materials (or sacrifice yarns) described below. The shape, diameter, or the like of the continuous holes can be controlled by selecting the shape or diameter of the sacrifice core materials (sacrifice yarns).

Forming the continuous holes inside the ion exchange membrane can ensure the mobility of an electrolyte solution on electrolysis. The shape of the continuous holes is not particularly limited, but may be the shape of sacrifice core materials to be used for formation of the continuous holes in accordance with the production method described below.

The continuous holes are preferably formed so as to alternately pass on the anode side (sulfonic acid layer side) and the cathode side (carboxylic acid layer side) of the reinforcement core materials. With such a structure, in a portion in which continuous holes are formed on the cathode side of the reinforcement core materials, ions (e.g., sodium ions) transported through the electrolyte solution with which the continuous holes are filled can flow also on the cathode side of the reinforcement core materials. As a result, the flow of cations is not interrupted, and thus, it is possible to further reduce the electrical resistance of the ion exchange membrane.

The continuous holes may be formed along only one predetermined direction of the membrane body constituting the ion exchange membrane, but are preferably formed in both the longitudinal direction and the transverse direction of the membrane body from the viewpoint of exhibiting more stable electrolytic performance.

### [Production method]

A suitable example of a method for producing an ion exchange membrane includes a method including the following steps (1) to (6):
Step (1): the step of producing a fluorine-containing polymer having an ion exchange group or an ion exchange group precursor capable of forming an ion exchange group by hydrolysis,
Step (2): the step of weaving at least a plurality of reinforcement core materials, as required, and sacrifice yarns having a property of dissolving in an acid or an alkali, and forming continuous holes, to obtain a reinforcing material in which the sacrifice yarns are arranged between the reinforcement core materials adjacent to each other,
Step (3): the step of forming into a film the above fluorine-containing polymer having an ion exchange group or an ion exchange group precursor capable of forming an ion exchange group by hydrolysis,
Step (4): the step of embedding the above reinforcing materials, as required, in the above film to obtain a membrane body inside which the reinforcing materials are arranged,
Step (5): the step of hydrolyzing the membrane body obtained in the step (4) (hydrolysis step), and
Step (6): the step of providing a coating layer on the membrane body obtained in the step (5) (application step).

Hereinafter, each of the steps will be described in detail.

### Step (1): Step of producing fluorine-containing polymer

In the step (1), raw material monomers described in the first group to the third group above are used to produce a fluorine-containing polymer. In order to control the ion exchange capacity of the fluorine-containing polymer, the mixture ratio of the raw material monomers should be adjusted in the production of the fluorine-containing polymer forming the layers.

### Step (2): Step of producing reinforcing materials

The reinforcing material is a woven fabric obtained by weaving reinforcement yarns or the like. The reinforcing material is embedded in the membrane to thereby form reinforcement core materials. When an ion exchange membrane having continuous holes is formed, sacrifice yarns are additionally woven into the reinforcing material. The amount of the sacrifice yarns contained in this case is preferably 10 to 80% by mass, more preferably 30 to 70% by mass based on the entire reinforcing material. Weaving the sacrifice yarns can also prevent yarn slippage of the reinforcement core materials.

As the sacrifice yarns, which have solubility in the membrane production step or under an electrolysis environment, rayon, polyethylene terephthalate (PET), cellulose, polyamide, and the like are used. Monofilaments or multifilaments having a thickness of 20 to 50 deniers and comprising polyvinyl alcohol and the like are also preferred.

In the step (2), the aperture ratio, arrangement of the continuous holes, and the like can be controlled by adjusting the arrangement of the reinforcement core materials and the sacrifice yarns.

### Step (3): Step of film formation

In the step (3), the fluorine-containing polymer obtained in the step (1) is formed into a film by using an extruder. The film may be a single-layer configuration, a two-layer configuration of a sulfonic acid layer and a carboxylic acid layer as mentioned above, or a multilayer configuration of three layers or more.

Examples of the film forming method include the following:
a method in which a fluorine-containing polymer having a carboxylic acid group and a fluorine-containing polymer having a sulfonic acid group are separately formed into films; and
a method in which fluorine-containing polymer having a carboxylic acid group and a fluorine-containing polymer having a sulfonic acid group are coextruded into a composite film.

The number of each film may be more than one. Coextrusion of different films is preferred because of its contribution to an increase in the adhesive strength in the interface.

### Step (4): Step of obtaining membrane body

In the step (4), the reinforcing material obtained in the step (2) is embedded in the film obtained in the step (3) to provide a membrane body including the reinforcing material therein.

Preferable examples of the method for forming a membrane body include (i) a method in which a fluorine-containing polymer having a carboxylic acid group precursor (e.g., carboxylate functional group) (hereinafter, a layer comprising the same is referred to as the first layer) located on the cathode side and a fluorine-containing polymer having a sulfonic acid group precursor (e.g., sulfonyl fluoride functional group) (hereinafter, a layer comprising the same is referred to as the second layer) are formed into a film by a coextrusion method, and, by using a heat source and a vacuum source as required, a reinforcing material and the second layer/first layer composite film are laminated in this order on breathable heat-resistant release paper on a flat plate or drum having many pores on the surface thereof and integrated at a temperature at which each polymer melts while air among each of the layers was evacuated by reduced pressure; and (ii) a method in which, in addition to the second layer/first layer composite film, a fluorine-containing polymer having a sulfonic acid group precursor is singly formed into a film (the third layer) in advance, and, by using a heat source and a vacuum source as required, the third layer film, the reinforcement core materials, and the composite film comprising the second layer/first layer are laminated in this order on breathable heat-resistant release paper on a flat plate or drum having many pores on the surface thereof and integrated at a temperature at which each polymer melts while air among each of the layers was evacuated by reduced pressure.

Coextrusion of the first layer and the second layer herein contributes to an increase in the adhesive strength at the interface.

The method including integration under a reduced pressure is characterized by making the third layer on the reinforcing material thicker than that of a pressure-application press method. Further, since the reinforcing material is fixed on the inner surface of the membrane body, the method has a property of sufficiently retaining the mechanical strength of the ion exchange membrane.

The variations of lamination described here are exemplary, and coextrusion can be performed after a preferred lamination pattern (for example, the combination of layers) is appropriately selected considering the desired layer configuration of the membrane body and physical properties, and the like.

For the purpose of further improving the electric properties of the ion exchange membrane, it is also possible to additionally interpose a fourth layer comprising a fluorine-containing polymer having both a carboxylic acid group precursor and a sulfonic acid group precursor between the first layer and the second layer or to use a fourth layer comprising a fluorine-containing polymer having both a carboxylic acid group precursor and a sulfonic acid group precursor instead of the second layer.

The method for forming the fourth layer may be a method in which a fluorine-containing polymer having a carboxylic acid group precursor and a fluorine-containing polymer having a sulfonic acid group precursor are separately produced and then mixed or may be a method in which a monomer having a carboxylic acid group precursor and a monomer having a sulfonic acid group precursor are copolymerized.

When the fourth layer is used as a component of the ion exchange membrane, a coextruded film of the first layer and the fourth layer is formed, in addition to this, the third layer and the second layer are separately formed into films, and lamination may be performed by the method mentioned above. Alternatively, the three layers of the first layer/fourth layer/second layer may be simultaneously formed into a film by coextrusion.

In this case, the direction in which the extruded film flows is the MD. As mentioned above, it is possible to form a membrane body containing a fluorine-containing polymer having an ion exchange group on a reinforcing material.

Additionally, the ion exchange membrane preferably has protruded portions composed of the fluorine-containing polymer having a sulfonic acid group, that is, projections, on the surface side composed of the sulfonic acid layer. As a method for forming such projections, which is not particularly limited, a known method also can be employed including forming projections on a resin surface. A specific example of the method is a method of embossing the surface of the membrane body. For example, the above projections can be formed by using release paper embossed in advance when the composite film mentioned above, reinforcing material, and the like are integrated. In the case where projections are formed by embossing, the height and arrangement density of the projections can be controlled by controlling the emboss shape to be transferred (shape of the release paper).

### (5) Hydrolysis step

In the step (5), a step of hydrolyzing the membrane body obtained in the step (4) to convert the ion exchange group precursor into an ion exchange group (hydrolysis step) is performed.

In the step (5), it is also possible to form dissolution holes in the membrane body by dissolving and removing the sacrifice yarns included in the membrane body with acid or alkali. The sacrifice yarns may remain in the continuous holes without being completely dissolved and removed. The sacrifice yarns remaining in the continuous holes may be dissolved and removed by the electrolyte solution when the ion exchange membrane is subjected to electrolysis.

The sacrifice yarn has solubility in acid or alkali in the step of producing an ion exchange membrane or under an electrolysis environment. The sacrifice yarns are eluted out to thereby form continuous holes at corresponding sites.

The step (5) can be performed by immersing the membrane body obtained in the step (4) in a hydrolysis solution containing acid or alkali. An example of the hydrolysis solution that can be used is a mixed solution containing KOH and dimethyl sulfoxide (DMSO).

The mixed solution preferably contains KOH of 2.5 to 4.0 N and DMSO of 25 to 35% by mass.

The temperature for hydrolysis is preferably 70 to 100°C. The higher the temperature, the larger can be the apparent thickness. The temperature is more preferably 75 to 100°C.

The time for hydrolysis is preferably 10 to 120 minutes. The longer the time, the larger can be the apparent thickness. The time is more preferably 20 to 120 minutes.

The step of forming continuous holes by eluting the sacrifice yarn will be now described in more detail. Figures 25(a) and (b) are schematic views for explaining a method for forming the continuous holes of the ion exchange membrane.

Figures 25(a) and (b) show reinforcement yarns 52, sacrifice yarns 504a, and continuous holes 504 formed by the sacrifice yarns 504a only, omitting illustration of the other members such as a membrane body.

First, the reinforcement yarns 52 that are to constitute reinforcement core materials in the ion exchange membrane and the sacrifice yarns 504a for forming the continuous holes 504 in the ion exchange membrane are used as interwoven reinforcing materials. Then, in the step (5), the sacrifice yarns 504a are eluted to form the continuous holes 504.

The above method is simple because the method for interweaving the reinforcement yarns 52 and the sacrifice yarns 504a may be adjusted depending on the arrangement of the reinforcement core materials and continuous holes in the membrane body of the ion exchange membrane.

Figure 25(a) exemplifies the plain-woven reinforcing material in which the reinforcement yarns 52 and sacrifice yarns 504a are interwoven along both the longitudinal direction and the lateral direction in the paper, and the arrangement of the reinforcement yarns 52 and the sacrifice yarns 504a in the reinforcing material may be varied as required.

### (6) Application step

In the step (6), a coating layer can be formed by preparing a coating liquid containing inorganic material particles obtained by grinding raw ore or melting raw ore and a binder, applying the coating liquid onto the surface of the ion exchange membrane obtained in the step (5), and drying the coating liquid.

A preferable binder is a binder obtained by hydrolyzing a fluorine-containing polymer having an ion exchange group precursor with an aqueous solution containing dimethyl sulfoxide (DMSO) and potassium hydroxide (KOH) and then immersing the polymer in hydrochloric acid to replace the counterion of the ion exchange group by H+ (e.g., a fluorine-containing polymer having a carboxyl group or sulfo group). Thereby, the polymer is more likely to dissolve in water or ethanol mentioned below, which is preferable.

This binder is dissolved in a mixed solution of water and ethanol. The volume ratio between water and ethanol is preferably 10:1 to 1:10, more preferably 5:1 to 1:5, further preferably 2:1 to 1:2. The inorganic material particles are dispersed with a ball mill into the dissolution liquid thus obtained to thereby provide a coating liquid. In this case, it is also possible to adjust the average particle size and the like of the particles by adjusting the time and rotation speed during the dispersion. The preferable amount of the inorganic material particles and the binder to be blended is as mentioned above.

The concentration of the inorganic material particles and the binder in the coating liquid is not particularly limited, but a thin coating liquid is preferable. This enables uniform application onto the surface of the ion exchange membrane.

Additionally, a surfactant may be added to the dispersion when the inorganic material particles are dispersed. As the surfactant, nonionic surfactants are preferable, and examples thereof include HS-210, NS-210, P-210, and E-212 manufactured by NOF CORPORATION.

The coating liquid obtained is applied onto the surface of the ion exchange membrane by spray application or roll coating to thereby provide an ion exchange membrane.

### [Microporous membrane]

The microporous membrane of the present embodiment is not particularly limited as long as the membrane can be formed into a laminate with the electrode for electrolysis, as mentioned above. Various microporous membranes may be employed.

The porosity of the microporous membrane of the present embodiment is not particularly limited, but can be 20 to 90, for example, and is preferably 30 to 85. The above porosity can be calculated by the following formula: Porosity = (1 - (the weight of the membrane in a dried state) / (the weight calculated from the volume calculated from the thickness, width, and length of the membrane and the density of the membrane material)) × 100

The average pore size of the microporous membrane of the present embodiment is not particularly limited, and can be 0.01 µm to 10 µm, for example, preferably 0.05 µm to 5 µm. With respect to the average pore size, for example, the membrane is cut vertically to the thickness direction, and the section is observed with an FE-SEM. The average pore size can be obtained by measuring the diameter of about 100 pores observed and averaging the measurements.

The thickness of the microporous membrane of the present embodiment is not particularly limited, and can be 10 µm to 1000 µm, for example, preferably 50 µm to 600 µm. The above thickness can be measured by using a micrometer (manufactured by Mitutoyo Corporation) or the like, for example.

Specific examples of the microporous membrane as mentioned above include Zirfon Perl UTP 500 manufactured by Agfa (also referred to as a Zirfon membrane in the present embodiment) and those described in International Publication No. WO 2013-183584 and International Publication No. WO 2016-203701.

The reason why the laminate with the membrane of the present embodiment develops excellent electrolytic performance is presumed as follows. When the membrane and the electrode firmly adhere to each other by a method such as thermal compression, which is a conventional technique, the electrode sinks into the membrane to thereby physically adhere thereto. This adhesion portion inhibits sodium ions from migrating in the membrane to thereby markedly raise the voltage. Meanwhile, inhibition of migration of sodium ions in the membrane, which has been a problem in the conventional art, is eliminated by allowing the electrode for electrolysis to abut with a moderate adhesive force on the membrane or feed conductor, as in the present embodiment. According to the foregoing, when the membrane or feed conductor abuts on the electrode for electrolysis with a moderate adhesive force, the membrane or feed conductor and the electrode for electrolysis, despite of being an integrated piece, can develop excellent electrolytic performance.

### [Wound body]

The wound body of the present embodiment includes the laminate of the present embodiment. That is, the wound body of the present embodiment is obtained by winding the laminate of the present embodiment. Downsizing the laminate of the present embodiment by winding, like the wound body of the present embodiment, can further improve the handling property.

### [Electrolyzer]

The electrolyzer of the present embodiment includes the laminate of the present embodiment. Hereinafter, the case of performing common salt electrolysis by using an ion exchange membrane as the membrane is taken as an example, and one embodiment of the electrolyzer will be described in detail.

### [Electrolytic cell]

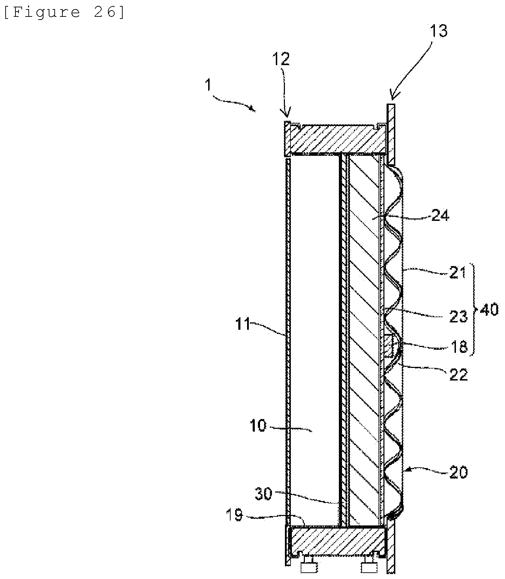

Figure 26 illustrates a cross-sectional view of an electrolytic cell 1.

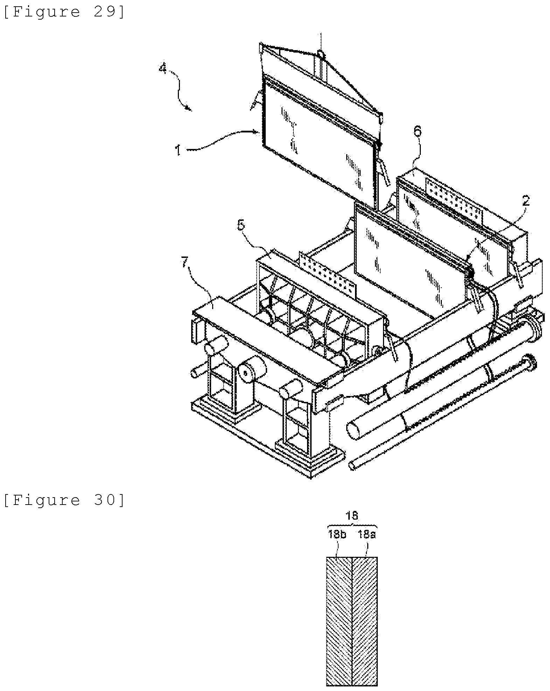

The electrolytic cell 1 comprises an anode chamber 10, a cathode chamber 20, a partition wall 30 placed between the anode chamber 10 and the cathode chamber 20, an anode 11 placed in the anode chamber 10, and a cathode 21 placed in the cathode chamber 20. As required, the electrolytic cell 1 has a substrate 18a and a reverse current absorbing layer 18b formed on the substrate 18a and may comprise a reverse current absorber 18 placed in the cathode chamber. The anode 11 and the cathode 21 belonging to the electrolytic cell 1 are electrically connected to each other. In other words, the electrolytic cell 1 comprises the following cathode structure. The cathode structure 40 comprises the cathode chamber 20, the cathode 21 placed in the cathode chamber 20, and the reverse current absorber 18 placed in the cathode chamber 20, the reverse current absorber 18 has the substrate 18a and the reverse current absorbing layer 18b formed on the substrate 18a, as shown in Figure 30, and the cathode 21 and the reverse current absorbing layer 18b are electrically connected. The cathode chamber 20 further has a collector 23, a support 24 supporting the collector, and a metal elastic body 22. The metal elastic body 22 is placed between the collector 23 and the cathode 21. The support 24 is placed between the collector 23 and the partition wall 30. The collector 23 is electrically connected to the cathode 21 via the metal elastic body 22. The partition wall 30 is electrically connected to the collector 23 via the support 24. Accordingly, the partition wall 30, the support 24, the collector 23, the metal elastic body 22, and the cathode 21 are electrically connected. The cathode 21 and the reverse current absorbing layer 18b are electrically connected. The cathode 21 and the reverse current absorbing layer may be directly connected or may be indirectly connected via the collector, the support, the metal elastic body, the partition wall, or the like. The entire surface of the cathode 21 is preferably covered with a catalyst layer for reduction reaction. The form of electrical connection may be a form in which the partition wall 30 and the support 24, the support 24 and the collector 23, and the collector 23 and the metal elastic body 22 are each directly attached and the cathode 21 is laminated on the metal elastic body 22. Examples of a method for directly attaching these constituent members to one another include welding and the like. Alternatively, the reverse current absorber 18, the cathode 21, and the collector 23 may be collectively referred to as a cathode structure 40.

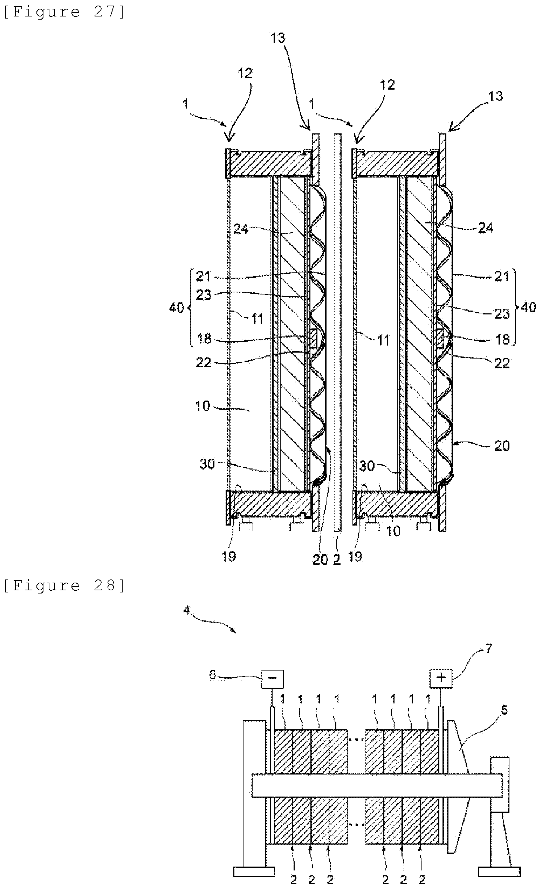

Figure 27 illustrates a cross-sectional view of two electrolytic cells 1 that are adjacent in the electrolyzer 4. Figure 28 shows an electrolyzer 4. Figure 29 shows a step of assembling the electrolyzer 4. As shown in Figure 27, an electrolytic cell 1, a cation exchange membrane 2, and an electrolytic cell 1 are arranged in series in the order mentioned. An ion exchange membrane 2 is arranged between the anode chamber of one electrolytic cell 1 among the two electrolytic cells that are adjacent in the electrolyzer and the cathode chamber of the other electrolytic cell 1. That is, the anode chamber 10 of the electrolytic cell 1 and the cathode chamber 20 of the electrolytic cell 1 adjacent thereto is separated by the cation exchange membrane 2. As shown in Figure 28, the electrolyzer 4 is composed of a plurality of electrolytic cells 1 connected in series via the ion exchange membrane 2. That is, the electrolyzer 4 is a bipolar electrolyzer comprising the plurality of electrolytic cells 1 arranged in series and ion exchange membranes 2 each arranged between adjacent electrolytic cells 1. As shown in Figure 29, the electrolyzer 4 is assembled by arranging the plurality of electrolytic cells 1 in series via the ion exchange membrane 2 and coupling the cells by means of a press device 5.

The electrolyzer 4 has an anode terminal 7 and a cathode terminal 6 to be connected to a power supply. The anode 11 of the electrolytic cell 1 located at farthest end among the plurality of electrolytic cells 1 coupled in series in the electrolyzer 4 is electrically connected to the anode terminal 7. The cathode 21 of the electrolytic cell located at the end opposite to the anode terminal 7 among the plurality of electrolytic cells 1 coupled in series in the electrolyzer 4 is electrically connected to the cathode terminal 6. The electric current during electrolysis flows from the side of the anode terminal 7, through the anode and cathode of each electrolytic cell 1, toward the cathode terminal 6. At the both ends of the coupled electrolytic cells 1, an electrolytic cell having an anode chamber only (anode terminal cell) and an electrolytic cell having a cathode chamber only (cathode terminal cell) may be arranged. In this case, the anode terminal 7 is connected to the anode terminal cell arranged at the one end, and the cathode terminal 6 is connected to the cathode terminal cell arranged at the other end.

In the case of electrolyzing brine, brine is supplied to each anode chamber 10, and pure water or a low-concentration sodium hydroxide aqueous solution is supplied to each cathode chamber 20. Each liquid is supplied from an electrolyte solution supply pipe (not shown in Figure), through an electrolyte solution supply hose (not shown in Figure), to each electrolytic cell 1. The electrolyte solution and products from electrolysis are recovered from an electrolyte solution recovery pipe (not shown in Figure). During electrolysis, sodium ions in the brine migrate from the anode chamber 10 of the one electrolytic cell 1, through the ion exchange membrane 2, to the cathode chamber 20 of the adjacent electrolytic cell 1. Thus, the electric current during electrolysis flows in the direction in which the electrolytic cells 1 are coupled in series. That is, the electric current flows, through the cation exchange membrane 2, from the anode chamber 10 toward the cathode chamber 20. As the brine is electrolyzed, chlorine gas is generated on the side of the anode 11, and sodium hydroxide (solute) and hydrogen gas are generated on the side of the cathode 21.

### (Anode chamber)

The anode chamber 10 has the anode 11 or anode feed conductor 11. When the electrode for electrolysis of the present embodiment is inserted to the anode side, 11 serves as the anode feed conductor. When the electrode for electrolysis of the present embodiment is not inserted to the anode side, 11 serves as the anode. The anode chamber 10 has an anode-side electrolyte solution supply unit that supplies an electrolyte solution to the anode chamber 10, a baffle plate that is arranged above the anode-side electrolyte solution supply unit so as to be substantially parallel or oblique to the partition wall 30, and an anode-side gas liquid separation unit arranged above the baffle plate to separate gas from the electrolyte solution including the gas mixed.

### (Anode)

When the electrode for electrolysis of the present embodiment is not inserted to the anode side, the anode 11 is provided in the frame of the anode chamber 10. As the anode 11, a metal electrode such as so-called DSA(R) can be used. DSA is an electrode including a titanium substrate of which surface is covered with an oxide comprising ruthenium, iridium, and titanium as components.

As the form, any of a perforated metal, nonwoven fabric, foamed metal, expanded metal, metal porous foil formed by electroforming, so-called woven mesh produced by knitting metal lines, and the like can be used.

### (Anode feed conductor)

When the electrode for electrolysis of the present embodiment is inserted to the anode side, the anode feed conductor 11 is provided in the frame of the anode chamber 10. As the anode feed conductor 11, a metal electrode such as so-called DSA(R) can be used, and titanium having no catalyst coating can be also used. Alternatively, DSA having a thinner catalyst coating can be also used. Further, a used anode can be also used.

As the form, any of a perforated metal, nonwoven fabric, foamed metal, expanded metal, metal porous foil formed by electroforming, so-called woven mesh produced by knitting metal lines, and the like can be used.

### (Anode-side electrolyte solution supply unit)

The anode-side electrolyte solution supply unit, which supplies the electrolyte solution to the anode chamber 10, is connected to the electrolyte solution supply pipe. The anode-side electrolyte solution supply unit is preferably arranged below the anode chamber 10. As the anode-side electrolyte solution supply unit, for example, a pipe on the surface of which aperture portions are formed (dispersion pipe) and the like can be used. Such a pipe is more preferably arranged along the surface of the anode 11 and parallel to the bottom 19 of the electrolytic cell. This pipe is connected to an electrolyte solution supply pipe (liquid supply nozzle) that supplies the electrolyte solution into the electrolytic cell 1. The electrolyte solution supplied from the liquid supply nozzle is conveyed with a pipe into the electrolytic cell 1 and supplied from the aperture portions provided on the surface of the pipe to inside the anode chamber 10. Arranging the pipe along the surface of the anode 11 and parallel to the bottom 19 of the electrolytic cell is preferable because the electrolyte solution can be uniformly supplied to inside the anode chamber 10.

### (Anode-side gas liquid separation unit)

The anode-side gas liquid separation unit is preferably arranged above the baffle plate. The anode-side gas liquid separation unit has a function of separating produced gas such as chlorine gas from the electrolyte solution during electrolysis. Unless otherwise specified, above means the upper direction in the electrolytic cell 1 in Figure 26, and below means the lower direction in the electrolytic cell 1 in Figure 26.

During electrolysis, produced gas generated in the electrolytic cell 1 and the electrolyte solution form a mixed phase (gas-liquid mixed phase), which is then emitted out of the system. Subsequently, pressure fluctuations inside the electrolytic cell 1 cause vibration, which may result in physical damage of the ion exchange membrane. In order to prevent this event, the electrolytic cell 1 of the present embodiment is preferably provided with an anode-side gas liquid separation unit to separate the gas from the liquid. The anode-side gas liquid separation unit is preferably provided with a defoaming plate to eliminate bubbles. When the gas-liquid mixed phase flow passes through the defoaming plate, bubbles burst to thereby enable the electrolyte solution and the gas to be separated. As a result, vibration during electrolysis can be prevented.

### (Baffle plate)

The baffle plate is preferably arranged above the anode-side electrolyte solution supply unit and arranged substantially in parallel with or obliquely to the partition wall 30. The baffle plate is a partition plate that controls the flow of the electrolyte solution in the anode chamber 10. When the baffle plate is provided, it is possible to cause the electrolyte solution (brine or the like) to circulate internally in the anode chamber 10 to thereby make the concentration uniform. In order to cause internal circulation, the baffle plate is preferably arranged so as to separate the space in proximity to the anode 11 from the space in proximity to the partition wall 30. From such a viewpoint, the baffle plate is preferably placed so as to be opposed to the surface of the anode 11 and to the surface of the partition wall 30. In the space in proximity to the anode partitioned by the baffle plate, as electrolysis proceeds, the electrolyte solution concentration (brine concentration) is lowered, and produced gas such as chlorine gas is generated. This results in a difference in the gas-liquid specific gravity between the space in proximity to anode 11 and the space in proximity to the partition wall 30 partitioned by the baffle plate. By use of the difference, it is possible to promote the internal circulation of the electrolyte solution in the anode chamber 10 to thereby make the concentration distribution of the electrolyte solution in the anode chamber 10 more uniform.

Although not shown in Figure 26, a collector may be additionally provided inside the anode chamber 10. The material and configuration of such a collector may be the same as those of the collector of the cathode chamber mentioned below. In the anode chamber 10, the anode 11 per se may also serve as the collector.

### (Partition wall)

The partition wall 30 is arranged between the anode chamber 10 and the cathode chamber 20. The partition wall 30 may be referred to as a separator, and the anode chamber 10 and the cathode chamber 20 are partitioned by the partition wall 30. As the partition wall 30, one known as a separator for electrolysis can be used, and an example thereof includes a partition wall formed by welding a plate comprising nickel to the cathode side and a plate comprising titanium to the anode side.

### (Cathode chamber)

In the cathode chamber 20, when the electrode for electrolysis of the present embodiment is inserted to the cathode side, 21 serves as a cathode feed conductor. When the electrode for electrolysis of the present embodiment is not inserted to the cathode side, 21 serves as a cathode. When a reverse current absorber is included, the cathode or cathode feed conductor 21 is electrically connected to the reverse current absorber. The cathode chamber 20, similarly to the anode chamber 10, preferably has a cathode-side electrolyte solution supply unit and a cathode-side gas liquid separation unit. Among the components constituting the cathode chamber 20, components similar to those constituting the anode chamber 10 will be not described.

### (Cathode)

When the electrode for electrolysis of the present embodiment is not inserted to the cathode side, a cathode 21 is provided in the frame of the cathode chamber 20. The cathode 21 preferably has a nickel substrate and a catalyst layer that covers the nickel substrate. Examples of the components of the catalyst layer on the nickel substrate include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. The cathode 21 may be subjected to a reduction treatment, as required. As the substrate of the cathode 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

### (Cathode feed conductor)

When the electrode for electrolysis of the present embodiment is inserted to the cathode side, a cathode feed conductor 21 is provided in the frame of the cathode chamber 20. The cathode feed conductor 21 may be covered with a catalytic component. The catalytic component may be a component that is originally used as the cathode and remains. Examples of the components of the catalyst layer include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. Alternatively, nickel, nickel alloys, and nickel-plated iron or stainless, having no catalyst coating, may be used. As the substrate of the cathode feed conductor 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

### (Reverse current absorbing layer)

A material having a redox potential less noble than the redox potential of the element for the catalyst layer of the cathode mentioned above may be selected as a material for the reverse current absorbing layer. Examples thereof include nickel and iron.

### (Collector)

The cathode chamber 20 preferably comprises the collector 23. The collector 23 improves current collection efficiency. In the present embodiment, the collector 23 is a porous plate and is preferably arranged in substantially parallel to the surface of the cathode 21.

The collector 23 preferably comprises an electrically conductive metal such as nickel, iron, copper, silver, and titanium. The collector 23 may be a mixture, alloy, or composite oxide of these metals. The collector 23 may have any form as long as the form enables the function of the collector and may have a plate or net form.

### (Metal elastic body)

Placing the metal elastic body 22 between the collector 23 and the cathode 21 presses each cathode 21 of the plurality of electrolytic cells 1 connected in series onto the ion exchange membrane 2 to reduce the distance between each anode 11 and each cathode 21. Then, it is possible to lower the voltage to be applied entirely across the plurality of electrolytic cells 1 connected in series. Lowering of the voltage enables the power consumption to be reduced. With the metal elastic body 22 placed, the pressing pressure caused by the metal elastic body 22 enables the electrode for electrolysis to be stably maintained in place when the laminate including the electrode for electrolysis according to the present embodiment is placed in the electrolytic cell.

As the metal elastic body 22, spring members such as spiral springs and coils and cushioning mats may be used. As the metal elastic body 22, a suitable one may be appropriately employed, in consideration of a stress to press the ion exchange membrane and the like. The metal elastic body 22 may be provided on the surface of the collector 23 on the side of the cathode chamber 20 or may be provided on the surface of the partition wall on the side of the anode chamber 10. Both the chambers are usually partitioned such that the cathode chamber 20 becomes smaller than the anode chamber 10. Thus, from the viewpoint of the strength of the frame and the like, the metal elastic body 22 is preferably provided between the collector 23 and the cathode 21 in the cathode chamber 20. The metal elastic body 23 preferably comprises an electrically conductive metal such as nickel, iron, copper, silver, and titanium.

### (Support)

The cathode chamber 20 preferably comprises the support 24 that electrically connects the collector 23 to the partition wall 30. This can achieve an efficient current flow.

The support 24 preferably comprises an electrically conductive metal such as nickel, iron, copper, silver, and titanium. The support 24 may have any shape as long as the support can support the collector 23 and may have a rod, plate, or net shape. The support 24 has a plate shape, for example. A plurality of supports 24 are arranged between the partition wall 30 and the collector 23. The plurality of supports 24 are aligned such that the surfaces thereof are in parallel to each other. The supports 24 are arranged substantially perpendicular to the partition wall 30 and the collector 23.

### (Anode side gasket and cathode side gasket)

The anode side gasket is preferably arranged on the frame surface constituting the anode chamber 10. The cathode side gasket is preferably arranged on the frame surface constituting the cathode chamber 20. Electrolytic cells are connected to each other such that the anode side gasket included in one electrolytic cell and the cathode side gasket of an electrolytic cell adjacent to the cell sandwich the ion exchange membrane 2 (see Figures 26 and 27). These gaskets can impart airtightness to connecting points when the plurality of electrolytic cells 1 is connected in series via the ion exchange membrane 2.

The gaskets form a seal between the ion exchange membrane and electrolytic cells. Specific examples of the gaskets include picture frame-like rubber sheets at the center of which an aperture portion is formed. The gaskets are required to have resistance against corrosive electrolyte solutions or produced gas and be usable for a long period. Thus, in respect of chemical resistance and hardness, vulcanized products and peroxide-crosslinked products of ethylene-propylene-diene rubber (EPDM rubber) and ethylene-propylene rubber (EPM rubber) are usually used as the gaskets. Alternatively, gaskets of which region to be in contact with liquid (liquid contact portion) is covered with a fluorine-containing resin such as polytetrafluoroethylene (PTFE) and tetrafluoroethylene-perfluoroalkyl vinyl ether copolymers (PFA) may be employed as required. These gaskets each may have an aperture portion so as not to inhibit the flow of the electrolyte solution, and the shape of the aperture portion is not particularly limited. For example, a picture frame-like gasket is attached with an adhesive or the like along the peripheral edge of each aperture portion of the anode chamber frame constituting the anode chamber 10 or the cathode chamber frame constituting the cathode chamber 20. Then, for example, in the case where the two electrolytic cells 1 are connected via the ion exchange membrane 2 (see Figure 27), each electrolytic cell 1 onto which the gasket is attached should be tightened via ion exchange membrane 2. This tightening can prevent the electrolyte solution, alkali metal hydroxide, chlorine gas, hydrogen gas, and the like generated from electrolysis from leaking out of the electrolytic cells 1.

### (Ion exchange membrane)

The ion exchange membrane 2 is as described in the section of the ion exchange membrane described above.

### (Water electrolysis)

The electrolyzer of the present embodiment, as an electrolyzer in the case of electrolyzing water, has a configuration in which the ion exchange membrane in an electrolyzer for use in the case of electrolyzing common salt mentioned above is replaced by a microporous membrane. The raw material to be supplied, which is water, is different from that for the electrolyzer in the case of electrolyzing common salt mentioned above. As for the other components, components similar to that of the electrolyzer in the case of electrolyzing common salt can be employed also in the electrolyzer in the case of electrolyzing water. Since chlorine gas is generated in the anode chamber in the case of common salt electrolysis, titanium is used as the material of the anode chamber, but in the case of water electrolysis, only oxygen gas is generated in the anode chamber. Thus, a material identical to that of the cathode chamber can be used. An example thereof is nickel. For anode coating, catalyst coating for oxygen generation is suitable. Examples of the catalyst coating include metals, oxides, and hydroxides of the platinum group metals and transition metal group metals. For example, elements such as platinum, iridium, palladium, ruthenium, nickel, cobalt, and iron can be used.

### (Application of laminate)

The laminate of the present embodiment can improve the work efficiency during electrode renewing in an electrolyzer and further, can exhibit excellent electrolytic performance also after renewing as mentioned above. In other words, the laminate of the present embodiment can be suitably used as a laminate for replacement of a member of an electrolyzer. A laminate to be used in such an application is specifically referred to as a "membrane electrode assembly".

### (Package)

The laminate of the present embodiment is preferably transported or the like while enclosed in a packaging material. That is, the package of the present embodiment comprises the laminate of the present embodiment and a packaging material that packages the laminate. The package of the present embodiment, configured as described above, can prevent adhesion of stain and damage that may occur during transport or the like of the laminate of the present embodiment. When used for member replacement of the electrolyzer, the laminate is particularly preferably transported or the like as the package of the present embodiment. As the packaging material of the present embodiment, which is not particularly limited, known various packaging materials can be employed. Alternatively, the package of the present embodiment can be produced by, for example, a method including packaging the laminate of the present embodiment with a clean packaging material followed by encapsulation or the like, although not limited thereto.

### <Third embodiment> (not in accordance with the invention as claimed)

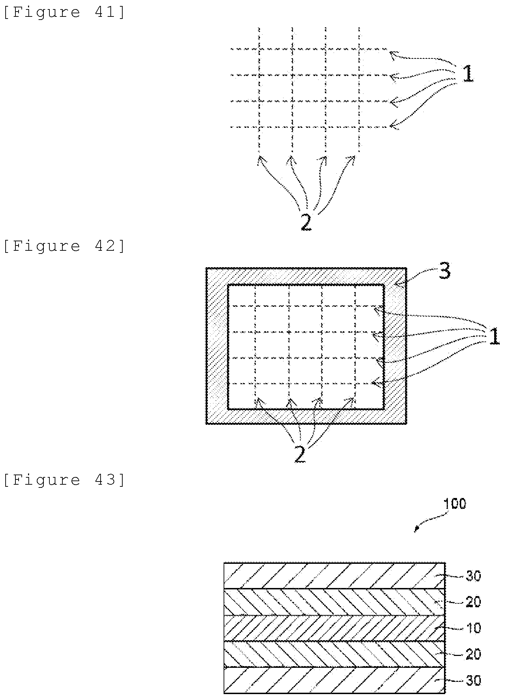

Here, a third embodiment of the present invention will be described in detail with reference to Figures 43 to 62.

### [Laminate]

The laminate of the third embodiment (hereinafter, in the section of <Third embodiment>, simply referred to as "the present embodiment") has a membrane and an electrode for electrolysis fixed at least one region of the surface of the "membrane " (hereinafter, simply also referred to as a "fixed region"), and the proportion of the region on the surface of the membrane is more than 0% and less than 93%. The laminate of the present embodiment, as configured as described above, can improve the work efficiency during electrode renewing in an electrolyzer and further, can exhibit excellent electrolytic performance also after renewing.

That is, according to the laminate of the present embodiment, on renewing the electrode, the electrode can be renewed by a work as simple as renewing the membrane, without a complicated work such as stripping off the existing electrode fixed on the electrolytic cell, and thus, the work efficiency is markedly improved.

Further, according to the laminate of the present embodiment, it is possible to maintain the electrolytic performance of the existing electrolytic cell comparable to those of a new electrode or improve the electrolytic performance. Thus, the electrode fixed on the existing electrolytic cell and serving as an anode and/or a cathode is only required to serve as a feed conductor. Thus, it may be also possible to markedly reduce or eliminate catalyst coating. The feed conductor herein means a degraded electrode (i.e., the existing electrode), an electrode having no catalyst coating, and the like.

### [Electrode for electrolysis]

The electrode for electrolysis in the present embodiment is not particularly limited as long as the electrode is an electrode to be used for electrolysis, and preferably has an area of the surface opposed to the membrane of the electrode for electrolysis (corresponds to an area of the conducting surface S2 mentioned below) of 0.01 m² or more. The "surface opposed to the membrane" means the surface on which the membrane is located of the surfaces possessed by the electrode for electrolysis. That is, the surface opposed to the membrane in the electrode for electrolysis also can be the surface that abuts on the surface of the membrane. When the area of the surface opposed to the membrane in the electrode for electrolysis is 0.01 m² or more, sufficient productivity can be achieved, and especially when industrial electrolysis is performed, sufficient productivity tends to be obtained. In this manner, from the viewpoint of achieving sufficient productivity and achieving practicality for a laminate to be used in renewing of the electrolytic cell, the area of the surface opposed to the membrane in the electrode for electrolysis is more preferably 0.1 m² or more, further preferably 1 m² or more. The area can be measured by, for example, a method described in Examples.

The electrode for electrolysis in the present embodiment has a force applied per unit mass·unit area of preferably 1.6 N/(mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less from the viewpoint of enabling a good handling property to be provided and having a good adhesive force to a membrane such as an ion exchange membrane and a microporous membrane, a feed conductor (a degraded electrode and an electrode having no catalyst coating), and the like. The force applied is even still more preferably 1.1 N/mg·cm² or less, further still more preferably 1.10 N/mg·cm² or less, particularly preferably 1.0 N/mg·cm² or less, especially preferably 1.00 N/mg·cm² or less.

From the viewpoint of further improving the electrolytic performance, the force is preferably more than 0.005 N/(mg·cm²), more preferably 0.08 N/(mg·cm²) or more, further preferably 0.1 N/mg·cm² or more, further more preferably 0.14 N/(mg·cm²) or more. The force is further more preferably 0.2 N/(mg·cm²) or more from the viewpoint of further facilitating handling in a large size (e.g., a size of 1.5 m × 2.5 m).

The force applied described above can be within the range described above by appropriately adjusting an opening ratio described below, thickness of the electrode, arithmetic average surface roughness, and the like, for example. More specifically, for example, a higher opening ratio tends to lead to a smaller force applied, and a lower opening ratio tends to lead to a larger force applied.

The mass per unit is preferably 48 mg/cm² or less, more preferably 30 mg/cm² or less, further preferably 20 mg/cm² or less from the viewpoint of enabling a good handling property to be provided, having a good adhesive force to a membrane such as an ion exchange membrane and a microporous membrane, a degraded electrode, a feed conductor having no catalyst coating, and of economy, and furthermore is 15 mg/cm² or less from the comprehensive viewpoint including handling property, adhesion, and economy. The lower limit value is not particularly limited but is of the order of 1 mg/cm², for example.

The mass per unit area described above can be within the range described above by appropriately adjusting an opening ratio described below, thickness of the electrode, and the like, for example. More specifically, for example, when the thickness is constant, a higher opening ratio tends to lead to a smaller mass per unit area, and a lower opening ratio tends to lead to a larger mass per unit area.

The force applied can be measured by the following method (i) or (ii). The value obtained by the measurement of the method (i) (also referred to as "the force applied (1)") and the value obtained by the measurement of the method (ii) (also referred to as "the force applied (2)") may be the same or different, and either of the values is preferably less than 1.5 N/mg·cm².

### [Method (i)]

A nickel plate obtained by blast processing with alumina of grain-size number 320 (thickness 1.2 mm, 200 mm square), an ion exchange membrane which is obtained by applying inorganic material particles and a binder to both surfaces of a membrane of a perfluorocarbon polymer into which an ion exchange group is introduced (170 mm square), and a sample of electrode (130 mm square) are laminated in this order. After this laminate is sufficiently immersed in pure water, excess water deposited on the surface of the laminate is removed to obtain a sample for measurement. The arithmetic average surface roughness (Ra) of the nickel plate after the blast treatment is 0.5 to 0.8 µm. The specific method for calculating the arithmetic average surface roughness (Ra) is as described in Examples.

Under conditions of a temperature of 23±2°C and a relative humidity of 30±5%, only the sample of electrode in this sample for measurement is raised in a vertical direction at 10 mm/minute using a tensile and compression testing machine, and the load when the sample of electrode is raised by 10 mm in a vertical direction is measured. This measurement is repeated three times, and the average value is calculated.

This average value is divided by the area of the overlapping portion of the sample of electrode and the ion exchange membrane and the mass of the portion overlapping the ion exchange membrane in the sample of electrode to calculate the force applied per unit mass·unit area (1) (N/mg·cm²).

The force applied per unit mass·unit area (1) obtained by the method (i) is preferably 1.6 N/(mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less from the viewpoint of enabling a good handling property to be provided and having a good adhesive force to a membrane such as an ion exchange membrane and a microporous membrane, a degraded electrode, and a feed conductor having no catalyst coating. The force applied is even still more preferably 1.1 N/mg·cm² or less, further still more preferably 1.10 N/mg·cm² or less, particularly preferably 1.0 N/mg·cm² or less, especially preferably 1.00 N/mg·cm² or less. The force is preferably more than 0.005 N/(mg·cm²), more preferably 0.08 N/(mg·cm²) or more, further preferably 0.1 N/(mg·cm²) or more from the viewpoint of further improving the electrolytic performance, and furthermore, is further more preferably 0.14 N/(mg·cm²), still more preferably 0.2 N/(mg·cm²) or more from the viewpoint of further facilitating handling in a large size (e.g., a size of 1.5 m × 2.5 m).

### [Method (ii)]

A nickel plate obtained by blast processing with alumina of grain-size number 320 (thickness 1.2 mm, 200 mm square, a nickel plate similar to that of the method (i) above) and a sample of electrode (130 mm square) are laminated in this order. After this laminate is sufficiently immersed in pure water, excess water deposited on the surface of the laminate is removed to obtain a sample for measurement. Under conditions of a temperature of 23±2°C and a relative humidity of 30±5%, only the sample of electrode in this sample for measurement is raised in a vertical direction at 10 mm/minute using a tensile and compression testing machine, and the load when the sample of electrode is raised by 10 mm in a vertical direction is measured. This measurement is repeated three times, and the average value is calculated.

This average value is divided by the area of the overlapping portion of the sample of electrode and the nickel plate and the mass of the sample of electrode in the portion overlapping the nickel plate to calculate the adhesive force per unit mass·unit area (2) (N/mg·cm²).

The force applied per unit mass·unit area (2) obtained by the method (ii) is preferably 1.6 N/(mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less from the viewpoint of enabling a good handling property to be provided and having a good adhesive force to a membrane such as an ion exchange membrane and a microporous membrane, a degraded electrode, and a feed conductor having no catalyst coating. The force applied is even still more preferably 1.1 N/mg·cm² or less, further still more preferably 1.10 N/mg·cm² or less, particularly preferably 1.0 N/mg·cm² or less, especially preferably 1.00 N/mg·cm² or less. Further, the force is preferably more than 0.005 N/(mg·cm²), more preferably 0.08 N/(mg·cm²) or more, further preferably 0.1 N/(mg·cm²) or more from the viewpoint of further improving the electrolytic performance, and is further more preferably 0.14 N/(mg·cm²) or more from the viewpoint of further facilitating handling in a large size (e.g., a size of 1.5 m × 2.5 m).

The electrode for electrolysis in the present embodiment preferably includes a substrate for electrode for electrolysis and a catalyst layer. The thickness of the substrate for electrode for electrolysis (gauge thickness) is, but is not particularly limited to, preferably 300 µm or less, more preferably 205 µm or less, further preferably 155 µm or less, further more preferably 135 µm or less, even further more preferably 125 µm or less, still more preferably 120 µm or less, even still more preferably 100 µm or less from the viewpoint of enabling a good handling property to be provided, having a good adhesive force to a membrane such as an ion exchange membrane and a microporous membrane, a degraded electrode (feed conductor), and an electrode (feed conductor) having no catalyst coating, being capable of being suitably rolled in a roll and satisfactorily folded, and facilitating handling in a large size (e.g., a size of 1.5 m × 2.5 m), and is further still more preferably 50 µm or less from the viewpoint of a handling property and economy. The lower limit value is not particularly limited, but is 1 µm, for example, preferably 5 µm, more preferably 15 µm.

The proportion measured by the following method (2) of the electrode for electrolysis in the present embodiment is not particularly limited, but is preferably 90% or more, more preferably 92% or more from the viewpoint of enabling a good handling property to be provided and having a good adhesive force to a membrane such as an ion exchange membrane and a microporous membrane, a degraded electrode (feed conductor), and an electrode (feed conductor) having no catalyst coating, and further preferably 95% or more from the viewpoint of further facilitating handling in a large size (e.g., a size of 1.5 m × 2.5 m). The upper limit value is 100%.

### [Method (2)]

An ion exchange membrane (170 mm square) and a sample of electrode (130 mm square) are laminated in this order. The laminate is placed on a curved surface of a polyethylene pipe (outer diameter: 280 mm) such that the sample of electrode in this laminate is positioned outside under conditions of a temperature of 23±2°C and a relative humidity of 30±5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode is measured.

The proportion measured by the following method (3) of the electrode for electrolysis in the present embodiment is not particularly limited, but is preferably 75% or more, more preferably 80% or more from the viewpoint of enabling a good handling property to be provided, having a good adhesive force to a membrane such as an ion exchange membrane and a microporous membrane, a degraded electrode (feed conductor), and an electrode (feed conductor) having no catalyst coating, and being capable of being suitably rolled in a roll and satisfactorily folded, and is further preferably 90% or more from the viewpoint of further facilitating handling in a large size (e.g., a size of 1.5 m × 2.5 m). The upper limit value is 100%.

### [Method (3)]

An ion exchange membrane (170 mm square) and a sample of electrode (130 mm square) are laminated in this order. The laminate is placed on a curved surface of a polyethylene pipe (outer diameter: 145 mm) such that the sample of electrode in this laminate is positioned outside under conditions of a temperature of 23±2°C and a relative humidity of 30±5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode is measured.

The electrode for electrolysis in the present embodiment preferably has a porous structure and an opening ratio or void ratio of 5 to 90% or less from the viewpoint of enabling a good handling property to be provided, having a good adhesive force to a membrane such as an ion exchange membrane and a microporous membrane, a degraded electrode (feed conductor), and an electrode (feed conductor) having no catalyst coating, and preventing accumulation of gas to be generated during electrolysis, although not particularly limited. The opening ratio is more preferably 10 to 80% or less, further preferably 20 to 75%.

The opening ratio is a proportion of the opening portions per unit volume. The calculation method may differ depending on that opening portions in submicron size are considered or that only visible openings are considered. In the present embodiment, a volume V was calculated from the values of the gauge thickness, width, and length of the electrode, and further, a weight W was measured to thereby calculate an opening ratio A by the following formula. $A = \left(1-\left(W/\left(V\times ρ\right)\right)\times 100\right.$

ρ is the density of the electrode material (g/cm³). For example, ρ of nickel is 8.908 g/cm³, and ρ of titanium is 4.506 g/cm³. The opening ratio is appropriately adjusted by changing the area of metal to be perforated per unit area in the case of perforated metal, changing the values of the SW (short diameter), LW (long diameter), and feed in the case of expanded metal, changing the line diameter of metal fiber and mesh number in the case of mesh, changing the pattern of a photoresist to be used in the case of electroforming, changing the metal fiber diameter and fiber density in the case of nonwoven fabric, changing the mold for forming voids in the case of foamed metal, or the like.

Hereinbelow, one aspect of the electrode for electrolysis in the present embodiment will be described.

The electrode for electrolysis according to the present embodiment preferably includes a substrate for electrode for electrolysis and a catalyst layer. The catalyst layer may be composed of a plurality of layers as shown below or may be a single-layer configuration.

As shown in Figure 43, an electrode for electrolysis 100 according to the present embodiment includes a substrate for electrode for electrolysis 10 and a pair of first layers 20 with which both the surfaces of the substrate for electrode for electrolysis 10 are covered. The entire substrate for electrode for electrolysis 10 is preferably covered with the first layers 20. This covering is likely to improve the catalyst activity and durability of the electrode for electrolysis. One first layer 20 may be laminated only on one surface of the substrate for electrode for electrolysis 10.

Also as shown in Figure 43, the surfaces of the first layers 20 may be covered with second layers 30. The entire first layers 20 are preferably covered by the second layers 30. Alternatively, one second layer 30 may be laminated only one surface of the first layer 20.

### (Substrate for electrode for electrolysis)

As the substrate for electrode for electrolysis 10, for example, nickel, nickel alloys, stainless steel, or valve metals including titanium can be used, although not limited thereto. The substrate 10 preferably contains at least one element selected from nickel (Ni) and titanium (Ti).

When stainless steel is used in an alkali aqueous solution of a high concentration, iron and chromium are eluted and the electrical conductivity of stainless steel is of the order of one-tenth of that of nickel. In consideration of the foregoing, a substrate containing nickel (Ni) is preferable as the substrate for electrode for electrolysis.

Alternatively, when the substrate for electrode for electrolysis 10 is used in a salt solution of a high concentration near the saturation under an atmosphere in which chlorine gas is generated, the material of the substrate for electrode 10 is also preferably titanium having high corrosion resistance.

The form of the substrate for electrode for electrolysis 10 is not particularly limited, and a form suitable for the purpose can be selected. As the form, any of a perforated metal, nonwoven fabric, foamed metal, expanded metal, metal porous foil formed by electroforming, so-called woven mesh produced by knitting metal lines, and the like can be used. Among these, a perforated metal or expanded metal is preferable. Electroforming is a technique for producing a metal thin film having a precise pattern by using photolithography and electroplating in combination. It is a method including forming a pattern on a substrate with a photoresist and electroplating the portion not protected by the resist to provide a metal thin film.

As for the form of the substrate for electrode for electrolysis, a suitable specification depends on the distance between the anode and the cathode in the electrolyzer. In the case where the distance between the anode and the cathode is finite, an expanded metal or perforated metal form can be used, and in the case of a so-called zero-gap base electrolyzer, in which the ion exchange membrane is in contact with the electrode, a woven mesh produced by knitting thin lines, wire mesh, foamed metal, metal nonwoven fabric, expanded metal, perforated metal, metal porous foil, and the like can be used, although not limited thereto.

Examples of the substrate for electrode for electrolysis 10 include a metal porous foil, a wire mesh, a metal nonwoven fabric, a perforated metal, an expanded metal, and a foamed metal.

As a plate material before processed into a perforated metal or expanded metal, rolled plate materials and electrolytic foils are preferable. An electrolytic foil is preferably further subjected to a plating treatment by use of the same element as the base material thereof, as the post-treatment, to thereby form asperities on one or both of the surfaces.

The thickness of the substrate for electrode for electrolysis 10 is, as mentioned above, preferably 300 µm or less, more preferably 205 µm or less, further preferably 155 µm or less, further more preferably 135 µm or less, even further more preferably 125 µm or less, still more preferably 120 µm or less, even still more preferably 100 µm or less, and further still more preferably 50 µm or less from the viewpoint of a handling property and economy. The lower limit value is not particularly limited, but is 1 µm, for example, preferably 5 µm, more preferably 15 µm.

In the substrate for electrode for electrolysis, the residual stress during processing is preferably relaxed by annealing the substrate for electrode for electrolysis in an oxidizing atmosphere. It is preferable to form asperities using a steel grid, alumina powder, or the like on the surface of the substrate for electrode for electrolysis followed by an acid treatment to increase the surface area thereof, in order to improve the adhesion to a catalyst layer with which the surface is covered. Alternatively, it is preferable to give a plating treatment by use of the same element as the substrate to increase the surface area.

To bring the first layer 20 into close contact with the surface of the substrate for electrode for electrolysis 10, the substrate for electrode for electrolysis 10 is preferably subjected to a treatment of increasing the surface area. Examples of the treatment of increasing the surface area include a blast treatment using a cut wire, steel grid, alumina grid or the like, an acid treatment using sulfuric acid or hydrochloric acid, and a plating treatment using the same element to that of the substrate. The arithmetic average surface roughness (Ra) of the substrate surface is not particularly limited, but is preferably 0.05 µm to 50 µm, more preferably 0.1 to 10 µm, further preferably 0.1 to 8 µm.

Next, a case where the electrode for electrolysis in the present embodiment is used as an anode for common salt electrolysis will be described.

### (First layer)

In Figure 43, a first layer 20 as a catalyst layer contains at least one of ruthenium oxides, iridium oxides, and titanium oxides. Examples of the ruthenium oxide include RuO₂. Examples of the iridium oxide include IrO₂. Examples of the titanium oxide include TiO₂. The first layer 20 preferably contains two oxides: a ruthenium oxide and a titanium oxide or three oxides: a ruthenium oxide, an iridium oxide, and a titanium oxide. This makes the first layer 20 more stable and additionally improves the adhesion with the second layer 30.

When the first layer 20 contains two oxides: a ruthenium oxide and a titanium oxide, the first layer 20 contains preferably 1 to 9 mol, more preferably 1 to 4 mol of the titanium oxide based on 1 mol of the ruthenium oxide contained in the first layer 20. With the composition ratio of the two oxides in this range, the electrode for electrolysis 100 exhibits excellent durability.

When the first layer 20 contains three oxides: a ruthenium oxide, an iridium oxide, and a titanium oxide, the first layer 20 contains preferably 0.2 to 3 mol, more preferably 0.3 to 2.5 mol of the iridium oxide based on 1 mol of the ruthenium oxide contained in the first layer 20. The first layer 20 contains preferably 0.3 to 8 mol, more preferably 1 to 7 mol of the titanium oxide based on 1 mol of the ruthenium oxide contained in the first layer 20. With the composition ratio of the three oxides in this range, the electrode for electrolysis 100 exhibits excellent durability.

When the first layer 20 contains at least two of a ruthenium oxide, an iridium oxide, and a titanium oxide, these oxides preferably form a solid solution. Formation of the oxide solid solution allows the electrode for electrolysis 100 to exhibit excellent durability.

In addition to the compositions described above, oxides of various compositions can be used as long as at least one oxide of a ruthenium oxide, an iridium oxide, and titanium oxide is contained. For example, an oxide coating called DSA(R), which contains ruthenium, iridium, tantalum, niobium, titanium, tin, cobalt, manganese, platinum, and the like, can be used as the first layer 20.

The first layer 20 need not be a single layer and may include a plurality of layers. For example, the first layer 20 may include a layer containing three *o*xides and a layer containing two oxides. The thickness of the first layer 20 is preferably 0.05 to 10 µm, more preferably 0.1 to 8 µm.

### (Second layer)

The second layer 30 preferably contains ruthenium and titanium. This enables the chlorine overvoltage immediately after electrolysis to be further lowered.

The second layer 30 preferably contains a palladium oxide, a solid solution of a palladium oxide and platinum, or an alloy of palladium and platinum. This enables the chlorine overvoltage immediately after electrolysis to be further lowered.

A thicker second layer 30 can maintain the electrolytic performance for a longer period, but from the viewpoint of economy, the thickness is preferably 0.05 to 3 µm.

Next, a case where the electrode for electrolysis in the present embodiment is used as a cathode for common salt electrolysis will be described.

### (First layer)

Examples of components of the first layer 20 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

The first layer 20 may or may not contain at least one of platinum group metals, platinum group metal oxides, platinum group metal hydroxides, and alloys containing a platinum group metal.

When the first layer 20 contains at least one of platinum group metals, platinum group metal oxides, platinum group metal hydroxides, and alloys containing a platinum group metal, the platinum group metals, platinum group metal oxides, platinum group metal hydroxides, and alloys containing a platinum group metal preferably contain at least one platinum group metal of platinum, palladium, rhodium, ruthenium, and iridium.

As the platinum group metal, platinum is preferably contained.

As the platinum group metal oxide, a ruthenium oxide is preferably contained.

As the platinum group metal hydroxide, a ruthenium hydroxide is preferably contained.

As the platinum group metal alloy, an alloy of platinum with nickel, iron, and cobalt is preferably contained.

Further, as required, an oxide or hydroxide of a lanthanoid element is preferably contained as a second component. This allows the electrode for electrolysis 100 to exhibit excellent durability.

As the oxide or hydroxide of a lanthanoid element, at least one selected from lanthanum, cerium, praseodymium, neodymium, promethium, samarium, europium, gadolinium, terbium, and dysprosium is preferably contained.

Further, as required, an oxide or hydroxide of a transition metal is preferably contained as a third component.

Addition of the third component enables the electrode for electrolysis 100 to exhibit more excellent durability and the electrolysis voltage to be lowered.

Examples of a preferable combination include ruthenium only, ruthenium + nickel, ruthenium + cerium, ruthenium + lanthanum, ruthenium + lanthanum + platinum, ruthenium + lanthanum + palladium, ruthenium + praseodymium, ruthenium + praseodymium + platinum, ruthenium + praseodymium + platinum + palladium, ruthenium + neodymium, ruthenium + neodymium + platinum, ruthenium + neodymium + manganese, ruthenium + neodymium + iron, ruthenium + neodymium + cobalt, ruthenium + neodymium + zinc, ruthenium + neodymium + gallium, ruthenium + neodymium + sulfur, ruthenium + neodymium + lead, ruthenium + neodymium + nickel, ruthenium + neodymium + copper, ruthenium + samarium, ruthenium + samarium + manganese, ruthenium + samarium + iron, ruthenium + samarium + cobalt, ruthenium + samarium + zinc, ruthenium + samarium + gallium, ruthenium + samarium + sulfur, ruthenium + samarium + lead, ruthenium + samarium + nickel, platinum + cerium, platinum + palladium + cerium, platinum + palladium + lanthanum + cerium, platinum + iridium, platinum + palladium, platinum + iridium + palladium, platinum + nickel + palladium, platinum + nickel + ruthenium, alloys of platinum and nickel, alloys of platinum and cobalt, and alloys of platinum and iron.

When platinum group metals, platinum group metal oxides, platinum group metal hydroxides, and alloys containing a platinum group metal are not contained, the main component of the catalyst is preferably nickel element.

At least one of nickel metal, oxides, and hydroxides is preferably contained.

As the second component, a transition metal may be added. As the second component to be added, at least one element of titanium, tin, molybdenum, cobalt, manganese, iron, sulfur, zinc, copper, and carbon is preferably contained.

Examples of a preferable combination include nickel + tin, nickel + titanium, nickel + molybdenum, and nickel + cobalt.

As required, an intermediate layer can be placed between the first layer 20 and the substrate for electrode for electrolysis 10. The durability of the electrode for electrolysis 100 can be improved by placing the intermediate layer.

As the intermediate layer, those having affinity to both the first layer 20 and the substrate for electrode for electrolysis 10 are preferable. As the intermediate layer, nickel oxides, platinum group metals, platinum group metal oxides, and platinum group metal hydroxides are preferable. The intermediate layer can be formed by applying and baking a solution containing a component that forms the intermediate layer. Alternatively, a surface oxide layer also can be formed by subjecting a substrate to a thermal treatment at a temperature of 300 to 600°C in an air atmosphere. Besides, the layer can be formed by a known method such as a thermal spraying method and ion plating method.

### (Second layer)

Examples of components of the first layer 30 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

The first layer 30 may or may not contain at least one of platinum group metals, platinum group metal oxides, platinum group metal hydroxides, and alloys containing a platinum group metal. Examples of a preferable combination of elements contained in the second layer include the combinations enumerated for the first layer. The combination of the first layer and the second layer may be a combination in which the compositions are the same and the composition ratios are different or may be a combination of different compositions.

As the thickness of the catalyst layer, the total thickness of the catalyst layer formed and the intermediate layer is preferably 0.01 µm to 20 µm. With a thickness of 0.01 µm or more, the catalyst layer can sufficiently serve as the catalyst. With a thickness of 20 µm or less, it is possible to form a robust catalyst layer that is unlikely to fall off from the substrate. The thickness is more preferably 0.05 µm to 15 µm. The thickness is more preferably 0.1 µm to 10 µm. The thickness is further preferably 0.2 µm to 8 µm.

The thickness of the electrode, that is, the total thickness of the substrate for electrode for electrolysis and the catalyst layer is preferably 315 µm or less, more preferably 220 µm or less, further preferably 170 µm or less, further more preferably 150 µm or less, particularly preferably 145 µm or less, still more preferably 140 µm or less, even still more preferably 138 µm or less, further still more preferably 135 µm or less in respect of the handling property of the electrode. A thickness of 135 µm or less can provide a good handling property. Further, from a similar viewpoint as above, the thickness is preferably 130 µm or less, more preferably less than 130 µm, further preferably 115 µm or less, further more preferably 65 µm or less. The lower limit value is not particularly limited, but is preferably 1 µm or more, more preferably 5 µm or more for practical reasons, more preferably 20 µm or more. The thickness of the electrode can be determined by measurement with a digimatic thickness gauge (Mitutoyo Corporation, minimum scale 0.001 mm). The thickness of the substrate for electrode for electrolysis is measured in the same manner as the thickness of the electrode. The thickness of the catalyst layer can be determined by subtracting the thickness of the substrate for electrode for electrolysis from the thickness of the electrode.

In the present embodiment, the electrode for electrolysis preferably contains at least one catalytic component selected from the group consisting of Ru, Rh, Pd, Ir, Pt, Au, Ti, V, Cr, Mn, Fe, Co, Ni, Cu, Zn, Y, Zr, Nb, Mo, Ag, Ta, W, Re, Os, Al, In, Sn, Sb, Ga, Ge, B, C, N, O, Si, P, S, La, Ce, Pr, Nd, Pm, Sm, Eu, Gd, Tb, and Dy from the viewpoint of achieving sufficient electrolytic performance.

In the present embodiment, from the viewpoint that the electrode for electrolysis, if being an electrode having a broad elastic deformation region, can provide a better handling property and has a better adhesive force to a membrane such as an ion exchange membrane and a microporous membrane, a degraded electrode, a feed conductor having no catalyst coating, and the like, the thickness of the electrode for electrolysis is preferably 315 µm or less, more preferably 220 µm or less, further preferably 170 µm or less, further more preferably 150 µm or less, particularly preferably 145 µm or less, still more preferably 140 µm or less, even still more preferably 138 µm or less, further still more preferably 135 µm or less. A thickness of 135 µm or less can provide a good handling property. Further, from a similar viewpoint as above, the thickness is preferably 130 µm or less, more preferably less than 130 µm, further preferably 115 µm or less, further more preferably 65 µm or less. The lower limit value is not particularly limited, but is preferably 1 µm or more, more preferably 5 µm or more for practical reasons, more preferably 20 µm or more. In the present embodiment, "having a broad elastic deformation region" means that, when an electrode for electrolysis is wound to form a wound body, warpage derived from winding is unlikely to occur after the wound state is released. The thickness of the electrode for electrolysis refers to, when a catalyst layer mentioned below is included, the total thickness of both the substrate for electrode for electrolysis and the catalyst layer.

### (Method for producing electrode for electrolysis)

Next, one embodiment of the method for producing the electrode for electrolysis 100 will be described in detail.

In the present embodiment, the electrode for electrolysis 100 can be produced by forming the first layer 20, preferably the second layer 30, on the substrate for electrode for electrolysis by a method such as baking of a coating film under an oxygen atmosphere (pyrolysis), or ion plating, plating, or thermal spraying. The production method of the present embodiment as mentioned can achieve a high productivity of the electrode for electrolysis 100. Specifically, a catalyst layer is formed on the substrate for electrode for electrolysis by an application step of applying a coating liquid containing a catalyst, a drying step of drying the coating liquid, and a pyrolysis step of performing pyrolysis. Pyrolysis herein means that a metal salt which is to be a precursor is decomposed by heating into a metal or metal oxide and a gaseous substance. The decomposition product depends on the metal species to be used, type of the salt, and the atmosphere under which pyrolysis is performed, and many metals tend to form oxides in an oxidizing atmosphere. In an industrial process of producing an electrode, pyrolysis is usually performed in air, and a metal oxide or a metal hydroxide is formed in many cases.

### (Formation of first layer of anode)

### (Application step)

The first layer 20 is obtained by applying a solution in which at least one metal salt of ruthenium, iridium, and titanium is dissolved (first coating liquid) onto the substrate for electrode for electrolysis and then pyrolyzing (baking) the coating liquid in the presence of oxygen. The content of ruthenium, iridium, and titanium in the first coating liquid is substantially equivalent to that of the first layer 20.

The metal salts may be chlorides, nitrates, sulfates, metal alkoxides, and any other forms. The solvent of the first coating liquid can be selected depending on the type of the metal salt, and water and alcohols such as butanol can be used. As the solvent, water or a mixed solvent of water and an alcohol is preferable. The total metal concentration in the first coating liquid in which the metal salts are dissolved is not particularly limited, but is preferably in the range of 10 to 150 g/L in association with the thickness of the coating film to be formed by a single coating.

Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

### (Drying step and pyrolysis step)

After being applied onto the substrate for electrode for electrolysis 100, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.

The cycle of application, drying, and pyrolysis described above is repeated to form a covering (the first layer 20) to a predetermined thickness. After the first layer 20 is formed and then further post-baked for a long period as required can further improve the stability of the first layer 20.

### (Formation of second layer)

The second layer 30, which is formed as required, is obtained, for example, by applying a solution containing a palladium compound and a platinum compound or a solution containing a ruthenium compound and a titanium compound (second coating liquid) onto the first layer 20 and then pyrolyzing the coating liquid in the presence of oxygen.

### (Formation of first layer of cathode by pyrolysis method)

### (Application step)

The first layer 20 is obtained by applying a solution in which metal salts of various combination are dissolved (first coating liquid) onto the substrate for electrode for electrolysis and then pyrolyzing (baking) the coating liquid in the presence of oxygen. The content of the metal in the first coating liquid is substantially equivalent to that in the first layer 20.

The metal salts may be chlorides, nitrates, sulfates, metal alkoxides, and any other forms. The solvent of the first coating liquid can be selected depending on the type of the metal salt, and water and alcohols such as butanol can be used. As the solvent, water or a mixed solvent of water and an alcohol is preferable. The total metal concentration in the first coating liquid in which the metal salts are dissolved is not particularly limited, but is preferably in the range of 10 to 150 g/L in association with the thickness of the coating film to be formed by a single coating.

Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

### (Drying step and pyrolysis step)

After being applied onto the substrate for electrode for electrolysis 10, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.

The cycle of application, drying, and pyrolysis described above is repeated to form a covering (the first layer 20) to a predetermined thickness. After the first layer 20 is formed and then further post-baked for a long period as required can further improve the stability of the first layer 20.

### (Formation of intermediate layer)

The intermediate layer, which is formed as required, is obtained, for example, by applying a solution containing a palladium compound or platinum compound (second coating liquid) onto the substrate and then pyrolyzing the coating liquid in the presence of oxygen. Alternatively, a nickel oxide intermediate layer may be formed on the substrate surface only by heating the substrate, without applying a solution thereon.

### (Formation of first layer of cathode by ion plating)

The first layer 20 can be formed also by ion plating. An example includes a method in which the substrate is fixed in a chamber and the metal ruthenium target is irradiated with an electron beam. Evaporated metal ruthenium particles are positively charged in plasma in the chamber to deposit on the substrate negatively charged. The plasma atmosphere is argon and oxygen, and ruthenium deposits as ruthenium oxide on the substrate.

### (Formation of first layer of cathode by plating)

The first layer 20 can be formed also by a plating method.

As an example, when the substrate is used as the cathode and subjected to electrolytic plating in an electrolyte solution containing nickel and tin, alloy plating of nickel and tin can be formed.

### (Formation of first layer of cathode by thermal spraying)

The first layer 20 can be formed also by thermal spraying.

As an example, plasma spraying nickel oxide particles onto the substrate can form a catalyst layer in which metal nickel and nickel oxide are mixed.

The electrode for electrolysis in the present embodiment can be integrated with a membrane such as an ion exchange membrane and a microporous membrane and used. Thus, the laminate of the present embodiment can be used as a membrane-integrated electrode. Then, the substituting work for the cathode and anode on renewing the electrode is eliminated, and the work efficiency is markedly improved.

The electrode integrated with the membrane such as an ion exchange membrane and a microporous membrane can make the electrolytic performance comparable to or higher than those of a new electrode.

Hereinafter, the ion exchange membrane will be described in detail.

### [Ion exchange membrane]

The ion exchange membrane is not particularly limited as long as the membrane can be laminated with the electrode for electrolysis, and various ion exchange membranes may be employed. In the present embodiment, an ion exchange membrane that has a membrane body containing a hydrocarbon polymer or fluorine-containing polymer having an ion exchange group and a coating layer provided on at least one surface of the membrane body is preferably used. It is preferable that the coating layer contain inorganic material particles and a binder and the specific surface area of the coating layer be 0.1 to 10 m²/g. The ion exchange membrane having such a structure has a small influence of gas generated during electrolysis on electrolytic performance and tends to exert stable electrolytic performance.

The membrane of a perfluorocarbon polymer into which an ion exchange group is introduced described above includes either one of a sulfonic acid layer having an ion exchange group derived from a sulfo group (a group represented by -SO₃⁻, hereinbelow also referred to as a "sulfonic acid group") or a carboxylic acid layer having an ion exchange group derived from a carboxyl group (a group represented by -CO₂⁻, hereinbelow also referred to as a "carboxylic acid group"). From the viewpoint of strength and dimension stability, reinforcement core materials are preferably further included.

The inorganic material particles and binder will be described in detail in the section of description of the coating layer below.

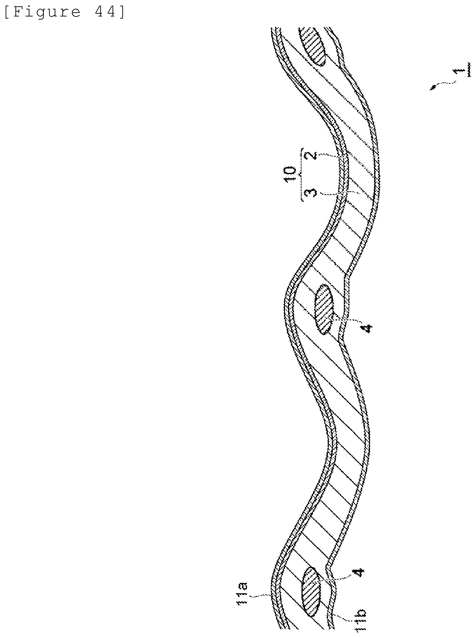

Figure 44 illustrates a cross-sectional schematic view showing one embodiment of an ion exchange membrane. An ion exchange membrane 1 has a membrane body 10 containing a hydrocarbon polymer or fluorine-containing polymer having an ion exchange group and coating layers 11a and 11b formed on both the surfaces of the membrane body 10.

In the ion exchange membrane 1, the membrane body 10 comprises a sulfonic acid layer 3 having an ion exchange group derived from a sulfo group (a group represented by -SO₃⁻, hereinbelow also referred to as a "sulfonic acid group") and a carboxylic acid layer 2 having an ion exchange group derived from a carboxyl group (a group represented by -CO₂⁻, hereinbelow also referred to as a "carboxylic acid group"), and the reinforcement core materials 4 enhance the strength and dimension stability. The ion exchange membrane 1, as comprising the sulfonic acid layer 3 and the carboxylic acid layer 2, is suitably used as an anion exchange membrane.

The ion exchange membrane may include either one of the sulfonic acid layer and the carboxylic acid layer. The ion exchange membrane may not be necessarily reinforced by reinforcement core materials, and the arrangement of the reinforcement core materials is not limited to the example in Figure 44.

### (Membrane body)

First, the membrane body 10 constituting the ion exchange membrane 1 will be described.

The membrane body 10 should be one that has a function of selectively allowing cations to permeate and comprises a hydrocarbon polymer or a fluorine-containing polymer having an ion exchange group. Its configuration and material are not particularly limited, and preferred ones can be appropriately selected.

The hydrocarbon polymer or fluorine-containing polymer having an ion exchange group in the membrane body 10 can be obtained from a hydrocarbon polymer or fluorine-containing polymer having an ion exchange group precursor capable of forming an ion exchange group by hydrolysis or the like. Specifically, for example, after a polymer comprising a main chain of a fluorinated hydrocarbon, having, as a pendant side chain, a group convertible into an ion exchange group by hydrolysis or the like (ion exchange group precursor), and being meltprocessable (hereinbelow, referred to as the "fluorine-containing polymer (a)" in some cases) is used to prepare a precursor of the membrane body 10, the membrane body 10 can be obtained by converting the ion exchange group precursor into an ion exchange group.

The fluorine-containing polymer (a) can be produced, for example, by copolymerizing at least one monomer selected from the following first group and at least one monomer selected from the following second group and/or the following third group. The fluorine-containing polymer (a) can be also produced by homopolymerization of one monomer selected from any of the following first group, the following second group, and the following third group.

Examples of the monomers of the first group include vinyl fluoride compounds. Examples of the vinyl fluoride compounds include vinyl fluoride, tetrafluoroethylene, hexafluoropropylene, vinylidene fluoride, trifluoroethylene, chlorotrifluoroethylene, and perfluoro alkyl vinyl ethers. Particularly when the ion exchange membrane is used as a membrane for alkali electrolysis, the vinyl fluoride compound is preferably a perfluoro monomer, and a perfluoro monomer selected from the group consisting of tetrafluoroethylene, hexafluoropropylene, and perfluoro alkyl vinyl ethers is preferable.

Examples of the monomers of the second group include vinyl compounds having a functional group convertible into a carboxylic acid-type ion exchange group (carboxylic acid group). Examples of the vinyl compounds having a functional group convertible into a carboxylic acid group include monomers represented by CF₂=CF(OCF₂CYF)ₛ-O(CZF)ₜ-COOR, wherein s represents an integer of 0 to 2, t represents an integer of 1 to 12, Y and Z each independently represent F or CF₃, and R represents a lower alkyl group (a lower alkyl group is an alkyl group having 1 to 3 carbon atoms, for example).

Among these, compounds represented by CF₂=CF(OCF₂CYF)ₙ-O(CF₂)ₘ-COOR are preferable. Wherein n represents an integer of 0 to 2, m represents an integer of 1 to 4, Y represents F or CF₃, and R represents CH₃, C₂H₅, or C₃H₇.

When the ion exchange membrane is used as a cation exchange membrane for alkali electrolysis, a perfluoro compound is preferably at least used as the monomer, but the alkyl group (see the above R) of the ester group is lost from the polymer at the time of hydrolysis, and therefore the alkyl group (R) need not be a perfluoroalkyl group in which all hydrogen atoms are replaced by fluorine atoms.

Of the above monomers, the monomers represented below are more preferable as the monomers of the second group:

CF₂=CFOCF₂-CF(CF₃)OCF₂COOCH₃,

CF₂=CFOCF₂CF(CF₃)O(CF₂)₂COOCH₃,

CF₂=CF[OCF₂-CF(CF₃)]₂O(CF₂)₂COOCH₃,

CF₂=CFOCF₂CF(CF₃)O(CF₂)₃COOCH₃,

CF₂=CFO(CF₂)₂COOCH₃, and

CF₂=CFO(CF₂)₃COOCH₃.

Examples of the monomers of the third group include vinyl compounds having a functional group convertible into a sulfone-type ion exchange group (sulfonic acid group). As the vinyl compounds having a functional group convertible into a sulfonic acid group, for example, monomers represented by CF₂=CFO-X-CF₂-SO₂F are preferable, wherein X represents a perfluoroalkylene group. Specific examples of these include the monomers represented below:

CF₂=CFOCF₂CF₂SO₂F,

CF₂=CFOCF₂CF(CF₃)OCF₂CF₂SO₂F,

CF₂=CFOCF₂CF(CF₃)OCF₂CF₂CF₂SO₂F,

CF₂=CF(CF₂)₂SO₂F,

CF₂=CFO[CF₂CF(CF₃)O]₂CF₂CF₂SO₂F, and

CF₂=CFOCF₂CF(CF₂OCF₃)OCF₂CF₂SO₂F.

Among these, CF₂=CFOCF₂CF(CF₃)OCF₂CF₂CF₂SO₂F and CF₂=CFOCF₂CF(CF₃)OCF₂CF₂SO₂F are more preferable.

The copolymer obtained from these monomers can be produced by a polymerization method developed for homopolymerization and copolymerization of ethylene fluoride, particularly a general polymerization method used for tetrafluoroethylene. For example, in a nonaqueous method, a polymerization reaction can be performed in the presence of a radical polymerization initiator such as a perfluorocarbon peroxide or an azo compound under the conditions of a temperature of 0 to 200°C and a pressure of 0.1 to 20 MPa using an inert solvent such as a perfluorohydrocarbon or a chlorofluorocarbon.

In the above copolymerization, the type of combination of the above monomers and their proportion are not particularly limited and are selected and determined depending on the type and amount of the functional group desired to be imparted to the fluorine-containing polymer to be obtained. For example, when a fluorine-containing polymer containing only a carboxylic acid group is formed, at least one monomer should be selected from each of the first group and the second group described above and copolymerized. In addition, when a fluorine-containing polymer containing only a sulfonic acid group is formed, at least one monomer should be selected from each of the first group and the third group and copolymerized. Further, when a fluorine-containing polymer having a carboxylic acid group and a sulfonic acid group is formed, at least one monomer should be selected from each of the first group, the second group, and the third group described above and copolymerized. In this case, the target fluorine-containing polymer can be obtained also by separately preparing a copolymer comprising the monomers of the first group and the second group described above and a copolymer comprising the monomers of the first group and the third group described above, and then mixing the copolymers. The mixing proportion of the monomers is not particularly limited, and when the amount of the functional groups per unit polymer is increased, the proportion of the monomers selected from the second group and the third group described above should be increased.

The total ion exchange capacity of the fluorine-containing copolymer is not particularly limited, but is preferably 0.5 to 2.0 mg equivalent/g, more preferably 0.6 to 1.5 mg equivalent/g. The total ion exchange capacity herein refers to the equivalent of the exchange group per unit weight of the dry resin and can be measured by neutralization titration or the like.

In the membrane body 10 of the ion exchange membrane 1, a sulfonic acid layer 3 containing a fluorine-containing polymer having a sulfonic acid group and a carboxylic acid layer 2 containing a fluorine-containing polymer having a carboxylic acid group are laminated. By providing the membrane body 10 having such a layer configuration, selective permeability for cations such as sodium ions can be further improved.

The ion exchange membrane 1 is arranged in an electrolyzer such that, usually, the sulfonic acid layer 3 is located on the anode side of the electrolyzer and the carboxylic acid layer 2 is located on the cathode side of the electrolyzer.

The sulfonic acid layer 3 is preferably constituted by a material having low electrical resistance and has a membrane thickness larger than that of the carboxylic acid layer 2 from the viewpoint of membrane strength. The membrane thickness of the sulfonic acid layer 3 is preferably 2 to 25 times, more preferably 3 to 15 times that of the carboxylic acid layer 2.

The carboxylic acid layer 2 preferably has high anion exclusion properties even if it has a small membrane thickness. The anion exclusion properties here refer to the property of trying to hinder intrusion and permeation of anions into and through the ion exchange membrane 1. In order to raise the anion exclusion properties, it is effective to dispose a carboxylic acid layer having a small ion exchange capacity to the sulfonic acid layer.

As the fluorine-containing polymer for use in the sulfonic acid layer 3, preferable is a polymer obtained by using CF₂=CFOCF₂CF(CF₃)OCF₂CF₂SO₂F as the monomer of the third group.

As the fluorine-containing polymer for use in the carboxylic acid layer 2, preferable is a polymer obtained by using CF₂=CFOCF₂CF(CF₂)O(CF₂)₂COOCH₃ as the monomer of the second group.

### (Coating layer)

The ion exchange membrane preferably has a coating layer on at least one surface of the membrane body. As shown in Figure 44, in the ion exchange membrane 1, coating layers 11a and 11b are formed on both the surfaces of the membrane body 10.

The coating layers contain inorganic material particles and a binder.

The average particle size of the inorganic material particles is preferably 0.90 µm or more. When the average particle size of the inorganic material particles is 0.90 µm or more, durability to impurities is extremely improved, in addition to attachment of gas. That is, enlarging the average particle size of the inorganic material particles as well as satisfying the value of the specific surface area mentioned above can achieve a particularly marked effect. Irregular inorganic material particles are preferable because the average particle size and specific surface area as above are satisfied. Inorganic material particles obtained by melting and inorganic material particles obtained by grinding raw ore can be used. Inorganic material particles obtained by grinding raw ore can preferably be used.

The average particle size of the inorganic material particles can be 2 µm or less. When the average particle size of the inorganic material particles is 2 µm or less, it is possible to prevent damage of the membrane due to the inorganic material particles. The average particle size of the inorganic material particle is more preferably 0.90 to 1.2 µm.

Here, the average particle size can be measured by a particle size analyzer ("SALD2200", SHIMADZU CORPORATION).

The inorganic material particles preferably have irregular shapes. Such shapes improve resistance to impurities further. The inorganic material particles preferably have a broad particle size distribution.

The inorganic material particles preferably contain at least one inorganic material selected from the group consisting of oxides of Group IV elements in the Periodic Table, nitrides of Group IV elements in the Periodic Table, and carbides of Group IV elements in the Periodic Table. From the viewpoint of durability, zirconium oxide particle is more preferable.

The inorganic material particles are preferably inorganic material particles produced by grinding the raw ore of the inorganic material particles or inorganic material particles, as spherical particles having a uniform diameter, obtained by melt-purifying the raw ore of the inorganic material particles.

Examples of means for grinding raw ore include, but are not particularly limited to, ball mills, bead mills, colloid mills, conical mills, disc mills, edge mills, grain mills, hammer mills, pellet mills, VSI mills, Wiley mills, roller mills, and jet mills. After grinding, the particles are preferably washed. As the washing method, the particles are preferably treated with acid. This treatment can reduce impurities such as iron attached to the surface of the inorganic material particles.

The coating layer preferably contains a binder. The binder is a component that forms the coating layers by retaining the inorganic material particles on the surface of the ion exchange membrane. The binder preferably contains a fluorine-containing polymer from the viewpoint of durability to the electrolyte solution and products from electrolysis.

As the binder, a fluorine-containing polymer having a carboxylic acid group or sulfonic acid group is more preferable, from the viewpoint of durability to the electrolyte solution and products from electrolysis and adhesion to the surface of the ion exchange membrane. When a coating layer is provided on a layer containing a fluorine-containing polymer having a sulfonic acid group (sulfonic acid layer), a fluorine-containing polymer having a sulfonic acid group is further preferably used as the binder of the coating layer. Alternatively, when a coating layer is provided on a layer containing a fluorine-containing polymer having a carboxylic acid group (carboxylic acid layer), a fluorine-containing polymer having a carboxylic acid group is further preferably used as the binder of the coating layer.

In the coating layer, the content of the inorganic material particles is preferably 40 to 90% by mass, more preferably 50 to 90% by mass. The content of the binder is preferably 10 to 60% by mass, more preferably 10 to 50% by mass.

The distribution density of the coating layer in the ion exchange membrane is preferably 0.05 to 2 mg per 1 cm². When the ion exchange membrane has asperities on the surface thereof, the distribution density of the coating layer is preferably 0.5 to 2 mg per 1 cm².

As the method for forming the coating layer, which is not particularly limited, a known method can be used. An example is a method including applying by a spray or the like a coating liquid obtained by dispersing inorganic material particles in a solution containing a binder.

### (Reinforcement core materials)

The ion exchange membrane preferably has reinforcement core materials arranged inside the membrane body.

The reinforcement core materials are members that enhance the strength and dimensional stability of the ion exchange membrane. By arranging the reinforcement core materials inside the membrane body, particularly expansion and contraction of the ion exchange membrane can be controlled in the desired range. Such an ion exchange membrane does not expand or contract more than necessary during electrolysis and the like and can maintain excellent dimensional stability for a long term.

The configuration of the reinforcement core materials is not particularly limited, and, for example, the reinforcement core materials may be formed by spinning yarns referred to as reinforcement yarns. The reinforcement yarns here refer to yarns that are members constituting the reinforcement core materials, can provide the desired dimensional stability and mechanical strength to the ion exchange membrane, and can be stably present in the ion exchange membrane. By using the reinforcement core materials obtained by spinning such reinforcement yarns, better dimensional stability and mechanical strength can be provided to the ion exchange membrane.

The material of the reinforcement core materials and the reinforcement yarns used for these is not particularly limited but is preferably a material resistant to acids, alkalis, etc., and a fiber comprising a fluorine-containing polymer is preferable because longterm heat resistance and chemical resistance are required.

Examples of the fluorine-containing polymer to be used in the reinforcement core materials include polytetrafluoroethylene (PTFE), tetrafluoroethyleneperfluoroalkyl vinyl ether copolymers (PFA), tetrafluoroethylene-ethylene copolymers (ETFE), tetrafluoroethylene-hexafluoropropylene copolymers, trifluorochloroethylene-ethylene copolymers, and vinylidene fluoride polymers (PVDF). Among these, fibers comprising polytetrafluoroethylene are preferably used from the viewpoint of heat resistance and chemical resistance.

The yarn diameter of the reinforcement yarns used for the reinforcement core materials is not particularly limited, but is preferably 20 to 300 deniers, more preferably 50 to 250 deniers. The weave density (fabric count per unit length) is preferably 5 to 50/inch. The form of the reinforcement core materials is not particularly limited, for example, a woven fabric, a nonwoven fabric, and a knitted fabric are used, but is preferably in the form of a woven fabric. The thickness of the woven fabric to be used is preferably 30 to 250 µm, more preferably 30 to 150 µm.

As the woven fabric or knitted fabric, monofilaments, multifilaments, or yarns thereof, a slit yarn, or the like can be used, and various types of weaving methods such as a plain weave, a leno weave, a knit weave, a cord weave, and a seersucker can be used.

The weave and arrangement of the reinforcement core materials in the membrane body are not particularly limited, and preferred arrangement can be appropriately provided considering the size and form of the ion exchange membrane, physical properties desired for the ion exchange membrane, the use environment, and the like.

For example, the reinforcement core materials may be arranged along one predetermined direction of the membrane body, but from the viewpoint of dimensional stability, it is preferred that the reinforcement core materials be arranged along a predetermined first direction, and other reinforcement core materials be arranged along a second direction substantially perpendicular to the first direction. By arranging the plurality of reinforcement core materials substantially orthogonally inside the membrane body, it is possible to impart better dimensional stability and mechanical strength in many directions. For example, arrangement in which the reinforcement core materials arranged along the longitudinal direction (warp yarns) and the reinforcement core materials arranged along the transverse direction (weft yarns) are woven on the surface side of the membrane body is preferred. The arrangement is more preferably in the form of plain weave driven and woven by allowing warps and wefts to run over and under each other alternately, leno weave in which two warps are woven into wefts while twisted, basket weave driven and woven by inserting, into two or more parallelly-arranged warps, wefts of the same number, or the like, from the viewpoint of dimension stability, mechanical strength and easyproduction.

It is preferred that particularly, the reinforcement core materials be arranged along both directions, the MD (Machine Direction) and TD (Transverse Direction) of the ion exchange membrane. In other words, the reinforcement core materials are preferably plain-woven in the MD and TD. Here, the MD refers to the direction in which the membrane body and various core materials (for example, the reinforcement core materials, reinforcement yarns, and sacrifice yarns described later) are conveyed in an ion exchange membrane production step described later (flow direction), and the TD refers to the direction substantially perpendicular to the MD. Yarns woven along the MD are referred to as MD yarns, and yarns woven along the TD are referred to as TD yarns. Usually, the ion exchange membrane used for electrolysis is rectangular, and in many cases, the longitudinal direction is the MD, and the width direction is the TD. By weaving the reinforcement core materials that are MD yarns and the reinforcement core materials that are TD yarns, it is possible to impart better dimensional stability and mechanical strength in many directions.

The arrangement interval of the reinforcement core materials is not particularly limited, and preferred arrangement can be appropriately provided considering physical properties desired for the ion exchange membrane, the use environment, and the like.

The aperture ratio for the reinforcement core materials is not particularly limited, but is preferably 30% or more, more preferably 50% or more and 90% or less. The aperture ratio is preferably 30% or more from the viewpoint of the electrochemical properties of the ion exchange membrane, and preferably 90% or less from the viewpoint of the mechanical strength of the ion exchange membrane.

The aperture ratio for the reinforcement core materials herein refers to a ratio of a total area of a surface through which substances such as ions (an electrolyte solution and cations contained therein (e.g., sodium ions)) can pass (B) to the area of either one surface of the membrane body (A) (B/A). The total area of the surface through which substances such as ions can pass (B) can refer to the total areas of regions in which in the ion exchange membrane, cations, an electrolytic solution, and the like are not blocked by the reinforcement core materials and the like contained in the ion exchange membrane.

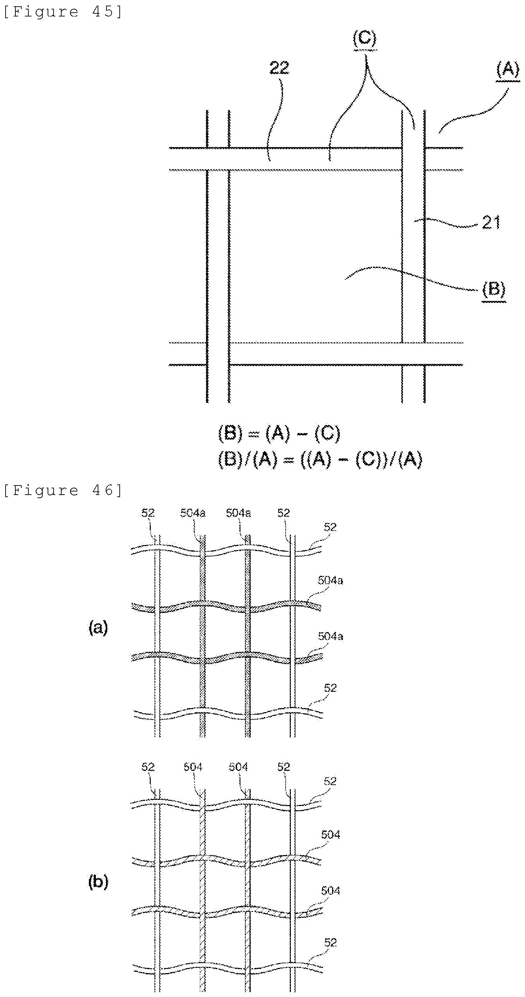

Figure 45 illustrates a schematic view for explaining the aperture ratio of reinforcement core materials constituting the ion exchange membrane. Figure 45, in which a portion of the ion exchange membrane is enlarged, shows only the arrangement of the reinforcement core materials 21 and 22 in the regions, omitting illustration of the other members.

By subtracting the total area of the reinforcement core materials (C) from the area of the region surrounded by the reinforcement core materials 21 arranged along the longitudinal direction and the reinforcement core materials 22 arranged along the transverse direction, the region including the area of the reinforcement core materials (A), the total area of regions through which substances such as ions can pass (B) in the area of the above-described region (A) can be obtained. That is, the aperture ratio can be determined by the following formula (I): $Aperture ratio = \left(B\right) / \left(A\right) = \left(\left(A\right)-\left(C\right)\right) / \left(A\right)$

Among the reinforcement core materials, a particularly preferred form is tape yarns or highly oriented monofilaments comprising PTFE from the viewpoint of chemical resistance and heat resistance. Specifically, reinforcement core materials forming a plain weave in which 50 to 300 denier tape yarns obtained by slitting a high strength porous sheet comprising PTFE into a tape form, or 50 to 300 denier highly oriented monofilaments comprising PTFE are used and which has a weave density of 10 to 50 yarns or monofilaments/inch and has a thickness in the range of 50 to 100 µm are more preferred. The aperture ratio of an ion exchange membrane comprising such reinforcement core materials is further preferably 60% or more.

Examples of the shape of the reinforcement yarns include round yarns and tape yarns.

### (Continuous holes)

The ion exchange membrane preferably has continuous holes inside the membrane body.

The continuous holes refer to holes that can be flow paths for ions generated in electrolysis and an electrolyte solution. The continuous holes, which are tubular holes formed inside the membrane body, are formed by dissolution of sacrifice core materials (or sacrifice yarns) described below. The shape, diameter, or the like of the continuous holes can be controlled by selecting the shape or diameter of the sacrifice core materials (sacrifice yarns).

Forming the continuous holes inside the ion exchange membrane can ensure the mobility of an electrolyte solution on electrolysis. The shape of the continuous holes is not particularly limited, but may be the shape of sacrifice core materials to be used for formation of the continuous holes in accordance with the production method described below.

The continuous holes are preferably formed so as to alternately pass on the anode side (sulfonic acid layer side) and the cathode side (carboxylic acid layer side) of the reinforcement core materials. With such a structure, in a portion in which continuous holes are formed on the cathode side of the reinforcement core materials, ions (e.g., sodium ions) transported through the electrolyte solution with which the continuous holes are filled can flow also on the cathode side of the reinforcement core materials. As a result, the flow of cations is not interrupted, and thus, it is possible to further reduce the electrical resistance of the ion exchange membrane.

The continuous holes may be formed along only one predetermined direction of the membrane body constituting the ion exchange membrane, but are preferably formed in both the longitudinal direction and the transverse direction of the membrane body from the viewpoint of exhibiting more stable electrolytic performance.

### [Production method]

A suitable example of a method for producing an ion exchange membrane includes a method including the following steps (1) to (6):
Step (1): the step of producing a fluorine-containing polymer having an ion exchange group or an ion exchange group precursor capable of forming an ion exchange group by hydrolysis,
Step (2): the step of weaving at least a plurality of reinforcement core materials, as required, and sacrifice yarns having a property of dissolving in an acid or an alkali, and forming continuous holes, to obtain a reinforcing material in which the sacrifice yarns are arranged between the reinforcement core materials adjacent to each other,
Step (3): the step of forming into a film the above fluorine-containing polymer having an ion exchange group or an ion exchange group precursor capable of forming an ion exchange group by hydrolysis,
Step (4): the step of embedding the above reinforcing materials, as required, in the above film to obtain a membrane body inside which the reinforcing materials are arranged,
Step (5): the step of hydrolyzing the membrane body obtained in the step (4) (hydrolysis step), and
Step (6): the step of providing a coating layer on the membrane body obtained in the step (5) (application step).

Hereinafter, each of the steps will be described in detail.

### Step (1): Step of producing fluorine-containing polymer

In the step (1), raw material monomers described in the first group to the third group above are used to produce a fluorine-containing polymer. In order to control the ion exchange capacity of the fluorine-containing polymer, the mixture ratio of the raw material monomers should be adjusted in the production of the fluorine-containing polymer forming the layers.

### Step (2): Step of producing reinforcing materials

The reinforcing material is a woven fabric obtained by weaving reinforcement yarns or the like. The reinforcing material is embedded in the membrane to thereby form reinforcement core materials. When an ion exchange membrane having continuous holes is formed, sacrifice yarns are additionally woven into the reinforcing material. The amount of the sacrifice yarns contained in this case is preferably 10 to 80% by mass, more preferably 30 to 70% by mass based on the entire reinforcing material. Weaving the sacrifice yarns can also prevent yarn slippage of the reinforcement core materials.

As the sacrifice yarns, which have solubility in the membrane production step or under an electrolysis environment, rayon, polyethylene terephthalate (PET), cellulose, polyamide, and the like are used. Monofilaments or multifilaments having a thickness of 20 to 50 deniers and comprising polyvinyl alcohol and the like are also preferred.

In the step (2), the aperture ratio, arrangement of the continuous holes, and the like can be controlled by adjusting the arrangement of the reinforcement core materials and the sacrifice yarns.

### Step (3): Step of film formation

In the step (3), the fluorine-containing polymer obtained in the step (1) is formed into a film by using an extruder. The film may be a single-layer configuration, a two-layer configuration of a sulfonic acid layer and a carboxylic acid layer as mentioned above, or a multilayer configuration of three layers or more.

Examples of the film forming method include the following:
a method in which a fluorine-containing polymer having a carboxylic acid group and a fluorine-containing polymer having a sulfonic acid group are separately formed into films; and
a method in which fluorine-containing polymer having a carboxylic acid group and a fluorine-containing polymer having a sulfonic acid group are coextruded into a composite film.

The number of each film may be more than one. Coextrusion of different films is preferred because of its contribution to an increase in the adhesive strength in the interface.

### Step (4): Step of obtaining membrane body

In the step (4), the reinforcing material obtained in the step (2) is embedded in the film obtained in the step (3) to provide a membrane body including the reinforcing material therein.

Preferable examples of the method for forming a membrane body include (i) a method in which a fluorine-containing polymer having a carboxylic acid group precursor (e.g., carboxylate functional group) (hereinafter, a layer comprising the same is referred to as the first layer) located on the cathode side and a fluorine-containing polymer having a sulfonic acid group precursor (e.g., sulfonyl fluoride functional group) (hereinafter, a layer comprising the same is referred to as the second layer) are formed into a film by a coextrusion method, and, by using a heat source and a vacuum source as required, a reinforcing material and the second layer/first layer composite film are laminated in this order on breathable heat-resistant release paper on a flat plate or drum having many pores on the surface thereof and integrated at a temperature at which each polymer melts while air among each of the layers was evacuated by reduced pressure; and (ii) a method in which, in addition to the second layer/first layer composite film, a fluorine-containing polymer having a sulfonic acid group precursor is singly formed into a film (the third layer) in advance, and, by using a heat source and a vacuum source as required, the third layer film, the reinforcement core materials, and the composite film comprising the second layer/first layer are laminated in this order on breathable heat-resistant release paper on a flat plate or drum having many pores on the surface thereof and integrated at a temperature at which each polymer melts while air among each of the layers was evacuated by reduced pressure.

Coextrusion of the first layer and the second layer herein contributes to an increase in the adhesive strength at the interface.

The method including integration under a reduced pressure is characterized by making the third layer on the reinforcing material thicker than that of a pressureapplication press method. Further, since the reinforcing material is fixed on the inner surface of the membrane body, the method has a property of sufficiently retaining the mechanical strength of the ion exchange membrane.

The variations of lamination described here are exemplary, and coextrusion can be performed after a preferred lamination pattern (for example, the combination of layers) is appropriately selected considering the desired layer configuration of the membrane body and physical properties, and the like.

For the purpose of further improving the electric properties of the ion exchange membrane, it is also possible to additionally interpose a fourth layer comprising a fluorine-containing polymer having both a carboxylic acid group precursor and a sulfonic acid group precursor between the first layer and the second layer or to use a fourth layer comprising a fluorine-containing polymer having both a carboxylic acid group precursor and a sulfonic acid group precursor instead of the second layer.

The method for forming the fourth layer may be a method in which a fluorine-containing polymer having a carboxylic acid group precursor and a fluorine-containing polymer having a sulfonic acid group precursor are separately produced and then mixed or may be a method in which a monomer having a carboxylic acid group precursor and a monomer having a sulfonic acid group precursor are copolymerized.

When the fourth layer is used as a component of the ion exchange membrane, a coextruded film of the first layer and the fourth layer is formed, in addition to this, the third layer and the second layer are separately formed into films, and lamination may be performed by the method mentioned above. Alternatively, the three layers of the first layer/fourth layer/second layer may be simultaneously formed into a film by coextrusion.

In this case, the direction in which the extruded film flows is the MD. As mentioned above, it is possible to form a membrane body containing a fluorine-containing polymer having an ion exchange group on a reinforcing material.

Additionally, the ion exchange membrane preferably has protruded portions composed of the fluorine-containing polymer having a sulfonic acid group, that is, projections, on the surface side composed of the sulfonic acid layer. As a method for forming such projections, which is not particularly limited, a known method also can be employed including forming projections on a resin surface. A specific example of the method is a method of embossing the surface of the membrane body. For example, the above projections can be formed by using release paper embossed in advance when the composite film mentioned above, reinforcing material, and the like are integrated. In the case where projections are formed by embossing, the height and arrangement density of the projections can be controlled by controlling the emboss shape to be transferred (shape of the release paper).

### (5) Hydrolysis step

In the step (5), a step of hydrolyzing the membrane body obtained in the step (4) to convert the ion exchange group precursor into an ion exchange group (hydrolysis step) is performed.

In the step (5), it is also possible to form dissolution holes in the membrane body by dissolving and removing the sacrifice yarns included in the membrane body with acid or alkali. The sacrifice yarns may remain in the continuous holes without being completely dissolved and removed. The sacrifice yarns remaining in the continuous holes may be dissolved and removed by the electrolyte solution when the ion exchange membrane is subjected to electrolysis.

The sacrifice yarn has solubility in acid or alkali in the step of producing an ion exchange membrane or under an electrolysis environment. The sacrifice yarns are eluted out to thereby form continuous holes at corresponding sites.

The step (5) can be performed by immersing the membrane body obtained in the step (4) in a hydrolysis solution containing acid or alkali. An example of the hydrolysis solution that can be used is a mixed solution containing KOH and dimethyl sulfoxide (DMSO).

The mixed solution preferably contains KOH of 2.5 to 4.0 N and DMSO of 25 to 35% by mass.

The temperature for hydrolysis is preferably 70 to 100°C. The higher the temperature, the larger can be the apparent thickness. The temperature is more preferably 75 to 100°C.

The time for hydrolysis is preferably 10 to 120 minutes. The longer the time, the larger can be the apparent thickness. The time is more preferably 20 to 120 minutes.

The step of forming continuous holes by eluting the sacrifice yarn will be now described in more detail. Figures 46(a) and (b) are schematic views for explaining a method for forming the continuous holes of the ion exchange membrane.

Figures 46(a) and (b) show reinforcement yarns 52, sacrifice yarns 504a, and continuous holes 504 formed by the sacrifice yarns 504a only, omitting illustration of the other members such as a membrane body.

First, the reinforcement yarns 52 that are to constitute reinforcement core materials in the ion exchange membrane and the sacrifice yarns 504a for forming the continuous holes 504 in the ion exchange membrane are used as interwoven reinforcing materials. Then, in the step (5), the sacrifice yarns 504a are eluted to form the continuous holes 504.

The above method is simple because the method for interweaving the reinforcement yarns 52 and the sacrifice yarns 504a may be adjusted depending on the arrangement of the reinforcement core materials and continuous holes in the membrane body of the ion exchange membrane.

Figure 46(a) exemplifies the plain-woven reinforcing material in which the reinforcement yarns 52 and sacrifice yarns 504a are interwoven along both the longitudinal direction and the lateral direction in the paper, and the arrangement of the reinforcement yarns 52 and the sacrifice yarns 504a in the reinforcing material may be varied as required.

### (6) Application step

In the step (6), a coating layer can be formed by preparing a coating liquid containing inorganic material particles obtained by grinding raw ore or melting raw ore and a binder, applying the coating liquid onto the surface of the ion exchange membrane obtained in the step (5), and drying the coating liquid.

A preferable binder is a binder obtained by hydrolyzing a fluorine-containing polymer having an ion exchange group precursor with an aqueous solution containing dimethyl sulfoxide (DMSO) and potassium hydroxide (KOH) and then immersing the polymer in hydrochloric acid to replace the counterion of the ion exchange group by H+ (e.g., a fluorine-containing polymer having a carboxyl group or sulfo group). Thereby, the polymer is more likely to dissolve in water or ethanol mentioned below, which is preferable.

This binder is dissolved in a mixed solution of water and ethanol. The volume ratio between water and ethanol is preferably 10:1 to 1:10, more preferably 5:1 to 1:5, further preferably 2:1 to 1:2. The inorganic material particles are dispersed with a ball mill into the dissolution liquid thus obtained to thereby provide a coating liquid. In this case, it is also possible to adjust the average particle size and the like of the particles by adjusting the time and rotation speed during the dispersion. The preferable amount of the inorganic material particles and the binder to be blended is as mentioned above.

The concentration of the inorganic material particles and the binder in the coating liquid is not particularly limited, but a thin coating liquid is preferable. This enables uniform application onto the surface of the ion exchange membrane.

Additionally, a surfactant may be added to the dispersion when the inorganic material particles are dispersed. As the surfactant, nonionic surfactants are preferable, and examples thereof include HS-210, NS-210, P-210, and E-212 manufactured by NOF CORPORATION.

The coating liquid obtained is applied onto the surface of the ion exchange membrane by spray application or roll coating to thereby provide an ion exchange membrane.

### [Microporous membrane]

The microporous membrane of the present embodiment is not particularly limited as long as the membrane can be formed into a laminate with the electrode for electrolysis, as mentioned above. Various microporous membranes may be employed.

The porosity of the microporous membrane of the present embodiment is not particularly limited, but can be 20 to 90, for example, and is preferably 30 to 85. The above porosity can be calculated by the following formula: Porosity = (1 - (the weight of the membrane in a dried state) / (the weight calculated from the volume calculated from the thickness, width, and length of the membrane and the density of the membrane material)) × 100

The average pore size of the microporous membrane of the present embodiment is not particularly limited, and can be 0.01 µm to 10 µm, for example, preferably 0.05 µm to 5 µm. With respect to the average pore size, for example, the membrane is cut vertically to the thickness direction, and the section is observed with an FE-SEM. The average pore size can be obtained by measuring the diameter of about 100 pores observed and averaging the measurements.

The thickness of the microporous membrane of the present embodiment is not particularly limited, and can be 10 µm to 1000 µm, for example, preferably 50 µm to 600 µm. The above thickness can be measured by using a micrometer (manufactured by Mitutoyo Corporation) or the like, for example.

Specific examples of the microporous membrane as mentioned above include Zirfon Perl UTP 500 manufactured by Agfa (also referred to as a Zirfon membrane in the present embodiment) and those described in International Publication No. WO 2013-183584 and International Publication No. WO 2016-203701.

In the present embodiment, the membrane preferably comprises a first ion exchange resin layer and a second ion exchange resin layer having an EW (ion exchange capacity) different from that of the first ion exchange resin layer. Additionally, the membrane preferably comprises a first ion exchange resin layer and a second ion exchange resin layer having a functional group different from that of the first ion exchange resin layer. The ion exchange capacity can be adjusted by the functional group to be introduced, and functional groups that may be introduced are as mentioned above.

### [Fixed region]

In the present embodiment, the electrode for electrolysis is fixed in at least one region of a surface of the membrane, and in the section of <Third embodiment>, the one or two or more regions are also referred to as fixed regions. The fixed region in the present embodiment is not particularly limited as long as the region is a portion that has a function of preventing separation of the electrode for electrolysis from the membrane and fixes the membrane onto the electrode for electrolysis. For example, the electrode for electrolysis per se may serve as a fixing means to constitute the fixed region, or a fixing member, which is separate from the electrode for electrolysis, may serve as a fixing means to constitute the fixed region. The fixed region in the present embodiment may be present only at the position corresponding to the conducting surface during electrolysis or may extend to the position corresponding to the non-conducting surface. The "conducting surface" corresponds to a portion designed so as to allow electrolytes to migrate between the anode chamber and the cathode chamber. The "non-conducting surface" means a portion other than the conducting surface.

Further, in the present embodiment, the proportion of the fixed region on the surface of the membrane (hereinbelow, simply also referred to as "proportion α") will be more than 0% and less than 93%. The above proportion can be determined as the proportion of the area of the fixed region (hereinbelow, simply also referred to as the "area S3") to the area of the surface of the membrane (hereinbelow, simply also referred to as the "area S1"). In the present embodiment, "the surface of the membrane means the surface of the side on which the electrode for electrolysis is present among the surfaces possessed by the membrane. The area not covered with the electrode for electrolysis in the surface of the membrane mentioned above is also included in the area S1.

From the viewpoint of improving the stability as a laminate of the membrane and the electrode for electrolysis, the proportion α (= 100 × S3/S1) is preferably 0.00000001% or more, more preferably 0.0000001% or more. In contrast, as in the conventional art, in the case of the membrane and the electrode firmly adhere to each other on the entire contact surface therebetween by a method such as thermal compression (i.e., the case where the proportion is 100%), the entire contact surface of the electrode sinks into the membrane to thereby physically adhere thereto. Such an adhesion portion inhibits sodium ions from migrating in the membrane to thereby markedly raise the voltage. In the present embodiment, from the viewpoint of providing a sufficient space for ions to freely migrate, the above proportion is less than 93%, preferably 90% or less, more preferably 70% or less, further preferably less than 60%.

In the present embodiment, from the viewpoint of achieving better electrolytic performance, it is preferable to adjust the area of the portion corresponding only to the conducting surface (hereinbelow, simply also referred to as the "area S3‴) of the area of the fixed region (area S3). That is, it is preferable to adjust the proportion of the area S3' (hereinbelow, simply also referred to as the "proportion β") to the area of the conducting surface (hereinbelow, simply also referred to as the "area S2"). The area S2 can be identified as the surface area of the electrode for electrolysis (the details will be mentioned below). Specifically, in the present embodiment, the proportion β (= 100 × S3'/S2) is preferably more than 0% and less than 100%, more preferably 0.0000001% or more and less than 83%, further preferably 0.000001% or more and 70% or less, even further preferably 0.00001% or more and 25% or less.

The proportions α and β described above can be measured, for example, as follows.

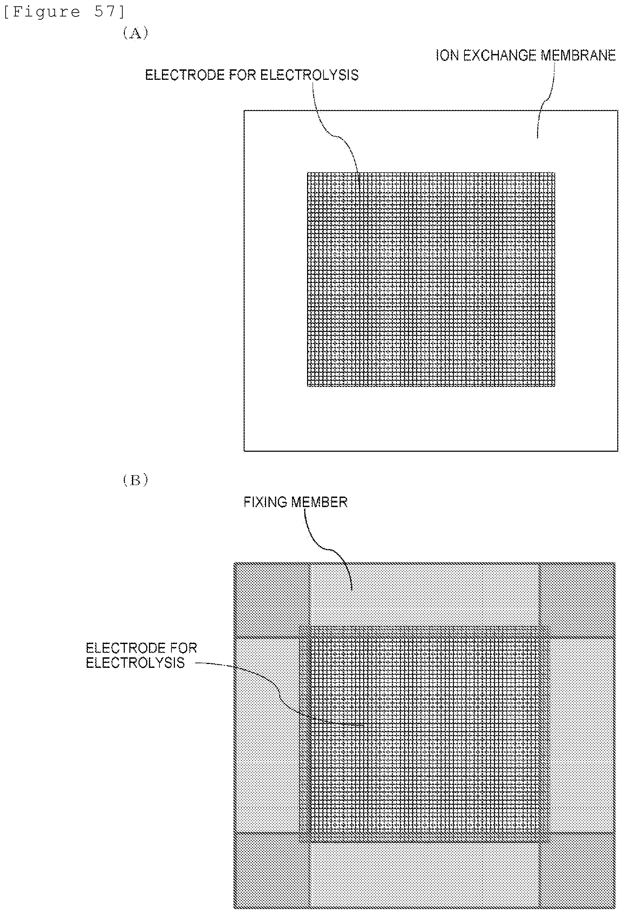

First, the area of the surface of the membrane S1 is calculated. Then, the area of the electrode for electrolysis S2 is calculated. The areas S1 and S2 herein can be identified as the area when the laminate of the membrane and the electrode for electrolysis is viewed from the side of the electrode for electrolysis (see Figure 57).

The form of the electrode for electrolysis is not particularly limited, and the electrode may have openings. In the case where the form is net or the like, which has openings, and the opening ratio is less than 90% (i), as for S2, the opening portions thereof are included in the area S2. In contrast, in the case where the opening ratio is 90% or more (ii), the area excluding the opening portions is used to calculate S2 in order to achieve electrolytic performance sufficiently. The opening ratio referred to herein is a numerical value (%; 100 × S'/S'') obtained by dividing the total area of the opening portions S' in the electrode for electrolysis by the area in the electrode for electrolysis S'', which is obtained when the opening portions are included in the area.

The area of the fixed region (area S3 and area S3') will be mentioned below.

As described above, the proportion of the region α(%) on the surface of the membrane can be determined by calculating 100 × (S3/S1). Additionally, the proportion of the area of the portion only corresponding to the conducting surface of the fixed region β (%) relative to the area of the conducting surface can be determined by calculating 100 × (S3'/S2).

More specifically, measurement can be performed by a method described in Example mentioned below.

The area of the surface of the membrane S1 to be identified as mentioned above is not particularly limited, but is preferably 1 time or more and 5 times or less, more preferably 1 time or more and 4 times or less, further preferably 1 time or more and 3 times or less the area of the conducting surface S2.

In the present embodiment, a fixing configuration in the fixed region is not intended to be limited, but, for example, a fixing configuration exemplified below can be employed. Only one fixing configuration can be employed, or two or more fixing configurations can be employed in combination.

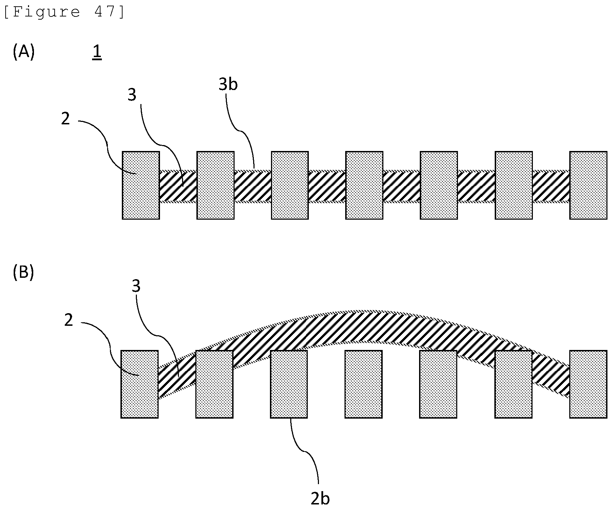

In the present embodiment, at least a portion of the electrode for electrolysis preferably penetrates the membrane and thereby is fixed in the fixed region. The aspect will be described by use of Figure 47A.

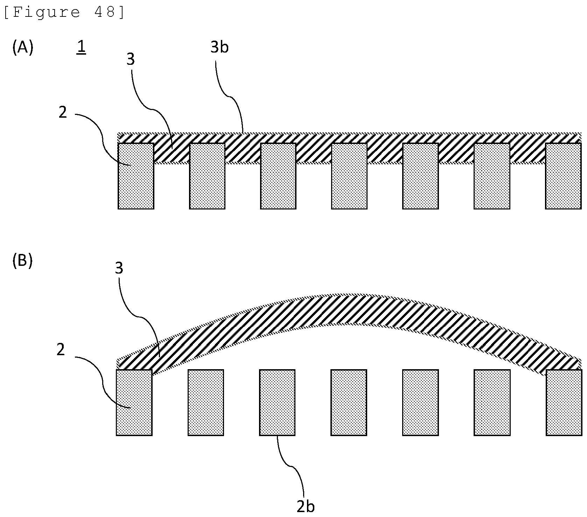

In Figure 47A, at least a portion of the electrode for electrolysis 2 penetrates the membrane 3 and thereby is fixed. As shown in Figure 47A, the portion of the electrode for electrolysis 2 is penetrating the membrane 3. Figure 47A shows an example in which the electrode for electrolysis 2 is a metal porous electrode. That is, in Figure 47A, a plurality of portions of the electrode for electrolysis 2 are separately shown, but these portions are continuous. Thus, the cross-section of an integral metal porous electrode is shown (the same applies to Figures 48 to 51 below).

In the electrode configuration, when the membrane 3 in the predetermined position (position to be the fixed region), for example, is pressed onto the electrode for electrolysis 2, a portion of the membrane 3 intrudes into the asperity geometry or opening geometry on the surface of the electrode for electrolysis 2. Then, recesses on the electrode surface and projections around openings penetrate the membrane 3 and preferably penetrate through to the outer surface 3b of the membrane 3, as shown in Figure 47A.

As described above, the fixing configuration in Figure 47A can be produced by pressing the membrane 3 onto the electrode for electrolysis 2. In this case, the membrane 3 is softened by warming and then subjected to thermal compression and thermal suction. Then, the electrode for electrolysis 2 penetrates the membrane 3. Alternatively, the membrane 3 may be used in a melt state. In this case, the membrane 3 is preferably suctioned from the side of the outer surface 2b (back surface side) of the electrode for electrolysis 2 in the state shown in Figure 47B. The region in which the membrane 3 is pressed onto the electrode for electrolysis 2 constitutes the "fixed region".

The fixing configuration shown in Figure 47A can be observed by a magnifier (loupe), optical microscope, or electron microscope. Since the electrode for electrolysis 2 has penetrated the membrane 3, it is possible to estimate the fixing configuration in Figure 47A by a test of the conduction between the outer surface 3b of the membrane 3 and the outer surface 2b of the electrode for electrolysis 2 by use of a tester or the like.

In Figure 47A, no electrolyte solution in the anode chamber and the cathode chamber partitioned by the membrane preferably permeates the penetration portion. Thus, the pore size at the penetration portion is preferably small enough not to allow the electrolyte solution to permeate the portion. Specifically, characteristics comparable to those of a membrane having no penetration portion are preferably exerted when an electrolytic test is performed. Alternatively, the penetration portion is preferably subjected to processing for preventing permeation of the electrolyte solution. It is preferable to use, in the penetration portion, a material that is not eluted or decomposed by the anode chamber electrolyte solution, products to be generated in the anode chamber, the cathode chamber electrolyte solution, and products to be generated in the cathode chamber. For example, EPDM and fluorine-containing resins are preferable. A fluorine resin having an ion exchange group is more preferable.

In the present embodiment, at least a portion of the electrode for electrolysis is preferably located inside the membrane and thereby fixed in the fixed region. The aspect will be described by use of Figure 48A.

As described above, the surface of the electrode for electrolysis 2 has an asperity geometry or opening geometry. In the embodiment shown in Figure 48A, a portion of the electrode surface enters the membrane 3 in the predetermined position (position to be the fixed region) and is fixed thereto. The fixing configuration shown in Figure 48A can be produced by pressing the membrane 3 onto the electrode for electrolysis 2. In this case, the fixing configuration in Figure 48A is preferably formed by softening the membrane 3 by warming and then thermally compressing and thermally suctioning the membrane 3. Alternatively, the fixing configuration in Figure 48A can be formed by melting the membrane 3. In this case, the membrane 3 preferably suctioned from the side of the outer surface 2b (back surface side) of the electrode for electrolysis 2.

The fixing configuration shown in Figure 48A can be observed by a magnifier (loupe), optical microscope, or electron microscope. Particularly preferable is a method including subjecting the sample to an embedding treatment, then forming a cross-section by a microtome, and observing the cross-section. In the fixing configuration shown in Figure 48A, the electrode for electrolysis 2 does not penetrate the membrane 3. Thus, no conduction between the outer surface 3b of the membrane 3 and the outer surface 2b of the electrode for electrolysis 2 is identified by the conduction test.

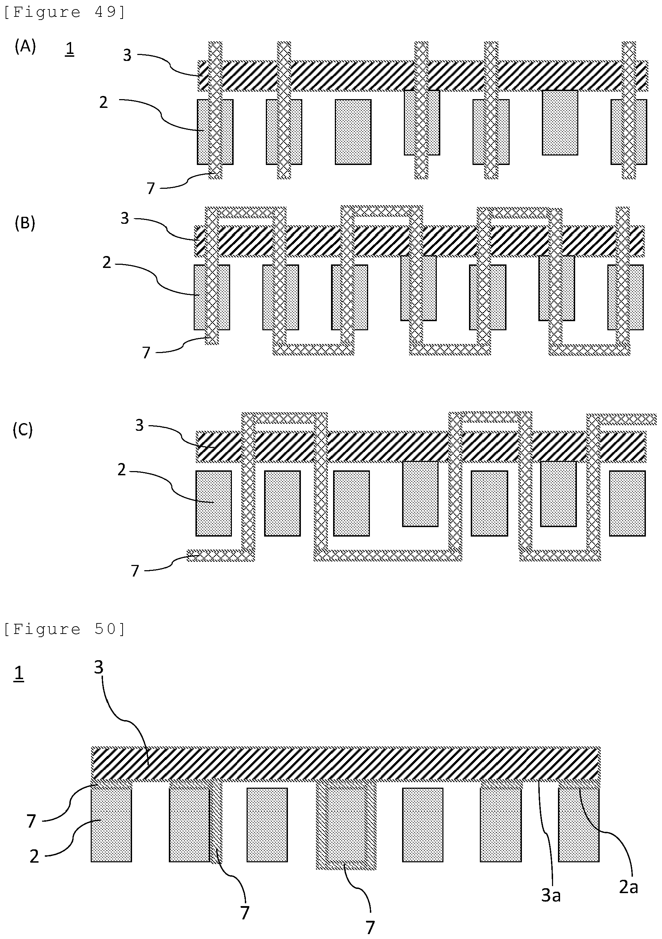

In the present embodiment, it is preferable to additionally have a fixing member for fixing the membrane and the electrode for electrolysis. The aspect will be described by use of Figures 49A to C.

The fixing configuration shown in Figure 49A is a configuration in which a fixing member 7, which is separate from the electrode for electrolysis 2 and the membrane 3, is used and the fixing member 7 penetrates and thereby fixes the electrode for electrolysis 2 and the membrane 3. The electrode for electrolysis 2 is not necessarily penetrated by the fixing member 7, and should be fixed by the fixing member 7 so as not to be separated from the membrane 2. The material for the fixing member 7 is not particularly limited, and materials constituted by metal, resin, or the like, for example, can be used as the fixing member 7. Examples of the metal include nickel, nichrome, titanium, and stainless steel (SUS). Oxides thereof may be used. Examples of the resin that can be used include fluorine resins (e.g., polytetrafluoroethylene (PTFE), copolymers of tetrafluoroethylene and perfluoroalkoxy ethylene (PFA), copolymers of tetrafluoroethylene and ethylene (ETFE), materials for the membrane 3 described below, polyvinylidene fluoride (PVDF), ethylene-propylene-diene rubber (EPDM), polyethylene (PP), polypropylene (PE), nylon, and aramid.

In the present embodiment, for example, a yarn-like fixing member (yarn-like metal or resin) is used to sew the predetermined position (position to be the fixed region) between the outer surface 2b of the electrode for electrolysis 2 and the outer surface 3b of the membrane 3, as shown in Figures 49B and C. The yarn-like resin is not particularly limited, but examples thereof include PTFE yarns. It is also possible to fix the electrode for electrolysis 2 to the membrane 3 by use of a fixing mechanism such as a tucker.

In Figures 49A to C, no electrolyte solution in the anode chamber and the cathode chamber partitioned by membrane preferably permeates the penetration portion. Thus, the pore size at the penetration portion is preferably small enough not to allow the electrolyte solution to permeate the portion. Specifically, characteristics comparable to those of a membrane having no penetration portion are preferably exerted when an electrolytic test is performed. Alternatively, the penetration portion is preferably subjected to processing for preventing permeation of the electrolyte solution. It is preferable to use, in the penetration portion, a material that is not eluted or decomposed by the anode chamber electrolyte solution, products to be generated in the anode chamber, the cathode chamber electrolyte solution, and products to be generated in the cathode chamber. For example, EPDM and fluorine-containing resins are preferable. A fluorine resin having an ion exchange group is more preferable.

The fixing configuration shown in Figure 50 is a configuration in which fixing is made by an organic resin (adhesion layer) interposed between the electrode for electrolysis 2 and the membrane 3. That is, in Figure 50, shown is a configuration in which an organic resin as the fixing member 7 is arranged on the predetermined position (position to be the fixed region) between the electrode for electrolysis 2 and the membrane 3 to thereby make fixing by adhesion. For example, the organic resin is applied onto the inner surface 2a of the electrode for electrolysis 2, the inner surface 3a of the membrane 3, or one or both of the inner surface 2a of the electrode for electrolysis 2 and the inner surface 3a of the membrane 3. Then, the fixing configuration shown in Figure 50 can be formed by laminating the electrode for electrolysis 2 to the membrane 3. The materials for the organic resin are not particularly limited, but examples thereof that can be used include fluorine resins (e.g., PTFE, PFA, and ETFE) and resins similar to the materials constituting the membrane 3 as mentioned above. Commercially available fluorine-containing adhesives and PTFE dispersions also can be used as appropriate. Additionally, multi-purpose vinyl acetate adhesives, ethylene-vinyl acetate copolymer adhesives, acrylic resin adhesives, α-olefin adhesives, styrene-butadiene rubber latex adhesives, vinyl chloride resin adhesives, chloroprene adhesives, nitrile rubber adhesives, urethane rubber adhesives, epoxy adhesives, silicone resin adhesives, modified silicone adhesives, epoxy-modified silicone resin adhesives, silylated urethane resin adhesives, cyanoacrylate adhesives, and the like also can be used.

In the present embodiment, organic resins that dissolve in an electrolyte solution or dissolve or decompose during electrolysis may be used. Examples of the organic resins that dissolve in an electrolyte solution or dissolve or decompose during electrolysis include, but are not limited to, vinyl acetate adhesives, ethylene-vinyl acetate copolymer adhesives, acrylic resin adhesives, α-olefin adhesives, styrene-butadiene rubber latex adhesives, vinyl chloride resin adhesives, chloroprene adhesives, nitrile rubber adhesives, urethane rubber adhesives, epoxy adhesives, silicone resin adhesives, modified silicone adhesives, epoxy-modified silicone resin adhesives, silylated urethane resin adhesives, and cyanoacrylate adhesives.

The fixing configuration shown in Figure 50 can be observed by an optical microscope or electron microscope. Particularly preferable is a method including subjecting the sample to an embedding treatment, then forming a cross-section by a microtome, and observing the cross-section.

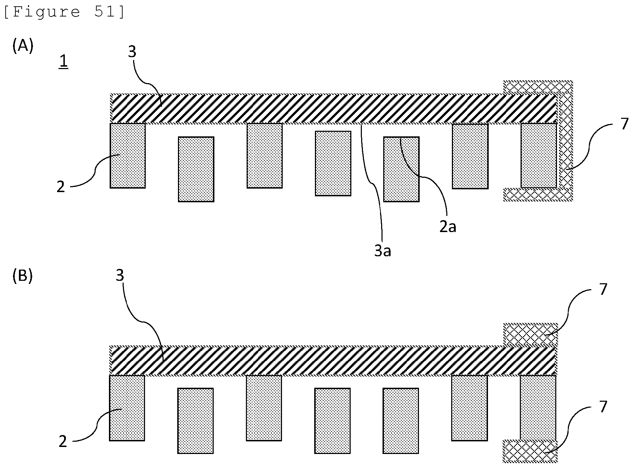

In the present embodiment, at least a portion of the fixing member preferably externally grips the membrane and the electrode for electrolysis. The aspect will be described by use of Figure 51A.

The fixing configuration shown in Figure 51A is a configuration in which the electrode for electrolysis 2 and membrane 3 are externally gripped and fixed. That is, the outer surface 2b of the electrode for electrolysis 2 and the outer surface 3b of the membrane 3 are sandwiched and fixed by a gripping member as the fixing member 7. In the fixing configuration shown in Figure 51A, a state in which the gripping member is engaging in the electrode for electrolysis 2 and the membrane 3 is also included. Examples of the gripping member include tape and clips.

In the present embodiment, a gripping member that dissolves in an electrolyte solution may be used. Examples of the gripping member that dissolves in an electrolyte solution include PET tape and clips and PVA tape and clips.

In the fixing configuration shown in Figure 51A, unlike those in Figures 47 to Figure 50, the electrode for electrolysis 2 and the membrane 3 are not bonded at the interface therebetween, but the inner surface 2a of the electrode for electrolysis 2 and the inner surface 3a of the membrane 3 are only abutted or opposed to each other. Removal of the gripping member can release the fixed state of the electrode for electrolysis 2 and the membrane 3 and separate the electrode for electrolysis 2 from the membrane 3.

Although not shown in Figure 51A, it is also possible to fix the electrode for electrolysis 2 and the membrane 3 using a gripping member in an electrolytic cell.

For example, it is possible to fold PTFE tape back to fix the membrane and the electrode in a sandwich manner.

Also in the present embodiment, at least a portion of the fixing member preferably fixes the membrane and the electrode for electrolysis by magnetic force. The aspect will be described by use of Figure 51B.

The fixing configuration shown in Figure 51B is a configuration in which the electrode for electrolysis 2 and membrane 3 are externally gripped and fixed. The difference from that in Figure 51A is that a pair of magnets are used as the gripping member, which is the fixing member. In the aspect of the fixing configuration shown in Figure 51B, a laminate 1 is attached to the electrolyzer. Thereafter, during operation of the electrolyzer, the gripping member may be left as it is or may be removed from the laminate 1.

Although not shown in Figure 51B, it is also possible to fix the electrode for electrolysis 2 and the membrane 3 using a gripping member in an electrolytic cell. When a magnetic material that adheres to magnets is used as a part of the material for the electrolytic cell, one gripping material is placed on the side of the membrane surface. Then, the gripping material and the electrolytic cell can sandwich and fix the electrode for electrolysis 2 and the membrane 3 therebetween.

A plurality of fixed region lines can be provided. That is, 1, 2, 3, ... n fixed region lines can be arranged from the side of the contour toward the inner side of the laminate 1. n is an integer of 1 or more. The m-th (m < n) fixed region line and the L-th (m < L ≤ n) fixed region line can be each formed to have a different fixation pattern.

A fixed region line to be formed in the electroconductive portion preferably has a line-symmetric shape. This tends to enable stress concentration to be controlled. For example, when two orthogonally intersecting directions are referred to as the X direction and the Y direction, it is possible to configure the fixed region by arranging a fixed region line each in the X direction and the Y direction or arranging a plurality of fixed region lines at equal intervals each in the X direction and the Y direction. The number of fixed region lines each in the X direction and the Y direction is not limited, but is preferably 100 or less each in the X direction and the Y direction. From the viewpoint of achieving the planarity of electroconductive portion, the number of fixed region lines is preferably 50 or less each in the X direction and the Y direction.

When the fixed region in the present embodiment has the fixing configuration shown in Figure 47A or Figure 49, a sealing material is preferably applied onto the membrane surface of the fixed region from the viewpoint of preventing a short circuit caused by a contact between the anode and the cathode. As the sealing material, the materials described for the above adhesives can be used.

When a fixing member is used, on determining the area S3 and the area S3', as for the portion at which the fixing member overlaps, the overlapping part is not included in the area S3 and the area S3'. For example, when fixing is made by using the PTFE yarns mentioned above as the fixing members, the portion at which the PTFE yarns intersect with each other is not included as an overlapping part in the area. When fixing is made by using the PTFE tapes mentioned above as the fixing members, the portion at which the PTFE tapes intersect with each other is not included as an overlapping part in the area.

When fixing is made by using the PTFE yarn or adhesive mentioned above as the fixing member, the area present on the back side of the electrode for electrolysis and/or membrane is also included in the area S3 and area S3'.

The laminate in the present embodiment may have various fixed regions in various positions as mentioned above, but the electrode for electrolysis preferably satisfies the "force applied" mentioned above particularly in a portion in which no fixed region is present (non-fixed region). That is, the force applied per unit·mass unit area of the electrode for electrolysis in the non-fixed region is preferably less than 1.5 N/mg·cm².

### [Electrolyzer]

The electrolyzer of the present embodiment includes the laminate of the present embodiment. Hereinafter, the case of performing common salt electrolysis by using an ion exchange membrane as the membrane is taken as an example, and one embodiment of the electrolyzer will be described in detail.

### [Electrolytic cell]

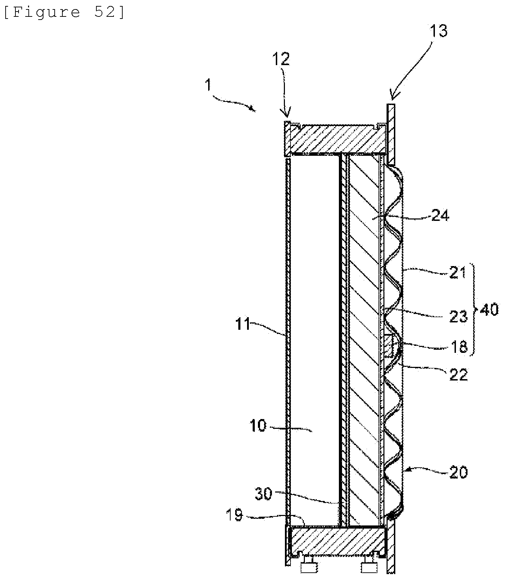

Figure 52 illustrates a cross-sectional view of an electrolytic cell 1.

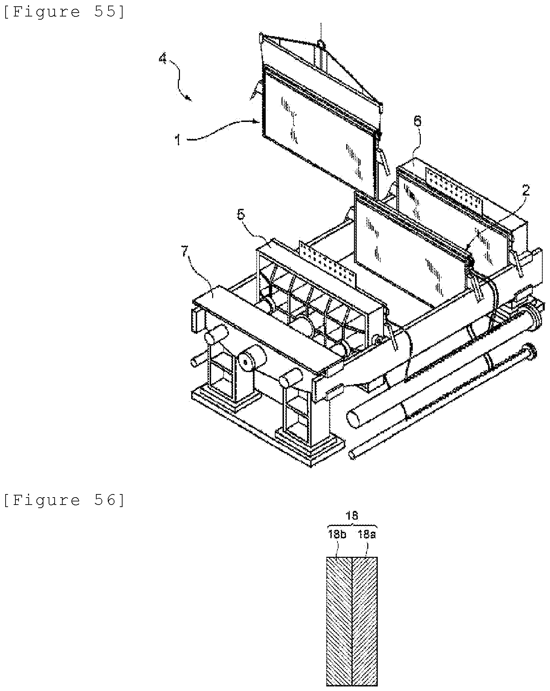

The electrolytic cell 1 comprises an anode chamber 10, a cathode chamber 20, a partition wall 30 placed between the anode chamber 10 and the cathode chamber 20, an anode 11 placed in the anode chamber 10, and a cathode 21 placed in the cathode chamber 20. As required, the electrolytic cell 1 has a substrate 18a and a reverse current absorbing layer 18b formed on the substrate 18a and may comprise a reverse current absorber 18 placed in the cathode chamber. The anode 11 and the cathode 21 belonging to the electrolytic cell 1 are electrically connected to each other. In other words, the electrolytic cell 1 comprises the following cathode structure. The cathode structure 40 comprises the cathode chamber 20, the cathode 21 placed in the cathode chamber 20, and the reverse current absorber 18 placed in the cathode chamber 20, the reverse current absorber 18 has the substrate 18a and the reverse current absorbing layer 18b formed on the substrate 18a, as shown in Figure 56, and the cathode 21 and the reverse current absorbing layer 18b are electrically connected. The cathode chamber 20 further has a collector 23, a support 24 supporting the collector, and a metal elastic body 22. The metal elastic body 22 is placed between the collector 23 and the cathode 21. The support 24 is placed between the collector 23 and the partition wall 30. The collector 23 is electrically connected to the cathode 21 via the metal elastic body 22. The partition wall 30 is electrically connected to the collector 23 via the support 24. Accordingly, the partition wall 30, the support 24, the collector 23, the metal elastic body 22, and the cathode 21 are electrically connected. The cathode 21 and the reverse current absorbing layer 18b are electrically connected. The cathode 21 and the reverse current absorbing layer may be directly connected or may be indirectly connected via the collector, the support, the metal elastic body, the partition wall, or the like. The entire surface of the cathode 21 is preferably covered with a catalyst layer for reduction reaction. The form of electrical connection may be a form in which the partition wall 30 and the support 24, the support 24 and the collector 23, and the collector 23 and the metal elastic body 22 are each directly attached and the cathode 21 is laminated on the metal elastic body 22. Examples of a method for directly attaching these constituent members to one another include welding and the like. Alternatively, the reverse current absorber 18, the cathode 21, and the collector 23 may be collectively referred to as a cathode structure 40.

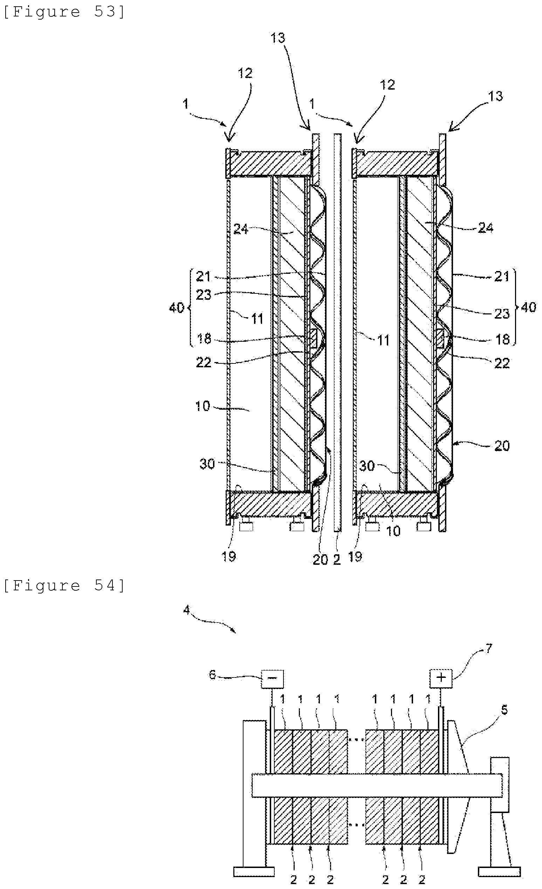

Figure 53 illustrates a cross-sectional view of two electrolytic cells 1 that are adjacent in the electrolyzer 4. Figure 54 shows an electrolyzer 4. Figure 55 shows a step of assembling the electrolyzer 4. As shown in Figure 53, an electrolytic cell 1, a cation exchange membrane 2, and an electrolytic cell 1 are arranged in series in the order mentioned. An ion exchange membrane 2 is arranged between the anode chamber of one electrolytic cell 1 among the two electrolytic cells that are adjacent in the electrolyzer and the cathode chamber of the other electrolytic cell 1. That is, the anode chamber 10 of the electrolytic cell 1 and the cathode chamber 20 of the electrolytic cell 1 adjacent thereto is separated by the cation exchange membrane 2. As shown in Figure 54, the electrolyzer 4 is composed of a plurality of electrolytic cells 1 connected in series via the ion exchange membrane 2. That is, the electrolyzer 4 is a bipolar electrolyzer comprising the plurality of electrolytic cells 1 arranged in series and ion exchange membranes 2 each arranged between adjacent electrolytic cells 1. As shown in Figure 55, the electrolyzer 4 is assembled by arranging the plurality of electrolytic cells 1 in series via the ion exchange membrane 2 and coupling the cells by means of a press device 5.

The electrolyzer 4 has an anode terminal 7 and a cathode terminal 6 to be connected to a power supply. The anode 11 of the electrolytic cell 1 located at farthest end among the plurality of electrolytic cells 1 coupled in series in the electrolyzer 4 is electrically connected to the anode terminal 7. The cathode 21 of the electrolytic cell located at the end opposite to the anode terminal 7 among the plurality of electrolytic cells 1 coupled in series in the electrolyzer 4 is electrically connected to the cathode terminal 6. The electric current during electrolysis flows from the side of the anode terminal 7, through the anode and cathode of each electrolytic cell 1, toward the cathode terminal 6. At the both ends of the coupled electrolytic cells 1, an electrolytic cell having an anode chamber only (anode terminal cell) and an electrolytic cell having a cathode chamber only (cathode terminal cell) may be arranged. In this case, the anode terminal 7 is connected to the anode terminal cell arranged at the one end, and the cathode terminal 6 is connected to the cathode terminal cell arranged at the other end.

In the case of electrolyzing brine, brine is supplied to each anode chamber 10, and pure water or a low-concentration sodium hydroxide aqueous solution is supplied to each cathode chamber 20. Each liquid is supplied from an electrolyte solution supply pipe (not shown in Figure), through an electrolyte solution supply hose (not shown in Figure), to each electrolytic cell 1. The electrolyte solution and products from electrolysis are recovered from an electrolyte solution recovery pipe (not shown in Figure). During electrolysis, sodium ions in the brine migrate from the anode chamber 10 of the one electrolytic cell 1, through the ion exchange membrane 2, to the cathode chamber 20 of the adjacent electrolytic cell 1. Thus, the electric current during electrolysis flows in the direction in which the electrolytic cells 1 are coupled in series. That is, the electric current flows, through the cation exchange membrane 2, from the anode chamber 10 toward the cathode chamber 20. As the brine is electrolyzed, chlorine gas is generated on the side of the anode 11, and sodium hydroxide (solute) and hydrogen gas are generated on the side of the cathode 21.

### (Anode chamber)

The anode chamber 10 has the anode 11 or anode feed conductor 11. When the electrode for electrolysis in the present embodiment is inserted to the anode side, 11 serves as the anode feed conductor. When the electrode for electrolysis in the present embodiment is not inserted to the anode side, 11 serves as the anode. The anode chamber 10 has an anode-side electrolyte solution supply unit that supplies an electrolyte solution to the anode chamber 10, a baffle plate that is arranged above the anode-side electrolyte solution supply unit so as to be substantially parallel or oblique to the partition wall 30, and an anode-side gas liquid separation unit arranged above the baffle plate to separate gas from the electrolyte solution including the gas mixed.

### (Anode)

When the electrode for electrolysis in the present embodiment is not inserted to the anode side, the anode 11 is provided in the frame of the anode chamber 10. As the anode 11, a metal electrode such as so-called DSA(R) can be used. DSA is an electrode including a titanium substrate of which surface is covered with an oxide comprising ruthenium, iridium, and titanium as components.

As the form, any of a perforated metal, nonwoven fabric, foamed metal, expanded metal, metal porous foil formed by electroforming, so-called woven mesh produced by knitting metal lines, and the like can be used.

### (Anode feed conductor)

When the electrode for electrolysis in the present embodiment is inserted to the anode side, the anode feed conductor 11 is provided in the frame of the anode chamber 10. As the anode feed conductor 11, a metal electrode such as so-called DSA(R) can be used, and titanium having no catalyst coating can be also used. Alternatively, DSA having a thinner catalyst coating can be also used. Further, a used anode can be also used.

As the form, any of a perforated metal, nonwoven fabric, foamed metal, expanded metal, metal porous foil formed by electroforming, so-called woven mesh produced by knitting metal lines, and the like can be used.

### (Anode-side electrolyte solution supply unit)

The anode-side electrolyte solution supply unit, which supplies the electrolyte solution to the anode chamber 10, is connected to the electrolyte solution supply pipe. The anode-side electrolyte solution supply unit is preferably arranged below the anode chamber 10. As the anode-side electrolyte solution supply unit, for example, a pipe on the surface of which aperture portions are formed (dispersion pipe) and the like can be used. Such a pipe is more preferably arranged along the surface of the anode 11 and parallel to the bottom 19 of the electrolytic cell. This pipe is connected to an electrolyte solution supply pipe (liquid supply nozzle) that supplies the electrolyte solution into the electrolytic cell 1. The electrolyte solution supplied from the liquid supply nozzle is conveyed with a pipe into the electrolytic cell 1 and supplied from the aperture portions provided on the surface of the pipe to inside the anode chamber 10. Arranging the pipe along the surface of the anode 11 and parallel to the bottom 19 of the electrolytic cell is preferable because the electrolyte solution can be uniformly supplied to inside the anode chamber 10.

### (Anode-side gas liquid separation unit)

The anode-side gas liquid separation unit is preferably arranged above the baffle plate. The anode-side gas liquid separation unit has a function of separating produced gas such as chlorine gas from the electrolyte solution during electrolysis. Unless otherwise specified, above means the upper direction in the electrolytic cell 1 in Figure 52, and below means the lower direction in the electrolytic cell 1 in Figure 52.

During electrolysis, produced gas generated in the electrolytic cell 1 and the electrolyte solution form a mixed phase (gas-liquid mixed phase), which is then emitted out of the system. Subsequently, pressure fluctuations inside the electrolytic cell 1 cause vibration, which may result in physical damage of the ion exchange membrane. In order to prevent this event, the electrolytic cell 1 in the present embodiment is preferably provided with an anode-side gas liquid separation unit to separate the gas from the liquid. The anode-side gas liquid separation unit is preferably provided with a defoaming plate to eliminate bubbles. When the gas-liquid mixed phase flow passes through the defoaming plate, bubbles burst to thereby enable the electrolyte solution and the gas to be separated. As a result, vibration during electrolysis can be prevented.

### (Baffle plate)

The baffle plate is preferably arranged above the anode-side electrolyte solution supply unit and arranged substantially in parallel with or obliquely to the partition wall 30. The baffle plate is a partition plate that controls the flow of the electrolyte solution in the anode chamber 10. When the baffle plate is provided, it is possible to cause the electrolyte solution (brine or the like) to circulate internally in the anode chamber 10 to thereby make the concentration uniform. In order to cause internal circulation, the baffle plate is preferably arranged so as to separate the space in proximity to the anode 11 from the space in proximity to the partition wall 30. From such a viewpoint, the baffle plate is preferably placed so as to be opposed to the surface of the anode 11 and to the surface of the partition wall 30. In the space in proximity to the anode partitioned by the baffle plate, as electrolysis proceeds, the electrolyte solution concentration (brine concentration) is lowered, and produced gas such as chlorine gas is generated. This results in a difference in the gas-liquid specific gravity between the space in proximity to anode 11 and the space in proximity to the partition wall 30 partitioned by the baffle plate. By use of the difference, it is possible to promote the internal circulation of the electrolyte solution in the anode chamber 10 to thereby make the concentration distribution of the electrolyte solution in the anode chamber 10 more uniform.

Although not shown in Figure 52, a collector may be additionally provided inside the anode chamber 10. The material and configuration of such a collector may be the same as those of the collector of the cathode chamber mentioned below. In the anode chamber 10, the anode 11 per se may also serve as the collector.

### (Partition wall)

The partition wall 30 is arranged between the anode chamber 10 and the cathode chamber 20. The partition wall 30 may be referred to as a separator, and the anode chamber 10 and the cathode chamber 20 are partitioned by the partition wall 30. As the partition wall 30, one known as a separator for electrolysis can be used, and an example thereof includes a partition wall formed by welding a plate comprising nickel to the cathode side and a plate comprising titanium to the anode side.

### (Cathode chamber)

In the cathode chamber 20, when the electrode for electrolysis in the present embodiment is inserted to the cathode side, 21 serves as a cathode feed conductor. When the electrode for electrolysis in the present embodiment is not inserted to the cathode side, 21 serves as a cathode. When a reverse current absorber is included, the cathode or cathode feed conductor 21 is electrically connected to the reverse current absorber. The cathode chamber 20, similarly to the anode chamber 10, preferably has a cathode-side electrolyte solution supply unit and a cathode-side gas liquid separation unit. Among the components constituting the cathode chamber 20, components similar to those constituting the anode chamber 10 will be not described.

### (Cathode)

When the electrode for electrolysis in the present embodiment is not inserted to the cathode side, a cathode 21 is provided in the frame of the cathode chamber 20. The cathode 21 preferably has a nickel substrate and a catalyst layer that covers the nickel substrate. Examples of the components of the catalyst layer on the nickel substrate include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. The cathode 21 may be subjected to a reduction treatment, as required. As the substrate of the cathode 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

### (Cathode feed conductor)

When the electrode for electrolysis in the present embodiment is inserted to the cathode side, a cathode feed conductor 21 is provided in the frame of the cathode chamber 20. The cathode feed conductor 21 may be covered with a catalytic component. The catalytic component may be a component that is originally used as the cathode and remains. Examples of the components of the catalyst layer include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. Nickel, nickel alloys, and nickel-plated iron or stainless, having no catalyst coating may be used. As the substrate of the cathode feed conductor 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

### (Reverse current absorbing layer)

A material having a redox potential less noble than the redox potential of the element for the catalyst layer of the cathode mentioned above may be selected as a material for the reverse current absorbing layer. Examples thereof include nickel and iron.

### (Collector)

The cathode chamber 20 preferably comprises the collector 23. The collector 23 improves current collection efficiency. In the present embodiment, the collector 23 is a porous plate and is preferably arranged in substantially parallel to the surface of the cathode 21.

The collector 23 preferably comprises an electrically conductive metal such as nickel, iron, copper, silver, and titanium. The collector 23 may be a mixture, alloy, or composite oxide of these metals. The collector 23 may have any form as long as the form enables the function of the collector and may have a plate or net form.

### (Metal elastic body)

Placing the metal elastic body 22 between the collector 23 and the cathode 21 presses each cathode 21 of the plurality of electrolytic cells 1 connected in series onto the ion exchange membrane 2 to reduce the distance between each anode 11 and each cathode 21. Then, it is possible to lower the voltage to be applied entirely across the plurality of electrolytic cells 1 connected in series. Lowering of the voltage enables the power consumption to be reduced. With the metal elastic body 22 placed, the pressing pressure caused by the metal elastic body 22 enables the electrode for electrolysis to be stably maintained in place when the laminate including the electrode for electrolysis according to the present embodiment is placed in the electrolytic cell.

As the metal elastic body 22, spring members such as spiral springs and coils and cushioning mats may be used. As the metal elastic body 22, a suitable one may be appropriately employed, in consideration of a stress to press the ion exchange membrane and the like. The metal elastic body 22 may be provided on the surface of the collector 23 on the side of the cathode chamber 20 or may be provided on the surface of the partition wall on the side of the anode chamber 10. Both the chambers are usually partitioned such that the cathode chamber 20 becomes smaller than the anode chamber 10. Thus, from the viewpoint of the strength of the frame and the like, the metal elastic body 22 is preferably provided between the collector 23 and the cathode 21 in the cathode chamber 20. The metal elastic body 23 preferably comprises an electrically conductive metal such as nickel, iron, copper, silver, and titanium.

### (Support)

The cathode chamber 20 preferably comprises the support 24 that electrically connects the collector 23 to the partition wall 30. This can achieve an efficient current flow.

The support 24 preferably comprises an electrically conductive metal such as nickel, iron, copper, silver, and titanium. The support 24 may have any shape as long as the support can support the collector 23 and may have a rod, plate, or net shape. The support 24 has a plate shape, for example. A plurality of supports 24 are arranged between the partition wall 30 and the collector 23. The plurality of supports 24 are aligned such that the surfaces thereof are in parallel to each other. The supports 24 are arranged substantially perpendicular to the partition wall 30 and the collector 23.

### (Anode side gasket and cathode side gasket)

The anode side gasket is preferably arranged on the frame surface constituting the anode chamber 10. The cathode side gasket is preferably arranged on the frame surface constituting the cathode chamber 20. Electrolytic cells are connected to each other such that the anode side gasket included in one electrolytic cell and the cathode side gasket of an electrolytic cell adjacent to the cell sandwich the ion exchange membrane 2 (see Figures 52 and 53). These gaskets can impart airtightness to connecting points when the plurality of electrolytic cells 1 is connected in series via the ion exchange membrane 2.

The gaskets form a seal between the ion exchange membrane and electrolytic cells. Specific examples of the gaskets include picture frame-like rubber sheets at the center of which an aperture portion is formed. The gaskets are required to have resistance against corrosive electrolyte solutions or produced gas and be usable for a long period. Thus, in respect of chemical resistance and hardness, vulcanized products and peroxide-crosslinked products of ethylene-propylene-diene rubber (EPDM rubber) and ethylene-propylene rubber (EPM rubber) are usually used as the gaskets. Alternatively, gaskets of which region to be in contact with liquid (liquid contact portion) is covered with a fluorine-containing resin such as polytetrafluoroethylene (PTFE) and tetrafluoroethylene-perfluoroalkyl vinyl ether copolymers (PFA) may be employed as required. These gaskets each may have an aperture portion so as not to inhibit the flow of the electrolyte solution, and the shape of the aperture portion is not particularly limited. For example, a picture frame-like gasket is attached with an adhesive or the like along the peripheral edge of each aperture portion of the anode chamber frame constituting the anode chamber 10 or the cathode chamber frame constituting the cathode chamber 20. Then, for example, in the case where the two electrolytic cells 1 are connected via the ion exchange membrane 2 (see Figure 53), each electrolytic cell 1 onto which the gasket is attached should be tightened via ion exchange membrane 2. This tightening can prevent the electrolyte solution, alkali metal hydroxide, chlorine gas, hydrogen gas, and the like generated from electrolysis from leaking out of the electrolytic cells 1.

### (Ion exchange membrane 2)

The ion exchange membrane 2 is as described in the section of the ion exchange membrane described above.

### (Water electrolysis)

The electrolyzer of the present embodiment, as an electrolyzer in the case of electrolyzing water, has a configuration in which the ion exchange membrane in an electrolyzer for use in the case of electrolyzing common salt mentioned above is replaced by a microporous membrane. The raw material to be supplied, which is water, is different from that for the electrolyzer in the case of electrolyzing common salt mentioned above. As for the other components, components similar to that of the electrolyzer in the case of electrolyzing common salt can be employed also in the electrolyzer in the case of electrolyzing water. Since chlorine gas is generated in the anode chamber in the case of common salt electrolysis, titanium is used as the material of the anode chamber, but in the case of water electrolysis, only oxygen gas is generated in the anode chamber. Thus, a material identical to that of the cathode chamber can be used. An example thereof is nickel. For anode coating, catalyst coating for oxygen generation is suitable. Examples of the catalyst coating include metals, oxides, and hydroxides of the platinum group metals and transition metal group metals. For example, elements such as platinum, iridium, palladium, ruthenium, nickel, cobalt, and iron can be used.

### <Fourth embodiment> (not in accordance with the invention as claimed)

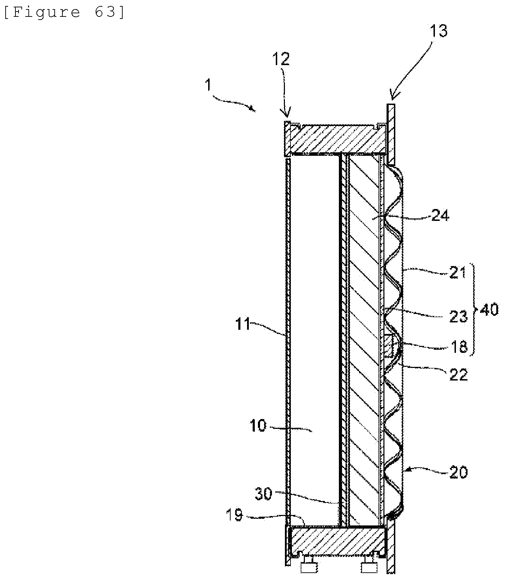

Here, a fourth embodiment of the present invention will be described in detail with reference to Figures 63 to 90.

### [Electrolyzer]

The electrolyzer according to the fourth embodiment (hereinafter, in the section of <Fourth embodiment>, simply referred to as "the present embodiment") comprises an anode, an anode frame that supports the anode, an anode side gasket that is arranged on the anode frame, a cathode that is opposed to the anode, a cathode frame that supports the cathode, a cathode side gasket that is arranged on the cathode frame and is opposed to the anode side gasket, and a laminate of a membrane and an electrode for electrolysis, the laminate being arranged between the anode side gasket and the cathode side gasket, wherein at least a portion of the laminate is sandwiched between the anode side gasket and the cathode side gasket, and a ventilation resistance is 24 kPa·s/m or less when the electrode for electrolysis has a size of 50 mm × 50 mm, the ventilation resistance being measured under conditions of a temperature of 24°C, a relative humidity of 32%, a piston speed of 0.2 cm/s, and a ventilation volume of 0.4 cc/cm²/s. As configured described above, the electrolyzer of the present embodiment has excellent electrolytic performance as well as can prevent damage of the membrane.

The electrolyzer of the present embodiment comprises the constituent members mentioned above, in other words, comprises an electrolytic cell. Hereinafter, a case of performing common salt electrolysis by using an ion exchange membrane as the membrane is taken as an example, and one embodiment of the electrolyzer will be described in detail.

### [Electrolytic cell]

First, the electrolytic cell, which can be used as a constituent unit of the electrolyzer of the present embodiment, will be described. Figure 63 illustrates a cross-sectional view of an electrolytic cell 1.

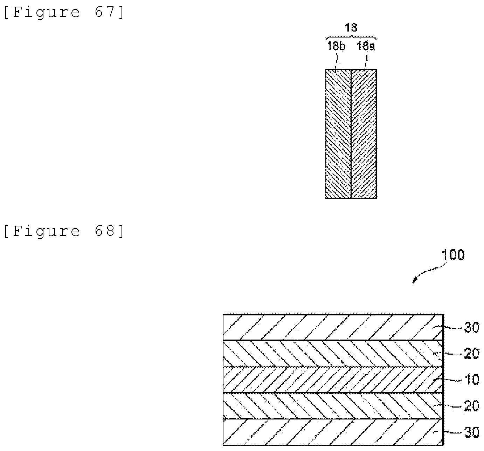

The electrolytic cell 1 comprises an anode chamber 10, a cathode chamber 20, a partition wall 30 placed between the anode chamber 10 and the cathode chamber 20, an anode 11 placed in the anode chamber 10, and a cathode 21 placed in the cathode chamber 20. As required, the electrolytic cell 1 has a substrate 18a and a reverse current absorbing layer 18b formed on the substrate 18a and may comprise a reverse current absorber 18 placed in the cathode chamber. The anode 11 and the cathode 21 belonging to the electrolytic cell 1 are electrically connected to each other. In other words, the electrolytic cell 1 comprises the following cathode structure. The cathode structure 40 comprises the cathode chamber 20, the cathode 21 placed in the cathode chamber 20, and the reverse current absorber 18 placed in the cathode chamber 20, the reverse current absorber 18 has the substrate 18a and the reverse current absorbing layer 18b formed on the substrate 18a, as shown in Figure 67, and the cathode 21 and the reverse current absorbing layer 18b are electrically connected. The cathode chamber 20 further has a collector 23, a support 24 supporting the collector, and a metal elastic body 22. The metal elastic body 22 is placed between the collector 23 and the cathode 21. The support 24 is placed between the collector 23 and the partition wall 30. The collector 23 is electrically connected to the cathode 21 via the metal elastic body 22. The partition wall 30 is electrically connected to the collector 23 via the support 24. Accordingly, the partition wall 30, the support 24, the collector 23, the metal elastic body 22, and the cathode 21 are electrically connected. The cathode 21 and the reverse current absorbing layer 18b are electrically connected. The cathode 21 and the reverse current absorbing layer may be directly connected or may be indirectly connected via the collector, the support, the metal elastic body, the partition wall, or the like. The entire surface of the cathode 21 is preferably covered with a catalyst layer for reduction reaction. The form of electrical connection may be a form in which the partition wall 30 and the support 24, the support 24 and the collector 23, and the collector 23 and the metal elastic body 22 are each directly attached and the cathode 21 is laminated on the metal elastic body 22. Examples of a method for directly attaching these constituent members to one another include welding and the like. Alternatively, the reverse current absorber 18, the cathode 21, and the collector 23 may be collectively referred to as a cathode structure 40.

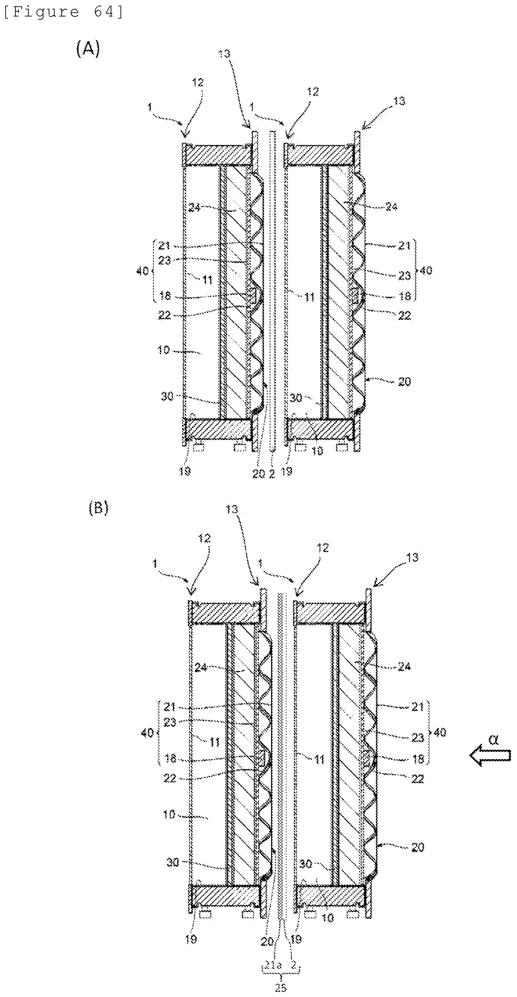

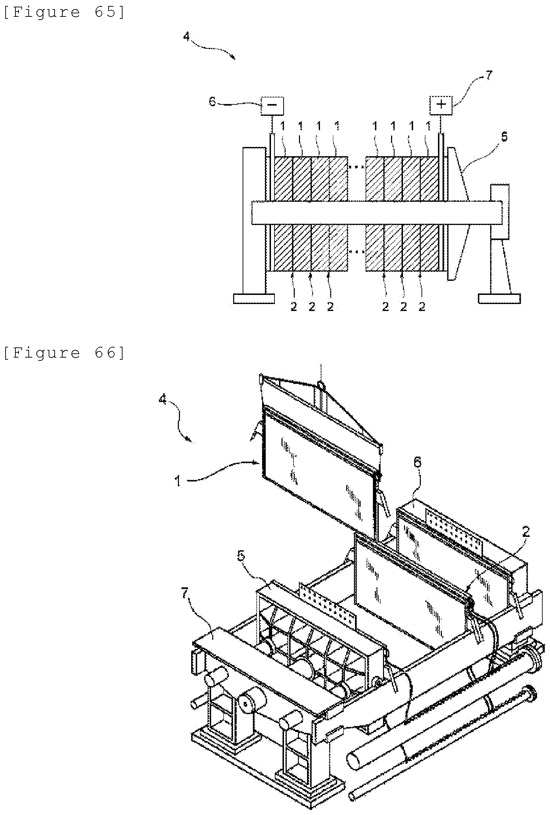

Figure 64 illustrates a cross-sectional view of two electrolytic cells 1 that are adjacent in the electrolyzer 4. Figure 65 shows an electrolyzer 4. Figure 66 shows a step of assembling the electrolyzer 4.

In a conventional electrolyzer, as shown in Figure 64A, an electrolytic cell 1, a membrane (herein, a cation exchange membrane) 2, and an electrolytic cell 1 are arranged in series in the order mentioned. The ion exchange membrane 2 is arranged between the anode chamber of one electrolytic cell 1 of the two electrolytic cells that are adjacent in the electrolyzer and the cathode chamber of the other electrolytic cell 1. That is, in the electrolyzer, the anode chamber 10 of the electrolytic cell 1 and the cathode chamber 20 of the electrolytic cell 1 adjacent thereto are usually separated by the cation exchange membrane 2.

Meanwhile, in the present embodiment, as shown in Figure 64B, an electrolytic cell 1, a laminate 25 having a membrane (herein, a cation exchange membrane) 2, and an electrode for electrolysis (herein, a cathode for renewal) 21a, and an electrolytic cell 1 are arranged in series in the order mentioned. The laminate 25, at the portion thereof (in Figure 64B, the top end portion), is sandwiched between an anode gasket 12 and a cathode gasket 13.

As shown in Figure 65, the electrolyzer 4 is composed of a plurality of electrolytic cells 1 connected in series via the ion exchange membrane 2. That is, the electrolyzer 4 is a bipolar electrolyzer comprising the plurality of electrolytic cells 1 arranged in series and ion exchange membranes 2 each arranged between adjacent electrolytic cells 1. As shown in Figure 66, the electrolyzer 4 is assembled by arranging the plurality of electrolytic cells 1 connected in series via the ion exchange membrane 2 and coupling the cells by means of a press device 5.

The electrolyzer 4 has an anode terminal 7 and a cathode terminal 6 to be connected to a power supply. The anode 11 of the electrolytic cell 1 located at farthest end among the plurality of electrolytic cells 1 coupled in series in the electrolyzer 4 is electrically connected to the anode terminal 7. The cathode 21 of the electrolytic cell located at the end opposite to the anode terminal 7 among the plurality of electrolytic cells 1 coupled in series in the electrolyzer 4 is electrically connected to the cathode terminal 6. The electric current during electrolysis flows from the side of the anode terminal 7, through the anode and cathode of each electrolytic cell 1, toward the cathode terminal 6. At the both ends of the coupled electrolytic cells 1, an electrolytic cell having an anode chamber only (anode terminal cell) and an electrolytic cell having a cathode chamber only (cathode terminal cell) may be arranged. In this case, the anode terminal 7 is connected to the anode terminal cell arranged at the one end, and the cathode terminal 6 is connected to the cathode terminal cell arranged at the other end.

In the case of electrolyzing brine, brine is supplied to each anode chamber 10, and pure water or a low-concentration sodium hydroxide aqueous solution is supplied to each cathode chamber 20. Each liquid is supplied from an electrolyte solution supply pipe (not shown in Figure), through an electrolyte solution supply hose (not shown in Figure), to each electrolytic cell 1. The electrolyte solution and products from electrolysis are recovered from an electrolyte solution recovery pipe (not shown in Figure). During electrolysis, sodium ions in the brine migrate from the anode chamber 10 of the one electrolytic cell 1, through the ion exchange membrane 2, to the cathode chamber 20 of the adjacent electrolytic cell 1. Thus, the electric current during electrolysis flows in the direction in which the electrolytic cells 1 are coupled in series. That is, the electric current flows, through the cation exchange membrane 2, from the anode chamber 10 toward the cathode chamber 20. As the brine is electrolyzed, chlorine gas is generated on the side of the anode 11, and sodium hydroxide (solute) and hydrogen gas are generated on the side of the cathode 21.

As mentioned above, the characteristics of the membrane, cathode, and anode in the electrolyzer deteriorate usually in association with operation of the electrolyzer and replacement by new ones become required before long. In the case of replacement of only the membrane, renewing can be easily performed by extracting the existing membrane between the electrolytic cells and inserting a new membrane therebetween, but replacement of the anode or the cathode by means of welding is complicated because a specialized installation is required.

Meanwhile, in the present embodiment, the laminate 25, at the portion thereof (in Figure 64B, the top end portion), is sandwiched between an anode gasket 12 and a cathode gasket 13, as described above. Particularly in the example shown in Figure 64B, the membrane (herein, the cation exchange membrane) 2 and the electrode for electrolysis (herein, the cathode for renewal) 21a can be fixed in at least the top end portion of the laminate by pressing in the direction from the anode gasket 12 toward the laminate 25 and pressing in the direction from the cathode gasket 13 toward the laminate 25. This case is preferable because it is not necessary to fix the laminate 25 (in particular, the electrode for electrolysis) on the existing member (e.g., the existing cathode) by welding. That is, the case where both the electrode for electrolysis and the membrane are sandwiched between the anode side gasket and the cathode side gasket is preferable because the work efficiency during electrode renewing in the electrolyzer tends to be improved.

Further, in accordance with the configuration of the electrolyzer of the present embodiment, the membrane and the electrode for electrolysis are sufficiently fixed as the laminate, and thus, excellent electrolytic performance can be achieved.

### (Anode chamber)

The anode chamber 10 has the anode 11 or anode feed conductor 11. The feed conductor herein referred to means a degraded electrode (i.e., the existing electrode), an electrode having no catalyst coating, and the like. When the electrode for electrolysis in the present embodiment is inserted to the anode side, 11 serves as an anode feed conductor. When the electrode for electrolysis in the present embodiment is not inserted to the anode side, 11 serves as an anode. The anode chamber 10 preferably has an anode-side electrolyte solution supply unit that supplies an electrolyte solution to the anode chamber 10, a baffle plate that is arranged above the anode-side electrolyte solution supply unit so as to be substantially parallel or oblique to a partition wall 30, and an anode-side gas liquid separation unit that is arranged above the baffle plate to separate gas from the electrolyte solution including the gas mixed.

### (Anode)

When the electrode for electrolysis in the present embodiment is not inserted to the anode side, an anode 11 is provided in the frame of the anode chamber 10 (i.e., the anode frame). As the anode 11, a metal electrode such as so-called DSA(R) can be used. DSA is an electrode including a titanium substrate of which surface is covered with an oxide comprising ruthenium, iridium, and titanium as components.

As the form, any of a perforated metal, nonwoven fabric, foamed metal, expanded metal, metal porous foil formed by electroforming, so-called woven mesh produced by knitting metal lines, and the like can be used.

### (Anode feed conductor)

When the electrode for electrolysis in the present embodiment is inserted to the anode side, the anode feed conductor 11 is provided in the frame of the anode chamber 10. As the anode feed conductor 11, a metal electrode such as so-called DSA(R) can be used, and titanium having no catalyst coating can be also used. Alternatively, DSA having a thinner catalyst coating can be also used. Further, a used anode can be also used.

As the form, any of a perforated metal, nonwoven fabric, foamed metal, expanded metal, metal porous foil formed by electroforming, so-called woven mesh produced by knitting metal lines, and the like can be used.

### (Anode-side electrolyte solution supply unit)

The anode-side electrolyte solution supply unit, which supplies the electrolyte solution to the anode chamber 10, is connected to the electrolyte solution supply pipe. The anode-side electrolyte solution supply unit is preferably arranged below the anode chamber 10. As the anode-side electrolyte solution supply unit, for example, a pipe on the surface of which aperture portions are formed (dispersion pipe) and the like can be used. Such a pipe is more preferably arranged along the surface of the anode 11 and parallel to the bottom 19 of the electrolytic cell. This pipe is connected to an electrolyte solution supply pipe (liquid supply nozzle) that supplies the electrolyte solution into the electrolytic cell 1. The electrolyte solution supplied from the liquid supply nozzle is conveyed with a pipe into the electrolytic cell 1 and supplied from the aperture portions provided on the surface of the pipe to inside the anode chamber 10. Arranging the pipe along the surface of the anode 11 and parallel to the bottom 19 of the electrolytic cell is preferable because the electrolyte solution can be uniformly supplied to inside the anode chamber 10.

### (Anode-side gas liquid separation unit)

The anode-side gas liquid separation unit is preferably arranged above the baffle plate. The anode-side gas liquid separation unit has a function of separating produced gas such as chlorine gas from the electrolyte solution during electrolysis. Unless otherwise specified, above means the upper direction in the electrolytic cell 1 in Figure 63, and below means the lower direction in the electrolytic cell 1 in Figure 63.

During electrolysis, produced gas generated in the electrolytic cell 1 and the electrolyte solution form a mixed phase (gas-liquid mixed phase), which is then emitted out of the system. Subsequently, pressure fluctuations inside the electrolytic cell 1 cause vibration, which may result in physical damage of the ion exchange membrane. In order to prevent this event, the electrolytic cell 1 in the present embodiment is preferably provided with an anode-side gas liquid separation unit to separate the gas from the liquid. The anode-side gas liquid separation unit is preferably provided with a defoaming plate to eliminate bubbles. When the gas-liquid mixed phase flow passes through the defoaming plate, bubbles burst to thereby enable the electrolyte solution and the gas to be separated. As a result, vibration during electrolysis can be prevented.

### (Baffle plate)

The baffle plate is preferably arranged above the anode-side electrolyte solution supply unit and arranged substantially in parallel with or obliquely to the partition wall 30. The baffle plate is a partition plate that controls the flow of the electrolyte solution in the anode chamber 10. When the baffle plate is provided, it is possible to cause the electrolyte solution (brine or the like) to circulate internally in the anode chamber 10 to thereby make the concentration uniform. In order to cause internal circulation, the baffle plate is preferably arranged so as to separate the space in proximity to the anode 11 from the space in proximity to the partition wall 30. From such a viewpoint, the baffle plate is preferably placed so as to be opposed to the surface of the anode 11 and to the surface of the partition wall 30. In the space in proximity to the anode partitioned by the baffle plate, as electrolysis proceeds, the electrolyte solution concentration (brine concentration) is lowered, and produced gas such as chlorine gas is generated. This results in a difference in the gas-liquid specific gravity between the space in proximity to anode 11 and the space in proximity to the partition wall 30 partitioned by the baffle plate. By use of the difference, it is possible to promote the internal circulation of the electrolyte solution in the anode chamber 10 to thereby make the concentration distribution of the electrolyte solution in the anode chamber 10 more uniform.

Although not shown in Figure 63, a collector may be additionally provided inside the anode chamber 10. The material and configuration of such a collector may be the same as those of the collector of the cathode chamber mentioned below. In the anode chamber 10, the anode 11 per se may also serve as the collector.

### (Partition wall)

The partition wall 30 is arranged between the anode chamber 10 and the cathode chamber 20. The partition wall 30 may be referred to as a separator, and the anode chamber 10 and the cathode chamber 20 are partitioned by the partition wall 30. As the partition wall 30, one known as a separator for electrolysis can be used, and an example thereof includes a partition wall formed by welding a plate comprising nickel to the cathode side and a plate comprising titanium to the anode side.

### (Cathode chamber)

In the cathode chamber 20, when the electrode for electrolysis in the present embodiment is inserted to the cathode side, 21 serves as a cathode feed conductor. When the electrode for electrolysis in the present embodiment is not inserted to the cathode side, 21 serves as a cathode. When a reverse current absorber is included, the cathode or cathode feed conductor 21 is electrically connected to the reverse current absorber. The cathode chamber 20, similarly to the anode chamber 10, preferably has a cathode-side electrolyte solution supply unit and a cathode-side gas liquid separation unit. Among the components constituting the cathode chamber 20, components similar to those constituting the anode chamber 10 will be not described.

### (Cathode)

When the electrode for electrolysis in the present embodiment is not inserted to the cathode side, a cathode 21 is provided in the frame of the cathode chamber 20 (i.e., the cathode frame). The cathode 21 preferably has a nickel substrate and a catalyst layer that covers the nickel substrate. Examples of the components of the catalyst layer on the nickel substrate include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. The cathode 21 may be subjected to a reduction treatment, as required. As the substrate of the cathode 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

### (Cathode feed conductor)

When the electrode for electrolysis in the present embodiment is inserted to the cathode side, a cathode feed conductor 21 is provided in the frame of the cathode chamber 20. The cathode feed conductor 21 may be covered with a catalytic component. The catalytic component may be a component that is originally used as the cathode and remains. Examples of the components of the catalyst layer include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. Nickel, nickel alloys, and nickel-plated iron or stainless, having no catalyst coating may be used. As the substrate of the cathode feed conductor 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

### (Reverse current absorbing layer)

A material having a redox potential less noble than the redox potential of the element for the catalyst layer of the cathode mentioned above may be selected as a material for the reverse current absorbing layer. Examples thereof include nickel and iron.

### (Collector)

The cathode chamber 20 preferably comprises the collector 23. The collector 23 improves current collection efficiency. In the present embodiment, the collector 23 is a porous plate and is preferably arranged in substantially parallel to the surface of the cathode 21.

The collector 23 preferably comprises an electrically conductive metal such as nickel, iron, copper, silver, and titanium. The collector 23 may be a mixture, alloy, or composite oxide of these metals. The collector 23 may have any form as long as the form enables the function of the collector and may have a plate or net form.

### (Metal elastic body)

Placing the metal elastic body 22 between the collector 23 and the cathode 21 presses each cathode 21 of the plurality of electrolytic cells 1 connected in series onto the ion exchange membrane 2 to reduce the distance between each anode 11 and each cathode 21. Then, it is possible to lower the voltage to be applied entirely across the plurality of electrolytic cells 1 connected in series. Lowering of the voltage enables the power consumption to be reduced. With the metal elastic body 22 placed, the pressing pressure caused by the metal elastic body 22 enables the electrode for electrolysis to be stably maintained in place when the laminate including the electrode for electrolysis in the present embodiment is placed in the electrolytic cell.

As the metal elastic body 22, spring members such as spiral springs and coils and cushioning mats may be used. As the metal elastic body 22, a suitable one may be appropriately employed, in consideration of a stress to press the ion exchange membrane and the like. The metal elastic body 22 may be provided on the surface of the collector 23 on the side of the cathode chamber 20 or may be provided on the surface of the partition wall on the side of the anode chamber 10. Both the chambers are usually partitioned such that the cathode chamber 20 becomes smaller than the anode chamber 10. Thus, from the viewpoint of the strength of the frame and the like, the metal elastic body 22 is preferably provided between the collector 23 and the cathode 21 in the cathode chamber 20. The metal elastic body 23 preferably comprises an electrically conductive metal such as nickel, iron, copper, silver, and titanium.

### (Support)

The cathode chamber 20 preferably comprises the support 24 that electrically connects the collector 23 to the partition wall 30. This can achieve an efficient current flow.

The support 24 preferably comprises an electrically conductive metal such as nickel, iron, copper, silver, and titanium. The support 24 may have any shape as long as the support can support the collector 23 and may have a rod, plate, or net shape. The support 24 has a plate shape, for example. A plurality of supports 24 are arranged between the partition wall 30 and the collector 23. The plurality of supports 24 are aligned such that the surfaces thereof are in parallel to each other. The supports 24 are arranged substantially perpendicular to the partition wall 30 and the collector 23.

### (Anode side gasket and cathode side gasket)

The anode side gasket is preferably arranged on the frame surface constituting the anode chamber 10. The cathode side gasket is preferably arranged on the frame surface constituting the cathode chamber 20. Electrolytic cells are connected to each other such that the anode side gasket included in one electrolytic cell and the cathode side gasket of an electrolytic cell adjacent to the cell sandwich the laminate 25 (see Figure 64B). These gaskets can impart airtightness to connecting points when the plurality of electrolytic cells 1 is connected in series via the laminate 25.

The gaskets form a seal between the ion exchange membrane and electrolytic cells. Specific examples of the gaskets include picture frame-like rubber sheets at the center of which an aperture portion is formed. The gaskets are required to have resistance against corrosive electrolyte solutions or produced gas and be usable for a long period. Thus, in respect of chemical resistance and hardness, vulcanized products and peroxide-crosslinked products of ethylene-propylene-diene rubber (EPDM rubber) and ethylene-propylene rubber (EPM rubber) are usually used as the gaskets. Alternatively, gaskets of which region to be in contact with liquid (liquid contact portion) is covered with a fluorine-containing resin such as polytetrafluoroethylene (PTFE) and tetrafluoroethylene-perfluoroalkyl vinyl ether copolymers (PFA) may be employed as required. These gaskets each may have an aperture portion so as not to inhibit the flow of the electrolyte solution, and the shape of the aperture portion is not particularly limited. For example, a picture frame-like gasket is attached with an adhesive or the like along the peripheral edge of each aperture portion of the anode chamber frame constituting the anode chamber 10 or the cathode chamber frame constituting the cathode chamber 20. Sandwiching the laminate 25 by the anode gasket and cathode gasket can prevent the electrolyte solution, alkali metal hydroxide, chlorine gas, hydrogen gas, and the like generated from electrolysis from leaking out of the electrolytic cells 1.

### [Laminate]

The laminate in the present embodiment comprises a membrane and an electrode for electrolysis. The laminate in the present embodiment can improve the work efficiency during electrode renewing in an electrolyzer and further, can exhibit excellent electrolytic performance also after renewing. That is, according to the laminate in the present embodiment, on renewing the electrode, the electrode can be renewed by a work as simple as renewing the membrane without a complicated work such as stripping off the existing electrode fixed on the electrolytic cell, and thus, the work efficiency is markedly improved.

Further, according to the laminate in the present embodiment, it is possible to maintain the electrolytic performance of the existing electrolytic cell comparable to those of a new electrode or improve the electrolytic performance. Thus, the electrode fixed on the existing electrolytic cell and serving as the anode or cathode is only required to serve as a feed conductor. Thus, it is also possible to markedly reduce or eliminate catalyst coating.

### [Electrode for electrolysis]

In the electrode for electrolysis in the present embodiment, the ventilation resistance is 24 kPa·s/m or less when the electrode for electrolysis has a size of 50 mm × 50 mm, the ventilation resistance being measured under conditions of the temperature of 24°C, the relative humidity of 32%, a piston speed of 0.2 cm/s, and a ventilation volume of 0.4 cc/cm²/s (hereinbelow, also referred to as "measurement condition 1") (hereinbelow, also referred to as "ventilation resistance 1"). A larger ventilation resistance means that air is unlikely to flow and refers to a state of a high density. In this state, the product from electrolysis remains in the electrode and a reaction substrate is more unlikely to diffuse inside the electrode, and thus, the electrolytic performance (such as voltage) deteriorates. The concentration on the membrane surface increases. Specifically, the caustic concentration increases on the cathode surface, and the supply of brine decreases on the anode surface. As a result, the product accumulates at a high concentration on the interface at which the membrane is in contact with the electrode. This accumulation leads to damage of the membrane and also leads to increase in the voltage and damage of the membrane on the cathode surface and damage of the membrane on the anode surface. In the present embodiment, in order to prevent these defects, the ventilation resistance is set at 24 kPa·s/m or less.

In the present embodiment, when the ventilation resistance is larger than a certain value, NaOH generated in the electrode tends to accumulate on the interface between the electrode and membrane to result in a high concentration in the case of the cathode, and the supply of brine tends to decrease to cause the brine concentration to be lower in the case of the anode. In order to prevent damage to the membrane that may be caused by such accumulation, the ventilation resistance is preferably less than 0.19 kPa·s/m, more preferably 0.15 kPa·s/m or less, further preferably 0.07 kPa·s/m or less.

In contrast, when the ventilation resistance is low, the area of the electrode becomes smaller, and the electroconductive area is reduced. Thus, the electrolytic performance (such as voltage) deteriorates. When the ventilation resistance is zero, the feed conductor functions as the electrode because no electrode for electrolysis is provided, and the electrolytic performance (such as voltage) markedly deteriorates. From this viewpoint, a preferable lower limit value identified as the ventilation resistance 1 is not particularly limited, but is preferably more than 0 kPa·s/m, more preferably 0.0001 kPa·s/m or more, further preferably 0.001 kPa·s/m or more.

When the ventilation resistance 1 is 0.07 kPa·s/m or less, a sufficient measurement accuracy may not be achieved because of the measurement method therefor. From this viewpoint, it is also possible to evaluate an electrode for electrolysis having a ventilation resistance 1 of 0.07 kPa·s/m or less by means of a ventilation resistance (hereinbelow, also referred to as "ventilation resistance 2") obtained by the following measurement method (hereinbelow, also referred to as "measurement condition 2"). That is, the ventilation resistance 2 is a ventilation resistance measured, when the electrode for electrolysis has a size of 50 mm × 50 mm, under conditions of the temperature of 24°C, the relative humidity of 32%, a piston speed of 2 cm/s, and a ventilation volume of 4 cc/cm²/s.

The specific methods for measuring the ventilation resistances 1 and 2 are described in Examples.

The ventilation resistances 1 and 2 can be within the range described above by appropriately adjusting an opening ratio, thickness of the electrode, and the like, for example. More specifically, for example, when the thickness is constant, a higher opening ratio tends to lead to smaller ventilation resistances 1 and 2, and a lower opening ratio tends to lead to larger ventilation resistances 1 and 2.

The electrode for electrolysis in the present embodiment has a force applied per unit mass·unit area of preferably 1.6 N/ (mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less from the viewpoint of enabling a good handling property to be provided and having a good adhesive force to a membrane such as an ion exchange membrane and a microporous membrane, a feed conductor (a degraded electrode and an electrode having no catalyst coating), and the like. The force applied is even still more preferably 1.1 N/mg·cm² or less, further still more preferably 1.10 N/mg·cm² or less, particularly preferably 1.0 N/mg·cm² or less, especially preferably 1.00 N/mg·cm² or less.

From the viewpoint of further improving the electrolytic performance, the force is preferably more than 0.005 N/(mg·cm²), more preferably 0.08 N/(mg·cm²) or more, further preferably 0.1 N/mg·cm² or more, further more preferably 0.14 N/(mg·cm²) or more. The force is further more preferably 0.2 N/(mg·cm²) or more from the viewpoint of further facilitating handling in a large size (e.g., a size of 1.5 m × 2.5 m).

The force applied described above can be within the range described above by appropriately adjusting an opening ratio described below, thickness of the electrode, arithmetic average surface roughness, and the like, for example. More specifically, for example, a higher opening ratio tends to lead to a smaller force applied, and a lower opening ratio tends to lead to a larger force applied.

The mass per unit is preferably 48 mg/cm² or less, more preferably 30 mg/cm² or less, further preferably 20 mg/cm² or less from the viewpoint of enabling a good handling property to be provided, having a good adhesive force to a membrane such as an ion exchange membrane and a microporous membrane, a degraded electrode, a feed conductor having no catalyst coating, and of economy, and furthermore is preferably 15 mg/cm² or less from the comprehensive viewpoint including handling property, adhesion, and economy. The lower limit value is not particularly limited but is of the order of 1 mg/cm², for example.

The mass per unit area described above can be within the range described above by appropriately adjusting an opening ratio described below, thickness of the electrode, and the like, for example. More specifically, for example, when the thickness is constant, a higher opening ratio tends to lead to a smaller mass per unit area, and a lower opening ratio tends to lead to a larger mass per unit area.

The force applied can be measured by methods (i) or (ii) described below, which are as detailed in Examples. As for the force applied, the value obtained by the measurement of the method (i) (also referred to as "the force applied (1)") and the value obtained by the measurement of the method (ii) (also referred to as "the force applied (2)") may be the same or different, and either of the values is preferably less than 1.5 N/mg·cm².

### [Method (i)]

A nickel plate obtained by blast processing with alumina of grain-size number 320 (thickness 1.2 mm, 200 mm square), an ion exchange membrane which is obtained by applying inorganic material particles and a binder to both surfaces of a membrane of a perfluorocarbon polymer into which an ion exchange group is introduced (170 mm square, the detail of the ion exchange membrane referred to herein is as described in Examples), and a sample of electrode (130 mm square) are laminatedin this order. After this laminate is sufficiently immersed in pure water, excess water deposited on the surface of the laminate is removed to obtain a sample for measurement. The arithmetic average surface roughness (Ra) of the nickel plate after the blast treatment is 0.5 to 0.8 µm. The specific method for calculating the arithmetic average surface roughness (Ra) is as described in Examples.

Under conditions of a temperature of 23±2°C and a relative humidity of 30±5%, only the sample of electrode in this sample for measurement is raised in a vertical direction at 10 mm/minute using a tensile and compression testing machine, and the load when the sample of electrode is raised by 10 mm in a vertical direction is measured. This measurement is repeated three times, and the average value is calculated.

This average value is divided by the area of the overlapping portion of the sample of electrode and the ion exchange membrane and the mass of the portion overlapping the ion exchange membrane in the sample of electrode to calculate the force applied per unit mass·unit area (1) (N/mg·cm²).

The force applied per unit mass·unit area (1) obtained by the method (i) is preferably 1.6 N/ (mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less from the viewpoint of enabling a good handling property to be provided and having a good adhesive force to a membrane such as an ion exchange membrane and a microporous membrane, a degraded electrode, and a feed conductor having no catalyst coating. The force applied is even still more preferably 1.1 N/mg·cm² or less, further still more preferably 1.10 N/mg·cm² or less, particularly preferably 1.0 N/mg·cm² or less, especially preferably 1.00 N/mg·cm² or less. The force is preferably more than 0.005 N/(mg·cm²), more preferably 0.08 N/(mg·cm²) or more, further preferably 0.1 N/(mg·cm²) or more from the viewpoint of further improving the electrolytic performance, and furthermore, is further more preferably 0.14 N/(mg·cm²), still more preferably 0.2 N/(mg·cm²) or more from the viewpoint of further facilitating handling in a large size (e.g., a size of 1.5 m × 2.5 m).

### [Method (ii)]

A nickel plate obtained by blast processing with alumina of grain-size number 320 (thickness 1.2 mm, 200 mm square, a nickel plate similar to that of the method (i) above) and a sample of electrode (130 mm square) are laminated in this order. After this laminate is sufficiently immersed in pure water, excess water deposited on the surface of the laminate is removed to obtain a sample for measurement. Under conditions of a temperature of 23±2°C and a relative humidity of 30±5%, only the sample of electrode in this sample for measurement is raised in a vertical direction at 10 mm/minute using a tensile and compression testing machine, and the load when the sample of electrode is raised by 10 mm in a vertical direction is measured. This measurement is repeated three times, and the average value is calculated.

This average value is divided by the area of the overlapping portion of the sample of electrode and the nickel plate and the mass of the sample of electrode in the portion overlapping the nickel plate to calculate the adhesive force per unit mass·unit area (2) (N/mg·cm²).

The force applied per unit mass·unit area (2) obtained by the method (ii) is preferably 1.6 N/(mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less from the viewpoint of enabling a good handling property to be provided and having a good adhesive force to a membrane such as an ion exchange membrane and a microporous membrane, a degraded electrode, and a feed conductor having no catalyst coating. The force applied is even still more preferably 1.1 N/mg·cm² or less, further still more preferably 1.10 N/mg·cm² or less, particularly preferably 1.0 N/mg·cm² or less, especially preferably 1.00 N/mg·cm² or less. Further, the force is preferably more than 0.005 N/(mg·cm²), more preferably 0.08 N/(mg·cm²) or more, further preferably 0.1 N/(mg·cm²) or more from the viewpoint of further improving the electrolytic performance, and is further more preferably 0.14 N/(mg·cm²) or more from the viewpoint of further facilitating handling in a large size (e.g., a size of 1.5 m × 2.5 m).

The electrode for electrolysis in the present embodiment preferably includes a substrate for electrode for electrolysis and a catalyst layer. The thickness of the substrate for electrode for electrolysis (gauge thickness) is, but is not particularly limited to, preferably 300 µm or less, more preferably 205 µm or less, further preferably 155 µm or less, further more preferably 135 µm or less, even further more preferably 125 µm or less, still more preferably 120 µm or less, even still more preferably 100 µm or less from the viewpoint of enabling a good handling property to be provided, having a good adhesive force to a membrane such as an ion exchange membrane and a microporous membrane, a degraded electrode (feed conductor), and an electrode (feed conductor) having no catalyst coating, being capable of being suitably rolled in a roll and satisfactorily folded, and facilitating handling in a large size (e.g., a size of 1.5 m × 2.5 m), and is further still more preferably 50 µm or less from the viewpoint of a handling property and economy. The lower limit value is not particularly limited, but is 1 µm, for example, preferably 5 µm, more preferably 15 µm.

The proportion measured by the following method (2) of the electrode for electrolysis in the present embodiment is not particularly limited, but is preferably 90% or more, more preferably 92% or more from the viewpoint of enabling a good handling property to be provided and having a good adhesive force to a membrane such as an ion exchange membrane and a microporous membrane, a degraded electrode (feed conductor), and an electrode (feed conductor) having no catalyst coating, and further preferably 95% or more from the viewpoint of further facilitating handling in a large size (e.g., a size of 1.5 m × 2.5 m). The upper limit value is 100%.

### [Method (2)]

An ion exchange membrane (170 mm square) and a sample of electrode (130 mm square) are laminated in this order. The laminate is placed on a curved surface of a polyethylene pipe (outer diameter: 280 mm) such that the sample of electrode in this laminate is positioned outside under conditions of a temperature of 23±2°C and a relative humidity of 30±5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode is measured.

The proportion measured by the following method (3) of the electrode for electrolysis in the present embodiment is not particularly limited, but is preferably 75% or more, more preferably 80% or more from the viewpoint of enabling a good handling property to be provided, having a good adhesive force to a membrane such as an ion exchange membrane and a microporous membrane, a degraded electrode (feed conductor), and an electrode (feed conductor) having no catalyst coating, and being capable of being suitably rolled in a roll and satisfactorily folded, and is further preferably 90% or more from the viewpoint of further facilitating handling in a large size (e.g., a size of 1.5 m × 2.5 m). The upper limit value is 100%.

### [Method (3)]

An ion exchange membrane (170 mm square) and a sample of electrode (130 mm square) are laminated in this order. The laminate is placed on a curved surface of a polyethylene pipe (outer diameter: 145 mm) such that the sample of electrode in this laminate is positioned outside under conditions of a temperature of 23±2°C and a relative humidity of 30±5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode is measured.

The value obtained by measurement by the following method (A) of the electrode for electrolysis in the present embodiment is preferably 40 mm or less, more preferably 29 mm or less, further preferably 19 mm or less from the viewpoint of the handling property.

### [Method (A)]

Under conditions of a temperature of 23±2°C and a relative humidity of 30±5%, a sample obtained by laminating an ion exchange membrane which is obtained by applying inorganic material particles and a binder to both surfaces of a membrane of a perfluorocarbon polymer into which an ion exchange group is introduced (170 mm square, the details of the ion exchange membrane referred to herein are as described in Examples) and the electrode for electrolysis is wound around and fixed onto a curved surface of a core material being made of polyvinyl chloride and having an outer diameter ϕ of 32 mm, and left to stand for 6 hours; thereafter, when the electrode for electrolysis is separated from the sample and placed on a flat plate, heights in a vertical direction at both edges of the electrode for electrolysis L1 and L2 are measured, and an average value thereof is used as a measurement value.

The electrode for electrolysis in the present embodiment preferably has a porous structure and an opening ratio or void ratio of 5 to 90% or less from the viewpoint of enabling a good handling property to be provided, having a good adhesive force to a membrane such as an ion exchange membrane and a microporous membrane, a degraded electrode (feed conductor), and an electrode (feed conductor) having no catalyst coating, and preventing accumulation of gas to be generated during electrolysis, although not particularly limited. The opening ratio is more preferably 10 to 80% or less, further preferably 20 to 75%.

The opening ratio is a proportion of the opening portions per unit volume. The calculation method may differ depending on that opening portions in submicron size are considered or that only visible openings are considered. In the present embodiment, a volume V was calculated from the values of the gauge thickness, width, and length of the electrode, and further, a weight W was measured to thereby calculate an opening ratio A by the following formula. $A = \left(1-\left(W/\left(V\times ρ\right)\right)\times 100\right.$

ρ is the density of the electrode material (g/cm³). For example, ρ of nickel is 8.908 g/cm³, and ρ of titanium is 4.506 g/cm³. The opening ratio can be appropriately adjusted by changing the area of metal to be perforated per unit area in the case of perforated metal, changing the values of the SW (short diameter), LW (long diameter), and feed in the case of expanded metal, changing the line diameter of metal fiber and mesh number in the case of mesh, changing the pattern of a photoresist to be used in the case of electroforming, changing the metal fiber diameter and fiber density in the case of nonwoven fabric, changing the mold for forming voids in the case of foamed metal, or the like.

Hereinbelow, one aspect of the electrode for electrolysis in the present embodiment will be described.

The electrode for electrolysis according to the present embodiment preferably includes a substrate for electrode for electrolysis and a catalyst layer. The catalyst layer may be composed of a plurality of layers as shown below or may be a single-layer configuration.

As shown in Figure 68, an electrode for electrolysis 100 according to the present embodiment includes a substrate for electrode for electrolysis 10 and a pair of first layers 20 with which both the surfaces of the substrate for electrode for electrolysis 10 are covered. The entire substrate for electrode for electrolysis 10 is preferably covered with the first layers 20. This covering is likely to improve the catalyst activity and durability of the electrode for electrolysis. One first layer 20 may be laminated only on one surface of the substrate for electrode for electrolysis 10.

Also shown in Figure 68, the surfaces of the first layers 20 may be covered with second layers 30. The entire first layers 20 are preferably covered by the second layers 30. Alternatively, one second layer 30 may be laminated only one surface of the first layer 20.

### (Substrate for electrode for electrolysis)

As the substrate for electrode for electrolysis 10, for example, nickel, nickel alloys, stainless steel, or valve metals including titanium can be used, although not limited thereto. The substrate 10 preferably contains at least one element selected from nickel (Ni) and titanium (Ti).

When stainless steel is used in an alkali aqueous solution of a high concentration, iron and chromium are eluted and the electrical conductivity of stainless steel is of the order of one-tenth of that of nickel. In consideration of the foregoing, a substrate containing nickel (Ni) is preferable as the substrate for electrode for electrolysis.

Alternatively, when the substrate for electrode for electrolysis 10 is used in a salt solution of a high concentration near the saturation under an atmosphere in which chlorine gas is generated, the material of the substrate for electrode 10 is also preferably titanium having high corrosion resistance.

The form of the substrate for electrode for electrolysis 10 is not particularly limited, and a form suitable for the purpose can be selected. As the form, any of a perforated metal, nonwoven fabric, foamed metal, expanded metal, metal porous foil formed by electroforming, so-called woven mesh produced by knitting metal lines, and the like can be used. Among these, a perforated metal or expanded metal is preferable. Electroforming is a technique for producing a metal thin film having a precise pattern by using photolithography and electroplating in combination. It is a method including forming a pattern on a substrate with a photoresist and electroplating the portion not protected by the resist to provide a metal thin film.

As for the form of the substrate for electrode for electrolysis, a suitable specification depends on the distance between the anode and the cathode in the electrolyzer. In the case where the distance between the anode and the cathode is finite, an expanded metal or perforated metal form can be used, and in the case of a so-called zero-gap base electrolyzer, in which the ion exchange membrane is in contact with the electrode, a woven mesh produced by knitting thin lines, wire mesh, foamed metal, metal nonwoven fabric, expanded metal, perforated metal, metal porous foil, and the like can be used, although not limited thereto.

Examples of the substrate for electrode for electrolysis 10 include a metal porous foil, a wire mesh, a metal nonwoven fabric, a perforated metal, an expanded metal, and a foamed metal.

As a plate material before processed into a perforated metal or expanded metal, rolled plate materials and electrolytic foils are preferable. An electrolytic foil is preferably further subjected to a plating treatment by use of the same element as the base material thereof, as the post-treatment, to thereby form asperities on one or both of the surfaces.

The thickness of the substrate for electrode for electrolysis 10 is, as mentioned above, preferably 300 µm or less, more preferably 205 µm or less, further preferably 155 µm or less, further more preferably 135 µm or less, even further more preferably 125 µm or less, still more preferably 120 µm or less, even still more preferably 100 µm or less, and further still more preferably 50 µm or less from the viewpoint of a handling property and economy. The lower limit value is not particularly limited, but is 1 µm, for example, preferably 5 µm, more preferably 15 µm.

In the substrate for electrode for electrolysis, the residual stress during processing is preferably relaxed by annealing the substrate for electrode for electrolysis in an oxidizing atmosphere. It is preferable to form asperities using a steel grid, alumina powder, or the like on the surface of the substrate for electrode for electrolysis followed by an acid treatment to increase the surface area thereof, in order to improve the adhesion to a catalyst layer with which the surface is covered. Alternatively, it is preferable to give a plating treatment by use of the same element as the substrate to increase the surface area.

To bring the first layer 20 into close contact with the surface of the substrate for electrode for electrolysis 10, the substrate for electrode for electrolysis 10 is preferably subjected to a treatment of increasing the surface area. Examples of the treatment of increasing the surface area include a blast treatment using a cut wire, steel grid, alumina grid or the like, an acid treatment using sulfuric acid or hydrochloric acid, and a plating treatment using the same element to that of the substrate. The arithmetic average surface roughness (Ra) of the substrate surface is not particularly limited, but is preferably 0.05 µm to 50 µm, more preferably 0.1 to 10 µm, further preferably 0.1 to 8 µm.

Next, a case where the electrode for electrolysis in the present embodiment is used as an anode for common salt electrolysis will be described.

### (First layer)

In Figure 68, a first layer 20 as a catalyst layer contains at least one of ruthenium oxides, iridium oxides, and titanium oxides. Examples of the ruthenium oxide include RuO₂. Examples of the iridium oxide include IrO₂. Examples of the titanium oxide include TiO₂. The first layer 20 preferably contains two oxides: a ruthenium oxide and a titanium oxide or three oxides: a ruthenium oxide, an iridium oxide, and a titanium oxide. This makes the first layer 20 more stable and additionally improves the adhesion with the second layer 30.

When the first layer 20 contains two oxides: a ruthenium oxide and a titanium oxide, the first layer 20 contains preferably 1 to 9 mol, more preferably 1 to 4 mol of the titanium oxide based on 1 mol of the ruthenium oxide contained in the first layer 20. With the composition ratio of the two oxides in this range, the electrode for electrolysis 100 exhibits excellent durability.

When the first layer 20 contains three oxides: a ruthenium oxide, an iridium oxide, and a titanium oxide, the first layer 20 contains preferably 0.2 to 3 mol, more preferably 0.3 to 2.5 mol of the iridium oxide based on 1 mol of the ruthenium oxide contained in the first layer 20. The first layer 20 contains preferably 0.3 to 8 mol, more preferably 1 to 7 mol of the titanium oxide based on 1 mol of the ruthenium oxide contained in the first layer 20. With the composition ratio of the three oxides in this range, the electrode for electrolysis 100 exhibits excellent durability.

When the first layer 20 contains at least two of a ruthenium oxide, an iridium oxide, and a titanium oxide, these oxides preferably form a solid solution. Formation of the oxide solid solution allows the electrode for electrolysis 100 to exhibit excellent durability.

In addition to the compositions described above, oxides of various compositions can be used as long as at least one oxide of a ruthenium oxide, an iridium oxide, and titanium oxide is contained. For example, an oxide coating called DSA(R), which contains ruthenium, iridium, tantalum, niobium, titanium, tin, cobalt, manganese, platinum, and the like, can be used as the first layer 20.

The first layer 20 need not be a single layer and may include a plurality of layers. For example, the first layer 20 may include a layer containing three oxides and a layer containing two oxides. The thickness of the first layer 20 is preferably 0.05 to 10 µm, more preferably 0.1 to 8 µm.

### (Second layer)

The second layer 30 preferably contains ruthenium and titanium. This enables the chlorine overvoltage immediately after electrolysis to be further lowered.

The second layer 30 preferably contains a palladium oxide, a solid solution of a palladium oxide and platinum, or an alloy of palladium and platinum. This enables the chlorine overvoltage immediately after electrolysis to be further lowered.

A thicker second layer 30 can maintain the electrolytic performance for a longer period, but from the viewpoint of economy, the thickness is preferably 0.05 to 3 µm.

Next, a case where the electrode for electrolysis in the present embodiment is used as a cathode for common salt electrolysis will be described.

### (First layer)

Examples of components of the first layer 20 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

The first layer 20 may or may not contain at least one of platinum group metals, platinum group metal oxides, platinum group metal hydroxides, and alloys containing a platinum group metal.

When the first layer 20 contains at least one of platinum group metals, platinum group metal oxides, platinum group metal hydroxides, and alloys containing a platinum group metal, the platinum group metals, platinum group metal oxides, platinum group metal hydroxides, and alloys containing a platinum group metal preferably contain at least one platinum group metal of platinum, palladium, rhodium, ruthenium, and iridium.

As the platinum group metal, platinum is preferably contained.

As the platinum group metal oxide, a ruthenium oxide is preferably contained.

As the platinum group metal hydroxide, a ruthenium hydroxide is preferably contained.

As the platinum group metal alloy, an alloy of platinum with nickel, iron, and cobalt is preferably contained.

Further, as required, an oxide or hydroxide of a lanthanoid element is preferably contained as a second component. This allows the electrode for electrolysis 100 to exhibit excellent durability.

As the oxide or hydroxide of a lanthanoid element, at least one selected from lanthanum, cerium, praseodymium, neodymium, promethium, samarium, europium, gadolinium, terbium, and dysprosium is preferably contained.

Further, as required, an oxide or hydroxide of a transition metal is preferably contained as a third component.

Addition of the third component enables the electrode for electrolysis 100 to exhibit more excellent durability and the electrolysis voltage to be lowered.

Examples of a preferable combination include ruthenium only, ruthenium + nickel, ruthenium + cerium, ruthenium + lanthanum, ruthenium + lanthanum + platinum, ruthenium + lanthanum + palladium, ruthenium + praseodymium, ruthenium + praseodymium + platinum, ruthenium + praseodymium + platinum + palladium, ruthenium + neodymium, ruthenium + neodymium + platinum, ruthenium + neodymium + manganese, ruthenium + neodymium + iron, ruthenium + neodymium + cobalt, ruthenium + neodymium + zinc, ruthenium + neodymium + gallium, ruthenium + neodymium + sulfur, ruthenium + neodymium + lead, ruthenium + neodymium + nickel, ruthenium + neodymium + copper, ruthenium + samarium, ruthenium + samarium + manganese, ruthenium + samarium + iron, ruthenium + samarium + cobalt, ruthenium + samarium + zinc, ruthenium + samarium + gallium, ruthenium + samarium + sulfur, ruthenium + samarium + lead, ruthenium + samarium + nickel, platinum + cerium, platinum + palladium + cerium, platinum + palladium + lanthanum + cerium, platinum + iridium, platinum + palladium, platinum + iridium + palladium, platinum + nickel + palladium, platinum + nickel + ruthenium, alloys of platinum and nickel, alloys of platinum and cobalt, and alloys of platinum and iron.

When platinum group metals, platinum group metal oxides, platinum group metal hydroxides, and alloys containing a platinum group metal are not contained, the main component of the catalyst is preferably nickel element.

At least one of nickel metal, oxides, and hydroxides is preferably contained.

As the second component, a transition metal may be added. As the second component to be added, at least one element of titanium, tin, molybdenum, cobalt, manganese, iron, sulfur, zinc, copper, and carbon is preferably contained.

Examples of a preferable combination include nickel + tin, nickel + titanium, nickel + molybdenum, and nickel + cobalt.

As required, an intermediate layer can be placed between the first layer 20 and the substrate for electrode for electrolysis 10. The durability of the electrode for electrolysis 100 can be improved by placing the intermediate layer.

As the intermediate layer, those having affinity to both the first layer 20 and the substrate for electrode for electrolysis 10 are preferable. As the intermediate layer, nickel oxides, platinum group metals, platinum group metal oxides, and platinum group metal hydroxides are preferable. The intermediate layer can be formed by applying and baking a solution containing a component that forms the intermediate layer. Alternatively, a surface oxide layer also can be formed by subjecting a substrate to a thermal treatment at a temperature of 300 to 600°C in an air atmosphere. Besides, the layer can be formed by a known method such as a thermal spraying method and ion plating method.

### (Second layer)

Examples of components of the first layer 30 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

The first layer 30 may or may not contain at least one of platinum group metals, platinum group metal oxides, platinum group metal hydroxides, and alloys containing a platinum group metal. Examples of a preferable combination of elements contained in the second layer include the combinations enumerated for the first layer. The combination of the first layer and the second layer may be a combination in which the compositions are the same and the composition ratios are different or may be a combination of different compositions.

As the thickness of the catalyst layer, the total thickness of the catalyst layer formed and the intermediate layer is preferably 0.01 µm to 20 µm. With a thickness of 0.01 µm or more, the catalyst layer can sufficiently serve as the catalyst. With a thickness of 20 µm or less, it is possible to form a robust catalyst layer that is unlikely to fall off from the substrate. The thickness is more preferably 0.05 µm to 15 µm. The thickness is more preferably 0.1 µm to 10 µm. The thickness is further preferably 0.2 µm to 8 µm.

The thickness of the electrode, that is, the total thickness of the substrate for electrode for electrolysis and the catalyst layer is preferably 315 µm or less, more preferably 220 µm or less, further preferably 170 µm or less, further more preferably 150 µm or less, particularly preferably 145 µm or less, still more preferably 140 µm or less, even still more preferably 138 µm or less, further still more preferably 135 µm or less in respect of the handling property of the electrode. A thickness of 135 µm or less can provide a good handling property. Further, from a similar viewpoint as above, the thickness is preferably 130 µm or less, more preferably less than 130 µm, further preferably 115 µm or less, further more preferably 65 µm or less. The lower limit value is not particularly limited, but is preferably 1 µm or more, more preferably 5 µm or more for practical reasons, more preferably 20 µm or more. The thickness of the electrode can be determined by measurement with a digimatic thickness gauge (Mitutoyo Corporation, minimum scale 0.001 mm). The thickness of the substrate for electrode for electrolysis is measured in the same manner as the thickness of the electrode. The thickness of the catalyst layer can be determined by subtracting the thickness of the substrate for electrode for electrolysis from the thickness of the electrode.

In the present embodiment, the electrode for electrolysis preferably contains at least one catalytic component selected from the group consisting of Ru, Rh, Pd, Ir, Pt, Au, Ti, V, Cr, Mn, Fe, Co, Ni, Cu, Zn, Y, Zr, Nb, Mo, Ag, Ta, W, Re, Os, Al, In, Sn, Sb, Ga, Ge, B, C, N, O, Si, P, S, La, Ce, Pr, Nd, Pm, Sm, Eu, Gd, Tb, and Dy from the viewpoint of achieving sufficient electrolytic performance.

In the present embodiment, from the viewpoint that the electrode for electrolysis, if being an electrode having a broad elastic deformation region, can provide a better handling property and has a better adhesive force to a membrane such as an ion exchange membrane and a microporous membrane, a degraded electrode, a feed conductor having no catalyst coating, and the like, the thickness of the electrode for electrolysis is preferably 315 µm or less, more preferably 220 µm or less, further preferably 170 µm or less, further more preferably 150 µm or less, particularly preferably 145 µm or less, still more preferably 140 µm or less, even still more preferably 138 µm or less, further still more preferably 135 µm or less. A thickness of 135 µm or less can provide a good handling property. Further, from a similar viewpoint as above, the thickness is preferably 130 µm or less, more preferably less than 130 µm, further preferably 115 µm or less, further more preferably 65 µm or less. The lower limit value is not particularly limited, but is preferably 1 µm or more, more preferably 5 µm or more for practical reasons, more preferably 20 µm or more. In the present embodiment, "having a broad elastic deformation region" means that, when an electrode for electrolysis is wound to form a wound body, warpage derived from winding is unlikely to occur after the wound state is released. The thickness of the electrode for electrolysis refers to, when a catalyst layer mentioned below is included, the total thickness of both the substrate for electrode for electrolysis and the catalyst layer.

### (Method for producing electrode for electrolysis)

Next, one embodiment of the method for producing the electrode for electrolysis 100 will be described in detail.

In the present embodiment, the electrode for electrolysis 100 can be produced by forming the first layer 20, preferably the second layer 30, on the substrate for electrode for electrolysis by a method such as baking of a coating film under an oxygen atmosphere (pyrolysis), or ion plating, plating, or thermal spraying. The production method of the present embodiment as mentioned can achieve a high productivity of the electrode for electrolysis 100. Specifically, a catalyst layer is formed on the substrate for electrode for electrolysis by an application step of applying a coating liquid containing a catalyst, a drying step of drying the coating liquid, and a pyrolysis step of performing pyrolysis. Pyrolysis herein means that a metal salt which is to be a precursor is decomposed by heating into a metal or metal oxide and a gaseous substance. The decomposition product depends on the metal species to be used, type of the salt, and the atmosphere under which pyrolysis is performed, and many metals tend to form oxides in an oxidizing atmosphere. In an industrial process of producing an electrode, pyrolysis is usually performed in air, and a metal oxide or a metal hydroxide is formed in many cases.

### (Formation of first layer of anode)

### (Application step)

The first layer 20 is obtained by applying a solution in which at least one metal salt of ruthenium, iridium, and titanium is dissolved (first coating liquid) onto the substrate for electrode for electrolysis and then pyrolyzing (baking) the coating liquid in the presence of oxygen. The content of ruthenium, iridium, and titanium in the first coating liquid is substantially equivalent to that of the first layer 20.

The metal salts may be chlorides, nitrates, sulfates, metal alkoxides, and any other forms. The solvent of the first coating liquid can be selected depending on the type of the metal salt, and water and alcohols such as butanol can be used. As the solvent, water or a mixed solvent of water and an alcohol is preferable. The total metal concentration in the first coating liquid in which the metal salts are dissolved is not particularly limited, but is preferably in the range of 10 to 150 g/L in association with the thickness of the coating film to be formed by a single coating.

Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

### (Drying step and pyrolysis step)

After being applied onto the substrate for electrode for electrolysis 100, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.

The cycle of application, drying, and pyrolysis described above is repeated to form a covering (the first layer 20) to a predetermined thickness. After the first layer 20 is formed and then further post-baked for a long period as required can further improve the stability of the first layer 20.

### (Formation of second layer)

The second layer 30, which is formed as required, is obtained, for example, by applying a solution containing a palladium compound and a platinum compound or a solution containing a ruthenium compound and a titanium compound (second coating liquid) onto the first layer 20 and then pyrolyzing the coating liquid in the presence of oxygen.

### (Formation of first layer of cathode by pyrolysis method)

### (Application step)

The first layer 20 is obtained by applying a solution in which metal salts of various combination are dissolved (first coating liquid) onto the substrate for electrode for electrolysis and then pyrolyzing (baking) the coating liquid in the presence of oxygen. The content of the metal in the first coating liquid is substantially equivalent to that in the first layer 20.

The metal salts may be chlorides, nitrates, sulfates, metal alkoxides, and any other forms. The solvent of the first coating liquid can be selected depending on the type of the metal salt, and water and alcohols such as butanol can be used. As the solvent, water or a mixed solvent of water and an alcohol is preferable. The total metal concentration in the first coating liquid in which the metal salts are dissolved is not particularly limited, but is preferably in the range of 10 to 150 g/L in association with the thickness of the coating film to be formed by a single coating.

Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

### (Drying step and pyrolysis step)

After being applied onto the substrate for electrode for electrolysis 10, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.

The cycle of application, drying, and pyrolysis described above is repeated to form a covering (the first layer 20) to a predetermined thickness. After the first layer 20 is formed and then further post-baked for a long period as required can further improve the stability of the first layer 20.

### (Formation of intermediate layer)

The intermediate layer, which is formed as required, is obtained, for example, by applying a solution containing a palladium compound or platinum compound (second coating liquid) onto the substrate and then pyrolyzing the coating liquid in the presence of oxygen. Alternatively, a nickel oxide intermediate layer may be formed on the substrate surface only by heating the substrate, without applying a solution thereon.

### (Formation of first layer of cathode by ion plating)

The first layer 20 can be formed also by ion plating. An example includes a method in which the substrate is fixed in a chamber and the metal ruthenium target is irradiated with an electron beam. Evaporated metal ruthenium particles are positively charged in plasma in the chamber to deposit on the substrate negatively charged. The plasma atmosphere is argon and oxygen, and ruthenium deposits as ruthenium oxide on the substrate.

### (Formation of first layer of cathode by plating)

The first layer 20 can be formed also by a plating method.

As an example, when the substrate is used as the cathode and subjected to electrolytic plating in an electrolyte solution containing nickel and tin, alloy plating of nickel and tin can be formed.

### (Formation of first layer of cathode by thermal spraying)

The first layer 20 can be formed also by thermal spraying.

As an example, plasma spraying nickel oxide particles onto the substrate can form a catalyst layer in which metal nickel and nickel oxide are mixed.

The electrode for electrolysis in the present embodiment can be integrated with a membrane such as an ion exchange membrane and a microporous membrane and used. Thus, the laminate in the present embodiment can be used as a membrane-integrated electrode. Then, the substituting work for the cathode and anode on renewing the electrode is eliminated, and the work efficiency is markedly improved.

The electrode integrated with the membrane such as an ion exchange membrane and a microporous membrane can make the electrolytic performance comparable to or higher than those of a new electrode.

Hereinafter, the ion exchange membrane will be described in detail.

### [Ion exchange membrane]

The ion exchange membrane is not particularly limited as long as the membrane can be laminated with the electrode for electrolysis, and various ion exchange membranes may be employed. In the present embodiment, an ion exchange membrane that has a membrane body containing a hydrocarbon polymer or fluorine-containing polymer having an ion exchange group and a coating layer provided on at least one surface of the membrane body is preferably used. It is preferable that the coating layer contain inorganic material particles and a binder and the specific surface area of the coating layer be 0.1 to 10 m²/g. The ion exchange membrane having such a structure has a small influence of gas generated during electrolysis on electrolytic performance and tends to exert stable electrolytic performance.

The membrane of a perfluorocarbon polymer into which an ion exchange group is introduced described above includes either one of a sulfonic acid layer having an ion exchange group derived from a sulfo group (a group represented by -SO₃-, hereinbelow also referred to as a "sulfonic acid group") or a carboxylic acid layer having an ion exchange group derived from a carboxyl group (a group represented by -CO₂-, hereinbelow also referred to as a "carboxylic acid group"). From the viewpoint of strength and dimension stability, reinforcement core materials are preferably further included.

The inorganic material particles and binder will be described in detail in the section of description of the coating layer below.

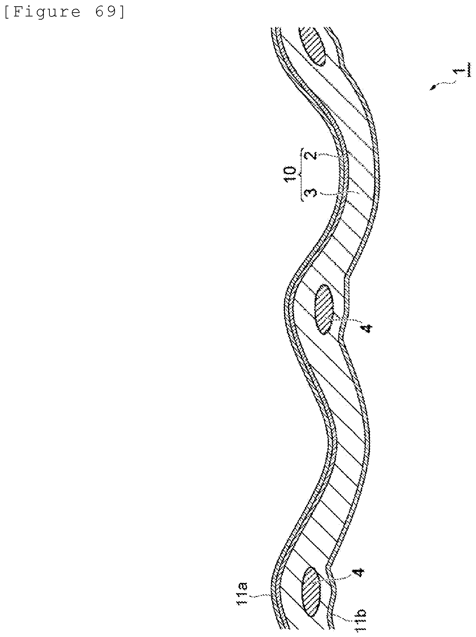

Figure 69 illustrates a cross-sectional schematic view showing one embodiment of an ion exchange membrane. An ion exchange membrane 1 has a membrane body 10 containing a hydrocarbon polymer or fluorine-containing polymer having an ion exchange group and coating layers 11a and 11b formed on both the surfaces of the membrane body 10.

In the ion exchange membrane 1, the membrane body 10 comprises a sulfonic acid layer 3 having an ion exchange group derived from a sulfo group (a group represented by -SO₃-, hereinbelow also referred to as a "sulfonic acid group") and a carboxylic acid layer 2 having an ion exchange group derived from a carboxyl group (a group represented by -CO₂-, hereinbelow also referred to as a "carboxylic acid group"), and the reinforcement core materials 4 enhance the strength and dimension stability. The ion exchange membrane 1, as comprising the sulfonic acid layer 3 and the carboxylic acid layer 2, is suitably used as an anion exchange membrane.

The ion exchange membrane may include either one of the sulfonic acid layer and the carboxylic acid layer. The ion exchange membrane may not be necessarily reinforced by reinforcement core materials, and the arrangement of the reinforcement core materials is not limited to the example in Figure 69.

### (Membrane body)

First, the membrane body 10 constituting the ion exchange membrane 1 will be described.

The membrane body 10 should be one that has a function of selectively allowing cations to permeate and comprises a hydrocarbon polymer or a fluorine-containing polymer having an ion exchange group. Its configuration and material are not particularly limited, and preferred ones can be appropriately selected.

The hydrocarbon polymer or fluorine-containing polymer having an ion exchange group in the membrane body 10 can be obtained from a hydrocarbon polymer or fluorine-containing polymer having an ion exchange group precursor capable of forming an ion exchange group by hydrolysis or the like. Specifically, for example, after a polymer comprising a main chain of a fluorinated hydrocarbon, having, as a pendant side chain, a group convertible into an ion exchange group by hydrolysis or the like (ion exchange group precursor), and being melt-processable (hereinbelow, referred to as the "fluorine-containing polymer (a)" in some cases) is used to prepare a precursor of the membrane body 10, the membrane body 10 can be obtained by converting the ion exchange group precursor into an ion exchange group.

The fluorine-containing polymer (a) can be produced, for example, by copolymerizing at least one monomer selected from the following first group and at least one monomer selected from the following second group and/or the following third group. The fluorine-containing polymer (a) can be also produced by homopolymerization of one monomer selected from any of the following first group, the following second group, and the following third group.

Examples of the monomers of the first group include vinyl fluoride compounds. Examples of the vinyl fluoride compounds include vinyl fluoride, tetrafluoroethylene, hexafluoropropylene, vinylidene fluoride, trifluoroethylene, chlorotrifluoroethylene, and perfluoro alkyl vinyl ethers. Particularly when the ion exchange membrane is used as a membrane for alkali electrolysis, the vinyl fluoride compound is preferably a perfluoro monomer, and a perfluoro monomer selected from the group consisting of tetrafluoroethylene, hexafluoropropylene, and perfluoro alkyl vinyl ethers is preferable.

Examples of the monomers of the second group include vinyl compounds having a functional group convertible into a carboxylic acid-type ion exchange group (carboxylic acid group). Examples of the vinyl compounds having a functional group convertible into a carboxylic acid group include monomers represented by CF₂=CF(OCF₂CYF)ₛ-O(CZF)ₜ-COOR, wherein s represents an integer of 0 to 2, t represents an integer of 1 to 12, Y and Z each independently represent F or CF₃, and R represents a lower alkyl group (a lower alkyl group is an alkyl group having 1 to 3 carbon atoms, for example).

Among these, compounds represented by CF₂=CF(OCF₂CYF)ₙ-O(CF₂)ₘ-COOR are preferable. Wherein n represents an integer of 0 to 2, m represents an integer of 1 to 4, Y represents F or CF₃, and R represents CH₃, C₂H₅, or C₃H₇.

When the ion exchange membrane is used as a cation exchange membrane for alkali electrolysis, a perfluoro compound is preferably at least used as the monomer, but the alkyl group (see the above R) of the ester group is lost from the polymer at the time of hydrolysis, and therefore the alkyl group (R) need not be a perfluoroalkyl group in which all hydrogen atoms are replaced by fluorine atoms.

Of the above monomers, the monomers represented below are more preferable as the monomers of the second group:

CF₂=CFOCF₂-CF(CF₃)OCF₂COOCH₃,

CF₂=CFOCF₂CF(CF₃)O(CF₂)₂COOCH₃,

CF₂=CF[OCF₂-CF(CF₃)]₂O(CF₂)₂COOCH₃,

CF₂=CFOCF₂CF(CF₃)O(CF₂)₃COOCH₃,

CF₂=CFO(CF₂)₂COOCH₃,

and

CF₂=CFO(CF₂)₃COOCH₃.

Examples of the monomers of the third group include vinyl compounds having a functional group convertible into a sulfone-type ion exchange group (sulfonic acid group). As the vinyl compounds having a functional group convertible into a sulfonic acid group, for example, monomers represented by CF₂=CFO-X-CF₂-SO₂F are preferable, wherein X represents a perfluoroalkylene group. Specific examples of these include the monomers represented below:

CF₂=CFOCF₂CF₂SO₂F,

CF₂=CFOCF₂CF(CF₃)OCF₂CF₂SO₂F,

CF₂=CFOCF₂CF(CF₃)OCF₂CF₂CF₂SO₂F,

CF₂=CF(CF₂)₂SO₂F,

CF₂=CFO[CF₂CF(CF₃)O]₂CF₂CF₂SO₂F,

and

CF₂=CFOCF₂CF(CF₂OCF₃)OCF₂CF₂SO₂F.

Among these, CF₂=CFOCF₂CF(CF₃)OCF₂CF₂CF₂SO₂F and CF₂=CFOCF₂CF(CF₃)OCF₂CF₂SO₂F are more preferable.

The copolymer obtained from these monomers can be produced by a polymerization method developed for homopolymerization and copolymerization of ethylene fluoride, particularly a general polymerization method used for tetrafluoroethylene. For example, in a nonaqueous method, a polymerization reaction can be performed in the presence of a radical polymerization initiator such as a perfluorocarbon peroxide or an azo compound under the conditions of a temperature of 0 to 200°C and a pressure of 0.1 to 20 MPa using an inert solvent such as a perfluorohydrocarbon or a chlorofluorocarbon.

In the above copolymerization, the type of combination of the above monomers and their proportion are not particularly limited and are selected and determined depending on the type and amount of the functional group desired to be imparted to the fluorine-containing polymer to be obtained. For example, when a fluorine-containing polymer containing only a carboxylic acid group is formed, at least one monomer should be selected from each of the first group and the second group described above and copolymerized. In addition, when a fluorine-containing polymer containing only a sulfonic acid group is formed, at least one monomer should be selected from each of the first group and the third group and copolymerized. Further, when a fluorine-containing polymer having a carboxylic acid group and a sulfonic acid group is formed, at least one monomer should be selected from each of the first group, the second group, and the third group described above and copolymerized. In this case, the target fluorine-containing polymer can be obtained also by separately preparing a copolymer comprising the monomers of the first group and the second group described above and a copolymer comprising the monomers of the first group and the third group described above, and then mixing the copolymers. The mixing proportion of the monomers is not particularly limited, and when the amount of the functional groups per unit polymer is increased, the proportion of the monomers selected from the second group and the third group described above should be increased.

The total ion exchange capacity of the fluorine-containing copolymer is not particularly limited, but is preferably 0.5 to 2.0 mg equivalent/g, more preferably 0.6 to 1.5 mg equivalent/g. The total ion exchange capacity herein refers to the equivalent of the exchange group per unit weight of the dry resin and can be measured by neutralization titration or the like.

In the membrane body 10 of the ion exchange membrane 1, a sulfonic acid layer 3 containing a fluorine-containing polymer having a sulfonic acid group and a carboxylic acid layer 2 containing a fluorine-containing polymer having a carboxylic acid group are laminated. By providing the membrane body 10 having such a layer configuration, selective permeability for cations such as sodium ions can be further improved.

The ion exchange membrane 1 is arranged in an electrolyzer such that, usually, the sulfonic acid layer 3 is located on the anode side of the electrolyzer and the carboxylic acid layer 2 is located on the cathode side of the electrolyzer.

The sulfonic acid layer 3 is preferably constituted by a material having low electrical resistance and has a membrane thickness larger than that of the carboxylic acid layer 2 from the viewpoint of membrane strength. The membrane thickness of the sulfonic acid layer 3 is preferably 2 to 25 times, more preferably 3 to 15 times that of the carboxylic acid layer 2.

The carboxylic acid layer 2 preferably has high anion exclusion properties even if it has a small membrane thickness. The anion exclusion properties here refer to the property of trying to hinder intrusion and permeation of anions into and through the ion exchange membrane 1. In order to raise the anion exclusion properties, it is effective to dispose a carboxylic acid layer having a small ion exchange capacity to the sulfonic acid layer.

As the fluorine-containing polymer for use in the sulfonic acid layer 3, preferable is a polymer obtained by using CF₂=CFOCF₂CF(CF₃)OCF₂CF₂SO₂F as the monomer of the third group.

As the fluorine-containing polymer for use in the carboxylic acid layer 2, preferable is a polymer obtained by using CF₂=CFOCF₂CF(CF₂)O(CF₂)₂COOCH₃ as the monomer of the second group.

### (Coating layer)

The ion exchange membrane preferably has a coating layer on at least one surface of the membrane body. As shown in Figure 69, in the ion exchange membrane 1, coating layers 11a and 11b are formed on both the surfaces of the membrane body 10.

The coating layers contain inorganic material particles and a binder.

The average particle size of the inorganic material particles is preferably 0.90 µm or more. When the average particle size of the inorganic material particles is 0.90 µm or more, durability to impurities is extremely improved, in addition to attachment of gas. That is, enlarging the average particle size of the inorganic material particles as well as satisfying the value of the specific surface area mentioned above can achieve a particularly marked effect. Irregular inorganic material particles are preferable because the average particle size and specific surface area as above are satisfied. Inorganic material particles obtained by melting and inorganic material particles obtained by grinding raw ore can be used. Inorganic material particles obtained by grinding raw ore can preferably be used.

The average particle size of the inorganic material particles can be 2 µm or less. When the average particle size of the inorganic material particles is 2 µm or less, it is possible to prevent damage of the membrane due to the inorganic material particles. The average particle size of the inorganic material particle is more preferably 0.90 to 1.2 µm.

Here, the average particle size can be measured by a particle size analyzer ("SALD2200", SHIMADZU CORPORATION).

The inorganic material particles preferably have irregular shapes. Such shapes improve resistance to impurities further. The inorganic material particles preferably have a broad particle size distribution.

The inorganic material particles preferably contain at least one inorganic material selected from the group consisting of oxides of Group IV elements in the Periodic Table, nitrides of Group IV elements in the Periodic Table, and carbides of Group IV elements in the Periodic Table. From the viewpoint of durability, zirconium oxide particle is more preferable.

The inorganic material particles are preferably inorganic material particles produced by grinding the raw ore of the inorganic material particles or inorganic material particles, as spherical particles having a uniform diameter, obtained by melt-purifying the raw ore of the inorganic material particles.

Examples of means for grinding raw ore include, but are not particularly limited to, ball mills, bead mills, colloid mills, conical mills, disc mills, edge mills, grain mills, hammer mills, pellet mills, VSI mills, Wiley mills, roller mills, and jet mills. After grinding, the particles are preferably washed. As the washing method, the particles are preferably treated with acid. This treatment can reduce impurities such as iron attached to the surface of the inorganic material particles.

The coating layer preferably contains a binder. The binder is a component that forms the coating layers by retaining the inorganic material particles on the surface of the ion exchange membrane. The binder preferably contains a fluorine-containing polymer from the viewpoint of durability to the electrolyte solution and products from electrolysis.

As the binder, a fluorine-containing polymer having a carboxylic acid group or sulfonic acid group is more preferable, from the viewpoint of durability to the electrolyte solution and products from electrolysis and adhesion to the surface of the ion exchange membrane. When a coating layer is provided on a layer containing a fluorine-containing polymer having a sulfonic acid group (sulfonic acid layer), a fluorine-containing polymer having a sulfonic acid group is further preferably used as the binder of the coating layer. Alternatively, when a coating layer is provided on a layer containing a fluorine-containing polymer having a carboxylic acid group (carboxylic acid layer), a fluorine-containing polymer having a carboxylic acid group is further preferably used as the binder of the coating layer.

In the coating layer, the content of the inorganic material particles is preferably 40 to 90% by mass, more preferably 50 to 90% by mass. The content of the binder is preferably 10 to 60% by mass, more preferably 10 to 50% by mass.

The distribution density of the coating layer in the ion exchange membrane is preferably 0.05 to 2 mg per 1 cm². When the ion exchange membrane has asperities on the surface thereof, the distribution density of the coating layer is preferably 0.5 to 2 mg per 1 cm².

As the method for forming the coating layer, which is not particularly limited, a known method can be used. An example is a method including applying by a spray or the like a coating liquid obtained by dispersing inorganic material particles in a solution containing a binder.

### (Reinforcement core materials)

The ion exchange membrane preferably has reinforcement core materials arranged inside the membrane body.

The reinforcement core materials are members that enhance the strength and dimensional stability of the ion exchange membrane. By arranging the reinforcement core materials inside the membrane body, particularly expansion and contraction of the ion exchange membrane can be controlled in the desired range. Such an ion exchange membrane does not expand or contract more than necessary during electrolysis and the like and can maintain excellent dimensional stability for a long term.

The configuration of the reinforcement core materials is not particularly limited, and, for example, the reinforcement core materials may be formed by spinning yarns referred to as reinforcement yarns. The reinforcement yarns here refer to yarns that are members constituting the reinforcement core materials, can provide the desired dimensional stability and mechanical strength to the ion exchange membrane, and can be stably present in the ion exchange membrane. By using the reinforcement core materials obtained by spinning such reinforcement yarns, better dimensional stability and mechanical strength can be provided to the ion exchange membrane.

The material of the reinforcement core materials and the reinforcement yarns used for these is not particularly limited but is preferably a material resistant to acids, alkalis, etc., and a fiber comprising a fluorine-containing polymer is preferable because long-term heat resistance and chemical resistance are required.

Examples of the fluorine-containing polymer to be used in the reinforcement core materials include polytetrafluoroethylene (PTFE), tetrafluoroethylene-perfluoroalkyl vinyl ether copolymers (PFA), tetrafluoroethylene-ethylene copolymers (ETFE), tetrafluoroethylene-hexafluoropropylene copolymers, trifluorochloroethylene-ethylene copolymers, and vinylidene fluoride polymers (PVDF). Among these, fibers comprising polytetrafluoroethylene are preferably used from the viewpoint of heat resistance and chemical resistance.

The yarn diameter of the reinforcement yarns used for the reinforcement core materials is not particularly limited, but is preferably 20 to 300 deniers, more preferably 50 to 250 deniers. The weave density (fabric count per unit length) is preferably 5 to 50/inch. The form of the reinforcement core materials is not particularly limited, for example, a woven fabric, a nonwoven fabric, and a knitted fabric are used, but is preferably in the form of a woven fabric. The thickness of the woven fabric to be used is preferably 30 to 250 µm, more preferably 30 to 150 µm.

As the woven fabric or knitted fabric, monofilaments, multifilaments, or yarns thereof, a slit yarn, or the like can be used, and various types of weaving methods such as a plain weave, a leno weave, a knit weave, a cord weave, and a seersucker can be used.

The weave and arrangement of the reinforcement core materials in the membrane body are not particularly limited, and preferred arrangement can be appropriately provided considering the size and form of the ion exchange membrane, physical properties desired for the ion exchange membrane, the use environment, and the like.

For example, the reinforcement core materials may be arranged along one predetermined direction of the membrane body, but from the viewpoint of dimensional stability, it is preferred that the reinforcement core materials be arranged along a predetermined first direction, and other reinforcement core materials be arranged along a second direction substantially perpendicular to the first direction. By arranging the plurality of reinforcement core materials substantially orthogonally inside the membrane body, it is possible to impart better dimensional stability and mechanical strength in many directions. For example, arrangement in which the reinforcement core materials arranged along the longitudinal direction (warp yarns) and the reinforcement core materials arranged along the transverse direction (weft yarns) are woven on the surface side of the membrane body is preferred. The arrangement is more preferably in the form of plain weave driven and woven by allowing warps and wefts to run over and under each other alternately, leno weave in which two warps are woven into wefts while twisted, basket weave driven and woven by inserting, into two or more parallelly-arranged warps, wefts of the same number, or the like, from the viewpoint of dimension stability, mechanical strength and easy-production.

It is preferred that particularly, the reinforcement core materials be arranged along both directions, the MD (Machine Direction) and TD (Transverse Direction) of the ion exchange membrane. In other words, the reinforcement core materials are preferably plain-woven in the MD and TD. Here, the MD refers to the direction in which the membrane body and various core materials (for example, the reinforcement core materials, reinforcement yarns, and sacrifice yarns described later) are conveyed in an ion exchange membrane production step described later (flow direction), and the TD refers to the direction substantially perpendicular to the MD. Yarns woven along the MD are referred to as MD yarns, and yarns woven along the TD are referred to as TD yarns. Usually, the ion exchange membrane used for electrolysis is rectangular, and in many cases, the longitudinal direction is the MD, and the width direction is the TD. By weaving the reinforcement core materials that are MD yarns and the reinforcement core materials that are TD yarns, it is possible to impart better dimensional stability and mechanical strength in many directions.

The arrangement interval of the reinforcement core materials is not particularly limited, and preferred arrangement can be appropriately provided considering physical properties desired for the ion exchange membrane, the use environment, and the like.

The aperture ratio for the reinforcement core materials is not particularly limited, but is preferably 30% or more, more preferably 50% or more and 90% or less. The aperture ratio is preferably 30% or more from the viewpoint of the electrochemical properties of the ion exchange membrane, and preferably 90% or less from the viewpoint of the mechanical strength of the ion exchange membrane.

The aperture ratio for the reinforcement core materials herein refers to a ratio of a total area of a surface through which substances such as ions (an electrolyte solution and cations contained therein (e.g., sodium ions)) can pass (B) to the area of either one surface of the membrane body (A) (B/A). The total area of the surface through which substances such as ions can pass (B) can refer to the total areas of regions in which in the ion exchange membrane, cations, an electrolytic solution, and the like are not blocked by the reinforcement core materials and the like contained in the ion exchange membrane.

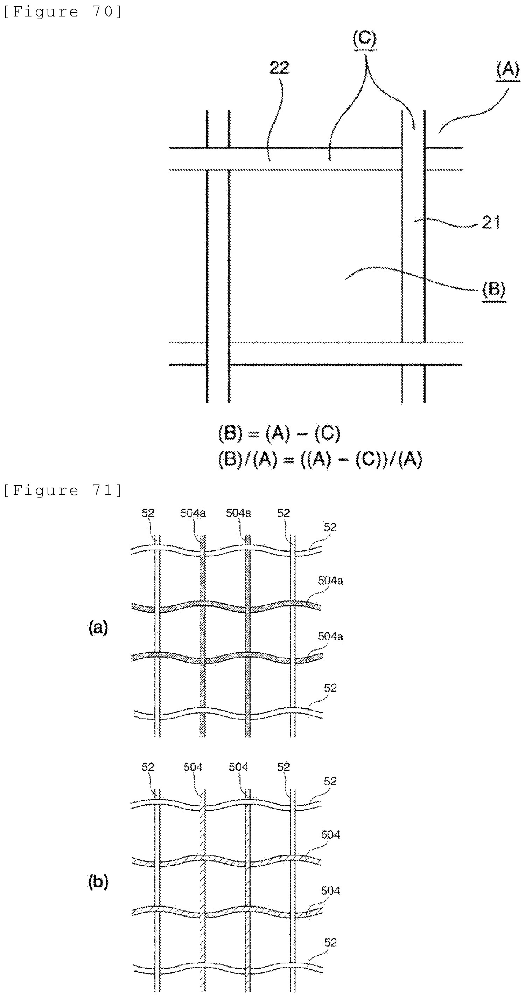

Figure 70 illustrates a schematic view for explaining the aperture ratio of reinforcement core materials constituting the ion exchange membrane. Figure **70****,** in which a portion of the ion exchange membrane is enlarged, shows only the arrangement of the reinforcement core materials 21 and 22 in the regions, omitting illustration of the other members.

By subtracting the total area of the reinforcement core materials (C) from the area of the region surrounded by the reinforcement core materials 21 arranged along the longitudinal direction and the reinforcement core materials 22 arranged along the transverse direction, the region including the area of the reinforcement core materials (A), the total area of regions through which substances such as ions can pass (B) in the area of the above-described region (A) can be obtained. That is, the aperture ratio can be determined by the following formula (I): $Aperture ratio = \left(B\right) / \left(A\right) = \left(\left(A\right)-\left(C\right)\right) / \left(A\right)$

Among the reinforcement core materials, a particularly preferred form is tape yarns or highly oriented monofilaments comprising PTFE from the viewpoint of chemical resistance and heat resistance. Specifically, reinforcement core materials forming a plain weave in which 50 to 300 denier tape yarns obtained by slitting a high strength porous sheet comprising PTFE into a tape form, or 50 to 300 denier highly oriented monofilaments comprising PTFE are used and which has a weave density of 10 to 50 yarns or monofilaments/inch and has a thickness in the range of 50 to 100 µm are more preferred. The aperture ratio of an ion exchange membrane comprising such reinforcement core materials is further preferably 60% or more.

Examples of the shape of the reinforcement yarns include round yarns and tape yarns.

### (Continuous holes)

The ion exchange membrane preferably has continuous holes inside the membrane body.

The continuous holes refer to holes that can be flow paths for ions generated in electrolysis and an electrolyte solution. The continuous holes, which are tubular holes formed inside the membrane body, are formed by dissolution of sacrifice core materials (or sacrifice yarns) described below. The shape, diameter, or the like of the continuous holes can be controlled by selecting the shape or diameter of the sacrifice core materials (sacrifice yarns).

Forming the continuous holes inside the ion exchange membrane can ensure the mobility of an electrolyte solution on electrolysis. The shape of the continuous holes is not particularly limited, but may be the shape of sacrifice core materials to be used for formation of the continuous holes in accordance with the production method described below.

The continuous holes are preferably formed so as to alternately pass on the anode side (sulfonic acid layer side) and the cathode side (carboxylic acid layer side) of the reinforcement core materials. With such a structure, in a portion in which continuous holes are formed on the cathode side of the reinforcement core materials, ions (e.g., sodium ions) transported through the electrolyte solution with which the continuous holes are filled can flow also on the cathode side of the reinforcement core materials. As a result, the flow of cations is not interrupted, and thus, it is possible to further reduce the electrical resistance of the ion exchange membrane.

The continuous holes may be formed along only one predetermined direction of the membrane body constituting the ion exchange membrane, but are preferably formed in both the longitudinal direction and the transverse direction of the membrane body from the viewpoint of exhibiting more stable electrolytic performance.

### [Production method]

A suitable example of a method for producing an ion exchange membrane includes a method including the following steps (1) to (6):
Step (1): the step of producing a fluorine-containing polymer having an ion exchange group or an ion exchange group precursor capable of forming an ion exchange group by hydrolysis,
Step (2): the step of weaving at least a plurality of reinforcement core materials, as required, and sacrifice yarns having a property of dissolving in an acid or an alkali, and forming continuous holes, to obtain a reinforcing material in which the sacrifice yarns are arranged between the reinforcement core materials adjacent to each other,
Step (3): the step of forming into a film the above fluorine-containing polymer having an ion exchange group or an ion exchange group precursor capable of forming an ion exchange group by hydrolysis,
Step (4): the step of embedding the above reinforcing materials, as required, in the above film to obtain a membrane body inside which the reinforcing materials are arranged,
Step (5): the step of hydrolyzing the membrane body obtained in the step (4) (hydrolysis step), and
Step (6): the step of providing a coating layer on the membrane body obtained in the step (5) (application step).

Hereinafter, each of the steps will be described in detail.

### Step (1): Step of producing fluorine-containing polymer

In the step (1), raw material monomers described in the first group to the third group above are used to produce a fluorine-containing polymer. In order to control the ion exchange capacity of the fluorine-containing polymer, the mixture ratio of the raw material monomers should be adjusted in the production of the fluorine-containing polymer forming the layers.

### Step (2): Step of producing reinforcing materials

The reinforcing material is a woven fabric obtained by weaving reinforcement yarns or the like. The reinforcing material is embedded in the membrane to thereby form reinforcement core materials. When an ion exchange membrane having continuous holes is formed, sacrifice yarns are additionally woven into the reinforcing material. The amount of the sacrifice yarns contained in this case is preferably 10 to 80% by mass, more preferably 30 to 70% by mass based on the entire reinforcing material. Weaving the sacrifice yarns can also prevent yarn slippage of the reinforcement core materials.

As the sacrifice yarns, which have solubility in the membrane production step or under an electrolysis environment, rayon, polyethylene terephthalate (PET), cellulose, polyamide, and the like are used. Monofilaments or multifilaments having a thickness of 20 to 50 deniers and comprising polyvinyl alcohol and the like are also preferred.

In the step (2), the aperture ratio, arrangement of the continuous holes, and the like can be controlled by adjusting the arrangement of the reinforcement core materials and the sacrifice yarns.

### Step (3): Step of film formation

In the step (3), the fluorine-containing polymer obtained in the step (1) is formed into a film by using an extruder. The film may be a single-layer configuration, a two-layer configuration of a sulfonic acid layer and a carboxylic acid layer as mentioned above, or a multilayer configuration of three layers or more.

Examples of the film forming method include the following:
a method in which a fluorine-containing polymer having a carboxylic acid group and a fluorine-containing polymer having a sulfonic acid group are separately formed into films; and
a method in which fluorine-containing polymer having a carboxylic acid group and a fluorine-containing polymer having a sulfonic acid group are coextruded into a composite film.

The number of each film may be more than one. Coextrusion of different films is preferred because of its contribution to an increase in the adhesive strength in the interface.

### Step (4): Step of obtaining membrane body

In the step (4), the reinforcing material obtained in the step (2) is embedded in the film obtained in the step (3) to provide a membrane body including the reinforcing material therein.

Preferable examples of the method for forming a membrane body include (i) a method in which a fluorine-containing polymer having a carboxylic acid group precursor (e.g., carboxylate functional group) (hereinafter, a layer comprising the same is referred to as the first layer) located on the cathode side and a fluorine-containing polymer having a sulfonic acid group precursor (e.g., sulfonyl fluoride functional group) (hereinafter, a layer comprising the same is referred to as the second layer) are formed into a film by a coextrusion method, and, by using a heat source and a vacuum source as required, a reinforcing material and the second layer/first layer composite film are laminated in this order on breathable heat-resistant release paper on a flat plate or drum having many pores on the surface thereof and integrated at a temperature at which each polymer melts while air among each of the layers was evacuated by reduced pressure; and (ii) a method in which, in addition to the second layer/first layer composite film, a fluorine-containing polymer having a sulfonic acid group precursor is singly formed into a film (the third layer) in advance, and, by using a heat source and a vacuum source as required, the third layer film, the reinforcement core materials, and the composite film comprising the second layer/first layer are laminated in this order on breathable heat-resistant release paper on a flat plate or drum having many pores on the surface thereof and integrated at a temperature at which each polymer melts while air among each of the layers was evacuated by reduced pressure.

Coextrusion of the first layer and the second layer herein contributes to an increase in the adhesive strength at the interface.

The method including integration under a reduced pressure is characterized by making the third layer on the reinforcing material thicker than that of a pressure-application press method. Further, since the reinforcing material is fixed on the inner surface of the membrane body, the method has a property capable of sufficiently retaining the mechanical strength of the ion exchange membrane.

The variations of lamination described here are exemplary, and coextrusion can be performed after a preferred lamination pattern (for example, the combination of layers) is appropriately selected considering the desired layer configuration of the membrane body and physical properties, and the like.

For the purpose of further improving the electric properties of the ion exchange membrane, it is also possible to additionally interpose a fourth layer comprising a fluorine-containing polymer having both a carboxylic acid group precursor and a sulfonic acid group precursor between the first layer and the second layer or to use a fourth layer comprising a fluorine-containing polymer having both a carboxylic acid group precursor and a sulfonic acid group precursor instead of the second layer.

The method for forming the fourth layer may be a method in which a fluorine-containing polymer having a carboxylic acid group precursor and a fluorine-containing polymer having a sulfonic acid group precursor are separately produced and then mixed or may be a method in which a monomer having a carboxylic acid group precursor and a monomer having a sulfonic acid group precursor are copolymerized.

When the fourth layer is used as a component of the ion exchange membrane, a coextruded film of the first layer and the fourth layer is formed, in addition to this, the third layer and the second layer are separately formed into films, and lamination may be performed by the method mentioned above. Alternatively, the three layers of the first layer/fourth layer/second layer may be simultaneously formed into a film by coextrusion.

In this case, the direction in which the extruded film flows is the MD. As mentioned above, it is possible to form a membrane body containing a fluorine-containing polymer having an ion exchange group on a reinforcing material.

Additionally, the ion exchange membrane preferably has protruded portions composed of the fluorine-containing polymer having a sulfonic acid group, that is, projections, on the surface side composed of the sulfonic acid layer. As a method for forming such projections, which is not particularly limited, a known method also can be employed including forming projections on a resin surface. A specific example of the method is a method of embossing the surface of the membrane body. For example, the above projections can be formed by using release paper embossed in advance when the composite film mentioned above, reinforcing material, and the like are integrated. In the case where projections are formed by embossing, the height and arrangement density of the projections can be controlled by controlling the emboss shape to be transferred (shape of the release paper).

### (5) Hydrolysis step

In the step (5), a step of hydrolyzing the membrane body obtained in the step (4) to convert the ion exchange group precursor into an ion exchange group (hydrolysis step) is performed.

In the step (5), it is also possible to form dissolution holes in the membrane body by dissolving and removing the sacrifice yarns included in the membrane body with acid or alkali. The sacrifice yarns may remain in the continuous holes without being completely dissolved and removed. The sacrifice yarns remaining in the continuous holes may be dissolved and removed by the electrolyte solution when the ion exchange membrane is subjected to electrolysis.

The sacrifice yarn has solubility in acid or alkali in the step of producing an ion exchange membrane or under an electrolysis environment. The sacrifice yarns are eluted out to thereby form continuous holes at corresponding sites.

The step (5) can be performed by immersing the membrane body obtained in the step (4) in a hydrolysis solution containing acid or alkali. An example of the hydrolysis solution that can be used is a mixed solution containing KOH and dimethyl sulfoxide (DMSO).

The mixed solution preferably contains KOH of 2.5 to 4.0 N and DMSO of 25 to 35% by mass.

The temperature for hydrolysis is preferably 70 to 100°C. The higher the temperature, the larger can be the apparent thickness. The temperature is more preferably 75 to 100°C.

The time for hydrolysis is preferably 10 to 120 minutes. The longer the time, the larger can be the apparent thickness. The time is more preferably 20 to 120 minutes.

The step of forming continuous holes by eluting the sacrifice yarn will be now described in more detail. Figures 71(a) and (b) are schematic views for explaining a method for forming the continuous holes of the ion exchange membrane.

Figures 71(a) and (b) show reinforcement yarns 52, sacrifice yarns 504a, and continuous holes 504 formed by the sacrifice yarns 504a only, omitting illustration of the other members such as a membrane body.

First, the reinforcement yarns 52 that are to constitute reinforcement core materials in the ion exchange membrane and the sacrifice yarns 504a for forming the continuous holes 504 in the ion exchange membrane are used as interwoven reinforcing materials. Then, in the step (5), the sacrifice yarns 504a are eluted to form the continuous holes 504.

The above method is simple because the method for interweaving the reinforcement yarns 52 and the sacrifice yarns 504a may be adjusted depending on the arrangement of the reinforcement core materials and continuous holes in the membrane body of the ion exchange membrane.

Figure 71(a) exemplifies the plain-woven reinforcing material in which the reinforcement yarns 52 and sacrifice yarns 504a are interwoven along both the longitudinal direction and the lateral direction in the paper, and the arrangement of the reinforcement yarns 52 and the sacrifice yarns 504a in the reinforcing material may be varied as required.

### (6) Application step

In the step (6), a coating layer can be formed by preparing a coating liquid containing inorganic material particles obtained by grinding raw ore or melting raw ore and a binder, applying the coating liquid onto the surface of the ion exchange membrane obtained in the step (5), and drying the coating liquid.

A preferable binder is a binder obtained by hydrolyzing a fluorine-containing polymer having an ion exchange group precursor with an aqueous solution containing dimethyl sulfoxide (DMSO) and potassium hydroxide (KOH) and then immersing the polymer in hydrochloric acid to replace the counterion of the ion exchange group by H+ (e.g., a fluorine-containing polymer having a carboxyl group or sulfo group). Thereby, the polymer is more likely to dissolve in water or ethanol mentioned below, which is preferable.

This binder is dissolved in a mixed solution of water and ethanol. The volume ratio between water and ethanol is preferably 10:1 to 1:10, more preferably 5:1 to 1:5, further preferably 2:1 to 1:2. The inorganic material particles are dispersed with a ball mill into the dissolution liquid thus obtained to thereby provide a coating liquid. In this case, it is also possible to adjust the average particle size and the like of the particles by adjusting the time and rotation speed during the dispersion. The preferable amount of the inorganic material particles and the binder to be blended is as mentioned above.

The concentration of the inorganic material particles and the binder in the coating liquid is not particularly limited, but a thin coating liquid is preferable. This enables uniform application onto the surface of the ion exchange membrane.

Additionally, a surfactant may be added to the dispersion when the inorganic material particles are dispersed. As the surfactant, nonionic surfactants are preferable, and examples thereof include HS-210, NS-210, P-210, and E-212 manufactured by NOF CORPORATION.

The coating liquid obtained is applied onto the surface of the ion exchange membrane by spray application or roll coating to thereby provide an ion exchange membrane.

### [Microporous membrane]

The microporous membrane of the present embodiment is not particularly limited as long as the membrane can be formed into a laminate with the electrode for electrolysis, as mentioned above. Various microporous membranes may be employed.

The porosity of the microporous membrane of the present embodiment is not particularly limited, but can be 20 to 90, for example, and is preferably 30 to 85. The above porosity can be calculated by the following formula: Porosity = (1 - (the weight of the membrane in a dried state) / (the weight calculated from the volume calculated from the thickness, width, and length of the membrane and the density of the membrane material)) × 100

The average pore size of the microporous membrane of the present embodiment is not particularly limited, and can be 0.01 µm to 10 µm, for example, preferably 0.05 µm to 5 µm. With respect to the average pore size, for example, the membrane is cut vertically to the thickness direction, and the section is observed with an FE-SEM. The average pore size can be obtained by measuring the diameter of about 100 pores observed and averaging the measurements.

The thickness of the microporous membrane of the present embodiment is not particularly limited, and can be 10 µm to 1000 µm, for example, preferably 50 µm to 600 µm. The above thickness can be measured by using a micrometer (manufactured by Mitutoyo Corporation) or the like, for example.

Specific examples of the microporous membrane as mentioned above include Zirfon Perl UTP 500 manufactured by Agfa (also referred to as a Zirfon membrane in the present embodiment) and those described in International Publication No. WO 2013-183584 and International Publication No. WO 2016-203701.

In the present embodiment, the membrane preferably comprises a first ion exchange resin layer and a second ion exchange resin layer having an EW (ion exchange capacity) different from that of the first ion exchange resin layer. Additionally, the membrane preferably comprises a first ion exchange resin layer and a second ion exchange resin layer having a functional group different from that of the first ion exchange resin layer. The ion exchange capacity can be adjusted by the functional group to be introduced, and functional groups that may be introduced are as mentioned above.

In the present embodiment, the portion of the laminate 25 to be sandwiched between the anode gasket 12 and the cathode gasket 13 is preferably a non-conducting surface. The "conducting surface" corresponds to a portion designed so as to allow electrolytes to migrate between the anode chamber and the cathode chamber, and the "non-conducting surface" is a portion not corresponding to the conducting surface.

In the present embodiment, the outermost perimeter of the laminate may be located on a more inner side or farther outside than the outermost perimeter of the anode side gasket and the cathode side gasket in the direction of the conducting surface, but is preferably located farther outside. In the case of such a configuration, the outermost perimeter located farther outside can be used as a grip margin, and thus, the workability on assembling the electrolyzer tends to be improved. The outermost perimeter of the laminate herein is the outermost perimeter of the membrane and the electrode for electrolysis in combination. That is, when the outermost perimeter of the electrode for electrolysis is located farther outside of the mutual contact surface than the outermost perimeter of the membrane, the outermost perimeter of the laminate means the outermost perimeter of the electrode for electrolysis. In contrast, when the outermost perimeter of the electrode for electrolysis is located on a more inner side of the mutual contact surface than the outermost perimeter of the membrane, the outermost perimeter of the laminate means the outermost perimeter of the membrane.

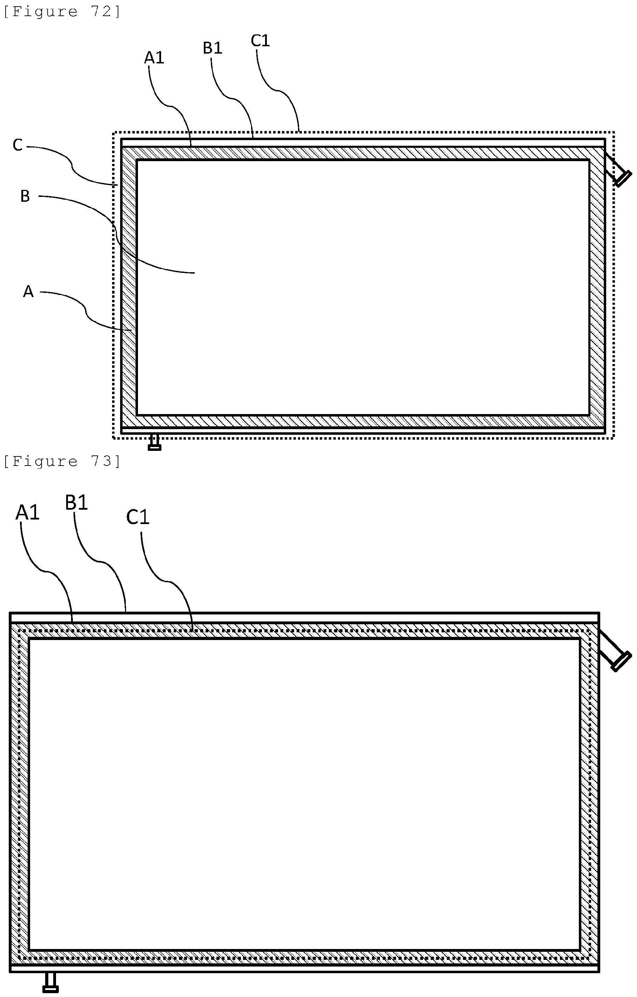

The positional relation will be described by use of Figures 72 and 73. Figures 72 and 73 particularly show the positional relation of the gaskets and the laminate when the two electrolytic cells shown in Figure 64B, for example, are observed from the α-direction. In Figures 72 and 73, a rectangular gasket A having an aperture portion at the center is located at the most front side. A rectangular membrane B is located at the back of A, and a rectangular electrode for electrolysis C is further located at the back of B. That is, the aperture portion of the gasket A is a portion corresponding to the conducting surface of the laminate.

In Figure 72, the outermost perimeter A1 of the gasket A is located on a more inner side than the outermost perimeter B1 of the membrane B and the outermost perimeter C1 of the electrode for electrolysis C in the direction of the conducting surface.

In Figure 73, the outermost perimeter A1 of the gasket A is located farther outside than the outermost perimeter C1 of the electrode for electrolysis C in the direction of the conducting surface, but the outermost perimeter B1 of the membrane B is located farther outside than the outermost perimeter A1 of the gasket A in the direction of the conducting surface.

In the present embodiment, the laminate should be sandwiched between the anode side gasket and the cathode side gasket, and the electrode for electrolysis per se may not be sandwiched directly between the anode side gasket and the cathode side gasket. That is, as long as the electrode for electrolysis per se is fixed to the membrane, only the membrane may be sandwiched directly between the anode side gasket and the cathode side gasket. In the present embodiment, from the viewpoint of more stably fixing the electrode for electrolysis in the electrolyzer, both the electrode for electrolysis and the membrane are preferably sandwiched between the anode side gasket and the cathode side gasket.

In the present embodiment, the membrane and the electrode for electrolysis are fixed by at least the anode gasket and the cathode gasket to exist as a laminate, but may take other fixing configuration. For example, a fixing configuration exemplified below may be employed. Only one fixing configuration can be employed, or two or more fixing configurations can be employed in combination.

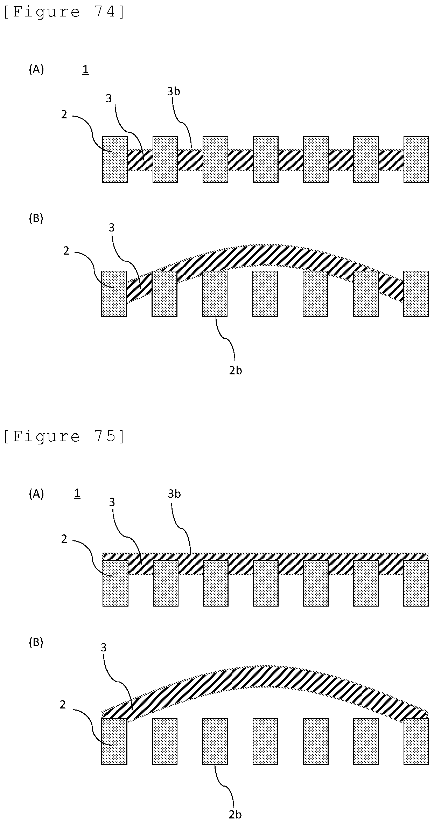

In the present embodiment, at least a portion of the electrode for electrolysis preferably penetrates the membrane and thereby is fixed. The aspect will be described by use of Figure 74A.

In Figure 74A, at least a portion of the electrode for electrolysis 2 penetrates the membrane 3 and thereby is fixed. Figure 74A shows an example in which the electrode for electrolysis 2 is a metal porous electrode. That is, in Figure 74A, a plurality of portions of the electrode for electrolysis 2 are separately shown, but these portions are continuous. Thus, the cross-section of an integral metal porous electrode is shown (the same applies to Figures 75 to 78 below).

In the electrode configuration, when the membrane 3 in the predetermined position (position to be the fixed portion), for example, is pressed onto the electrode for electrolysis 2, a portion of the membrane 3 intrudes into the asperity geometry or opening geometry on the surface of the electrode for electrolysis 2. Then, recesses on the electrode surface and projections around openings penetrate the membrane 3 and preferably penetrate through to the outer surface 3b of the membrane 3, as shown in Figure 74A.

As described above, the fixing configuration in Figure 74A can be produced by pressing the membrane 3 onto the electrode for electrolysis 2. In this case, the membrane 3 is softened by warming and then subjected to thermal compression and thermal suction. Then, the electrode for electrolysis 2 penetrates the membrane 3. Alternatively, the membrane 3 may be used in a melt state. In this case, the membrane is preferably suctioned from the side of the outer surface 2b (back surface side) of the electrode for electrolysis 2 in the state shown in Figure 74B. The region in which the membrane 3 is pressed onto the electrode for electrolysis 2 constitutes the "fixed portion".

The fixing configuration shown in Figure 74A can be observed by a magnifier (loupe), optical microscope, or electron microscope. Since the electrode for electrolysis 2 has penetrated the membrane 3, it is possible to estimate the fixing configuration in Figure 74A by a test of the conduction between the outer surface 3b of the membrane 3 and the outer surface 2b of the electrode for electrolysis 2 by use of a tester or the like.

In the present embodiment, at least a portion of the electrode for electrolysis is located and fixed inside the membrane in the fixed portion. The aspect will be described by use of Figure 75A.

As described above, the surface of the electrode for electrolysis 2 has an asperity geometry or opening geometry. In the embodiment shown in Figure 75A, a portion of the electrode surface enters the membrane 3 in the predetermined position (position to be the fixed portion) and is fixed thereto. The fixing configuration shown in Figure 75A can be produced by pressing the membrane 3 onto the electrode for electrolysis 2. In this case, the fixing configuration in Figure 75A is preferably formed by softening the membrane 3 by warming and then thermally compressing and thermally suctioning the membrane 3. Alternatively, the fixing configuration in Figure 75A can be formed by melting the membrane 3. In this case, the membrane 3 is preferably suctioned from the side of the outer surface 2b (back surface side) of the electrode for electrolysis 2.

The fixing configuration shown in Figure 75A can be observed by a magnifier (loupe), optical microscope, or electron microscope. Particularly preferable is a method including subjecting the sample to an embedding treatment, then forming a cross-section by a microtome, and observing the cross-section. In the fixing configuration shown in Figure 75A, the electrode for electrolysis 2 does not penetrate the membrane 3. Thus, no conduction between the outer surface 3b of the membrane 3 and the outer surface 2b of the electrode for electrolysis 2 is identified by the conduction test.

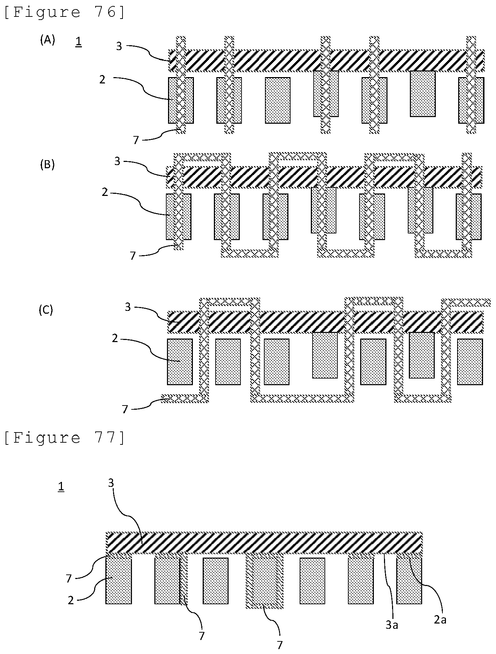

In the present embodiment, it is preferable that the laminate further have a fixing member for fixing the membrane and the electrode for electrolysis. The aspect will be described by use of Figures 76A to C.

The fixing configuration shown in Figure 76A is a configuration in which a fixing member 7, which is separate from the electrode for electrolysis 2 and the membrane 3, is used and the fixing member 7 penetrates and thereby fixes the electrode for electrolysis 2 and the membrane 3. The electrode for electrolysis 2 is not necessarily penetrated by the fixing member 7, and should be fixed by the fixing member 7 so as not to be separated from the membrane 2. The material for the fixing member 7 is not particularly limited, and materials constituted by metal, resin, or the like, for example, can be used as the fixing member 7. Examples of the metal include nickel, nichrome, titanium, and stainless steel (SUS). Oxides thereof may be used. Examples of the resin that can be used include fluorine resins (e.g., polytetrafluoroethylene (PTFE), copolymers of tetrafluoroethylene and perfluoroalkoxy ethylene (PFA), copolymers of tetrafluoroethylene and ethylene (ETFE), materials for the membrane 3 described below), polyvinylidene fluoride (PVDF), ethylene-propylene-diene rubber (EPDM), polyethylene (PP), polypropylene (PE), nylon, and aramid.

In the present embodiment, for example, a yarn-like metal or resin is used to sew the predetermined position (position to be the fixed portion) between the outer surface 2b of the electrode for electrolysis 2 and the outer surface 3b of the membrane 3, as shown in Figures 76B and C. It is also possible to fix the electrode for electrolysis 2 to the membrane 3 by use of a fixing mechanism such as a tucker.

The fixing configuration shown in Figure 77 is a configuration in which fixing is made by an organic resin (adhesion layer) interposed between the electrode for electrolysis 2 and the membrane 3. That is, in Figure 77, shown is a configuration in which an organic resin as the fixing member 7 is arranged on the predetermined position (position to be the fixed portion) between the electrode for electrolysis 2 and the membrane 3 to thereby make fixing by adhesion. For example, the organic resin is applied onto the inner surface 2a of the electrode for electrolysis 2, the inner surface 3a of the membrane 3, or one or both of the inner surface 2a of the electrode for electrolysis 2 and the inner surface 3a of the membrane 3. Then, the fixing configuration shown in Figure 77 can be formed by laminating the electrode for electrolysis 2 to the membrane 3. The materials for the organic resin are not particularly limited, but examples thereof that can be used include fluorine resins (e.g., PTFE, PFE, and PFPE) and resins similar to the materials constituting the membrane 3 as mentioned above. Commercially available fluorine-containing adhesives and PTFE dispersions also can be used as appropriate. Additionally, multi-purpose vinyl acetate adhesives, ethylene-vinyl acetate copolymer adhesives, acrylic resin adhesives, α-olefin adhesives, styrene-butadiene rubber latex adhesives, vinyl chloride resin adhesives, chloroprene adhesives, nitrile rubber adhesives, urethane rubber adhesives, epoxy adhesives, silicone resin adhesives, modified silicone adhesives, epoxy-modified silicone resin adhesives, silylated urethane resin adhesives, cyanoacrylate adhesives, and the like also can be used.

In the present embodiment, organic resins that dissolve in an electrolyte solution or dissolve or decompose during electrolysis may be used. Examples of the resins that dissolve in an electrolyte solution or dissolve or decompose during electrolysis include, but are not limited to, vinyl acetate adhesives, ethylene-vinyl acetate copolymer adhesives, acrylic resin adhesives, α-olefin adhesives, styrene-butadiene rubber latex adhesives, vinyl chloride resin adhesives, chloroprene adhesives, nitrile rubber adhesives, urethane rubber adhesives, epoxy adhesives, silicone resin adhesives, modified silicone adhesives, epoxy-modified silicone resin adhesives, silylated urethane resin adhesives, and cyanoacrylate adhesives.

The fixing configuration shown in Figure 77 can be observed by an optical microscope or electron microscope. Particularly preferable is a method including subjecting the sample to an embedding treatment, then forming a cross-section by a microtome, and observing the cross-section.

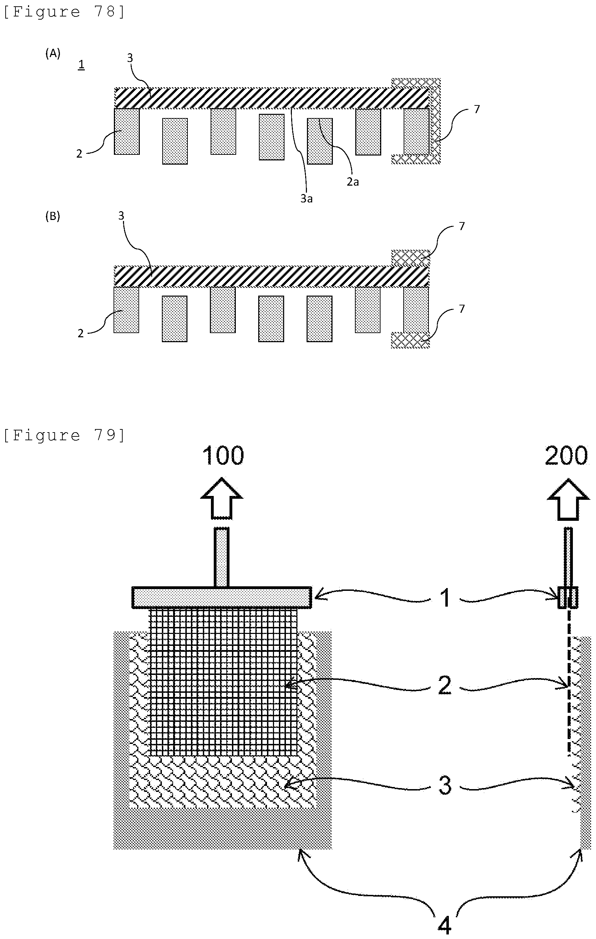

In the present embodiment, at least a portion of the fixing member preferably externally grips the membrane and the electrode for electrolysis. The aspect will be described by use of Figure 78A.

The fixing configuration shown in Figure 78A is a configuration in which the electrode for electrolysis 2 and membrane 3 are externally gripped and fixed. That is, the outer surface 2b of the electrode for electrolysis 2 and the outer surface 3b of the membrane 3 are sandwiched and fixed by a gripping member as the fixing member 7. In the fixing configuration shown in Figure 78A, a state in which the gripping member is engaging in the electrode for electrolysis 2 and the membrane 3 is also included. Examples of the gripping member include tape and clips.

In the present embodiment, a gripping member that dissolves in an electrolyte solution may be used. Examples of the gripping member that dissolves in an electrolyte solution include PET tape and clips and PVA tape and clips.

In the fixing configuration shown in Figure 78A, unlike those in Figures 74 to Figure 77, the electrode for electrolysis 2 and the membrane 3 are not bonded at the interface therebetween, but the inner surface 2a of the electrode for electrolysis 2 and the inner surface 3a of the membrane 3 are only abutted or opposed to each other. Removal of the gripping member can release the fixed state of the electrode for electrolysis 2 and the membrane 3 and separate the electrode for electrolysis 2 from the membrane 3.

Although not shown in Figure 78A, it is also possible to fix the electrode for electrolysis 2 and the membrane 3 using a gripping member in an electrolytic cell.

Also in the present embodiment, at least a portion of the fixing member preferably fixes the membrane and the electrode for electrolysis by magnetic force. The aspect will be described by use of Figure 78B.

The fixing configuration shown in Figure 78B is a configuration in which the electrode for electrolysis 2 and membrane 3 are externally gripped and fixed. The difference from that in Figure 78A is that a pair of magnets are used as the gripping member, which is the fixing member. In the aspect of the fixing configuration shown in Figure 78B, a laminate 1 is attached to the electrolyzer. Thereafter, during operation of the electrolyzer, the gripping member may be left as it is or may be removed from the laminate 1.

Although not shown in Figure 78B, it is also possible to fix the electrode for electrolysis 2 and the membrane 3 using a gripping member in an electrolytic cell. When a magnetic material that adheres to magnets is used as a part of the material for the electrolytic cell, one gripping material is placed on the side of the membrane surface. Then, the gripping material and the electrolytic cell can sandwich and fix the electrode for electrolysis 2 and the membrane 3 therebetween.

A plurality of fixed portion lines can be provided. That is, 1, 2, 3, ... n fixed portion lines can be arranged from the side of the contour toward the inner side of the laminate 1. n is an integer of 1 or more. The m-th (m < n) fixed portion line and the L-th (m < L ≤ n) fixed portion line can be each formed to have a different fixation pattern.

A fixed portion line to be formed in the conducting surface preferably has a line-symmetric shape. This tends to enable stress concentration to be controlled. For example, when two orthogonally intersecting directions are referred to as the X direction and the Y direction, it is possible to configure the fixed portion by arranging a fixed portion line each in the X direction and the Y direction or arranging a plurality of fixed portion lines at equal intervals each in the X direction and the Y direction. The number of fixed portion lines each in the X direction and the Y direction is not limited, but is preferably 100 or less each in the X direction and the Y direction. From the viewpoint of achieving the planarity of conducting surface, the number of fixed portion lines is preferably 50 or less each in the X direction and the Y direction.

When the fixed portion in the present embodiment has the fixing configuration shown in Figure 74A or Figure 76, a sealing material is preferably applied onto the membrane surface of the fixed portion from the viewpoint of preventing a short circuit caused by a contact between the anode and the cathode. As the sealing material, the materials described for the above adhesives can be used.

The laminate in the present embodiment may have various fixed portions in various positions as mentioned above, but from the viewpoint of sufficiently achieving electrolytic performance, these fixed portions are preferably present on the non-conducting surface.

The laminate in the present embodiment may have various fixed portions in various positions as mentioned above, but the electrode for electrolysis preferably satisfies the "force applied" mentioned above particularly in a portion in which no fixed portion is present (non-fixed portion). That is, the force applied per unit·mass unit area of the electrode for electrolysis in the non-fixed portion is preferably less than 1.5 N/mg·cm².

In the present embodiment, it is preferable that the membrane comprise an ion exchange membrane comprising a surface layer containing an organic resin and the electrode for electrolysis be fixed by the organic resin. The organic resin is as mentioned above and can be formed as the surface layer of the ion exchange membrane by various known methods.

### (Water electrolysis)

The electrolyzer of the present embodiment, as an electrolyzer in the case of electrolyzing water, has a configuration in which the ion exchange membrane in an electrolyzer for use in the case of electrolyzing common salt mentioned above is replaced by a microporous membrane. The raw material to be supplied, which is water, is different from that for the electrolyzer in the case of electrolyzing common salt mentioned above. As for the other components, components similar to that of the electrolyzer in the case of electrolyzing common salt can be employed also in the electrolyzer in the case of electrolyzing water. Since chlorine gas is generated in the anode chamber in the case of common salt electrolysis, titanium is used as the material of the anode chamber, but in the case of water electrolysis, only oxygen gas is generated in the anode chamber. Thus, a material identical to that of the cathode chamber can be used. An example thereof is nickel. For anode coating, catalyst coating for oxygen generation is suitable. Examples of the catalyst coating include metals, oxides, and hydroxides of the platinum group metals and transition metal group metals. For example, elements such as platinum, iridium, palladium, ruthenium, nickel, cobalt, and iron can be used.

### (Method for producing electrolyzer and method for renewing laminate)

A method for renewing the laminate in the electrolyzer of the present embodiment has a step of separating the laminate in the present embodiment from the anode side gasket and the cathode side gasket to thereby remove the laminate out of the electrolyzer, and a step of sandwiching a new laminate between the anode side gasket and the cathode side gasket. The new laminate means the laminate in the present embodiment, and at least one of the electrode for electrolysis and the membrane should be new.

In the step of sandwiching the laminate described above, from the viewpoint of more stably fixing the electrode for electrolysis in the electrolyzer, both the electrode for electrolysis and the membrane are preferably sandwiched between the anode side gasket and the cathode side gasket.

Additionally, the method for producing the electrolyzer of the present embodiment has a step of sandwiching the laminate in the present embodiment between the anode side gasket and the cathode side gasket.

The method for producing the electrolyzer and method for renewing the laminate of the present embodiment, as configured as described above, can improve the work efficiency during electrode renewing in the electrolyzer and further can provide excellent electrolytic performance also after renewing.

Also in the step of sandwiching the laminate described above, from the viewpoint of more stably fixing the electrode for electrolysis in the electrolyzer, both the electrode for electrolysis and the membrane are preferably sandwiched between the anode side gasket and the cathode side gasket.

### <Fifth embodiment> (not in accordance with the invention as claimed)

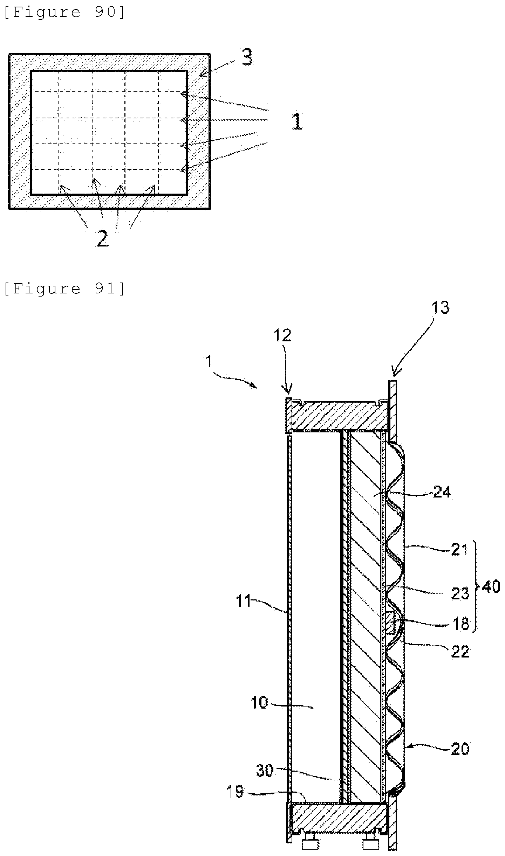

Here, a fifth embodiment of the present invention will be described in detail with reference to Figures 91 to 102.

### [Method for producing electrolyzer]

The method for producing an electrolyzer according to the fifth embodiment (hereinafter, in the section of <Fifth embodiment>, simply referred to as "the present embodiment") is a method for producing a new electrolyzer by arranging an electrode for electrolysis or a laminate of the electrode for electrolysis and a new membrane in an existing electrolyzer comprising an anode, a cathode that is opposed to the anode, and a membrane that is arranged between the anode and the cathode, wherein the electrode for electrolysis or the laminate, being in a wound body form, is used. As described above, according to the method for producing an electrolyzer in accordance with the present embodiment, an electrode for electrolysis or a laminate of the electrode for electrolysis and a new membrane, being in a wound body form, is used. Thus, the electrode for electrolysis or the laminate when used as a member of the electrolyzer can be downsized for transport or the like, and the work efficiency during electrode renewing in the electrolyzer can be improved.

In the present embodiment, the existing electrolyzer comprises an anode, a cathode that is opposed to the anode, and a membrane that is arranged between the anode and the cathode as constituent members, in other words, comprises an electrolytic cell. The existing electrolyzer is not particularly limited as long as comprising the constituent members described above, and various known configurations may be employed.

In the present embodiment, a new electrolyzer further comprises an electrode for electrolysis or a laminate, in addition to a member that has already served as the anode or cathode in the existing electrolyzer. That is, the "electrode for electrolysis" arranged on production of a new electrolyzer serves as the anode or cathode, and is separate from the cathode and anode in the existing electrolyzer. In the present embodiment, even in the case where the electrolytic performance of the anode and/or cathode has deteriorated in association with operation of the existing electrolyzer, arrangement of an electrode for electrolysis separate therefrom enables the characteristics of the anode and/or cathode to be renewed. In the case where a laminate is used in the present embodiment, a new ion exchange membrane is arranged in combination, and thus, the characteristics of the ion exchange membrane, which have deteriorated in association with operation, can be renewed simultaneously. "Renewing the characteristics" referred to herein means to have characteristics comparable to the initial characteristics possessed by the existing electrolyzer before being operated or to have characteristics higher than the initial characteristics.

In the present embodiment, the existing electrolyzer is assumed to be an "electrolyzer that has been already operated", and the new electrolyzer is assumed to be an "electrolyzer that has not been yet operated". That is, once an electrolyzer produced as a new electrolyzer is operated, the electrolyzer becomes "the existing electrolyzer in the present embodiment". Arrangement of an electrode for electrolysis or a laminate in this existing electrolyzer provides "a new electrolyzer of the present embodiment".

Hereinafter, a case of performing common salt electrolysis by using an ion exchange membrane as the membrane is taken as an example, and one embodiment of the electrolyzer will be described in detail. In the section of <Fifth embodiment>, unless otherwise specified, "the electrolyzer in the present embodiment" incorporates both "the existing electrolyzer in the present embodiment" and "the new electrolyzer in the present embodiment".

### [Electrolytic cell]

First, the electrolytic cell, which can be used as a constituent unit of the electrolyzer in the present embodiment, will be described. Figure 91 illustrates a cross-sectional view of an electrolytic cell 1.

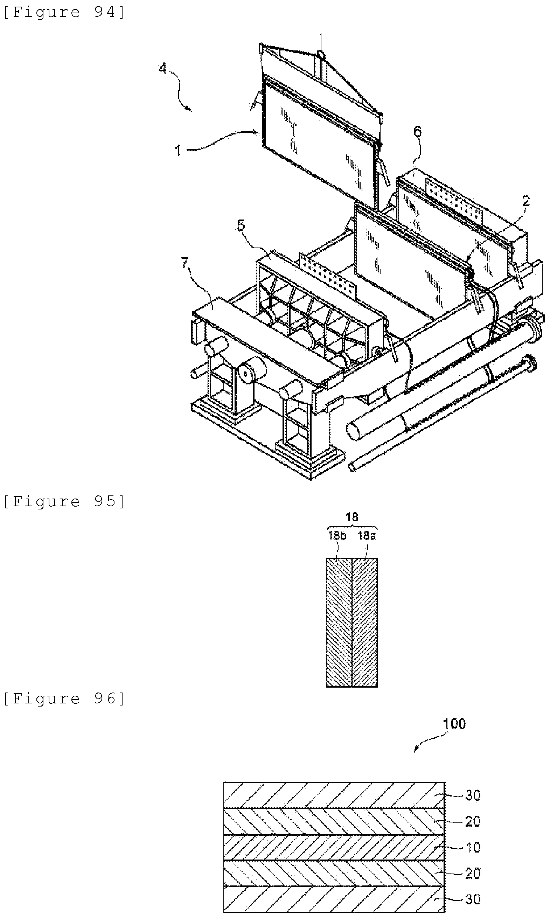

The electrolytic cell 1 comprises an anode chamber 10, a cathode chamber 20, a partition wall 30 placed between the anode chamber 10 and the cathode chamber 20, an anode 11 placed in the anode chamber 10, and a cathode 21 placed in the cathode chamber 20. As required, the electrolytic cell 1 has a substrate 18a and a reverse current absorbing layer 18b formed on the substrate 18a and may comprise a reverse current absorber 18 placed in the cathode chamber. The anode 11 and the cathode 21 belonging to the electrolytic cell 1 are electrically connected to each other. In other words, the electrolytic cell 1 comprises the following cathode structure. The cathode structure 40 comprises the cathode chamber 20, the cathode 21 placed in the cathode chamber 20, and the reverse current absorber 18 placed in the cathode chamber 20, the reverse current absorber 18 has the substrate 18a and the reverse current absorbing layer 18b formed on the substrate 18a, as shown in Figure 95, and the cathode 21 and the reverse current absorbing layer 18b are electrically connected. The cathode chamber 20 further has a collector 23, a support 24 supporting the collector, and a metal elastic body 22. The metal elastic body 22 is placed between the collector 23 and the cathode 21. The support 24 is placed between the collector 23 and the partition wall 30. The collector 23 is electrically connected to the cathode 21 via the metal elastic body 22. The partition wall 30 is electrically connected to the collector 23 via the support 24. Accordingly, the partition wall 30, the support 24, the collector 23, the metal elastic body 22, and the cathode 21 are electrically connected. The cathode 21 and the reverse current absorbing layer 18b are electrically connected. The cathode 21 and the reverse current absorbing layer may be directly connected or may be indirectly connected via the collector, the support, the metal elastic body, the partition wall, or the like. The entire surface of the cathode 21 is preferably covered with a catalyst layer for reduction reaction. The form of electrical connection may be a form in which the partition wall 30 and the support 24, the support 24 and the collector 23, and the collector 23 and the metal elastic body 22 are each directly attached and the cathode 21 is laminated on the metal elastic body 22. Examples of a method for directly attaching these constituent members to one another include welding and the like. Alternatively, the reverse current absorber 18, the cathode 21, and the collector 23 may be collectively referred to as a cathode structure 40.

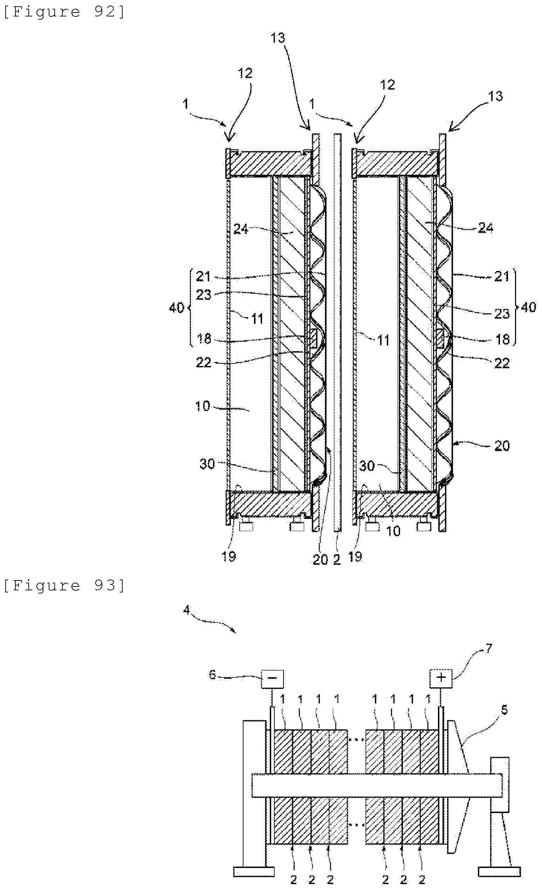

Figure 92 illustrates a cross-sectional view of two electrolytic cells 1 that are adjacent in the electrolyzer 4. Figure 93 shows an electrolyzer 4. Figure 94 shows a step of assembling the electrolyzer 4.

As shown in Figure 92, an electrolytic cell 1, a cation exchange membrane 2, and an electrolytic cell 1 are arranged in series in the order mentioned. An ion exchange membrane 2 is arranged between the anode chamber of one electrolytic cell 1 among the two electrolytic cells that are adjacent in the electrolyzer and the cathode chamber of the other electrolytic cell 1. That is, the anode chamber 10 of the electrolytic cell 1 and the cathode chamber 20 of the electrolytic cell 1 adjacent thereto is separated by the cation exchange membrane 2. As shown in Figure 93, the electrolyzer 4 is composed of a plurality of electrolytic cells 1 connected in series via the ion exchange membrane 2. That is, the electrolyzer 4 is a bipolar electrolyzer comprising the plurality of electrolytic cells 1 arranged in series and ion exchange membranes 2 each arranged between adjacent electrolytic cells 1. As shown in Figure 94, the electrolyzer 4 is assembled by arranging the plurality of electrolytic cells 1 in series via the ion exchange membrane 2 and coupling the cells by means of a press device 5.

The electrolyzer 4 has an anode terminal 7 and a cathode terminal 6 to be connected to a power supply. The anode 11 of the electrolytic cell 1 located at farthest end among the plurality of electrolytic cells 1 coupled in series in the electrolyzer 4 is electrically connected to the anode terminal 7. The cathode 21 of the electrolytic cell located at the end opposite to the anode terminal 7 among the plurality of electrolytic cells 1 coupled in series in the electrolyzer 4 is electrically connected to the cathode terminal 6. The electric current during electrolysis flows from the side of the anode terminal 7, through the anode and cathode of each electrolytic cell 1, toward the cathode terminal 6. At the both ends of the coupled electrolytic cells 1, an electrolytic cell having an anode chamber only (anode terminal cell) and an electrolytic cell having a cathode chamber only (cathode terminal cell) may be arranged. In this case, the anode terminal 7 is connected to the anode terminal cell arranged at the one end, and the cathode terminal 6 is connected to the cathode terminal cell arranged at the other end.

In the case of electrolyzing brine, brine is supplied to each anode chamber 10, and pure water or a low-concentration sodium hydroxide aqueous solution is supplied to each cathode chamber 20. Each liquid is supplied from an electrolyte solution supply pipe (not shown in Figure), through an electrolyte solution supply hose (not shown in Figure), to each electrolytic cell 1. The electrolyte solution and products from electrolysis are recovered from an electrolyte solution recovery pipe (not shown in Figure). During electrolysis, sodium ions in the brine migrate from the anode chamber 10 of the one electrolytic cell 1, through the ion exchange membrane 2, to the cathode chamber 20 of the adjacent electrolytic cell 1. Thus, the electric current during electrolysis flows in the direction in which the electrolytic cells 1 are coupled in series. That is, the electric current flows, through the cation exchange membrane 2, from the anode chamber 10 toward the cathode chamber 20. As the brine is electrolyzed, chlorine gas is generated on the side of the anode 11, and sodium hydroxide (solute) and hydrogen gas are generated on the side of the cathode 21.

### (Anode chamber)

The anode chamber 10 has the anode 11 or anode feed conductor 11. The feed conductor herein referred to mean a degraded electrode (i.e., the existing electrode), an electrode having no catalyst coating, and the like. When the electrode for electrolysis in the present embodiment is inserted to the anode side, 11 serves as an anode feed conductor. When the electrode for electrolysis in the present embodiment is not inserted to the anode side, 11 serves as an anode. The anode chamber 10 preferably has an anode-side electrolyte solution supply unit that supplies an electrolyte solution to the anode chamber 10, a baffle plate that is arranged above the anode-side electrolyte solution supply unit so as to be substantially parallel or oblique to a partition wall 30, and an anode-side gas liquid separation unit that is arranged above the baffle plate to separate gas from the electrolyte solution including the gas mixed.

### (Anode)

When the electrode for electrolysis in the present embodiment is not inserted to the anode side, an anode 11 is provided in the frame of the anode chamber 10 (i.e., the anode frame). As the anode 11, a metal electrode such as so-called DSA(R) can be used. DSA is an electrode including a titanium substrate of which surface is covered with an oxide comprising ruthenium, iridium, and titanium as components.

As the form, any of a perforated metal, nonwoven fabric, foamed metal, expanded metal, metal porous foil formed by electroforming, so-called woven mesh produced by knitting metal lines, and the like can be used.

### (Anode feed conductor)

When the electrode for electrolysis in the present embodiment is inserted to the anode side, the anode feed conductor 11 is provided in the frame of the anode chamber 10. As the anode feed conductor 11, a metal electrode such as so-called DSA(R) can be used, and titanium having no catalyst coating can be also used. Alternatively, DSA having a thinner catalyst coating can be also used. Further, a used anode can be also used.

As the form, any of a perforated metal, nonwoven fabric, foamed metal, expanded metal, metal porous foil formed by electroforming, so-called woven mesh produced by knitting metal lines, and the like can be used.

### (Anode-side electrolyte solution supply unit)

The anode-side electrolyte solution supply unit, which supplies the electrolyte solution to the anode chamber 10, is connected to the electrolyte solution supply pipe. The anode-side electrolyte solution supply unit is preferably arranged below the anode chamber 10. As the anode-side electrolyte solution supply unit, for example, a pipe on the surface of which aperture portions are formed (dispersion pipe) and the like can be used. Such a pipe is more preferably arranged along the surface of the anode 11 and parallel to the bottom 19 of the electrolytic cell. This pipe is connected to an electrolyte solution supply pipe (liquid supply nozzle) that supplies the electrolyte solution into the electrolytic cell 1. The electrolyte solution supplied from the liquid supply nozzle is conveyed with a pipe into the electrolytic cell 1 and supplied from the aperture portions provided on the surface of the pipe to inside the anode chamber 10. Arranging the pipe along the surface of the anode 11 and parallel to the bottom 19 of the electrolytic cell is preferable because the electrolyte solution can be uniformly supplied to inside the anode chamber 10.

### (Anode-side gas liquid separation unit)

The anode-side gas liquid separation unit is preferably arranged above the baffle plate. The anode-side gas liquid separation unit has a function of separating produced gas such as chlorine gas from the electrolyte solution during electrolysis. Unless otherwise specified, above means the upper direction in the electrolytic cell 1 in Figure 91, and below means the lower direction in the electrolytic cell 1 in Figure 91.

During electrolysis, produced gas generated in the electrolytic cell 1 and the electrolyte solution form a mixed phase (gas-liquid mixed phase), which is then emitted out of the system. Subsequently, pressure fluctuations inside the electrolytic cell 1 cause vibration, which may result in physical damage of the ion exchange membrane. In order to prevent this event, the electrolytic cell 1 in the present embodiment is preferably provided with an anode-side gas liquid separation unit to separate the gas from the liquid. The anode-side gas liquid separation unit is preferably provided with a defoaming plate to eliminate bubbles. When the gas-liquid mixed phase flow passes through the defoaming plate, bubbles burst to thereby enable the electrolyte solution and the gas to be separated. As a result, vibration during electrolysis can be prevented.

### (Baffle plate)

The baffle plate is preferably arranged above the anode-side electrolyte solution supply unit and arranged substantially in parallel with or obliquely to the partition wall 30. The baffle plate is a partition plate that controls the flow of the electrolyte solution in the anode chamber 10. When the baffle plate is provided, it is possible to cause the electrolyte solution (brine or the like) to circulate internally in the anode chamber 10 to thereby make the concentration uniform. In order to cause internal circulation, the baffle plate is preferably arranged so as to separate the space in proximity to the anode 11 from the space in proximity to the partition wall 30. From such a viewpoint, the baffle plate is preferably placed so as to be opposed to the surface of the anode 11 and to the surface of the partition wall 30. In the space in proximity to the anode partitioned by the baffle plate, as electrolysis proceeds, the electrolyte solution concentration (brine concentration) is lowered, and produced gas such as chlorine gas is generated. This results in a difference in the gas-liquid specific gravity between the space in proximity to anode 11 and the space in proximity to the partition wall 30 partitioned by the baffle plate. By use of the difference, it is possible to promote the internal circulation of the electrolyte solution in the anode chamber 10 to thereby make the concentration distribution of the electrolyte solution in the anode chamber 10 more uniform.

Although not shown in Figure 91, a collector may be additionally provided inside the anode chamber 10. The material and configuration of such a collector may be the same as those of the collector of the cathode chamber mentioned below. In the anode chamber 10, the anode 11 per se may also serve as the collector.

### (Partition wall)

The partition wall 30 is arranged between the anode chamber 10 and the cathode chamber 20. The partition wall 30 may be referred to as a separator, and the anode chamber 10 and the cathode chamber 20 are partitioned by the partition wall 30. As the partition wall 30, one known as a separator for electrolysis can be used, and an example thereof includes a partition wall formed by welding a plate comprising nickel to the cathode side and a plate comprising titanium to the anode side.

### (Cathode chamber)

In the cathode chamber 20, when the electrode for electrolysis in the present embodiment is inserted to the cathode side, 21 serves as a cathode feed conductor. When the electrode for electrolysis in the present embodiment is not inserted to the cathode side, 21 serves as a cathode. When a reverse current absorber is included, the cathode or cathode feed conductor 21 is electrically connected to the reverse current absorber. The cathode chamber 20, similarly to the anode chamber 10, preferably has a cathode-side electrolyte solution supply unit and a cathode-side gas liquid separation unit. Among the components constituting the cathode chamber 20, components similar to those constituting the anode chamber 10 will be not described.

### (Cathode)

When the electrode for electrolysis in the present embodiment is not inserted to the cathode side, a cathode 21 is provided in the frame of the cathode chamber 20 (i.e., cathode frame). The cathode 21 preferably has a nickel substrate and a catalyst layer that covers the nickel substrate. Examples of the components of the catalyst layer on the nickel substrate include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. The cathode 21 may be subjected to a reduction treatment, as required. As the substrate of the cathode 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

### (Cathode feed conductor)

When the electrode for electrolysis in the present embodiment is inserted to the cathode side, a cathode feed conductor 21 is provided in the frame of the cathode chamber 20. The cathode feed conductor 21 may be covered with a catalytic component. The catalytic component may be a component that is originally used as the cathode and remains. Examples of the components of the catalyst layer include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. Nickel, nickel alloys, and nickel-plated iron or stainless, having no catalyst coating may be used. As the substrate of the cathode feed conductor 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

### (Reverse current absorbing layer)

A material having a redox potential less noble than the redox potential of the element for the catalyst layer of the cathode mentioned above may be selected as a material for the reverse current absorbing layer. Examples thereof include nickel and iron.

### (Collector)

The cathode chamber 20 preferably comprises the collector 23. The collector 23 improves current collection efficiency. In the present embodiment, the collector 23 is a porous plate and is preferably arranged in substantially parallel to the surface of the cathode 21.

The collector 23 preferably comprises an electrically conductive metal such as nickel, iron, copper, silver, and titanium. The collector 23 may be a mixture, alloy, or composite oxide of these metals. The collector 23 may have any form as long as the form enables the function of the collector and may have a plate or net form.

### (Metal elastic body)

Placing the metal elastic body 22 between the collector 23 and the cathode 21 presses each cathode 21 of the plurality of electrolytic cells 1 connected in series onto the ion exchange membrane 2 to reduce the distance between each anode 11 and each cathode 21. Then, it is possible to lower the voltage to be applied entirely across the plurality of electrolytic cells 1 connected in series. Lowering of the voltage enables the power consumption to be reduced. With the metal elastic body 22 placed, the pressing pressure caused by the metal elastic body 22 enables the electrode for electrolysis to be stably maintained in place when the laminate including the electrode for electrolysis in the present embodiment is placed in the electrolytic cell.

As the metal elastic body 22, spring members such as spiral springs and coils and cushioning mats may be used. As the metal elastic body 22, a suitable one may be appropriately employed, in consideration of a stress to press the ion exchange membrane and the like. The metal elastic body 22 may be provided on the surface of the collector 23 on the side of the cathode chamber 20 or may be provided on the surface of the partition wall on the side of the anode chamber 10. Both the chambers are usually partitioned such that the cathode chamber 20 becomes smaller than the anode chamber 10. Thus, from the viewpoint of the strength of the frame and the like, the metal elastic body 22 is preferably provided between the collector 23 and the cathode 21 in the cathode chamber 20. The metal elastic body 23 preferably comprises an electrically conductive metal such as nickel, iron, copper, silver, and titanium.

### (Support)

The cathode chamber 20 preferably comprises the support 24 that electrically connects the collector 23 to the partition wall 30. This can achieve an efficient current flow.

The support 24 preferably comprises an electrically conductive metal such as nickel, iron, copper, silver, and titanium. The support 24 may have any shape as long as the support can support the collector 23 and may have a rod, plate, or net shape. The support 24 has a plate shape, for example. A plurality of supports 24 are arranged between the partition wall 30 and the collector 23. The plurality of supports 24 are aligned such that the surfaces thereof are in parallel to each other. The supports 24 are arranged substantially perpendicular to the partition wall 30 and the collector 23.

### (Anode side gasket and cathode side gasket)

The anode side gasket is preferably arranged on the frame surface constituting the anode chamber 10. The cathode side gasket is preferably arranged on the frame surface constituting the cathode chamber 20. Electrolytic cells are connected to each other such that the anode side gasket included in one electrolytic cell and the cathode side gasket of an electrolytic cell adjacent to the cell sandwich the ion exchange membrane 2 (see Figure 92). These gaskets can impart airtightness to connecting points when the plurality of electrolytic cells 1 is connected in series via the ion exchange membrane 2.

The gaskets form a seal between the ion exchange membrane and electrolytic cells. Specific examples of the gaskets include picture frame-like rubber sheets at the center of which an aperture portion is formed. The gaskets are required to have resistance against corrosive electrolyte solutions or produced gas and be usable for a long period. Thus, in respect of chemical resistance and hardness, vulcanized products and peroxide-crosslinked products of ethylene-propylene-diene rubber (EPDM rubber) and ethylene-propylene rubber (EPM rubber) are usually used as the gaskets. Alternatively, gaskets of which region to be in contact with liquid (liquid contact portion) is covered with a fluorine-containing resin such as polytetrafluoroethylene (PTFE) and tetrafluoroethylene-perfluoroalkyl vinyl ether copolymers (PFA) may be employed as required. These gaskets each may have an aperture portion so as not to inhibit the flow of the electrolyte solution, and the shape of the aperture portion is not particularly limited. For example, a picture frame-like gasket is attached with an adhesive or the like along the peripheral edge of each aperture portion of the anode chamber frame constituting the anode chamber 10 or the cathode chamber frame constituting the cathode chamber 20. Then, for example, in the case where the two electrolytic cells 1 are connected via the ion exchange membrane 2 (see Figure 92), each electrolytic cell 1 onto which the gasket is attached should be tightened via ion exchange membrane 2. This tightening can prevent the electrolyte solution, alkali metal hydroxide, chlorine gas, hydrogen gas, and the like generated from electrolysis from leaking out of the electrolytic cells 1.

### [Step of using wound body]

The wound body in the present embodiment may be the electrode for electrolysis being in a wound body form, or may be a laminate of the electrode for electrolysis and a new membrane, being in a wound body form. In the method for producing an electrolyzer according to the present embodiment, the wound body is used. Specific examples of the step of using a wound body include, but are not limited thereto, include a method in which, first in the existing electrolyzer, a fixed state of the adjacent electrolytic cell and ion exchange membrane by means of a press device is released to provide a gap between the electrolytic cell and the ion exchange membrane, then, an electrode for electrolysis being in a wound body form, after its wound state is released, is inserted into the gap, and the members are coupled again by means of the press device. In the case where the laminate being in a wound body form is used, examples of the method include a method in which, after a gap is formed between the electrolytic cell and the ion exchange membrane as described above, the existing ion exchange membrane to be renewed is removed, then, a laminate being in a wound body form, after its wound state is released, is inserted into the gap, and the members are coupled again by means of the press device. By means of the method, an electrode for electrolysis or laminate can be arranged on the surface of the anode or the cathode of the existing electrolyzer, and the characteristics of the ion exchange membrane and the anode and/or cathode can be renewed.

As described above, in the present embodiment, the step of using a wound body preferably has a step (B) of releasing the wound state of a wound body, and after the step (B), more preferably has a step (C) of arranging an electrode for electrolysis or laminate on the surface of at least one of the anode and the cathode.

In the present embodiment, the step of using a wound body preferably has a step (A) of retaining the electrode for electrolysis or laminate in a wound state to thereby obtain a wound body. In the step (A), the electrode for electrolysis or laminate per se may be wound to form a wound body, or the electrode for electrolysis or laminate may be wound around a core to form a wound body. As the core that may be used here, which is not particularly limited, a member having a substantially cylindrical form and having a size corresponding to the electrode for electrolysis or laminate can be used, for example.

### [Electrode for electrolysis]

In the present embodiment, the electrode for electrolysis is not particularly limited as long as the electrode is used as a wound body as mentioned above, that is, is woundable. The electrode for electrolysis may be an electrode that serves as the cathode in the electrolyzer or may be an electrode that serves as an anode. As the material, form, and the like of the electrode for electrolysis, those suitable for forming a wound body may be appropriately selected, in consideration of the step of using a wound body, the configuration of the electrolyzer, and the like in the present embodiment. Hereinbelow, preferable aspects of the electrode for electrolysis in the present embodiment will be described, but these are merely exemplary aspects preferable for forming a wound body. Electrodes for electrolysis other than the aspects mentioned below can be appropriately employed.

The electrode for electrolysis in the present embodiment has a force applied per unit mass·unit area of preferably 1.6 N/(mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less from the viewpoint of enabling a good handling property to be provided and having a good adhesive force to a membrane such as an ion exchange membrane and a microporous membrane, a feed conductor (a degraded electrode and an electrode having no catalyst coating), and the like. The force applied is even still more preferably 1.1 N/mg·cm² or less, further still more preferably 1.10 N/mg·cm² or less, particularly preferably 1.0 N/mg·cm² or less, especially preferably 1.00 N/mg·cm² or less.

From the viewpoint of further improving the electrolytic performance, the force is preferably more than 0.005 N/(mg·cm²), more preferably 0.08 N/(mg·cm²) or more, further preferably 0.1 N/mg·cm² or more, further more preferably 0.14 N/(mg·cm²) or more. The force is further more preferably 0.2 N/(mg·cm²) or more from the viewpoint of further facilitating handling in a large size (e.g., a size of 1.5 m × 2.5 m).

The force applied described above can be within the range described above by appropriately adjusting an opening ratio described below, thickness of the electrode, arithmetic average surface roughness, and the like, for example. More specifically, for example, a higher opening ratio tends to lead to a smaller force applied, and a lower opening ratio tends to lead to a larger force applied.

The mass per unit is preferably 48 mg/cm² or less, more preferably 30 mg/cm² or less, further preferably 20 mg/cm² or less from the viewpoint of enabling a good handling property to be provided, having a good adhesive force to a membrane such as an ion exchange membrane and a microporous membrane, a degraded electrode, a feed conductor having no catalyst coating, and of economy, and furthermore is preferably 15 mg/cm² or less from the comprehensive viewpoint including handling property, adhesion, and economy. The lower limit value is not particularly limited but is of the order of 1 mg/cm², for example.

The mass per unit area described above can be within the range described above by appropriately adjusting an opening ratio described below, thickness of the electrode, and the like, for example. More specifically, for example, when the thickness is constant, a higher opening ratio tends to lead to a smaller mass per unit area, and a lower opening ratio tends to lead to a larger mass per unit area.

The force applied can be measured by methods (i) or (ii) described below, which are as detailed in Examples. As for the force applied, the value obtained by the measurement of the method (i) (also referred to as "the force applied (1)") and the value obtained by the measurement of the method (ii) (also referred to as "the force applied (2)") may be the same or different, and either of the values is preferably less than 1.5 N/mg·cm².

### [Method (i)]

A nickel plate obtained by blast processing with alumina of grain-size number 320 (thickness 1.2 mm, 200 mm square), an ion exchange membrane which is obtained by applying inorganic material particles and a binder to both surfaces of a membrane of a perfluorocarbon polymer into which an ion exchange group is introduced (170 mm square, the detail of the ion exchange membrane referred to herein is as described in Examples), and a sample of electrode (130 mm square) are laminated in this order. After this laminate is sufficiently immersed in pure water, excess water deposited on the surface of the laminate is removed to obtain a sample for measurement. The arithmetic average surface roughness (Ra) of the nickel plate after the blast treatment is 0.5 to 0.8 µm. The specific method for calculating the arithmetic average surface roughness (Ra) is as described in Examples.

Under conditions of a temperature of 23±2°C and a relative humidity of 30±5%, only the sample of electrode in this sample for measurement is raised in a vertical direction at 10 mm/minute using a tensile and compression testing machine, and the load when the sample of electrode is raised by 10 mm in a vertical direction is measured. This measurement is repeated three times, and the average value is calculated.

This average value is divided by the area of the overlapping portion of the sample of electrode and the ion exchange membrane and the mass of the portion overlapping the ion exchange membrane in the sample of electrode to calculate the force applied per unit mass·unit area (1) (N/mg·cm²).

The force applied per unit mass·unit area (1) obtained by the method (i) is preferably 1.6 N/(mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less from the viewpoint of enabling a good handling property to be provided and having a good adhesive force to a membrane such as an ion exchange membrane and a microporous membrane, a degraded electrode, and a feed conductor having no catalyst coating. The force applied is even still more preferably 1.1 N/mg·cm² or less, further still more preferably 1.10 N/mg·cm² or less, particularly preferably 1.0 N/mg·cm² or less, especially preferably 1.00 N/mg·cm² or less. The force is preferably more than 0.005 N/(mg·cm²), more preferably 0.08 N/(mg·cm²) or more, further preferably 0.1 N/(mg·cm²) or more from the viewpoint of further improving the electrolytic performance, and furthermore, is further more preferably 0.14 N/(mg·cm²), still more preferably 0.2 N/(mg·cm²) or more from the viewpoint of further facilitating handling in a large size (e.g., a size of 1.5 m × 2.5 m).

### [Method (ii)]

A nickel plate obtained by blast processing with alumina of grain-size number 320 (thickness 1.2 mm, 200 mm square, a nickel plate similar to that of the method (i) above) and a sample of electrode (130 mm square) are laminated in this order. After this laminate is sufficiently immersed in pure water, excess water deposited on the surface of the laminate is removed to obtain a sample for measurement. Under conditions of a temperature of 23±2°C and a relative humidity of 30±5%, only the sample of electrode in this sample for measurement is raised in a vertical direction at 10 mm/minute using a tensile and compression testing machine, and the load when the sample of electrode is raised by 10 mm in a vertical direction is measured. This measurement is repeated three times, and the average value is calculated.

This average value is divided by the area of the overlapping portion of the sample of electrode and the nickel plate and the mass of the sample of electrode in the portion overlapping the nickel plate to calculate the adhesive force per unit mass·unit area (2) (N/mg·cm²).

The force applied per unit mass·unit area (2) obtained by the method (ii) is preferably 1.6 N/(mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less from the viewpoint of enabling a good handling property to be provided and having a good adhesive force to a membrane such as an ion exchange membrane and a microporous membrane, a degraded electrode, and a feed conductor having no catalyst coating. The force applied is even still more preferably 1.1 N/mg·cm² or less, further still more preferably 1.10 N/mg·cm² or less, particularly preferably 1.0 N/mg·cm² or less, especially preferably 1.00 N/mg·cm² or less. Further, the force is preferably more than 0.005 N/(mg·cm²), more preferably 0.08 N/(mg·cm²) or more, further preferably 0.1 N/(mg·cm²) or more from the viewpoint of further improving the electrolytic performance, and is further more preferably 0.14 N/(mg·cm²) or more from the viewpoint of further facilitating handling in a large size (e.g., a size of 1.5 m × 2.5 m).

The electrode for electrolysis in the present embodiment preferably includes a substrate for electrode for electrolysis and a catalyst layer. The thickness of the substrate for electrode for electrolysis (gauge thickness) is, but is not particularly limited to, preferably 300 µm or less, more preferably 205 µm or less, further preferably 155 µm or less, further more preferably 135 µm or less, even further more preferably 125 µm or less, still more preferably 120 µm or less, even still more preferably 100 µm or less from the viewpoint of enabling a good handling property to be provided, having a good adhesive force to a membrane such as an ion exchange membrane and a microporous membrane, a degraded electrode (feed conductor), and an electrode (feed conductor) having no catalyst coating, being capable of being suitably rolled in a roll and satisfactorily folded, and facilitating handling in a large size (e.g., a size of 1.5 m × 2.5 m), and is further still more preferably 50 µm or less from the viewpoint of a handling property and economy. The lower limit value is not particularly limited, but is 1 µm, for example, preferably 5 µm, more preferably 15 µm.

The proportion measured by the following method (2) of the electrode for electrolysis in the present embodiment is not particularly limited, but is preferably 90% or more, more preferably 92% or more from the viewpoint of enabling a good handling property to be provided and having a good adhesive force to a membrane such as an ion exchange membrane and a microporous membrane, a degraded electrode (feed conductor), and an electrode (feed conductor) having no catalyst coating, and further preferably 95% or more from the viewpoint of further facilitating handling in a large size (e.g., a size of 1.5 m × 2.5 m). The upper limit value is 100%.

### [Method (2)]

An ion exchange membrane (170 mm square) and a sample of electrode (130 mm square) are laminated in this order. The laminate is placed on a curved surface of a polyethylene pipe (outer diameter: 280 mm) such that the sample of electrode in this laminate is positioned outside under conditions of a temperature of 23±2°C and a relative humidity of 30±5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode is measured.

The proportion measured by the following method (3) of the electrode for electrolysis in the present embodiment is not particularly limited, but is preferably 75% or more, more preferably 80% or more from the viewpoint of enabling a good handling property to be provided, having a good adhesive force to a membrane such as an ion exchange membrane and a microporous membrane, a degraded electrode (feed conductor), and an electrode (feed conductor) having no catalyst coating, and being capable of being suitably rolled in a roll and satisfactorily folded, and is further preferably 90% or more from the viewpoint of further facilitating handling in a large size (e.g., a size of 1.5 m × 2.5 m). The upper limit value is 100%.

### [Method (3)]

An ion exchange membrane (170 mm square) and a sample of electrode (130 mm square) are laminated in this order. The laminate is placed on a curved surface of a polyethylene pipe (outer diameter: 145 mm) such that the sample of electrode in this laminate is positioned outside under conditions of a temperature of 23±2°C and a relative humidity of 30±5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode is measured.

The electrode for electrolysis in the present embodiment preferably has, but is not particularly limited to, a porous structure and an opening ratio or void ratio of 5 to 90% or less, from the viewpoint of enabling a good handling property to be provided, having a good adhesive force to a membrane such as an ion exchange membrane and a microporous membrane, a degraded electrode (feed conductor), and an electrode (feed conductor) having no catalyst coating, and preventing accumulation of gas to be generated during electrolysis. The opening ratio is more preferably 10 to 80% or less, further preferably 20 to 75%.

The opening ratio is a proportion of the opening portions per unit volume. The calculation method may differ depending on that opening portions in submicron size are considered or that only visible openings are considered. In the present embodiment, a volume V is calculated from the values of the gauge thickness, width, and length of electrode, and further, a weight W is measured to thereby enable an opening ratio A to be calculated by the following formula. $A = \left(1-\left(W/\left(V\times ρ\right)\right)\times 100\right.$

ρ is the density of the electrode material (g/cm³). For example, ρ of nickel is 8.908 g/cm³, and ρ of titanium is 4.506 g/cm³. The opening ratio can be appropriately adjusted by changing the area of metal to be perforated per unit area in the case of perforated metal, changing the values of the SW (short diameter), LW (long diameter), and feed in the case of expanded metal, changing the line diameter of metal fiber and mesh number in the case of mesh, changing the pattern of a photoresist to be used in the case of electroforming, changing the metal fiber diameter and fiber density in the case of nonwoven fabric, changing the mold for forming voids in the case of foamed meta, or the like.

Hereinbelow, a more specific embodiment of the electrode for electrolysis in the present embodiment will be described.

The electrode for electrolysis according to the present embodiment preferably includes a substrate for electrode for electrolysis and a catalyst layer. The catalyst layer may be composed of a plurality of layers as shown below or may be a single-layer configuration.

As shown in Figure 96, an electrode for electrolysis 100 according to the present embodiment includes a substrate for electrode for electrolysis 10 and a pair of first layers 20 with which both the surfaces of the substrate for electrode for electrolysis 10 are covered. The entire substrate for electrode for electrolysis 10 is preferably covered with the first layers 20. This covering is likely to improve the catalyst activity and durability of the electrode for electrolysis. One first layer 20 may be laminated only on one surface of the substrate for electrode for electrolysis 10.

Also shown in Figure 96, the surfaces of the first layers 20 may be covered with second layers 30. The entire first layers 20 are preferably covered by the second layers 30. Alternatively, one second layer 30 may be laminated only one surface of the first layer 20.

### (Substrate for electrode for electrolysis)

As the substrate for electrode for electrolysis 10, for example, nickel, nickel alloys, stainless steel, or valve metals including titanium can be used, although not limited thereto. The substrate 10 preferably contains at least one element selected from nickel (Ni) and titanium (Ti).

When stainless steel is used in an alkali aqueous solution of a high concentration, iron and chromium are eluted and the electrical conductivity of stainless steel is of the order of one-tenth of that of nickel. In consideration of the foregoing, a substrate containing nickel (Ni) is preferable as the substrate for electrode for electrolysis.

Alternatively, when the substrate for electrode for electrolysis 10 is used in a salt solution of a high concentration near the saturation under an atmosphere in which chlorine gas is generated, the material of the substrate for electrode 10 is also preferably titanium having high corrosion resistance.

The form of the substrate for electrode for electrolysis 10 is not particularly limited, and a form suitable for the purpose can be selected. As the form, any of a perforated metal, nonwoven fabric, foamed metal, expanded metal, metal porous foil formed by electroforming, so-called woven mesh produced by knitting metal lines, and the like can be used. Among these, a perforated metal or expanded metal is preferable. Electroforming is a technique for producing a metal thin film having a precise pattern by using photolithography and electroplating in combination. It is a method including forming a pattern on a substrate with a photoresist and electroplating the portion not protected by the resist to provide a metal thin film.

As for the form of the substrate for electrode for electrolysis, a suitable specification depends on the distance between the anode and the cathode in the electrolyzer. In the case where the distance between the anode and the cathode is finite, an expanded metal or perforated metal form can be used, and in the case of a so-called zero-gap base electrolyzer, in which the ion exchange membrane is in contact with the electrode, a woven mesh produced by knitting thin lines, wire mesh, foamed metal, metal nonwoven fabric, expanded metal, perforated metal, metal porous foil, and the like can be used, although not limited thereto.

Examples of the substrate for electrode for electrolysis 10 include a metal porous foil, a wire mesh, a metal nonwoven fabric, a perforated metal, an expanded metal, and a foamed metal.

As a plate material before processed into a perforated metal or expanded metal, rolled plate materials and electrolytic foils are preferable. An electrolytic foil is preferably further subjected to a plating treatment by use of the same element as the base material thereof, as the post-treatment, to thereby form asperities on one or both of the surfaces.

The thickness of the substrate for electrode for electrolysis 10 is, as mentioned above, preferably 300 µm or less, more preferably 205 µm or less, further preferably 155 µm or less, further more preferably 135 µm or less, even further more preferably 125 µm or less, still more preferably 120 µm or less, even still more preferably 100 µm or less, and further still more preferably 50 µm or less from the viewpoint of a handling property and economy. The lower limit value is not particularly limited, but is 1 µm, for example, preferably 5 µm, more preferably 15 µm.

In the substrate for electrode for electrolysis, the residual stress during processing is preferably relaxed by annealing the substrate for electrode for electrolysis in an oxidizing atmosphere. It is preferable to form asperities using a steel grid, alumina powder, or the like on the surface of the substrate for electrode for electrolysis followed by an acid treatment to increase the surface area thereof, in order to improve the adhesion to a catalyst layer with which the surface is covered. Alternatively, it is preferable to give a plating treatment by use of the same element as the substrate to increase the surface area.

To bring the first layer 20 into close contact with the surface of the substrate for electrode for electrolysis 10, the substrate for electrode for electrolysis 10 is preferably subjected to a treatment of increasing the surface area. Examples of the treatment of increasing the surface area include a blast treatment using a cut wire, steel grid, alumina grid or the like, an acid treatment using sulfuric acid or hydrochloric acid, and a plating treatment using the same element to that of the substrate. The arithmetic average surface roughness (Ra) of the substrate surface is not particularly limited, but is preferably 0.05 µm to 50 µm, more preferably 0.1 to 10 µm, further preferably 0.1 to 8 µm.

Next, a case where the electrode for electrolysis in the present embodiment is used as an anode for common salt electrolysis will be described.

### (First layer)

In Figure 96, a first layer 20 as a catalyst layer contains at least one of ruthenium oxides, iridium oxides, and titanium oxides. Examples of the ruthenium oxide include RuO₂. Examples of the iridium oxide include IrO₂. Examples of the titanium oxide include TiO₂. The first layer 20 preferably contains two oxides: a ruthenium oxide and a titanium oxide or three oxides: a ruthenium oxide, an iridium oxide, and a titanium oxide. This makes the first layer 20 more stable and additionally improves the adhesion with the second layer 30.

When the first layer 20 contains two oxides: a ruthenium oxide and a titanium oxide, the first layer 20 contains preferably 1 to 9 mol, more preferably 1 to 4 mol of the titanium oxide based on 1 mol of the ruthenium oxide contained in the first layer 20. With the composition ratio of the two oxides in this range, the electrode for electrolysis 100 exhibits excellent durability.

When the first layer 20 contains three oxides: a ruthenium oxide, an iridium oxide, and a titanium oxide, the first layer 20 contains preferably 0.2 to 3 mol, more preferably 0.3 to 2.5 mol of the iridium oxide based on 1 mol of the ruthenium oxide contained in the first layer 20. The first layer 20 contains preferably 0.3 to 8 mol, more preferably 1 to 7 mol of the titanium oxide based on 1 mol of the ruthenium oxide contained in the first layer 20. With the composition ratio of the three oxides in this range, the electrode for electrolysis 100 exhibits excellent durability.

When the first layer 20 contains at least two of a ruthenium oxide, an iridium oxide, and a titanium oxide, these oxides preferably form a solid solution. Formation of the oxide solid solution allows the electrode for electrolysis 100 to exhibit excellent durability.

In addition to the compositions described above, oxides of various compositions can be used as long as at least one oxide of a ruthenium oxide, an iridium oxide, and titanium oxide is contained. For example, an oxide coating called DSA(R), which contains ruthenium, iridium, tantalum, niobium, titanium, tin, cobalt, manganese, platinum, and the like, can be used as the first layer 20.

The first layer 20 need not be a single layer and may include a plurality of layers. For example, the first layer 20 may include a layer containing three oxides and a layer containing two oxides. The thickness of the first layer 20 is preferably 0.05 to 10 µm, more preferably 0.1 to 8 µm.

### (Second layer)

The second layer 30 preferably contains ruthenium and titanium. This enables the chlorine overvoltage immediately after electrolysis to be further lowered.

The second layer 30 preferably contains a palladium oxide, a solid solution of a palladium oxide and platinum, or an alloy of palladium and platinum. This enables the chlorine overvoltage immediately after electrolysis to be further lowered.

A thicker second layer 30 can maintain the electrolytic performance for a longer period, but from the viewpoint of economy, the thickness is preferably 0.05 to 3 µm.

Next, a case where the electrode for electrolysis in the present embodiment is used as a cathode for common salt electrolysis will be described.

### (First layer)

Examples of components of the first layer 20 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

The first layer 20 may or may not contain at least one of platinum group metals, platinum group metal oxides, platinum group metal hydroxides, and alloys containing a platinum group metal.

When the first layer 20 contains at least one of platinum group metals, platinum group metal oxides, platinum group metal hydroxides, and alloys containing a platinum group metal, the platinum group metals, platinum group metal oxides, platinum group metal hydroxides, and alloys containing a platinum group metal preferably contain at least one platinum group metal of platinum, palladium, rhodium, ruthenium, and iridium.

As the platinum group metal, platinum is preferably contained.

As the platinum group metal oxide, a ruthenium oxide is preferably contained.

As the platinum group metal hydroxide, a ruthenium hydroxide is preferably contained.

As the platinum group metal alloy, an alloy of platinum with nickel, iron, and cobalt is preferably contained.

Further, as required, an oxide or hydroxide of a lanthanoid element is preferably contained as a second component. This allows the electrode for electrolysis 100 to exhibit excellent durability.

As the oxide or hydroxide of a lanthanoid element, at least one selected from lanthanum, cerium, praseodymium, neodymium, promethium, samarium, europium, gadolinium, terbium, and dysprosium is preferably contained.

Further, as required, an oxide or hydroxide of a transition metal is preferably contained as a third component.

Addition of the third component enables the electrode for electrolysis 100 to exhibit more excellent durability and the electrolysis voltage to be lowered.

Examples of a preferable combination include ruthenium only, ruthenium + nickel, ruthenium + cerium, ruthenium + lanthanum, ruthenium + lanthanum + platinum, ruthenium + lanthanum + palladium, ruthenium + praseodymium, ruthenium + praseodymium + platinum, ruthenium + praseodymium + platinum + palladium, ruthenium + neodymium, ruthenium + neodymium + platinum, ruthenium + neodymium + manganese, ruthenium + neodymium + iron, ruthenium + neodymium + cobalt, ruthenium + neodymium + zinc, ruthenium + neodymium + gallium, ruthenium + neodymium + sulfur, ruthenium + neodymium + lead, ruthenium + neodymium + nickel, ruthenium + neodymium + copper, ruthenium + samarium, ruthenium + samarium + manganese, ruthenium + samarium + iron, ruthenium + samarium + cobalt, ruthenium + samarium + zinc, ruthenium + samarium + gallium, ruthenium + samarium + sulfur, ruthenium + samarium + lead, ruthenium + samarium + nickel, platinum + cerium, platinum + palladium + cerium, platinum + palladium + lanthanum + cerium, platinum + iridium, platinum + palladium, platinum + iridium + palladium, platinum + nickel + palladium, platinum + nickel + ruthenium, alloys of platinum and nickel, alloys of platinum and cobalt, and alloys of platinum and iron.

When platinum group metals, platinum group metal oxides, platinum group metal hydroxides, and alloys containing a platinum group metal are not contained, the main component of the catalyst is preferably nickel element.

At least one of nickel metal, oxides, and hydroxides is preferably contained.

As the second component, a transition metal may be added. As the second component to be added, at least one element of titanium, tin, molybdenum, cobalt, manganese, iron, sulfur, zinc, copper, and carbon is preferably contained.

Examples of a preferable combination include nickel + tin, nickel + titanium, nickel + molybdenum, and nickel + cobalt.

As required, an intermediate layer can be placed between the first layer 20 and the substrate for electrode for electrolysis 10. The durability of the electrode for electrolysis 100 can be improved by placing the intermediate layer.

As the intermediate layer, those having affinity to both the first layer 20 and the substrate for electrode for electrolysis 10 are preferable. As the intermediate layer, nickel oxides, platinum group metals, platinum group metal oxides, and platinum group metal hydroxides are preferable. The intermediate layer can be formed by applying and baking a solution containing a component that forms the intermediate layer. Alternatively, a surface oxide layer also can be formed by subjecting a substrate to a thermal treatment at a temperature of 300 to 600°C in an air atmosphere. Besides, the layer can be formed by a known method such as a thermal spraying method and ion plating method.

### (Second layer)

Examples of components of the first layer 30 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

The first layer 30 may or may not contain at least one of platinum group metals, platinum group metal oxides, platinum group metal hydroxides, and alloys containing a platinum group metal. Examples of a preferable combination of elements contained in the second layer include the combinations enumerated for the first layer. The combination of the first layer and the second layer may be a combination in which the compositions are the same and the composition ratios are different or may be a combination of different compositions.

As the thickness of the catalyst layer, the total thickness of the catalyst layer formed and the intermediate layer is preferably 0.01 µm to 20 µm. With a thickness of 0.01 µm or more, the catalyst layer can sufficiently serve as the catalyst. With a thickness of 20 µm or less, it is possible to form a robust catalyst layer that is unlikely to fall off from the substrate. The thickness is more preferably 0.05 µm to 15 µm. The thickness is more preferably 0.1 µm to 10 µm. The thickness is further preferably 0.2 µm to 8 µm.

The thickness of the electrode, that is, the total thickness of the substrate for electrode for electrolysis and the catalyst layer is preferably 315 µm or less, more preferably 220 µm or less, further preferably 170 µm or less, further more preferably 150 µm or less, particularly preferably 145 µm or less, still more preferably 140 µm or less, even still more preferably 138 µm or less, further still more preferably 135 µm or less in respect of the handling property of the electrode. A thickness of 135 µm or less can provide a good handling property. Further, from a similar viewpoint as above, the thickness is preferably 130 µm or less, more preferably less than 130 µm, further preferably 115 µm or less, further more preferably 65 µm or less. The lower limit value is not particularly limited, but is preferably 1 µm or more, more preferably 5 µm or more for practical reasons, more preferably 20 µm or more. The thickness of the electrode can be determined by measurement with a digimatic thickness gauge (Mitutoyo Corporation, minimum scale 0.001 mm). The thickness of the substrate for electrode for electrolysis is measured in the same manner as the thickness of the electrode. The thickness of the catalyst layer can be determined by subtracting the thickness of the substrate for electrode for electrolysis from the thickness of the electrode.

In the present embodiment, the electrode for electrolysis preferably contains at least one catalytic component selected from the group consisting of Ru, Rh, Pd, Ir, Pt, Au, Ti, V, Cr, Mn, Fe, Co, Ni, Cu, Zn, Y, Zr, Nb, Mo, Ag, Ta, W, Re, Os, Al, In, Sn, Sb, Ga, Ge, B, C, N, O, Si, P, S, La, Ce, Pr, Nd, Pm, Sm, Eu, Gd, Tb, and Dy from the viewpoint of achieving sufficient electrolytic performance.

In the present embodiment, from the viewpoint that the electrode for electrolysis, if being an electrode having a broad elastic deformation region, can provide a better handling property and has a better adhesive force to a membrane such as an ion exchange membrane and a microporous membrane, a degraded electrode, a feed conductor having no catalyst coating, and the like, the thickness of the electrode for electrolysis is preferably 315 µm or less, more preferably 220 µm or less, further preferably 170 µm or less, further more preferably 150 µm or less, particularly preferably 145 µm or less, still more preferably 140 µm or less, even still more preferably 138 µm or less, further still more preferably 135 µm or less. A thickness of 135 µm or less can provide a good handling property. Further, from a similar viewpoint as above, the thickness is preferably 130 µm or less, more preferably less than 130 µm, further preferably 115 µm or less, further more preferably 65 µm or less. The lower limit value is not particularly limited, but is preferably 1 µm or more, more preferably 5 µm or more for practical reasons, more preferably 20 µm or more. In the present embodiment, "having a broad elastic deformation region" means that, when an electrode for electrolysis is wound to form a wound body, warpage derived from winding is unlikely to occur after the wound state is released. The thickness of the electrode for electrolysis refers to, when a catalyst layer mentioned below is included, the total thickness of both the substrate for electrode for electrolysis and the catalyst layer.

### (Method for producing electrode for electrolysis)

Next, one embodiment of the method for producing the electrode for electrolysis 100 will be described in detail.

In the present embodiment, the electrode for electrolysis 100 can be produced by forming the first layer 20, preferably the second layer 30, on the substrate for electrode for electrolysis by a method such as baking of a coating film under an oxygen atmosphere (pyrolysis), or ion plating, plating, or thermal spraying. The production method of the present embodiment as mentioned can achieve a high productivity of the electrode for electrolysis 100. Specifically, a catalyst layer is formed on the substrate for electrode for electrolysis by an application step of applying a coating liquid containing a catalyst, a drying step of drying the coating liquid, and a pyrolysis step of performing pyrolysis. Pyrolysis herein means that a metal salt which is to be a precursor is decomposed by heating into a metal or metal oxide and a gaseous substance. The decomposition product depends on the metal species to be used, type of the salt, and the atmosphere under which pyrolysis is performed, and many metals tend to form oxides in an oxidizing atmosphere. In an industrial process of producing an electrode, pyrolysis is usually performed in air, and a metal oxide or a metal hydroxide is formed in many cases.

### (Formation of first layer of anode)

### (Application step)

The first layer 20 is obtained by applying a solution in which at least one metal salt of ruthenium, iridium, and titanium is dissolved (first coating liquid) onto the substrate for electrode for electrolysis and then pyrolyzing (baking) the coating liquid in the presence of oxygen. The content of ruthenium, iridium, and titanium in the first coating liquid is substantially equivalent to that of the first layer 20.

The metal salts may be chlorides, nitrates, sulfates, metal alkoxides, and any other forms. The solvent of the first coating liquid can be selected depending on the type of the metal salt, and water and alcohols such as butanol can be used. As the solvent, water or a mixed solvent of water and an alcohol is preferable. The total metal concentration in the first coating liquid in which the metal salts are dissolved is not particularly limited, but is preferably in the range of 10 to 150 g/L in association with the thickness of the coating film to be formed by a single coating.

Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

### (Drying step and pyrolysis step)

After being applied onto the substrate for electrode for electrolysis 100, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.

The cycle of application, drying, and pyrolysis described above is repeated to form a covering (the first layer 20) to a predetermined thickness. After the first layer 20 is formed and then further post-baked for a long period as required can further improve the stability of the first layer 20.

### (Formation of second layer)

The second layer 30, which is formed as required, is obtained, for example, by applying a solution containing a palladium compound and a platinum compound or a solution containing a ruthenium compound and a titanium compound (second coating liquid) onto the first layer 20 and then pyrolyzing the coating liquid in the presence of oxygen.

### (Formation of first layer of cathode by pyrolysis method)

### (Application step)

The first layer 20 is obtained by applying a solution in which metal salts of various combination are dissolved (first coating liquid) onto the substrate for electrode for electrolysis and then pyrolyzing (baking) the coating liquid in the presence of oxygen. The content of the metal in the first coating liquid is substantially equivalent to that in the first layer 20.

The metal salts may be chlorides, nitrates, sulfates, metal alkoxides, and any other forms. The solvent of the first coating liquid can be selected depending on the type of the metal salt, and water and alcohols such as butanol can be used. As the solvent, water or a mixed solvent of water and an alcohol is preferable. The total metal concentration in the first coating liquid in which the metal salts are dissolved is not particularly limited, but is preferably in the range of 10 to 150 g/L in association with the thickness of the coating film to be formed by a single coating.

Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

### (Drying step and pyrolysis step)

After being applied onto the substrate for electrode for electrolysis 10, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.

The cycle of application, drying, and pyrolysis described above is repeated to form a covering (the first layer 20) to a predetermined thickness. After the first layer 20 is formed and then further post-baked for a long period as required can further improve the stability of the first layer 20.

### (Formation of intermediate layer)

The intermediate layer, which is formed as required, is obtained, for example, by applying a solution containing a palladium compound or platinum compound (second coating liquid) onto the substrate and then pyrolyzing the coating liquid in the presence of oxygen. Alternatively, a nickel oxide intermediate layer may be formed on the substrate surface only by heating the substrate, without applying a solution thereon.

### (Formation of first layer of cathode by ion plating)

The first layer 20 can be formed also by ion plating. An example includes a method in which the substrate is fixed in a chamber and the metal ruthenium target is irradiated with an electron beam. Evaporated metal ruthenium particles are positively charged in plasma in the chamber to deposit on the substrate negatively charged. The plasma atmosphere is argon and oxygen, and ruthenium deposits as ruthenium oxide on the substrate.

### (Formation of first layer of cathode by plating)

The first layer 20 can be formed also by a plating method.

As an example, when the substrate is used as the cathode and subjected to electrolytic plating in an electrolyte solution containing nickel and tin, alloy plating of nickel and tin can be formed.

### (Formation of first layer of cathode by thermal spraying)

The first layer 20 can be formed also by thermal spraying.

As an example, plasma spraying nickel oxide particles onto the substrate can form a catalyst layer in which metal nickel and nickel oxide are mixed.

### [Laminate]

The electrode for electrolysis in the present embodiment can be combined with a membrane such as an ion exchange membrane or a microporous membrane and used as a laminate. That is, the laminate in the present embodiment comprises the electrode for electrolysis and a new membrane. The new membrane is not particularly limited as long as being separate from the membrane in the existing electrolyzer, and various known "membranes" can be used. The material, form, physical properties, and the like of the new membrane may be similar to those of the membrane in the existing electrolyzer.

Hereinafter, an ion exchange membrane according to one aspect of the membrane will be described in detail.

### [Ion exchange membrane]

The ion exchange membrane is not particularly limited as long as the membrane can be laminated with the electrode for electrolysis, and various ion exchange membranes may be employed. In the present embodiment, an ion exchange membrane that has a membrane body containing a hydrocarbon polymer or fluorine-containing polymer having an ion exchange group and a coating layer provided on at least one surface of the membrane body is preferably used. It is preferable that the coating layer contain inorganic material particles and a binder and the specific surface area of the coating layer be 0.1 to 10 m²/g. The ion exchange membrane having such a structure has a small influence of gas generated during electrolysis on electrolytic performance and tends to exert stable electrolytic performance.

The membrane of a perfluorocarbon polymer into which an ion exchange group is introduced described above includes either one of a sulfonic acid layer having an ion exchange group derived from a sulfo group (a group represented by -SO₃-, hereinbelow also referred to as a "sulfonic acid group") or a carboxylic acid layer having an ion exchange group derived from a carboxyl group (a group represented by -CO₂-, hereinbelow also referred to as a "carboxylic acid group"). From the viewpoint of strength and dimension stability, reinforcement core materials are preferably further included.

The inorganic material particles and binder will be described in detail in the section of description of the coating layer below.

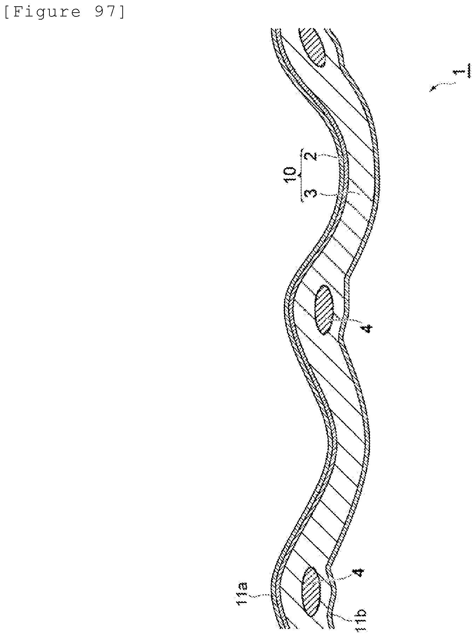

Figure 97 illustrates a cross-sectional schematic view showing one embodiment of an ion exchange membrane. An ion exchange membrane 1 has a membrane body 10 containing a hydrocarbon polymer or fluorine-containing polymer having an ion exchange group and coating layers 11a and 11b formed on both the surfaces of the membrane body 10.

In the ion exchange membrane 1, the membrane body 10 comprises a sulfonic acid layer 3 having an ion exchange group derived from a sulfo group (a group represented by -SO₃-, hereinbelow also referred to as a "sulfonic acid group") and a carboxylic acid layer 2 having an ion exchange group derived from a carboxyl group (a group represented by -CO₂-, hereinbelow also referred to as a "carboxylic acid group"), and the reinforcement core materials 4 enhance the strength and dimension stability. The ion exchange membrane 1, as comprising the sulfonic acid layer 3 and the carboxylic acid layer 2, is suitably used as an anion exchange membrane.

The ion exchange membrane may include either one of the sulfonic acid layer and the carboxylic acid layer. The ion exchange membrane may not be necessarily reinforced by reinforcement core materials, and the arrangement of the reinforcement core materials is not limited to the example in Figure 97.

### (Membrane body)

First, the membrane body 10 constituting the ion exchange membrane 1 will be described.

The membrane body 10 should be one that has a function of selectively allowing cations to permeate and comprises a hydrocarbon polymer or a fluorine-containing polymer having an ion exchange group. Its configuration and material are not particularly limited, and preferred ones can be appropriately selected.

The hydrocarbon polymer or fluorine-containing polymer having an ion exchange group in the membrane body 10 can be obtained from a hydrocarbon polymer or fluorine-containing polymer having an ion exchange group precursor capable of forming an ion exchange group by hydrolysis or the like. Specifically, for example, after a polymer comprising a main chain of a fluorinated hydrocarbon, having, as a pendant side chain, a group convertible into an ion exchange group by hydrolysis or the like (ion exchange group precursor), and being melt-processable (hereinbelow, referred to as the "fluorine-containing polymer (a)" in some cases) is used to prepare a precursor of the membrane body 10, the membrane body 10 can be obtained by converting the ion exchange group precursor into an ion exchange group.

The fluorine-containing polymer (a) can be produced, for example, by copolymerizing at least one monomer selected from the following first group and at least one monomer selected from the following second group and/or the following third group. The fluorine-containing polymer (a) can be also produced by homopolymerization of one monomer selected from any of the following first group, the following second group, and the following third group.

Examples of the monomers of the first group include vinyl fluoride compounds. Examples of the vinyl fluoride compounds include vinyl fluoride, tetrafluoroethylene, hexafluoropropylene, vinylidene fluoride, trifluoroethylene, chlorotrifluoroethylene, and perfluoro alkyl vinyl ethers. Particularly when the ion exchange membrane is used as a membrane for alkali electrolysis, the vinyl fluoride compound is preferably a perfluoro monomer, and a perfluoro monomer selected from the group consisting of tetrafluoroethylene, hexafluoropropylene, and perfluoro alkyl vinyl ethers is preferable.

Examples of the monomers of the second group include vinyl compounds having a functional group convertible into a carboxylic acid-type ion exchange group (carboxylic acid group). Examples of the vinyl compounds having a functional group convertible into a carboxylic acid group include monomers represented by CF₂=CF(OCF₂CYF)ₛ-O(CZF)ₜ-COOR, wherein s represents an integer of 0 to 2, t represents an integer of 1 to 12, Y and Z each independently represent F or CF₃, and R represents a lower alkyl group (a lower alkyl group is an alkyl group having 1 to 3 carbon atoms, for example).

Among these, compounds represented by CF₂=CF(OCF₂CYF)ₙ-O(CF₂)ₘ-COOR are preferable. Wherein n represents an integer of 0 to 2, m represents an integer of 1 to 4, Y represents F or CF₃, and R represents CH₃, C₂H₅, or C₃H₇.

When the ion exchange membrane is used as a cation exchange membrane for alkali electrolysis, a perfluoro compound is preferably at least used as the monomer, but the alkyl group (see the above R) of the ester group is lost from the polymer at the time of hydrolysis, and therefore the alkyl group (R) need not be a perfluoroalkyl group in which all hydrogen atoms are replaced by fluorine atoms.

Of the above monomers, the monomers represented below are more preferable as the monomers of the second group:

CF₂=CFOCF₂-CF(CF₃)OCF₂COOCH₃,

CF₂=CFOCF₂CF(CF₃)O(CF₂)₂COOCH₃,

CF₂=CF[OCF₂-CF(CF₃)]₂O(CF₂)₂COOCH₃,

CF₂=CFOCF₂CF(CF₃)O(CF₂)₃COOCH₃,

CF₂=CFO(CF₂)₂COOCH₃,

and

CF₂=CFO(CF₂)₃COOCH₃.

Examples of the monomers of the third group include vinyl compounds having a functional group convertible into a sulfone-type ion exchange group (sulfonic acid group). As the vinyl compounds having a functional group convertible into a sulfonic acid group, for example, monomers represented by CF₂=CFO-X-CF₂-SO₂F are preferable, wherein X represents a perfluoroalkylene group. Specific examples of these include the monomers represented below:

CF₂=CFOCF₂CF₂SO₂F,

CF₂=CFOCF₂CF(CF₃)OCF₂CF₂SO₂F,

CF₂=CFOCF₂CF(CF₃)OCF₂CF₂CF₂SO₂F,

CF₂=CF(CF₂)₂SO₂F,

CF₂=CFO[CF₂CF(CF₃)O]₂CF₂CF₂SO₂F,

and

CF₂=CFOCF₂CF(CF₂OCF₃)OCF₂CF₂SO₂F.

Among these, CF₂=CFOCF₂CF(CF₃)OCF₂CF₂CF₂SO₂F and CF₂=CFOCF₂CF(CF₃)OCF₂CF₂SO₂F are more preferable.

The copolymer obtained from these monomers can be produced by a polymerization method developed for homopolymerization and copolymerization of ethylene fluoride, particularly a general polymerization method used for tetrafluoroethylene. For example, in a nonaqueous method, a polymerization reaction can be performed in the presence of a radical polymerization initiator such as a perfluorocarbon peroxide or an azo compound under the conditions of a temperature of 0 to 200°C and a pressure of 0.1 to 20 MPa using an inert solvent such as a perfluorohydrocarbon or a chlorofluorocarbon.

In the above copolymerization, the type of combination of the above monomers and their proportion are not particularly limited and are selected and determined depending on the type and amount of the functional group desired to be imparted to the fluorine-containing polymer to be obtained. For example, when a fluorine-containing polymer containing only a carboxylic acid group is formed, at least one monomer should be selected from each of the first group and the second group described above and copolymerized. In addition, when a fluorine-containing polymer containing only a sulfonic acid group is formed, at least one monomer should be selected from each of the first group and the third group and copolymerized. Further, when a fluorine-containing polymer having a carboxylic acid group and a sulfonic acid group is formed, at least one monomer should be selected from each of the first group, the second group, and the third group described above and copolymerized. In this case, the target fluorine-containing polymer can be obtained also by separately preparing a copolymer comprising the monomers of the first group and the second group described above and a copolymer comprising the monomers of the first group and the third group described above, and then mixing the copolymers. The mixing proportion of the monomers is not particularly limited, and when the amount of the functional groups per unit polymer is increased, the proportion of the monomers selected from the second group and the third group described above should be increased.

The total ion exchange capacity of the fluorine-containing copolymer is not particularly limited, but is preferably 0.5 to 2.0 mg equivalent/g, more preferably 0.6 to 1.5 mg equivalent/g. The total ion exchange capacity herein refers to the equivalent of the exchange group per unit weight of the dry resin and can be measured by neutralization titration or the like.

In the membrane body 10 of the ion exchange membrane 1, a sulfonic acid layer 3 containing a fluorine-containing polymer having a sulfonic acid group and a carboxylic acid layer 2 containing a fluorine-containing polymer having a carboxylic acid group are laminated. By providing the membrane body 10 having such a layer configuration, selective permeability for cations such as sodium ions can be further improved.

The ion exchange membrane 1 is arranged in an electrolyzer such that, usually, the sulfonic acid layer 3 is located on the anode side of the electrolyzer and the carboxylic acid layer 2 is located on the cathode side of the electrolyzer.

The sulfonic acid layer 3 is preferably constituted by a material having low electrical resistance and has a membrane thickness larger than that of the carboxylic acid layer 2 from the viewpoint of membrane strength. The membrane thickness of the sulfonic acid layer 3 is preferably 2 to 25 times, more preferably 3 to 15 times that of the carboxylic acid layer 2.

The carboxylic acid layer 2 preferably has high anion exclusion properties even if it has a small membrane thickness. The anion exclusion properties here refer to the property of trying to hinder intrusion and permeation of anions into and through the ion exchange membrane 1. In order to raise the anion exclusion properties, it is effective to dispose a carboxylic acid layer having a small ion exchange capacity to the sulfonic acid layer.

As the fluorine-containing polymer for use in the sulfonic acid layer 3, preferable is a polymer obtained by using CF₂=CFOCF₂CF(CF₃)OCF₂CF₂SO₂F as the monomer of the third group.

As the fluorine-containing polymer for use in the carboxylic acid layer 2, preferable is a polymer obtained by using CF₂=CFOCF₂CF(CF₂)O(CF₂)₂COOCH₃ as the monomer of the second group.

### (Coating layer)

The ion exchange membrane preferably has a coating layer on at least one surface of the membrane body. As shown in Figure 97, in the ion exchange membrane 1, coating layers 11a and 11b are formed on both the surfaces of the membrane body 10.

The coating layers contain inorganic material particles and a binder.

The average particle size of the inorganic material particles is preferably 0.90 µm or more. When the average particle size of the inorganic material particles is 0.90 µm or more, durability to impurities is extremely improved, in addition to attachment of gas. That is, enlarging the average particle size of the inorganic material particles as well as satisfying the value of the specific surface area mentioned above can achieve a particularly marked effect. Irregular inorganic material particles are preferable because the average particle size and specific surface area as above are satisfied. Inorganic material particles obtained by melting and inorganic material particles obtained by grinding raw ore can be used. Inorganic material particles obtained by grinding raw ore can preferably be used.

The average particle size of the inorganic material particles can be 2 µm or less. When the average particle size of the inorganic material particles is 2 µm or less, it is possible to prevent damage of the membrane due to the inorganic material particles. The average particle size of the inorganic material particle is more preferably 0.90 to 1.2 µm.

Here, the average particle size can be measured by a particle size analyzer ("SALD2200", SHIMADZU CORPORATION).

The inorganic material particles preferably have irregular shapes. Such shapes improve resistance to impurities further. The inorganic material particles preferably have a broad particle size distribution.

The inorganic material particles preferably contain at least one inorganic material selected from the group consisting of oxides of Group IV elements in the Periodic Table, nitrides of Group IV elements in the Periodic Table, and carbides of Group IV elements in the Periodic Table. From the viewpoint of durability, zirconium oxide particle is more preferable.

The inorganic material particles are preferably inorganic material particles produced by grinding the raw ore of the inorganic material particles or inorganic material particles, as spherical particles having a uniform diameter, obtained by melt-purifying the raw ore of the inorganic material particles.

Examples of means for grinding raw ore include, but are not particularly limited to, ball mills, bead mills, colloid mills, conical mills, disc mills, edge mills, grain mills, hammer mills, pellet mills, VSI mills, Wiley mills, roller mills, and jet mills. After grinding, the particles are preferably washed. As the washing method, the particles are preferably treated with acid. This treatment can reduce impurities such as iron attached to the surface of the inorganic material particles.

The coating layer preferably contains a binder. The binder is a component that forms the coating layers by retaining the inorganic material particles on the surface of the ion exchange membrane. The binder preferably contains a fluorine-containing polymer from the viewpoint of durability to the electrolyte solution and products from electrolysis.

As the binder, a fluorine-containing polymer having a carboxylic acid group or sulfonic acid group is more preferable, from the viewpoint of durability to the electrolyte solution and products from electrolysis and adhesion to the surface of the ion exchange membrane. When a coating layer is provided on a layer containing a fluorine-containing polymer having a sulfonic acid group (sulfonic acid layer), a fluorine-containing polymer having a sulfonic acid group is further preferably used as the binder of the coating layer. Alternatively, when a coating layer is provided on a layer containing a fluorine-containing polymer having a carboxylic acid group (carboxylic acid layer), a fluorine-containing polymer having a carboxylic acid group is further preferably used as the binder of the coating layer.

In the coating layer, the content of the inorganic material particles is preferably 40 to 90% by mass, more preferably 50 to 90% by mass. The content of the binder is preferably 10 to 60% by mass, more preferably 10 to 50% by mass.

The distribution density of the coating layer in the ion exchange membrane is preferably 0.05 to 2 mg per 1 cm². When the ion exchange membrane has asperities on the surface thereof, the distribution density of the coating layer is preferably 0.5 to 2 mg per 1 cm².

As the method for forming the coating layer, which is not particularly limited, a known method can be used. An example is a method including applying by a spray or the like a coating liquid obtained by dispersing inorganic material particles in a solution containing a binder.

### (Reinforcement core materials)

The ion exchange membrane preferably has reinforcement core materials arranged inside the membrane body.

The reinforcement core materials are members that enhance the strength and dimensional stability of the ion exchange membrane. By arranging the reinforcement core materials inside the membrane body, particularly expansion and contraction of the ion exchange membrane can be controlled in the desired range. Such an ion exchange membrane does not expand or contract more than necessary during electrolysis and the like and can maintain excellent dimensional stability for a long term.

The configuration of the reinforcement core materials is not particularly limited, and, for example, the reinforcement core materials may be formed by spinning yarns referred to as reinforcement yarns. The reinforcement yarns here refer to yarns that are members constituting the reinforcement core materials, can provide the desired dimensional stability and mechanical strength to the ion exchange membrane, and can be stably present in the ion exchange membrane. By using the reinforcement core materials obtained by spinning such reinforcement yarns, better dimensional stability and mechanical strength can be provided to the ion exchange membrane.

The material of the reinforcement core materials and the reinforcement yarns used for these is not particularly limited but is preferably a material resistant to acids, alkalis, etc., and a fiber comprising a fluorine-containing polymer is preferable because long-term heat resistance and chemical resistance are required.

Examples of the fluorine-containing polymer to be used in the reinforcement core materials include polytetrafluoroethylene (PTFE), tetrafluoroethylene-perfluoroalkyl vinyl ether copolymers (PFA), tetrafluoroethylene-ethylene copolymers (ETFE), tetrafluoroethylene-hexafluoropropylene copolymers, trifluorochloroethylene-ethylene copolymers, and vinylidene fluoride polymers (PVDF). Among these, fibers comprising polytetrafluoroethylene are preferably used from the viewpoint of heat resistance and chemical resistance.

The yarn diameter of the reinforcement yarns used for the reinforcement core materials is not particularly limited, but is preferably 20 to 300 deniers, more preferably 50 to 250 deniers. The weave density (fabric count per unit length) is preferably 5 to 50/inch. The form of the reinforcement core materials is not particularly limited, for example, a woven fabric, a nonwoven fabric, and a knitted fabric are used, but is preferably in the form of a woven fabric. The thickness of the woven fabric to be used is preferably 30 to 250 µm, more preferably 30 to 150 µm.

As the woven fabric or knitted fabric, monofilaments, multifilaments, or yarns thereof, a slit yarn, or the like can be used, and various types of weaving methods such as a plain weave, a leno weave, a knit weave, a cord weave, and a seersucker can be used.

The weave and arrangement of the reinforcement core materials in the membrane body are not particularly limited, and preferred arrangement can be appropriately provided considering the size and form of the ion exchange membrane, physical properties desired for the ion exchange membrane, the use environment, and the like.

For example, the reinforcement core materials may be arranged along one predetermined direction of the membrane body, but from the viewpoint of dimensional stability, it is preferred that the reinforcement core materials be arranged along a predetermined first direction, and other reinforcement core materials be arranged along a second direction substantially perpendicular to the first direction. By arranging the plurality of reinforcement core materials substantially orthogonally inside the membrane body, it is possible to impart better dimensional stability and mechanical strength in many directions. For example, arrangement in which the reinforcement core materials arranged along the longitudinal direction (warp yarns) and the reinforcement core materials arranged along the transverse direction (weft yarns) are woven on the surface side of the membrane body is preferred. The arrangement is more preferably in the form of plain weave driven and woven by allowing warps and wefts to run over and under each other alternately, leno weave in which two warps are woven into wefts while twisted, basket weave driven and woven by inserting, into two or more parallelly-arranged warps, wefts of the same number, or the like, from the viewpoint of dimension stability, mechanical strength and easy-production.

It is preferred that particularly, the reinforcement core materials be arranged along both directions, the MD (Machine Direction) and TD (Transverse Direction) of the ion exchange membrane. In other words, the reinforcement core materials are preferably plain-woven in the MD and TD. Here, the MD refers to the direction in which the membrane body and various core materials (for example, the reinforcement core materials, reinforcement yarns, and sacrifice yarns described later) are conveyed in an ion exchange membrane production step described later (flow direction), and the TD refers to the direction substantially perpendicular to the MD. Yarns woven along the MD are referred to as MD yarns, and yarns woven along the TD are referred to as TD yarns. Usually, the ion exchange membrane used for electrolysis is rectangular, and in many cases, the longitudinal direction is the MD, and the width direction is the TD. By weaving the reinforcement core materials that are MD yarns and the reinforcement core materials that are TD yarns, it is possible to impart better dimensional stability and mechanical strength in many directions.

The arrangement interval of the reinforcement core materials is not particularly limited, and preferred arrangement can be appropriately provided considering physical properties desired for the ion exchange membrane, the use environment, and the like.

The aperture ratio for the reinforcement core materials is not particularly limited, but is preferably 30% or more, more preferably 50% or more and 90% or less. The aperture ratio is preferably 30% or more from the viewpoint of the electrochemical properties of the ion exchange membrane, and preferably 90% or less from the viewpoint of the mechanical strength of the ion exchange membrane.

The aperture ratio for the reinforcement core materials herein refers to a ratio of a total area of a surface through which substances such as ions (an electrolyte solution and cations contained therein (e.g., sodium ions)) can pass (B) to the area of either one surface of the membrane body (A) (B/A). The total area of the surface through which substances such as ions can pass (B) can refer to the total areas of regions in which in the ion exchange membrane, cations, an electrolytic solution, and the like are not blocked by the reinforcement core materials and the like contained in the ion exchange membrane.

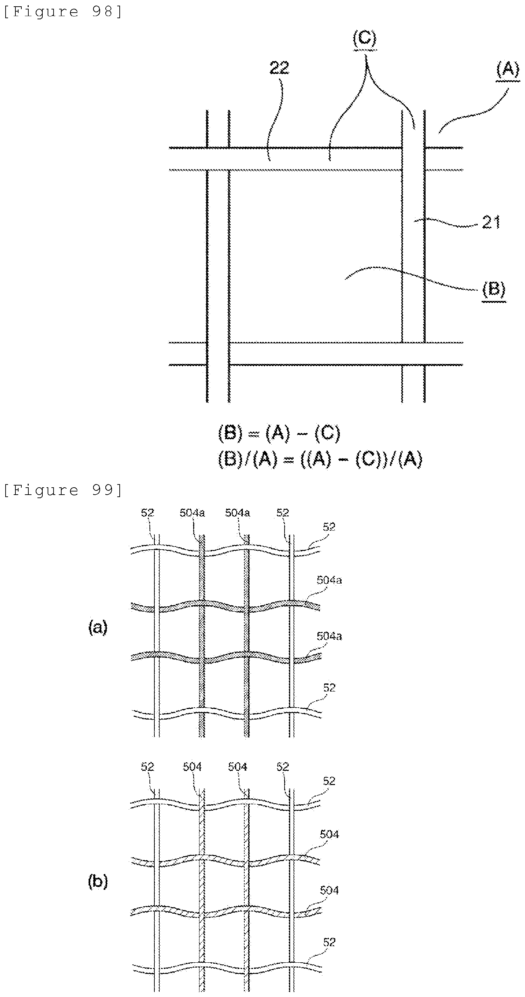

Figure 98 illustrates a schematic view for explaining the aperture ratio of reinforcement core materials constituting the ion exchange membrane. Figure 98, in which a portion of the ion exchange membrane is enlarged, shows only the arrangement of the reinforcement core materials 21 and 22 in the regions, omitting illustration of the other members.

By subtracting the total area of the reinforcement core materials (C) from the area of the region surrounded by the reinforcement core materials 21 arranged along the longitudinal direction and the reinforcement core materials 22 arranged along the transverse direction, the region including the area of the reinforcement core materials (A), the total area of regions through which substances such as ions can pass (B) in the area of the above-described region (A) can be obtained. That is, the aperture ratio can be determined by the following formula (I): $Aperture ratio = \left(B\right) / \left(A\right) = \left(\left(A\right)-\left(C\right)\right) / \left(A\right)$

Among the reinforcement core materials, a particularly preferred form is tape yarns or highly oriented monofilaments comprising PTFE from the viewpoint of chemical resistance and heat resistance. Specifically, reinforcement core materials forming a plain weave in which 50 to 300 denier tape yarns obtained by slitting a high strength porous sheet comprising PTFE into a tape form, or 50 to 300 denier highly oriented monofilaments comprising PTFE are used and which has a weave density of 10 to 50 yarns or monofilaments/inch and has a thickness in the range of 50 to 100 µm are more preferred. The aperture ratio of an ion exchange membrane comprising such reinforcement core materials is further preferably 60% or more.

Examples of the shape of the reinforcement yarns include round yarns and tape yarns.

### (Continuous holes)

The ion exchange membrane preferably has continuous holes inside the membrane body.

The continuous holes refer to holes that can be flow paths for ions generated in electrolysis and an electrolyte solution. The continuous holes, which are tubular holes formed inside the membrane body, are formed by dissolution of sacrifice core materials (or sacrifice yarns) described below. The shape, diameter, or the like of the continuous holes can be controlled by selecting the shape or diameter of the sacrifice core materials (sacrifice yarns).

Forming the continuous holes inside the ion exchange membrane can ensure the mobility of an electrolyte solution on electrolysis. The shape of the continuous holes is not particularly limited, but may be the shape of sacrifice core materials to be used for formation of the continuous holes in accordance with the production method described below.

The continuous holes are preferably formed so as to alternately pass on the anode side (sulfonic acid layer side) and the cathode side (carboxylic acid layer side) of the reinforcement core materials. With such a structure, in a portion in which continuous holes are formed on the cathode side of the reinforcement core materials, ions (e.g., sodium ions) transported through the electrolyte solution with which the continuous holes are filled can flow also on the cathode side of the reinforcement core materials. As a result, the flow of cations is not interrupted, and thus, it is possible to further reduce the electrical resistance of the ion exchange membrane.

The continuous holes may be formed along only one predetermined direction of the membrane body constituting the ion exchange membrane, but are preferably formed in both the longitudinal direction and the transverse direction of the membrane body from the viewpoint of exhibiting more stable electrolytic performance.

### [Production method]

A suitable example of a method for producing an ion exchange membrane includes a method including the following steps (1) to (6):
Step (1): the step of producing a fluorine-containing polymer having an ion exchange group or an ion exchange group precursor capable of forming an ion exchange group by hydrolysis,
Step (2): the step of weaving at least a plurality of reinforcement core materials, as required, and sacrifice yarns having a property of dissolving in an acid or an alkali, and forming continuous holes, to obtain a reinforcing material in which the sacrifice yarns are arranged between the reinforcement core materials adjacent to each other,
Step (3): the step of forming into a film the above fluorine-containing polymer having an ion exchange group or an ion exchange group precursor capable of forming an ion exchange group by hydrolysis,
Step (4): the step of embedding the above reinforcing materials, as required, in the above film to obtain a membrane body inside which the reinforcing materials are arranged,
Step (5): the step of hydrolyzing the membrane body obtained in the step (4) (hydrolysis step), and
Step (6): the step of providing a coating layer on the membrane body obtained in the step (5) (application step).

Hereinafter, each of the steps will be described in detail.

### Step (1): Step of producing fluorine-containing polymer

In the step (1), raw material monomers described in the first group to the third group above are used to produce a fluorine-containing polymer. In order to control the ion exchange capacity of the fluorine-containing polymer, the mixture ratio of the raw material monomers should be adjusted in the production of the fluorine-containing polymer forming the layers.

### Step (2): Step of producing reinforcing materials

The reinforcing material is a woven fabric obtained by weaving reinforcement yarns or the like. The reinforcing material is embedded in the membrane to thereby form reinforcement core materials. When an ion exchange membrane having continuous holes is formed, sacrifice yarns are additionally woven into the reinforcing material. The amount of the sacrifice yarns contained in this case is preferably 10 to 80% by mass, more preferably 30 to 70% by mass based on the entire reinforcing material. Weaving the sacrifice yarns can also prevent yarn slippage of the reinforcement core materials.

As the sacrifice yarns, which have solubility in the membrane production step or under an electrolysis environment, rayon, polyethylene terephthalate (PET), cellulose, polyamide, and the like are used. Monofilaments or multifilaments having a thickness of 20 to 50 deniers and comprising polyvinyl alcohol and the like are also preferred.

In the step (2), the aperture ratio, arrangement of the continuous holes, and the like can be controlled by adjusting the arrangement of the reinforcement core materials and the sacrifice yarns.

### Step (3): Step of film formation

In the step (3), the fluorine-containing polymer obtained in the step (1) is formed into a film by using an extruder. The film may be a single-layer configuration, a two-layer configuration of a sulfonic acid layer and a carboxylic acid layer as mentioned above, or a multilayer configuration of three layers or more.

Examples of the film forming method include the following:
a method in which a fluorine-containing polymer having a carboxylic acid group and a fluorine-containing polymer having a sulfonic acid group are separately formed into films; and
a method in which fluorine-containing polymer having a carboxylic acid group and a fluorine-containing polymer having a sulfonic acid group are coextruded into a composite film.

The number of each film may be more than one. Coextrusion of different films is preferred because of its contribution to an increase in the adhesive strength in the interface.

### Step (4): Step of obtaining membrane body

In the step (4), the reinforcing material obtained in the step (2) is embedded in the film obtained in the step (3) to provide a membrane body including the reinforcing material therein.

Preferable examples of the method for forming a membrane body include (i) a method in which a fluorine-containing polymer having a carboxylic acid group precursor (e.g., carboxylate functional group) (hereinafter, a layer comprising the same is referred to as the first layer) located on the cathode side and a fluorine-containing polymer having a sulfonic acid group precursor (e.g., sulfonyl fluoride functional group) (hereinafter, a layer comprising the same is referred to as the second layer) are formed into a film by a coextrusion method, and, by using a heat source and a vacuum source as required, a reinforcing material and the second layer/first layer composite film are laminated in this order on breathable heat-resistant release paper on a flat plate or drum having many pores on the surface thereof and integrated at a temperature at which each polymer melts while air among each of the layers was evacuated by reduced pressure; and (ii) a method in which, in addition to the second layer/first layer composite film, a fluorine-containing polymer having a sulfonic acid group precursor is singly formed into a film (the third layer) in advance, and, by using a heat source and a vacuum source as required, the third layer film, the reinforcement core materials, and the composite film comprising the second layer/first layer are laminated in this order on breathable heat-resistant release paper on a flat plate or drum having many pores on the surface thereof and integrated at a temperature at which each polymer melts while air among each of the layers was evacuated by reduced pressure.

Coextrusion of the first layer and the second layer herein contributes to an increase in the adhesive strength at the interface.

The method including integration under a reduced pressure is characterized by making the third layer on the reinforcing material thicker than that of a pressure-application press method. Further, since the reinforcing material is fixed on the inner surface of the membrane body, the method has a property of sufficiently retaining the mechanical strength of the ion exchange membrane.

The variations of lamination described here are exemplary, and coextrusion can be performed after a preferred lamination pattern (for example, the combination of layers) is appropriately selected considering the desired layer configuration of the membrane body and physical properties, and the like.

For the purpose of further improving the electric properties of the ion exchange membrane, it is also possible to additionally interpose a fourth layer comprising a fluorine-containing polymer having both a carboxylic acid group precursor and a sulfonic acid group precursor between the first layer and the second layer or to use a fourth layer comprising a fluorine-containing polymer having both a carboxylic acid group precursor and a sulfonic acid group precursor instead of the second layer.

The method for forming the fourth layer may be a method in which a fluorine-containing polymer having a carboxylic acid group precursor and a fluorine-containing polymer having a sulfonic acid group precursor are separately produced and then mixed or may be a method in which a monomer having a carboxylic acid group precursor and a monomer having a sulfonic acid group precursor are copolymerized.

When the fourth layer is used as a component of the ion exchange membrane, a coextruded film of the first layer and the fourth layer is formed, in addition to this, the third layer and the second layer are separately formed into films, and lamination may be performed by the method mentioned above. Alternatively, the three layers of the first layer/fourth layer/second layer may be simultaneously formed into a film by coextrusion.

In this case, the direction in which the extruded film flows is the MD. As mentioned above, it is possible to form a membrane body containing a fluorine-containing polymer having an ion exchange group on a reinforcing material.

Additionally, the ion exchange membrane preferably has protruded portions composed of the fluorine-containing polymer having a sulfonic acid group, that is, projections, on the surface side composed of the sulfonic acid layer. As a method for forming such projections, which is not particularly limited, a known method also can be employed including forming projections on a resin surface. A specific example of the method is a method of embossing the surface of the membrane body. For example, the above projections can be formed by using release paper embossed in advance when the composite film mentioned above, reinforcing material, and the like are integrated. In the case where projections are formed by embossing, the height and arrangement density of the projections can be controlled by controlling the emboss shape to be transferred (shape of the release paper).

### (5) Hydrolysis step

In the step (5), a step of hydrolyzing the membrane body obtained in the step (4) to convert the ion exchange group precursor into an ion exchange group (hydrolysis step) is performed.

In the step (5), it is also possible to form dissolution holes in the membrane body by dissolving and removing the sacrifice yarns included in the membrane body with acid or alkali. The sacrifice yarns may remain in the continuous holes without being completely dissolved and removed. The sacrifice yarns remaining in the continuous holes may be dissolved and removed by the electrolyte solution when the ion exchange membrane is subjected to electrolysis.

The sacrifice yarn has solubility in acid or alkali in the step of producing an ion exchange membrane or under an electrolysis environment. The sacrifice yarns are eluted out to thereby form continuous holes at corresponding sites.

The step (5) can be performed by immersing the membrane body obtained in the step (4) in a hydrolysis solution containing acid or alkali. An example of the hydrolysis solution that can be used is a mixed solution containing KOH and dimethyl sulfoxide (DMSO).

The mixed solution preferably contains KOH of 2.5 to 4.0 N and DMSO of 25 to 35% by mass.

The temperature for hydrolysis is preferably 70 to 100°C. The higher the temperature, the larger can be the apparent thickness. The temperature is more preferably 75 to 100°C.

The time for hydrolysis is preferably 10 to 120 minutes. The longer the time, the larger can be the apparent thickness. The time is more preferably 20 to 120 minutes.

The step of forming continuous holes by eluting the sacrifice yarn will be now described in more detail. Figures 99(a) and (b) are schematic views for explaining a method for forming the continuous holes of the ion exchange membrane.

Figures 99(a) and (b) show reinforcement yarns 52, sacrifice yarns 504a, and continuous holes 504 formed by the sacrifice yarns 504a only, omitting illustration of the other members such as a membrane body.

First, the reinforcement yarns 52 that are to constitute reinforcement core materials in the ion exchange membrane and the sacrifice yarns 504a for forming the continuous holes 504 in the ion exchange membrane are used as interwoven reinforcing materials. Then, in the step (5), the sacrifice yarns 504a are eluted to form the continuous holes 504.

The above method is simple because the method for interweaving the reinforcement yarns 52 and the sacrifice yarns 504a may be adjusted depending on the arrangement of the reinforcement core materials and continuous holes in the membrane body of the ion exchange membrane.

Figure 99(a) exemplifies the plain-woven reinforcing material in which the reinforcement yarns 52 and sacrifice yarns 504a are interwoven along both the longitudinal direction and the lateral direction in the paper, and the arrangement of the reinforcement yarns 52 and the sacrifice yarns 504a in the reinforcing material may be varied as required.

### (6) Application step

In the step (6), a coating layer can be formed by preparing a coating liquid containing inorganic material particles obtained by grinding raw ore or melting raw ore and a binder, applying the coating liquid onto the surface of the ion exchange membrane obtained in the step (5), and drying the coating liquid.

A preferable binder is a binder obtained by hydrolyzing a fluorine-containing polymer having an ion exchange group precursor with an aqueous solution containing dimethyl sulfoxide (DMSO) and potassium hydroxide (KOH) and then immersing the polymer in hydrochloric acid to replace the counterion of the ion exchange group by H+ (e.g., a fluorine-containing polymer having a carboxyl group or sulfo group). Thereby, the polymer is more likely to dissolve in water or ethanol mentioned below, which is preferable.

This binder is dissolved in a mixed solution of water and ethanol. The volume ratio between water and ethanol is preferably 10:1 to 1:10, more preferably 5:1 to 1:5, further preferably 2:1 to 1:2. The inorganic material particles are dispersed with a ball mill into the dissolution liquid thus obtained to thereby provide a coating liquid. In this case, it is also possible to adjust the average particle size and the like of the particles by adjusting the time and rotation speed during the dispersion. The preferable amount of the inorganic material particles and the binder to be blended is as mentioned above.

The concentration of the inorganic material particles and the binder in the coating liquid is not particularly limited, but a thin coating liquid is preferable. This enables uniform application onto the surface of the ion exchange membrane.

Additionally, a surfactant may be added to the dispersion when the inorganic material particles are dispersed. As the surfactant, nonionic surfactants are preferable, and examples thereof include HS-210, NS-210, P-210, and E-212 manufactured by NOF CORPORATION.

The coating liquid obtained is applied onto the surface of the ion exchange membrane by spray application or roll coating to thereby provide an ion exchange membrane.

### [Microporous membrane]

The microporous membrane of the present embodiment is not particularly limited as long as the membrane can be formed into a laminate with the electrode for electrolysis, as mentioned above. Various microporous membranes may be employed.

The porosity of the microporous membrane of the present embodiment is not particularly limited, but can be 20 to 90, for example, and is preferably 30 to 85. The above porosity can be calculated by the following formula: Porosity = (1 - (the weight of the membrane in a dried state) / (the weight calculated from the volume calculated from the thickness, width, and length of the membrane and the density of the membrane material)) × 100

The average pore size of the microporous membrane of the present embodiment is not particularly limited, and can be 0.01 µm to 10 µm, for example, preferably 0.05 µm to 5 µm. With respect to the average pore size, for example, the membrane is cut vertically to the thickness direction, and the section is observed with an FE-SEM. The average pore size can be obtained by measuring the diameter of about 100 pores observed and averaging the measurements.

The thickness of the microporous membrane of the present embodiment is not particularly limited, and can be 10 µm to 1000 µm, for example, preferably 50 µm to 600 µm. The above thickness can be measured by using a micrometer (manufactured by Mitutoyo Corporation) or the like, for example.

Specific examples of the microporous membrane as mentioned above include Zirfon Perl UTP 500 manufactured by Agfa (also referred to as a Zirfon membrane in the present embodiment) and those described in International Publication No. WO 2013-183584 and International Publication No. WO 2016-203701.

In the present embodiment, the membrane preferably comprises a first ion exchange resin layer and a second ion exchange resin layer having an EW (ion exchange capacity) different from that of the first ion exchange resin layer. Additionally, the membrane preferably comprises a first ion exchange resin layer and a second ion exchange resin layer having a functional group different from that of the first ion exchange resin layer. The ion exchange capacity can be adjusted by the functional group to be introduced, and functional groups that may be introduced are as mentioned above.

### (Water electrolysis)

The electrolyzer in the present embodiment, as an electrolyzer in the case of electrolyzing water, has a configuration in which the ion exchange membrane in an electrolyzer for use in the case of electrolyzing common salt mentioned above is replaced by a microporous membrane. The raw material to be supplied, which is water, is different from that for the electrolyzer in the case of electrolyzing common salt mentioned above. As for the other components, components similar to that of the electrolyzer in the case of electrolyzing common salt can be employed also in the electrolyzer in the case of electrolyzing water. Since chlorine gas is generated in the anode chamber in the case of common salt electrolysis, titanium is used as the material of the anode chamber, but in the case of water electrolysis, only oxygen gas is generated in the anode chamber. Thus, a material identical to that of the cathode chamber can be used. An example thereof is nickel. For anode coating, catalyst coating for oxygen generation is suitable. Examples of the catalyst coating include metals, oxides, and hydroxides of the platinum group metals and transition metal group metals. For example, elements such as platinum, iridium, palladium, ruthenium, nickel, cobalt, and iron can be used.

### [Method for renewing electrode]

The method for producing an electrolyzer according to the present embodiment can be performed also as a method for renewing an electrode (anode and/or cathode). That is, the method for renewing an electrode according to the present embodiment is a method for renewing an existing electrode by using an electrode for electrolysis, wherein the electrode for electrolysis being in a wound body form is used.

Specific examples of a step of using a wound body include, but not particularly limited to thereto, a method in which the electrode for electrolysis being in a wound body form, after its wound state is released, is arranged on the surface of the existing electrode. By means of the method, the electrode for electrolysis can be arranged on the surface of the existing anode or cathode, and the characteristics of the anode and/or cathode can be renewed.

As described above, in the present embodiment, the step of using a wound body preferably has a step (B') of releasing the wound state of the wound body, and after the step (B'), more preferably has a step (C') of arranging an electrode for electrolysis on the surface of the existing electrode.

Also in the method for renewing an electrode according to the present embodiment, the step of using a wound body preferably has a step (A') of retaining the electrode for electrolysis in a wound state to thereby obtain a wound body. In the step (A'), the electrode for electrolysis per se may be wound to form a wound body, or the electrode for electrolysis is wound around a core to form a wound body. As the core that may be used here, which is not particularly limited, a member having a substantially cylindrical form and having a size corresponding to the electrode for electrolysis can be used, for example.

### [Method for producing wound body]

In the method for producing an electrolyzer according to the present embodiment and the method for renewing an electrode according to the present embodiment, the step (A) or (A'), which may be performed, can be performed also as a method for producing a wound body. That is, the method for producing a wound body according to the present embodiment is a method for producing a wound body to be used for renewing an existing electrolyzer comprising an anode, a cathode that is opposed to the anode, and a membrane that is arranged between the anode and the cathode, the method comprising a step of winding an electrode for electrolysis or a laminate of the electrode for electrolysis and a new membrane to thereby obtain the wound body. In the step of obtaining a wound body, the electrode for electrolysis per se may be wound to form a wound body, or the electrode for electrolysis may be wound around a core to form a wound body. As the core that may be used here, which is not particularly limited, a member having a substantially cylindrical form and having a size corresponding to the electrode for electrolysis can be used, for example.

### <Sixth embodiment>

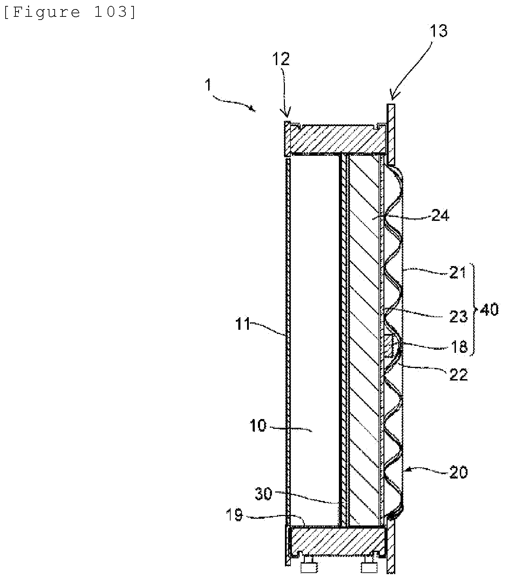

Here, a sixth embodiment of the present invention will be described in detail with reference to Figures 103 to 111.

### [Method for producing electrolyzer]

The method for producing an electrolyzer according to the sixth embodiment (hereinafter, in the section of <Sixth embodiment>, simply referred to as "the present embodiment") is a method for producing a new electrolyzer by arranging a laminate in an existing electrolyzer comprising an anode, a cathode that is opposed to the anode, and a membrane that is arranged between the anode and the cathode, the method comprising a step (A) of integrating an electrode for electrolysis with a new membrane at a temperature at which the membrane does not melt to thereby obtain the laminate, and a step (B) of replacing the membrane in the existing electrolyzer by the laminate after the step (A).

As described above, according to the method for producing an electrolyzer according to the present embodiment, it is possible to integrate and use the electrode for electrolysis and the membrane, not in accordance with an impractical method such as thermal compression. Thus, it is possible to improve the work efficiency during electrode renewing in an electrolyzer.

In the present embodiment, the existing electrolyzer comprises an anode, a cathode that is opposed to the anode, and a membrane that is arranged between the anode and the cathode as constituent members, in other words, comprises an electrolytic cell. The existing electrolyzer is not particularly limited as long as comprising the constituent members described above, and various known configurations may be employed.

In the present embodiment, a new electrolyzer further comprises an electrode for electrolysis or a laminate, in addition to a member that has already served as the anode or cathode in the existing electrolyzer. That is, the "electrode for electrolysis" arranged on production of a new electrolyzer serves as the anode or cathode, and is separate from the cathode and anode in the existing electrolyzer. In the present embodiment, even in the case where the electrolytic performance of the anode and/or cathode has deteriorated in association with operation of the existing electrolyzer, arrangement of an electrode for electrolysis separating therefrom enables the characteristics of the anode and/or cathode to be renewed. Further, a new ion exchange membrane constituting the laminate is arranged in combination, and thus, the characteristics of the ion exchange membrane having characteristics deteriorated in association with operation can be renewed simultaneously. "Renewing the characteristics" referred to herein means to have characteristics comparable to the initial characteristics possessed by the existing electrolyzer before being operated or to have characteristics higher than the initial characteristics.

In the present embodiment, the existing electrolyzer is assumed to be an "electrolyzer that has been already operated", and the new electrolyzer is assumed to be an "electrolyzer that has not been yet operated". That is, once an electrolyzer produced as a new electrolyzer is operated, the electrolyzer becomes "the existing electrolyzer in the present embodiment". Arrangement of an electrode for electrolysis or a laminate in this existing electrolyzer provides "a new electrolyzer of the present embodiment".

Hereinafter, a case of performing common salt electrolysis by using an ion exchange membrane as the membrane is taken as an example, and one embodiment of the electrolyzer will be described in detail. In the section of <Sixth embodiment>, unless otherwise specified, "the electrolyzer in the present embodiment" incorporates both "the existing electrolyzer in the present embodiment" and "the new electrolyzer in the present embodiment".

### [Electrolytic cell]

First, the electrolytic cell, which can be used as a constituent unit of the electrolyzer in the present embodiment, will be described. Figure 103 illustrates a cross-sectional view of an electrolytic cell 1.

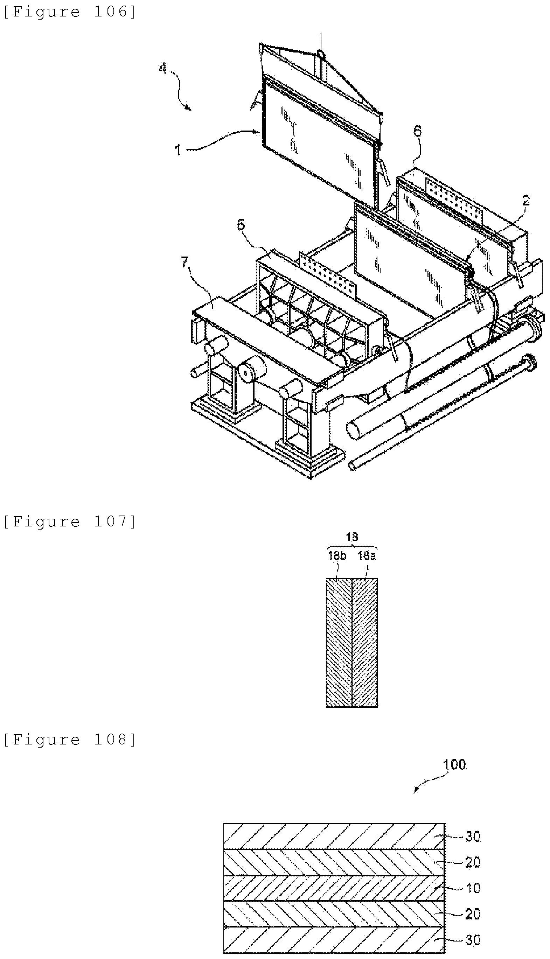

The electrolytic cell 1 comprises an anode chamber 10, a cathode chamber 20, a partition wall 30 placed between the anode chamber 10 and the cathode chamber 20, an anode 11 placed in the anode chamber 10, and a cathode 21 placed in the cathode chamber 20. As required, the electrolytic cell 1 has a substrate 18a and a reverse current absorbing layer 18b formed on the substrate 18a and may comprise a reverse current absorber 18 placed in the cathode chamber. The anode 11 and the cathode 21 belonging to the electrolytic cell 1 are electrically connected to each other. In other words, the electrolytic cell 1 comprises the following cathode structure. The cathode structure 40 comprises the cathode chamber 20, the cathode 21 placed in the cathode chamber 20, and the reverse current absorber 18 placed in the cathode chamber 20, the reverse current absorber 18 has the substrate 18a and the reverse current absorbing layer 18b formed on the substrate 18a, as shown in Figure 107, and the cathode 21 and the reverse current absorbing layer 18b are electrically connected. The cathode chamber 20 further has a collector 23, a support 24 supporting the collector, and a metal elastic body 22. The metal elastic body 22 is placed between the collector 23 and the cathode 21. The support 24 is placed between the collector 23 and the partition wall 30. The collector 23 is electrically connected to the cathode 21 via the metal elastic body 22. The partition wall 30 is electrically connected to the collector 23 via the support 24. Accordingly, the partition wall 30, the support 24, the collector 23, the metal elastic body 22, and the cathode 21 are electrically connected. The cathode 21 and the reverse current absorbing layer 18b are electrically connected. The cathode 21 and the reverse current absorbing layer may be directly connected or may be indirectly connected via the collector, the support, the metal elastic body, the partition wall, or the like. The entire surface of the cathode 21 is preferably covered with a catalyst layer for reduction reaction. The form of electrical connection may be a form in which the partition wall 30 and the support 24, the support 24 and the collector 23, and the collector 23 and the metal elastic body 22 are each directly attached and the cathode 21 is laminated on the metal elastic body 22. Examples of a method for directly attaching these constituent members to one another include welding and the like. Alternatively, the reverse current absorber 18, the cathode 21, and the collector 23 may be collectively referred to as a cathode structure 40.

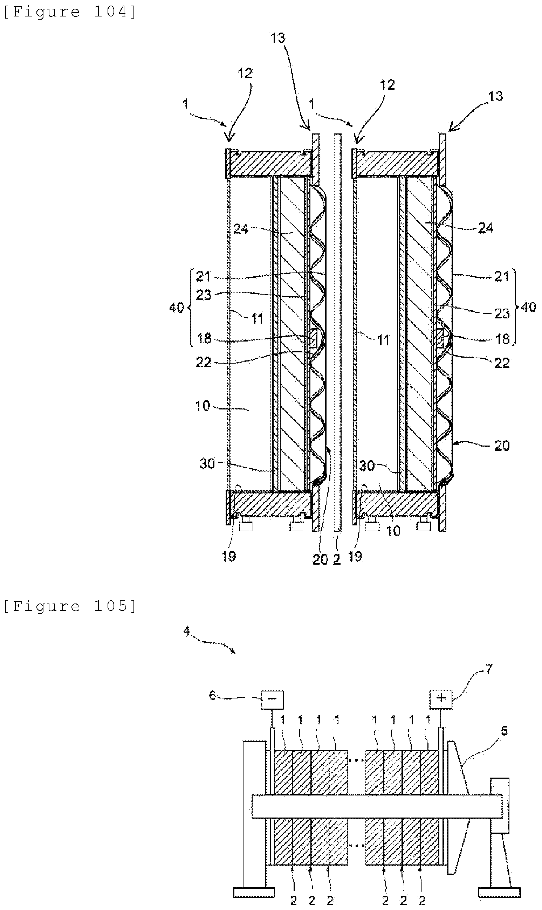

Figure 104 illustrates a cross-sectional view of two electrolytic cells 1 that are adjacent in the electrolyzer 4. Figure 105 shows an electrolyzer 4. Figure 106 shows a step of assembling the electrolyzer 4.

As shown in Figure 104, an electrolytic cell 1, a cation exchange membrane 2, and an electrolytic cell 1 are arranged in series in the order mentioned. An ion exchange membrane 2 is arranged between the anode chamber of one electrolytic cell 1 among the two electrolytic cells that are adjacent in the electrolyzer and the cathode chamber of the other electrolytic cell 1. That is, the anode chamber 10 of the electrolytic cell 1 and the cathode chamber 20 of the electrolytic cell 1 adjacent thereto is separated by the cation exchange membrane 2. As shown in Figure 105, the electrolyzer 4 is composed of a plurality of electrolytic cells 1 connected in series via the ion exchange membrane 2. That is, the electrolyzer 4 is a bipolar electrolyzer comprising the plurality of electrolytic cells 1 arranged in series and ion exchange membranes 2 each arranged between adjacent electrolytic cells 1. As shown in Figure 106, the electrolyzer 4 is assembled by arranging the plurality of electrolytic cells 1 in series via the ion exchange membrane 2 and coupling the cells by means of a press device 5.

The electrolyzer 4 has an anode terminal 7 and a cathode terminal 6 to be connected to a power supply. The anode 11 of the electrolytic cell 1 located at farthest end among the plurality of electrolytic cells 1 coupled in series in the electrolyzer 4 is electrically connected to the anode terminal 7. The cathode 21 of the electrolytic cell located at the end opposite to the anode terminal 7 among the plurality of electrolytic cells 1 coupled in series in the electrolyzer 4 is electrically connected to the cathode terminal 6. The electric current during electrolysis flows from the side of the anode terminal 7, through the anode and cathode of each electrolytic cell 1, toward the cathode terminal 6. At the both ends of the coupled electrolytic cells 1, an electrolytic cell having an anode chamber only (anode terminal cell) and an electrolytic cell having a cathode chamber only (cathode terminal cell) may be arranged. In this case, the anode terminal 7 is connected to the anode terminal cell arranged at the one end, and the cathode terminal 6 is connected to the cathode terminal cell arranged at the other end.

In the case of electrolyzing brine, brine is supplied to each anode chamber 10, and pure water or a low-concentration sodium hydroxide aqueous solution is supplied to each cathode chamber 20. Each liquid is supplied from an electrolyte solution supply pipe (not shown in Figure), through an electrolyte solution supply hose (not shown in Figure), to each electrolytic cell 1. The electrolyte solution and products from electrolysis are recovered from an electrolyte solution recovery pipe (not shown in Figure). During electrolysis, sodium ions in the brine migrate from the anode chamber 10 of the one electrolytic cell 1, through the ion exchange membrane 2, to the cathode chamber 20 of the adjacent electrolytic cell 1. Thus, the electric current during electrolysis flows in the direction in which the electrolytic cells 1 are coupled in series. That is, the electric current flows, through the cation exchange membrane 2, from the anode chamber 10 toward the cathode chamber 20. As the brine is electrolyzed, chlorine gas is generated on the side of the anode 11, and sodium hydroxide (solute) and hydrogen gas are generated on the side of the cathode 21.

### (Anode chamber)

The anode chamber 10 has the anode 11 or anode feed conductor 11. The feed conductor herein referred to mean a degraded electrode (i.e., the existing electrode), an electrode having no catalyst coating, and the like. When the electrode for electrolysis in the present embodiment is inserted to the anode side, 11 serves as an anode feed conductor. When the electrode for electrolysis in the present embodiment is not inserted to the anode side, 11 serves as an anode. The anode chamber 10 preferably has an anode-side electrolyte solution supply unit that supplies an electrolyte solution to the anode chamber 10, a baffle plate that is arranged above the anode-side electrolyte solution supply unit so as to be substantially parallel or oblique to a partition wall 30, and an anode-side gas liquid separation unit that is arranged above the baffle plate to separate gas from the electrolyte solution including the gas mixed.

### (Anode)

When the electrode for electrolysis in the present embodiment is not inserted to the anode side, an anode 11 is provided in the frame of the anode chamber 10 (i.e., the anode frame). As the anode 11, a metal electrode such as so-called DSA(R) can be used. DSA is an electrode including a titanium substrate of which surface is covered with an oxide comprising ruthenium, iridium, and titanium as components.

As the form, any of a perforated metal, nonwoven fabric, foamed metal, expanded metal, metal porous foil formed by electroforming, so-called woven mesh produced by knitting metal lines, and the like can be used.

### (Anode feed conductor)

When the electrode for electrolysis in the present embodiment is inserted to the anode side, the anode feed conductor 11 is provided in the frame of the anode chamber 10. As the anode feed conductor 11, a metal electrode such as so-called DSA(R) can be used, and titanium having no catalyst coating can be also used. Alternatively, DSA having a thinner catalyst coating can be also used. Further, a used anode can be also used.

As the form, any of a perforated metal, nonwoven fabric, foamed metal, expanded metal, metal porous foil formed by electroforming, so-called woven mesh produced by knitting metal lines, and the like can be used.

### (Anode-side electrolyte solution supply unit)

The anode-side electrolyte solution supply unit, which supplies the electrolyte solution to the anode chamber 10, is connected to the electrolyte solution supply pipe. The anode-side electrolyte solution supply unit is preferably arranged below the anode chamber 10. As the anode-side electrolyte solution supply unit, for example, a pipe on the surface of which aperture portions are formed (dispersion pipe) and the like can be used. Such a pipe is more preferably arranged along the surface of the anode 11 and parallel to the bottom 19 of the electrolytic cell. This pipe is connected to an electrolyte solution supply pipe (liquid supply nozzle) that supplies the electrolyte solution into the electrolytic cell 1. The electrolyte solution supplied from the liquid supply nozzle is conveyed with a pipe into the electrolytic cell 1 and supplied from the aperture portions provided on the surface of the pipe to inside the anode chamber 10. Arranging the pipe along the surface of the anode 11 and parallel to the bottom 19 of the electrolytic cell is preferable because the electrolyte solution can be uniformly supplied to inside the anode chamber 10.

### (Anode-side gas liquid separation unit)

The anode-side gas liquid separation unit is preferably arranged above the baffle plate. The anode-side gas liquid separation unit has a function of separating produced gas such as chlorine gas from the electrolyte solution during electrolysis. Unless otherwise specified, above means the upper direction in the electrolytic cell 1 in Figure 103, and below means the lower direction in the electrolytic cell 1 in Figure 103.

During electrolysis, produced gas generated in the electrolytic cell 1 and the electrolyte solution form a mixed phase (gas-liquid mixed phase), which is then emitted out of the system. Subsequently, pressure fluctuations inside the electrolytic cell 1 cause vibration, which may result in physical damage of the ion exchange membrane. In order to prevent this event, the electrolytic cell 1 in the present embodiment is preferably provided with an anode-side gas liquid separation unit to separate the gas from the liquid. The anode-side gas liquid separation unit is preferably provided with a defoaming plate to eliminate bubbles. When the gas-liquid mixed phase flow passes through the defoaming plate, bubbles burst to thereby enable the electrolyte solution and the gas to be separated. As a result, vibration during electrolysis can be prevented.

### (Baffle plate)

The baffle plate is preferably arranged above the anode-side electrolyte solution supply unit and arranged substantially in parallel with or obliquely to the partition wall 30. The baffle plate is a partition plate that controls the flow of the electrolyte solution in the anode chamber 10. When the baffle plate is provided, it is possible to cause the electrolyte solution (brine or the like) to circulate internally in the anode chamber 10 to thereby make the concentration uniform. In order to cause internal circulation, the baffle plate is preferably arranged so as to separate the space in proximity to the anode 11 from the space in proximity to the partition wall 30. From such a viewpoint, the baffle plate is preferably placed so as to be opposed to the surface of the anode 11 and to the surface of the partition wall 30. In the space in proximity to the anode partitioned by the baffle plate, as electrolysis proceeds, the electrolyte solution concentration (brine concentration) is lowered, and produced gas such as chlorine gas is generated. This results in a difference in the gas-liquid specific gravity between the space in proximity to anode 11 and the space in proximity to the partition wall 30 partitioned by the baffle plate. By use of the difference, it is possible to promote the internal circulation of the electrolyte solution in the anode chamber 10 to thereby make the concentration distribution of the electrolyte solution in the anode chamber 10 more uniform.

Although not shown in Figure 103, a collector may be additionally provided inside the anode chamber 10. The material and configuration of such a collector may be the same as those of the collector of the cathode chamber mentioned below. In the anode chamber 10, the anode 11 per se may also serve as the collector.

### (Partition wall)

The partition wall 30 is arranged between the anode chamber 10 and the cathode chamber 20. The partition wall 30 may be referred to as a separator, and the anode chamber 10 and the cathode chamber 20 are partitioned by the partition wall 30. As the partition wall 30, one known as a separator for electrolysis can be used, and an example thereof includes a partition wall formed by welding a plate comprising nickel to the cathode side and a plate comprising titanium to the anode side.

### (Cathode chamber)

In the cathode chamber 20, when the electrode for electrolysis in the present embodiment is inserted to the cathode side, 21 serves as a cathode feed conductor. When the electrode for electrolysis in the present embodiment is not inserted to the cathode side, 21 serves as a cathode. When a reverse current absorber is included, the cathode or cathode feed conductor 21 is electrically connected to the reverse current absorber. The cathode chamber 20, similarly to the anode chamber 10, preferably has a cathode-side electrolyte solution supply unit and a cathode-side gas liquid separation unit. Among the components constituting the cathode chamber 20, components similar to those constituting the anode chamber 10 will be not described.

### (Cathode)

When the electrode for electrolysis in the present embodiment is not inserted to the cathode side, a cathode 21 is provided in the frame of the cathode chamber 20 (i.e., cathode frame). The cathode 21 preferably has a nickel substrate and a catalyst layer that covers the nickel substrate. Examples of the components of the catalyst layer on the nickel substrate include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. The cathode 21 may be subjected to a reduction treatment, as required. As the substrate of the cathode 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

### (Cathode feed conductor)

When the electrode for electrolysis in the present embodiment is inserted to the cathode side, a cathode feed conductor 21 is provided in the frame of the cathode chamber 20. The cathode feed conductor 21 may be covered with a catalytic component. The catalytic component may be a component that is originally used as the cathode and remains. Examples of the components of the catalyst layer include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. Nickel, nickel alloys, and nickel-plated iron or stainless, having no catalyst coating may be used. As the substrate of the cathode feed conductor 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

### (Reverse current absorbing layer)

A material having a redox potential less noble than the redox potential of the element for the catalyst layer of the cathode mentioned above may be selected as a material for the reverse current absorbing layer. Examples thereof include nickel and iron.

### (Collector)

The cathode chamber 20 preferably comprises the collector 23. The collector 23 improves current collection efficiency. In the present embodiment, the collector 23 is a porous plate and is preferably arranged in substantially parallel to the surface of the cathode 21.

The collector 23 preferably comprises an electrically conductive metal such as nickel, iron, copper, silver, and titanium. The collector 23 may be a mixture, alloy, or composite oxide of these metals. The collector 23 may have any form as long as the form enables the function of the collector and may have a plate or net form.

### (Metal elastic body)

Placing the metal elastic body 22 between the collector 23 and the cathode 21 presses each cathode 21 of the plurality of electrolytic cells 1 connected in series onto the ion exchange membrane 2 to reduce the distance between each anode 11 and each cathode 21. Then, it is possible to lower the voltage to be applied entirely across the plurality of electrolytic cells 1 connected in series. Lowering of the voltage enables the power consumption to be reduced. With the metal elastic body 22 placed, the pressing pressure caused by the metal elastic body 22 enables the electrode for electrolysis to be stably maintained in place when the laminate including the electrode for electrolysis in the present embodiment is placed in the electrolytic cell.

As the metal elastic body 22, spring members such as spiral springs and coils and cushioning mats may be used. As the metal elastic body 22, a suitable one may be appropriately employed, in consideration of a stress to press the ion exchange membrane and the like. The metal elastic body 22 may be provided on the surface of the collector 23 on the side of the cathode chamber 20 or may be provided on the surface of the partition wall on the side of the anode chamber 10. Both the chambers are usually partitioned such that the cathode chamber 20 becomes smaller than the anode chamber 10. Thus, from the viewpoint of the strength of the frame and the like, the metal elastic body 22 is preferably provided between the collector 23 and the cathode 21 in the cathode chamber 20. The metal elastic body 23 preferably comprises an electrically conductive metal such as nickel, iron, copper, silver, and titanium.

### (Support)

The cathode chamber 20 preferably comprises the support 24 that electrically connects the collector 23 to the partition wall 30. This can achieve an efficient current flow.

The support 24 preferably comprises an electrically conductive metal such as nickel, iron, copper, silver, and titanium. The support 24 may have any shape as long as the support can support the collector 23 and may have a rod, plate, or net shape. The support 24 has a plate shape, for example. A plurality of supports 24 are arranged between the partition wall 30 and the collector 23. The plurality of supports 24 are aligned such that the surfaces thereof are in parallel to each other. The supports 24 are arranged substantially perpendicular to the partition wall 30 and the collector 23.

### (Anode side gasket and cathode side gasket)

The anode side gasket is preferably arranged on the frame surface constituting the anode chamber 10. The cathode side gasket is preferably arranged on the frame surface constituting the cathode chamber 20. Electrolytic cells are connected to each other such that the anode side gasket included in one electrolytic cell and the cathode side gasket of an electrolytic cell adjacent to the cell sandwich the ion exchange membrane 2 (see Figure 104). These gaskets can impart airtightness to connecting points when the plurality of electrolytic cells 1 is connected in series via the ion exchange membrane 2.

The gaskets form a seal between the ion exchange membrane and electrolytic cells. Specific examples of the gaskets include picture frame-like rubber sheets at the center of which an aperture portion is formed. The gaskets are required to have resistance against corrosive electrolyte solutions or produced gas and be usable for a long period. Thus, in respect of chemical resistance and hardness, vulcanized products and peroxide-crosslinked products of ethylene-propylene-diene rubber (EPDM rubber) and ethylene-propylene rubber (EPM rubber) are usually used as the gaskets. Alternatively, gaskets of which region to be in contact with liquid (liquid contact portion) is covered with a fluorine-containing resin such as polytetrafluoroethylene (PTFE) and tetrafluoroethylene-perfluoroalkyl vinyl ether copolymers (PFA) may be employed as required. These gaskets each may have an aperture portion so as not to inhibit the flow of the electrolyte solution, and the shape of the aperture portion is not particularly limited. For example, a picture frame-like gasket is attached with an adhesive or the like along the peripheral edge of each aperture portion of the anode chamber frame constituting the anode chamber 10 or the cathode chamber frame constituting the cathode chamber 20. Then, for example, in the case where the two electrolytic cells 1 are connected via the ion exchange membrane 2 (see Figure 104), each electrolytic cell 1 onto which the gasket is attached should be tightened via ion exchange membrane 2. This tightening can prevent the electrolyte solution, alkali metal hydroxide, chlorine gas, hydrogen gas, and the like generated from electrolysis from leaking out of the electrolytic cells 1.

### [Laminate]

The electrode for electrolysis in the present embodiment is used as a laminate of a membrane such as an ion exchange membrane or a microporous membrane. That is, the laminate in the present embodiment comprises the electrode for electrolysis and a new membrane. The new membrane is not particularly limited as long as being separate from the membrane in the existing electrolyzer, and various known "membranes" can be used. The material, form, physical properties, and the like of the new membrane may be similar to those of the membrane in the existing electrolyzer. Specific examples of the electrode for electrolysis and the membrane will be detailed below.

### (Step (A))

In the step (A) of the present embodiment, the electrode for electrolysis and a new membrane are integrated at a temperature at which the membrane does not melt to thereby obtain a laminate.

In this context, "a temperature at which the membrane does not melt" is a temperature below the softening point of the membrane.

The temperature may vary depending on the material constituting the membrane but is preferably 0 to 100°C, more preferably 5 to 80°C, further preferably 10 to 50°C.

The integration described above is preferably performed under normal pressure.

In the present technology in general, as a specific method for the above integration, which are not particularly limited, all kinds of methods, except for typical methods for melting the membrane such as thermal compression can be used. However, in the claimed invention the method employed is a method in which a liquid is interposed between an electrode for electrolysis mentioned below and the membrane and the surface tension of the liquid is used to integrate the electrode and the "membrane.

### [Step (B)]

In the step (B) in the present embodiment, the membrane in the existing electrolyzer is replaced by a laminate after the step (A). The replacing method is not particularly limited, and examples thereof include a method in which, first in the existing electrolyzer, a fixed state of the adjacent electrolytic cell and ion exchange membrane by means of a press device is released to provide a gap between the electrolytic cell and the ion exchange membrane, then, the existing ion exchange membrane to be renewed is removed, then, a laminate is inserted into the gap, and the members are coupled again by means of the press device. By means of the method, a laminate is arranged on the surface of the anode or the cathode of the existing electrolyzer, and the characteristics of the ion exchange membrane and the anode and/or cathode can be renewed.

### [Electrode for electrolysis]

In the present embodiment, the electrode for electrolysis is not particularly limited as long as the electrode can be integrated with a new membrane as mentioned above, that is, is integratable. The electrode for electrolysis may be an electrode that serves as the cathode in the electrolyzer or may be an electrode that serves as an anode. As the material, form, and the like of the electrode for electrolysis, those suitable may be appropriately selected, in consideration of the steps (A) and (B) in the present embodiment, the configuration of the electrolyzer, and the like. Hereinbelow, preferable aspects of the electrode for electrolysis in the present embodiment will be described, but these are merely exemplary aspects preferable for integration with a new membrane. Electrodes for electrolysis other than the aspects mentioned below can be appropriately employed.

The electrode for electrolysis in the present embodiment has a force applied per unit mass·unit area of preferably 1.6 N/(mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less from the viewpoint of enabling a good handling property to be provided and having a good adhesive force to a membrane such as an ion exchange membrane and a microporous membrane, a feed conductor (a degraded electrode and an electrode having no catalyst coating), and the like. The force applied is even still more preferably 1.1 N/mg·cm² or less, further still more preferably 1.10 N/mg·cm² or less, particularly preferably 1.0 N/mg·cm² or less, especially preferably 1.00 N/mg·cm² or less.

From the viewpoint of further improving the electrolytic performance, the force is preferably more than 0.005 N/(mg·cm²), more preferably 0.08 N/(mg·cm²) or more, further preferably 0.1 N/mg·cm² or more, further more preferably 0.14 N/(mg·cm²) or more. The force is further more preferably 0.2 N/(mg·cm²) or more from the viewpoint of further facilitating handling in a large size (e.g., a size of 1.5 m × 2.5 m).

The force applied described above can be within the range described above by appropriately adjusting an opening ratio described below, thickness of the electrode, arithmetic average surface roughness, and the like, for example. More specifically, for example, a higher opening ratio tends to lead to a smaller force applied, and a lower opening ratio tends to lead to a larger force applied.

The mass per unit is preferably 48 mg/cm² or less, more preferably 30 mg/cm² or less, further preferably 20 mg/cm² or less from the viewpoint of enabling a good handling property to be provided, having a good adhesive force to a membrane such as an ion exchange membrane and a microporous membrane, a degraded electrode, a feed conductor having no catalyst coating, and of economy, and furthermore is preferably 15 mg/cm² or less from the comprehensive viewpoint including handling property, adhesion, and economy. The lower limit value is not particularly limited but is of the order of 1 mg/cm², for example.

The mass per unit area described above can be within the range described above by appropriately adjusting an opening ratio described below, thickness of the electrode, and the like, for example. More specifically, for example, when the thickness is constant, a higher opening ratio tends to lead to a smaller mass per unit area, and a lower opening ratio tends to lead to a larger mass per unit area.

The force applied can be measured by methods (i) or (ii) described below, which are as detailed in Examples. As for the force applied, the value obtained by the measurement of the method (i) (also referred to as "the force applied (1)") and the value obtained by the measurement of the method (ii) (also referred to as "the force applied (2)") may be the same or different, and either of the values is preferably less than 1.5 N/mg·cm².

### [Method (i)]

A nickel plate obtained by blast processing with alumina of grain-size number 320 (thickness 1.2 mm, 200 mm square), an ion exchange membrane which is obtained by applying inorganic material particles and a binder to both surfaces of a membrane of a perfluorocarbon polymer into which an ion exchange group is introduced (170 mm square, the detail of the ion exchange membrane referred to herein is as described in Examples), and a sample of electrode (130 mm square) are laminated in this order. After this laminate is sufficiently immersed in pure water, excess water deposited on the surface of the laminate is removed to obtain a sample for measurement. The arithmetic average surface roughness (Ra) of the nickel plate after the blast treatment is 0.5 to 0.8 µm. The specific method for calculating the arithmetic average surface roughness (Ra) is as described in Examples.

Under conditions of a temperature of 23±2°C and a relative humidity of 30±5%, only the sample of electrode in this sample for measurement is raised in a vertical direction at 10 mm/minute using a tensile and compression testing machine, and the load when the sample of electrode is raised by 10 mm in a vertical direction is measured. This measurement is repeated three times, and the average value is calculated.

This average value is divided by the area of the overlapping portion of the sample of electrode and the ion exchange membrane and the mass of the portion overlapping the ion exchange membrane in the sample of electrode to calculate the force applied per unit mass·unit area (1) (N/mg·cm²).

The force applied per unit mass·unit area (1) obtained by the method (i) is preferably 1.6 N/(mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less from the viewpoint of enabling a good handling property to be provided and having a good adhesive force to a membrane such as an ion exchange membrane and a microporous membrane, a degraded electrode, and a feed conductor having no catalyst coating. The force applied is even still more preferably 1.1 N/mg·cm² or less, further still more preferably 1.10 N/mg·cm² or less, particularly preferably 1.0 N/mg·cm² or less, especially preferably 1.00 N/mg·cm² or less. The force is preferably more than 0.005 N/(mg·cm²), more preferably 0.08 N/(mg·cm²) or more, further preferably 0.1 N/(mg·cm²) or more from the viewpoint of further improving the electrolytic performance, and furthermore, is further more preferably 0.14 N/(mg·cm²), still more preferably 0.2 N/(mg·cm²) or more from the viewpoint of further facilitating handling in a large size (e.g., a size of 1.5 m × 2.5 m).

### [Method (ii)]

A nickel plate obtained by blast processing with alumina of grain-size number 320 (thickness 1.2 mm, 200 mm square, a nickel plate similar to that of the method (i) above) and a sample of electrode (130 mm square) are laminated in this order. After this laminate is sufficiently immersed in pure water, excess water deposited on the surface of the laminate is removed to obtain a sample for measurement. Under conditions of a temperature of 23±2°C and a relative humidity of 30±5%, only the sample of electrode in this sample for measurement is raised in a vertical direction at 10 mm/minute using a tensile and compression testing machine, and the load when the sample of electrode is raised by 10 mm in a vertical direction is measured. This measurement is repeated three times, and the average value is calculated.

This average value is divided by the area of the overlapping portion of the sample of electrode and the nickel plate and the mass of the sample of electrode in the portion overlapping the nickel plate to calculate the adhesive force per unit mass·unit area (2) (N/mg·cm²).

The force applied per unit mass·unit area (2) obtained by the method (ii) is preferably 1.6 N/(mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less from the viewpoint of enabling a good handling property to be provided and having a good adhesive force to a membrane such as an ion exchange membrane and a microporous membrane, a degraded electrode, and a feed conductor having no catalyst coating. The force applied is even still more preferably 1.1 N/mg·cm² or less, further still more preferably 1.10 N/mg·cm² or less, particularly preferably 1.0 N/mg·cm² or less, especially preferably 1.00 N/mg·cm² or less. Further, the force is preferably more than 0.005 N/(mg·cm²), more preferably 0.08 N/(mg·cm²) or more, further preferably 0.1 N/(mg·cm²) or more from the viewpoint of further improving the electrolytic performance, and is further more preferably 0.14 N/(mg·cm²) or more from the viewpoint of further facilitating handling in a large size (e.g., a size of 1.5 m × 2.5 m).

The electrode for electrolysis in the present embodiment preferably includes a substrate for electrode for electrolysis and a catalyst layer. The thickness of the substrate for electrode for electrolysis (gauge thickness) is, but is not particularly limited to, preferably 300 µm or less, more preferably 205 µm or less, further preferably 155 µm or less, further more preferably 135 µm or less, even further more preferably 125 µm or less, still more preferably 120 µm or less, even still more preferably 100 µm or less from the viewpoint of enabling a good handling property to be provided, having a good adhesive force to a membrane such as an ion exchange membrane and a microporous membrane, a degraded electrode (feed conductor), and an electrode (feed conductor) having no catalyst coating, being capable of being suitably rolled in a roll and satisfactorily folded, and facilitating handling in a large size (e.g., a size of 1.5 m × 2.5 m), and is further still more preferably 50 µm or less from the viewpoint of a handling property and economy. The lower limit value is not particularly limited, but is 1 µm, for example, preferably 5 µm, more preferably 15 µm.

In the present embodiment, in order to integrate a new membrane and the electrode for electrolysis, a liquid is preferably interposed therebetween. As the liquid, any liquid, such as water and organic solvents, can be used as long as the liquid generates a surface tension. The larger the surface tension of the liquid, the larger the force applied between the new membrane and the electrode for electrolysis. Thus, a liquid having a larger surface tension is preferred. Examples of the liquid include the following (the numerical value in the parentheses is the surface tension of the liquid at 20°C) :
hexane (20.44 mN/m), acetone (23.30 mN/m), methanol (24.00 mN/m), ethanol (24.05 mN/m), ethylene glycol (50.21 mN/m), and water (72.76 mN/m).

A liquid having a large surface tension allows the new membrane and the electrode for electrolysis to be integrated (to be a laminate), and renewing of the electrode tends to be easier. The liquid between the new membrane and the electrode for electrolysis may be present in an amount such that the both adhere to each other by the surface tension. As a result, after the laminate is placed in an electrolytic cell, the liquid, if mixed into the electrolyte solution, does not affect electrolysis itself due to the small amount of the liquid.

From a practical viewpoint, a liquid having a surface tension of 24 mN/m to 80 mN/m, such as ethanol, ethylene glycol, and water, is preferably used as the liquid. Particularly preferred is water or an alkaline aqueous solution prepared by dissolving caustic soda, potassium hydroxide, lithium hydroxide, sodium hydrogen carbonate, potassium hydrogen carbonate, sodium carbonate, potassium carbonate, or the like in water. Alternatively, the surface tension can be adjusted by allowing these liquids to contain a surfactant. When a surfactant is contained, the adhesion between the new membrane and the electrode for electrolysis varies to enable the handling property to be adjusted. The surfactant is not particularly limited, and both ionic surfactants and nonionic surfactants may be used.

The proportion measured by the following method (2) of the electrode for electrolysis in the present embodiment is not particularly limited, but is preferably 90% or more, more preferably 92% or more from the viewpoint of enabling a good handling property to be provided and having a good adhesive force to a membrane such as an ion exchange membrane and a microporous membrane, a degraded electrode (feed conductor), and an electrode (feed conductor) having no catalyst coating, and further preferably 95% or more from the viewpoint of further facilitating handling in a large size (e.g., a size of 1.5 m × 2.5 m). The upper limit value is 100%.

### [Method (2)]

An ion exchange membrane (170 mm square) and a sample of electrode (130 mm square) are laminated in this order. The laminate is placed on a curved surface of a polyethylene pipe (outer diameter: 280 mm) such that the sample of electrode in this laminate is positioned outside under conditions of a temperature of 23±2°C and a relative humidity of 30±5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode is measured.

The proportion measured by the following method (3) of the electrode for electrolysis in the present embodiment is not particularly limited, but is preferably 75% or more, more preferably 80% or more from the viewpoint of enabling a good handling property to be provided, having a good adhesive force to a membrane such as an ion exchange membrane and a microporous membrane, a degraded electrode (feed conductor), and an electrode (feed conductor) having no catalyst coating, and being capable of being suitably rolled in a roll and satisfactorily folded, and is further preferably 90% or more from the viewpoint of further facilitating handling in a large size (e.g., a size of 1.5 m × 2.5 m). The upper limit value is 100%.

### [Method (3)]

An ion exchange membrane (170 mm square) and a sample of electrode (130 mm square) are laminated in this order. The laminate is placed on a curved surface of a polyethylene pipe (outer diameter: 145 mm) such that the sample of electrode in this laminate is positioned outside under conditions of a temperature of 23±2°C and a relative humidity of 30±5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode is measured.

The electrode for electrolysis in the present embodiment preferably has, but is not particularly limited to, a porous structure and an opening ratio or void ratio of 5 to 90% or less, from the viewpoint of enabling a good handling property to be provided, having a good adhesive force to a membrane such as an ion exchange membrane and a microporous membrane, a degraded electrode (feed conductor), and an electrode (feed conductor) having no catalyst coating, and preventing accumulation of gas to be generated during electrolysis. The opening ratio is more preferably 10 to 80% or less, further preferably 20 to 75%.

The opening ratio is a proportion of the opening portions per unit volume. The calculation method may differ depending on that opening portions in submicron size are considered or that only visible openings are considered. In the present embodiment, a volume V is calculated from the values of the gauge thickness, width, and length of electrode, and further, a weight W is measured to thereby enable an opening ratio A to be calculated by the following formula. $A = \left(1-\left(W/\left(V\times ρ\right)\right)\times 100\right.$

ρ is the density of the electrode material (g/cm³). For example, ρ of nickel is 8.908 g/cm³, and ρ of titanium is 4.506 g/cm³. The opening ratio can be appropriately adjusted by changing the area of metal to be perforated per unit area in the case of perforated metal, changing the values of the SW (short diameter), LW (long diameter), and feed in the case of expanded metal, changing the line diameter of metal fiber and mesh number in the case of mesh, changing the pattern of a photoresist to be used in the case of electroforming, changing the metal fiber diameter and fiber density in the case of nonwoven fabric, changing the mold for forming voids in the case of foamed metal, or the like.

Hereinbelow, a more specific embodiment of the electrode for electrolysis in the present embodiment will be described.

The electrode for electrolysis according to the present embodiment preferably includes a substrate for electrode for electrolysis and a catalyst layer. The catalyst layer may be composed of a plurality of layers as shown below or may be a single-layer configuration.

As shown in Figure 108, an electrode for electrolysis 100 according to the present embodiment includes a substrate for electrode for electrolysis 10 and a pair of first layers 20 with which both the surfaces of the substrate for electrode for electrolysis 10 are covered. The entire substrate for electrode for electrolysis 10 is preferably covered with the first layers 20. This covering is likely to improve the catalyst activity and durability of the electrode for electrolysis. One first layer 20 may be laminated only on one surface of the substrate for electrode for electrolysis 10.

Also as shown in Figure 108, the surfaces of the first layers 20 may be covered with second layers 30. The entire first layers 20 are preferably covered by the second layers 30. Alternatively, one second layer 30 may be laminated only one surface of the first layer 20.

### (Substrate for electrode for electrolysis)

As the substrate for electrode for electrolysis 10, for example, nickel, nickel alloys, stainless steel, or valve metals including titanium can be used, although not limited thereto. The substrate 10 preferably contains at least one element selected from nickel (Ni) and titanium (Ti).

When stainless steel is used in an alkali aqueous solution of a high concentration, iron and chromium are eluted and the electrical conductivity of stainless steel is of the order of one-tenth of that of nickel. In consideration of the foregoing, a substrate containing nickel (Ni) is preferable as the substrate for electrode for electrolysis.

Alternatively, when the substrate for electrode for electrolysis 10 is used in a salt solution of a high concentration near the saturation under an atmosphere in which chlorine gas is generated, the material of the substrate for electrode 10 is also preferably titanium having high corrosion resistance.

The form of the substrate for electrode for electrolysis 10 is not particularly limited, and a form suitable for the purpose can be selected. As the form, any of a perforated metal, nonwoven fabric, foamed metal, expanded metal, metal porous foil formed by electroforming, so-called woven mesh produced by knitting metal lines, and the like can be used. Among these, a perforated metal or expanded metal is preferable. Electroforming is a technique for producing a metal thin film having a precise pattern by using photolithography and electroplating in combination. It is a method including forming a pattern on a substrate with a photoresist and electroplating the portion not protected by the resist to provide a metal thin film.

As for the form of the substrate for electrode for electrolysis, a suitable specification depends on the distance between the anode and the cathode in the electrolyzer. In the case where the distance between the anode and the cathode is finite, an expanded metal or perforated metal form can be used, and in the case of a so-called zero-gap base electrolyzer, in which the ion exchange membrane is in contact with the electrode, a woven mesh produced by knitting thin lines, wire mesh, foamed metal, metal nonwoven fabric, expanded metal, perforated metal, metal porous foil, and the like can be used, although not limited thereto.

Examples of the substrate for electrode for electrolysis 10 include a metal porous foil, a wire mesh, a metal nonwoven fabric, a perforated metal, an expanded metal, and a foamed metal.

As a plate material before processed into a perforated metal or expanded metal, rolled plate materials and electrolytic foils are preferable. An electrolytic foil is preferably further subjected to a plating treatment by use of the same element as the base material thereof, as the post-treatment, to thereby form asperities on one or both of the surfaces.

The thickness of the substrate for electrode for electrolysis 10 is, as mentioned above, preferably 300 µm or less, more preferably 205 µm or less, further preferably 155 µm or less, further more preferably 135 µm or less, even further more preferably 125 µm or less, still more preferably 120 µm or less, even still more preferably 100 µm or less, and further still more preferably 50 µm or less from the viewpoint of a handling property and economy. The lower limit value is not particularly limited, but is 1 µm, for example, preferably 5 µm, more preferably 15 µm.

In the substrate for electrode for electrolysis, the residual stress during processing is preferably relaxed by annealing the substrate for electrode for electrolysis in an oxidizing atmosphere. It is preferable to form asperities using a steel grid, alumina powder, or the like on the surface of the substrate for electrode for electrolysis followed by an acid treatment to increase the surface area thereof, in order to improve the adhesion to a catalyst layer with which the surface is covered. Alternatively, it is preferable to give a plating treatment by use of the same element as the substrate to increase the surface area.

To bring the first layer 20 into close contact with the surface of the substrate for electrode for electrolysis 10, the substrate for electrode for electrolysis 10 is preferably subjected to a treatment of increasing the surface area. Examples of the treatment of increasing the surface area include a blast treatment using a cut wire, steel grid, alumina grid or the like, an acid treatment using sulfuric acid or hydrochloric acid, and a plating treatment using the same element to that of the substrate. The arithmetic average surface roughness (Ra) of the substrate surface is not particularly limited, but is preferably 0.05 µm to 50 µm, more preferably 0.1 to 10 µm, further preferably 0.1 to 8 µm.

Next, a case where the electrode for electrolysis in the present embodiment is used as an anode for common salt electrolysis will be described.

### (First layer)

In Figure 108, a first layer 20 as a catalyst layer contains at least one of ruthenium oxides, iridium oxides, and titanium oxides. Examples of the ruthenium oxide include RuO₂. Examples of the iridium oxide include IrO₂. Examples of the titanium oxide include TiO₂. The first layer 20 preferably contains two oxides: a ruthenium oxide and a titanium oxide or three oxides: a ruthenium oxide, an iridium oxide, and a titanium oxide. This makes the first layer 20 more stable and additionally improves the adhesion with the second layer 30.

When the first layer 20 contains two oxides: a ruthenium oxide and a titanium oxide, the first layer 20 contains preferably 1 to 9 mol, more preferably 1 to 4 mol of the titanium oxide based on 1 mol of the ruthenium oxide contained in the first layer 20. With the composition ratio of the two oxides in this range, the electrode for electrolysis 100 exhibits excellent durability.

When the first layer 20 contains three oxides: a ruthenium oxide, an iridium oxide, and a titanium oxide, the first layer 20 contains preferably 0.2 to 3 mol, more preferably 0.3 to 2.5 mol of the iridium oxide based on 1 mol of the ruthenium oxide contained in the first layer 20. The first layer 20 contains preferably 0.3 to 8 mol, more preferably 1 to 7 mol of the titanium oxide based on 1 mol of the ruthenium oxide contained in the first layer 20. With the composition ratio of the three oxides in this range, the electrode for electrolysis 100 exhibits excellent durability.

When the first layer 20 contains at least two of a ruthenium oxide, an iridium oxide, and a titanium oxide, these oxides preferably form a solid solution. Formation of the oxide solid solution allows the electrode for electrolysis 100 to exhibit excellent durability.

In addition to the compositions described above, oxides of various compositions can be used as long as at least one oxide of a ruthenium oxide, an iridium oxide, and titanium oxide is contained. For example, an oxide coating called DSA(R), which contains ruthenium, iridium, tantalum, niobium, titanium, tin, cobalt, manganese, platinum, and the like, can be used as the first layer 20.

The first layer 20 need not be a single layer and may include a plurality of layers. For example, the first layer 20 may include a layer containing three oxides and a layer containing two oxides. The thickness of the first layer 20 is preferably 0.05 to 10 µm, more preferably 0.1 to 8 µm.

### (Second layer)

The second layer 30 preferably contains ruthenium and titanium. This enables the chlorine overvoltage immediately after electrolysis to be further lowered.

The second layer 30 preferably contains a palladium oxide, a solid solution of a palladium oxide and platinum, or an alloy of palladium and platinum. This enables the chlorine overvoltage immediately after electrolysis to be further lowered.

A thicker second layer 30 can maintain the electrolytic performance for a longer period, but from the viewpoint of economy, the thickness is preferably 0.05 to 3 µm.

Next, a case where the electrode for electrolysis in the present embodiment is used as a cathode for common salt electrolysis will be described.

### (First layer)

Examples of components of the first layer 20 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

The first layer 20 may or may not contain at least one of platinum group metals, platinum group metal oxides, platinum group metal hydroxides, and alloys containing a platinum group metal.

When the first layer 20 contains at least one of platinum group metals, platinum group metal oxides, platinum group metal hydroxides, and alloys containing a platinum group metal, the platinum group metals, platinum group metal oxides, platinum group metal hydroxides, and alloys containing a platinum group metal preferably contain at least one platinum group metal of platinum, palladium, rhodium, ruthenium, and iridium.

As the platinum group metal, platinum is preferably contained.

As the platinum group metal oxide, a ruthenium oxide is preferably contained.

As the platinum group metal hydroxide, a ruthenium hydroxide is preferably contained.

As the platinum group metal alloy, an alloy of platinum with nickel, iron, and cobalt is preferably contained.

Further, as required, an oxide or hydroxide of a lanthanoid element is preferably contained as a second component. This allows the electrode for electrolysis 100 to exhibit excellent durability.

As the oxide or hydroxide of a lanthanoid element, at least one selected from lanthanum, cerium, praseodymium, neodymium, promethium, samarium, europium, gadolinium, terbium, and dysprosium is preferably contained.

Further, as required, an oxide or hydroxide of a transition metal is preferably contained as a third component.

Addition of the third component enables the electrode for electrolysis 100 to exhibit more excellent durability and the electrolysis voltage to be lowered.

Examples of a preferable combination include ruthenium only, ruthenium + nickel, ruthenium + cerium, ruthenium + lanthanum, ruthenium + lanthanum + platinum, ruthenium + lanthanum + palladium, ruthenium + praseodymium, ruthenium + praseodymium + platinum, ruthenium + praseodymium + platinum + palladium, ruthenium + neodymium, ruthenium + neodymium + platinum, ruthenium + neodymium + manganese, ruthenium + neodymium + iron, ruthenium + neodymium + cobalt, ruthenium + neodymium + zinc, ruthenium + neodymium + gallium, ruthenium + neodymium + sulfur, ruthenium + neodymium + lead, ruthenium + neodymium + nickel, ruthenium + neodymium + copper, ruthenium + samarium, ruthenium + samarium + manganese, ruthenium + samarium + iron, ruthenium + samarium + cobalt, ruthenium + samarium + zinc, ruthenium + samarium + gallium, ruthenium + samarium + sulfur, ruthenium + samarium + lead, ruthenium + samarium + nickel, platinum + cerium, platinum + palladium + cerium, platinum + palladium + lanthanum + cerium, platinum + iridium, platinum + palladium, platinum + iridium + palladium, platinum + nickel + palladium, platinum + nickel + ruthenium, alloys of platinum and nickel, alloys of platinum and cobalt, and alloys of platinum and iron.

When platinum group metals, platinum group metal oxides, platinum group metal hydroxides, and alloys containing a platinum group metal are not contained, the main component of the catalyst is preferably nickel element.

At least one of nickel metal, oxides, and hydroxides is preferably contained.

As the second component, a transition metal may be added. As the second component to be added, at least one element of titanium, tin, molybdenum, cobalt, manganese, iron, sulfur, zinc, copper, and carbon is preferably contained.

Examples of a preferable combination include nickel + tin, nickel + titanium, nickel + molybdenum, and nickel + cobalt.

As required, an intermediate layer can be placed between the first layer 20 and the substrate for electrode for electrolysis 10. The durability of the electrode for electrolysis 100 can be improved by placing the intermediate layer.

As the intermediate layer, those having affinity to both the first layer 20 and the substrate for electrode for electrolysis 10 are preferable. As the intermediate layer, nickel oxides, platinum group metals, platinum group metal oxides, and platinum group metal hydroxides are preferable. The intermediate layer can be formed by applying and baking a solution containing a component that forms the intermediate layer. Alternatively, a surface oxide layer also can be formed by subjecting a substrate to a thermal treatment at a temperature of 300 to 600°C in an air atmosphere. Besides, the layer can be formed by a known method such as a thermal spraying method and ion plating method.

### (Second layer)

Examples of components of the first layer 30 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

The first layer 30 may or may not contain at least one of platinum group metals, platinum group metal oxides, platinum group metal hydroxides, and alloys containing a platinum group metal. Examples of a preferable combination of elements contained in the second layer include the combinations enumerated for the first layer. The combination of the first layer and the second layer may be a combination in which the compositions are the same and the composition ratios are different or may be a combination of different compositions.

As the thickness of the catalyst layer, the total thickness of the catalyst layer formed and the intermediate layer is preferably 0.01 µm to 20 µm. With a thickness of 0.01 µm or more, the catalyst layer can sufficiently serve as the catalyst. With a thickness of 20 µm or less, it is possible to form a robust catalyst layer that is unlikely to fall off from the substrate. The thickness is more preferably 0.05 µm to 15 µm. The thickness is more preferably 0.1 µm to 10 µm. The thickness is further preferably 0.2 µm to 8 µm.

The thickness of the electrode, that is, the total thickness of the substrate for electrode for electrolysis and the catalyst layer is preferably 315 µm or less, more preferably 220 µm or less, further preferably 170 µm or less, further more preferably 150 µm or less, particularly preferably 145 µm or less, still more preferably 140 µm or less, even still more preferably 138 µm or less, further still more preferably 135 µm or less in respect of the handling property of the electrode. A thickness of 135 µm or less can provide a good handling property. Further, from a similar viewpoint as above, the thickness is preferably 130 µm or less, more preferably less than 130 µm, further preferably 115 µm or less, further more preferably 65 µm or less. The lower limit value is not particularly limited, but is preferably 1 µm or more, more preferably 5 µm or more for practical reasons, more preferably 20 µm or more. The thickness of the electrode can be determined by measurement with a digimatic thickness gauge (Mitutoyo Corporation, minimum scale 0.001 mm). The thickness of the substrate for electrode for electrolysis is measured in the same manner as the thickness of the electrode. The thickness of the catalyst layer can be determined by subtracting the thickness of the substrate for electrode for electrolysis from the thickness of the electrode.

In the present embodiment, the electrode for electrolysis preferably contains at least one catalytic component selected from the group consisting of Ru, Rh, Pd, Ir, Pt, Au, Ti, V, Cr, Mn, Fe, Co, Ni, Cu, Zn, Y, Zr, Nb, Mo, Ag, Ta, W, Re, Os, Al, In, Sn, Sb, Ga, Ge, B, C, N, O, Si, P, S, La, Ce, Pr, Nd, Pm, Sm, Eu, Gd, Tb, and Dy from the viewpoint of achieving sufficient electrolytic performance.

In the present embodiment, from the viewpoint that the electrode for electrolysis, if being an electrode having a broad elastic deformation region, can provide a better handling property and has a better adhesive force to a membrane such as an ion exchange membrane and a microporous membrane, a degraded electrode, a feed conductor having no catalyst coating, and the like, the thickness of the electrode for electrolysis is preferably 315 µm or less, more preferably 220 µm or less, further preferably 170 µm or less, further more preferably 150 µm or less, particularly preferably 145 µm or less, still more preferably 140 µm or less, even still more preferably 138 µm or less, further still more preferably 135 µm or less. A thickness of 135 µm or less can provide a good handling property. Further, from a similar viewpoint as above, the thickness is preferably 130 µm or less, more preferably less than 130 µm, further preferably 115 µm or less, further more preferably 65 µm or less. The lower limit value is not particularly limited, but is preferably 1 µm or more, more preferably 5 µm or more for practical reasons, more preferably 20 µm or more. In the present embodiment, "having a broad elastic deformation region" means that, when an electrode for electrolysis is wound to form a wound body, warpage derived from winding is unlikely to occur after the wound state is released. The thickness of the electrode for electrolysis refers to, when a catalyst layer mentioned below is included, the total thickness of both the substrate for electrode for electrolysis and the catalyst layer.

### (Method for producing electrode for electrolysis)

Next, one embodiment of the method for producing the electrode for electrolysis 100 will be described in detail.

In the present embodiment, the electrode for electrolysis 100 can be produced by forming the first layer 20, preferably the second layer 30, on the substrate for electrode for electrolysis by a method such as baking of a coating film under an oxygen atmosphere (pyrolysis), or ion plating, plating, or thermal spraying. The production method of the present embodiment as mentioned can achieve a high productivity of the electrode for electrolysis 100. Specifically, a catalyst layer is formed on the substrate for electrode for electrolysis by an application step of applying a coating liquid containing a catalyst, a drying step of drying the coating liquid, and a pyrolysis step of performing pyrolysis. Pyrolysis herein means that a metal salt which is to be a precursor is decomposed by heating into a metal or metal oxide and a gaseous substance. The decomposition product depends on the metal species to be used, type of the salt, and the atmosphere under which pyrolysis is performed, and many metals tend to form oxides in an oxidizing atmosphere. In an industrial process of producing an electrode, pyrolysis is usually performed in air, and a metal oxide or a metal hydroxide is formed in many cases.

### (Formation of first layer of anode)

### (Application step)

The first layer 20 is obtained by applying a solution in which at least one metal salt of ruthenium, iridium, and titanium is dissolved (first coating liquid) onto the substrate for electrode for electrolysis and then pyrolyzing (baking) the coating liquid in the presence of oxygen. The content of ruthenium, iridium, and titanium in the first coating liquid is substantially equivalent to that of the first layer 20.

The metal salts may be chlorides, nitrates, sulfates, metal alkoxides, and any other forms. The solvent of the first coating liquid can be selected depending on the type of the metal salt, and water and alcohols such as butanol can be used. As the solvent, water or a mixed solvent of water and an alcohol is preferable. The total metal concentration in the first coating liquid in which the metal salts are dissolved is not particularly limited, but is preferably in the range of 10 to 150 g/L in association with the thickness of the coating film to be formed by a single coating.

Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

### (Drying step and pyrolysis step)

After being applied onto the substrate for electrode for electrolysis 100, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.

The cycle of application, drying, and pyrolysis described above is repeated to form a covering (the first layer 20) to a predetermined thickness. After the first layer 20 is formed and then further post-baked for a long period as required can further improve the stability of the first layer 20.

### (Formation of second layer)

The second layer 30, which is formed as required, is obtained, for example, by applying a solution containing a palladium compound and a platinum compound or a solution containing a ruthenium compound and a titanium compound (second coating liquid) onto the first layer 20 and then pyrolyzing the coating liquid in the presence of oxygen.

### (Formation of first layer of cathode by pyrolysis method)

### (Application step)

The first layer 20 is obtained by applying a solution in which metal salts of various combination are dissolved (first coating liquid) onto the substrate for electrode for electrolysis and then pyrolyzing (baking) the coating liquid in the presence of oxygen. The content of the metal in the first coating liquid is substantially equivalent to that in the first layer 20.

The metal salts may be chlorides, nitrates, sulfates, metal alkoxides, and any other forms. The solvent of the first coating liquid can be selected depending on the type of the metal salt, and water and alcohols such as butanol can be used. As the solvent, water or a mixed solvent of water and an alcohol is preferable. The total metal concentration in the first coating liquid in which the metal salts are dissolved is not particularly limited, but is preferably in the range of 10 to 150 g/L in association with the thickness of the coating film to be formed by a single coating.

Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

### (Drying step and pyrolysis step)

After being applied onto the substrate for electrode for electrolysis 10, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.

The cycle of application, drying, and pyrolysis described above is repeated to form a covering (the first layer 20) to a predetermined thickness. After the first layer 20 is formed and then further post-baked for a long period as required can further improve the stability of the first layer 20.

### (Formation of intermediate layer)

The intermediate layer, which is formed as required, is obtained, for example, by applying a solution containing a palladium compound or platinum compound (second coating liquid) onto the substrate and then pyrolyzing the coating liquid in the presence of oxygen. Alternatively, a nickel oxide intermediate layer may be formed on the substrate surface only by heating the substrate, without applying a solution thereon.

### (Formation of first layer of cathode by ion plating)

The first layer 20 can be formed also by ion plating. An example includes a method in which the substrate is fixed in a chamber and the metal ruthenium target is irradiated with an electron beam. Evaporated metal ruthenium particles are positively charged in plasma in the chamber to deposit on the substrate negatively charged. The plasma atmosphere is argon and oxygen, and ruthenium deposits as ruthenium oxide on the substrate.

### (Formation of first layer of cathode by plating)

The first layer 20 can be formed also by a plating method.

As an example, when the substrate is used as the cathode and subjected to electrolytic plating in an electrolyte solution containing nickel and tin, alloy plating of nickel and tin can be formed.

### (Formation of first layer of cathode by thermal spraying)

The first layer 20 can be formed also by thermal spraying.

As an example, plasma spraying nickel oxide particles onto the substrate can form a catalyst layer in which metal nickel and nickel oxide are mixed.

Hereinafter, an ion exchange membrane according to one aspect of the membrane will be described in detail.

### [Ion exchange membrane]

The ion exchange membrane is not particularly limited as long as the membrane can be laminated with the electrode for electrolysis, and various ion exchange membranes may be employed. In the present embodiment, an ion exchange membrane that has a membrane body containing a hydrocarbon polymer or fluorine-containing polymer having an ion exchange group and a coating layer provided on at least one surface of the membrane body is preferably used. It is preferable that the coating layer contain inorganic material particles and a binder and the specific surface area of the coating layer be 0.1 to 10 m²/g. The ion exchange membrane having such a structure has a small influence of gas generated during electrolysis on electrolytic performance and tends to exert stable electrolytic performance.

The membrane of a perfluorocarbon polymer into which an ion exchange group is introduced described above includes either one of a sulfonic acid layer having an ion exchange group derived from a sulfo group (a group represented by -SO₃-, hereinbelow also referred to as a "sulfonic acid group") or a carboxylic acid layer having an ion exchange group derived from a carboxyl group (a group represented by -CO₂-, hereinbelow also referred to as a "carboxylic acid group"). From the viewpoint of strength and dimension stability, reinforcement core materials are preferably further included.

The inorganic material particles and binder will be described in detail in the section of description of the coating layer below.

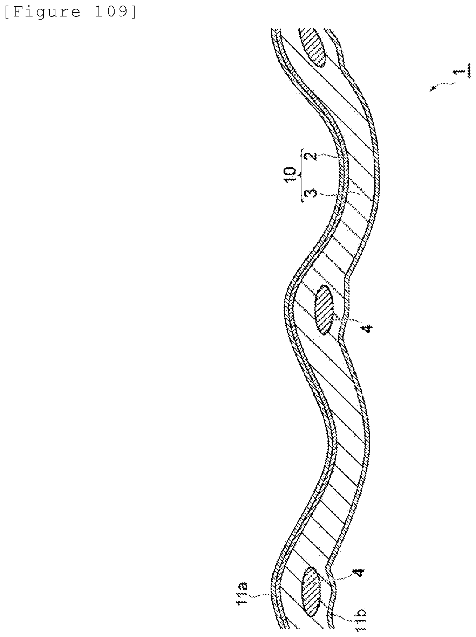

Figure 109 illustrates a cross-sectional schematic view showing one embodiment of an ion exchange membrane. An ion exchange membrane 1 has a membrane body 10 containing a hydrocarbon polymer or fluorine-containing polymer having an ion exchange group and coating layers 11a and 11b formed on both the surfaces of the membrane body 10.

In the ion exchange membrane 1, the membrane body 10 comprises a sulfonic acid layer 3 having an ion exchange group derived from a sulfo group (a group represented by -SO₃-, hereinbelow also referred to as a "sulfonic acid group") and a carboxylic acid layer 2 having an ion exchange group derived from a carboxyl group (a group represented by -CO₂-, hereinbelow also referred to as a "carboxylic acid group"), and the reinforcement core materials 4 enhance the strength and dimension stability. The ion exchange membrane 1, as comprising the sulfonic acid layer 3 and the carboxylic acid layer 2, is suitably used as an anion exchange membrane.

The ion exchange membrane may include either one of the sulfonic acid layer and the carboxylic acid layer. The ion exchange membrane may not be necessarily reinforced by reinforcement core materials, and the arrangement of the reinforcement core materials is not limited to the example in Figure 109.

### (Membrane body)

First, the membrane body 10 constituting the ion exchange membrane 1 will be described.

The membrane body 10 should be one that has a function of selectively allowing cations to permeate and comprises a hydrocarbon polymer or a fluorine-containing polymer having an ion exchange group. Its configuration and material are not particularly limited, and preferred ones can be appropriately selected.

The hydrocarbon polymer or fluorine-containing polymer having an ion exchange group in the membrane body 10 can be obtained from a hydrocarbon polymer or fluorine-containing polymer having an ion exchange group precursor capable of forming an ion exchange group by hydrolysis or the like. Specifically, for example, after a polymer comprising a main chain of a fluorinated hydrocarbon, having, as a pendant side chain, a group convertible into an ion exchange group by hydrolysis or the like (ion exchange group precursor), and being melt-processable (hereinbelow, referred to as the "fluorine-containing polymer (a)" in some cases) is used to prepare a precursor of the membrane body 10, the membrane body 10 can be obtained by converting the ion exchange group precursor into an ion exchange group.

The fluorine-containing polymer (a) can be produced, for example, by copolymerizing at least one monomer selected from the following first group and at least one monomer selected from the following second group and/or the following third group. The fluorine-containing polymer (a) can be also produced by homopolymerization of one monomer selected from any of the following first group, the following second group, and the following third group.

Examples of the monomers of the first group include vinyl fluoride compounds. Examples of the vinyl fluoride compounds include vinyl fluoride, tetrafluoroethylene, hexafluoropropylene, vinylidene fluoride, trifluoroethylene, chlorotrifluoroethylene, and perfluoro alkyl vinyl ethers. Particularly when the ion exchange membrane is used as a membrane for alkali electrolysis, the vinyl fluoride compound is preferably a perfluoro monomer, and a perfluoro monomer selected from the group consisting of tetrafluoroethylene, hexafluoropropylene, and perfluoro alkyl vinyl ethers is preferable.

Examples of the monomers of the second group include vinyl compounds having a functional group convertible into a carboxylic acid-type ion exchange group (carboxylic acid group). Examples of the vinyl compounds having a functional group convertible into a carboxylic acid group include monomers represented by CF₂=CF(OCF₂CYF)ₛ-O(CZF)ₜ-COOR, wherein s represents an integer of 0 to 2, t represents an integer of 1 to 12, Y and Z each independently represent F or CF₃, and R represents a lower alkyl group (a lower alkyl group is an alkyl group having 1 to 3 carbon atoms, for example).

Among these, compounds represented by CF₂=CF(OCF₂CYF)ₙ-O(CF₂)ₘ-COOR are preferable. Wherein n represents an integer of 0 to 2, m represents an integer of 1 to 4, Y represents F or CF₃, and R represents CH₃, C₂H₅, or C₃H₇.

When the ion exchange membrane is used as a cation exchange membrane for alkali electrolysis, a perfluoro compound is preferably at least used as the monomer, but the alkyl group (see the above R) of the ester group is lost from the polymer at the time of hydrolysis, and therefore the alkyl group (R) need not be a perfluoroalkyl group in which all hydrogen atoms are replaced by fluorine atoms.

Of the above monomers, the monomers represented below are more preferable as the monomers of the second group:

CF₂=CFOCF₂-CF(CF₃)OCF₂COOCH₃,

CF₂=CFOCF₂CF(CF₃)O(CF₂)₂COOCH₃,

CF₂=CF[OCF₂-CF(CF₃)]₂O(CF₂)₂COOCH₃,

CF₂=CFOCF₂CF(CF₃)O(CF₂)₃COOCH₃,

CF₂=CFO(CF₂)₂COOCH₃,

and

CF₂=CFO(CF₂)₃COOCH₃.

Examples of the monomers of the third group include vinyl compounds having a functional group convertible into a sulfone-type ion exchange group (sulfonic acid group). As the vinyl compounds having a functional group convertible into a sulfonic acid group, for example, monomers represented by CF₂=CFO-X-CF₂-SO₂F are preferable, wherein X represents a perfluoroalkylene group. Specific examples of these include the monomers represented below:

CF₂=CFOCF₂CF₂SO₂F,

CF₂=CFOCF₂CF(CF₃)OCF₂CF₂SO₂F,

CF₂=CFOCF₂CF(CF₃)OCF₂CF₂CF₂SO₂F,

CF₂=CF(CF₂)₂SO₂F,

CF₂=CFO[CF₂CF(CF₃)O]₂CF₂CF₂SO₂F,

and

CF₂=CFOCF₂CF(CF₂OCF₃)OCF₂CF₂SO₂F.

Among these, CF₂=CFOCF₂CF(CF₃)OCF₂CF₂CF₂SO₂F and CF₂=CFOCF₂CF(CF₃)OCF₂CF₂SO₂F are more preferable.

The copolymer obtained from these monomers can be produced by a polymerization method developed for homopolymerization and copolymerization of ethylene fluoride, particularly a general polymerization method used for tetrafluoroethylene. For example, in a nonaqueous method, a polymerization reaction can be performed in the presence of a radical polymerization initiator such as a perfluorocarbon peroxide or an azo compound under the conditions of a temperature of 0 to 200°C and a pressure of 0.1 to 20 MPa using an inert solvent such as a perfluorohydrocarbon or a chlorofluorocarbon.

In the above copolymerization, the type of combination of the above monomers and their proportion are not particularly limited and are selected and determined depending on the type and amount of the functional group desired to be imparted to the fluorine-containing polymer to be obtained. For example, when a fluorine-containing polymer containing only a carboxylic acid group is formed, at least one monomer should be selected from each of the first group and the second group described above and copolymerized. In addition, when a fluorine-containing polymer containing only a sulfonic acid group is formed, at least one monomer should be selected from each of the first group and the third group and copolymerized. Further, when a fluorine-containing polymer having a carboxylic acid group and a sulfonic acid group is formed, at least one monomer should be selected from each of the first group, the second group, and the third group described above and copolymerized. In this case, the target fluorine-containing polymer can be obtained also by separately preparing a copolymer comprising the monomers of the first group and the second group described above and a copolymer comprising the monomers of the first group and the third group described above, and then mixing the copolymers. The mixing proportion of the monomers is not particularly limited, and when the amount of the functional groups per unit polymer is increased, the proportion of the monomers selected from the second group and the third group described above should be increased.

The total ion exchange capacity of the fluorine-containing copolymer is not particularly limited, but is preferably 0.5 to 2.0 mg equivalent/g, more preferably 0.6 to 1.5 mg equivalent/g. The total ion exchange capacity herein refers to the equivalent of the exchange group per unit weight of the dry resin and can be measured by neutralization titration or the like.

In the membrane body 10 of the ion exchange membrane 1, a sulfonic acid layer 3 containing a fluorine-containing polymer having a sulfonic acid group and a carboxylic acid layer 2 containing a fluorine-containing polymer having a carboxylic acid group are laminated. By providing the membrane body 10 having such a layer configuration, selective permeability for cations such as sodium ions can be further improved.

The ion exchange membrane 1 is arranged in an electrolyzer such that, usually, the sulfonic acid layer 3 is located on the anode side of the electrolyzer and the carboxylic acid layer 2 is located on the cathode side of the electrolyzer.

The sulfonic acid layer 3 is preferably constituted by a material having low electrical resistance and has a membrane thickness larger than that of the carboxylic acid layer 2 from the viewpoint of membrane strength. The membrane thickness of the sulfonic acid layer 3 is preferably 2 to 25 times, more preferably 3 to 15 times that of the carboxylic acid layer 2.

The carboxylic acid layer 2 preferably has high anion exclusion properties even if it has a small membrane thickness. The anion exclusion properties here refer to the property of trying to hinder intrusion and permeation of anions into and through the ion exchange membrane 1. In order to raise the anion exclusion properties, it is effective to dispose a carboxylic acid layer having a small ion exchange capacity to the sulfonic acid layer.

As the fluorine-containing polymer for use in the sulfonic acid layer 3, preferable is a polymer obtained by using CF₂=CFOCF₂CF(CF₃)OCF₂CF₂SO₂F as the monomer of the third group.

As the fluorine-containing polymer for use in the carboxylic acid layer 2, preferable is a polymer obtained by using CF₂=CFOCF₂CF(CF₂)O(CF₂)₂COOCH₃ as the monomer of the second group.

### (Coating layer)

The ion exchange membrane preferably has a coating layer on at least one surface of the membrane body. As shown in Figure 109, in the ion exchange membrane 1, coating layers 11a and 11b are formed on both the surfaces of the membrane body 10.

The coating layers contain inorganic material particles and a binder.

The average particle size of the inorganic material particles is preferably 0.90 µm or more. When the average particle size of the inorganic material particles is 0.90 µm or more, durability to impurities is extremely improved, in addition to attachment of gas. That is, enlarging the average particle size of the inorganic material particles as well as satisfying the value of the specific surface area mentioned above can achieve a particularly marked effect. Irregular inorganic material particles are preferable because the average particle size and specific surface area as above are satisfied. Inorganic material particles obtained by melting and inorganic material particles obtained by grinding raw ore can be used. Inorganic material particles obtained by grinding raw ore can preferably be used.

The average particle size of the inorganic material particles can be 2 µm or less. When the average particle size of the inorganic material particles is 2 µm or less, it is possible to prevent damage of the membrane due to the inorganic material particles. The average particle size of the inorganic material particle is more preferably 0.90 to 1.2 µm.

Here, the average particle size can be measured by a particle size analyzer ("SALD2200", SHIMADZU CORPORATION).

The inorganic material particles preferably have irregular shapes. Such shapes improve resistance to impurities further. The inorganic material particles preferably have a broad particle size distribution.

The inorganic material particles preferably contain at least one inorganic material selected from the group consisting of oxides of Group IV elements in the Periodic Table, nitrides of Group IV elements in the Periodic Table, and carbides of Group IV elements in the Periodic Table. From the viewpoint of durability, zirconium oxide particle is more preferable.

The inorganic material particles are preferably inorganic material particles produced by grinding the raw ore of the inorganic material particles or inorganic material particles, as spherical particles having a uniform diameter, obtained by melt-purifying the raw ore of the inorganic material particles.

Examples of means for grinding raw ore include, but are not particularly limited to, ball mills, bead mills, colloid mills, conical mills, disc mills, edge mills, grain mills, hammer mills, pellet mills, VSI mills, Wiley mills, roller mills, and jet mills. After grinding, the particles are preferably washed. As the washing method, the particles are preferably treated with acid. This treatment can reduce impurities such as iron attached to the surface of the inorganic material particles.

The coating layer preferably contains a binder. The binder is a component that forms the coating layers by retaining the inorganic material particles on the surface of the ion exchange membrane. The binder preferably contains a fluorine-containing polymer from the viewpoint of durability to the electrolyte solution and products from electrolysis.

As the binder, a fluorine-containing polymer having a carboxylic acid group or sulfonic acid group is more preferable, from the viewpoint of durability to the electrolyte solution and products from electrolysis and adhesion to the surface of the ion exchange membrane. When a coating layer is provided on a layer containing a fluorine-containing polymer having a sulfonic acid group (sulfonic acid layer), a fluorine-containing polymer having a sulfonic acid group is further preferably used as the binder of the coating layer. Alternatively, when a coating layer is provided on a layer containing a fluorine-containing polymer having a carboxylic acid group (carboxylic acid layer), a fluorine-containing polymer having a carboxylic acid group is further preferably used as the binder of the coating layer.

In the coating layer, the content of the inorganic material particles is preferably 40 to 90% by mass, more preferably 50 to 90% by mass. The content of the binder is preferably 10 to 60% by mass, more preferably 10 to 50% by mass.

The distribution density of the coating layer in the ion exchange membrane is preferably 0.05 to 2 mg per 1 cm². When the ion exchange membrane has asperities on the surface thereof, the distribution density of the coating layer is preferably 0.5 to 2 mg per 1 cm².

As the method for forming the coating layer, which is not particularly limited, a known method can be used. An example is a method including applying by a spray or the like a coating liquid obtained by dispersing inorganic material particles in a solution containing a binder.

### (Reinforcement core materials)

The ion exchange membrane preferably has reinforcement core materials arranged inside the membrane body.

The reinforcement core materials are members that enhance the strength and dimensional stability of the ion exchange membrane. By arranging the reinforcement core materials inside the membrane body, particularly expansion and contraction of the ion exchange membrane can be controlled in the desired range. Such an ion exchange membrane does not expand or contract more than necessary during electrolysis and the like and can maintain excellent dimensional stability for a long term.

The configuration of the reinforcement core materials is not particularly limited, and, for example, the reinforcement core materials may be formed by spinning yarns referred to as reinforcement yarns. The reinforcement yarns here refer to yarns that are members constituting the reinforcement core materials, can provide the desired dimensional stability and mechanical strength to the ion exchange membrane, and can be stably present in the ion exchange membrane. By using the reinforcement core materials obtained by spinning such reinforcement yarns, better dimensional stability and mechanical strength can be provided to the ion exchange membrane.

The material of the reinforcement core materials and the reinforcement yarns used for these is not particularly limited but is preferably a material resistant to acids, alkalis, etc., and a fiber comprising a fluorine-containing polymer is preferable because long-term heat resistance and chemical resistance are required.

Examples of the fluorine-containing polymer to be used in the reinforcement core materials include polytetrafluoroethylene (PTFE), tetrafluoroethylene-perfluoroalkyl vinyl ether copolymers (PFA), tetrafluoroethylene-ethylene copolymers (ETFE), tetrafluoroethylene-hexafluoropropylene copolymers, trifluorochloroethylene-ethylene copolymers, and vinylidene fluoride polymers (PVDF). Among these, fibers comprising polytetrafluoroethylene are preferably used from the viewpoint of heat resistance and chemical resistance.

The yarn diameter of the reinforcement yarns used for the reinforcement core materials is not particularly limited, but is preferably 20 to 300 deniers, more preferably 50 to 250 deniers. The weave density (fabric count per unit length) is preferably 5 to 50/inch. The form of the reinforcement core materials is not particularly limited, for example, a woven fabric, a nonwoven fabric, and a knitted fabric are used, but is preferably in the form of a woven fabric. The thickness of the woven fabric to be used is preferably 30 to 250 µm, more preferably 30 to 150 µm.

As the woven fabric or knitted fabric, monofilaments, multifilaments, or yarns thereof, a slit yarn, or the like can be used, and various types of weaving methods such as a plain weave, a leno weave, a knit weave, a cord weave, and a seersucker can be used.

The weave and arrangement of the reinforcement core materials in the membrane body are not particularly limited, and preferred arrangement can be appropriately provided considering the size and form of the ion exchange membrane, physical properties desired for the ion exchange membrane, the use environment, and the like.

For example, the reinforcement core materials may be arranged along one predetermined direction of the membrane body, but from the viewpoint of dimensional stability, it is preferred that the reinforcement core materials be arranged along a predetermined first direction, and other reinforcement core materials be arranged along a second direction substantially perpendicular to the first direction. By arranging the plurality of reinforcement core materials substantially orthogonally inside the membrane body, it is possible to impart better dimensional stability and mechanical strength in many directions. For example, arrangement in which the reinforcement core materials arranged along the longitudinal direction (warp yarns) and the reinforcement core materials arranged along the transverse direction (weft yarns) are woven on the surface side of the membrane body is preferred. The arrangement is more preferably in the form of plain weave driven and woven by allowing warps and wefts to run over and under each other alternately, leno weave in which two warps are woven into wefts while twisted, basket weave driven and woven by inserting, into two or more parallelly-arranged warps, wefts of the same number, or the like, from the viewpoint of dimension stability, mechanical strength and easy-production.

It is preferred that particularly, the reinforcement core materials be arranged along both directions, the MD (Machine Direction) and TD (Transverse Direction) of the ion exchange membrane. In other words, the reinforcement core materials are preferably plain-woven in the MD and TD. Here, the MD refers to the direction in which the membrane body and various core materials (for example, the reinforcement core materials, reinforcement yarns, and sacrifice yarns described later) are conveyed in an ion exchange membrane production step described later (flow direction), and the TD refers to the direction substantially perpendicular to the MD. Yarns woven along the MD are referred to as MD yarns, and yarns woven along the TD are referred to as TD yarns. Usually, the ion exchange membrane used for electrolysis is rectangular, and in many cases, the longitudinal direction is the MD, and the width direction is the TD. By weaving the reinforcement core materials that are MD yarns and the reinforcement core materials that are TD yarns, it is possible to impart better dimensional stability and mechanical strength in many directions.

The arrangement interval of the reinforcement core materials is not particularly limited, and preferred arrangement can be appropriately provided considering physical properties desired for the ion exchange membrane, the use environment, and the like.

The aperture ratio for the reinforcement core materials is not particularly limited, but is preferably 30% or more, more preferably 50% or more and 90% or less. The aperture ratio is preferably 30% or more from the viewpoint of the electrochemical properties of the ion exchange membrane, and preferably 90% or less from the viewpoint of the mechanical strength of the ion exchange membrane.

The aperture ratio for the reinforcement core materials herein refers to a ratio of a total area of a surface through which substances such as ions (an electrolyte solution and cations contained therein (e.g., sodium ions)) can pass (B) to the area of either one surface of the membrane body (A) (B/A). The total area of the surface through which substances such as ions can pass (B) can refer to the total areas of regions in which in the ion exchange membrane, cations, an electrolytic solution, and the like are not blocked by the reinforcement core materials and the like contained in the ion exchange membrane.

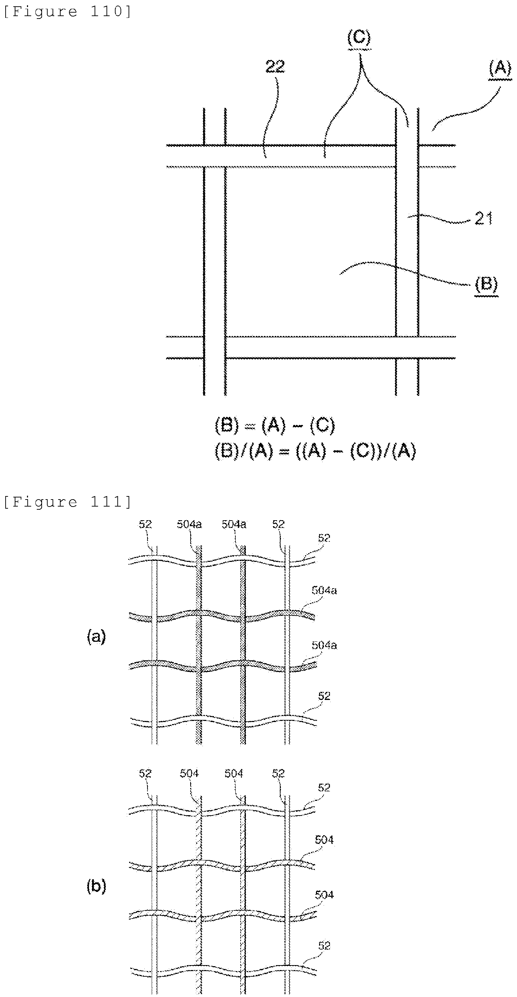

Figure 110 illustrates a schematic view for explaining the aperture ratio of reinforcement core materials constituting the ion exchange membrane. Figure 110, in which a portion of the ion exchange membrane is enlarged, shows only the arrangement of the reinforcement core materials 21 and 22 in the regions, omitting illustration of the other members.

By subtracting the total area of the reinforcement core materials (C) from the area of the region surrounded by the reinforcement core materials 21 arranged along the longitudinal direction and the reinforcement core materials 22 arranged along the transverse direction, the region including the area of the reinforcement core materials (A), the total area of regions through which substances such as ions can pass (B) in the area of the above-described region (A) can be obtained. That is, the aperture ratio can be determined by the following formula (I): $Aperture ratio = \left(B\right) / \left(A\right) = \left(\left(A\right)-\left(C\right)\right) / \left(A\right)$

Among the reinforcement core materials, a particularly preferred form is tape yarns or highly oriented monofilaments comprising PTFE from the viewpoint of chemical resistance and heat resistance. Specifically, reinforcement core materials forming a plain weave in which 50 to 300 denier tape yarns obtained by slitting a high strength porous sheet comprising PTFE into a tape form, or 50 to 300 denier highly oriented monofilaments comprising PTFE are used and which has a weave density of 10 to 50 yarns or monofilaments/inch and has a thickness in the range of 50 to 100 µm are more preferred. The aperture ratio of an ion exchange membrane comprising such reinforcement core materials is further preferably 60% or more.

Examples of the shape of the reinforcement yarns include round yarns and tape yarns.

### (Continuous holes)

The ion exchange membrane preferably has continuous holes inside the membrane body.

The continuous holes refer to holes that can be flow paths for ions generated in electrolysis and an electrolyte solution. The continuous holes, which are tubular holes formed inside the membrane body, are formed by dissolution of sacrifice core materials (or sacrifice yarns) described below. The shape, diameter, or the like of the continuous holes can be controlled by selecting the shape or diameter of the sacrifice core materials (sacrifice yarns).

Forming the continuous holes inside the ion exchange membrane can ensure the mobility of an electrolyte solution on electrolysis. The shape of the continuous holes is not particularly limited, but may be the shape of sacrifice core materials to be used for formation of the continuous holes in accordance with the production method described below.

The continuous holes are preferably formed so as to alternately pass on the anode side (sulfonic acid layer side) and the cathode side (carboxylic acid layer side) of the reinforcement core materials. With such a structure, in a portion in which continuous holes are formed on the cathode side of the reinforcement core materials, ions (e.g., sodium ions) transported through the electrolyte solution with which the continuous holes are filled can flow also on the cathode side of the reinforcement core materials. As a result, the flow of cations is not interrupted, and thus, it is possible to further reduce the electrical resistance of the ion exchange membrane.

The continuous holes may be formed along only one predetermined direction of the membrane body constituting the ion exchange membrane, but are preferably formed in both the longitudinal direction and the transverse direction of the membrane body from the viewpoint of exhibiting more stable electrolytic performance.

### [Production method]

A suitable example of a method for producing an ion exchange membrane includes a method including the following steps (1) to (6):
Step (1): the step of producing a fluorine-containing polymer having an ion exchange group or an ion exchange group precursor capable of forming an ion exchange group by hydrolysis,
Step (2): the step of weaving at least a plurality of reinforcement core materials, as required, and sacrifice yarns having a property of dissolving in an acid or an alkali, and forming continuous holes, to obtain a reinforcing material in which the sacrifice yarns are arranged between the reinforcement core materials adjacent to each other,
Step (3): the step of forming into a film the above fluorine-containing polymer having an ion exchange group or an ion exchange group precursor capable of forming an ion exchange group by hydrolysis,
Step (4): the step of embedding the above reinforcing materials, as required, in the above film to obtain a membrane body inside which the reinforcing materials are arranged,
Step (5): the step of hydrolyzing the membrane body obtained in the step (4) (hydrolysis step), and
Step (6): the step of providing a coating layer on the membrane body obtained in the step (5) (application step).

Hereinafter, each of the steps will be described in detail.

### Step (1): Step of producing fluorine-containing polymer

In the step (1), raw material monomers described in the first group to the third group above are used to produce a fluorine-containing polymer. In order to control the ion exchange capacity of the fluorine-containing polymer, the mixture ratio of the raw material monomers should be adjusted in the production of the fluorine-containing polymer forming the layers.

### Step (2): Step of producing reinforcing materials

The reinforcing material is a woven fabric obtained by weaving reinforcement yarns or the like. The reinforcing material is embedded in the membrane to thereby form reinforcement core materials. When an ion exchange membrane having continuous holes is formed, sacrifice yarns are additionally woven into the reinforcing material. The amount of the sacrifice yarns contained in this case is preferably 10 to 80% by mass, more preferably 30 to 70% by mass based on the entire reinforcing material. Weaving the sacrifice yarns can also prevent yarn slippage of the reinforcement core materials.

As the sacrifice yarns, which have solubility in the membrane production step or under an electrolysis environment, rayon, polyethylene terephthalate (PET), cellulose, polyamide, and the like are used. Monofilaments or multifilaments having a thickness of 20 to 50 deniers and comprising polyvinyl alcohol and the like are also preferred.

In the step (2), the aperture ratio, arrangement of the continuous holes, and the like can be controlled by adjusting the arrangement of the reinforcement core materials and the sacrifice yarns.

### Step (3): Step of film formation

In the step (3), the fluorine-containing polymer obtained in the step (1) is formed into a film by using an extruder. The film may be a single-layer configuration, a two-layer configuration of a sulfonic acid layer and a carboxylic acid layer as mentioned above, or a multilayer configuration of three layers or more.

Examples of the film forming method include the following:
a method in which a fluorine-containing polymer having a carboxylic acid group and a fluorine-containing polymer having a sulfonic acid group are separately formed into films; and
a method in which fluorine-containing polymer having a carboxylic acid group and a fluorine-containing polymer having a sulfonic acid group are coextruded into a composite film.

The number of each film may be more than one. Coextrusion of different films is preferred because of its contribution to an increase in the adhesive strength in the interface.

### Step (4): Step of obtaining membrane body

In the step (4), the reinforcing material obtained in the step (2) is embedded in the film obtained in the step (3) to provide a membrane body including the reinforcing material therein.

Preferable examples of the method for forming a membrane body include (i) a method in which a fluorine-containing polymer having a carboxylic acid group precursor (e.g., carboxylate functional group) (hereinafter, a layer comprising the same is referred to as the first layer) located on the cathode side and a fluorine-containing polymer having a sulfonic acid group precursor (e.g., sulfonyl fluoride functional group) (hereinafter, a layer comprising the same is referred to as the second layer) are formed into a film by a coextrusion method, and, by using a heat source and a vacuum source as required, a reinforcing material and the second layer/first layer composite film are laminated in this order on breathable heat-resistant release paper on a flat plate or drum having many pores on the surface thereof and integrated at a temperature at which each polymer melts while air among each of the layers was evacuated by reduced pressure; and (ii) a method in which, in addition to the second layer/first layer composite film, a fluorine-containing polymer having a sulfonic acid group precursor is singly formed into a film (the third layer) in advance, and, by using a heat source and a vacuum source as required, the third layer film, the reinforcement core materials, and the composite film comprising the second layer/first layer are laminated in this order on breathable heat-resistant release paper on a flat plate or drum having many pores on the surface thereof and integrated at a temperature at which each polymer melts while air among each of the layers was evacuated by reduced pressure.

Coextrusion of the first layer and the second layer herein contributes to an increase in the adhesive strength at the interface.

The method including integration under a reduced pressure is characterized by making the third layer on the reinforcing material thicker than that of a pressure-application press method. Further, since the reinforcing material is fixed on the inner surface of the membrane body, the method has a property capable of sufficiently retaining the mechanical strength of the ion exchange membrane.

The variations of lamination described here are exemplary, and coextrusion can be performed after a preferred lamination pattern (for example, the combination of layers) is appropriately selected considering the desired layer configuration of the membrane body and physical properties, and the like.

For the purpose of further improving the electric properties of the ion exchange membrane, it is also possible to additionally interpose a fourth layer comprising a fluorine-containing polymer having both a carboxylic acid group precursor and a sulfonic acid group precursor between the first layer and the second layer or to use a fourth layer comprising a fluorine-containing polymer having both a carboxylic acid group precursor and a sulfonic acid group precursor instead of the second layer.

The method for forming the fourth layer may be a method in which a fluorine-containing polymer having a carboxylic acid group precursor and a fluorine-containing polymer having a sulfonic acid group precursor are separately produced and then mixed or may be a method in which a monomer having a carboxylic acid group precursor and a monomer having a sulfonic acid group precursor are copolymerized.

When the fourth layer is used as a component of the ion exchange membrane, a coextruded film of the first layer and the fourth layer is formed, in addition to this, the third layer and the second layer are separately formed into films, and lamination may be performed by the method mentioned above. Alternatively, the three layers of the first layer/fourth layer/second layer may be simultaneously formed into a film by coextrusion.

In this case, the direction in which the extruded film flows is the MD. As mentioned above, it is possible to form a membrane body containing a fluorine-containing polymer having an ion exchange group on a reinforcing material.

Additionally, the ion exchange membrane preferably has protruded portions composed of the fluorine-containing polymer having a sulfonic acid group, that is, projections, on the surface side composed of the sulfonic acid layer. As a method for forming such projections, which is not particularly limited, a known method also can be employed including forming projections on a resin surface. A specific example of the method is a method of embossing the surface of the membrane body. For example, the above projections can be formed by using release paper embossed in advance when the composite film mentioned above, reinforcing material, and the like are integrated. In the case where projections are formed by embossing, the height and arrangement density of the projections can be controlled by controlling the emboss shape to be transferred (shape of the release paper).

### (5) Hydrolysis step

In the step (5), a step of hydrolyzing the membrane body obtained in the step (4) to convert the ion exchange group precursor into an ion exchange group (hydrolysis step) is performed.

In the step (5), it is also possible to form dissolution holes in the membrane body by dissolving and removing the sacrifice yarns included in the membrane body with acid or alkali. The sacrifice yarns may remain in the continuous holes without being completely dissolved and removed. The sacrifice yarns remaining in the continuous holes may be dissolved and removed by the electrolyte solution when the ion exchange membrane is subjected to electrolysis.

The sacrifice yarn has solubility in acid or alkali in the step of producing an ion exchange membrane or under an electrolysis environment. The sacrifice yarns are eluted out to thereby form continuous holes at corresponding sites.

The step (5) can be performed by immersing the membrane body obtained in the step (4) in a hydrolysis solution containing acid or alkali. An example of the hydrolysis solution that can be used is a mixed solution containing KOH and dimethyl sulfoxide (DMSO).

The mixed solution preferably contains KOH of 2.5 to 4.0 N and DMSO of 25 to 35% by mass.

The temperature for hydrolysis is preferably 70 to 100°C. The higher the temperature, the larger can be the apparent thickness. The temperature is more preferably 75 to 100°C.

The time for hydrolysis is preferably 10 to 120 minutes. The longer the time, the larger can be the apparent thickness. The time is more preferably 20 to 120 minutes.

The step of forming continuous holes by eluting the sacrifice yarn will be now described in more detail. Figures 111(a) and (b) are schematic views for explaining a method for forming the continuous holes of the ion exchange membrane.

Figures 111(a) and (b) show reinforcement yarns 52, sacrifice yarns 504a, and continuous holes 504 formed by the sacrifice yarns 504a only, omitting illustration of the other members such as a membrane body.

First, the reinforcement yarns 52 that are to constitute reinforcement core materials in the ion exchange membrane and the sacrifice yarns 504a for forming the continuous holes 504 in the ion exchange membrane are used as interwoven reinforcing materials. Then, in the step (5), the sacrifice yarns 504a are eluted to form the continuous holes 504.

The above method is simple because the method for interweaving the reinforcement yarns 52 and the sacrifice yarns 504a may be adjusted depending on the arrangement of the reinforcement core materials and continuous holes in the membrane body of the ion exchange membrane.

Figure 111(a) exemplifies the plain-woven reinforcing material in which the reinforcement yarns 52 and sacrifice yarns 504a are interwoven along both the longitudinal direction and the lateral direction in the paper, and the arrangement of the reinforcement yarns 52 and the sacrifice yarns 504a in the reinforcing material may be varied as required.

### (6) Application step

In the step (6), a coating layer can be formed by preparing a coating liquid containing inorganic material particles obtained by grinding raw ore or melting raw ore and a binder, applying the coating liquid onto the surface of the ion exchange membrane obtained in the step (5), and drying the coating liquid.

A preferable binder is a binder obtained by hydrolyzing a fluorine-containing polymer having an ion exchange group precursor with an aqueous solution containing dimethyl sulfoxide (DMSO) and potassium hydroxide (KOH) and then immersing the polymer in hydrochloric acid to replace the counterion of the ion exchange group by H+ (e.g., a fluorine-containing polymer having a carboxyl group or sulfo group). Thereby, the polymer is more likely to dissolve in water or ethanol mentioned below, which is preferable.

This binder is dissolved in a mixed solution of water and ethanol. The volume ratio between water and ethanol is preferably 10:1 to 1:10, more preferably 5:1 to 1:5, further preferably 2:1 to 1:2. The inorganic material particles are dispersed with a ball mill into the dissolution liquid thus obtained to thereby provide a coating liquid. In this case, it is also possible to adjust the average particle size and the like of the particles by adjusting the time and rotation speed during the dispersion. The preferable amount of the inorganic material particles and the binder to be blended is as mentioned above.

The concentration of the inorganic material particles and the binder in the coating liquid is not particularly limited, but a thin coating liquid is preferable. This enables uniform application onto the surface of the ion exchange membrane.

Additionally, a surfactant may be added to the dispersion when the inorganic material particles are dispersed. As the surfactant, nonionic surfactants are preferable, and examples thereof include HS-210, NS-210, P-210, and E-212 manufactured by NOF CORPORATION.

The coating liquid obtained is applied onto the surface of the ion exchange membrane by spray application or roll coating to thereby provide an ion exchange membrane.

### [Microporous membrane]

The microporous membrane of the present embodiment is not particularly limited as long as the membrane can be formed into a laminate with the electrode for electrolysis, as mentioned above. Various microporous membranes may be employed.

The porosity of the microporous membrane of the present embodiment is not particularly limited, but can be 20 to 90, for example, and is preferably 30 to 85. The above porosity can be calculated by the following formula: Porosity = (1 - (the weight of the membrane in a dried state) / (the weight calculated from the volume calculated from the thickness, width, and length of the membrane and the density of the membrane material)) × 100

The average pore size of the microporous membrane of the present embodiment is not particularly limited, and can be 0.01 µm to 10 µm, for example, preferably 0.05 µm to 5 µm. With respect to the average pore size, for example, the membrane is cut vertically to the thickness direction, and the section is observed with an FE-SEM. The average pore size can be obtained by measuring the diameter of about 100 pores observed and averaging the measurements.

The thickness of the microporous membrane of the present embodiment is not particularly limited, and can be 10 µm to 1000 µm, for example, preferably 50 µm to 600 µm. The above thickness can be measured by using a micrometer (manufactured by Mitutoyo Corporation) or the like, for example.

Specific examples of the microporous membrane as mentioned above include Zirfon Perl UTP 500 manufactured by Agfa (also referred to as a Zirfon membrane in the present embodiment) and those described in International Publication No. WO 2013-183584 and International Publication No. WO 2016-203701.

In the present embodiment, the membrane preferably comprises a first ion exchange resin layer and a second ion exchange resin layer having an EW (ion exchange capacity) different from that of the first ion exchange resin layer. Additionally, the membrane preferably comprises a first ion exchange resin layer and a second ion exchange resin layer having a functional group different from that of the first ion exchange resin layer. The ion exchange capacity can be adjusted by the functional group to be introduced, and functional groups that may be introduced are as mentioned above.

### (Water electrolysis)

The electrolyzer in the present embodiment, as an electrolyzer in the case of electrolyzing water, has a configuration in which the ion exchange membrane in an electrolyzer for use in the case of electrolyzing common salt mentioned above is replaced by a microporous membrane. The raw material to be supplied, which is water, is different from that for the electrolyzer in the case of electrolyzing common salt mentioned above. As for the other components, components similar to that of the electrolyzer in the case of electrolyzing common salt can be employed also in the electrolyzer in the case of electrolyzing water. Since chlorine gas is generated in the anode chamber in the case of common salt electrolysis, titanium is used as the material of the anode chamber, but in the case of water electrolysis, only oxygen gas is generated in the anode chamber. Thus, a material identical to that of the cathode chamber can be used. An example thereof is nickel. For anode coating, catalyst coating for oxygen generation is suitable. Examples of the catalyst coating include metals, oxides, and hydroxides of the platinum group metals and transition metal group metals. For example, elements such as platinum, iridium, palladium, ruthenium, nickel, cobalt, and iron can be used.

### <Seventh embodiment> (not in accordance with the invention as claimed)

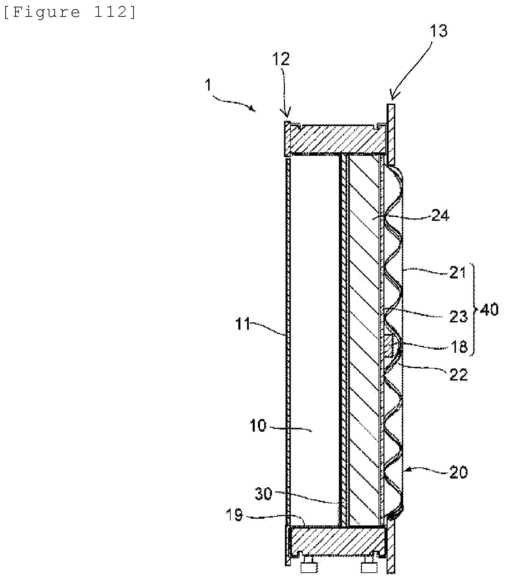

Here, a seventh embodiment of the present invention will be described in detail with reference to Figures 112 to 122.

### [Method for producing electrolyzer]

The method for producing an electrolyzer according to the first aspect (hereinafter, simply referred to as the "first aspect") of the seventh embodiment (hereinafter, in the section of <Seventh embodiment>, simply referred to as "the present embodiment") is a method for producing a new electrolyzer by arranging a laminate comprising an electrode for electrolysis and a new membrane in an existing electrolyzer comprising an anode, a cathode that is opposed to the anode, a membrane that is fixed between the anode and the cathode, and an electrolyzer frame that supports the anode, the cathode, and the membrane, the method comprising a step (A) of releasing a fixing of the membrane in the electrolyzer frame, and a step (B) of replacing the membrane by the laminate after the step (A).

As described above, according to the method for producing an electrolyzer according to the first aspect, it is possible to renew the electrode without removing each component to the outside of the electrolyzer frame, and it is possible to improve the work efficiency during electrode renewing in an electrolyzer.

A method for producing an electrolyzer according to a second aspect (hereinbelow, also simply referred to as the "second aspect") of the present embodiment is a method for producing a new electrolyzer by arranging an electrode for electrolysis in an existing electrolyzer comprising an anode, a cathode that is opposed to the anode, a membrane that is fixed between the anode and the cathode, and an electrolyzer frame that supports the anode, the cathode, and the membrane, the method comprising a step (A) of releasing a fixing of the membrane in the electrolyzer frame, and a step (B') of arranging the electrode for electrolysis between the membrane and the anode or the cathode after the step (A).

As described above, also in accordance with the method for producing an electrolyzer according to the second aspect, it is possible to renew the electrode without removing each component to the outside of the electrolyzer frame, and it is possible to improve the work efficiency during electrode renewing in an electrolyzer.

Hereinbelow, when referred to as the "method for producing an electrolyzer according to the present embodiment", the method for producing an electrolyzer according to the first aspect and the method for producing an electrolyzer according to the second aspect are incorporated.

In the method for producing an electrolyzer according to the present embodiment, the existing electrolyzer comprises an anode, a cathode that is opposed to the anode, a membrane that is arranged between the anode and the cathode, and an electrolyzer frame that supports the anode, the cathode, and the membrane as constituent members. In other words, the existing electrolyzer comprises a membrane, an electrolytic cell, and an electrolyzer frame that supports the membrane and the electrolytic cell. The existing electrolyzer is not particularly limited as long as comprising the constituent members described above, and various known configurations may be employed.

In the method for producing an electrolyzer according to the present embodiment, a new electrolyzer further comprises an electrode for electrolysis or a laminate, in addition to a member that has already served as the anode or cathode in the existing electrolyzer. That is, in the first aspect and the second aspect, the "electrode for electrolysis" arranged on production of a new electrolyzer serves as the anode or cathode and is separate from the cathode and anode in the existing electrolyzer. In the method for producing an electrolyzer according to the present embodiment, even in the case where the electrolytic performance of the anode and/or cathode has deteriorated in association with operation of the existing electrolyzer, arrangement of an electrode for electrolysis separate therefrom enables the characteristics of the anode and/or cathode to be renewed. In the first aspect, in which a laminate is used, a new ion exchange membrane is arranged in combination, and thus, the characteristics of the ion exchange membrane having characteristics deteriorated in association with operation can be renewed simultaneously. "Renewing the characteristics" referred to herein means to have characteristics comparable to the initial characteristics possessed by the existing electrolyzer before being operated or to have characteristics higher than the initial characteristics.

In the method for producing an electrolyzer according to the present embodiment, the existing electrolyzer is assumed to be an "electrolyzer that has been already operated", and the new electrolyzer is assumed to be an "electrolyzer that has not been yet operated". That is, once an electrolyzer produced as a new electrolyzer is operated, the electrolyzer becomes "the existing electrolyzer in the present embodiment". Arrangement of an electrode for electrolysis or a laminate in this existing electrolyzer provides "a new electrolyzer of the present embodiment".

Hereinafter, a case of performing common salt electrolysis by using an ion exchange membrane as the membrane is taken as an example, and one embodiment of the electrolyzer will be described in detail. In the section of <Seventh embodiment>, unless otherwise specified, "the electrolyzer in the present embodiment" incorporates both "the existing electrolyzer in the present embodiment" and "the new electrolyzer in the present embodiment".

### [Electrolytic cell]

First, the electrolytic cell, which can be used as a constituent unit of the electrolyzer in the present embodiment, will be described. Figure 112 illustrates a cross-sectional view of an electrolytic cell 1.

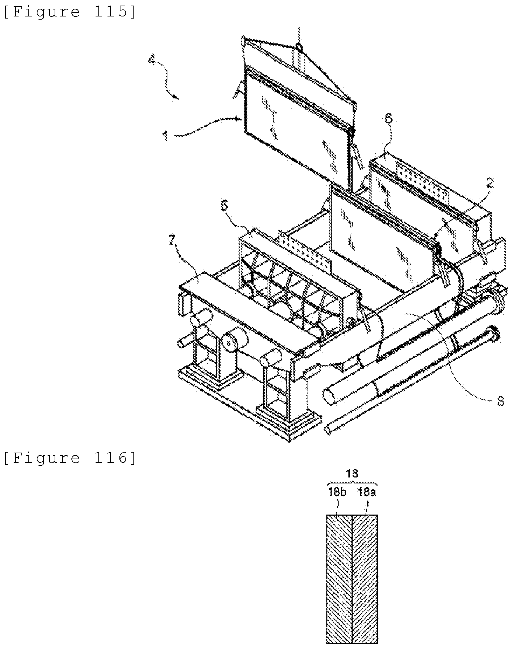

The electrolytic cell 1 comprises an anode chamber 10, a cathode chamber 20, a partition wall 30 placed between the anode chamber 10 and the cathode chamber 20, an anode 11 placed in the anode chamber 10, and a cathode 21 placed in the cathode chamber 20. As required, the electrolytic cell 1 has a substrate 18a and a reverse current absorbing layer 18b formed on the substrate 18a and may comprise a reverse current absorber 18 placed in the cathode chamber. The anode 11 and the cathode 21 belonging to the electrolytic cell 1 are electrically connected to each other. In other words, the electrolytic cell 1 comprises the following cathode structure. The cathode structure 40 comprises the cathode chamber 20, the cathode 21 placed in the cathode chamber 20, and the reverse current absorber 18 placed in the cathode chamber 20, the reverse current absorber 18 has the substrate 18a and the reverse current absorbing layer 18b formed on the substrate 18a, as shown in Figure 116, and the cathode 21 and the reverse current absorbing layer 18b are electrically connected. The cathode chamber 20 further has a collector 23, a support 24 supporting the collector, and a metal elastic body 22. The metal elastic body 22 is placed between the collector 23 and the cathode 21. The support 24 is placed between the collector 23 and the partition wall 30. The collector 23 is electrically connected to the cathode 21 via the metal elastic body 22. The partition wall 30 is electrically connected to the collector 23 via the support 24. Accordingly, the partition wall 30, the support 24, the collector 23, the metal elastic body 22, and the cathode 21 are electrically connected. The cathode 21 and the reverse current absorbing layer 18b are electrically connected. The cathode 21 and the reverse current absorbing layer may be directly connected or may be indirectly connected via the collector, the support, the metal elastic body, the partition wall, or the like. The entire surface of the cathode 21 is preferably covered with a catalyst layer for reduction reaction. The form of electrical connection may be a form in which the partition wall 30 and the support 24, the support 24 and the collector 23, and the collector 23 and the metal elastic body 22 are each directly attached and the cathode 21 is laminated on the metal elastic body 22. Examples of a method for directly attaching these constituent members to one another include welding and the like. Alternatively, the reverse current absorber 18, the cathode 21, and the collector 23 may be collectively referred to as a cathode structure 40.

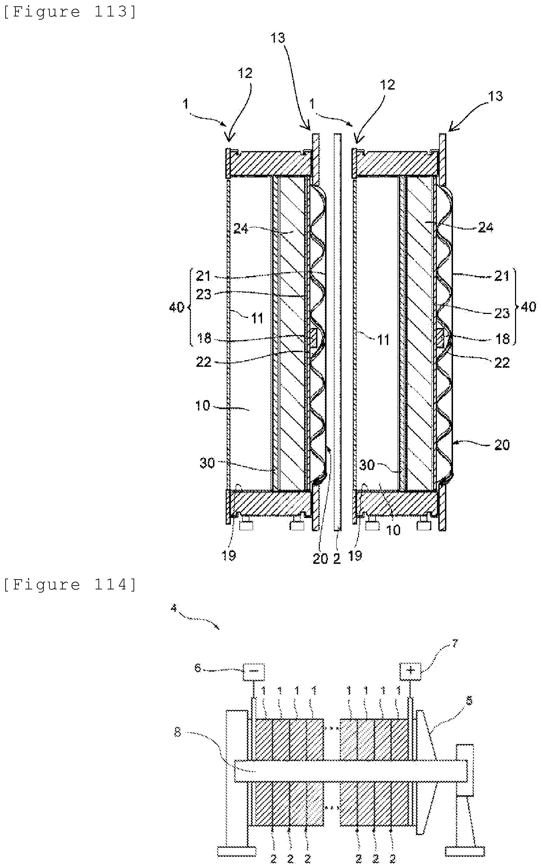

Figure 113 illustrates a cross-sectional view of two electrolytic cells 1 that are adjacent in the electrolyzer 4. Figure 114 shows an electrolyzer 4 as an existing electrolyzer. Figure 115 shows a step of assembling the electrolyzer 4 (different from steps (A) to (B) and steps (A') to (B')).

As shown in Figure 113, an electrolytic cell 1, a cation exchange membrane 2, and an electrolytic cell 1 are arranged in series in the order mentioned. An ion exchange membrane 2 is arranged between the anode chamber of one electrolytic cell 1 of the two electrolytic cells that are adjacent in the electrolyzer and the cathode chamber of the other electrolytic cell 1. That is, the anode chamber 10 of the electrolytic cell 1 and the cathode chamber 20 of the electrolytic cell 1 adjacent thereto is separated by the cation exchange membrane 2. As shown in Figure 114, the electrolyzer 4 is composed such that the plurality of electrolytic cells 1 connected in series via the ion exchange membranes 2 are supported by an electrolyzer frame 8. That is, the electrolyzer 4 is a bipolar electrolyzer comprising the plurality of electrolytic cells 1 arranged in series and ion exchange membranes 2 each arranged between adjacent electrolytic cells 1, and the electrolyzer frame 8 that supports the cells 1 and the membranes 2. As shown in Figure 115, the electrolyzer 4 is assembled by arranging the plurality of electrolytic cells 1 connected in series via the ion exchange membrane 2 and coupling the cells by means of a press device 5 in the electrolyzer frame 8. The electrolyzer frame is not particularly limited as long as being capable of supporting each of the member as well as coupling the members, and various known configurations may be employed. The device for coupling each of the members, possessed by the electrolyzer frame, is not particularly limited, and examples thereof include hydraulic presses and devices comprising a tie rod as a mechanism.

The electrolyzer 4 has an anode terminal 7 and a cathode terminal 6 to be connected to a power supply. The anode 11 of the electrolytic cell 1 located at farthest end among the plurality of electrolytic cells 1 coupled in series in the electrolyzer 4 is electrically connected to the anode terminal 7. The cathode 21 of the electrolytic cell located at the end opposite to the anode terminal 7 among the plurality of electrolytic cells 1 coupled in series in the electrolyzer 4 is electrically connected to the cathode terminal 6. The electric current during electrolysis flows from the side of the anode terminal 7, through the anode and cathode of each electrolytic cell 1, toward the cathode terminal 6. At the both ends of the coupled electrolytic cells 1, an electrolytic cell having an anode chamber only (anode terminal cell) and an electrolytic cell having a cathode chamber only (cathode terminal cell) may be arranged. In this case, the anode terminal 7 is connected to the anode terminal cell arranged at the one end, and the cathode terminal 6 is connected to the cathode terminal cell arranged at the other end.

In the case of electrolyzing brine, brine is supplied to each anode chamber 10, and pure water or a low-concentration sodium hydroxide aqueous solution is supplied to each cathode chamber 20. Each liquid is supplied from an electrolyte solution supply pipe (not shown in Figure), through an electrolyte solution supply hose (not shown in Figure), to each electrolytic cell 1. The electrolyte solution and products from electrolysis are recovered from an electrolyte solution recovery pipe (not shown in Figure). During electrolysis, sodium ions in the brine migrate from the anode chamber 10 of the one electrolytic cell 1, through the ion exchange membrane 2, to the cathode chamber 20 of the adjacent electrolytic cell 1. Thus, the electric current during electrolysis flows in the direction in which the electrolytic cells 1 are coupled in series. That is, the electric current flows, through the cation exchange membrane 2, from the anode chamber 10 toward the cathode chamber 20. As the brine is electrolyzed, chlorine gas is generated on the side of the anode 11, and sodium hydroxide (solute) and hydrogen gas are generated on the side of the cathode 21.

### (Anode chamber)

The anode chamber 10 has the anode 11 or anode feed conductor 11. The feed conductor herein referred to mean a degraded electrode (i.e., the existing electrode), an electrode having no catalyst coating, and the like. When the electrode for electrolysis in the present embodiment is inserted to the anode side, 11 serves as an anode feed conductor. When the electrode for electrolysis in the present embodiment is not inserted to the anode side, 11 serves as an anode. The anode chamber 10 preferably has an anode-side electrolyte solution supply unit that supplies an electrolyte solution to the anode chamber 10, a baffle plate that is arranged above the anode-side electrolyte solution supply unit so as to be substantially parallel or oblique to a partition wall 30, and an anode-side gas liquid separation unit that is arranged above the baffle plate to separate gas from the electrolyte solution including the gas mixed.

### (Anode)

When the electrode for electrolysis in the present embodiment is not inserted to the anode side, an anode 11 is provided in the frame of the anode chamber 10 (i.e., the anode frame). As the anode 11, a metal electrode such as so-called DSA(R) can be used. DSA is an electrode including a titanium substrate of which surface is covered with an oxide comprising ruthenium, iridium, and titanium as components.

As the form, any of a perforated metal, nonwoven fabric, foamed metal, expanded metal, metal porous foil formed by electroforming, so-called woven mesh produced by knitting metal lines, and the like can be used.

### (Anode feed conductor)

When the electrode for electrolysis in the present embodiment is inserted to the anode side, the anode feed conductor 11 is provided in the frame of the anode chamber 10. As the anode feed conductor 11, a metal electrode such as so-called DSA(R) can be used, and titanium having no catalyst coating can be also used. Alternatively, DSA having a thinner catalyst coating can be also used. Further, a used anode can be also used.

As the form, any of a perforated metal, nonwoven fabric, foamed metal, expanded metal, metal porous foil formed by electroforming, so-called woven mesh produced by knitting metal lines, and the like can be used.

### (Anode-side electrolyte solution supply unit)

The anode-side electrolyte solution supply unit, which supplies the electrolyte solution to the anode chamber 10, is connected to the electrolyte solution supply pipe. The anode-side electrolyte solution supply unit is preferably arranged below the anode chamber 10. As the anode-side electrolyte solution supply unit, for example, a pipe on the surface of which aperture portions are formed (dispersion pipe) and the like can be used. Such a pipe is more preferably arranged along the surface of the anode 11 and parallel to the bottom 19 of the electrolytic cell. This pipe is connected to an electrolyte solution supply pipe (liquid supply nozzle) that supplies the electrolyte solution into the electrolytic cell 1. The electrolyte solution supplied from the liquid supply nozzle is conveyed with a pipe into the electrolytic cell 1 and supplied from the aperture portions provided on the surface of the pipe to inside the anode chamber 10. Arranging the pipe along the surface of the anode 11 and parallel to the bottom 19 of the electrolytic cell is preferable because the electrolyte solution can be uniformly supplied to inside the anode chamber 10.

### (Anode-side gas liquid separation unit)

The anode-side gas liquid separation unit is preferably arranged above the baffle plate. The anode-side gas liquid separation unit has a function of separating produced gas such as chlorine gas from the electrolyte solution during electrolysis. Unless otherwise specified, above means the upper direction in the electrolytic cell 1 in Figure 112, and below means the lower direction in the electrolytic cell 1 in Figure 112.

During electrolysis, produced gas generated in the electrolytic cell 1 and the electrolyte solution form a mixed phase (gas-liquid mixed phase), which is then emitted out of the system. Subsequently, pressure fluctuations inside the electrolytic cell 1 cause vibration, which may result in physical damage of the ion exchange membrane. In order to prevent this event, the electrolytic cell 1 in the present embodiment is preferably provided with an anode-side gas liquid separation unit to separate the gas from the liquid. The anode-side gas liquid separation unit is preferably provided with a defoaming plate to eliminate bubbles. When the gas-liquid mixed phase flow passes through the defoaming plate, bubbles burst to thereby enable the electrolyte solution and the gas to be separated. As a result, vibration during electrolysis can be prevented.

### (Baffle plate)

The baffle plate is preferably arranged above the anode-side electrolyte solution supply unit and arranged substantially in parallel with or obliquely to the partition wall 30. The baffle plate is a partition plate that controls the flow of the electrolyte solution in the anode chamber 10. When the baffle plate is provided, it is possible to cause the electrolyte solution (brine or the like) to circulate internally in the anode chamber 10 to thereby make the concentration uniform. In order to cause internal circulation, the baffle plate is preferably arranged so as to separate the space in proximity to the anode 11 from the space in proximity to the partition wall 30. From such a viewpoint, the baffle plate is preferably placed so as to be opposed to the surface of the anode 11 and to the surface of the partition wall 30. In the space in proximity to the anode partitioned by the baffle plate, as electrolysis proceeds, the electrolyte solution concentration (brine concentration) is lowered, and produced gas such as chlorine gas is generated. This results in a difference in the gas-liquid specific gravity between the space in proximity to anode 11 and the space in proximity to the partition wall 30 partitioned by the baffle plate. By use of the difference, it is possible to promote the internal circulation of the electrolyte solution in the anode chamber 10 to thereby make the concentration distribution of the electrolyte solution in the anode chamber 10 more uniform.

Although not shown in Figure 112, a collector may be additionally provided inside the anode chamber 10. The material and configuration of such a collector may be the same as those of the collector of the cathode chamber mentioned below. In the anode chamber 10, the anode 11 per se may also serve as the collector.

### (Partition wall)

The partition wall 30 is arranged between the anode chamber 10 and the cathode chamber 20. The partition wall 30 may be referred to as a separator, and the anode chamber 10 and the cathode chamber 20 are partitioned by the partition wall 30. As the partition wall 30, one known as a separator for electrolysis can be used, and an example thereof includes a partition wall formed by welding a plate comprising nickel to the cathode side and a plate comprising titanium to the anode side.

### (Cathode chamber)

In the cathode chamber 20, when the electrode for electrolysis in the present embodiment is inserted to the cathode side, 21 serves as a cathode feed conductor. When the electrode for electrolysis in the present embodiment is not inserted to the cathode side, 21 serves as a cathode. When a reverse current absorber is included, the cathode or cathode feed conductor 21 is electrically connected to the reverse current absorber. The cathode chamber 20, similarly to the anode chamber 10, preferably has a cathode-side electrolyte solution supply unit and a cathode-side gas liquid separation unit. Among the components constituting the cathode chamber 20, components similar to those constituting the anode chamber 10 will be not described.

### (Cathode)

When the electrode for electrolysis in the present embodiment is not inserted to the cathode side, a cathode 21 is provided in the frame of the cathode chamber 20 (i.e., cathode frame). The cathode 21 preferably has a nickel substrate and a catalyst layer that covers the nickel substrate. Examples of the components of the catalyst layer on the nickel substrate include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. The cathode 21 may be subjected to a reduction treatment, as required. As the substrate of the cathode 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

### (Cathode feed conductor)

When the electrode for electrolysis in the present embodiment is inserted to the cathode side, a cathode feed conductor 21 is provided in the frame of the cathode chamber 20. The cathode feed conductor 21 may be covered with a catalytic component. The catalytic component may be a component that is originally used as the cathode and remains. Examples of the components of the catalyst layer include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. Nickel, nickel alloys, and nickel-plated iron or stainless, having no catalyst coating may be used. As the substrate of the cathode feed conductor 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

### (Reverse current absorbing layer)

A material having a redox potential less noble than the redox potential of the element for the catalyst layer of the cathode mentioned above may be selected as a material for the reverse current absorbing layer. Examples thereof include nickel and iron.

### (Collector)

The cathode chamber 20 preferably comprises the collector 23. The collector 23 improves current collection efficiency. In the present embodiment, the collector 23 is a porous plate and is preferably arranged in substantially parallel to the surface of the cathode 21.

The collector 23 preferably comprises an electrically conductive metal such as nickel, iron, copper, silver, and titanium. The collector 23 may be a mixture, alloy, or composite oxide of these metals. The collector 23 may have any form as long as the form enables the function of the collector and may have a plate or net form.

### (Metal elastic body)

Placing the metal elastic body 22 between the collector 23 and the cathode 21 presses each cathode 21 of the plurality of electrolytic cells 1 connected in series onto the ion exchange membrane 2 to reduce the distance between each anode 11 and each cathode 21. Then, it is possible to lower the voltage to be applied entirely across the plurality of electrolytic cells 1 connected in series. Lowering of the voltage enables the power consumption to be reduced. With the metal elastic body 22 placed, the pressing pressure caused by the metal elastic body 22 enables the electrode for electrolysis to be stably maintained in place when the laminate including the electrode for electrolysis in the present embodiment is placed in the electrolytic cell.

As the metal elastic body 22, spring members such as spiral springs and coils and cushioning mats may be used. As the metal elastic body 22, a suitable one may be appropriately employed, in consideration of a stress to press the ion exchange membrane and the like. The metal elastic body 22 may be provided on the surface of the collector 23 on the side of the cathode chamber 20 or may be provided on the surface of the partition wall on the side of the anode chamber 10. Both the chambers are usually partitioned such that the cathode chamber 20 becomes smaller than the anode chamber 10. Thus, from the viewpoint of the strength of the frame and the like, the metal elastic body 22 is preferably provided between the collector 23 and the cathode 21 in the cathode chamber 20. The metal elastic body 23 preferably comprises an electrically conductive metal such as nickel, iron, copper, silver, and titanium.

### (Support)

The cathode chamber 20 preferably comprises the support 24 that electrically connects the collector 23 to the partition wall 30. This can achieve an efficient current flow.

The support 24 preferably comprises an electrically conductive metal such as nickel, iron, copper, silver, and titanium. The support 24 may have any shape as long as the support can support the collector 23 and may have a rod, plate, or net shape. The support 24 has a plate shape, for example. A plurality of supports 24 are arranged between the partition wall 30 and the collector 23. The plurality of supports 24 are aligned such that the surfaces thereof are in parallel to each other. The supports 24 are arranged substantially perpendicular to the partition wall 30 and the collector 23.

### (Anode side gasket and cathode side gasket)

The anode side gasket is preferably arranged on the frame surface constituting the anode chamber 10. The cathode side gasket is preferably arranged on the frame surface constituting the cathode chamber 20. Electrolytic cells are connected to each other such that the anode side gasket included in one electrolytic cell and the cathode side gasket of an electrolytic cell adjacent to the cell sandwich the ion exchange membrane 2 (see Figure 113). These gaskets can impart airtightness to connecting points when the plurality of electrolytic cells 1 is connected in series via the ion exchange membrane 2.

The gaskets form a seal between the ion exchange membrane and electrolytic cells. Specific examples of the gaskets include picture frame-like rubber sheets at the center of which an aperture portion is formed. The gaskets are required to have resistance against corrosive electrolyte solutions or produced gas and be usable for a long period. Thus, in respect of chemical resistance and hardness, vulcanized products and peroxide-crosslinked products of ethylene-propylene-diene rubber (EPDM rubber) and ethylene-propylene rubber (EPM rubber) are usually used as the gaskets. Alternatively, gaskets of which region to be in contact with liquid (liquid contact portion) is covered with a fluorine-containing resin such as polytetrafluoroethylene (PTFE) and tetrafluoroethylene-perfluoroalkyl vinyl ether copolymers (PFA) may be employed as required. These gaskets each may have an aperture portion so as not to inhibit the flow of the electrolyte solution, and the shape of the aperture portion is not particularly limited. For example, a picture frame-like gasket is attached with an adhesive or the like along the peripheral edge of each aperture portion of the anode chamber frame constituting the anode chamber 10 or the cathode chamber frame constituting the cathode chamber 20. Then, for example, in the case where the two electrolytic cells 1 are connected via the ion exchange membrane 2 (see Figure 113), each electrolytic cell 1 onto which the gasket is attached should be tightened via ion exchange membrane 2. This tightening can prevent the electrolyte solution, alkali metal hydroxide, chlorine gas, hydrogen gas, and the like generated from electrolysis from leaking out of the electrolytic cells 1.

### [Laminate]

In the method for producing an electrolyzer according to the present embodiment, the electrode for electrolysis can be used as a laminate of a membrane such as an ion exchange membrane or a microporous membrane. That is, the laminate in the present embodiment comprises the electrode for electrolysis and a new membrane. The new membrane is not particularly limited as long as being separate from the membrane in the existing electrolyzer, and various known "membranes" can be used. The material, form, physical properties, and the like of the new membrane may be similar to those of the membrane in the existing electrolyzer. Specific examples of the electrode for electrolysis and the membrane will be detailed below.

### (Step (A))

In the step (A) in the first aspect, fixing of the membrane is released in the electrolyzer frame. "In the electrolyzer frame" means that the step (A) is performed while a state is maintained in which the electrolytic cell (that is, the member comprising the anode and the cathode) and the membrane are supported by the electrolyzer frame, and an aspect in which the electrolytic cell is removed from the electrolyzer frame is excluded. Examples of a method for releasing a fixing of the membrane include, but not particularly limited to, a method in which pressing by a press device in the electrolyzer frame is released to form a gap between the electrolytic cell and the membrane so as to enable the membrane to be removable to the outside of the electrolyzer frame. In the step (A), fixing of the membrane is preferably released in the electrolyzer frame by sliding the anode and the cathode in the arrangement direction thereof, respectively. The operation enables the membrane to be removable to the outside of the electrolyzer frame without removing the electrolytic cell to the outside of the electrolyzer frame.

### [Step (B)]

In the step (B) in the first aspect, the membrane in the existing electrolyzer is replaced by a laminate after the step (A). Examples of the replacing method include, but not particularly limited to, a method in which a gap is formed between the electrolytic cell and the ion exchange membrane, then, the existing membrane to be renewed is removed, and then, a laminate is inserted into the gap. By means of the method, a laminate can be arranged on the surface of the anode or the cathode of the existing electrolyzer, and the characteristics of the ion exchange membrane and the anode and/or cathode can be renewed.

After the step (B) is performed, the laminate is preferably fixed in the electrolyzer frame by pressing from the anode and the cathode. Specifically, after the membrane is replaced by the laminate the existing electrolyzer, the laminate and the members in the existing electrolyzer such as the electrolytic cell can be coupled by pressing again by means of the press device. By means of the method, a laminate can be fixed on the surface of the anode or the cathode in the existing electrolyzer.

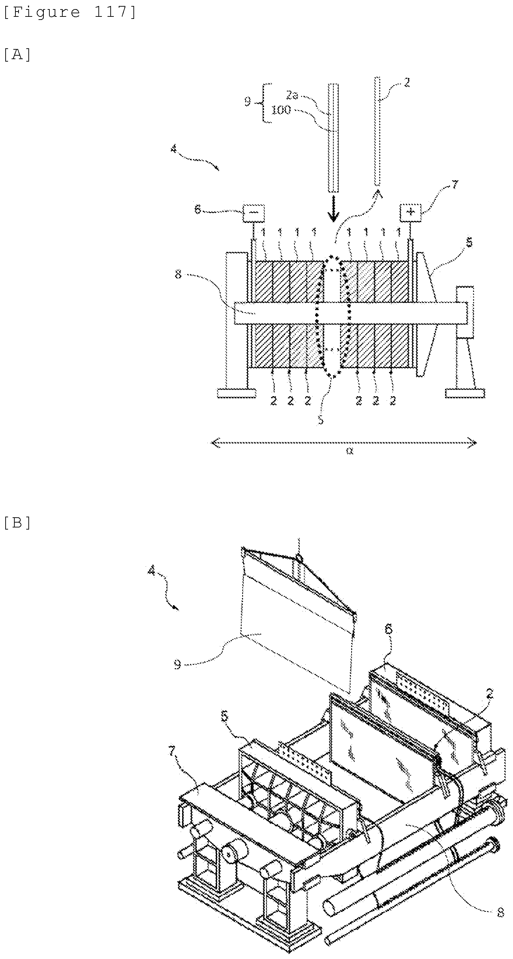

A specific example of the steps (A) to (B) in the first aspect will be described based on Figures 117(A) and (B). First, pressing by a press device 5 is released, and a plurality of electrolytic cells 1 and ion exchange membranes 2 are slid in the arrangement direction thereof α. This enables a gap S to be formed between the electrolytic cell 1 and the ion exchange membrane 2 without removing the electrolytic cell 1 to the outside of the electrolyzer frame 8, and the ion exchange membrane 2 become removable to the outside of the electrolyzer frame 8. Subsequently, the ion exchange membrane 2 to be replaced of the existing electrolyzer is removed out of the electrolyzer frame 8, and a laminate 9 of a new ion exchange membrane 2a and an electrode for electrolysis 100 instead is inserted between adjacent electrolytic cells 1 (that is, the gap S). In this manner, the laminate 9 is arranged between the adjacent electrolytic cells 1, and these components become supported by the electrolyzer frame 8. Then, the plurality of electrolytic cells 1 and the laminate 9 are coupled by being pressed in the arrangement direction α by means of the press device 5.

### (Step (A'))

Also in the step (A') in the second aspect, fixing of the membrane is released in the electrolyzer frame, as in the first aspect. Also in the step (A'), fixing of the membrane is preferably released in the electrolyzer frame by sliding the anode and the cathode in the arrangement direction thereof, respectively. The operation enables the membrane to be removable to the outside of the electrolyzer frame without removing the electrolytic cell to the outside of the electrolyzer frame.

### [Step (B')]

In the step (B') in the second aspect, an electrode for electrolysis is arranged between the membrane and the anode or cathode after the step (A'). Examples of the method for arranging an electrode for electrolysis include, but not particularly limited, a method in which, for example, a gap is formed between the electrolytic cell and the ion exchange membrane, and then, an electrode for electrolysis is inserted into the gap. By means of the method, the electrode for electrolysis can be arranged on the surface of the anode or cathode in the existing electrolyzer, and the characteristics of the anode or cathode can be renewed.

After the step (B') is performed, the electrode for electrolysis is preferably fixed in electrolyzer frame by pressing from the anode and the cathode. Specifically, after the electrode for electrolysis is arranged on the surface of the anode or cathode in the existing electrolyzer, the electrode for electrolysis and the members in the existing electrolyzer such as the electrolytic cell can be coupled by pressing again by means of the press device. By means of the method, a laminate can be fixed on the surface of the anode or the cathode in the existing electrolyzer.

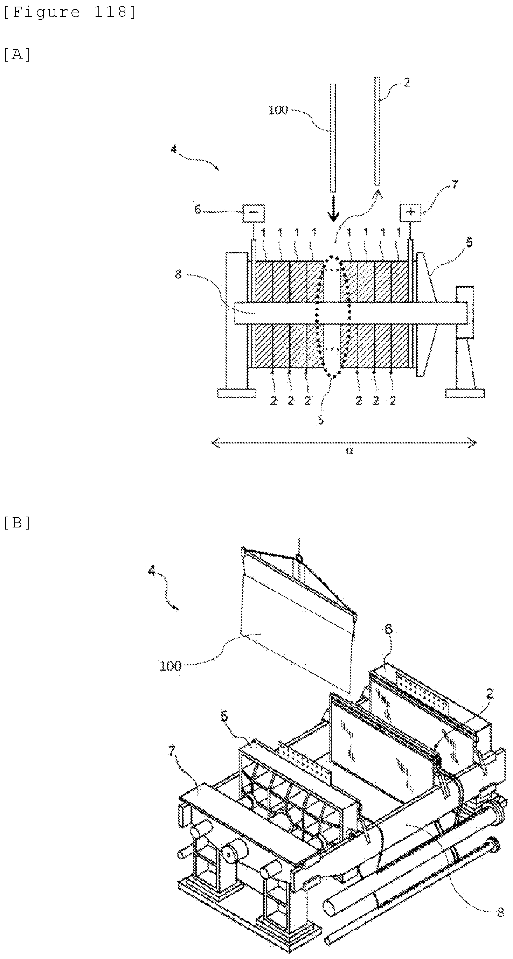

A specific example of the steps (A') to (B') in the second aspect will be described based on Figures 118(A) and (B). First, pressing by a press device 5 is released, and a plurality of electrolytic cells 1 and ion exchange membranes 2 are slid in the arrangement direction thereof α. This enables a gap S to be formed between the electrolytic cell 1 and the ion exchange membrane 2 without removing the electrolytic cell 1 to the outside of the electrolyzer frame 8. Then, the electrode for electrolysis 100 is inserted between the adjacent electrolytic cells 1 (that is, into the gap S). In this manner, the electrode for electrolysis 100 is arranged between the adjacent electrolytic cells 1, and these components become supported by the electrolyzer frame 8. Then, the plurality of electrolytic cells 1 and the electrode for electrolysis 100 are coupled by being pressed in the arrangement direction α by means of the press device 5.

In the step (B) in the first aspect, the laminate is preferably fixed on the surface of at least one of the anode and cathode at a temperature at which the laminate does not melt.

The "temperature at which the laminate does not melt" can be identified as the softening point of the new membrane. The temperature may vary depending on the material constituting the membrane but is preferably 0 to 100°C, more preferably 5 to 80°C, further preferably 10 to 50°C.

The fixing described above is preferably performed under normal pressure.

Further, the laminate is preferably obtained by integrating the electrode for electrolysis and the new membrane at a temperature at which the membrane does not melt and then used in the step (B).

As a specific method for the above integration, which are not particularly limited, all kinds of methods, except for typical methods for melting the membrane such as thermal compression can be used. One preferable example is a method in which a liquid is interposed between an electrode for electrolysis mentioned below and the membrane and the surface tension of the liquid is used to integrate the electrode and the membrane.

### [Electrode for electrolysis]

In the method for producing an electrolyzer according to the present embodiment, the electrode for electrolysis is not particularly limited as long as the electrode can be used for electrolysis. The electrode for electrolysis may be an electrode that serves as the cathode in the electrolyzer or may be an electrode that serves as an anode. As the material, form, and the like of the electrode for electrolysis, those suitable may be appropriately selected, in consideration of the configuration of the electrolyzer and the like. Hereinbelow, preferable aspects of the electrode for electrolysis in the present embodiment will be described, but these are merely exemplary preferable aspects for a case in which the electrode is integrated with a new membrane to form a laminate in the first aspect. Electrodes for electrolysis other than the aspects mentioned below can be appropriately employed.

The electrode for electrolysis in the present embodiment has a force applied per unit mass·unit area of preferably 1.6 N/(mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less from the viewpoint of enabling a good handling property to be provided and having a good adhesive force to a membrane such as an ion exchange membrane and a microporous membrane, a feed conductor (a degraded electrode and an electrode having no catalyst coating), and the like. The force applied is even still more preferably 1.1 N/mg·cm² or less, further still more preferably 1.10 N/mg·cm² or less, particularly preferably 1.0 N/mg·cm² or less, especially preferably 1.00 N/mg·cm² or less.

From the viewpoint of further improving the electrolytic performance, the force is preferably more than 0.005 N/(mg·cm²), more preferably 0.08 N/(mg·cm²) or more, further preferably 0.1 N/mg·cm² or more, further more preferably 0.14 N/(mg·cm²) or more. The force is further more preferably 0.2 N/(mg·cm²) or more from the viewpoint of further facilitating handling in a large size (e.g., a size of 1.5 m × 2.5 m).

The force applied described above can be within the range described above by appropriately adjusting an opening ratio described below, thickness of the electrode, arithmetic average surface roughness, and the like, for example. More specifically, for example, a higher opening ratio tends to lead to a smaller force applied, and a lower opening ratio tends to lead to a larger force applied.

The mass per unit is preferably 48 mg/cm² or less, more preferably 30 mg/cm² or less, further preferably 20 mg/cm² or less from the viewpoint of enabling a good handling property to be provided, having a good adhesive force to a membrane such as an ion exchange membrane and a microporous membrane, a degraded electrode, a feed conductor having no catalyst coating, and of economy, and furthermore is preferably 15 mg/cm² or less from the comprehensive viewpoint including handling property, adhesion, and economy. The lower limit value is not particularly limited but is of the order of 1 mg/cm², for example.

The mass per unit area described above can be within the range described above by appropriately adjusting an opening ratio described below, thickness of the electrode, and the like, for example. More specifically, for example, when the thickness is constant, a higher opening ratio tends to lead to a smaller mass per unit area, and a lower opening ratio tends to lead to a larger mass per unit area.

The force applied can be measured by methods (i) or (ii) described below, which are as detailed in Examples. As for the force applied, the value obtained by the measurement of the method (i) (also referred to as "the force applied (1)") and the value obtained by the measurement of the method (ii) (also referred to as "the force applied (2)") may be the same or different, and either of the values is preferably less than 1.5 N/mg·cm².

### [Method (i)]

A nickel plate obtained by blast processing with alumina of grain-size number 320 (thickness 1.2 mm, 200 mm square), an ion exchange membrane which is obtained by applying inorganic material particles and a binder to both surfaces of a membrane of a perfluorocarbon polymer into which an ion exchange group is introduced (170 mm square, the detail of the ion exchange membrane referred to herein is as described in Examples), and a sample of electrode (130 mm square) are laminated in this order. After this laminate is sufficiently immersed in pure water, excess water deposited on the surface of the laminate is removed to obtain a sample for measurement. The arithmetic average surface roughness (Ra) of the nickel plate after the blast treatment is 0.5 to 0.8 µm. The specific method for calculating the arithmetic average surface roughness (Ra) is as described in Examples.

Under conditions of a temperature of 23±2°C and a relative humidity of 30±5%, only the sample of electrode in this sample for measurement is raised in a vertical direction at 10 mm/minute using a tensile and compression testing machine, and the load when the sample of electrode is raised by 10 mm in a vertical direction is measured. This measurement is repeated three times, and the average value is calculated.

This average value is divided by the area of the overlapping portion of the sample of electrode and the ion exchange membrane and the mass of the portion overlapping the ion exchange membrane in the sample of electrode to calculate the force applied per unit mass·unit area (1) (N/mg·cm²) .

The force applied per unit mass·unit area (1) obtained by the method (i) is preferably 1.6 N/(mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less from the viewpoint of enabling a good handling property to be provided and having a good adhesive force to a membrane such as an ion exchange membrane and a microporous membrane, a degraded electrode, and a feed conductor having no catalyst coating. The force applied is even still more preferably 1.1 N/mg·cm² or less, further still more preferably 1.10 N/mg·cm² or less, particularly preferably 1.0 N/mg·cm² or less, especially preferably 1.00 N/mg·cm² or less. The force is preferably more than 0.005 N/(mg·cm²), more preferably 0.08 N/(mg·cm²) or more, further preferably 0.1 N/(mg·cm²) or more from the viewpoint of further improving the electrolytic performance, and furthermore, is further more preferably 0.14 N/(mg·cm²), still more preferably 0.2 N/(mg·cm²) or more from the viewpoint of further facilitating handling in a large size (e.g., a size of 1.5 m × 2.5 m).

### [Method (ii)]

A nickel plate obtained by blast processing with alumina of grain-size number 320 (thickness 1.2 mm, 200 mm square, a nickel plate similar to that of the method (i) above) and a sample of electrode (130 mm square) are laminated in this order. After this laminate is sufficiently immersed in pure water, excess water deposited on the surface of the laminate is removed to obtain a sample for measurement. Under conditions of a temperature of 23±2°C and a relative humidity of 30±5%, only the sample of electrode in this sample for measurement is raised in a vertical direction at 10 mm/minute using a tensile and compression testing machine, and the load when the sample of electrode is raised by 10 mm in a vertical direction is measured. This measurement is repeated three times, and the average value is calculated.

This average value is divided by the area of the overlapping portion of the sample of electrode and the nickel plate and the mass of the sample of electrode in the portion overlapping the nickel plate to calculate the adhesive force per unit mass·unit area (2) (N/mg·cm²).

The force applied per unit mass·unit area (2) obtained by the method (ii) is preferably 1.6 N/(mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less from the viewpoint of enabling a good handling property to be provided and having a good adhesive force to a membrane such as an ion exchange membrane and a microporous membrane, a degraded electrode, and a feed conductor having no catalyst coating. The force applied is even still more preferably 1.1 N/mg·cm² or less, further still more preferably 1.10 N/mg·cm² or less, particularly preferably 1.0 N/mg·cm² or less, especially preferably 1.00 N/mg·cm² or less. Further, the force is preferably more than 0.005 N/(mg·cm²), more preferably 0.08 N/(mg·cm²) or more, further preferably 0.1 N/(mg·cm²) or more from the viewpoint of further improving the electrolytic performance, and is further more preferably 0.14 N/(mg·cm²) or more from the viewpoint of further facilitating handling in a large size (e.g., a size of 1.5 m × 2.5 m).

The electrode for electrolysis in the present embodiment preferably includes a substrate for electrode for electrolysis and a catalyst layer. The thickness of the substrate for electrode for electrolysis (gauge thickness) is, but is not particularly limited to, preferably 300 µm or less, more preferably 205 µm or less, further preferably 155 µm or less, further more preferably 135 µm or less, even further more preferably 125 µm or less, still more preferably 120 µm or less, even still more preferably 100 µm or less from the viewpoint of enabling a good handling property to be provided, having a good adhesive force to a membrane such as an ion exchange membrane and a microporous membrane, a degraded electrode (feed conductor), and an electrode (feed conductor) having no catalyst coating, being capable of being suitably rolled in a roll and satisfactorily folded, and facilitating handling in a large size (e.g., a size of 1.5 m × 2.5 m), and is further still more preferably 50 µm or less from the viewpoint of a handling property and economy. The lower limit value is not particularly limited, but is 1 µm, for example, preferably 5 µm, more preferably 15 µm.

In the method for producing an electrolyzer according to the present embodiment, in order to integrate a new membrane and the electrode for electrolysis, a liquid is preferably interposed therebetween. As the liquid, any liquid, such as water and organic solvents, can be used as long as the liquid generates a surface tension. The larger the surface tension of the liquid, the larger the force applied between the new membrane and the electrode for electrolysis. Thus, a liquid having a larger surface tension is preferred. Examples of the liquid include the following (the numerical value in the parentheses is the surface tension of the liquid at 20°C):
hexane (20.44 mN/m), acetone (23.30 mN/m), methanol (24.00 mN/m), ethanol (24.05 mN/m), ethylene glycol (50.21 mN/m), and water (72.76 mN/m).

A liquid having a large surface tension allows the new membrane and the electrode for electrolysis to be integrated (to be a laminate), and renewing of the electrode tends to be easier. The liquid between the new membrane and the electrode for electrolysis may be present in an amount such that the both adhere to each other by the surface tension. As a result, after the laminate is placed in an electrolytic cell, the liquid, if mixed into the electrolyte solution, does not affect electrolysis itself due to the small amount of the liquid.

From a practical viewpoint, a liquid having a surface tension of 24 mN/m to 80 mN/m, such as ethanol, ethylene glycol, and water, is preferably used as the liquid. Particularly preferred is water or an alkaline aqueous solution prepared by dissolving caustic soda, potassium hydroxide, lithium hydroxide, sodium hydrogen carbonate, potassium hydrogen carbonate, sodium carbonate, potassium carbonate, or the like in water. Alternatively, the surface tension can be adjusted by allowing these liquids to contain a surfactant. When a surfactant is contained, the adhesion between the new membrane and the electrode for electrolysis varies to enable the handling property to be adjusted. The surfactant is not particularly limited, and both ionic surfactants and nonionic surfactants may be used.

The proportion measured by the following method (2) of the electrode for electrolysis in the present embodiment is not particularly limited, but is preferably 90% or more, more preferably 92% or more from the viewpoint of enabling a good handling property to be provided and having a good adhesive force to a membrane such as an ion exchange membrane and a microporous membrane, a degraded electrode (feed conductor), and an electrode (feed conductor) having no catalyst coating, and further preferably 95% or more from the viewpoint of further facilitating handling in a large size (e.g., a size of 1.5 m × 2.5 m). The upper limit value is 100%.

### [Method (2)]

An ion exchange membrane (170 mm square) and a sample of electrode (130 mm square) are laminated in this order. The laminate is placed on a curved surface of a polyethylene pipe (outer diameter: 280 mm) such that the sample of electrode in this laminate is positioned outside under conditions of a temperature of 23±2°C and a relative humidity of 30±5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode is measured.

The proportion measured by the following method (3) of the electrode for electrolysis in the present embodiment is not particularly limited, but is preferably 75% or more, more preferably 80% or more from the viewpoint of enabling a good handling property to be provided, having a good adhesive force to a membrane such as an ion exchange membrane and a microporous membrane, a degraded electrode (feed conductor), and an electrode (feed conductor) having no catalyst coating, and being capable of being suitably rolled in a roll and satisfactorily folded, and is further preferably 90% or more from the viewpoint of further facilitating handling in a large size (e.g., a size of 1.5 m × 2.5 m). The upper limit value is 100%.

### [Method (3)]

An ion exchange membrane (170 mm square) and a sample of electrode (130 mm square) are laminated in this order. The laminate is placed on a curved surface of a polyethylene pipe (outer diameter: 145 mm) such that the sample of electrode in this laminate is positioned outside under conditions of a temperature of 23±2°C and a relative humidity of 30±5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode is measured.

The electrode for electrolysis in the present embodiment preferably has, but is not particularly limited to, a porous structure and an opening ratio or void ratio of 5 to 90% or less, from the viewpoint of enabling a good handling property to be provided, having a good adhesive force to a membrane such as an ion exchange membrane and a microporous membrane, a degraded electrode (feed conductor), and an electrode (feed conductor) having no catalyst coating, and preventing accumulation of gas to be generated during electrolysis. The opening ratio is more preferably 10 to 80% or less, further preferably 20 to 75%.

The opening ratio is a proportion of the opening portions per unit volume. The calculation method may differ depending on that opening portions in submicron size are considered or that only visible openings are considered. In the present embodiment, a volume V is calculated from the values of the gauge thickness, width, and length of electrode, and further, a weight W is measured to thereby enable an opening ratio A to be calculated by the following formula. $A = \left(1-\left(W/\left(V\times ρ\right)\right)\times 100\right.$

ρ is the density of the electrode material (g/cm³). For example, ρ of nickel is 8.908 g/cm³, and ρ of titanium is 4.506 g/cm³. The opening ratio can be appropriately adjusted by changing the area of metal to be perforated per unit area in the case of perforated metal, changing the values of the SW (short diameter), LW (long diameter), and feed in the case of expanded metal, changing the line diameter of metal fiber and mesh number in the case of mesh, changing the pattern of a photoresist to be used in the case of electroforming, changing the metal fiber diameter and fiber density in the case of nonwoven fabric, changing the mold for forming voids in the case of foamed metal, or the like.

Hereinbelow, a more specific embodiment of the electrode for electrolysis in the present embodiment will be described.

The electrode for electrolysis according to the present embodiment preferably includes a substrate for electrode for electrolysis and a catalyst layer. The catalyst layer may be composed of a plurality of layers as shown below or may be a single-layer configuration.

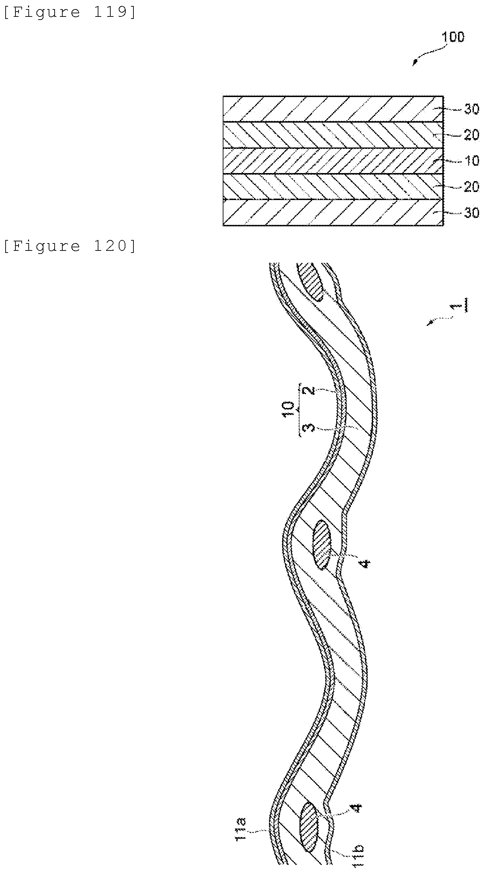

As shown in Figure 119, an electrode for electrolysis 100 according to the present embodiment includes a substrate for electrode for electrolysis 10 and a pair of first layers 20 with which both the surfaces of the substrate for electrode for electrolysis 10 are covered. The entire substrate for electrode for electrolysis 10 is preferably covered with the first layers 20. This covering is likely to improve the catalyst activity and durability of the electrode for electrolysis. One first layer 20 may be laminated only on one surface of the substrate for electrode for electrolysis 10.

Also as shown in Figure 119, the surfaces of the first layers 20 may be covered with second layers 30. The entire first layers 20 are preferably covered by the second layers 30. Alternatively, one second layer 30 may be laminated only one surface of the first layer 20.

### (Substrate for electrode for electrolysis)

As the substrate for electrode for electrolysis 10, for example, nickel, nickel alloys, stainless steel, or valve metals including titanium can be used, although not limited thereto. The substrate 10 preferably contains at least one element selected from nickel (Ni) and titanium (Ti).

When stainless steel is used in an alkali aqueous solution of a high concentration, iron and chromium are eluted and the electrical conductivity of stainless steel is of the order of one-tenth of that of nickel. In consideration of the foregoing, a substrate containing nickel (Ni) is preferable as the substrate for electrode for electrolysis.

Alternatively, when the substrate for electrode for electrolysis 10 is used in a salt solution of a high concentration near the saturation under an atmosphere in which chlorine gas is generated, the material of the substrate for electrode 10 is also preferably titanium having high corrosion resistance.

The form of the substrate for electrode for electrolysis 10 is not particularly limited, and a form suitable for the purpose can be selected. As the form, any of a perforated metal, nonwoven fabric, foamed metal, expanded metal, metal porous foil formed by electroforming, so-called woven mesh produced by knitting metal lines, and the like can be used. Among these, a perforated metal or expanded metal is preferable. Electroforming is a technique for producing a metal thin film having a precise pattern by using photolithography and electroplating in combination. It is a method including forming a pattern on a substrate with a photoresist and electroplating the portion not protected by the resist to provide a metal thin film.

As for the form of the substrate for electrode for electrolysis, a suitable specification depends on the distance between the anode and the cathode in the electrolyzer. In the case where the distance between the anode and the cathode is finite, an expanded metal or perforated metal form can be used, and in the case of a so-called zero-gap base electrolyzer, in which the ion exchange membrane is in contact with the electrode, a woven mesh produced by knitting thin lines, wire mesh, foamed metal, metal nonwoven fabric, expanded metal, perforated metal, metal porous foil, and the like can be used, although not limited thereto.

Examples of the substrate for electrode for electrolysis 10 include a metal porous foil, a wire mesh, a metal nonwoven fabric, a perforated metal, an expanded metal, and a foamed metal.

As a plate material before processed into a perforated metal or expanded metal, rolled plate materials and electrolytic foils are preferable. An electrolytic foil is preferably further subjected to a plating treatment by use of the same element as the base material thereof, as the post-treatment, to thereby form asperities on one or both of the surfaces.

The thickness of the substrate for electrode for electrolysis 10 is, as mentioned above, preferably 300 µm or less, more preferably 205 µm or less, further preferably 155 µm or less, further more preferably 135 µm or less, even further more preferably 125 µm or less, still more preferably 120 µm or less, even still more preferably 100 µm or less, and further still more preferably 50 µm or less from the viewpoint of a handling property and economy. The lower limit value is not particularly limited, but is 1 µm, for example, preferably 5 µm, more preferably 15 µm.

In the substrate for electrode for electrolysis, the residual stress during processing is preferably relaxed by annealing the substrate for electrode for electrolysis in an oxidizing atmosphere. It is preferable to form asperities using a steel grid, alumina powder, or the like on the surface of the substrate for electrode for electrolysis followed by an acid treatment to increase the surface area thereof, in order to improve the adhesion to a catalyst layer with which the surface is covered. Alternatively, it is preferable to give a plating treatment by use of the same element as the substrate to increase the surface area.

To bring the first layer 20 into close contact with the surface of the substrate for electrode for electrolysis 10, the substrate for electrode for electrolysis 10 is preferably subjected to a treatment of increasing the surface area. Examples of the treatment of increasing the surface area include a blast treatment using a cut wire, steel grid, alumina grid or the like, an acid treatment using sulfuric acid or hydrochloric acid, and a plating treatment using the same element to that of the substrate. The arithmetic average surface roughness (Ra) of the substrate surface is not particularly limited, but is preferably 0.05 µm to 50 µm, more preferably 0.1 to 10 µm, further preferably 0.1 to 8 µm.

Next, a case where the electrode for electrolysis in the present embodiment is used as an anode for common salt electrolysis will be described.

### (First layer)

In Figure 119, a first layer 20 as a catalyst layer contains at least one of ruthenium oxides, iridium oxides, and titanium oxides. Examples of the ruthenium oxide include RuO₂. Examples of the iridium oxide include IrO₂. Examples of the titanium oxide include TiO₂. The first layer 20 preferably contains two oxides: a ruthenium oxide and a titanium oxide or three oxides: a ruthenium oxide, an iridium oxide, and a titanium oxide. This makes the first layer 20 more stable and additionally improves the adhesion with the second layer 30.

When the first layer 20 contains two oxides: a ruthenium oxide and a titanium oxide, the first layer 20 contains preferably 1 to 9 mol, more preferably 1 to 4 mol of the titanium oxide based on 1 mol of the ruthenium oxide contained in the first layer 20. With the composition ratio of the two oxides in this range, the electrode for electrolysis 100 exhibits excellent durability.

When the first layer 20 contains three oxides: a ruthenium oxide, an iridium oxide, and a titanium oxide, the first layer 20 contains preferably 0.2 to 3 mol, more preferably 0.3 to 2.5 mol of the iridium oxide based on 1 mol of the ruthenium oxide contained in the first layer 20. The first layer 20 contains preferably 0.3 to 8 mol, more preferably 1 to 7 mol of the titanium oxide based on 1 mol of the ruthenium oxide contained in the first layer 20. With the composition ratio of the three oxides in this range, the electrode for electrolysis 100 exhibits excellent durability.

When the first layer 20 contains at least two of a ruthenium oxide, an iridium oxide, and a titanium oxide, these oxides preferably form a solid solution. Formation of the oxide solid solution allows the electrode for electrolysis 100 to exhibit excellent durability.

In addition to the compositions described above, oxides of various compositions can be used as long as at least one oxide of a ruthenium oxide, an iridium oxide, and titanium oxide is contained. For example, an oxide coating called DSA(R), which contains ruthenium, iridium, tantalum, niobium, titanium, tin, cobalt, manganese, platinum, and the like, can be used as the first layer 20.

The first layer 20 need not be a single layer and may include a plurality of layers. For example, the first layer 20 may include a layer containing three oxides and a layer containing two oxides. The thickness of the first layer 20 is preferably 0.05 to 10 µm, more preferably 0.1 to 8 µm.

### (Second layer)

The second layer 30 preferably contains ruthenium and titanium. This enables the chlorine overvoltage immediately after electrolysis to be further lowered.

The second layer 30 preferably contains a palladium oxide, a solid solution of a palladium oxide and platinum, or an alloy of palladium and platinum. This enables the chlorine overvoltage immediately after electrolysis to be further lowered.

A thicker second layer 30 can maintain the electrolytic performance for a longer period, but from the viewpoint of economy, the thickness is preferably 0.05 to 3 µm.

Next, a case where the electrode for electrolysis in the present embodiment is used as a cathode for common salt electrolysis will be described.

### (First layer)

Examples of components of the first layer 20 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

The first layer 20 may or may not contain at least one of platinum group metals, platinum group metal oxides, platinum group metal hydroxides, and alloys containing a platinum group metal.

When the first layer 20 contains at least one of platinum group metals, platinum group metal oxides, platinum group metal hydroxides, and alloys containing a platinum group metal, the platinum group metals, platinum group metal oxides, platinum group metal hydroxides, and alloys containing a platinum group metal preferably contain at least one platinum group metal of platinum, palladium, rhodium, ruthenium, and iridium.

As the platinum group metal, platinum is preferably contained.

As the platinum group metal oxide, a ruthenium oxide is preferably contained.

As the platinum group metal hydroxide, a ruthenium hydroxide is preferably contained.

As the platinum group metal alloy, an alloy of platinum with nickel, iron, and cobalt is preferably contained.

Further, as required, an oxide or hydroxide of a lanthanoid element is preferably contained as a second component. This allows the electrode for electrolysis 100 to exhibit excellent durability.

As the oxide or hydroxide of a lanthanoid element, at least one selected from lanthanum, cerium, praseodymium, neodymium, promethium, samarium, europium, gadolinium, terbium, and dysprosium is preferably contained.

Further, as required, an oxide or hydroxide of a transition metal is preferably contained as a third component.

Addition of the third component enables the electrode for electrolysis 100 to exhibit more excellent durability and the electrolysis voltage to be lowered.

Examples of a preferable combination include ruthenium only, ruthenium + nickel, ruthenium + cerium, ruthenium + lanthanum, ruthenium + lanthanum + platinum, ruthenium + lanthanum + palladium, ruthenium + praseodymium, ruthenium + praseodymium + platinum, ruthenium + praseodymium + platinum + palladium, ruthenium + neodymium, ruthenium + neodymium + platinum, ruthenium + neodymium + manganese, ruthenium + neodymium + iron, ruthenium + neodymium + cobalt, ruthenium + neodymium + zinc, ruthenium + neodymium + gallium, ruthenium + neodymium + sulfur, ruthenium + neodymium + lead, ruthenium + neodymium + nickel, ruthenium + neodymium + copper, ruthenium + samarium, ruthenium + samarium + manganese, ruthenium + samarium + iron, ruthenium + samarium + cobalt, ruthenium + samarium + zinc, ruthenium + samarium + gallium, ruthenium + samarium + sulfur, ruthenium + samarium + lead, ruthenium + samarium + nickel, platinum + cerium, platinum + palladium + cerium, platinum + palladium + lanthanum + cerium, platinum + iridium, platinum + palladium, platinum + iridium + palladium, platinum + nickel + palladium, platinum + nickel + ruthenium, alloys of platinum and nickel, alloys of platinum and cobalt, and alloys of platinum and iron.

When platinum group metals, platinum group metal oxides, platinum group metal hydroxides, and alloys containing a platinum group metal are not contained, the main component of the catalyst is preferably nickel element.

At least one of nickel metal, oxides, and hydroxides is preferably contained.

As the second component, a transition metal may be added. As the second component to be added, at least one element of titanium, tin, molybdenum, cobalt, manganese, iron, sulfur, zinc, copper, and carbon is preferably contained.

Examples of a preferable combination include nickel + tin, nickel + titanium, nickel + molybdenum, and nickel + cobalt.

As required, an intermediate layer can be placed between the first layer 20 and the substrate for electrode for electrolysis 10. The durability of the electrode for electrolysis 100 can be improved by placing the intermediate layer.

As the intermediate layer, those having affinity to both the first layer 20 and the substrate for electrode for electrolysis 10 are preferable. As the intermediate layer, nickel oxides, platinum group metals, platinum group metal oxides, and platinum group metal hydroxides are preferable. The intermediate layer can be formed by applying and baking a solution containing a component that forms the intermediate layer. Alternatively, a surface oxide layer also can be formed by subjecting a substrate to a thermal treatment at a temperature of 300 to 600°C in an air atmosphere. Besides, the layer can be formed by a known method such as a thermal spraying method and ion plating method.

### (Second layer)

Examples of components of the first layer 30 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

The first layer 30 may or may not contain at least one of platinum group metals, platinum group metal oxides, platinum group metal hydroxides, and alloys containing a platinum group metal. Examples of a preferable combination of elements contained in the second layer include the combinations enumerated for the first layer. The combination of the first layer and the second layer may be a combination in which the compositions are the same and the composition ratios are different or may be a combination of different compositions.

As the thickness of the catalyst layer, the total thickness of the catalyst layer formed and the intermediate layer is preferably 0.01 µm to 20 µm. With a thickness of 0.01 µm or more, the catalyst layer can sufficiently serve as the catalyst. With a thickness of 20 µm or less, it is possible to form a robust catalyst layer that is unlikely to fall off from the substrate. The thickness is more preferably 0.05 µm to 15 µm. The thickness is more preferably 0.1 µm to 10 µm. The thickness is further preferably 0.2 µm to 8 µm.

The thickness of the electrode, that is, the total thickness of the substrate for electrode for electrolysis and the catalyst layer is preferably 315 µm or less, more preferably 220 µm or less, further preferably 170 µm or less, further more preferably 150 µm or less, particularly preferably 145 µm or less, still more preferably 140 µm or less, even still more preferably 138 µm or less, further still more preferably 135 µm or less in respect of the handling property of the electrode. A thickness of 135 µm or less can provide a good handling property. Further, from a similar viewpoint as above, the thickness is preferably 130 µm or less, more preferably less than 130 µm, further preferably 115 µm or less, further more preferably 65 µm or less. The lower limit value is not particularly limited, but is preferably 1 µm or more, more preferably 5 µm or more for practical reasons, more preferably 20 µm or more. The thickness of the electrode can be determined by measurement with a digimatic thickness gauge (Mitutoyo Corporation, minimum scale 0.001 mm). The thickness of the substrate for electrode for electrolysis is measured in the same manner as the thickness of the electrode. The thickness of the catalyst layer can be determined by subtracting the thickness of the substrate for electrode for electrolysis from the thickness of the electrode.

In method for producing an electrolyzer according to the present embodiment, the electrode for electrolysis preferably contains at least one catalytic component selected from the group consisting of Ru, Rh, Pd, Ir, Pt, Au, Ti, V, Cr, Mn, Fe, Co, Ni, Cu, Zn, Y, Zr, Nb, Mo, Ag, Ta, W, Re, Os, Al, In, Sn, Sb, Ga, Ge, B, C, N, O, Si, P, S, La, Ce, Pr, Nd, Pm, Sm, Eu, Gd, Tb, and Dy from the viewpoint of achieving sufficient electrolytic performance.

In the present embodiment, from the viewpoint that the electrode for electrolysis, if being an electrode having a broad elastic deformation region, can provide a better handling property and has a better adhesive force to a membrane such as an ion exchange membrane and a microporous membrane, a degraded electrode, a feed conductor having no catalyst coating, and the like, the thickness of the electrode for electrolysis is preferably 315 µm or less, more preferably 220 µm or less, further preferably 170 µm or less, further more preferably 150 µm or less, particularly preferably 145 µm or less, still more preferably 140 µm or less, even still more preferably 138 µm or less, further still more preferably 135 µm or less. A thickness of 135 µm or less can provide a good handling property. Further, from a similar viewpoint as above, the thickness is preferably 130 µm or less, more preferably less than 130 µm, further preferably 115 µm or less, further more preferably 65 µm or less. The lower limit value is not particularly limited, but is preferably 1 µm or more, more preferably 5 µm or more for practical reasons, more preferably 20 µm or more. In the present embodiment, "having a broad elastic deformation region" means that, when an electrode for electrolysis is wound to form a wound body, warpage derived from winding is unlikely to occur after the wound state is released. The thickness of the electrode for electrolysis refers to, when a catalyst layer mentioned below is included, the total thickness of both the substrate for electrode for electrolysis and the catalyst layer.

### (Method for producing electrode for electrolysis)

Next, one embodiment of the method for producing the electrode for electrolysis 100 will be described in detail.

In the present embodiment, the electrode for electrolysis 100 can be produced by forming the first layer 20, preferably the second layer 30, on the substrate for electrode for electrolysis by a method such as baking of a coating film under an oxygen atmosphere (pyrolysis), or ion plating, plating, or thermal spraying. The production method of the present embodiment as mentioned can achieve a high productivity of the electrode for electrolysis 100. Specifically, a catalyst layer is formed on the substrate for electrode for electrolysis by an application step of applying a coating liquid containing a catalyst, a drying step of drying the coating liquid, and a pyrolysis step of performing pyrolysis. Pyrolysis herein means that a metal salt which is to be a precursor is decomposed by heating into a metal or metal oxide and a gaseous substance. The decomposition product depends on the metal species to be used, type of the salt, and the atmosphere under which pyrolysis is performed, and many metals tend to form oxides in an oxidizing atmosphere. In an industrial process of producing an electrode, pyrolysis is usually performed in air, and a metal oxide or a metal hydroxide is formed in many cases.

### (Formation of first layer of anode)

### (Application step)

The first layer 20 is obtained by applying a solution in which at least one metal salt of ruthenium, iridium, and titanium is dissolved (first coating liquid) onto the substrate for electrode for electrolysis and then pyrolyzing (baking) the coating liquid in the presence of oxygen. The content of ruthenium, iridium, and titanium in the first coating liquid is substantially equivalent to that of the first layer 20.

The metal salts may be chlorides, nitrates, sulfates, metal alkoxides, and any other forms. The solvent of the first coating liquid can be selected depending on the type of the metal salt, and water and alcohols such as butanol can be used. As the solvent, water or a mixed solvent of water and an alcohol is preferable. The total metal concentration in the first coating liquid in which the metal salts are dissolved is not particularly limited, but is preferably in the range of 10 to 150 g/L in association with the thickness of the coating film to be formed by a single coating.

Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

### (Drying step and pyrolysis step)

After being applied onto the substrate for electrode for electrolysis 100, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.

The cycle of application, drying, and pyrolysis described above is repeated to form a covering (the first layer 20) to a predetermined thickness. After the first layer 20 is formed and then further post-baked for a long period as required can further improve the stability of the first layer 20.

### (Formation of second layer)

The second layer 30, which is formed as required, is obtained, for example, by applying a solution containing a palladium compound and a platinum compound or a solution containing a ruthenium compound and a titanium compound (second coating liquid) onto the first layer 20 and then pyrolyzing the coating liquid in the presence of oxygen.

### (Formation of first layer of cathode by pyrolysis method)

### (Application step)

The first layer 20 is obtained by applying a solution in which metal salts of various combination are dissolved (first coating liquid) onto the substrate for electrode for electrolysis and then pyrolyzing (baking) the coating liquid in the presence of oxygen. The content of the metal in the first coating liquid is substantially equivalent to that in the first layer 20.

The metal salts may be chlorides, nitrates, sulfates, metal alkoxides, and any other forms. The solvent of the first coating liquid can be selected depending on the type of the metal salt, and water and alcohols such as butanol can be used. As the solvent, water or a mixed solvent of water and an alcohol is preferable. The total metal concentration in the first coating liquid in which the metal salts are dissolved is not particularly limited, but is preferably in the range of 10 to 150 g/L in association with the thickness of the coating film to be formed by a single coating.

Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

### (Drying step and pyrolysis step)

After being applied onto the substrate for electrode for electrolysis 10, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.

The cycle of application, drying, and pyrolysis described above is repeated to form a covering (the first layer 20) to a predetermined thickness. After the first layer 20 is formed and then further post-baked for a long period as required can further improve the stability of the first layer 20.

### (Formation of intermediate layer)

The intermediate layer, which is formed as required, is obtained, for example, by applying a solution containing a palladium compound or platinum compound (second coating liquid) onto the substrate and then pyrolyzing the coating liquid in the presence of oxygen. Alternatively, a nickel oxide intermediate layer may be formed on the substrate surface only by heating the substrate, without applying a solution thereon.

### (Formation of first layer of cathode by ion plating)

The first layer 20 can be formed also by ion plating.

An example includes a method in which the substrate is fixed in a chamber and the metal ruthenium target is irradiated with an electron beam. Evaporated metal ruthenium particles are positively charged in plasma in the chamber to deposit on the substrate negatively charged. The plasma atmosphere is argon and oxygen, and ruthenium deposits as ruthenium oxide on the substrate.

### (Formation of first layer of cathode by plating)

The first layer 20 can be formed also by a plating method.

As an example, when the substrate is used as the cathode and subjected to electrolytic plating in an electrolyte solution containing nickel and tin, alloy plating of nickel and tin can be formed.

### (Formation of first layer of cathode by thermal spraying)

The first layer 20 can be formed also by thermal spraying.

As an example, plasma spraying nickel oxide particles onto the substrate can form a catalyst layer in which metal nickel and nickel oxide are mixed.

Hereinafter, an ion exchange membrane according to one aspect of the membrane will be described in detail.

### [Ion exchange membrane]

The ion exchange membrane is not particularly limited as long as the membrane can be laminated with the electrode for electrolysis, and various ion exchange membranes may be employed. In the method for producing an electrolyzer according to the present embodiment, an ion exchange membrane that has a membrane body containing a hydrocarbon polymer or fluorine-containing polymer having an ion exchange group and a coating layer provided on at least one surface of the membrane body is preferably used. It is preferable that the coating layer contain inorganic material particles and a binder and the specific surface area of the coating layer be 0.1 to 10 m²/g. The ion exchange membrane having such a structure has a small influence of gas generated during electrolysis on electrolytic performance and tends to exert stable electrolytic performance.

The membrane of a perfluorocarbon polymer into which an ion exchange group is introduced described above includes either one of a sulfonic acid layer having an ion exchange group derived from a sulfo group (a group represented by -SO₃⁻, hereinbelow also referred to as a "sulfonic acid group") or a carboxylic acid layer having an ion exchange group derived from a carboxyl group (a group represented by -CO₂⁻, hereinbelow also referred to as a "carboxylic acid group"). From the viewpoint of strength and dimension stability, reinforcement core materials are preferably further included.

The inorganic material particles and binder will be described in detail in the section of description of the coating layer below.

Figure 120 illustrates a cross-sectional schematic view showing one embodiment of an ion exchange membrane. An ion exchange membrane 1 has a membrane body 10 containing a hydrocarbon polymer or fluorine-containing polymer having an ion exchange group and coating layers 11a and 11b formed on both the surfaces of the membrane body 10.

In the ion exchange membrane 1, the membrane body 10 comprises a sulfonic acid layer 3 having an ion exchange group derived from a sulfo group (a group represented by -SO₃-, hereinbelow also referred to as a "sulfonic acid group") and a carboxylic acid layer 2 having an ion exchange group derived from a carboxyl group (a group represented by -CO₂-, hereinbelow also referred to as a "carboxylic acid group"), and the reinforcement core materials 4 enhance the strength and dimension stability. The ion exchange membrane 1, as comprising the sulfonic acid layer 3 and the carboxylic acid layer 2, is suitably used as an anion exchange membrane.

The ion exchange membrane may include either one of the sulfonic acid layer and the carboxylic acid layer. The ion exchange membrane may not be necessarily reinforced by reinforcement core materials, and the arrangement of the reinforcement core materials is not limited to the example in Figure 120.

### (Membrane body)

First, the membrane body 10 constituting the ion exchange membrane 1 will be described.

The membrane body 10 should be one that has a function of selectively allowing cations to permeate and comprises a hydrocarbon polymer or a fluorine-containing polymer having an ion exchange group. Its configuration and material are not particularly limited, and preferred ones can be appropriately selected.

The hydrocarbon polymer or fluorine-containing polymer having an ion exchange group in the membrane body 10 can be obtained from a hydrocarbon polymer or fluorine-containing polymer having an ion exchange group precursor capable of forming an ion exchange group by hydrolysis or the like. Specifically, for example, after a polymer comprising a main chain of a fluorinated hydrocarbon, having, as a pendant side chain, a group convertible into an ion exchange group by hydrolysis or the like (ion exchange group precursor), and being melt-processable (hereinbelow, referred to as the "fluorine-containing polymer (a)" in some cases) is used to prepare a precursor of the membrane body 10, the membrane body 10 can be obtained by converting the ion exchange group precursor into an ion exchange group.

The fluorine-containing polymer (a) can be produced, for example, by copolymerizing at least one monomer selected from the following first group and at least one monomer selected from the following second group and/or the following third group. The fluorine-containing polymer (a) can be also produced by homopolymerization of one monomer selected from any of the following first group, the following second group, and the following third group.

Examples of the monomers of the first group include vinyl fluoride compounds. Examples of the vinyl fluoride compounds include vinyl fluoride, tetrafluoroethylene, hexafluoropropylene, vinylidene fluoride, trifluoroethylene, chlorotrifluoroethylene, and perfluoro alkyl vinyl ethers. Particularly when the ion exchange membrane is used as a membrane for alkali electrolysis, the vinyl fluoride compound is preferably a perfluoro monomer, and a perfluoro monomer selected from the group consisting of tetrafluoroethylene, hexafluoropropylene, and perfluoro alkyl vinyl ethers is preferable.

Examples of the monomers of the second group include vinyl compounds having a functional group convertible into a carboxylic acid-type ion exchange group (carboxylic acid group). Examples of the vinyl compounds having a functional group convertible into a carboxylic acid group include monomers represented by CF₂=CF(OCF₂CYF)ₛ-O(CZF)ₜ-COOR, wherein s represents an integer of 0 to 2, t represents an integer of 1 to 12, Y and Z each independently represent F or CF₃, and R represents a lower alkyl group (a lower alkyl group is an alkyl group having 1 to 3 carbon atoms, for example).

Among these, compounds represented by CF₂=CF(OCF₂CYF)ₙ-O(CF₂)ₘ-COOR are preferable. Wherein n represents an integer of 0 to 2, m represents an integer of 1 to 4, Y represents F or CF₃, and R represents CH₃, C₂H₅, or C₃H₇.

When the ion exchange membrane is used as a cation exchange membrane for alkali electrolysis, a perfluoro compound is preferably at least used as the monomer, but the alkyl group (see the above R) of the ester group is lost from the polymer at the time of hydrolysis, and therefore the alkyl group (R) need not be a perfluoroalkyl group in which all hydrogen atoms are replaced by fluorine atoms.

Of the above monomers, the monomers represented below are more preferable as the monomers of the second group:

CF₂=CFOCF₂-CF(CF₃)OCF₂COOCH₃,

CF₂=CFOCF₂CF(CF₃)O(CF₂)₂COOCH₃,

CF₂=CF[OCF₂-CF(CF₃)]₂O(CF₂)₂COOCH₃,

CF₂=CFOCF₂CF(CF₃)O(CF₂)₃COOCH₃,

CF₂=CFO(CF₂)₂COOCH₃,

and

CF₂=CFO(CF₂)₃COOCH₃.

Examples of the monomers of the third group include vinyl compounds having a functional group convertible into a sulfone-type ion exchange group (sulfonic acid group). As the vinyl compounds having a functional group convertible into a sulfonic acid group, for example, monomers represented by CF₂=CFO-X-CF₂-SO₂F are preferable, wherein X represents a perfluoroalkylene group. Specific examples of these include the monomers represented below:

CF₂=CFOCF₂CF₂SO₂F,

CF₂=CFOCF₂CF(CF₃)OCF₂CF₂SO₂F,

CF₂=CFOCF₂CF(CF₃)OCF₂CF₂CF₂SO₂F,

CF₂=CF(CF₂)₂SO₂F,

CF₂=CFO[CF₂CF(CF₃)O]₂CF₂CF₂SO₂F,

and

CF₂=CFOCF₂CF(CF₂OCF₃)OCF₂CF₂SO₂F.

Among these, CF₂=CFOCF₂CF(CF₃)OCF₂CF₂CF₂SO₂F and CF₂=CFOCF₂CF(CF₃)OCF₂CF₂SO₂F are more preferable.

The copolymer obtained from these monomers can be produced by a polymerization method developed for homopolymerization and copolymerization of ethylene fluoride, particularly a general polymerization method used for tetrafluoroethylene. For example, in a nonaqueous method, a polymerization reaction can be performed in the presence of a radical polymerization initiator such as a perfluorocarbon peroxide or an azo compound under the conditions of a temperature of 0 to 200°C and a pressure of 0.1 to 20 MPa using an inert solvent such as a perfluorohydrocarbon or a chlorofluorocarbon.

In the above copolymerization, the type of combination of the above monomers and their proportion are not particularly limited and are selected and determined depending on the type and amount of the functional group desired to be imparted to the fluorine-containing polymer to be obtained. For example, when a fluorine-containing polymer containing only a carboxylic acid group is formed, at least one monomer should be selected from each of the first group and the second group described above and copolymerized. In addition, when a fluorine-containing polymer containing only a sulfonic acid group is formed, at least one monomer should be selected from each of the first group and the third group and copolymerized. Further, when a fluorine-containing polymer having a carboxylic acid group and a sulfonic acid group is formed, at least one monomer should be selected from each of the first group, the second group, and the third group described above and copolymerized. In this case, the target fluorine-containing polymer can be obtained also by separately preparing a copolymer comprising the monomers of the first group and the second group described above and a copolymer comprising the monomers of the first group and the third group described above, and then mixing the copolymers. The mixing proportion of the monomers is not particularly limited, and when the amount of the functional groups per unit polymer is increased, the proportion of the monomers selected from the second group and the third group described above should be increased.

The total ion exchange capacity of the fluorine-containing copolymer is not particularly limited, but is preferably 0.5 to 2.0 mg equivalent/g, more preferably 0.6 to 1.5 mg equivalent/g. The total ion exchange capacity herein refers to the equivalent of the exchange group per unit weight of the dry resin and can be measured by neutralization titration or the like.

In the membrane body 10 of the ion exchange membrane 1, a sulfonic acid layer 3 containing a fluorine-containing polymer having a sulfonic acid group and a carboxylic acid layer 2 containing a fluorine-containing polymer having a carboxylic acid group are laminated. By providing the membrane body 10 having such a layer configuration, selective permeability for cations such as sodium ions can be further improved.

The ion exchange membrane 1 is arranged in an electrolyzer such that, usually, the sulfonic acid layer 3 is located on the anode side of the electrolyzer and the carboxylic acid layer 2 is located on the cathode side of the electrolyzer.

The sulfonic acid layer 3 is preferably constituted by a material having low electrical resistance and has a membrane thickness larger than that of the carboxylic acid layer 2 from the viewpoint of membrane strength. The membrane thickness of the sulfonic acid layer 3 is preferably 2 to 25 times, more preferably 3 to 15 times that of the carboxylic acid layer 2.

The carboxylic acid layer 2 preferably has high anion exclusion properties even if it has a small membrane thickness. The anion exclusion properties here refer to the property of trying to hinder intrusion and permeation of anions into and through the ion exchange membrane 1. In order to raise the anion exclusion properties, it is effective to dispose a carboxylic acid layer having a small ion exchange capacity to the sulfonic acid layer.

As the fluorine-containing polymer for use in the sulfonic acid layer 3, preferable is a polymer obtained by using CF₂=CFOCF₂CF(CF₃)OCF₂CF₂SO₂F as the monomer of the third group.

As the fluorine-containing polymer for use in the carboxylic acid layer 2, preferable is a polymer obtained by using CF₂=CFOCF₂CF(CF₂)O(CF₂)₂COOCH₃ as the monomer of the second group.

### (Coating layer)

The ion exchange membrane preferably has a coating layer on at least one surface of the membrane body. As shown in Figure 120, in the ion exchange membrane 1, coating layers 11a and 11b are formed on both the surfaces of the membrane body 10.

The coating layers contain inorganic material particles and a binder.

The average particle size of the inorganic material particles is preferably 0.90 µm or more. When the average particle size of the inorganic material particles is 0.90 µm or more, durability to impurities is extremely improved, in addition to attachment of gas. That is, enlarging the average particle size of the inorganic material particles as well as satisfying the value of the specific surface area mentioned above can achieve a particularly marked effect. Irregular inorganic material particles are preferable because the average particle size and specific surface area as above are satisfied. Inorganic material particles obtained by melting and inorganic material particles obtained by grinding raw ore can be used. Inorganic material particles obtained by grinding raw ore can preferably be used.

The average particle size of the inorganic material particles can be 2 µm or less. When the average particle size of the inorganic material particles is 2 µm or less, it is possible to prevent damage of the membrane due to the inorganic material particles. The average particle size of the inorganic material particle is more preferably 0.90 to 1.2 µm.

Here, the average particle size can be measured by a particle size analyzer ("SALD2200", SHIMADZU CORPORATION).

The inorganic material particles preferably have irregular shapes. Such shapes improve resistance to impurities further. The inorganic material particles preferably have a broad particle size distribution.

The inorganic material particles preferably contain at least one inorganic material selected from the group consisting of oxides of Group IV elements in the Periodic Table, nitrides of Group IV elements in the Periodic Table, and carbides of Group IV elements in the Periodic Table. From the viewpoint of durability, zirconium oxide particle is more preferable.

The inorganic material particles are preferably inorganic material particles produced by grinding the raw ore of the inorganic material particles or inorganic material particles, as spherical particles having a uniform diameter, obtained by melt-purifying the raw ore of the inorganic material particles.

Examples of means for grinding raw ore include, but are not particularly limited to, ball mills, bead mills, colloid mills, conical mills, disc mills, edge mills, grain mills, hammer mills, pellet mills, VSI mills, Wiley mills, roller mills, and jet mills. After grinding, the particles are preferably washed. As the washing method, the particles are preferably treated with acid. This treatment can reduce impurities such as iron attached to the surface of the inorganic material particles.

The coating layer preferably contains a binder. The binder is a component that forms the coating layers by retaining the inorganic material particles on the surface of the ion exchange membrane. The binder preferably contains a fluorine-containing polymer from the viewpoint of durability to the electrolyte solution and products from electrolysis.

As the binder, a fluorine-containing polymer having a carboxylic acid group or sulfonic acid group is more preferable, from the viewpoint of durability to the electrolyte solution and products from electrolysis and adhesion to the surface of the ion exchange membrane. When a coating layer is provided on a layer containing a fluorine-containing polymer having a sulfonic acid group (sulfonic acid layer), a fluorine-containing polymer having a sulfonic acid group is further preferably used as the binder of the coating layer. Alternatively, when a coating layer is provided on a layer containing a fluorine-containing polymer having a carboxylic acid group (carboxylic acid layer), a fluorine-containing polymer having a carboxylic acid group is further preferably used as the binder of the coating layer.

In the coating layer, the content of the inorganic material particles is preferably 40 to 90% by mass, more preferably 50 to 90% by mass. The content of the binder is preferably 10 to 60% by mass, more preferably 10 to 50% by mass.

The distribution density of the coating layer in the ion exchange membrane is preferably 0.05 to 2 mg per 1 cm². When the ion exchange membrane has asperities on the surface thereof, the distribution density of the coating layer is preferably 0.5 to 2 mg per 1 cm².

As the method for forming the coating layer, which is not particularly limited, a known method can be used. An example is a method including applying by a spray or the like a coating liquid obtained by dispersing inorganic material particles in a solution containing a binder.

### (Reinforcement core materials)

The ion exchange membrane preferably has reinforcement core materials arranged inside the membrane body.

The reinforcement core materials are members that enhance the strength and dimensional stability of the ion exchange membrane. By arranging the reinforcement core materials inside the membrane body, particularly expansion and contraction of the ion exchange membrane can be controlled in the desired range. Such an ion exchange membrane does not expand or contract more than necessary during electrolysis and the like and can maintain excellent dimensional stability for a long term.

The configuration of the reinforcement core materials is not particularly limited, and, for example, the reinforcement core materials may be formed by spinning yarns referred to as reinforcement yarns. The reinforcement yarns here refer to yarns that are members constituting the reinforcement core materials, can provide the desired dimensional stability and mechanical strength to the ion exchange membrane, and can be stably present in the ion exchange membrane. By using the reinforcement core materials obtained by spinning such reinforcement yarns, better dimensional stability and mechanical strength can be provided to the ion exchange membrane.

The material of the reinforcement core materials and the reinforcement yarns used for these is not particularly limited but is preferably a material resistant to acids, alkalis, etc., and a fiber comprising a fluorine-containing polymer is preferable because long-term heat resistance and chemical resistance are required.

Examples of the fluorine-containing polymer to be used in the reinforcement core materials include polytetrafluoroethylene (PTFE), tetrafluoroethylene-perfluoroalkyl vinyl ether copolymers (PFA), tetrafluoroethylene-ethylene copolymers (ETFE), tetrafluoroethylene-hexafluoropropylene copolymers, trifluorochloroethylene-ethylene copolymers, and vinylidene fluoride polymers (PVDF). Among these, fibers comprising polytetrafluoroethylene are preferably used from the viewpoint of heat resistance and chemical resistance.

The yarn diameter of the reinforcement yarns used for the reinforcement core materials is not particularly limited, but is preferably 20 to 300 deniers, more preferably 50 to 250 deniers. The weave density (fabric count per unit length) is preferably 5 to 50/inch. The form of the reinforcement core materials is not particularly limited, for example, a woven fabric, a nonwoven fabric, and a knitted fabric are used, but is preferably in the form of a woven fabric. The thickness of the woven fabric to be used is preferably 30 to 250 µm, more preferably 30 to 150 µm.

As the woven fabric or knitted fabric, monofilaments, multifilaments, or yarns thereof, a slit yarn, or the like can be used, and various types of weaving methods such as a plain weave, a leno weave, a knit weave, a cord weave, and a seersucker can be used.

The weave and arrangement of the reinforcement core materials in the membrane body are not particularly limited, and preferred arrangement can be appropriately provided considering the size and form of the ion exchange membrane, physical properties desired for the ion exchange membrane, the use environment, and the like.

For example, the reinforcement core materials may be arranged along one predetermined direction of the membrane body, but from the viewpoint of dimensional stability, it is preferred that the reinforcement core materials be arranged along a predetermined first direction, and other reinforcement core materials be arranged along a second direction substantially perpendicular to the first direction. By arranging the plurality of reinforcement core materials substantially orthogonally inside the membrane body, it is possible to impart better dimensional stability and mechanical strength in many directions. For example, arrangement in which the reinforcement core materials arranged along the longitudinal direction (warp yarns) and the reinforcement core materials arranged along the transverse direction (weft yarns) are woven on the surface side of the membrane body is preferred. The arrangement is more preferably in the form of plain weave driven and woven by allowing warps and wefts to run over and under each other alternately, leno weave in which two warps are woven into wefts while twisted, basket weave driven and woven by inserting, into two or more parallelly-arranged warps, wefts of the same number, or the like, from the viewpoint of dimension stability, mechanical strength and easy-production.

It is preferred that particularly, the reinforcement core materials be arranged along both directions, the MD (Machine Direction) and TD (Transverse Direction) of the ion exchange membrane. In other words, the reinforcement core materials are preferably plain-woven in the MD and TD. Here, the MD refers to the direction in which the membrane body and various core materials (for example, the reinforcement core materials, reinforcement yarns, and sacrifice yarns described later) are conveyed in an ion exchange membrane production step described later (flow direction), and the TD refers to the direction substantially perpendicular to the MD. Yarns woven along the MD are referred to as MD yarns, and yarns woven along the TD are referred to as TD yarns. Usually, the ion exchange membrane used for electrolysis is rectangular, and in many cases, the longitudinal direction is the MD, and the width direction is the TD. By weaving the reinforcement core materials that are MD yarns and the reinforcement core materials that are TD yarns, it is possible to impart better dimensional stability and mechanical strength in many directions.

The arrangement interval of the reinforcement core materials is not particularly limited, and preferred arrangement can be appropriately provided considering physical properties desired for the ion exchange membrane, the use environment, and the like.

The aperture ratio for the reinforcement core materials is not particularly limited, but is preferably 30% or more, more preferably 50% or more and 90% or less. The aperture ratio is preferably 30% or more from the viewpoint of the electrochemical properties of the ion exchange membrane, and preferably 90% or less from the viewpoint of the mechanical strength of the ion exchange membrane.

The aperture ratio for the reinforcement core materials herein refers to a ratio of a total area of a surface through which substances such as ions (an electrolyte solution and cations contained therein (e.g., sodium ions)) can pass (B) to the area of either one surface of the membrane body (A) (B/A). The total area of the surface through which substances such as ions can pass (B) can refer to the total areas of regions in which in the ion exchange membrane, cations, an electrolytic solution, and the like are not blocked by the reinforcement core materials and the like contained in the ion exchange membrane.

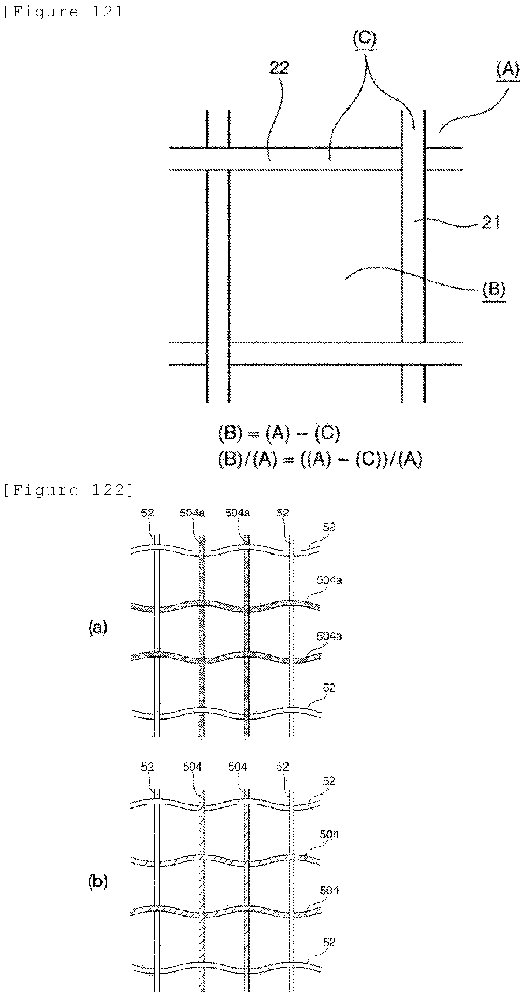

Figure 121 illustrates a schematic view for explaining the aperture ratio of reinforcement core materials constituting the ion exchange membrane. Figure 121, in which a portion of the ion exchange membrane is enlarged, shows only the arrangement of the reinforcement core materials 21 and 22 in the regions, omitting illustration of the other members.

By subtracting the total area of the reinforcement core materials (C) from the area of the region surrounded by the reinforcement core materials 21 arranged along the longitudinal direction and the reinforcement core materials 22 arranged along the transverse direction, the region including the area of the reinforcement core materials (A), the total area of regions through which substances such as ions can pass (B) in the area of the above-described region (A) can be obtained. That is, the aperture ratio can be determined by the following formula (I): $Aperture ratio = \left(B\right) / \left(A\right) = \left(\left(A\right)-\left(C\right)\right) / \left(A\right)$

Among the reinforcement core materials, a particularly preferred form is tape yarns or highly oriented monofilaments comprising PTFE from the viewpoint of chemical resistance and heat resistance. Specifically, reinforcement core materials forming a plain weave in which 50 to 300 denier tape yarns obtained by slitting a high strength porous sheet comprising PTFE into a tape form, or 50 to 300 denier highly oriented monofilaments comprising PTFE are used and which has a weave density of 10 to 50 yarns or monofilaments/inch and has a thickness in the range of 50 to 100 µm are more preferred. The aperture ratio of an ion exchange membrane comprising such reinforcement core materials is further preferably 60% or more.

Examples of the shape of the reinforcement yarns include round yarns and tape yarns.

### (Continuous holes)

The ion exchange membrane preferably has continuous holes inside the membrane body.

The continuous holes refer to holes that can be flow paths for ions generated in electrolysis and an electrolyte solution. The continuous holes, which are tubular holes formed inside the membrane body, are formed by dissolution of sacrifice core materials (or sacrifice yarns) described below. The shape, diameter, or the like of the continuous holes can be controlled by selecting the shape or diameter of the sacrifice core materials (sacrifice yarns).

Forming the continuous holes inside the ion exchange membrane can ensure the mobility of an electrolyte solution on electrolysis. The shape of the continuous holes is not particularly limited, but may be the shape of sacrifice core materials to be used for formation of the continuous holes in accordance with the production method described below.

The continuous holes are preferably formed so as to alternately pass on the anode side (sulfonic acid layer side) and the cathode side (carboxylic acid layer side) of the reinforcement core materials. With such a structure, in a portion in which continuous holes are formed on the cathode side of the reinforcement core materials, ions (e.g., sodium ions) transported through the electrolyte solution with which the continuous holes are filled can flow also on the cathode side of the reinforcement core materials. As a result, the flow of cations is not interrupted, and thus, it is possible to further reduce the electrical resistance of the ion exchange membrane.

The continuous holes may be formed along only one predetermined direction of the membrane body constituting the ion exchange membrane, but are preferably formed in both the longitudinal direction and the transverse direction of the membrane body from the viewpoint of exhibiting more stable electrolytic performance.

### [Production method]

A suitable example of a method for producing an ion exchange membrane includes a method including the following steps (1) to (6):
Step (1): the step of producing a fluorine-containing polymer having an ion exchange group or an ion exchange group precursor capable of forming an ion exchange group by hydrolysis,
Step (2): the step of weaving at least a plurality of reinforcement core materials, as required, and sacrifice yarns having a property of dissolving in an acid or an alkali, and forming continuous holes, to obtain a reinforcing material in which the sacrifice yarns are arranged between the reinforcement core materials adjacent to each other,
Step (3): the step of forming into a film the above fluorine-containing polymer having an ion exchange group or an ion exchange group precursor capable of forming an ion exchange group by hydrolysis,
Step (4): the step of embedding the above reinforcing materials, as required, in the above film to obtain a membrane body inside which the reinforcing materials are arranged,
Step (5): the step of hydrolyzing the membrane body obtained in the step (4) (hydrolysis step), and
Step (6): the step of providing a coating layer on the membrane body obtained in the step (5) (application step).

Hereinafter, each of the steps will be described in detail.

### Step (1): Step of producing fluorine-containing polymer

In the step (1), raw material monomers described in the first group to the third group above are used to produce a fluorine-containing polymer. In order to control the ion exchange capacity of the fluorine-containing polymer, the mixture ratio of the raw material monomers should be adjusted in the production of the fluorine-containing polymer forming the layers.

### Step (2): Step of producing reinforcing materials

The reinforcing material is a woven fabric obtained by weaving reinforcement yarns or the like. The reinforcing material is embedded in the membrane to thereby form reinforcement core materials. When an ion exchange membrane having continuous holes is formed, sacrifice yarns are additionally woven into the reinforcing material. The amount of the sacrifice yarns contained in this case is preferably 10 to 80% by mass, more preferably 30 to 70% by mass based on the entire reinforcing material. Weaving the sacrifice yarns can also prevent yarn slippage of the reinforcement core materials.

As the sacrifice yarns, which have solubility in the membrane production step or under an electrolysis environment, rayon, polyethylene terephthalate (PET), cellulose, polyamide, and the like are used. Monofilaments or multifilaments having a thickness of 20 to 50 deniers and comprising polyvinyl alcohol and the like are also preferred.

In the step (2), the aperture ratio, arrangement of the continuous holes, and the like can be controlled by adjusting the arrangement of the reinforcement core materials and the sacrifice yarns.

### Step (3): Step of film formation

In the step (3), the fluorine-containing polymer obtained in the step (1) is formed into a film by using an extruder. The film may be a single-layer configuration, a two-layer configuration of a sulfonic acid layer and a carboxylic acid layer as mentioned above, or a multilayer configuration of three layers or more.

Examples of the film forming method include the following:
a method in which a fluorine-containing polymer having a carboxylic acid group and a fluorine-containing polymer having a sulfonic acid group are separately formed into films; and
a method in which fluorine-containing polymer having a carboxylic acid group and a fluorine-containing polymer having a sulfonic acid group are coextruded into a composite film.

The number of each film may be more than one. Coextrusion of different films is preferred because of its contribution to an increase in the adhesive strength in the interface.

### Step (4): Step of obtaining membrane body

In the step (4), the reinforcing material obtained in the step (2) is embedded in the film obtained in the step (3) to provide a membrane body including the reinforcing material therein.

Preferable examples of the method for forming a membrane body include (i) a method in which a fluorine-containing polymer having a carboxylic acid group precursor (e.g., carboxylate functional group) (hereinafter, a layer comprising the same is referred to as the first layer) located on the cathode side and a fluorine-containing polymer having a sulfonic acid group precursor (e.g., sulfonyl fluoride functional group) (hereinafter, a layer comprising the same is referred to as the second layer) are formed into a film by a coextrusion method, and, by using a heat source and a vacuum source as required, a reinforcing material and the second layer/first layer composite film are laminated in this order on breathable heat-resistant release paper on a flat plate or drum having many pores on the surface thereof and integrated at a temperature at which each polymer melts while air among each of the layers was evacuated by reduced pressure; and (ii) a method in which, in addition to the second layer/first layer composite film, a fluorine-containing polymer having a sulfonic acid group precursor is singly formed into a film (the third layer) in advance, and, by using a heat source and a vacuum source as required, the third layer film, the reinforcement core materials, and the composite film comprising the second layer/first layer are laminated in this order on breathable heat-resistant release paper on a flat plate or drum having many pores on the surface thereof and integrated at a temperature at which each polymer melts while air among each of the layers was evacuated by reduced pressure.

Coextrusion of the first layer and the second layer herein contributes to an increase in the adhesive strength at the interface.

The method including integration under a reduced pressure is characterized by making the third layer on the reinforcing material thicker than that of a pressure-application press method. Further, since the reinforcing material is fixed on the inner surface of the membrane body, the method has a property of sufficiently retaining the mechanical strength of the ion exchange membrane.

The variations of lamination described here are exemplary, and coextrusion can be performed after a preferred lamination pattern (for example, the combination of layers) is appropriately selected considering the desired layer configuration of the membrane body and physical properties, and the like.

For the purpose of further improving the electric properties of the ion exchange membrane, it is also possible to additionally interpose a fourth layer comprising a fluorine-containing polymer having both a carboxylic acid group precursor and a sulfonic acid group precursor between the first layer and the second layer or to use a fourth layer comprising a fluorine-containing polymer having both a carboxylic acid group precursor and a sulfonic acid group precursor instead of the second layer.

The method for forming the fourth layer may be a method in which a fluorine-containing polymer having a carboxylic acid group precursor and a fluorine-containing polymer having a sulfonic acid group precursor are separately produced and then mixed or may be a method in which a monomer having a carboxylic acid group precursor and a monomer having a sulfonic acid group precursor are copolymerized.

When the fourth layer is used as a component of the ion exchange membrane, a coextruded film of the first layer and the fourth layer is formed, in addition to this, the third layer and the second layer are separately formed into films, and lamination may be performed by the method mentioned above. Alternatively, the three layers of the first layer/fourth layer/second layer may be simultaneously formed into a film by coextrusion.

In this case, the direction in which the extruded film flows is the MD. As mentioned above, it is possible to form a membrane body containing a fluorine-containing polymer having an ion exchange group on a reinforcing material.

Additionally, the ion exchange membrane preferably has protruded portions composed of the fluorine-containing polymer having a sulfonic acid group, that is, projections, on the surface side composed of the sulfonic acid layer. As a method for forming such projections, which is not particularly limited, a known method also can be employed including forming projections on a resin surface. A specific example of the method is a method of embossing the surface of the membrane body. For example, the above projections can be formed by using release paper embossed in advance when the composite film mentioned above, reinforcing material, and the like are integrated. In the case where projections are formed by embossing, the height and arrangement density of the projections can be controlled by controlling the emboss shape to be transferred (shape of the release paper).

### (5) Hydrolysis step

In the step (5), a step of hydrolyzing the membrane body obtained in the step (4) to convert the ion exchange group precursor into an ion exchange group (hydrolysis step) is performed.

In the step (5), it is also possible to form dissolution holes in the membrane body by dissolving and removing the sacrifice yarns included in the membrane body with acid or alkali. The sacrifice yarns may remain in the continuous holes without being completely dissolved and removed. The sacrifice yarns remaining in the continuous holes may be dissolved and removed by the electrolyte solution when the ion exchange membrane is subjected to electrolysis.

The sacrifice yarn has solubility in acid or alkali in the step of producing an ion exchange membrane or under an electrolysis environment. The sacrifice yarns are eluted out to thereby form continuous holes at corresponding sites.

The step (5) can be performed by immersing the membrane body obtained in the step (4) in a hydrolysis solution containing acid or alkali. An example of the hydrolysis solution that can be used is a mixed solution containing KOH and dimethyl sulfoxide (DMSO).

The mixed solution preferably contains KOH of 2.5 to 4.0 N and DMSO of 25 to 35% by mass.

The temperature for hydrolysis is preferably 70 to 100°C. The higher the temperature, the larger can be the apparent thickness. The temperature is more preferably 75 to 100°C.

The time for hydrolysis is preferably 10 to 120 minutes. The longer the time, the larger can be the apparent thickness. The time is more preferably 20 to 120 minutes.

The step of forming continuous holes by eluting the sacrifice yarn will be now described in more detail. Figures 122(a) and (b) are schematic views for explaining a method for forming the continuous holes of the ion exchange membrane.

Figures 122(a) and (b) show reinforcement yarns 52, sacrifice yarns 504a, and continuous holes 504 formed by the sacrifice yarns 504a only, omitting illustration of the other members such as a membrane body.

First, the reinforcement yarns 52 that are to constitute reinforcement core materials in the ion exchange membrane and the sacrifice yarns 504a for forming the continuous holes 504 in the ion exchange membrane are used as interwoven reinforcing materials. Then, in the step (5), the sacrifice yarns 504a are eluted to form the continuous holes 504.

The above method is simple because the method for interweaving the reinforcement yarns 52 and the sacrifice yarns 504a may be adjusted depending on the arrangement of the reinforcement core materials and continuous holes in the membrane body of the ion exchange membrane.

Figure 122(a) exemplifies the plain-woven reinforcing material in which the reinforcement yarns 52 and sacrifice yarns 504a are interwoven along both the longitudinal direction and the lateral direction in the paper, and the arrangement of the reinforcement yarns 52 and the sacrifice yarns 504a in the reinforcing material may be varied as required.

### (6) Application step

In the step (6), a coating layer can be formed by preparing a coating liquid containing inorganic material particles obtained by grinding raw ore or melting raw ore and a binder, applying the coating liquid onto the surface of the ion exchange membrane obtained in the step (5), and drying the coating liquid.

A preferable binder is a binder obtained by hydrolyzing a fluorine-containing polymer having an ion exchange group precursor with an aqueous solution containing dimethyl sulfoxide (DMSO) and potassium hydroxide (KOH) and then immersing the polymer in hydrochloric acid to replace the counterion of the ion exchange group by H+ (e.g., a fluorine-containing polymer having a carboxyl group or sulfo group). Thereby, the polymer is more likely to dissolve in water or ethanol mentioned below, which is preferable.

This binder is dissolved in a mixed solution of water and ethanol. The volume ratio between water and ethanol is preferably 10:1 to 1:10, more preferably 5:1 to 1:5, further preferably 2:1 to 1:2. The inorganic material particles are dispersed with a ball mill into the dissolution liquid thus obtained to thereby provide a coating liquid. In this case, it is also possible to adjust the average particle size and the like of the particles by adjusting the time and rotation speed during the dispersion. The preferable amount of the inorganic material particles and the binder to be blended is as mentioned above.

The concentration of the inorganic material particles and the binder in the coating liquid is not particularly limited, but a thin coating liquid is preferable. This enables uniform application onto the surface of the ion exchange membrane.

Additionally, a surfactant may be added to the dispersion when the inorganic material particles are dispersed. As the surfactant, nonionic surfactants are preferable, and examples thereof include HS-210, NS-210, P-210, and E-212 manufactured by NOF CORPORATION.

The coating liquid obtained is applied onto the surface of the ion exchange membrane by spray application or roll coating to thereby provide an ion exchange membrane.

### [Microporous membrane]

The microporous membrane of the present embodiment is not particularly limited as long as the membrane can be formed into a laminate with the electrode for electrolysis, as mentioned above. Various microporous membranes may be employed.

The porosity of the microporous membrane of the present embodiment is not particularly limited, but can be 20 to 90, for example, and is preferably 30 to 85. The above porosity can be calculated by the following formula: Porosity = (1 - (the weight of the membrane in a dried state) / (the weight calculated from the volume calculated from the thickness, width, and length of the membrane and the density of the membrane material)) × 100

The average pore size of the microporous membrane of the present embodiment is not particularly limited, and can be 0.01 µm to 10 µm, for example, preferably 0.05 µm to 5 µm. With respect to the average pore size, for example, the membrane is cut vertically to the thickness direction, and the section is observed with an FE-SEM. The average pore size can be obtained by measuring the diameter of about 100 pores observed and averaging the measurements.

The thickness of the microporous membrane of the present embodiment is not particularly limited, and can be 10 µm to 1000 µm, for example, preferably 50 µm to 600 µm. The above thickness can be measured by using a micrometer (manufactured by Mitutoyo Corporation) or the like, for example.

Specific examples of the microporous membrane as mentioned above include Zirfon Perl UTP 500 manufactured by Agfa and those described in International Publication No. WO 2013-183584 and International Publication No. WO 2016-203701.

In the method for producing an electrolyzer according to the present embodiment, the membrane preferably comprises a first ion exchange resin layer and a second ion exchange resin layer having an EW (ion exchange capacity) different from that of the first ion exchange resin layer. Additionally, the membrane preferably comprises a first ion exchange resin layer and a second ion exchange resin layer having a functional group different from that of the first ion exchange resin layer. The ion exchange capacity can be adjusted by the functional group to be introduced, and functional groups that may be introduced are as mentioned above.

### (Water electrolysis)

The electrolyzer in the present embodiment, as an electrolyzer in the case of electrolyzing water, has a configuration in which the ion exchange membrane in an electrolyzer for use in the case of electrolyzing common salt mentioned above is replaced by a microporous membrane. The raw material to be supplied, which is water, is different from that for the electrolyzer in the case of electrolyzing common salt mentioned above. As for the other components, components similar to that of the electrolyzer in the case of electrolyzing common salt can be employed also in the electrolyzer in the case of electrolyzing water. Since chlorine gas is generated in the anode chamber in the case of common salt electrolysis, titanium is used as the material of the anode chamber, but in the case of water electrolysis, only oxygen gas is generated in the anode chamber. Thus, a material identical to that of the cathode chamber can be used. An example thereof is nickel. For anode coating, catalyst coating for oxygen generation is suitable. Examples of the catalyst coating include metals, oxides, and hydroxides of the platinum group metals and transition metal group metals. For example, elements such as platinum, iridium, palladium, ruthenium, nickel, cobalt, and iron can be used.

### Examples

The present invention will be described in further detail with reference to Examples and Comparative Examples below, but the present invention is not limited to Examples below in any way.

### <Verification of first embodiment> (first embodiment not in accordance with the invention as claimed)

As will be described below, Experiment Examples according to the first embodiment (in the section of <Verification of first embodiment> hereinbelow, simply referred to as "Examples") and Experiment Examples not according to the first embodiment (in the section of <Verification of first embodiment> hereinbelow, simply referred to as "Comparative Examples") were provided, and evaluated by the following method. The details will be described with reference to Figures 10 to 21 as appropriate.

### [Evaluation method]

### (1) Opening ratio

An electrode was cut into a size of 130 mm × 100 mm. A digimatic thickness gauge (manufactured by Mitutoyo Corporation, minimum scale 0.001 mm) was used to calculate an average value of 10 points obtained by measuring evenly in the plane. The value was used as the thickness of the electrode (gauge thickness) to calculate the volume. Thereafter, an electronic balance was used to measure the mass. From the specific gravity of each metal (specific gravity of nickel = 8.908 g/cm³, specific gravity of titanium = 4.506 g/cm³), the opening ratio or void ratio was calculated. Opening ratio (Void ratio) (%) = (1 - (electrode mass)/(electrode volume × metal specific gravity)) × 100

### (2) Mass per unit area (mg/cm²)

An electrode was cut into a size of 130 mm × 100 mm, and the mass thereof was measured by an electronic balance. The value was divided by the area (130 mm × 100 mm) to calculate the mass per unit area.

### (3) Force applied per unit mass·unit area (1) (adhesive force) (N/mg·cm²))

### [Method (i)]

A tensile and compression testing machine was used for measurement (Imada-SS Corporation, main testing machine: SDT-52NA type tensile and compression testing machine, load cell: SL-6001 type load cell).

A 200 mm square nickel plate having a thickness of 1.2 mm was subjected to blast processing with alumina of grain-size number 320. The arithmetic average surface roughness (Ra) of the nickel plate after the blast treatment was 0.7 µm. For surface roughness measurement herein, a probe type surface roughness measurement instrument SJ-310 (Mitutoyo Corporation) was used. A measurement sample was placed on the surface plate parallel to the ground surface to measure the arithmetic average roughness Ra under measurement conditions as described below. The measurement was repeated 6 times, and the average value was listed.

<Probe shape> conical taper angle = 60°, tip radius = 2 µm, static measuring force = 0.75 mN
<Roughness standard> JIS2001
<Evaluation curve> R
<Filter> GAUSS
<Cutoff value λc> 0.8 mm
<Cutoff value λs> 2.5 µm
<Number of sections> 5
<Pre-running, post-running> available

This nickel plate was vertically fixed on the lower chuck of the tensile and compression testing machine.

As the membrane, an ion exchange membrane A below was used.

As reinforcement core materials, 90 denier monofilaments made of polytetrafluoroethylene (PTFE) were used (hereinafter referred to as PTFE yarns). As sacrifice yarns, yarns obtained by twisting six 35 denier filaments of polyethylene terephthalate (PET) 200 times/m were used (hereinafter referred to as PET yarns). First, in each of the TD and the MD, the PTFE yarns and the sacrifice yarns were plain-woven with 24 PTFE yarns/inch so that two sacrifice yarns were arranged between adjacent PTFE yarns, to obtain a woven fabric. The resulting woven fabric was pressure-bonded by a roll to obtain a woven fabric having a thickness of 70 µm.

Next, a resin A of a dry resin that was a copolymer of CF₂=CF₂ and CF₂=CFOCF₂CF(CF₃)OCF₂CF₂COOCH₃ and had an ion exchange capacity of 0.85 mg equivalent/g, and a resin B of a dry resin that was a copolymer of CF₂=CF₂ and CF₂=CFOCF₂CF(CF₃)OCF₂CF₂SO₂F and had an ion exchange capacity of 1.03 mg equivalent/g were provided.

Using these resins A and B, a two-layer film X in which the thickness of a resin A layer was 15 µm and the thickness of a resin B layer was 104 µm was obtained by a coextrusion T die method.

Subsequently, release paper (embossed in a conical shape having a height of 50 µm), a reinforcing material, and the film X were laminated in this order on a hot plate having a heat source and a vacuum source inside and having micropores on its surface, heated and depressurized under the conditions of a hot plate surface temperature of 223°C and a degree of reduced pressure of 0.067 MPa for 2 minutes, and then the release paper was removed to obtain a composite membrane.

The resulting composite membrane was immersed in an aqueous solution at 80°C comprising 30% by mass of dimethyl sulfoxide (DMSO) and 15% by mass of potassium hydroxide (KOH) for 20 minutes for saponification. Then, the composite membrane was immersed in an aqueous solution at 50°C comprising 0.5 N sodium hydroxide (NaOH) for an hour to replace the counterion of the ion exchange group by Na, and then washed with water. Then, the membrane was dried at 60°C.

Further, 20% by mass of zirconium oxide having a primary particle size of 1 µm was added to a 5% by mass ethanol solution of the acid-type resin of the resin B and dispersed to prepare a suspension, and the suspension was sprayed onto both the surfaces of the above composite membrane by a suspension spray method to form coatings of zirconium oxide on the surfaces of the composite membrane to obtain an ion exchange membrane A. The coating density of zirconium oxide measured by fluorescent X-ray measurement was 0.5 mg/cm². The average particle size was measured by a particle size analyzer (manufactured by SHIMADZU CORPORATION, "SALD(R) 2200").

The ion exchange membrane (membrane) obtained above was immersed in pure water for 12 hours or more and then used for the test. The membrane was brought into contact with the above nickel plate sufficiently moistened with pure water and allowed to adhere to the plate by the tension of water. At this time, the nickel plate and the ion exchange membrane were placed so as to align the upper ends thereof.

A sample of electrode for electrolysis (electrode) to be used for measurement was cut into a 130 mm square. The ion exchange membrane A was cut into a 170 mm square. One side of the electrode was sandwiched by two stainless plates (thickness: 1 mm, length: 9 mm, width: 170 mm). After positioning so as to align the center of the stainless plates with the center of the electrode, four clips were used for uniformly fixing the electrode and plates. The center of the stainless plates was clamped by the upper chuck of the tensile and compression testing machine to hang the electrode. The load applied on the testing machine at this time was set to 0 N. The integrated piece of the stainless plates, electrode, and clips was once removed from the tensile and compression testing machine, and immersed in a vat containing pure water in order to moisten the electrode sufficiently with pure water. Thereafter, the center of the stainless plates was clamped again by the upper chuck of the tensile and compression testing machine to hang the electrode.

The upper chuck of the tensile and compression testing machine was lowered, and the sample of electrode for electrolysis was allowed to adhere to the surface of the ion exchange membrane by the surface tension of pure water. The size of the adhesive surface at this time was 130 mm in width and 110 mm in length. Pure water in a wash bottle was sprayed to the electrode and the ion exchange membrane entirely so as to sufficiently moisten the membrane and the electrode again. Thereafter, a roller formed by winding a closed-cell type EPDM sponge rubber having a thickness of 5 mm around a vinyl chloride pipe (outer diameter: 38 mm) was rolled downward from above with lightly pressed over the electrode to remove excess pure water. The roller was rolled only once.

The electrode was raised at a rate of 10 mm/minute to begin load measurement, and the load when the size of the overlapping portion of the electrode and the membrane reached 130 mm in width and 100 mm in length was recorded. This measurement was repeated three times, and the average value was calculated.

This average value was divided by the area of the overlapping portion of the electrode and the ion exchange membrane and the mass of the electrode of the portion overlapping the ion exchange membrane to calculate the force applied per unit mass·unit area (1). The mass of the electrode of the portion overlapping the ion exchange membrane was determined through proportional calculation from the value obtained in (2) Mass per unit area (mg/cm²) described above.

As for the environment of the measuring chamber, the temperature was 23±2°C and the relative humidity was 30±5%.

The electrode used in Examples and Comparative Examples was able to stand by itself and adhere without slipping down or coming off when allowed to adhere to the ion exchange membrane that adhered to a vertically-fixed nickel plate via the surface tension.

A schematic view of a method for evaluating the force applied (1) is shown in Figure 10.

The measurement lower limit of the tensile testing machine was 0.01 (N).

### (4) Force applied per unit mass·unit area (2) (adhesive force) (N/mg·cm²))

### [Method (ii)]

A tensile and compression testing machine was used for measurement (Imada-SS Corporation, main testing machine: SDT-52NA type tensile and compression testing machine, load cell: SL-6001 type load cell).

A nickel plate identical to that in Method (i) was vertically fixed on the lower chuck of the tensile and compression testing machine.

A sample of electrode for electrolysis (electrode) to be used for measurement was cut into a 130 mm square. The ion exchange membrane A was cut into a 170 mm square. One side of the electrode was sandwiched by two stainless plates (thickness: 1 mm, length: 9 mm, width: 170 mm). After positioning so as to align the center of the stainless plates with the center of the electrode, four clips were used for uniformly fixing the electrode and plates. The center of the stainless plates was clamped by the upper chuck of the tensile and compression testing machine to hang the electrode. The load applied on the testing machine at this time was set to 0 N. The integrated piece of the stainless plates, electrode, and clips was once removed from the tensile and compression testing machine, and immersed in a vat containing pure water in order to moisten the electrode sufficiently with pure water. Thereafter, the center of the stainless plates was clamped again by the upper chuck of the tensile and compression testing machine to hang the electrode.

The upper chuck of the tensile and compression testing machine was lowered, and the sample of electrode for electrolysis was allowed to adhere to the surface of the nickel plate via the surface tension of a solution. The size of the adhesive surface at this time was 130 mm in width and 110 mm in length. Pure water in a wash bottle was sprayed to the electrode and the nickel plate entirely so as to sufficiently moisten the nickel plate and the electrode again. Thereafter, a roller formed by winding a closed-cell type EPDM sponge rubber having a thickness of 5 mm around a vinyl chloride pipe (outer diameter: 38 mm) was rolled downward from above with lightly pressed over the electrode to remove excess solution. The roller was rolled only once.

The electrode was raised at a rate of 10 mm/minute to begin load measurement, and the load when the size of the overlapping portion of the electrode and the nickel plate in the longitudinal direction reached 100 mm was recorded. This measurement was repeated three times, and the average value was calculated.

This average value was divided by the area of the overlapping portion of the electrode and the nickel plate and the mass of the electrode of the portion overlapping the nickel plate to calculate the force applied per unit mass·unit area (2). The mass of the electrode of the portion overlapping the membrane was determined through proportional calculation from the value obtained in (2) mass per unit area (mg/cm²) described above.

As for the environment of the measuring chamber, the temperature was 23±2°C and the relative humidity was 30±5%.

The electrode used in Examples and Comparative Examples was able to stand by itself and adhere without slipping down or coming off when allowed to adhere to a vertically-fixed nickel plate via the surface tension.

The measurement lower limit of the tensile testing machine was 0.01 (N).

### (5) Method for evaluating winding around column of 280 mm in diameter (1) (%)

### (Membrane and column)

The evaluation method (1) was conducted by the following procedure.

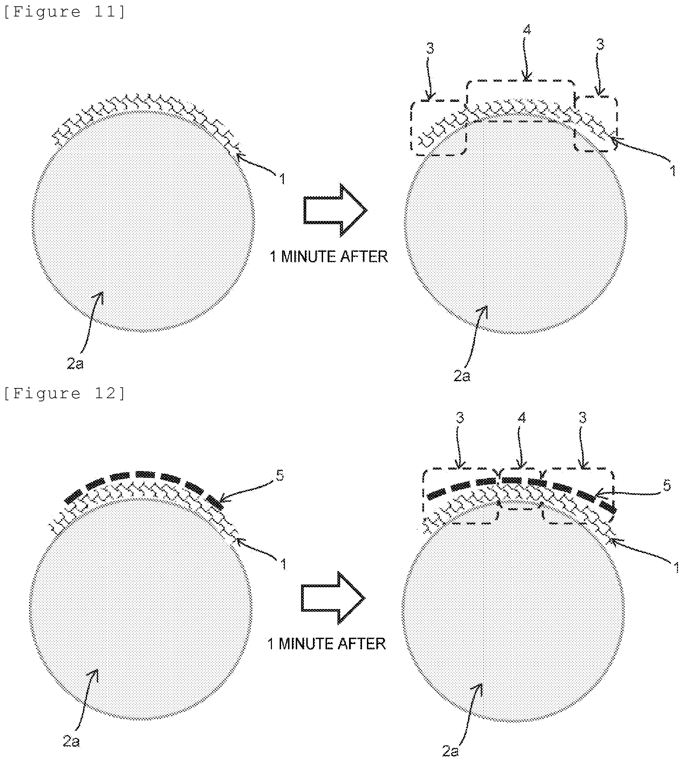

The ion exchange membrane A (membrane) produced in [Method (i)] was cut into a 170 mm square. The ion exchange membrane was immersed in pure water for 12 hours or more and then used for the test. In Comparative Examples 10 and 11, the electrode had been integrated with the ion exchange membrane by thermal pressing, and thus, an integrated piece of an ion exchange membrane and an electrode was provided (electrode of a 130 mm square). After the ion exchange membrane was sufficiently immersed in pure water, the membrane was placed on the curved surface of a plastic (polyethylene) pipe having an outer diameter of 280 mm. Thereafter, excess solution was removed with a roller formed by winding a closed-cell type EPDM sponge rubber having a thickness of 5 mm around a vinyl chloride pipe (outer diameter: 38 mm). The roller was rolled over the ion exchange membrane from the left to the right of the schematic view shown in Figure 11. The roller was rolled only once. One minute after, the proportion of a portion at which the ion exchange membrane was brought into a close contact with the plastic pipe electrode having an outer diameter of 280 mm was measured.

### (6) Method for evaluating winding around column of 280 mm in diameter (2) (%)

### (Membrane and electrode)

The evaluation method (2) was conducted by the following procedure.

The ion exchange membrane A (membrane) produced in [Method (i)] was cut into a 170 mm square, and the electrode was cut into a 130 mm square. The ion exchange membrane was immersed in pure water for 12 hours or more and then used for the test. The ion exchange membrane and the electrode were sufficiently immersed in pure water and then laminated. This laminate was placed on the curved surface of a plastic (polyethylene) pipe having an outer diameter of 280 mm such that the electrode was located outside. Thereafter, a roller formed by winding a closed-cell type EPDM sponge rubber having a thickness of 5 mm around a vinyl chloride pipe (outer diameter: 38 mm) was rolled from the left to the right of the schematic view shown in Figure 12 with lightly pressed over the electrode to remove excess solution. The roller was rolled only once. One minute after, the proportion of a portion at which the ion exchange membrane was brought into a close contact with the electrode was measured.

### (7) Method for evaluating winding around column of 145 mm in diameter (3) (%)

### (Membrane and electrode)

The evaluation method (3) was conducted by the following procedure.

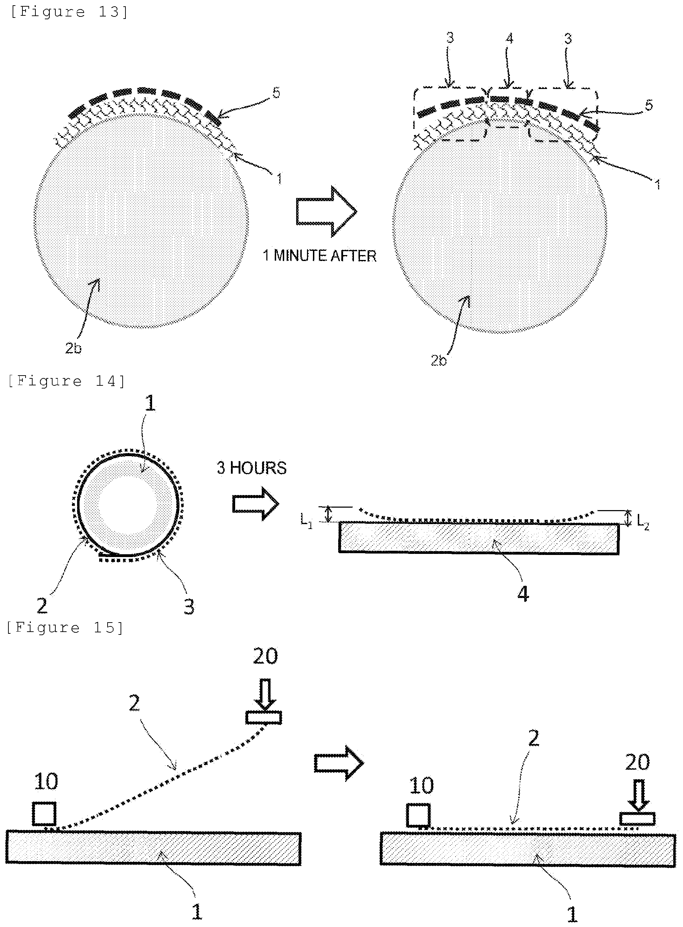

The ion exchange membrane A (membrane) produced in [Method (i)] was cut into a 170 mm square, and the electrode was cut into a 130 mm square. The ion exchange membrane was immersed in pure water for 12 hours or more and then used for the test. The ion exchange membrane and the electrode were sufficiently immersed in pure water and then laminated. This laminate was placed on the curved surface of a plastic (polyethylene) pipe having an outer diameter of 145 mm such that the electrode was located outside. Thereafter, a roller formed by winding a closed-cell type EPDM sponge rubber having a thickness of 5 mm around a vinyl chloride pipe (outer diameter: 38 mm) was rolled from the left to the right of the schematic view shown in Figure 13 with lightly pressed over the electrode to remove excess solution. The roller was rolled only once. One minute after, the proportion of a portion at which the ion exchange membrane was brought into a close contact with the electrode was measured.

### (8) Handling property (response evaluation)

(A) The ion exchange membrane A (membrane) produced in [Method (i)] was cut into a 170 mm square, and the electrode was cut into a size of 95 × 110 mm. The ion exchange membrane was immersed in pure water for 12 hours or more and then used for the test. In each Example, the ion exchange membrane and electrode were sufficiently immersed in three solutions: sodium bicarbonate aqueous solution, 0.1N NaOH aqueous solution, and pure water, then laminated, and placed still on a Teflon plate. The interval between the anode cell and the cathode cell used in the electrolytic evaluation was set at about 3 cm. The laminate placed still was lifted, and an operation of inserting and holding the laminate therebetween was conducted. This operation was conducted while the electrode was checked for dislocation and dropping.
(B) The ion exchange membrane A (membrane) produced in [Method (i)] was cut into a 170 mm square, and the electrode was cut into a size of 95 × 110 mm. The ion exchange membrane was immersed in pure water for 12 hours or more and then used for the test. In each Example, the ion exchange membrane and electrode were sufficiently immersed in three solutions: a sodium bicarbonate aqueous solution, a 0.1N NaOH aqueous solution, and pure water, then laminated, and placed still on a Teflon plate. The adjacent two corners of the membrane portion of the laminate were held by hands to lift the laminate so as to be vertical. The two corners held by hands were moved from this state to be close to each other such that the membrane was protruded or recessed. This move was repeated again to check the conformability of the electrode to the membrane. The results were evaluated on a four level scale of 1 to 4 on the basis of the following indices:
   1: good handling property
   2: capable of being handled
   3: difficult to handle
   4: substantially incapable of being handled

Here, the sample of Comparative Example 5, provided in a size equivalent to that of a large electrolytic cell including an electrode in a size of 1.3 m × 2.5 m and an ion exchange membrane in a size of 1.5 m × 2.8 m, was subjected to handling. The evaluation result of Comparative Example 5 ("3" as described below) was used as an index to evaluate the difference between the evaluation of the above (A) and (B) and that of the large-sized one. That is, in the case where the evaluation result of a small laminate was "1" or "2", it was judged that there was no problem in the handling property even if the laminate was provided in a larger size.

### (9) Electrolytic evaluation (voltage (V), current efficiency (%), common salt concentration in caustic soda (ppm, on the basis of 50%))

The electrolytic performance was evaluated by the following electrolytic experiment.

A titanium anode cell having an anode chamber in which an anode was provided (anode terminal cell) and a cathode cell having a nickel cathode chamber in which a cathode was provided (cathode terminal cell) were oppositely disposed. A pair of gaskets was arranged between the cells, and a laminate (a laminate of the ion exchange membrane A and an electrode for electrolysis) was sandwiched between the gaskets. Then, the anode cell, the gasket, the laminate, the gasket, and the cathode were brought into close contact together to obtain an electrolytic cell, and an electrolyzer including the cell was provided.

The anode was produced by applying a mixed solution of ruthenium chloride, iridium chloride, and titanium tetrachloride onto a titanium substrate subjected to blasting and acid etching treatment as the pretreatment, followed by drying and baking. The anode was fixed in the anode chamber by welding. As the cathode, one described in each of Examples and Comparative Examples was used. As the collector of the cathode chamber, a nickel expanded metal was used. The collector had a size of 95 mm in length × 110 mm in width. As a metal elastic body, a mattress formed by knitting nickel fine wire was used. The mattress as the metal elastic body was placed on the collector. Nickel mesh formed by plain-weaving nickel wire having a diameter of 150 µm in a sieve mesh size of 40 was placed thereover, and a string made of Teflon(R) was used to fix the four corners of the Ni mesh to the collector. This Ni mesh was used as a feed conductor. This electrolytic cell has a zero-gap structure by use of the repulsive force of the mattress as the metal elastic body. As the gaskets, ethylene propylene diene (EPDM) rubber gaskets were used. As the membrane, the ion exchange membrane A (160 mm square) produced in [Method (i)] was used.

The above electrolytic cell was used to perform electrolysis of common salt. The brine concentration (sodium chloride concentration) in the anode chamber was adjusted to 205 g/L. The sodium hydroxide concentration in the cathode chamber was adjusted to 32% by mass. The temperature each in the anode chamber and the cathode chamber was adjusted so as to allow the temperature in each electrolytic cell to reach 90°C. Common salt electrolysis was performed at a current density of 6 kA/m² to measure the voltage, current density, and common salt concentration in caustic soda. The current efficiency here is the proportion of the amount of the produced caustic soda to the passed current, and when impurity ions and hydroxide ions rather than sodium ions move through the ion exchange membrane due to the passed current, the current efficiency decreases. The current efficiency was obtained by dividing the number of moles of caustic soda produced for a certain time by the number of moles of the electrons of the current passing during that time. The number of moles of caustic soda was obtained by recovering caustic soda produced by the electrolysis in a plastic container and measuring its mass. As the common salt concentration in caustic soda, a value obtained by converting the caustic soda concentration on the basis of 50% was shown.

The specification of the electrode and the feed conductor used in each of Examples and Comparative Examples is shown in Table 1.

### (11) Measurement of thickness of catalytic layer, substrate for electrode for electrolysis, and thickness of electrode

For the thickness of the substrate for electrode for electrolysis, a digimatic thickness gauge (manufactured by Mitutoyo Corporation, minimum scale 0.001 mm) was used to calculate an average value of 10 points obtained by measuring evenly in the plane. The value was used as the thickness of the substrate for electrode for electrolysis (gauge thickness). For the thickness of the electrode, a digimatic thickness gauge was used to calculate an average value of 10 points obtained by measuring evenly in the plane, in the same manner as for the substrate for electrode. The value was used as the thickness of the electrode (gauge thickness). The thickness of the catalytic layer was determined by subtracting the thickness of the substrate for electrode for electrolysis from the thickness of the electrode.

### (12) Elastic deformation test of electrode

The ion exchange membrane A (membrane) and the electrode produced in [Method (i)] were each cut into a 110 mm square. The ion exchange membrane was immersed in pure water for 12 hours or more and then used for the test. After the ion exchange membrane and the electrode were laminated to produce a laminate under conditions of a temperature: 23±2°C and a relative humidity: 30±5%, the laminate was wound around a PVC pipe having an outer diameter of Φ32 mm and a length of 20 cm without any gap, as shown in Figure 14. The laminate was fixed using a polyethylene cable tie such that the laminate wound did not come off from the PVC pipe or loosen. The laminate was retained in this state for 6 hours. Thereafter, the cable tie was removed, and the laminate was unwound from the PVC pipe. Only the electrode was placed on a surface plate, and the heights L₁ and L₂ of a portion lifted from the surface plate were measured to determine an average value. This value was used as the index of the electrode deformation. That is, a smaller value means that the laminate is unlikely to deform.

When an expanded metal is used, there are two winding direction: the SW direction and the LW direction. In this test, the laminate was wound in the SW direction.

Deformed electrodes (electrodes that did not return to their original flat state) were evaluated for softness after plastic deformation in accordance with a method as shown in Figure 15. That is, a deformed electrode was placed on a membrane sufficiently immersed in pure water. One end of the electrode was fixed, and the other lifted end was pressed onto the membrane to release a force, and an evaluation was performed whether the deformed electrode conformed to the membrane.

### (13) Membrane damage evaluation

As the membrane, an ion exchange membrane B below was used.

As reinforcement core materials, those obtained by twisting 100 denier tape yarns of polytetrafluoroethylene (PTFE) 900 times/m into a thread form were used (hereinafter referred to as PTFE yarns). As warp sacrifice yarns, yarns obtained by twisting eight 35 denier filaments of polyethylene terephthalate (PET) 200 times/m were used (hereinafter referred to as PET yarns). As weft sacrifice yarns, yarns obtained by twisting eight 35 denier filaments of polyethylene terephthalate (PET) 200 times/m were used. First, the PTFE yarns and the sacrifice yarns were plain-woven with 24 PTFE yarns/inch so that two sacrifice yarns were arranged between adjacent PTFE yarns, to obtain a woven fabric having a thickness of 100 µm.

Next, a polymer (A1) of a dry resin that was a copolymer of CF₂=CF₂ and CF₂=CFOCF₂CF(CF₃)OCF₂CF₂COOCH₃ and had an ion exchange capacity of 0.92 mg equivalent/g and a polymer (B1) of a dry resin that was a copolymer of CF₂=CF₂ and CF₂=CFOCF₂CF(CF₃)OCF₂CF₂SO₂F and had an ion exchange capacity of 1.10 mg equivalent/g were provided. Using these polymers (A1) and (B1), a two-layer film X in which the thickness of a polymer (A1) layer was 25 µm and the thickness of a polymer (B1) layer was 89 µm was obtained by a coextrusion T die method. As the ion exchange capacity of each polymer, shown was the ion exchange capacity in the case of hydrolyzing the ion exchange group precursors of each polymer for conversion into ion exchange groups.

Separately, a polymer (B2) of a dry resin that was a copolymer of CF₂=CF₂ and CF₂=CFOCF₂CF(CF₃)OCF₂CF₂SO₂F and had an ion exchange capacity of 1.10 mg equivalent/g was provided. This polymer was single-layer extruded to obtain a film Y having a thickness of 20 µm.

Subsequently, release paper, the film Y, a reinforcing material, and the film X were laminated in this order on a hot plate having a heat source and a vacuum source inside and having micropores on its surface, heated and depressurized under the conditions of a hot plate temperature of 225°C and a degree of reduced pressure of 0.022 MPa for two minutes, and then the release paper was removed to obtain a composite membrane. The resulting composite membrane was immersed in an aqueous solution comprising dimethyl sulfoxide (DMSO) and potassium hydroxide (KOH) for an hour for saponification. Thereafter, the membrane was immersed in 0.5N NaOH for an hour to replace the ions attached to the ion exchange groups by Na, and then washed with water. Further, the membrane was dried at 60°C.

Additionally, a polymer (B3) of a dry resin that was a copolymer of CF₂=CF₂ and CF₂=CFOCF₂CF(CF₃)OCF₂CF₂SO₂F and had an ion exchange capacity of 1.05 mg equivalent/g were hydrolyzed and then was turned into an acid type with hydrochloric acid. Zirconium oxide particles having an average particle size of primary particles of 0.02 µm were added to a 50/50 (mass ratio) mixed solution of water and ethanol in which the polymer (B3') of this acid type was dissolved in a proportion of 5% by mass such that the mass ratio of the polymer (B3') to the zirconium oxide particles was 20/80. Thereafter, the polymer (B3') was dispersed in a suspension of the zirconium oxide particles with a ball mill to obtain a suspension.

This suspension was applied by a spray method onto both the surfaces of the ion exchange membrane and dried to obtain an ion exchange membrane B having a coating layer containing the polymer (B3') and the zirconium oxide particles. The coating density of zirconium oxide measured by fluorescent X-ray measurement was 0.35 mg/cm².

The anode used was the same as in (9) Electrolytic evaluation.

The cathode used was one described in each of Examples and Comparative Examples. The collector, mattress, and feed conductor of the cathode chamber used were the same as in (9) Electrolytic evaluation. That is, a zero-gap structure had been provided by use of Ni mesh as the feed conductor and the repulsive force of the mattress as the metal elastic body. The gaskets used were the same as in (9) Electrolytic evaluation. As the membrane, the ion exchange membrane B produced by the method mentioned above was used. That is, an electrolyzer equivalent to that in (9) was provided except that the laminate of the ion exchange membrane B and the electrode for electrolysis was sandwiched between a pair of gaskets.

The above electrolytic cell was used to perform electrolysis of common salt. The brine concentration (sodium chloride concentration) in the anode chamber was adjusted to 205 g/L. The sodium hydroxide concentration in the cathode chamber was adjusted to 32% by mass. The temperature each in the anode chamber and the cathode chamber was adjusted such that the temperature in each electrolytic cell reached 70°C. Common salt electrolysis was performed at a current density of 8 kA/m². The electrolysis was stopped 12 hours after the start of the electrolysis, and the ion exchange membrane B was removed and observed for its damage condition.

"0" means no damage. "1 to 3" means that damage was present, and a larger number means a larger degree of damage.

### (14) Ventilation resistance of electrode

The ventilation resistance of the electrode was measured using an air permeability tester KES-F8 (trade name, KATO TECH CO., LTD.). The unit for the ventilation resistance value is kPa·s/m. The measurement was repeated 5 times, and the average value was listed in Table 2. The measurement was conducted under the following two conditions. The temperature of the measuring chamber was 24°C and the relative humidity was 32%.
·Measurement condition 1 (ventilation resistance 1)
   Piston speed: 0.2 cm/s
   Ventilation volume: 0.4 cc/cm²/s
   Measurement range: SENSE L (low)
   Sample size: 50 mm × 50 mm
·Measurement condition 2 (ventilation resistance 2)
   Piston speed: 2 cm/s
   Ventilation volume: 4 cc/cm²/s
   Measurement range: SENSE M (medium) or H (high)
   Sample size: 50 mm × 50 mm

### [Example 1]

As a substrate for electrode for cathode electrolysis, an electrolytic nickel foil having a gauge thickness of 16 µm was provided. One surface of this nickel foil was subjected to a roughening treatment by means of electrolytic nickel plating. The arithmetic average roughness Ra of the roughened surface was 0.71 µm. The measurement of the surface roughness was performed under the same conditions as for the surface roughness measurement of the nickel plate subjected to the blast treatment.

A porous foil was formed by perforating this nickel foil with circular holes by punching. The opening ratio was 49%.

A coating liquid for use in forming an electrode catalyst was prepared by the following procedure. A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). Then, after drying at 50°C for 10 minutes, preliminary baking at 150°C for 3 minutes, and baking at 350°C for 10 minutes were performed. A series of these coating, drying, preliminary baking, and baking operations was repeated until a predetermined amount of coating was achieved. The thickness of the electrode produced in Example 1 was 24 µm. The thickness of the catalytic layer, which was determined by subtracting the thickness of the substrate for electrode for electrolysis from the thickness of the electrode, was 8 µm. The coating was formed also on the surface not roughened. The thickness was the total thickness of ruthenium oxide and cerium oxide.

The measurement results of the adhesive force of the electrode produced by the above method are shown in Table 2. A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0028 (kPa·s/m) under the measurement condition 2.

The electrode produced by the above method was cut into a size of 95 mm in length and 110 mm in width for electrolytic evaluation. The roughened surface of the electrode was oppositely disposed on a substantial center position of the carboxylic acid layer side of the ion exchange membrane A (size: 160 mm × 160 mm), produced in [Method (i)] and equilibrated with a 0.1 N NaOH aqueous solution, and allowed to adhere thereto via the surface tension of the aqueous solution.

Even when the four corners of the membrane portion of the membrane-integrated electrode, which was formed by integrating the membrane with the electrode, were pinched and hung such that the membrane-integrated electrode was in parallel with the ground by allowing the electrode to face the ground side, the electrode did not come off or was not displaced. Also when both the ends of one side were pinched and hung such that the membrane-integrated electrode was vertical to the ground, the electrode did not come off or was not displaced.

The above membrane-integrated electrode was sandwiched between the anode cell and the cathode cell such that the surface onto which the electrode was attached was allowed to face the cathode chamber side. In the sectional structure, the collector, the mattress, the nickel mesh feed conductor, the electrode, the membrane, and the anode are arranged in the order mentioned from the cathode chamber side to form a zero-gap structure.

The resulting electrode was subjected to electrolytic evaluation. The results are shown in Table 2.

The electrode exhibited a low voltage, high current efficiency, and a low common salt concentration in caustic soda. The handling property was also good: "1". The membrane damage was also evaluated as good: "0".

When the amount of coating after the electrolysis was measured by fluorescent X-ray analysis (XRF), substantially 100% of the coating remained on the roughened surface, and the coating on the surface not roughened was reduced. This indicates that the surface opposed to the membrane (roughened surface) contributes to the electrolysis and the other surface not opposed to the membrane can achieve satisfactory electrolytic performance when the amount of coating is small or no coating is present.

### [Example 2]

In Example 2, an electrolytic nickel foil having a gauge thickness of 22 µm was used as the substrate for electrode for cathode electrolysis. One surface of this nickel foil was subjected to roughening treatment by means of electrolytic nickel plating. The arithmetic average roughness Ra of the roughened surface was 0.96 µm. The measurement of the surface roughness was performed under the same conditions as for the surface roughness measurement of the nickel plate subjected to the blast treatment. The opening ratio was 44%. Except for the above described, evaluation was performed in the same manner as in Example 1, and the results are shown in Table 2.

The thickness of the electrode was 29 µm. The thickness of the catalytic layer, which was determined by subtracting the thickness of the substrate for electrode for electrolysis from the thickness of the electrode, was 7 µm. The coating was formed also on the surface not roughened.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0033 (kPa·s/m) under the measurement condition 2.

Additionally, the electrode exhibited a low voltage, high current efficiency, and a low common salt concentration in caustic soda. The handling property was also as good as "1". The membrane damage was also evaluated as good: "0".

When the amount of coating after the electrolysis was measured by XRF, substantially 100% of the coating remained on the roughened surface, and the coating on the surface not roughened was reduced. This indicates that the surface opposed to the membrane (roughened surface) contributes to the electrolysis and the other surface not opposed to the membrane can achieve satisfactory electrolytic performance when the amount of coating is small or no coating is present.

### [Example 3]

In Example 3, an electrolytic nickel foil having a gauge thickness of 30 µm was used as the substrate for electrode for cathode electrolysis. One surface of this nickel foil was subjected to roughening treatment by means of electrolytic nickel plating. The arithmetic average roughness Ra of the roughened surface was 1.38 µm. The measurement of the surface roughness was performed under the same conditions as for the surface roughness measurement of the nickel plate subjected to the blast treatment. The opening ratio was 44%. Except for the above described, evaluation was performed in the same manner as in Example 1, and the results are shown in Table 2.

The thickness of the electrode was 38 µm. The thickness of the catalytic layer, which was determined by subtracting the thickness of the substrate for electrode for electrolysis from the thickness of the electrode, was 8 µm. The coating was formed also on the surface not roughened.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0027 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

When the amount of coating after the electrolysis was measured by XRF, substantially 100% of the coating remained on the roughened surface, and the coating on the surface not roughened was reduced. This indicates that the surface opposed to the membrane (roughened surface) contributes to the electrolysis and the other surface not opposed to the membrane can achieve satisfactory electrolytic performance when the amount of coating is small or no coating is present.

### [Example 4]

In Example 4, an electrolytic nickel foil having a gauge thickness of 16 µm was used as the substrate for electrode for cathode electrolysis. One surface of this nickel foil was subjected to a roughening treatment by means of electrolytic nickel plating. The arithmetic average roughness Ra of the roughened surface was 0.71 µm. The measurement of the surface roughness was performed under the same conditions as for the surface roughness measurement of the nickel plate subjected to the blast treatment. The opening ratio was 75%. Except for the above described, evaluation was performed in the same manner as in Example 1, and the results are shown in Table 2.

The thickness of the electrode was 24 µm. The thickness of the catalytic layer, which was determined by subtracting the thickness of the substrate for electrode for electrolysis from the thickness of the electrode, was 8 µm.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0023 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

When the amount of coating after the electrolysis was measured by XRF, substantially 100% of the coating remained on the roughened surface, and the coating on the surface not roughened was reduced. This indicates that the surface opposed to the membrane (roughened surface) contributes to the electrolysis and the other surface not opposed to the membrane can achieve satisfactory electrolytic performance when the amount of coating is small or no coating is present.

### [Example 5]

In Example 5, an electrolytic nickel foil having a gauge thickness of 20 µm was provided as the substrate for electrode for cathode electrolysis. Both the surface of this nickel foil was subjected to a roughening treatment by means of electrolytic nickel plating. The arithmetic average roughness Ra of the roughened surface was 0.96 µm. Both the surfaces had the same roughness. The measurement of the surface roughness was performed under the same conditions as for the surface roughness measurement of the nickel plate subjected to the blast treatment. The opening ratio was 49%. Except for the above described, evaluation was performed in the same manner as in Example 1, and the results are shown in Table 2.

The thickness of the electrode was 30 µm. The thickness of the catalytic layer, which was determined by subtracting the thickness of the substrate for electrode for electrolysis from the thickness of the electrode, was 10 µm. The coating was formed also on the surface not roughened.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0023 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

Additionally, when the amount of coating after the electrolysis was measured by XRF, substantially 100% of the coating remained on both the surfaces. In consideration of comparison with Examples 1 to 4, this indicates that the other surface not opposed to the membrane can achieve satisfactory electrolytic performance when the amount of coating is small or no coating is present.

### [Example 6]

In Example 6, evaluation was performed in the same manner as in Example 1 except that coating of the substrate for electrode for cathode electrolysis was performed by ion plating, and the results are shown in Table 2. In the ion plating, film forming was performed using Ru metal target at the heating temperature of 200°C and under an argon/oxygen atmosphere at a film forming pressure of 7 × 10⁻² Pa. The coating formed was ruthenium oxide.

The thickness of the electrode was 26 µm. The thickness of the catalytic layer, which was determined by subtracting the thickness of the substrate for electrode for electrolysis from the thickness of the electrode, was 10 µm.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0028 (kPa·s/m) under the measurement condition 2.

Additionally, the electrode exhibited a low voltage, high current efficiency and a low common salt concentration in caustic soda. The handling property was also good: "1". The membrane damage was also evaluated as good: "0".

### [Example 7]

In Example 7, the substrate for electrode for cathode electrolysis was produced by an electroforming method. The photomask had a shape formed by vertically and horizontally arranging 0.485 mm × 0.485 mm squares at an interval of 0.15 mm. Exposure, development, and electroplating were sequentially performed to obtain a nickel porous foil having a gauge thickness of 20 µm and an opening ratio of 56%. The arithmetic average roughness Ra of the surface was 0.71 µm. The measurement of the surface roughness was performed under the same conditions as for the surface roughness measurement of the nickel plate subjected to the blast treatment. Except for the above described, evaluation was performed in the same manner as in Example 1, and the results are shown in Table 2.

The thickness of the electrode was 37 µm. The thickness of the catalytic layer, which was determined by subtracting the thickness of the substrate for electrode for electrolysis from the thickness of the electrode, was 17 µm.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0032 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 8]

In Example 8, the substrate for electrode for cathode electrolysis was produced by an electroforming method. The substrate had a gauge thickness of 50 µm and an opening ratio of 56%. The arithmetic average roughness Ra of the surface was 0.73 µm. The measurement of the surface roughness was performed under the same conditions as for the surface roughness measurement of the nickel plate subjected to the blast treatment. Except for the above described, evaluation was performed in the same manner as in Example 1, and the results are shown in Table 2.

The thickness of the electrode was 60 µm. The thickness of the catalytic layer, which was determined by subtracting the thickness of the substrate for electrode for electrolysis from the thickness of the electrode, was 10 µm.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0032 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 9]

In Example 9, a nickel nonwoven fabric having a gauge thickness of 150 µm and a void ratio of 76% (manufactured by NIKKO TECHNO, Ltd.) was used as the substrate for electrode for cathode electrolysis. The nonwoven fabric had a nickel fiber diameter of about 40 µm and a basis weight of 300 g/m². Except for the above described, evaluation was performed in the same manner as in Example 1, and the results are shown in Table 2.

The thickness of the electrode was 165 µm. The thickness of the catalytic layer, which was determined by subtracting the thickness of the substrate for electrode for electrolysis from the thickness of the electrode, was 15 µm.

A sufficient adhesive force was observed.

When a deformation test of the electrode was performed, the average value of L₁ and L₂ was 29 mm, and the electrode did not return to the original flat state. Then, when softness after plastic deformation was evaluated, the electrode conformed to the membrane due to the surface tension. Thus, it was observed that the electrode was able to be brought into contact with the membrane by a small force even if the electrode was plastically deformed and this electrode had a satisfactory handling property.

When the ventilation resistance of the electrode was measured, the ventilation resistance was 0.07 (kPa·s/m) or less under the measurement condition 1 and 0.0612 (kPa·s/m) under the measurement condition 2.

Additionally, the electrode exhibited a low voltage, high current efficiency, and a low common salt concentration in caustic soda. The electrode had a handling property of "2" and was determined to be handleable as a large laminate. The membrane damage was evaluated as good: "0".

### [Example 10]

In Example 10, a nickel nonwoven fabric having a gauge thickness of 200 µm and a void ratio of 72% (manufactured by NIKKO TECHNO, Ltd.) was used as the substrate for electrode for cathode electrolysis. The nonwoven fabric had a nickel fiber diameter of about 40 µm and a basis weight of 500 g/m². Except for the above described, evaluation was performed in the same manner as in Example 1, and the results are shown in Table 2.

The thickness of the electrode was 215 µm. The thickness of the catalytic layer, which was determined by subtracting the thickness of the substrate for electrode for electrolysis from the thickness of the electrode, was 15 µm.

A sufficient adhesive force was observed.

When a deformation test of the electrode was performed, the average value of L₁ and L₂ was 40 mm, and the electrode did not return to the original flat state. Then, when softness after plastic deformation was evaluated, the electrode conformed to the membrane due to the surface tension. Thus, it was observed that the electrode was able to be brought into contact with the membrane by a small force even if the electrode was plastically deformed and this electrode had a satisfactory handling property.

When the ventilation resistance of the electrode was measured, the ventilation resistance was 0.07 (kPa·s/m) or less under the measurement condition 1 and 0.0164 (kPa·s/m) under the measurement condition 2.

Additionally, the electrode exhibited a low voltage, high current efficiency, and a low common salt concentration in caustic soda. The electrode had a handling property of "2" and was determined to be handleable as a large laminate. The membrane damage was evaluated as good: "0".

### [Example 11]

In Example 11, foamed nickel having a gauge thickness of 200 µm and a void ratio of 72% (manufactured by Mitsubishi Materials Corporation) was used as the substrate for electrode for cathode electrolysis. Except for the above described, evaluation was performed in the same manner as in Example 1, and the results are shown in Table 2.

The thickness of the electrode was 210 µm. The thickness of the catalytic layer, which was determined by subtracting the thickness of the substrate for electrode for electrolysis from the thickness of the electrode, was 10 µm.

A sufficient adhesive force was observed.

When a deformation test of the electrode was performed, the average value of L₁ and L₂ was 17 mm, and the electrode did not return to the original flat state. Then, when softness after plastic deformation was evaluated, the electrode conformed to the membrane due to the surface tension. Thus, it was observed that the electrode was able to be brought into contact with the membrane by a small force even if the electrode was plastically deformed and this electrode had a satisfactory handling property.

When the ventilation resistance of the electrode was measured, the ventilation resistance was 0.07 (kPa·s/m) or less under the measurement condition 1 and 0.0402 (kPa·s/m) under the measurement condition 2.

Additionally, the electrode exhibited a low voltage, high current efficiency, and a low common salt concentration in caustic soda. The electrode had a handling property of "2" and was determined to be handleable as a large laminate. The membrane damage was evaluated as good: "0".

### [Example 12]

In Example 12, a 200-mesh nickel mesh having a line diameter of 50 µm, a gauge thickness of 100 µm, and an opening ratio of 37% was used as the substrate for electrode for cathode electrolysis. A blast treatment was performed with alumina of grain-size number 320. The blast treatment did not change the opening ratio. It is difficult to measure the roughness of the surface of the wire mesh. Thus, in Example 12, a nickel plate having a thickness of 1 mm was simultaneously subjected to the blast treatment during the blasting, and the surface roughness of the nickel plate was taken as the surface roughness of the wire mesh. The arithmetic average roughness Ra of a wire piece of the wire mesh was 0.64 µm. The measurement of the surface roughness was performed under the same conditions as for the surface roughness measurement of the nickel plate subjected to the blast treatment. Except for the above described, evaluation was performed in the same manner as in Example 1, and the results are shown in Table 2.

The thickness of the electrode was 110 µm. The thickness of the catalytic layer, which was determined by subtracting the thickness of the substrate for electrode for electrolysis from the thickness of the electrode, was 10 µm.

A sufficient adhesive force was observed.

When a deformation test of the electrode was performed, the average value of L₁ and L₂ was 0.5 mm. It was found that the electrode had a broad elastic deformation region.

When the ventilation resistance of the electrode was measured, the ventilation resistance was 0.07 (kPa·s/m) or less under the measurement condition 1 and 0.0154 (kPa·s/m) under the measurement condition 2.

Additionally, the electrode exhibited a low voltage, high current efficiency, and a low common salt concentration in caustic soda. The handling property was also as good as "1". The membrane damage was evaluated as good: "0".

### [Example 13]

In Example 13, a 150-mesh nickel mesh having a line diameter of 65 µm, a gauge thickness of 130 µm, and an opening ratio of 38% was used as the substrate for electrode for cathode electrolysis. A blast treatment was performed with alumina of grain-size number 320. The blast treatment did not change the opening ratio. It is difficult to measure the roughness of the surface of the wire mesh. Thus, in Example 13, a nickel plate having a thickness of 1 mm was simultaneously subjected to the blast treatment during the blasting, and the surface roughness of the nickel plate was taken as the surface roughness of the wire mesh. The arithmetic average roughness Ra was 0.66 µm. The measurement of the surface roughness was performed under the same conditions as for the surface roughness measurement of the nickel plate subjected to the blast treatment. Except for the above described, the above evaluation was performed in the same manner as in Example 1, and the results are shown in Table 2.

The thickness of the electrode was 133 µm. The thickness of the catalytic layer, which was determined by subtracting the thickness of the substrate for electrode for electrolysis from the thickness of the electrode, was 3 µm.

A sufficient adhesive force was observed.

When a deformation test of the electrode was performed, the average value of L₁ and L₂ was 6.5 mm. It was found that the electrode had a broad elastic deformation region.

When the ventilation resistance of the electrode was measured, the ventilation resistance was 0.07 (kPa·s/m) or less under the measurement condition 1 and 0.0124 (kPa·s/m) under the measurement condition 2.

Additionally, the electrode exhibited a low voltage, high current efficiency, and a low common salt concentration in caustic soda. The electrode had a handling property of "2" and was determined to be handleable as a large laminate. The membrane damage was also evaluated as good: "0".

### [Example 14]

In Example 14, a substrate identical to that of Example 3 (gauge thickness of 30 µm and opening ratio of 44%) was used as the substrate for electrode for cathode electrolysis. Electrolytic evaluation was performed with a structure identical to that of Example 1 except that no nickel mesh feed conductor was included. That is, in the sectional structure of the cell, the collector, the mattress, the membrane-integrated electrode, and the anode are arranged in the order mentioned from the cathode chamber side to form a zero-gap structure, and the mattress serves as the feed conductor. Except for the above described, evaluation was performed in the same manner as in Example 1, and the results are shown in Table 2.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0027 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 15]

In Example 15, a substrate identical to that of Example 3 (gauge thickness of 30 µm and opening ratio of 44%) was used as the substrate for electrode for cathode electrolysis. The cathode used in Reference Example 1, which was degraded and had an enhanced electrolytic voltage, was placed instead of the nickel mesh feed conductor. Except for the above described, electrolytic evaluation was performed with a structure identical to that of Example 1. That is, in the sectional structure of the cell, the collector, the mattress, the cathode that was degraded and had an enhanced electrolytic voltage (serves as the feed conductor), the electrode for electrolysis (cathode), the membrane, and the anode are arranged in the order mentioned from the cathode chamber side to form a zero-gap structure, and the cathode that is degraded and has an enhanced electrolytic voltage serves as the feed conductor. Except for the above described, evaluation was performed in the same manner as in Example 1, and the results are shown in Table 2.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0027 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 16]

A titanium foil having a gauge thickness of 20 µm was provided as the substrate for electrode for anode electrolysis. Both the surfaces of the titanium foil were subjected to a roughening treatment. A porous foil was formed by perforating this titanium foil with circular holes by punching. The hole diameter was 1 mm, and the opening ratio was 14%. The arithmetic average roughness Ra of the surface was 0.37 µm. The measurement of the surface roughness was performed under the same conditions as for the surface roughness measurement of the nickel plate subjected to the blast treatment.

A coating liquid for use in forming an electrode catalyst was prepared by the following procedure. A ruthenium chloride solution having a ruthenium concentration of 100 g/L (Tanaka Kikinzoku Kogyo K.K.), iridium chloride having an iridium concentration of 100 g/L (Tanaka Kikinzoku Kogyo K.K.), and titanium tetrachloride (Wako Pure Chemical Industries, Ltd.) were mixed such that the molar ratio among the ruthenium element, the iridium element, and the titanium element was 0.25:0.25:0.5. This mixed solution was sufficiently stirred and used as an anode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). After the above coating liquid was applied onto the titanium porous foil, drying at 60°C for 10 minutes and baking at 475°C for 10 minutes were performed. A series of these coating, drying, preliminary baking, and baking operations was repeatedly performed, and then baking at 520°C was performed for an hour.

The electrode produced by the above method was cut into a size of 95 mm in length and 110 mm in width for electrolytic evaluation. The cut electrode was allowed to adhere via the surface tension of the aqueous solution to a substantial center position of the sulfonic acid layer side of the ion exchange membrane A (size: 160 mm × 160 mm) produced in [Method (i)] and equilibrated with a 0.1 N NaOH aqueous solution.

The cathode was prepared in the following procedure. First, a 40-mesh nickel wire mesh having a line diameter of 150 µm was provided as the substrate. After blasted with alumina as pretreatment, the wire mesh was immersed in 6 N hydrochloric acid for 5 minutes, sufficiently washed with pure water, and dried.

Next, a ruthenium chloride solution having a ruthenium concentration of 100 g/L (Tanaka Kikinzoku Kogyo K.K.) and cerium chloride (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). Then, after drying at 50°C for 10 minutes, preliminary baking at 300°C for 3 minutes, and baking at 550°C for 10 minutes were performed. Thereafter, baking at 550°C for an hour was performed. A series of these coating, drying, preliminary baking, and baking operations was repeated.

As the collector of the cathode chamber, a nickel expanded metal was used. The collector had a size of 95 mm in length × 110 mm in width. As a metal elastic body, a mattress formed by knitting nickel fine wire was used. The mattress as the metal elastic body was placed on the collector. The cathode produced by the above method was placed thereover, and a string made of Teflon(R) was used to fix the four corners of the mesh to the collector.

Even when the four corners of the membrane portion of the membrane-integrated electrode, which was formed by integrating the membrane with the anodes, were pinched and hung such that the membrane-integrated electrode was in parallel with the ground by allowing the electrode to face the ground side, the electrode did not come off or was not displaced. Also when both the ends of one side were pinched and hung such that the membrane-integrated electrode was vertical to the ground, the electrode did not come off or was not displaced.

The anode used in Reference Example 3, which was degraded and had an enhanced electrolytic voltage, was fixed to the anode cell by welding, and the above membrane-integrated electrode was sandwiched between the anode cell and the cathode cell such that the surface onto which the electrode was attached was allowed to face the anode chamber side. That is, in the sectional structure of the cell, the collector, the mattress, the cathode, the membrane, the electrode for electrolysis (titanium porous foil anode), and the anode that was degraded and had an enhanced electrolytic voltage were arranged in the order mentioned from the cathode chamber side to form a zero-gap structure. The anode that was degraded and had an enhanced electrolytic voltage served as the feed conductor. The titanium porous foil anode and the anode that was degraded and had an enhanced electrolytic voltage were only in physical contact with each other and were not fixed with each other by welding.

Evaluation on this structure was performed in the same manner as in Example 1, and the results are shown in Table 2.

The thickness of the electrode was 26 µm. The thickness of the catalytic layer, which was determined by subtracting the thickness of the substrate for electrode for electrolysis from the thickness of the electrode, was 6 µm.

A sufficient adhesive force was observed.

When a deformation test of the electrode was performed, the average value of L₁ and L₂ was 4 mm. It was found that the electrode had a broad elastic deformation region.

When the ventilation resistance of the electrode was measured, the ventilation resistance was 0.07 (kPa·s/m) or less under the measurement condition 1 and 0.0060 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 17]

In Example 17, a titanium foil having a gauge thickness of 20 µm and an opening ratio of 30% was used as the substrate for electrode for anode electrolysis. The arithmetic average roughness Ra of the surface was 0.37 µm. The measurement of the surface roughness was performed under the same conditions as for the surface roughness measurement of the nickel plate subjected to the blast treatment. Except for the above described, evaluation was performed in the same manner as in Example 16, and the results are shown in Table 2.

The thickness of the electrode was 30 µm. The thickness of the catalytic layer, which was determined by subtracting the thickness of the substrate for electrode for electrolysis from the thickness of the electrode, was 10 µm.

A sufficient adhesive force was observed.

When a deformation test of the electrode was performed, the average value of L₁ and L₂ was 5 mm. It was found that the electrode had a broad elastic deformation region.

When the ventilation resistance of the electrode was measured, the ventilation resistance was 0.07 (kPa·s/m) or less under the measurement condition 1 and 0.0030 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 18]

In Example 18, a titanium foil having a gauge thickness of 20 µm and an opening ratio of 42% was used as the substrate for electrode for anode electrolysis. The arithmetic average roughness Ra of the surface was 0.38 µm. The measurement of the surface roughness was performed under the same conditions as for the surface roughness measurement of the nickel plate subjected to the blast treatment. Except for the above described, evaluation was performed in the same manner as in Example 16, and the results are shown in Table 2.

The thickness of the electrode was 32 µm. The thickness of the catalytic layer, which was determined by subtracting the thickness of the substrate for electrode for electrolysis from the thickness of the electrode, was 12 µm.

A sufficient adhesive force was observed.

When a deformation test of the electrode was performed, the average value of L₁ and L₂ was 2.5 mm. It was found that the electrode had a broad elastic deformation region.

When the ventilation resistance of the electrode was measured, the ventilation resistance was 0.07 (kPa·s/m) or less under the measurement condition 1 and 0.0022 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 19]

In Example 19, a titanium foil having a gauge thickness of 50 µm and an opening ratio of 47% was used as the substrate for electrode for anode electrolysis. The arithmetic average roughness Ra of the surface was 0.40 µm. The measurement of the surface roughness was performed under the same conditions as for the surface roughness measurement of the nickel plate subjected to the blast treatment. Except for the above described, evaluation was performed in the same manner as in Example 16, and the results are shown in Table 2.

The thickness of the electrode was 69 µm. The thickness of the catalytic layer, which was determined by subtracting the thickness of the substrate for electrode for electrolysis from the thickness of the electrode, was 19 µm.

A sufficient adhesive force was observed.

When a deformation test of the electrode was performed, the average value of L₁ and L₂ was 8 mm. It was found that the electrode had a broad elastic deformation region.

When the ventilation resistance of the electrode was measured, the ventilation resistance was 0.07 (kPa·s/m) or less under the measurement condition 1 and 0.0024 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 20]

In Example 20, a titanium nonwoven fabric having a gauge thickness of 100 µm, a titanium fiber diameter of about 20 µm, a basis weight of 100 g/m², and an opening ratio of 78% was used as the substrate for electrode for anode electrolysis. Except for the above described, evaluation was performed in the same manner as in Example 16, and the results are shown in Table 2.

The thickness of the electrode was 114 µm. The thickness of the catalytic layer, which was determined by subtracting the thickness of the substrate for electrode for electrolysis from the thickness of the electrode, was 14 µm.

A sufficient adhesive force was observed.

When a deformation test of the electrode was performed, the average value of L₁ and L₂ was 2 mm. It was found that the electrode had a broad elastic deformation region.

When the ventilation resistance of the electrode was measured, the ventilation resistance was 0.07 (kPa·s/m) or less under the measurement condition 1 and 0.0228 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 21]

In Example 21, a 150-mesh titanium wire mesh having a gauge thickness of 120 µm and a titanium fiber diameter of about 60 µm was used as the substrate for electrode for anode electrolysis. The opening ratio was 42%. A blast treatment was performed with alumina of grain-size number 320. It is difficult to measure the roughness of the surface of the wire mesh. Thus, in Example 21, a titanium plate having a thickness of 1 mm was simultaneously subjected to the blast treatment during the blasting, and the surface roughness of the titanium plate was taken as the surface roughness of the wire mesh. The arithmetic average roughness Ra was 0.60 µm. The measurement of the surface roughness was performed under the same conditions as for the surface roughness measurement of the nickel plate subjected to the blast treatment. Except for the above described, evaluation was performed in the same manner as in Example 16, and the results are shown in Table 2.

The thickness of the electrode was 140 µm. The thickness of the catalytic layer, which was determined by subtracting the thickness of the substrate for electrode for electrolysis from the thickness of the electrode, was 20 µm.

A sufficient adhesive force was observed.

When a deformation test of the electrode was performed, the average value of L₁ and L₂ was 10 mm. It was found that the electrode had a broad elastic deformation region.

When the ventilation resistance of the electrode was measured, the ventilation resistance was 0.07 (kPa·s/m) or less under the measurement condition 1 and 0.0132 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 22]

In Example 22, an anode that was degraded and had an enhanced electrolytic voltage was used in the same manner as in Example 16 as the anode feed conductor, and a titanium nonwoven fabric identical to that of Example 20 was used as the anode. A cathode that was degraded and had an enhanced electrolytic voltage was used in the same manner as in Example 15 as the cathode feed conductor, and a nickel foil electrode identical to that of Example 3 was used as the cathode. In the sectional structure of the cell, the collector, the mattress, the cathode that was degraded and had an enhanced voltage, the nickel porous foil cathode, the membrane, the titanium nonwoven fabric anode, and the anode that was degraded and had an enhanced electrolytic voltage are arranged in the order mentioned from the cathode chamber side to form a zero-gap structure, and the cathode and anode degraded and having an enhanced electrolytic voltage serve as the feed conductor. Except for the above described, evaluation was performed in the same manner as in Example 1, and the results are shown in Table 2.

The thickness of the electrode (anode) was 114 µm, and the thickness of the catalytic layer, which was determined by subtracting the thickness of the substrate for electrode for electrolysis from the thickness of the electrode (anode), was 14 µm. The thickness of the electrode (cathode) was 38 µm, and the thickness of the catalytic layer, which was determined by subtracting the thickness of the substrate for electrode for electrolysis from the thickness of the electrode (cathode), was 8 µm.

A sufficient adhesive force was observed both in the anode and the cathode.

When a deformation test of the electrode (anode) was performed, the average value of L₁ and L₂ was 2 mm. When a deformation test of the electrode (cathode) was performed, the average value of L₁ and L₂ was 0 mm.

When the ventilation resistance of the electrode (anode) was measured, the ventilation resistance was 0.07 (kPa·s/m) or less under the measurement condition 1 and 0.0228 (kPa·s/m) under the measurement condition 2. When the ventilation resistance of the electrode (cathode) was measured, the ventilation resistance was 0.07 (kPa·s/m) or less under the measurement condition 1 and 0.0027 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0" both in the anode and the cathode. In Example 22, the cathode and the anodes were combined by attaching the cathode to one surface of the membrane and the anode to the other surface and subjected to the membrane damage evaluation.

### [Example 23]

In Example 23, a microporous membrane "Zirfon Perl UTP 500" manufactured by Agfa was used.

The Zirfon membrane was immersed in pure water for 12 hours or more and used for the test. Except for the above described, the above evaluation was performed in the same manner as in Example 3, and the results are shown in Table 2.

When a deformation test of the electrode was performed, the average value of L₁ and L₂ was 0 mm. It was found that the electrode had a broad elastic deformation region.

Similarly to the case where an ion exchange membrane was used as the membrane, a sufficient adhesive force was observed. The microporous membrane was brought into a close contact with the electrode via the surface tension, and the handling property was good: "1".

### [Example 24]

A carbon cloth obtained by weaving a carbon fiber having a gauge thickness of 566 µm was provided as the substrate for electrode for cathode electrolysis. A coating liquid for use in forming an electrode catalyst on this carbon cloth was prepared by the following procedure. A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088 (trade name), thickness 10 mm)) around a polyvinyl chloride (PVC) cylinder was always in contact with the above coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). Then, after drying at 50°C for 10 minutes, preliminary baking at 150°C for 3 minutes, and baking at 350°C for 10 minutes were performed. A series of these coating, drying, preliminary baking, and baking operations was repeated until a predetermined amount of coating was achieved. The thickness of the electrode produced was 570 µm. The thickness of the catalytic layer, which was determined by subtracting the thickness of the substrate for electrode for electrolysis from the thickness of the electrode, was 4 µm. The thickness of the catalytic layer was the total thickness of ruthenium oxide and cerium oxide.

The resulting electrode was subjected to electrolytic evaluation. The results are shown in Table 2.

When a deformation test of the electrode was performed, the average value of L₁ and L₂ was 0 mm.

When the ventilation resistance of the electrode was measured, the ventilation resistance was 0.19 (kPa·s/m) under the measurement condition 1 and 0.176 (kPa·s/m) under the measurement condition 2.

The electrode had a handling property of "2" and was determined to be handleable as a large laminate.

The voltage was high, the membrane damage was evaluated as "1", and membrane damage was observed. It was conceived that this is because NaOH that had been generated in the electrode accumulated on the interface between the electrode and the membrane to elevate the concentration thereof, due to the high ventilation resistance of the electrode of Example 24.

### [Reference Example 1]

In Reference Example 1, used was a cathode used as the cathode in a large electrolyzer for eight years, degraded, and having an enhanced electrolytic voltage. The above cathode was placed instead of the nickel mesh feed conductor on the mattress of the cathode chamber, and the ion exchange membrane A produced in [Method (i)] was sandwiched therebetween. Then, electrolytic evaluation was performed. In Reference Example 1, no membrane-integrated electrode was used. In the sectional structure of the cell, the collector, the mattress, the cathode that was degraded and had an enhanced electrolytic voltage, the ion exchange membrane A, and the anodes were arranged in the order mentioned from the cathode chamber side to form a zero-gap structure.

As a result of the electrolytic evaluation with this structure, the voltage was 3.04 V, the current efficiency was 97.0%, the common salt concentration in caustic soda (value converted on the basis of 50%) was 20 ppm. Consequently, due to degradation of the cathode, the voltage was high.

### [Reference Example 2]

In Reference Example 2, a nickel mesh feed conductor was used as the cathode. That is, electrolysis was performed on nickel mesh having no catalyst coating thereon.

The nickel mesh cathode was placed on the mattress of the cathode chamber, and the ion exchange membrane A produced in [Method (i)] was sandwiched therebetween. Then, electrolytic evaluation was performed. In the sectional structure of the electric cell of Reference Example 2, the collector, the mattress, the nickel mesh, the ion exchange membrane A, and the anodes were arranged in the order mentioned from the cathode chamber side to form a zero-gap structure.

As a result of the electrolytic evaluation with this structure, the voltage was 3.38 V, the current efficiency was 97.7%, the common salt concentration in caustic soda (value converted on the basis of 50%) was 24 ppm. Consequently, the voltage was high because the cathode catalyst had no coating.

### [Reference Example 3]

In Reference Example 3, used was an anode used as the anode in a large electrolyzer for about eight years, degraded, and having an enhanced electrolytic voltage.

In the sectional structure of the electrolytic cell of Reference Example 3, the collector, the mattress, the cathode, the ion exchange membrane A produced in [Method (i)], and the anode that was degraded and had an enhanced electrolytic voltage were arranged in the order mentioned from the cathode chamber side to form a zero-gap structure.

As a result of the electrolytic evaluation with this structure, the voltage was 3.18 V, the current efficiency was 97.0%, the common salt concentration in caustic soda (value converted on the basis of 50%) was 22 ppm. Consequently, due to degradation of the anode, the voltage was high.

### [Comparative Example 1]

In Comparative Example 1, a fully-rolled nickel expanded metal having a gauge thickness of 100 µm and an opening ratio of 33% was used as the substrate for electrode for cathode electrolysis. A blast treatment was performed with alumina of grain-size number 320. The opening ratio was not changed after the blast treatment. It is difficult to measure the surface roughness of the expanded metal. Thus, in Comparative Example 1, a nickel plate having a thickness of 1 mm was simultaneously subjected to the blast treatment during the blasting, and the surface roughness of the nickel plate was taken as the surface roughness of the wire mesh. The arithmetic average roughness Ra was 0.68 µm. The measurement of the surface roughness was performed under the same conditions as for the surface roughness measurement of the nickel plate subjected to the blast treatment. Except for the above described, evaluation was performed in the same manner as in Example 1, and the results are shown in Table 2.

The thickness of the electrode was 114 µm. The thickness of the catalytic layer, which was determined by subtracting the thickness of the substrate for electrode for electrolysis from the thickness of the electrode, was 14 µm.

The mass per unit area was 67.5 (mg/cm²). The force applied per unit mass·unit area (1) was such a small value as 0.05 (N/mg·cm²). Thus, the result of evaluation of winding around column of 280 mm in diameter (2) was 64%, and the result of evaluation of winding around column of 145 mm in diameter(3) was 22%. The portions at which the electrode came off from the membrane increased. This is because there were problems in that the electrode was likely to come off when the membrane-integrated electrode was handled and in that the electrode came off and fell from the membrane during handled. The handling property was "4", which was also problematic. The membrane damage was evaluated as "0".

When a deformation test of the electrode was performed, the average value of L₁ and L₂ was 13 mm.

When the ventilation resistance of the electrode was measured, the ventilation resistance was 0.07 (kPa·s/m) or less under the measurement condition 1 and 0.0168 (kPa·s/m) under the measurement condition 2.

### [Comparative Example 2]

In Comparative Example 2, a fully-rolled nickel expanded metal having a gauge thickness of 100 µm and an opening ratio of 16% was used as the substrate for electrode for cathode electrolysis. A blast treatment was performed with alumina of grain-size number 320. The opening ratio was not changed after the blast treatment. It is difficult to measure the surface roughness of the expanded metal. Thus, in Comparative Example 2, a nickel plate having a thickness of 1 mm was simultaneously subjected to the blast treatment during the blasting, and the surface roughness of the nickel plate was taken as the surface roughness of the wire mesh. The arithmetic average roughness Ra was 0.64 µm. The measurement of the surface roughness was performed under the same conditions as for the surface roughness measurement of the nickel plate subjected to the blast treatment. Except for the above described, evaluation was performed in the same manner as in Example 1, and the results are shown in Table 2.

The thickness of the electrode was 107 µm. The thickness of the catalytic layer, which was determined by subtracting the thickness of the substrate for electrode for electrolysis from the thickness of the electrode, was 7 µm.

The mass per unit area was 78.1 (mg/cm²). The force applied per unit mass·unit area (1) was such a small value as 0.04 (N/mg·cm²). Thus, the result of evaluation of winding around column of 280 mm in diameter (2) was 37%, and the result of evaluation of winding around column of 145 mm in diameter (3) was 25%. The portions at which the electrode came off from the membrane increased. This is because there were problems in that the electrode was likely to come off when the membrane-integrated electrode was handled and in that the electrode came off and fell from the membrane during handled. The handling property was "4", which was also problematic. The membrane damage was evaluated as "0".

When a deformation test of the electrode was performed, the average value of L₁ and L₂ was 18.5 mm.

When the ventilation resistance of the electrode was measured, the ventilation resistance was 0.07 (kPa·s/m) or less under the measurement condition 1 and 0.0176 (kPa·s/m) under the measurement condition 2.

### [Comparative Example 3]

In Comparative Example 3, a fully-rolled nickel expanded metal having a gauge thickness of 100 µm and an opening ratio of 40% was used as the substrate for electrode for cathode electrolysis. A blast treatment was performed with alumina of grain-size number 320. The opening ratio was not changed after the blast treatment. It is difficult to measure the surface roughness of the expanded metal. Thus, in Comparative Example 3, a nickel plate having a thickness of 1 mm was simultaneously subjected to the blast treatment during the blasting, and the surface roughness of the nickel plate was taken as the surface roughness of the wire mesh. The arithmetic average roughness Ra was 0.70 µm. The measurement of the surface roughness was performed under the same conditions as for the surface roughness measurement of the nickel plate subjected to the blast treatment. Coating of the substrate for electrode for electrolysis was performed by ion plating in the same manner as in Example 6. Except for the above described, evaluation was performed in the same manner as in Example 1, and the results are shown in Table 2.

The thickness of the electrode was 110 µm. The thickness of the catalytic layer, which was determined by subtracting the thickness of the substrate for electrode for electrolysis from the thickness of the electrode, was 10 µm.

The force applied per unit mass·unit area (1) was such a small value as 0.07 (N/mg·cm²). Thus, the result of evaluation of winding around column of 280 mm in diameter (2) was 80%, and the result of evaluation of winding around column of 145 mm in diameter (3) was 32%. The portions at which the electrode came off from the membrane increased. This is because there were problems in that the electrode was likely to come off when the membrane-integrated electrode was handled and in that the electrode came off and fell from the membrane during handled. The handling property was "3", which was also problematic. The membrane damage was evaluated as "0".

When a deformation test of the electrode was performed, the average value of L₁ and L₂ was 11 mm.

When the ventilation resistance of the electrode was measured, the ventilation resistance was 0.07 (kPa·s/m) or less under the measurement condition 1 and 0.0030 (kPa·s/m) under the measurement condition 2.

### [Comparative Example 4]

In Comparative Example 4, a fully-rolled nickel expanded metal having a gauge thickness of 100 µm and an opening ratio of 58% was used as the substrate for electrode for cathode electrolysis. A blast treatment was performed with alumina of grain-size number 320. The opening ratio was not changed after the blast treatment. It is difficult to measure the surface roughness of the expanded metal. Thus, in Comparative Example 4, a nickel plate having a thickness of 1 mm was simultaneously subjected to the blast treatment during the blasting, and the surface roughness of the nickel plate was taken as the surface roughness of the wire mesh. The arithmetic average roughness Ra was 0.64 µm. The measurement of the surface roughness was performed under the same conditions as for the surface roughness measurement of the nickel plate subjected to the blast treatment. Except for the above described, evaluation was performed in the same manner as in Example 1, and the results are shown in Table 2.

The thickness of the electrode was 109 µm. The thickness of the catalytic layer, which was determined by subtracting the thickness of the substrate for electrode for electrolysis from the thickness of the electrode, was 9 µm.

The force applied per unit mass·unit area (1) was such a small value as 0.06 (N/mg·cm²). Thus, the result of evaluation of winding around column of 280 mm in diameter (2) was 69%, and the result of evaluation of winding around column of 145 mm in diameter (3) was 39%. The portions at which the electrode came off from the membrane increased. This is because there were problems in that the electrode was likely to come off when the membrane-integrated electrode was handled and in that the electrode came off and fell from the membrane during handled. The handling property was "3", which was also problematic. The membrane damage was evaluated as "0".

When a deformation test of the electrode was performed, the average value of L₁ and L₂ was 11.5 mm.

When the ventilation resistance of the electrode was measured, the ventilation resistance was 0.07 (kPa·s/m) or less under the measurement condition 1 and 0.0028 (kPa·s/m) under the measurement condition 2.

### [Comparative Example 5]

In Comparative Example 5, a nickel wire mesh having a gauge thickness of 300 µm and an opening ratio of 56% was used as the substrate for electrode for cathode electrolysis. It is difficult to measure the surface roughness of the wire mesh. Thus, in Comparative Example 5, a nickel plate having a thickness of 1 mm was simultaneously subjected to the blast treatment during the blasting, and the surface roughness of the nickel plate was taken as the surface roughness of the wire mesh. A blast treatment was performed with alumina of grain-size number 320. The opening ratio was not changed after the blast treatment. The arithmetic average roughness Ra was 0.64 µm. The measurement of the surface roughness was performed under the same conditions as for the surface roughness measurement of the nickel plate subjected to the blast treatment. Except for the above described, evaluation was performed in the same manner as in Example 1, and the results are shown in Table 2.

The thickness of the electrode was 308 µm. The thickness of the catalytic layer, which was determined by subtracting the thickness of the substrate for electrode for electrolysis from the thickness of the electrode, was 8 µm.

The mass per unit area was 49.2 (mg/cm²). Thus, the result of evaluation of winding around column of 280 mm in diameter (2) was 88%, and the result of evaluation of winding around column of 145 mm in diameter(3) was 42%. The portions at which the electrode came off from the membrane increased. This is because the electrode was likely to come off when the membrane-integrated electrode is handled and the electrode may come off and fall from the membrane during handled. There was a problem in the handling property, which was evaluated as "3". When the large size electrode was actually operated, it was possible to evaluate the handling property as "3". The membrane damage was evaluated as "0".

When a deformation test of the electrode was performed, the average value of L₁ and L₂ was 23 mm.

When the ventilation resistance of the electrode was measured, the ventilation resistance was 0.07 (kPa·s/m) or less under the measurement condition 1 and 0.0034 (kPa·s/m) under the measurement condition 2.

### [Comparative Example 6]

In Comparative Example 6, a nickel wire mesh having a gauge thickness of 200 µm and an opening ratio of 37% was used as the substrate for electrode for cathode electrolysis. A blast treatment was performed with alumina of grain-size number 320. The opening ratio was not changed after the blast treatment. It is difficult to measure the surface roughness of the wire mesh. Thus, in Comparative Example 6, a nickel plate having a thickness of 1 mm was simultaneously subjected to the blast treatment during the blasting, and the surface roughness of the nickel plate was taken as the surface roughness of the wire mesh. The arithmetic average roughness Ra was 0.65 µm. The measurement of the surface roughness was performed under the same conditions as for the surface roughness measurement of the nickel plate subjected to the blast treatment. Except for the above described, evaluation of electrode electrolysis, measurement results of the adhesive force, and adhesiveness were performed in the same manner as in Example 1. The results are shown in Table 2.

The thickness of the electrode was 210 µm. The thickness of the catalytic layer, which was determined by subtracting the thickness of the substrate for electrode for electrolysis from the thickness of the electrode, was 10 µm.

The mass per unit area was 56.4 mg/cm². Thus, the result of evaluation method of winding around column of 145 mm in diameter (3) was 63%, and the adhesiveness between the electrode and the membrane was poor. This is because the electrode was likely to come off when the membrane-integrated electrode is handled and the electrode may come off and fall from the membrane during handled. There was a problem in the handling property, which was evaluated as "3". The membrane damage was evaluated as "0".

When a deformation test of the electrode was performed, the average value of L₁ and L₂ was 19 mm.

When the ventilation resistance of the electrode was measured, the ventilation resistance was 0.07 (kPa·s/m) or less under the measurement condition 1 and 0.0096 (kPa·s/m) under the measurement condition 2.

### [Comparative Example 7]

In Comparative Example 7, a full-rolled titanium expanded metal having a gauge thickness of 500 µm and an opening ratio of 17% was used as the substrate for electrode for anode electrolysis. A blast treatment was performed with alumina of grain-size number 320. The opening ratio was not changed after the blast treatment. It is difficult to measure the surface roughness of the expanded metal. Thus, in Comparative Example 7, a titanium plate having a thickness of 1 mm was simultaneously subjected to the blast treatment during the blasting, and the surface roughness of the titanium plate was taken as the surface roughness of the wire mesh. The arithmetic average roughness Ra was 0.60 µm. The measurement of the surface roughness was performed under the same conditions as for the surface roughness measurement of the nickel plate subjected to the blast treatment. Except for the above described, evaluation was performed in the same manner as in Example 16, and the results are shown in Table 2.

The thickness of the electrode was 508 µm. The thickness of the catalytic layer, which was determined by subtracting the thickness of the substrate for electrode for electrolysis from the thickness of the electrode, was 8 µm.

The mass per unit area was 152.5 (mg/cm²). The force applied per unit mass·unit area (1) was such a small value as 0.01 (N/mg·cm²). Thus, the result of evaluation of winding around column of 280 mm in diameter (2) was less than 5%, and the result of evaluation of winding around column of 145 mm in diameter(3) was less than 5%. The portions at which the electrode came off from the membrane increased. This is because the electrode was likely to come off when the membrane-integrated electrode was handled, the electrode came off and fell from the membrane during handled, and so on. The handling property was "4", which was also problematic. The membrane damage was evaluated as "0".

When a deformation test of the electrode was performed, the electrode did not recover and remained rolled up in the PVC pipe form. Thus, it was not possible to measure the values of L₁ and L₂.

When the ventilation resistance of the electrode was measured, the ventilation resistance was 0.07 (kPa·s/m) or less under the measurement condition 1 and 0.0072 (kPa·s/m) under the measurement condition 2.

### [Comparative Example 8]

In Comparative Example 8, a full-rolled titanium expanded metal having a gauge thickness of 800 µm and an opening ratio of 8% was used as the substrate for electrode for anode electrolysis. A blast treatment was performed with alumina of grain-size number 320. The opening ratio was not changed after the blast treatment. It is difficult to measure the surface roughness of the expanded metal. Thus, in Comparative Example 8, a titanium plate having a thickness of 1 mm was simultaneously subjected to the blast treatment during the blasting, and the surface roughness of the titanium plate was taken as the surface roughness of the wire mesh. The arithmetic average roughness Ra was 0.61 µm. The measurement of the surface roughness was performed under the same conditions as for the surface roughness measurement of the nickel plate subjected to the blast treatment. Except for the above described, the above evaluation was performed in the same manner as in Example 16, and the results are shown in Table 2.

The thickness of the electrode was 808 µm. The thickness of the catalytic layer, which was determined by subtracting the thickness of the substrate for electrode for electrolysis from the thickness of the electrode, was 8 µm.

The mass per unit area was 251.3 (mg/cm²). The force applied per unit mass·unit area (1) was such a small value as 0.01 (N/mg·cm²). Thus, the result of evaluation of winding around column of 280 mm in diameter (2) was less than 5%, and the result of evaluation of winding around column of 145 mm in diameter(3) was less than 5%. The portions at which the electrode came off from the membrane increased. This is because the electrode was likely to come off when the membrane-integrated electrode was handled, the electrode came off and fell from the membrane during handled, and so on. The handling property was "4", which was also problematic. The membrane damage was evaluated as "0".

When a deformation test of the electrode was performed, the electrode did not recover and remained rolled up in the PVC pipe form. Thus, it was not possible to measure the values of L₁ and L₂.

When the ventilation resistance of the electrode was measured, the ventilation resistance was 0.07 (kPa·s/m) or less under the measurement condition 1 and 0.0172 (kPa·s/m) under the measurement condition 2.

### [Comparative Example 9]

In Comparative Example 9, a full-rolled titanium expanded metal having a gauge thickness of 1000 µm and an opening ratio of 46% was used as the substrate for electrode for anode electrolysis. A blast treatment was performed with alumina of grain-size number 320. The opening ratio was not changed after the blast treatment. It is difficult to measure the surface roughness of the expanded metal. Thus, in Comparative Example 9, a titanium plate having a thickness of 1 mm was simultaneously subjected to the blast treatment during the blasting, and the surface roughness of the titanium plate was taken as the surface roughness of the wire mesh. The arithmetic average roughness Ra was 0.59 µm. The measurement of the surface roughness was performed under the same conditions as for the surface roughness measurement of the nickel plate subjected to the blast treatment. Except for the above described, the above evaluation was performed in the same manner as in Example 16, and the results are shown in Table 2.

The thickness of the electrode was 1011 µm. The thickness of the catalytic layer, which was determined by subtracting the thickness of the substrate for electrode for electrolysis from the thickness of the electrode, was 11 µm.

The mass per unit area was 245.5 (mg/cm²). The force applied per unit mass·unit area (1) was such a small value as 0.01 (N/mg·cm²). Thus, the result of evaluation of winding around column of 280 mm in diameter (2) was less than 5%, and the result of evaluation of winding around column of 145 mm in diameter(3) was less than 5%. The portions at which the electrode came off from the membrane increased. This is because the electrode was likely to come off when the membrane-integrated electrode was handled, the electrode came off and fell from the membrane during handled, and so on. The handling property was "4", which was also problematic. The membrane damage was evaluated as "0".

When a deformation test of the electrode was performed, the electrode did not recover and remained rolled up in the PVC pipe form. Thus, it was not possible to measure the values of L₁ and L₂.

When the ventilation resistance of the electrode was measured, the ventilation resistance was 0.07 (kPa·s/m) or less under the measurement condition 1 and 0.0027 (kPa·s/m) under the measurement condition 2.

### [Comparative Example 10]

In Comparative Example 10, a membrane electrode assembly was produced by thermally compressing an electrode onto a membrane with reference to a prior art document (Examples of Japanese Patent Laid-Open No. 58-48686).

A nickel expanded metal having a gauge thickness of 100 µm and an opening ratio of 33% was used as the substrate for electrode for cathode electrolysis to perform electrode coating in the same manner as in Example 1. Thereafter, one surface of the electrode was subjected to an inactivation treatment in the following procedure. Polyimide adhesive tape (Chukoh Chemical Industries, Ltd.) was attached to one surface of the electrode. A PTFE dispersion (Dupont-Mitsui Fluorochemicals Co., Ltd., 31-JR (trade name)) was applied onto the other surface and dried in a muffle furnace at 120°C for 10 minutes. The polyimide tape was peeled off, and a sintering treatment was performed in a muffle furnace set at 380°C for 10 minutes. This operation was repeated twice to inactivate the one surface of the electrode.

Produced was a membrane formed by two layers of a perfluorocarbon polymer of which terminal functional group is "-COOCH₃" (C polymer) and a perfluorocarbon polymer of which terminal group is "-SO₂F" (S polymer). The thickness of the C polymer layer was 3 mils, and the thickness of the S polymer layer was 4 mils. This two-layer membrane was subjected to a saponification treatment to thereby introduce ion exchange groups to the terminals of the polymer by hydrolysis. The C polymer terminals were hydrolyzed into carboxylic acid groups and the S polymer terminals into sulfo groups. The ion exchange capacity as the sulfonic acid group was 1.0 meq/g, and the ion exchange capacity as the carboxylic acid group was 0.9 meq/g.

The inactivated electrode surface was oppositely disposed to and thermally pressed onto the surface having carboxylic acid groups as the ion exchange groups to integrate the ion exchange membrane and the electrode. The one surface of the electrode was exposed even after the thermal compression, and the electrode passed through no portion of the membrane.

Thereafter, in order to suppress attachment of bubbles to be generated during electrolysis to the membrane, a mixture of zirconium oxide and a perfluorocarbon polymer into which sulfo groups had been introduced was applied onto both the surfaces. Thus, the membrane electrode assembly of Comparative Example 10 was produced.

When the force applied per unit mass·unit area (1) was measured using this membrane electrode assembly, the electrode did not move upward because the electrode and the membrane were tightly bonded to each other via thermal compression. Then, the ion exchange membrane and nickel plate were fixed so as not to move, and the electrode was pulled upward by a stronger force. When a force of 1.50 (N/mg·cm²) was applied, a portion of the membrane was broken. The membrane electrode assembly of Comparative Example 10 had a force applied per unit mass·unit area (1) of at least 1.50 (N/mg·cm²) and was strongly bonded.

When evaluation of winding around column of 280 mm in diameter (1) was performed, the area in contact with the plastic pipe was less than 5%. Meanwhile, when evaluation of winding around column of 280 mm in diameter (2) was performed, the electrode and the membrane were 100% bonded to each other, but the membrane was not wound around the column in the first place. The result of evaluation of winding around column of 145 mm in diameter (3) was the same. The result meant that the integrated electrode impaired the handling property of the membrane to thereby make it difficult to roll the membrane into a roll and fold the membrane. The handling property was "3", which was problematic. The membrane damage was evaluated as "0". Additionally, when electrolytic evaluation was performed, the voltage was high, the current efficiency was low, the common salt concentration in caustic soda (value converted on the basis of 50%) was raised, and the electrolytic performance deteriorated.

The thickness of the electrode was 114 µm. The thickness of the catalytic layer, which was determined by subtracting the thickness of the substrate for electrode for electrolysis from the thickness of the electrode, was 14 µm.

When a deformation test of the electrode was performed, the average value of L₁ and L₂ was 13 mm.

When the ventilation resistance of the electrode was measured, the ventilation resistance was 0.07 (kPa·s/m) or less under the measurement condition 1 and 0.0168 (kPa·s/m) under the measurement condition 2.

### [Comparative Example 11]

In Comparative Example 11, a 40-mesh nickel mesh having a line diameter of 150 µm, a gauge thickness of 300 µm, and an opening ratio of 58% was used as the substrate for electrode for cathode electrolysis. Except for the above described, a membrane electrode assembly was produced in the same manner as in Comparative Example 10.

When the force applied per unit mass·unit area (1) was measured using this membrane electrode assembly, the electrode did not move upward because the electrode and the membrane were tightly bonded to each other via thermal compression. Then, the ion exchange membrane and nickel plate were fixed so as not to move, and the electrode was pulled upward by a stronger force. When a force of 1.60 (N/mg·cm²) was applied, a portion of the membrane was broken. The membrane electrode assembly of Comparative Example 11 had a force applied per unit mass·unit area (1) of at least 1.60 (N/mg·cm²) and was strongly bonded.

When evaluation of winding around column of 280 mm in diameter (1) was performed using this membrane electrode assembly, the contact area with the plastic pipe was less than 5%. Meanwhile, when evaluation of winding around column of 280 mm in diameter (2) was performed, the electrode and the membrane were 100% bonded to each other, but the membrane was not wound around the column in the first place. The result of evaluation of winding around column of 145 mm in diameter (3) was the same. The result meant that the integrated electrode impaired the handling property of the membrane to thereby make it difficult to roll the membrane into a roll and fold the membrane. The handling property was "3", which was problematic. Additionally, when electrolytic evaluation was performed, the voltage was high, the current efficiency was low, the common salt concentration in caustic soda was raised, and the electrolytic performance deteriorated.

The thickness of the electrode was 308 µm. The thickness of the catalytic layer, which was determined by subtracting the thickness of the substrate for electrode for electrolysis from the thickness of the electrode, was 8 µm.

When a deformation test of the electrode was performed, the average value of L₁ and L₂ was 23 mm.

When the ventilation resistance of the electrode was measured, the ventilation resistance was 0.07 (kPa·s/m) or less under the measurement condition 1 and 0.0034 (kPa·s/m) under the measurement condition 2.

### [Comparative Example 12]

### (Preparation of catalyst)

A metal salt aqueous solution was produced by adding 0.728 g of silver nitrate (Wako Pure Chemical Industries, Ltd.) and 1.86 g of cerium nitrate hexahydrate (Wako Pure Chemical Industries, Ltd.) to 150 ml of pure water. An alkali solution was produced by adding 240 g of pure water to 100 g of a 15% tetramethylammonium hydroxide aqueous solution (Wako Pure Chemical Industries, Ltd.). While the alkali solution was stirred using a magnetic stirrer, the metal salt aqueous solution was added thereto dropwise at 5 ml/minute using a buret. A suspension containing the resulting metal hydroxide particulates was suction-filtered and then washed with water to remove the alkali content. Thereafter, the residue was transferred into 200 ml of 2-propanol (KISHIDA CHEMICAL Co., Ltd.) and redispersed by an ultrasonic dispersing apparatus (US-600T, NISSEI Corporation) for 10 minutes to obtain a uniform suspension.

A suspension of carbon black was obtained by dispersing 0.36 g of hydrophobic carbon black (DENKA BLACK(R) AB-7 (trade name), Denka Company Limited) and 0.84 g of hydrophilic carbon black (Ketjenblack(R) EC-600JD (trade name), Mitsubishi Chemical Corporation) in 100 ml of 2-propanol and dispersing the mixture by the ultrasonic dispersing apparatus for 10 minutes. The metal hydroxide precursor suspension and the carbon black suspension were mixed and dispersed by the ultrasonic dispersing apparatus for 10 minutes. This suspension was suction-filtered and dried at room temperature for half a day to obtain carbon black containing the metal hydroxide precursor dispersed and fixed. Subsequently, an inert gas baking furnace (VMF165 type, YAMADA DENKI CO., LTD.) was used to perform baking in a nitrogen atmosphere at 400°C for an hour to obtain carbon black A containing an electrode catalyst dispersed and fixed.

### (Production of powder for reaction layer)

To 1.6 g of the carbon black A containing an electrode catalyst dispersed and fixed, 0.84 ml of a surfactant Triton(R) X-100(trade name, ICN Biomedicals) diluted to 20% by weight with pure water and 15 ml of pure water, and the mixture was dispersed by an ultrasonic dispersing apparatus for 10 minutes. To this dispersion, 0.664 g of a polytetrafluoroethylene (PTFE) dispersion (PTFE30J (trade name), Dupont-Mitsui Fluorochemicals Co., Ltd.) was added. After the mixture was stirred for five minutes, suction filtration was performed. Additionally, the residue was dried in a dryer at 80°C for an hour, and pulverization was performed by a mill to obtain a powder for reaction layer A.

### (Production of powder for gas diffusion layer)

Dispersed were 20 g of hydrophobic carbon black (DENKA BLACK(R) AB-7 (trade name)), 50 ml of a surfactant Triton(R) X-100(trade name) diluted to 20% by weight with pure water, and 360 ml of pure water by an ultrasonic dispersing apparatus for 10 minutes. To the resulting dispersion, 22.32 g of the PTFE dispersion was added. The mixture was stirred for 5 minutes, and then, filtration was performed. Additionally, the residue was dried in a dryer at 80°C for an hour, and pulverization was performed by a mill to obtain a powder for gas diffusion layer A.

### (Production of gas diffusion electrode)

To 4 g of the powder for gas diffusion layer A, 8.7 ml of ethanol was added, and the mixture was kneaded into a paste form. This powder for gas diffusion layer in a paste form was formed into a sheet form by a roll former. Silver mesh (SW = 1, LW = 2, and thickness = 0.3 mm) as the collector was embedded into the sheet and finally formed into a sheet form having a thickness of 1.8 mm. To 1 g of the powder for reaction layer A, 2.2 ml of ethanol was added, and the mixture was kneaded into a paste form. This powder for reaction layer in a paste form was formed into a sheet form having a thickness of 0.2 mm. Additionally, the two sheets, that is, the sheet obtained by using the powder for gas diffusion layer A produced and the sheet obtained by using the powder for reaction layer A were laminated and formed into a sheet form having a thickness of 1.8 mm by a roll former. This laminated sheet was dried at room temperature for a whole day and night to remove ethanol. Further, in order to remove the remaining surfactant, the sheet was subjected to a pyrolysis treatment in air at 300°C for an hour. The sheet was wrapped in an aluminum foil, and subjected to hot pressing by a hot pressing machine (SA303(trade name), TESTER SANGYO CO,. LTD.) at 360°C and 50 kgf/cm² for 1 minute to obtain a gas diffusion electrode. The thickness of the gas diffusion electrode was 412 µm.

The resulting electrode was used to perform electrolytic evaluation. In the sectional structure of the electrolytic cell, the collector, the mattress, the nickel mesh feed conductor, the electrode, the membrane, and the anode are arranged in the order mentioned from the cathode chamber side to form a zero-gap structure. The results are shown in Table 2.

When a deformation test of the electrode was performed, the average value of L₁ and L₂ was 19 mm.

When the ventilation resistance of the electrode was measured, the ventilation resistance was 25.88 (kPa·s/m) under the measurement condition 1.

The handling property was "3", which was problematic. Additionally, when electrolytic evaluation was performed, the current efficiency was low, the common salt concentration in caustic soda was raised, and the electrolytic performance markedly deteriorated. The membrane damage, which was evaluated as "3", also had a problem.

These results have revealed that the gas diffusion electrode obtained in Comparative Example 12 had markedly poor electrolytic performance. Additionally, damage was observed on the substantially entire surface of the ion exchange membrane. It was conceived that this is because NaOH that had been generated in the electrode accumulated on the interface between the electrode and the membrane to elevate the concentration thereof, due to the markedly high ventilation resistance of the gas diffusion electrode of Comparative Example 12.

### [Comparative Example 13]

A nickel line having a gauge thickness of 150 µm was provided as the substrate for electrode for cathode electrolysis. A roughening treatment by this nickel line was performed. It is difficult to measure the surface roughness of the nickel line. Thus, in Comparative Example 13, a nickel plate having a thickness of 1 mm was simultaneously subjected to the blast treatment during the blasting, and the surface roughness of the nickel plate was taken as the surface roughness of the nickel line. A blast treatment was performed with alumina of grain-size number 320. The arithmetic average roughness Ra was 0.64 µm.

A coating liquid for use in forming an electrode catalyst was prepared by the following procedure. A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088 (trade name), thickness 10 mm) around a polyvinyl chloride (PVC) cylinder was always in contact with the above coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). Then, after drying at 50°C for 10 minutes, preliminary baking at 150°C for 3 minutes, and baking at 350°C for 10 minutes were performed. A series of these coating, drying, preliminary baking, and baking operations was repeated until a predetermined amount of coating was achieved. The thickness of one nickel line produced in Comparative Example 13 was 158 µm.

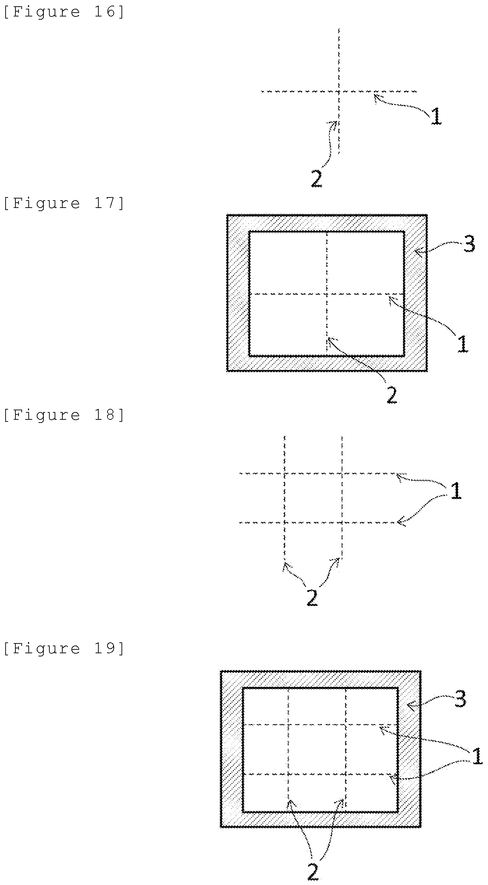

The nickel line produced by the above method was cut into a length of 110 mm and a length of 95 mm. As shown in Figure 16, the 110 mm nickel line and the 95 mm nickel line were placed such that the nickel lines vertically overlapped each other at the center of each of the nickel lines and bonded to each other at the intersection with an instant adhesive (Aron Alpha(R), TOAGOSEI CO., LTD.) to produce an electrode. The electrode was evaluated, and the results are shown in Table 2.

The portion of the electrode at which the nickel lines overlapped had the largest thickness, and the thickness of the electrode was 306 µm. The thickness of the catalytic layer was 6 µm. The opening ratio was 99.7%.

The mass per unit area of the electrode was 0.5 (mg/cm²). The forces applied per unit mass·unit area (1) and (2) were both equal to or less than the measurement lower limit of the tensile testing machine. Thus, the result of evaluation of winding around column of 280 mm in diameter (1) was less than 5%, and the portions at which the electrode came off from the membrane increased. The handling property was "4", which was also problematic. The membrane damage was evaluated as "0".

When a deformation test of the electrode was performed, the average value of L₁ and L₂ was 15 mm.

When the ventilation resistance of the electrode was measured, the ventilation resistance was 0.001 (kPa·s/m) or less under the measurement condition 2. When measured under the measurement condition 2 with SENSE (measurement range) set at H (high) of the ventilation resistance measurement apparatus, the ventilation resistance value was 0.0002 (kPa·s/m).

Additionally, the structure shown in Figure 17 was used to place the electrode (cathode) on the Ni mesh feed conductor, and electrolytic evaluation of the electrode was performed by the method described in (9) Electrolytic evaluation. As a result, the voltage was as high as 3.16 V.

### [Comparative Example 14]

In Comparative Example 14, the electrode produced in Comparative Example 13 was used. As shown in Figure 18, the 110 mm nickel line and the 95 mm nickel line were placed such that the nickel lines vertically overlapped each other at the center of each of the nickel lines and bonded to each other at the intersection with an instant adhesive (Aron Alpha(R), TOAGOSEI CO., LTD.) to produce an electrode. The electrode was evaluated, and the results are shown in Table 2.

The portion of the electrode at which the nickel lines overlapped had the largest thickness, and the thickness of the electrode was 306 µm. The thickness of the catalytic layer was 6 µm. The opening ratio was 99.4%.

The mass per unit area of the electrode was 0.9 (mg/cm²). The forces applied per unit mass·unit area (1) and (2) were both equal to or less than the measurement lower limit of the tensile testing machine. Thus, the result of evaluation of winding around column of 280 mm in diameter (1) was less than 5%, and the portions at which the electrode came off from the membrane increased. The handling property was "4", which was also problematic. The membrane damage was evaluated as "0".

When a deformation test of the electrode was performed, the average value of L₁ and L₂ was 16 mm.

When the ventilation resistance of the electrode was measured, the ventilation resistance was 0.001 (kPa·s/m) or less under the measurement condition 2. When measured under the measurement condition 2 with SENSE (measurement range) set at H (high) of the ventilation resistance measurement apparatus, the ventilation resistance was 0.0004 (kPa·s/m).

Additionally, the structure shown in Figure 19 was used to place the electrode (cathode) on the Ni mesh feed conductor, and electrolytic evaluation of the electrode was performed by the method described in (9) Electrolytic evaluation. As a result, the voltage was as high as 3.18 V.

### [Comparative Example 15]

In Comparative Example 15, the electrode produced in Comparative Example 13 was used. As shown in Figure 20, the 110 mm nickel line and the 95 mm nickel line were placed such that the nickel lines vertically overlapped each other at the center of each of the nickel lines and bonded to each other at the intersection with an instant adhesive (Aron Alpha(R), TOAGOSEI CO., LTD.) to produce an electrode. The electrode was evauated, and the results are shown in Table 2.

The portion of the electrode at which the nickel lines overlapped had the largest thickness, and the thickness of the electrode was 306 µm. The thickness of the catalytic layer was 6 µm. The opening ratio was 98.8%.

The mass per unit area of the electrode was 1.9 (mg/cm²). The forces applied per unit mass·unit area (1) and (2) were both equal to or less than the measurement lower limit of the tensile testing machine. Thus, the result of evaluation of winding around column of 280 mm in diameter (1) was less than 5%, and the portions at which the electrode came off from the membrane increased. The handling property was "4", which was also problematic. The membrane damage was evaluated as "0".

When a deformation test of the electrode was performed, the average value of L₁ and L₂ was 14 mm.

When the ventilation resistance of the electrode was measured, the ventilation resistance was 0.001 (kPa·s/m) or less under the measurement condition 2. When measured under the measurement condition 2 with SENSE (measurement range) set at H (high) of the ventilation resistance measurement apparatus, the ventilation resistance was 0.0005 (kPa·s/m).

Additionally, the structure shown in Figure 21 was used to place the electrode (cathode) on the Ni mesh feed conductor, and electrolytic evaluation of the electrode was performed by the method described in (9) Electrolytic evaluation. As a result, the voltage was as high as 3.18 V.

**[Table 1]**

| | Substrate for electrode | Form of substrate for electrode | Coating method | Feed conductor |
|---|---|---|---|---|
| Example 1 | Ni | Punching | Pyrolysis | Ni mesh |
| Example 2 | Ni | Punching | Pyrolysis | Ni mesh |
| Example 3 | Ni | Punching | Pyrolysis | Ni mesh |
| Example 4 | Ni | Punching | Pyrolysis | Ni mesh |
| Example 5 | Ni | Punching | Pyrolysis | Ni mesh |
| Example 6 | Ni | Punching | Ion plating | Ni mesh |
| Example 7 | Ni | Electroforming | Pyrolysis | Ni mesh |
| Example 8 | Ni | Electroforming | Pyrolysis | Ni mesh |
| Example 9 | Ni | Nonwoven fabric | Pyrolysis | Ni mesh |
| Example 10 | Ni | Nonwoven fabric | Pyrolysis | Ni mesh |
| Example 11 | Ni | Foamed Ni | Pyrolysis | Ni mesh |
| Example 12 | Ni | Mesh | Pyrolysis | Ni mesh |
| Example 13 | Ni | Mesh | Pyrolysis | Ni mesh |
| Example 14 | Ni | Punching (same as in Example 3) | Pyrolysis | Mattress |
| Example 15 | Ni | Punching (same as in Example 3) | Pyrolysis | Cathode having increase in voltage |
| Example 16 | Ti | Punching | Pyrolysis | Anode having increase in voltage |
| Example 17 | Ti | Punching | Pyrolysis | Anode having increase in voltage |
| Example 18 | Ti | Punching | Pyrolysis | Anode having increase in voltage |
| Example 19 | Ti | Punching | Pyrolysis | Anode having increase in voltage |
| Example 20 | Ti | Nonwoven fabric | Pyrolysis | Anode having increase in voltage |
| Example 21 | Ti | Mesh | Pyrolysis | Anode having increase in voltage |
| Example 22 | Ni/Ti | Combination of Example 3 and Example 20 | Pyrolysis | Cathode and anode having increase in voltage |
| Example 23 | Ni | Punching | Pyrolysis | - |
| Example 24 | Carbon | Woven fabric | Pyrolysis | Ni mesh |
| Comparative Example 1 | Ni | Expanded | Pyrolysis | Ni mesh |
| Comparative Example 2 | Ni | Expanded | Pyrolysis | Ni mesh |
| Comparative Example 3 | Ni | Expanded | Ion plating | Ni mesh |
| Comparative Example 4 | Ni | Expanded | Pyrolysis | Ni mesh |
| Comparative Example 5 | Ni | Mesh | Pyrolysis | Ni mesh |
| Comparative Example 6 | Ni | Mesh | Pyrolysis | Ni mesh |
| Comparative Example 7 | Ti | Expanded | Pyrolysis | Anode having increase in voltage |
| Comparative Example 8 | Ti | Expanded | Pyrolysis | Anode having increase in voltage |
| Comparative Example 9 | Ti | Expanded | Pyrolysis | Anode having increase in voltage |
| Comparative Example 10 | Ni | Expanded | Pyrolysis | Ni mesh |
| Comparative Example 11 | Ni | Mesh | Pyrolysis | Ni mesh |
| Comparative Example 12 | Carbon | Powder | Pyrolysis | Ni mesh |
| Comparative Example 13 | Ni | Mesh | Pyrolysis | Ni mesh |
| Comparative Example 14 | Ni | Mesh | Pyrolysis | Ni mesh |
| Comparative Example 15 | Ni | Mesh | Pyrolysis | Ni mesh |

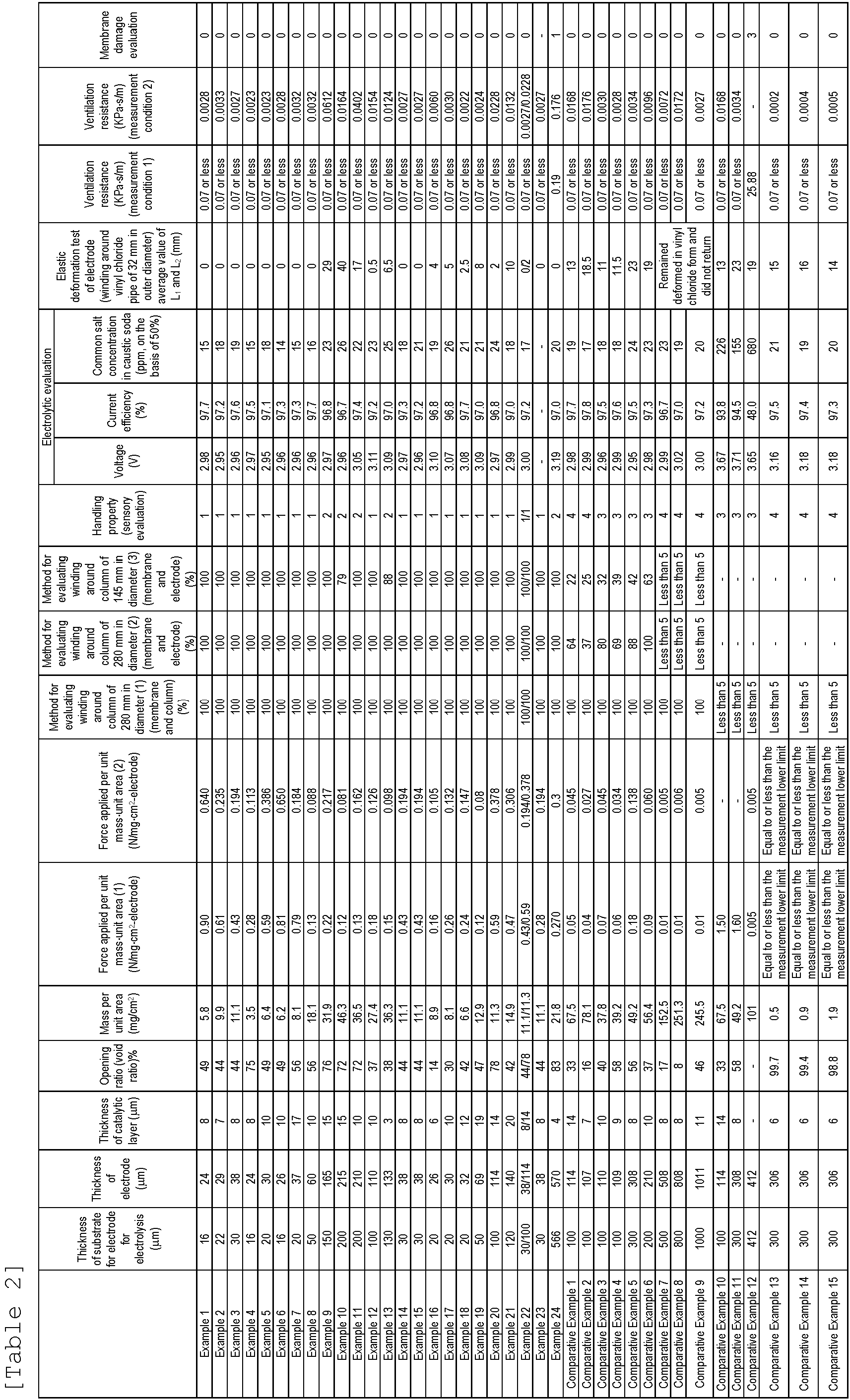

In Table 2, all the samples were able to stand by themselves by the surface tension before measurement of "force applied per unit mass·unit area (1)" and "force applied per unit mass·unit area (2)" (i.e., did not slip down) .

In Comparative Examples 1, 2, 7 to 9, since the mass per unit area was large and the force applied per unit mass·unit area (1) was small, the adhesiveness to the membrane was poor. Thus, with a large electrolyzer size (e.g., 1.5 m in length and 3 m in width), the membrane, which is a polymer membrane, may be inevitably slacked during handling. In this time, the electrode comes off and thus, the samples do not withstand practical use.

In Comparative Examples 3 and 4, since the force applied per unit mass·unit area (1) was small, the adhesiveness to the membrane was poor. Thus, with a large electrolyzer size (e.g., 1.5 m in length and 3 m in width), the membrane, which is a polymer membrane, may be inevitably slacked during handling. In this time, the electrode comes off and thus, the samples do not withstand practical use.

In Comparative Examples 5 and 6, the mass per unit area is large, and the adhesiveness to the membrane was poor. Thus, with a large electrolyzer size (e.g., 1.5 m in length and 3 m in width), the membrane, which is a polymer membrane, may be inevitably slacked during handling. In this time, the electrode comes off and thus, the samples do not withstand practical use.

In Comparative Examples 10 and 11, since the membrane and the electrode were tightly bonded by thermal pressing, the electrode did not come off from the membrane during handling like Comparative Examples 1, 2, 7 to 9. However, due to the tight bonding to the electrode, the flexibility of the polymer membrane was lost. Thus, it is difficult to roll the samples into a roll and fold the samples. The samples have poor handling property and do not withstand practical use.

Furthermore, in Comparative Examples 10 and 11, the electrolytic performance significantly deteriorated. Conceivably, the voltage markedly increased because the flow of ions was inhibited by the fact that the electrode became embedded in the ion exchange membrane. With respect to the reason of the decrease in the current efficiency and the degradation of the common salt concentration in caustic soda, possible factors included high current efficiency, occurrence of uneven thickness of the carboxylic acid layer due to embedding the electrode in the carboxylic acid layer having an effect of exhibiting ion selectivity, and penetration of the electrode embedded into a portion of the carboxylic acid layer.

Additionally, in Comparative Examples 10 and 11, in the case where a problem occurred either in the membrane or the electrode and replacement was required, it was not possible to replace one of the membrane and the electrode due to the tight bonding, which led to a higher cost.

In Comparative Example 12, the electrolytic performance significantly deteriorated. Conceivably, the voltage markedly increased because a product accumulated on the interface between the membrane and the electrode.

In Comparative Examples 13 to 15, both the forces applied per unit mass·unit area (1) and (2) were small (equal to or less than the measurement lower limit), and thus, the adhesiveness to the membrane was poor. Thus, with a large electrolyzer size (e.g., 1.5 m in length and 3 m in width), the membrane, which is a polymer membrane, may be inevitably slacked during handling. In this time, the electrode comes off and thus, the samples do not withstand practical use.

In the present embodiment, the membrane and the electrode are in close contact with each other on each surface with a moderate force, and thus, there are no problems such as coming-off of the electrode during handling. The flow of ions in the membrane is not inhibited, and thus, good electrolytic performance is exhibited.

### <Verification of second embodiment> (second embodiment not in accordance with the invention as claimed)

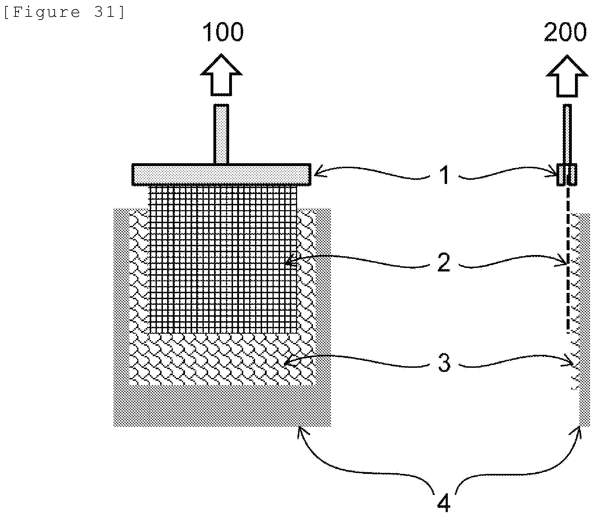

As will be described below, Experiment Examples according to the second embodiment (in the section of <Verification of second embodiment> hereinbelow, simply referred to as "Examples") and Experiment Examples not according to the second embodiment (in the section of <Verification of second embodiment> hereinbelow, simply referred to as "Comparative Examples") were provided, and evaluated by the following method. The details will be described with reference to Figures 31 to 42 as appropriate.

### [Evaluation method]

### (1) Opening ratio

An electrode was cut into a size of 130 mm × 100 mm. A digimatic thickness gauge (manufactured by Mitutoyo Corporation, minimum scale 0.001 mm) was used to calculate an average value of 10 points obtained by measuring evenly in the plane. The value was used as the thickness of the electrode (gauge thickness) to calculate the volume. Thereafter, an electronic balance was used to measure the mass. From the specific gravity of each metal (specific gravity of nickel = 8.908 g/cm³, specific gravity of titanium = 4.506 g/cm³), the opening ratio or void ratio was calculated. Opening ratio (Void ratio) (%) = (1 - (electrode mass)/(electrode volume × metal specific gravity)) × 100

### (2) Mass per unit area (mg/cm²)

An electrode was cut into a size of 130 mm × 100 mm, and the mass thereof was measured by an electronic balance. The value was divided by the area (130 mm × 100 mm) to calculate the mass per unit area.

### (3) Force applied per unit mass·unit area (1) (adhesive force) (N/mg·cm²))

### [Method (i)]

A tensile and compression testing machine was used for measurement (Imada-SS Corporation, main testing machine: SDT-52NA type tensile and compression testing machine, load cell: SL-6001 type load cell).

A 200 mm square nickel plate having a thickness of 1.2 mm was subjected to blast processing with alumina of grain-size number 320. The arithmetic average surface roughness (Ra) of the nickel plate after the blast treatment was 0.7 µm. For surface roughness measurement herein, a probe type surface roughness measurement instrument SJ-310 (Mitutoyo Corporation) was used. A measurement sample was placed on the surface plate parallel to the ground surface to measure the arithmetic average roughness Ra under measurement conditions as described below. The measurement was repeated 6 times, and the average value was listed.

<Probe shape> conical taper angle = 60°, tip radius = 2 µm, static measuring force = 0.75 mN
<Roughness standard> JIS2001
<Evaluation curve> R
<Filter> GAUSS
<Cutoff value λc> 0.8 mm
<Cutoff value λs> 2.5 µm
<Number of sections> 5
<Pre-running, post-running> available

This nickel plate was vertically fixed on the lower chuck of the tensile and compression testing machine.

As the membrane, an ion exchange membrane A below was used.

As reinforcement core materials, 90 denier monofilaments made of polytetrafluoroethylene (PTFE) were used (hereinafter referred to as PTFE yarns). As sacrifice yarns, yarns obtained by twisting six 35 denier filaments of polyethylene terephthalate (PET) 200 times/m were used (hereinafter referred to as PET yarns). First, in each of the TD and the MD, the PTFE yarns and the sacrifice yarns were plain-woven with 24 PTFE yarns/inch so that two sacrifice yarns were arranged between adjacent PTFE yarns, to obtain a woven fabric. The resulting woven fabric was pressure-bonded by a roll to obtain a woven fabric having a thickness of 70 µm.

Next, a resin A of a dry resin that was a copolymer of CF₂=CF₂ and CF₂=CFOCF₂CF(CF₃)OCF₂CF₂COOCH₃ and had an ion exchange capacity of 0.85 mg equivalent/g, and a resin B of a dry resin that was a copolymer of CF₂=CF₂ and CF₂=CFOCF₂CF(CF₃)OCF₂CF₂SO₂F and had an ion exchange capacity of 1.03 mg equivalent/g were provided.

Using these resins A and B, a two-layer film X in which the thickness of a resin A layer was 15 µm and the thickness of a resin B layer was 104 µm was obtained by a coextrusion T die method.

Subsequently, release paper (embossed in a conical shape having a height of 50 µm), a reinforcing material, and the film X were laminated in this order on a hot plate having a heat source and a vacuum source inside and having micropores on its surface, heated and depressurized under the conditions of a hot plate surface temperature of 223°C and a degree of reduced pressure of 0.067 MPa for 2 minutes, and then the release paper was removed to obtain a composite membrane.

The resulting composite membrane was immersed in an aqueous solution at 80°C comprising 30% by mass of dimethyl sulfoxide (DMSO) and 15% by mass of potassium hydroxide (KOH) for 20 minutes for saponification. Then, the composite membrane was immersed in an aqueous solution at 50°C comprising 0.5 N sodium hydroxide (NaOH) for an hour to replace the counterion of the ion exchange group by Na, and then washed with water. Then, the membrane was dried at 60°C.

Further, 20% by mass of zirconium oxide having a primary particle size of 1 µm was added to a 5% by mass ethanol solution of the acid-type resin of the resin B and dispersed to prepare a suspension, and the suspension was sprayed onto both the surfaces of the above composite membrane by a suspension spray method to form coatings of zirconium oxide on the surfaces of the composite membrane to obtain an ion exchange membrane A. The coating density of zirconium oxide measured by fluorescent X-ray measurement was 0.5 mg/cm². The average particle size was measured by a particle size analyzer (manufactured by SHIMADZU CORPORATION, "SALD(R) 2200").

The ion exchange membrane (membrane) obtained above was immersed in pure water for 12 hours or more and then used for the test. The membrane was brought into contact with the above nickel plate sufficiently moistened with pure water and allowed to adhere to the plate by the tension of water. At this time, the nickel plate and the ion exchange membrane were placed so as to align the upper ends thereof.

A sample of electrode for electrolysis (electrode) to be used for measurement was cut into a 130 mm square. The ion exchange membrane A was cut into a 170 mm square. One side of the electrode was sandwiched by two stainless plates (thickness: 1 mm, length: 9 mm, width: 170 mm). After positioning so as to align the center of the stainless plates with the center of the electrode, four clips were used for uniformly fixing the electrode and plates. The center of the stainless plates was clamped by the upper chuck of the tensile and compression testing machine to hang the electrode. The load applied on the testing machine at this time was set to 0 N. The integrated piece of the stainless plates, electrode, and clips was once removed from the tensile and compression testing machine, and immersed in a vat containing pure water in order to moisten the electrode sufficiently with pure water. Thereafter, the center of the stainless plates was clamped again by the upper chuck of the tensile and compression testing machine to hang the electrode.

The upper chuck of the tensile and compression testing machine was lowered, and the sample of electrode for electrolysis was allowed to adhere to the surface of the ion exchange membrane by the surface tension of pure water. The size of the adhesive surface at this time was 130 mm in width and 110 mm in length. Pure water in a wash bottle was sprayed to the electrode and the ion exchange membrane entirely so as to sufficiently moisten the membrane and the electrode again. Thereafter, a roller formed by winding a closed-cell type EPDM sponge rubber having a thickness of 5 mm around a vinyl chloride pipe (outer diameter: 38 mm) was rolled downward from above with lightly pressed over the electrode to remove excess pure water. The roller was rolled only once.

The electrode was raised at a rate of 10 mm/minute to begin load measurement, and the load when the size of the overlapping portion of the electrode and the membrane reached 130 mm in width and 100 mm in length was recorded. This measurement was repeated three times, and the average value was calculated.

This average value was divided by the area of the overlapping portion of the electrode and the ion exchange membrane and the mass of the electrode of the portion overlapping the ion exchange membrane to calculate the force applied per unit mass·unit area (1). The mass of the electrode of the portion overlapping the ion exchange membrane was determined through proportional calculation from the value obtained in (2) Mass per unit area (mg/cm²) described above.

As for the environment of the measuring chamber, the temperature was 23±2°C and the relative humidity was 30±5%.

The electrode used in Examples and Comparative Examples was able to stand by itself and adhere without slipping down or coming off when allowed to adhere to the ion exchange membrane that adhered to a vertically-fixed nickel plate via the surface tension.

A schematic view of a method for evaluating the force applied (1) is shown in Figure 31.

The measurement lower limit of the tensile testing machine was 0.01 (N).

### (4) Force applied per unit mass·unit area (2) (adhesive force) (N/mg·cm²))

### [Method (ii)]

A tensile and compression testing machine was used for measurement (Imada-SS Corporation, main testing machine: SDT-52NA type tensile and compression testing machine, load cell: SL-6001 type load cell).

A nickel plate identical to that in Method (i) was vertically fixed on the lower chuck of the tensile and compression testing machine.

A sample of electrode for electrolysis (electrode) to be used for measurement was cut into a 130 mm square. The ion exchange membrane A was cut into a 170 mm square. One side of the electrode was sandwiched by two stainless plates (thickness: 1 mm, length: 9 mm, width: 170 mm). After positioning so as to align the center of the stainless plates with the center of the electrode, four clips were used for uniformly fixing the electrode and plates. The center of the stainless plates was clamped by the upper chuck of the tensile and compression testing machine to hang the electrode. The load applied on the testing machine at this time was set to 0 N. The integrated piece of the stainless plates, electrode, and clips was once removed from the tensile and compression testing machine, and immersed in a vat containing pure water in order to moisten the electrode sufficiently with pure water. Thereafter, the center of the stainless plates was clamped again by the upper chuck of the tensile and compression testing machine to hang the electrode.

The upper chuck of the tensile and compression testing machine was lowered, and the sample of electrode for electrolysis was allowed to adhere to the surface of the nickel plate via the surface tension of a solution. The size of the adhesive surface at this time was 130 mm in width and 110 mm in length. Pure water in a wash bottle was sprayed to the electrode and the nickel plate entirely so as to sufficiently moisten the nickel plate and the electrode again. Thereafter, a roller formed by winding a closed-cell type EPDM sponge rubber having a thickness of 5 mm around a vinyl chloride pipe (outer diameter: 38 mm) was rolled downward from above with lightly pressed over the electrode to remove excess solution. The roller was rolled only once.

The electrode was raised at a rate of 10 mm/minute to begin load measurement, and the load when the size of the overlapping portion of the electrode and the nickel plate in the longitudinal direction reached 100 mm was recorded. This measurement was repeated three times, and the average value was calculated.

This average value was divided by the area of the overlapping portion of the electrode and the nickel plate and the mass of the electrode of the portion overlapping the nickel plate to calculate the force applied per unit mass·unit area (2). The mass of the electrode of the portion overlapping the membrane was determined through proportional calculation from the value obtained in (2) Mass per unit area (mg/cm²) described above.

As for the environment of the measuring chamber, the temperature was 23±2°C and the relative humidity was 30±5%.

The electrode used in Examples and Comparative Examples was able to stand by itself and adhere without slipping down or coming off when allowed to adhere to a vertically-fixed nickel plate via the surface tension.

The measurement lower limit of the tensile testing machine was 0.01 (N).

### (5) Method for evaluating winding around column of 280 mm in diameter (1) (%)

### (Membrane and column)

The evaluation method (1) was conducted by the following procedure.

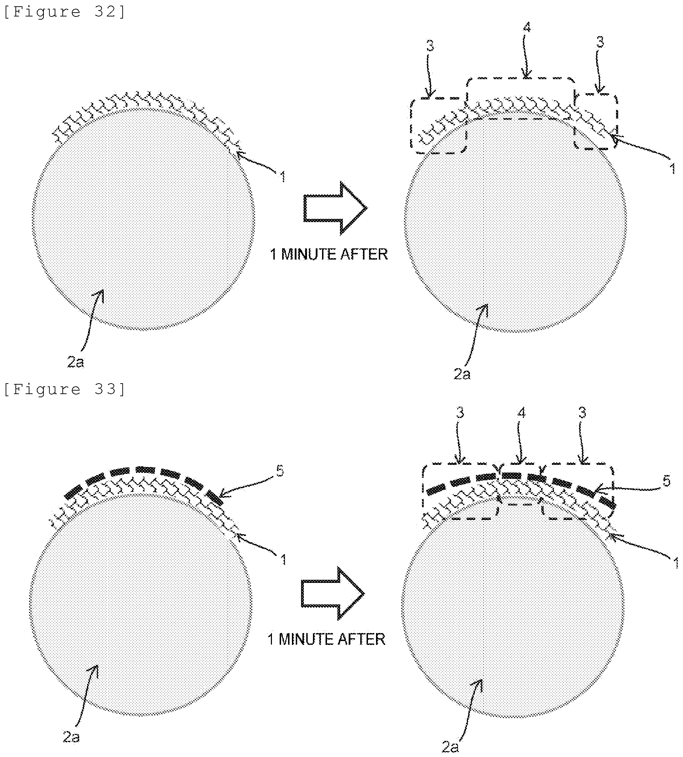

The ion exchange membrane A (membrane) produced in [Method (i)] was cut into a 170 mm square. The ion exchange membrane was immersed in pure water for 12 hours or more and then used for the test. In Comparative Examples 1 and 2, the electrode had been integrated with the ion exchange membrane by thermal pressing, and thus, an integrated piece of an ion exchange membrane and an electrode was provided (electrode of a 130 mm square). After the ion exchange membrane was sufficiently immersed in pure water, the membrane was placed on the curved surface of a plastic (polyethylene) pipe having an outer diameter of 280 mm. Thereafter, excess solution was removed with a roller formed by winding a closed-cell type EPDM sponge rubber having a thickness of 5 mm around a vinyl chloride pipe (outer diameter: 38 mm). The roller was rolled over the ion exchange membrane from the left to the right of the schematic view shown in Figure 32. The roller was rolled only once. One minute after, the proportion of a portion at which the ion exchange membrane was brought into a close contact with the plastic pipe electrode having an outer diameter of 280 mm was measured.

### (6) Method for evaluating winding around column of 280 mm in diameter (2) (%)

### (Membrane and electrode)

The evaluation method (2) was conducted by the following procedure.

The ion exchange membrane A (membrane) produced in [Method (i)] was cut into a 170 mm square, and the electrode was cut into a 130 mm square. The ion exchange membrane was immersed in pure water for 12 hours or more and then used for the test. The ion exchange membrane and the electrode were sufficiently immersed in pure water and then laminated. This laminate was placed on the curved surface of a plastic (polyethylene) pipe having an outer diameter of 280 mm such that the electrode was located outside. Thereafter, a roller formed by winding a closed-cell type EPDM sponge rubber having a thickness of 5 mm around a vinyl chloride pipe (outer diameter: 38 mm) was rolled from the left to the right of the schematic view shown in Figure 33 with lightly pressed over the electrode to remove excess solution. The roller was rolled only once. One minute after, the proportion of a portion at which the ion exchange membrane was brought into a close contact with the electrode was measured.

### (7) Method for evaluating winding around column of 145 mm in diameter (3) (%)

### (Membrane and electrode)

The evaluation method (3) was conducted by the following procedure.

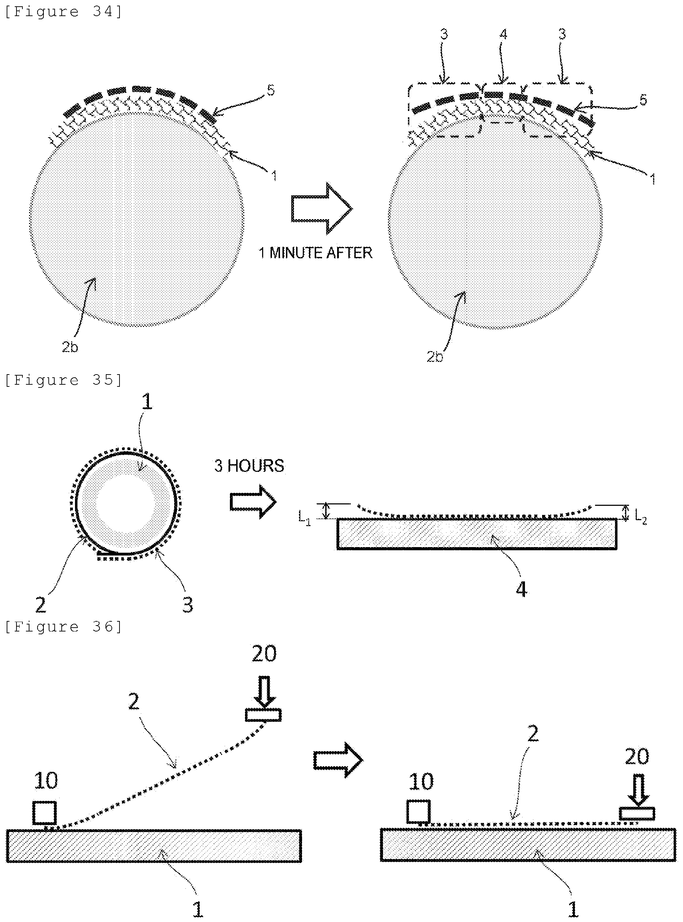

The ion exchange membrane A (membrane) produced in [Method (i)] was cut into a 170 mm square, and the electrode was cut into a 130 mm square. The ion exchange membrane was immersed in pure water for 12 hours or more and then used for the test. The ion exchange membrane and the electrode were sufficiently immersed in pure water and then laminated. This laminate was placed on the curved surface of a plastic (polyethylene) pipe having an outer diameter of 145 mm such that the electrode was located outside. Thereafter, a roller formed by winding a closed-cell type EPDM sponge rubber having a thickness of 5 mm around a vinyl chloride pipe (outer diameter: 38 mm) was rolled from the left to the right of the schematic view shown in Figure 34 with lightly pressed over the electrode to remove excess solution. The roller was rolled only once. One minute after, the proportion of a portion at which the ion exchange membrane was brought into a close contact with the electrode was measured.

### (8) Handling property (response evaluation)

(A) The ion exchange membrane A (membrane) produced in [Method (i)] was cut into a 170 mm square, and the electrode was cut into a size of 95 × 110 mm. The ion exchange membrane was immersed in pure water for 12 hours or more and then used for the test. In each Example, the ion exchange membrane and electrode were sufficiently immersed in three solutions: sodium bicarbonate aqueous solution, 0.1N NaOH aqueous solution, and pure water, then laminated, and placed still on a Teflon plate. The interval between the anode cell and the cathode cell used in the electrolytic evaluation was set at about 3 cm. The laminate placed still was lifted, and an operation of inserting and holding the laminate therebetween was conducted. This operation was conducted while the electrode was checked for dislocation and dropping.
(B) The ion exchange membrane A (membrane) produced in [Method (i)] was cut into a 170 mm square, and the electrode was cut into a size of 95 × 110 mm. The ion exchange membrane was immersed in pure water for 12 hours or more and then used for the test. In each Example, the ion exchange membrane and electrode were sufficiently immersed in three solutions: a sodium bicarbonate aqueous solution, a 0.1N NaOH aqueous solution, and pure water, then laminated, and placed still on a Teflon plate. The adjacent two corners of the membrane portion of the laminate were held by hands to lift the laminate so as to be vertical. The two corners held by hands were moved from this state to be close to each other such that the membrane was protruded or recessed. This move was repeated again to check the conformability of the electrode to the membrane. The results were evaluated on a four level scale of 1 to 4 on the basis of the following indices:
   1: good handling property
   2: capable of being handled
   3: difficult to handle
   4: substantially incapable of being handled

Here, the sample of Comparative Example 2-5, provided in a size equivalent to that of a large electrolytic cell including an electrode in a size of 1.3 m × 2.5 m and an ion exchange membrane in a size of 1.5 m × 2.8 m, was subjected to handling. The evaluation result of Comparative Example 5 ("3" as described below) was used as an index to evaluate the difference between the evaluation of the above (A) and (B) and that of the large-sized one. That is, in the case where the evaluation result of a small laminate was "1" or "2", it was judged that there was no problem in the handling property even if the laminate was provided in a larger size.

### (9) Electrolytic evaluation (voltage (V), current efficiency (%), common salt concentration in caustic soda (ppm, on the basis of 50%))

The electrolytic performance was evaluated by the following electrolytic experiment.

A titanium anode cell having an anode chamber in which an anode was provided (anode terminal cell) and a cathode cell having a nickel cathode chamber in which a cathode was provided (cathode terminal cell) were oppositely disposed. A pair of gaskets was arranged between the cells, and a laminate (a laminate of the ion exchange membrane A and an electrode for electrolysis) was sandwiched between the gaskets. Then, the anode cell, the gasket, the laminate, the gasket, and the cathode were brought into close contact together to obtain an electrolytic cell, and an electrolyzer including the cell was provided.

The anode was produced by applying a mixed solution of ruthenium chloride, iridium chloride, and titanium tetrachloride onto a titanium substrate subjected to blasting and acid etching treatment as the pretreatment, followed by drying and baking. The anode was fixed in the anode chamber by welding. As the cathode, one described in each of Examples and Comparative Examples was used. As the collector of the cathode chamber, a nickel expanded metal was used. The collector had a size of 95 mm in length × 110 mm in width. As a metal elastic body, a mattress formed by knitting nickel fine wire was used. The mattress as the metal elastic body was placed on the collector. Nickel mesh formed by plain-weaving nickel wire having a diameter of 150 µm in a sieve mesh size of 40 was placed thereover, and a string made of Teflon(R) was used to fix the four corners of the Ni mesh to the collector. This Ni mesh was used as a feed conductor. This electrolytic cell has a zero-gap structure by use of the repulsive force of the mattress as the metal elastic body. As the gaskets, ethylene propylene diene (EPDM) rubber gaskets were used. As the membrane, the ion exchange membrane A (160 mm square) produced in [Method (i)] was used.

The above electrolytic cell was used to perform electrolysis of common salt. The brine concentration (sodium chloride concentration) in the anode chamber was adjusted to 205 g/L. The sodium hydroxide concentration in the cathode chamber was adjusted to 32% by mass. The temperature each in the anode chamber and the cathode chamber was adjusted so as to allow the temperature in each electrolytic cell to reach 90°C. Common salt electrolysis was performed at a current density of 6 kA/m² to measure the voltage, current efficiency, and common salt concentration in caustic soda. The current efficiency here is the proportion of the amount of the produced caustic soda to the passed current, and when impurity ions and hydroxide ions rather than sodium ions move through the ion exchange membrane due to the passed current, the current efficiency decreases. The current efficiency was obtained by dividing the number of moles of caustic soda produced for a certain time by the number of moles of the electrons of the current passing during that time. The number of moles of caustic soda was obtained by recovering caustic soda produced by the electrolysis in a plastic container and measuring its mass. As the common salt concentration in caustic soda, a value obtained by converting the caustic soda concentration on the basis of 50% was shown.

The specification of the electrode and the feed conductor used in each of Examples and Comparative Examples is shown in Table 3.

### (11) Measurement of thickness of catalytic layer, substrate for electrode for electrolysis, and thickness of electrode

For the thickness of the substrate for electrode for electrolysis, a digimatic thickness gauge (manufactured by Mitutoyo Corporation, minimum scale 0.001 mm) was used to calculate an average value of 10 points obtained by measuring evenly in the plane. The value was used as the thickness of the substrate for electrode for electrolysis (gauge thickness). For the thickness of the electrode, a digimatic thickness gauge was used to calculate an average value of 10 points obtained by measuring evenly in the plane, in the same manner as for the substrate for electrode. The value was used as the thickness of the electrode (gauge thickness). The thickness of the catalytic layer was determined by subtracting the thickness of the substrate for electrode for electrolysis from the thickness of the electrode.

### (12) Elastic deformation test of electrode

The ion exchange membrane A (membrane) and the electrode produced in [Method (i)] were each cut into a 110 mm square. The ion exchange membrane was immersed in pure water for 12 hours or more and then used for the test. After the ion exchange membrane and the electrode were laminated to produce a laminate under conditions of a temperature: 23±2°C and a relative humidity: 30±5%, the laminate was wound around a PVC pipe having an outer diameter of ϕ32 mm and a length of 20 cm without any gap, as shown in Figure 35. The laminate was fixed using a polyethylene cable tie such that the laminate wound did not come off from the PVC pipe or loosen. The laminate was retained in this state for 6 hours. Thereafter, the cable tie was removed, and the laminate was unwound from the PVC pipe. Only the electrode was placed on a surface plate, and the heights L₁ and L₂ of a portion lifted from the surface plate were measured to determine an average value. This value was used as the index of the electrode deformation. That is, a smaller value means that the laminate is unlikely to deform.

When an expanded metal is used, there are two winding direction: the SW direction and the LW direction. In this test, the laminate was wound in the SW direction.

Deformed electrodes (electrodes that did not return to their original flat state) were evaluated for softness after plastic deformation in accordance with a method as shown in Figure 36. That is, a deformed electrode was placed on a membrane sufficiently immersed in pure water. One end of the electrode was fixed, and the other lifted end was pressed onto the membrane to release a force, and an evaluation was performed whether the deformed electrode conformed to the membrane.

### (13) Membrane damage evaluation

As the membrane, an ion exchange membrane B below was used.

As reinforcement core materials, those obtained by twisting 100 denier tape yarns of polytetrafluoroethylene (PTFE) 900 times/m into a thread form were used (hereinafter referred to as PTFE yarns). As warp sacrifice yarns, yarns obtained by twisting eight 35 denier filaments of polyethylene terephthalate (PET) 200 times/m were used (hereinafter referred to as PET yarns). As weft sacrifice yarns, yarns obtained by twisting eight 35 denier filaments of polyethylene terephthalate (PET) 200 times/m were used. First, the PTFE yarns and the sacrifice yarns were plain-woven with 24 PTFE yarns/inch so that two sacrifice yarns were arranged between adjacent PTFE yarns, to obtain a woven fabric having a thickness of 100 µm.

Next, a polymer (A1) of a dry resin that was a copolymer of CF₂=CF₂ and CF₂=CFOCF₂CF(CF₃)OCF₂CF₂COOCH₃ and had an ion exchange capacity of 0.92 mg equivalent/g and a polymer (B1) of a dry resin that was a copolymer of CF₂=CF₂ and CF₂=CFOCF₂CF(CF₃)OCF₂CF₂SO₂F and had an ion exchange capacity of 1.10 mg equivalent/g were provided. Using these polymers (A1) and (B1), a two-layer film X in which the thickness of a polymer (A1) layer was 25 µm and the thickness of a polymer (B1) layer was 89 µm was obtained by a coextrusion T die method. As the ion exchange capacity of each polymer, shown was the ion exchange capacity in the case of hydrolyzing the ion exchange group precursors of each polymer for conversion into ion exchange groups.

Separately, a polymer (B2) of a dry resin that was a copolymer of CF₂=CF₂ and CF₂=CFOCF₂CF(CF₃)OCF₂CF₂SO₂F and had an ion exchange capacity of 1.10 mg equivalent/g was provided. This polymer was single-layer extruded to obtain a film Y having a thickness of 20 µm.

Subsequently, release paper, the film Y, a reinforcing material, and the film X were laminated in this order on a hot plate having a heat source and a vacuum source inside and having micropores on its surface, heated and depressurized under the conditions of a hot plate temperature of 225°C and a degree of reduced pressure of 0.022 MPa for two minutes, and then the release paper was removed to obtain a composite membrane. The resulting composite membrane was immersed in an aqueous solution comprising dimethyl sulfoxide (DMSO) and potassium hydroxide (KOH) for an hour for saponification. Thereafter, the membrane was immersed in 0.5N NaOH for an hour to replace the ions attached to the ion exchange groups by Na, and then washed with water. Further, the membrane was dried at 60°C.

Additionally, a polymer (B3) of a dry resin that was a copolymer of CF₂=CF₂ and CF₂=CFOCF₂CF(CF₃)OCF₂CF₂SO₂F and had an ion exchange capacity of 1.05 mg equivalent/g were hydrolyzed and then was turned into an acid type with hydrochloric acid. Zirconium oxide particles having an average particle size of primary particles of 0.02 µm were added to a 50/50 (mass ratio) mixed solution of water and ethanol in which the polymer (B3') of this acid type was dissolved in a proportion of 5% by mass such that the mass ratio of the polymer (B3') to the zirconium oxide particles was 20/80. Thereafter, the polymer (B3') was dispersed in a suspension of the zirconium oxide particles with a ball mill to obtain a suspension.

This suspension was applied by a spray method onto both the surfaces of the ion exchange membrane and dried to obtain an ion exchange membrane B having a coating layer containing the polymer (B3') and the zirconium oxide particles. The coating density of zirconium oxide measured by fluorescent X-ray measurement was 0.35 mg/cm².

The anode used was the same as in (9) Electrolytic evaluation.

The cathode used was one described in each of Examples and Comparative Examples. The collector, mattress, and feed conductor of the cathode chamber used were the same as in (9) Electrolytic evaluation. That is, a zero-gap structure had been provided by use of Ni mesh as the feed conductor and the repulsive force of the mattress as the metal elastic body. The gaskets used were the same as in (9) Electrolytic evaluation. As the membrane, the ion exchange membrane B produced by the method mentioned above was used. That is, an electrolyzer equivalent to that in (9) was provided except that the laminate of the ion exchange membrane B and the electrode for electrolysis was sandwiched between a pair of gaskets.

The above electrolytic cell was used to perform electrolysis of common salt. The brine concentration (sodium chloride concentration) in the anode chamber was adjusted to 205 g/L. The sodium hydroxide concentration in the cathode chamber was adjusted to 32% by mass. The temperature each in the anode chamber and the cathode chamber was adjusted such that the temperature in each electrolytic cell reached 70°C. Common salt electrolysis was performed at a current density of 8 kA/m². The electrolysis was stopped 12 hours after the start of the electrolysis, and the ion exchange membrane B was removed and observed for its damage condition.

"0" means no damage. "1 to 3" means that damage was present, and a larger number means a larger degree of damage.

### (14) Ventilation resistance of electrode

The ventilation resistance of the electrode was measured using an air permeability tester KES-F8 (trade name, KATO TECH CO., LTD.). The unit for the ventilation resistance value is kPa·s/m. The measurement was repeated 5 times, and the average value was listed in Table 4. The measurement was conducted under the following two conditions. The temperature of the measuring chamber was 24°C and the relative humidity was 32%.
·Measurement condition 1 (ventilation resistance 1)
   Piston speed: 0.2 cm/s
   Ventilation volume: 0.4 cc/cm²/s
   Measurement range: SENSE L (low)
   Sample size: 50 mm × 50 mm
·Measurement condition 2 (ventilation resistance 2)
   Piston speed: 2 cm/s
   Ventilation volume: 4 cc/cm²/s
   Measurement range: SENSE M (medium) or H (high)
   Sample size: 50 mm × 50 mm

### [Example 2-1]

As a substrate for electrode for cathode electrolysis, an electrolytic nickel foil having a gauge thickness of 16 µm was provided. One surface of this nickel foil was subjected to a roughening treatment by means of electrolytic nickel plating. The arithmetic average roughness Ra of the roughened surface was 0.71 µm. The measurement of the surface roughness was performed under the same conditions as for the surface roughness measurement of the nickel plate subjected to the blast treatment.

A porous foil was formed by perforating this nickel foil with circular holes by punching. The opening ratio was 49%.

A coating liquid for use in forming an electrode catalyst was prepared by the following procedure. A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). Then, after drying at 50°C for 10 minutes, preliminary baking at 150°C for 3 minutes, and baking at 350°C for 10 minutes were performed. A series of these coating, drying, preliminary baking, and baking operations was repeated until a predetermined amount of coating was achieved. The thickness of the electrode produced in Example 2-1 was 24 µm. The thickness of the catalytic layer, which was determined by subtracting the thickness of the substrate for electrode for electrolysis from the thickness of the electrode, was 8 µm. The coating was formed also on the surface not roughened. The thickness was the total thickness of ruthenium oxide and cerium oxide.

The measurement results of the adhesive force of the electrode produced by the above method are shown in Table 4. A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0028 (kPa·s/m) under the measurement condition 2.

The electrode produced by the above method was cut into a size of 95 mm in length and 110 mm in width for electrolytic evaluation. The roughened surface of the electrode was oppositely disposed on a substantial center position of the carboxylic acid layer side of the ion exchange membrane A (size: 160 mm × 160 mm), produced in [Method (i)] and equilibrated with a 0.1 N NaOH aqueous solution, and allowed to adhere thereto via the surface tension of the aqueous solution.

Even when the four corners of the membrane portion of the membrane-integrated electrode, which was formed by integrating the membrane with the electrode, were pinched and hung such that the membrane-integrated electrode was in parallel with the ground by allowing the electrode to face the ground side, the electrode did not come off or was not displaced. Also when both the ends of one side were pinched and hung such that the membrane-integrated electrode was vertical to the ground, the electrode did not come off or was not displaced.

The above membrane-integrated electrode was sandwiched between the anode cell and the cathode cell such that the surface onto which the electrode was attached was allowed to face the cathode chamber side. In the sectional structure, the collector, the mattress, the nickel mesh feed conductor, the electrode, the membrane, and the anode are arranged in the order mentioned from the cathode chamber side to form a zero-gap structure.

The resulting electrode was subjected to electrolytic evaluation. The results are shown in Table 4.

The electrode exhibited a low voltage, high current efficiency, and a low common salt concentration in caustic soda. The handling property was also good: "1". The membrane damage was also evaluated as good: "0".

When the amount of coating after the electrolysis was measured by fluorescent X-ray analysis (XRF), substantially 100% of the coating remained on the roughened surface, and the coating on the surface not roughened was reduced. This indicates that the surface opposed to the membrane (roughened surface) contributes to the electrolysis and the other surface not opposed to the membrane can achieve satisfactory electrolytic performance when the amount of coating is small or no coating is present.

### [Example 2-2]

In Example 2-2, an electrolytic nickel foil having a gauge thickness of 22 µm was used as the substrate for electrode for cathode electrolysis. One surface of this nickel foil was subjected to roughening treatment by means of electrolytic nickel plating. The arithmetic average roughness Ra of the roughened surface was 0.96 µm. The measurement of the surface roughness was performed under the same conditions as for the surface roughness measurement of the nickel plate subjected to the blast treatment. The opening ratio was 44%. Except for the above described, evaluation was performed in the same manner as in Example 2-1, and the results are shown in Table 4.

The thickness of the electrode was 29 µm. The thickness of the catalytic layer, which was determined by subtracting the thickness of the substrate for electrode for electrolysis from the thickness of the electrode, was 7 µm. The coating was formed also on the surface not roughened.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0033 (kPa·s/m) under the measurement condition 2.

Additionally, the electrode exhibited a low voltage, high current efficiency, and a low common salt concentration in caustic soda. The handling property was also as good as "1". The membrane damage was also evaluated as good: "0".

When the amount of coating after the electrolysis was measured by XRF, substantially 100% of the coating remained on the roughened surface, and the coating on the surface not roughened was reduced. This indicates that the surface opposed to the membrane (roughened surface) contributes to the electrolysis and the other surface not opposed to the membrane can achieve satisfactory electrolytic performance when the amount of coating is small or no coating is present.

### [Example 2-3]

In Example 2-3, an electrolytic nickel foil having a gauge thickness of 30 µm was used as the substrate for electrode for cathode electrolysis. One surface of this nickel foil was subjected to roughening treatment by means of electrolytic nickel plating. The arithmetic average roughness Ra of the roughened surface was 1.38 µm. The measurement of the surface roughness was performed under the same conditions as for the surface roughness measurement of the nickel plate subjected to the blast treatment. The opening ratio was 44%. Except for the above described, evaluation was performed in the same manner as in Example 2-1, and the results are shown in Table 4.

The thickness of the electrode was 38 µm. The thickness of the catalytic layer, which was determined by subtracting the thickness of the substrate for electrode for electrolysis from the thickness of the electrode, was 8 µm. The coating was formed also on the surface not roughened.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0027 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

When the amount of coating after the electrolysis was measured by XRF, substantially 100% of the coating remained on the roughened surface, and the coating on the surface not roughened was reduced. This indicates that the surface opposed to the membrane (roughened surface) contributes to the electrolysis and the other surface not opposed to the membrane can achieve satisfactory electrolytic performance when the amount of coating is small or no coating is present.

### [Example 2-4]

In Example 2-4, an electrolytic nickel foil having a gauge thickness of 16 µm was used as the substrate for electrode for cathode electrolysis. One surface of this nickel foil was subjected to a roughening treatment by means of electrolytic nickel plating. The arithmetic average roughness Ra of the roughened surface was 0.71 µm. The measurement of the surface roughness was performed under the same conditions as for the surface roughness measurement of the nickel plate subjected to the blast treatment. The opening ratio was 75%. Except for the above described, evaluation was performed in the same manner as in Example 2-1, and the results are shown in Table 4.

The thickness of the electrode was 24 µm. The thickness of the catalytic layer, which was determined by subtracting the thickness of the substrate for electrode for electrolysis from the thickness of the electrode, was 8 µm.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0023 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

When the amount of coating after the electrolysis was measured by XRF, substantially 100% of the coating remained on the roughened surface, and the coating on the surface not roughened was reduced. This indicates that the surface opposed to the membrane (roughened surface) contributes to the electrolysis and the other surface not opposed to the membrane can achieve satisfactory electrolytic performance when the amount of coating is small or no coating is present.

### [Example 2-5]

In Example 2-5, an electrolytic nickel foil having a gauge thickness of 20 µm was provided as the substrate for electrode for cathode electrolysis. Both the surface of this nickel foil was subjected to a roughening treatment by means of electrolytic nickel plating. The arithmetic average roughness Ra of the roughened surface was 0.96 µm. Both the surfaces had the same roughness. The measurement of the surface roughness was performed under the same conditions as for the surface roughness measurement of the nickel plate subjected to the blast treatment. The opening ratio was 49%. Except for the above described, evaluation was performed in the same manner as in Example 2-1, and the results are shown in Table 4.

The thickness of the electrode was 30 µm. The thickness of the catalytic layer, which was determined by subtracting the thickness of the substrate for electrode for electrolysis from the thickness of the electrode, was 10 µm. The coating was formed also on the surface not roughened.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0023 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

Additionally, when the amount of coating after the electrolysis was measured by XRF, substantially 100% of the coating remained on both the surfaces. In consideration of comparison with Examples 2-1 to 2-4, this indicates that the other surface not opposed to the membrane can achieve satisfactory electrolytic performance when the amount of coating is small or no coating is present.

### [Example 2-6]

In Example 2-6, evaluation was performed in the same manner as in Example 2-1 except that coating of the substrate for electrode for cathode electrolysis was performed by ion plating, and the results are shown in Table 4. In the ion plating, film forming was performed using a heating temperature of 200°C and Ru metal target under an argon/oxygen atmosphere at a film forming pressure of 7 × 10⁻² Pa. The coating formed was ruthenium oxide.

The thickness of the electrode was 26 µm. The thickness of the catalytic layer, which was determined by subtracting the thickness of the substrate for electrode for electrolysis from the thickness of the electrode, was 10 µm.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0028 (kPa·s/m) under the measurement condition 2.

Additionally, the electrode exhibited a low voltage, high current efficiency and a low common salt concentration in caustic soda. The handling property was also good: "1". The membrane damage was also evaluated as good: "0".

### [Example 2-7]

In Example 2-7, the substrate for electrode for cathode electrolysis was produced by an electroforming method. The photomask had a shape formed by vertically and horizontally arranging 0.485 mm × 0.485 mm squares at an interval of 0.15 mm. Exposure, development, and electroplating were sequentially performed to obtain a nickel porous foil having a gauge thickness of 20 µm and an opening ratio of 56%. The arithmetic average roughness Ra of the surface was 0.71 µm. The measurement of the surface roughness was performed under the same conditions as for the surface roughness measurement of the nickel plate subjected to the blast treatment. Except for the above described, evaluation was performed in the same manner as in Example 2-1, and the results are shown in Table 4.

The thickness of the electrode was 37 µm. The thickness of the catalytic layer, which was determined by subtracting the thickness of the substrate for electrode for electrolysis from the thickness of the electrode, was 17 µm.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0032 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 2-8]

In Example 2-8, the substrate for electrode for cathode electrolysis was produced by an electroforming method. The substrate had a gauge thickness of 50 µm and an opening ratio of 56%. The arithmetic average roughness Ra of the surface was 0.73 µm. The measurement of the surface roughness was performed under the same conditions as for the surface roughness measurement of the nickel plate subjected to the blast treatment. Except for the above described, evaluation was performed in the same manner as in Example 2-1, and the results are shown in Table 4.

The thickness of the electrode was 60 µm. The thickness of the catalytic layer, which was determined by subtracting the thickness of the substrate for electrode for electrolysis from the thickness of the electrode, was 10 µm.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0032 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 2-9]

In Example 2-9, a nickel nonwoven fabric having a gauge thickness of 150 µm and a void ratio of 76% (manufactured by NIKKO TECHNO, Ltd.) was used as the substrate for electrode for cathode electrolysis. The nonwoven fabric had a nickel fiber diameter of about 40 µm and a basis weight of 300 g/m². Except for the above described, evaluation was performed in the same manner as in Example 2-1, and the results are shown in Table 4.

The thickness of the electrode was 165 µm. The thickness of the catalytic layer, which was determined by subtracting the thickness of the substrate for electrode for electrolysis from the thickness of the electrode, was 15 µm.

A sufficient adhesive force was observed.

When a deformation test of the electrode was performed, the average value of L₁ and L₂ was 29 mm, and the electrode did not return to the original flat state. Then, when softness after plastic deformation was evaluated, the electrode conformed to the membrane due to the surface tension. Thus, it was observed that the electrode was able to be brought into contact with the membrane by a small force even if the electrode was plastically deformed and this electrode had a satisfactory handling property.

When the ventilation resistance of the electrode was measured, the ventilation resistance was 0.07 (kPa·s/m) or less under the measurement condition 1 and 0.0612 (kPa·s/m) under the measurement condition 2.

Additionally, the electrode exhibited a low voltage, high current efficiency, and a low common salt concentration in caustic soda. The electrode had a handling property of "2" and was determined to be handleable as a large laminate. The membrane damage was evaluated as good: "0".

### [Example 2-10]

In Example 2-10, a nickel nonwoven fabric having a gauge thickness of 200 µm and a void ratio of 72% (manufactured by NIKKO TECHNO, Ltd.) was used as the substrate for electrode for cathode electrolysis. The nonwoven fabric had a nickel fiber diameter of about 40 µm and a basis weight of 500 g/m². Except for the above described, evaluation was performed in the same manner as in Example 2-1, and the results are shown in Table 4.

The thickness of the electrode was 215 µm. The thickness of the catalytic layer, which was determined by subtracting the thickness of the substrate for electrode for electrolysis from the thickness of the electrode, was 15 µm.

A sufficient adhesive force was observed.

When a deformation test of the electrode was performed, the average value of L₁ and L₂ was 40 mm, and the electrode did not return to the original flat state. Then, when softness after plastic deformation was evaluated, the electrode conformed to the membrane due to the surface tension. Thus, it was observed that the electrode was able to be brought into contact with the membrane by a small force even if the electrode was plastically deformed and this electrode had a satisfactory handling property.

When the ventilation resistance of the electrode was measured, the ventilation resistance was 0.07 (kPa·s/m) or less under the measurement condition 1 and 0.0164 (kPa·s/m) under the measurement condition 2.

Additionally, the electrode exhibited a low voltage, high current efficiency, and a low common salt concentration in caustic soda. The electrode had a handling property of "2" and was determined to be handleable as a large laminate. The membrane damage was evaluated as good: "0".

### [Example 2-11]

In Example 2-11, foamed nickel having a gauge thickness of 200 µm and a void ratio of 72% (manufactured by Mitsubishi Materials Corporation) was used as the substrate for electrode for cathode electrolysis. Except for the above described, evaluation was performed in the same manner as in Example 2-1, and the results are shown in Table 4.

The thickness of the electrode was 210 µm. The thickness of the catalytic layer, which was determined by subtracting the thickness of the substrate for electrode for electrolysis from the thickness of the electrode, was 10 µm.

A sufficient adhesive force was observed.

When a deformation test of the electrode was performed, the average value of L₁ and L₂ was 17 mm, and the electrode did not return to the original flat state. Then, when softness after plastic deformation was evaluated, the electrode conformed to the membrane due to the surface tension. Thus, it was observed that the electrode was able to be brought into contact with the membrane by a small force even if the electrode was plastically deformed and this electrode had a satisfactory handling property.

When the ventilation resistance of the electrode was measured, the ventilation resistance was 0.07 (kPa·s/m) or less under the measurement condition 1 and 0.0402 (kPa·s/m) under the measurement condition 2.

Additionally, the electrode exhibited a low voltage, high current efficiency, and a low common salt concentration in caustic soda. The electrode had a handling property of "2" and was determined to be handleable as a large laminate. The membrane damage was evaluated as good: "0".

### [Example 2-12]

In Example 2-12, a 200-mesh nickel mesh having a line diameter of 50 µm, a gauge thickness of 100 µm, and an opening ratio of 37% was used as the substrate for electrode for cathode electrolysis. A blast treatment was performed with alumina of grain-size number 320. The blast treatment did not change the opening ratio. It is difficult to measure the roughness of the surface of the metal net. Thus, in Example 2-12, a nickel plate having a thickness of 1 mm was simultaneously subjected to the blast treatment during the blasting, and the surface roughness of the nickel plate was taken as the surface roughness of the wire mesh. The arithmetic average roughness Ra of a wire piece of the wire mesh was 0.64 µm. The measurement of the surface roughness was performed under the same conditions as for the surface roughness measurement of the nickel plate subjected to the blast treatment. Except for the above described, evaluation was performed in the same manner as in Example 2-1, and the results are shown in Table 4.

The thickness of the electrode was 110 µm. The thickness of the catalytic layer, which was determined by subtracting the thickness of the substrate for electrode for electrolysis from the thickness of the electrode, was 10 µm.

A sufficient adhesive force was observed.

When a deformation test of the electrode was performed, the average value of L₁ and L₂ was 0.5 mm. It was found that the electrode had a broad elastic deformation region.

When the ventilation resistance of the electrode was measured, the ventilation resistance was 0.07 (kPa·s/m) or less under the measurement condition 1 and 0.0154 (kPa·s/m) under the measurement condition 2.

Additionally, the electrode exhibited a low voltage, high current efficiency, and a low common salt concentration in caustic soda. The handling property was also as good as "1". The membrane damage was evaluated as good: "0".

### [Example 2-13]

In Example 2-13, a 150-mesh nickel mesh having a line diameter of 65 µm, a gauge thickness of 130 µm, and an opening ratio of 38% was used as the substrate for electrode for cathode electrolysis. A blast treatment was performed with alumina of grain-size number 320. The blast treatment did not change the opening ratio. It is difficult to measure the roughness of the surface of the metal net. Thus, in Example 2-13, a nickel plate having a thickness of 1 mm was simultaneously subjected to the blast treatment during the blasting, and the surface roughness of the nickel plate was taken as the surface roughness of the wire mesh. The arithmetic average roughness Ra was 0.66 µm. The measurement of the surface roughness was performed under the same conditions as for the surface roughness measurement of the nickel plate subjected to the blast treatment. Except for the above described, the above evaluation was performed in the same manner as in Example 2-1, and the results are shown in Table 4.

The thickness of the electrode was 133 µm. The thickness of the catalytic layer, which was determined by subtracting the thickness of the substrate for electrode for electrolysis from the thickness of the electrode, was 3 µm.

A sufficient adhesive force was observed.

When a deformation test of the electrode was performed, the average value of L₁ and L₂ was 6.5 mm. It was found that the electrode had a broad elastic deformation region.

When the ventilation resistance of the electrode was measured, the ventilation resistance was 0.07 (kPa·s/m) or less under the measurement condition 1 and 0.0124 (kPa·s/m) under the measurement condition 2.

Additionally, the electrode exhibited a low voltage, high current efficiency, and a low common salt concentration in caustic soda. The electrode had a handling property of "2" and was determined to be handleable as a large laminate. The membrane damage was also evaluated as good: "0".

### [Example 2-14]

In Example 2-14, a substrate identical to that of Example 2-3 (gauge thickness of 30 µm and opening ratio of 44%) was used as the substrate for electrode for cathode electrolysis. Electrolytic evaluation was performed with a structure identical to that of Example 2-1 except that no nickel mesh feed conductor was included. That is, in the sectional structure of the cell, the collector, the mattress, the membrane-integrated electrode, and the anode are arranged in the order mentioned from the cathode chamber side to form a zero-gap structure, and the mattress serves as the feed conductor. Except for the above described, evaluation was performed in the same manner as in Example 2-1, and the results are shown in Table 4.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0027 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 2-15]

In Example 2-15, a substrate identical to that of Example 2-3 (gauge thickness of 30 µm and opening ratio of 44%) was used as the substrate for electrode for cathode electrolysis. The cathode used in Reference Example 1, which was degraded and had an enhanced electrolytic voltage, was placed instead of the nickel mesh feed conductor. Except for the above described, electrolytic evaluation was performed with a structure identical to that of Example 2-1. That is, in the sectional structure of the cell, the collector, the mattress, the cathode that was degraded and had an enhanced electrolytic voltage (serves as the feed conductor), the electrode for electrolysis (cathode), the membrane, and the anode are arranged in the order mentioned from the cathode chamber side to form a zero-gap structure, and the cathode that is degraded and has an enhanced electrolytic voltage serves as the feed conductor. Except for the above described, evaluation was performed in the same manner as in Example 2-1, and the results are shown in Table 4.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0027 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 2-16]

A titanium foil having a gauge thickness of 20 µm was provided as the substrate for electrode for anode electrolysis. Both the surfaces of the titanium foil were subjected to a roughening treatment. A porous foil was formed by perforating this titanium foil with circular holes by punching. The hole diameter was 1 mm, and the opening ratio was 14%. The arithmetic average roughness Ra of the surface was 0.37 µm. The measurement of the surface roughness was performed under the same conditions as for the surface roughness measurement of the nickel plate subjected to the blast treatment.

A coating liquid for use in forming an electrode catalyst was prepared by the following procedure. A ruthenium chloride solution having a ruthenium concentration of 100 g/L (Tanaka Kikinzoku Kogyo K.K.), iridium chloride having an iridium concentration of 100 g/L (Tanaka Kikinzoku Kogyo K.K.), and titanium tetrachloride (Wako Pure Chemical Industries, Ltd.) were mixed such that the molar ratio among the ruthenium element, the iridium element, and the titanium element was 0.25:0.25:0.5. This mixed solution was sufficiently stirred and used as an anode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). After the above coating liquid was applied onto the titanium porous foil, drying at 60°C for 10 minutes and baking at 475°C for 10 minutes were performed. A series of these coating, drying, preliminary baking, and baking operations was repeatedly performed, and then baking at 520°C was performed for an hour.

The electrode produced by the above method was cut into a size of 95 mm in length and 110 mm in width for electrolytic evaluation. The cut electrode was allowed to adhere via the surface tension of the aqueous solution to a substantial center position of the sulfonic acid layer side of the ion exchange membrane A (size: 160 mm × 160 mm) produced in [Method (i)] and equilibrated with a 0.1 N NaOH aqueous solution.

The cathode was prepared in the following procedure. First, a 40-mesh nickel wire mesh having a line diameter of 150 µm was provided as the substrate. After blasted with alumina as pretreatment, the wire mesh was immersed in 6 N hydrochloric acid for 5 minutes, sufficiently washed with pure water, and dried.

Next, a ruthenium chloride solution having a ruthenium concentration of 100 g/L (Tanaka Kikinzoku Kogyo K.K.) and cerium chloride (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). Then, after drying at 50°C for 10 minutes, preliminary baking at 300°C for 3 minutes, and baking at 550°C for 10 minutes were performed. Thereafter, baking at 550°C for an hour was performed. A series of these coating, drying, preliminary baking, and baking operations was repeated.

As the collector of the cathode chamber, a nickel expanded metal was used. The collector had a size of 95 mm in length × 110 mm in width. As a metal elastic body, a mattress formed by knitting nickel fine wire was used. The mattress as the metal elastic body was placed on the collector. The cathode produced by the above method was placed thereover, and a string made of Teflon(R) was used to fix the four corners of the mesh to the collector.

Even when the four corners of the membrane portion of the membrane-integrated electrode, which was formed by integrating the membrane with the anodes, were pinched and hung such that the membrane-integrated electrode was in parallel with the ground by allowing the electrode to face the ground side, the electrode did not come off or was not displaced. Also when both the ends of one side were pinched and hung such that the membrane-integrated electrode was vertical to the ground, the electrode did not come off or was not displaced.

The anode used in Reference Example 3, which was degraded and had an enhanced electrolytic voltage, was fixed to the anode cell by welding, and the above membrane-integrated electrode was sandwiched between the anode cell and the cathode cell such that the surface onto which the electrode was attached was allowed to face the anode chamber side. That is, in the sectional structure of the cell, the collector, the mattress, the cathode, the membrane, the electrode for electrolysis (titanium porous foil anode), and the anode that was degraded and had an enhanced electrolytic voltage were arranged in the order mentioned from the cathode chamber side to form a zero-gap structure. The anode that was degraded and had an enhanced electrolytic voltage served as the feed conductor. The titanium porous foil anode and the anode that was degraded and had an enhanced electrolytic voltage were only in physical contact with each other and were not fixed with each other by welding.

Evaluation on this structure was performed in the same manner as in Example 2-1, and the results are shown in Table 4.

The thickness of the electrode was 26 µm. The thickness of the catalytic layer, which was determined by subtracting the thickness of the substrate for electrode for electrolysis from the thickness of the electrode, was 6 µm .

A sufficient adhesive force was observed.

When a deformation test of the electrode was performed, the average value of L₁ and L₂ was 4 mm. It was found that the electrode had a broad elastic deformation region.

When the ventilation resistance of the electrode was measured, the ventilation resistance was 0.07 (kPa·s/m) or less under the measurement condition 1 and 0.0060 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 2-17]

In Example 2-17, a titanium foil having a gauge thickness of 20 µm and an opening ratio of 30% was used as the substrate for electrode for anode electrolysis. The arithmetic average roughness Ra of the surface was 0.37 µm. The measurement of the surface roughness was performed under the same conditions as for the surface roughness measurement of the nickel plate subjected to the blast treatment. Except for the above described, evaluation was performed in the same manner as in Example 2-16, and the results are shown in Table 4.

The thickness of the electrode was 30 µm. The thickness of the catalytic layer, which was determined by subtracting the thickness of the substrate for electrode for electrolysis from the thickness of the electrode, was 10 µm.

A sufficient adhesive force was observed.

When a deformation test of the electrode was performed, the average value of L₁ and L₂ was 5 mm. It was found that the electrode had a broad elastic deformation region.

When the ventilation resistance of the electrode was measured, the ventilation resistance was 0.07 (kPa·s/m) or less under the measurement condition 1 and 0.0030 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 2-18]

In Example 2-18, a titanium foil having a gauge thickness of 20 µm and an opening ratio of 42% was used as the substrate for electrode for anode electrolysis. The arithmetic average roughness Ra of the surface was 0.38 µm. The measurement of the surface roughness was performed under the same conditions as for the surface roughness measurement of the nickel plate subjected to the blast treatment. Except for the above described, evaluation was performed in the same manner as in Example 2-16, and the results are shown in Table 4.

The thickness of the electrode was 32 µm. The thickness of the catalytic layer, which was determined by subtracting the thickness of the substrate for electrode for electrolysis from the thickness of the electrode, was 12 µm.

A sufficient adhesive force was observed.

When a deformation test of the electrode was performed, the average value of L₁ and L₂ was 2.5 mm. It was found that the electrode had a broad elastic deformation region.

When the ventilation resistance of the electrode was measured, the ventilation resistance was 0.07 (kPa·s/m) or less under the measurement condition 1 and 0.0022 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 2-19]

In Example 2-19, a titanium foil having a gauge thickness of 50 µm and an opening ratio of 47% was used as the substrate for electrode for anode electrolysis. The arithmetic average roughness Ra of the surface was 0.40 µm. The measurement of the surface roughness was performed under the same conditions as for the surface roughness measurement of the nickel plate subjected to the blast treatment. Except for the above described, evaluation was performed in the same manner as in Example 2-16, and the results are shown in Table 4.

The thickness of the electrode was 69 µm. The thickness of the catalytic layer, which was determined by subtracting the thickness of the substrate for electrode for electrolysis from the thickness of the electrode, was 19 µm.

A sufficient adhesive force was observed.

When a deformation test of the electrode was performed, the average value of L₁ and L₂ was 8 mm. It was found that the electrode had a broad elastic deformation region.

When the ventilation resistance of the electrode was measured, the ventilation resistance was 0.07 (kPa·s/m) or less under the measurement condition 1 and 0.0024 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 2-20]

In Example 2-20, a titanium nonwoven fabric having a gauge thickness of 100 µm, a titanium fiber diameter of about 20 µm, a basis weight of 100 g/m², and an opening ratio of 78% was used as the substrate for electrode for anode electrolysis. Except for the above described, evaluation was performed in the same manner as in Example 2-16, and the results are shown in Table 4.

The thickness of the electrode was 114 µm. The thickness of the catalytic layer, which was determined by subtracting the thickness of the substrate for electrode for electrolysis from the thickness of the electrode, was 14 µm.

A sufficient adhesive force was observed.

When a deformation test of the electrode was performed, the average value of L₁ and L₂ was 2 mm. It was found that the electrode had a broad elastic deformation region.

When the ventilation resistance of the electrode was measured, the ventilation resistance was 0.07 (kPa·s/m) or less under the measurement condition 1 and 0.0228 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 2-21]

In Example 2-21, a 150-mesh titanium wire mesh having a gauge thickness of 120 µm and a titanium fiber diameter of about 60 µm was used as the substrate for electrode for anode electrolysis. The opening ratio was 42%. A blast treatment was performed with alumina of grain-size number 320. It is difficult to measure the roughness of the surface of the metal net. Thus, in Example 2-21, a titanium plate having a thickness of 1 mm was simultaneously subjected to the blast treatment during the blasting, and the surface roughness of the titanium plate was taken as the surface roughness of the wire mesh. The arithmetic average roughness Ra was 0.60 µm. The measurement of the surface roughness was performed under the same conditions as for the surface roughness measurement of the nickel plate subjected to the blast treatment. Except for the above described, evaluation was performed in the same manner as in Example 2-16, and the results are shown in Table 4.

The thickness of the electrode was 140 µm. The thickness of the catalytic layer, which was determined by subtracting the thickness of the substrate for electrode for electrolysis from the thickness of the electrode, was 20 µm.

A sufficient adhesive force was observed.

When a deformation test of the electrode was performed, the average value of L₁ and L₂ was 10 mm. It was found that the electrode had a broad elastic deformation region.

When the ventilation resistance of the electrode was measured, the ventilation resistance was 0.07 (kPa·s/m) or less under the measurement condition 1 and 0.0132 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 2-22]

In Example 2-22, an anode that was degraded and had an enhanced electrolytic voltage was used in the same manner as in Example 2-16 as the anode feed conductor, and a titanium nonwoven fabric identical to that of Example 2-20 was used as the anode. A cathode that was degraded and had an enhanced electrolytic voltage was used in the same manner as in Example 2-15 as the cathode feed conductor, and a nickel foil electrode identical to that of Example 2-3 was used as the cathode. In the sectional structure of the cell, the collector, the mattress, the cathode that was degraded and had an enhanced voltage, the nickel porous foil cathode, the membrane, the titanium nonwoven fabric anode, and the anode that was degraded and had an enhanced electrolytic voltage are arranged in the order mentioned from the cathode chamber side to form a zero-gap structure, and the cathode and anode degraded and having an enhanced electrolytic voltage serve as the feed conductor. Except for the above described, evaluation was performed in the same manner as in Example 2-1, and the results are shown in Table 4.

The thickness of the electrode (anode) was 114 µm, and the thickness of the catalytic layer, which was determined by subtracting the thickness of the substrate for electrode for electrolysis from the thickness of the electrode (anode), was 14 µm. The thickness of the electrode (cathode) was 38 µm, and the thickness of the catalytic layer, which was determined by subtracting the thickness of the substrate for electrode for electrolysis from the thickness of the electrode (cathode), was 8 µm.

A sufficient adhesive force was observed both in the anode and the cathode.

When a deformation test of the electrode (anode) was performed, the average value of L₁ and L₂ was 2 mm. When a deformation test of the electrode (cathode) was performed, the average value of L₁ and L₂ was 0 mm.

When the ventilation resistance of the electrode (anode) was measured, the ventilation resistance was 0.07 (kPa·s/m) or less under the measurement condition 1 and 0.0228 (kPa·s/m) under the measurement condition 2. When the ventilation resistance of the electrode (cathode) was measured, the ventilation resistance was 0.07 (kPa·s/m) or less under the measurement condition 1 and 0.0027 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0" both in the anode and the cathode. In Example 2-22, the cathode and the anodes were combined by attaching the cathode to one surface of the membrane and the anode to the other surface and subjected to the membrane damage evaluation.

### [Example 2-23]

In Example 2-23, a microporous membrane "Zirfon Perl UTP 500" manufactured by Agfa was used.

The Zirfon membrane was immersed in pure water for 12 hours or more and used for the test. Except for the above described, the above evaluation was performed in the same manner as in Example 2-3, and the results are shown in Table 4.

When a deformation test of the electrode was performed, the average value of L₁ and L₂ was 0 mm. It was found that the electrode had a broad elastic deformation region.

Similarly to the case where an ion exchange membrane was used as the membrane, a sufficient adhesive force was observed. The microporous membrane was brought into a close contact with the electrode via the surface tension, and the handling property was good: "1".

### [Example 2-24]

A carbon cloth obtained by weaving a carbon fiber having a gauge thickness of 566 µm was provided as the substrate for electrode for cathode electrolysis. A coating liquid for use in forming an electrode catalyst on this carbon cloth was prepared by the following procedure. A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088 (trade name), thickness 10 mm) around a polyvinyl chloride (PVC) cylinder was always in contact with the above coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). Then, after drying at 50°C for 10 minutes, preliminary baking at 150°C for 3 minutes, and baking at 350°C for 10 minutes were performed. A series of these coating, drying, preliminary baking, and baking operations was repeated until a predetermined amount of coating was achieved. The thickness of the electrode produced was 570 µm. The thickness of the catalytic layer, which was determined by subtracting the thickness of the substrate for electrode for electrolysis from the thickness of the electrode, was 4 µm. The thickness of the catalytic layer was the total thickness of ruthenium oxide and cerium oxide.

The resulting electrode was subjected to electrolytic evaluation. The results are shown in Table 4.

When a deformation test of the electrode was performed, the average value of L₁ and L₂ was 0 mm.

When the ventilation resistance of the electrode was measured, the ventilation resistance was 0.19 (kPa·s/m) under the measurement condition 1 and 0.176 (kPa·s/m) under the measurement condition 2.

The electrode had a handling property of "2" and was determined to be handleable as a large laminate.

The voltage was high, the membrane damage was evaluated as "1", and membrane damage was observed. It was conceived that this is because NaOH that had been generated in the electrode accumulated on the interface between the electrode and the membrane to elevate the concentration thereof, due to the high ventilation resistance of the electrode of Example 2-24.

### [Reference Example 1]

In Reference Example 1, used was a cathode used as the cathode in a large electrolyzer for eight years, degraded, and having an enhanced electrolytic voltage. The above cathode was placed instead of the nickel mesh feed conductor on the mattress of the cathode chamber, and the ion exchange membrane A produced in [Method (i)] was sandwiched therebetween. Then, electrolytic evaluation was performed. In Reference Example 1, no membrane-integrated electrode was used. In the sectional structure of the cell, the collector, the mattress, the cathode that was degraded and had an enhanced electrolytic voltage, the ion exchange membrane A, and the anodes were arranged in the order mentioned from the cathode chamber side to form a zero-gap structure.

As a result of the electrolytic evaluation with this structure, the voltage was 3.04 V, the current efficiency was 97.0%, the common salt concentration in caustic soda (value converted on the basis of 50%) was 20 ppm. Consequently, due to degradation of the cathode, the voltage was high.

### [Reference Example 2]

In Reference Example 2, a nickel mesh feed conductor was used as the cathode. That is, electrolysis was performed on nickel mesh having no catalyst coating thereon.

The nickel mesh cathode was placed on the mattress of the cathode chamber, and the ion exchange membrane A produced in [Method (i)] was sandwiched therebetween. Then, electrolytic evaluation was performed. In the sectional structure of the electric cell of Reference Example 2, the collector, the mattress, the nickel mesh, the ion exchange membrane A, and the anodes were arranged in the order mentioned from the cathode chamber side to form a zero-gap structure.

As a result of the electrolytic evaluation with this structure, the voltage was 3.38 V, the current efficiency was 97.7%, the common salt concentration in caustic soda (value converted on the basis of 50%) was 24 ppm. Consequently, the voltage was high because the cathode catalyst had no coating.

### [Reference Example 3]

In Reference Example 3, used was an anode used as the anode in a large electrolyzer for about eight years, degraded, and having an enhanced electrolytic voltage.

In the sectional structure of the electrolytic cell of Reference Example 3, the collector, the mattress, the cathode, the ion exchange membrane A produced in [Method (i)], and the anode that was degraded and had an enhanced electrolytic voltage were arranged in the order mentioned from the cathode chamber side to form a zero-gap structure.

As a result of the electrolytic evaluation with this structure, the voltage was 3.18 V, the current efficiency was 97.0%, the common salt concentration in caustic soda (value converted on the basis of 50%) was 22 ppm. Consequently, due to degradation of the anode, the voltage was high.

### [Example 2-25]

In Example 2-25, a fully-rolled nickel expanded metal having a gauge thickness of 100 µm and an opening ratio of 33% was used as the substrate for electrode for cathode electrolysis. A blast treatment was performed with alumina of grain-size number 320. The opening ratio was not changed after the blast treatment. It is difficult to measure the surface roughness of the expanded metal. Thus, in Example 2-25, a nickel plate having a thickness of 1 mm was simultaneously subjected to the blast treatment during the blasting, and the surface roughness of the nickel plate was taken as the surface roughness of the wire mesh. The arithmetic average roughness Ra was 0.68 µm. The measurement of the surface roughness was performed under the same conditions as for the surface roughness measurement of the nickel plate subjected to the blast treatment. Except for the above described, evaluation was performed in the same manner as in Example 2-1, and the results are shown in Table 4.

The thickness of the electrode was 114 µm. The thickness of the catalytic layer, which was determined by subtracting the thickness of the substrate for electrode for electrolysis from the thickness of the electrode, was 14 µm.

The mass per unit area was 67.5 (mg/cm²). The force applied per unit mass·unit area (1) was such a small value as 0.05 (N/mg·cm²). Thus, the result of evaluation of winding around column of 280 mm in diameter (2) was 64%, and the result of evaluation of winding around column of 145 mm in diameter (3) was 22%. The portions at which the electrode came off from the membrane increased. This is because there were problems in that the electrode was likely to come off when the membrane-integrated electrode was handled and in that the electrode came off and fell from the membrane during handled. The handling property was "4", which was also problematic. The membrane damage was evaluated as "0".

When a deformation test of the electrode was performed, the average value of L₁ and L₂ was 13 mm.

When the ventilation resistance of the electrode was measured, the ventilation resistance was 0.07 (kPa·s/m) or less under the measurement condition 1 and 0.0168 (kPa·s/m) under the measurement condition 2.

### [Example 2-26]

In Example 2-26, a fully-rolled nickel expanded metal having a gauge thickness of 100 µm and an opening ratio of 16% was used as the substrate for electrode for cathode electrolysis. A blast treatment was performed with alumina of grain-size number 320. The opening ratio was not changed after the blast treatment. It is difficult to measure the surface roughness of the expanded metal. Thus, in Example 2-26, a nickel plate having a thickness of 1 mm was simultaneously subjected to the blast treatment during the blasting, and the surface roughness of the nickel plate was taken as the surface roughness of the wire mesh. The arithmetic average roughness Ra was 0.64 µm. The measurement of the surface roughness was performed under the same conditions as for the surface roughness measurement of the nickel plate subjected to the blast treatment. Except for the above described, evaluation was performed in the same manner as in Example 2-1, and the results are shown in Table 4.

The thickness of the electrode was 107 µm. The thickness of the catalytic layer, which was determined by subtracting the thickness of the substrate for electrode for electrolysis from the thickness of the electrode, was 7 µm.

The mass per unit area was 78.1 (mg/cm²). The force applied per unit mass·unit area (1) was such a small value as 0.04 (N/mg·cm²). Thus, the result of evaluation of winding around column of 280 mm in diameter (2) was 37%, and the result of evaluation of winding around column of 145 mm in diameter (3) was 25%. The portions at which the electrode came off from the membrane increased. This is because there were problems in that the electrode was likely to come off when the membrane-integrated electrode was handled and in that the electrode came off and fell from the membrane during handled. The handling property was "4", which was also problematic. The membrane damage was evaluated as "0".

When a deformation test of the electrode was performed, the average value of L₁ and L₂ was 18.5 mm.

When the ventilation resistance of the electrode was measured, the ventilation resistance was 0.07 (kPa·s/m) or less under the measurement condition 1 and 0.0176 (kPa·s/m) under the measurement condition 2.

### [Example 2-27]

In Example 2-27, a fully-rolled nickel expanded metal having a gauge thickness of 100 µm and an opening ratio of 40% was used as the substrate for electrode for cathode electrolysis. A blast treatment was performed with alumina of grain-size number 320. The opening ratio was not changed after the blast treatment. It is difficult to measure the surface roughness of the expanded metal. Thus, in Example 2-27, a nickel plate having a thickness of 1 mm was simultaneously subjected to the blast treatment during the blasting, and the surface roughness of the nickel plate was taken as the surface roughness of the wire mesh. The arithmetic average roughness Ra was 0.70 µm. The measurement of the surface roughness was performed under the same conditions as for the surface roughness measurement of the nickel plate subjected to the blast treatment. Coating of the substrate for electrode for electrolysis was performed by ion plating in the same manner as in Example 2-6. Except for the above described, evaluation was performed in the same manner as in Example 2-1, and the results are shown in Table 4.

The thickness of the electrode was 110 µm. The thickness of the catalytic layer, which was determined by subtracting the thickness of the substrate for electrode for electrolysis from the thickness of the electrode, was 10 µm.

The force applied per unit mass·unit area (1) was such a small value as 0.07 (N/mg·cm²). Thus, the result of evaluation of winding around column of 280 mm in diameter (2) was 80%, and the result of evaluation of winding around column of 145 mm in diameter (3) was 32%. The portions at which the electrode came off from the membrane increased. This is because there were problems in that the electrode was likely to come off when the membrane-integrated electrode was handled and in that the electrode came off and fell from the membrane during handled. The handling property was "3", which was also problematic. The membrane damage was evaluated as "0".

When a deformation test of the electrode was performed, the average value of L₁ and L₂ was 11 mm.

When the ventilation resistance of the electrode was measured, the ventilation resistance was 0.07 (kPa·s/m) or less under the measurement condition 1 and 0.0030 (kPa·s/m) under the measurement condition 2.

### [Example 2-28]

In Example 2-28, a fully-rolled nickel expanded metal having a gauge thickness of 100 µm and an opening ratio of 58% was used as the substrate for electrode for cathode electrolysis. A blast treatment was performed with alumina of grain-size number 320. The opening ratio was not changed after the blast treatment. It is difficult to measure the surface roughness of the expanded metal. Thus, in Example 2-28, a nickel plate having a thickness of 1 mm was simultaneously subjected to the blast treatment during the blasting, and the surface roughness of the nickel plate was taken as the surface roughness of the wire mesh. The arithmetic average roughness Ra was 0.64 µm. The measurement of the surface roughness was performed under the same conditions as for the surface roughness measurement of the nickel plate subjected to the blast treatment. Except for the above described, evaluation was performed in the same manner as in Example 2-1, and the results are shown in Table 4.

The thickness of the electrode was 109 µm. The thickness of the catalytic layer, which was determined by subtracting the thickness of the substrate for electrode for electrolysis from the thickness of the electrode, was 9 µm.

The force applied per unit mass·unit area (1) was such a small value as 0.06 (N/mg·cm²). Thus, the result of evaluation of winding around column of 280 mm in diameter (2) was 69%, and the result of evaluation of winding around column of 145 mm in diameter (3) was 39%. The portions at which the electrode came off from the membrane increased. This is because there were problems in that the electrode was likely to come off when the membrane-integrated electrode was handled and in that the electrode came off and fell from the membrane during handled. The handling property was "3", which was also problematic. The membrane damage was evaluated as "0".

When a deformation test of the electrode was performed, the average value of L₁ and L₂ was 11.5 mm.

When the ventilation resistance of the electrode was measured, the ventilation resistance was 0.07 (kPa·s/m) or less under the measurement condition 1 and 0.0028 (kPa·s/m) under the measurement condition 2.

### [Example 2-29]

In Example 2-29, a nickel wire mesh having a gauge thickness of 300 µm and an opening ratio of 56% was used as the substrate for electrode for cathode electrolysis. It is difficult to measure the surface roughness of the wire mesh. Thus, in Example 2-29, a nickel plate having a thickness of 1 mm was simultaneously subjected to the blast treatment during the blasting, and the surface roughness of the nickel plate was taken as the surface roughness of the wire mesh. A blast treatment was performed with alumina of grain-size number 320. The opening ratio was not changed after the blast treatment. The arithmetic average roughness Ra was 0.64 µm. The measurement of the surface roughness was performed under the same conditions as for the surface roughness measurement of the nickel plate subjected to the blast treatment. Except for the above described, evaluation was performed in the same manner as in Example 2-1, and the results are shown in Table 4.

The thickness of the electrode was 308 µm. The thickness of the catalytic layer, which was determined by subtracting the thickness of the substrate for electrode for electrolysis from the thickness of the electrode, was 8 µm.

The mass per unit area was 49.2 (mg/cm²). Thus, the result of evaluation of winding around column of 280 mm in diameter (2) was 88%, and the result of evaluation of winding around column of 145 mm in diameter (3) was 42%. The portions at which the electrode came off from the membrane increased. This is because the electrode was likely to come off when the membrane-integrated electrode is handled and the electrode may come off and fall from the membrane during handled. There was a problem in the handling property, which was evaluated as "3". When the large size electrode was actually operated, it was possible to evaluate the handling property as "3". The membrane damage was evaluated as "0".

When a deformation test of the electrode was performed, the average value of L₁ and L₂ was 23 mm.

When the ventilation resistance of the electrode was measured, the ventilation resistance was 0.07 (kPa·s/m) or less under the measurement condition 1 and 0.0034 (kPa·s/m) under the measurement condition 2.

### [Example 2-30]

In Example 2-30, a nickel wire mesh having a gauge thickness of 200 µm and an opening ratio of 37% was used as the substrate for electrode for cathode electrolysis. A blast treatment was performed with alumina of grain-size number 320. The opening ratio was not changed after the blast treatment. It is difficult to measure the surface roughness of the wire mesh. Thus, in Example 2-30, a nickel plate having a thickness of 1 mm was simultaneously subjected to the blast treatment during the blasting, and the surface roughness of the nickel plate was taken as the surface roughness of the wire mesh. The arithmetic average roughness Ra was 0.65 µm. The measurement of the surface roughness was performed under the same conditions as for the surface roughness measurement of the nickel plate subjected to the blast treatment. Except for the above described, evaluation of electrode electrolysis, measurement results of the adhesive force, and adhesiveness were performed in the same manner as in Example 2-1. The results are shown in Table 4.

The thickness of the electrode was 210 µm. The thickness of the catalytic layer, which was determined by subtracting the thickness of the substrate for electrode for electrolysis from the thickness of the electrode, was 10 µm.

The mass per unit area was 56.4 mg/cm². Thus, the result of evaluation method of winding around column of 145 mm in diameter (3) was 63%, and the adhesiveness between the electrode and the membrane was poor. This is because the electrode was likely to come off when the membrane-integrated electrode is handled and the electrode may come off and fall from the membrane during handled. There was a problem in the handling property, which was evaluated as "3". The membrane damage was evaluated as "0".

When a deformation test of the electrode was performed, the average value of L₁ and L₂ was 19 mm.

When the ventilation resistance of the electrode was measured, the ventilation resistance was 0.07 (kPa·s/m) or less under the measurement condition 1 and 0.0096 (kPa·s/m) under the measurement condition 2.

### [Example 2-31]

In Example 2-31, a full-rolled titanium expanded metal having a gauge thickness of 500 µm and an opening ratio of 17% was used as the substrate for electrode for anode electrolysis. A blast treatment was performed with alumina of grain-size number 320. The opening ratio was not changed after the blast treatment. It is difficult to measure the surface roughness of the expanded metal. Thus, in Example 2-31, a titanium plate having a thickness of 1 mm was simultaneously subjected to the blast treatment during the blasting, and the surface roughness of the titanium plate was taken as the surface roughness of the wire mesh. The arithmetic average roughness Ra was 0.60 µm. The measurement of the surface roughness was performed under the same conditions as for the surface roughness measurement of the nickel plate subjected to the blast treatment. Except for the above described, evaluation was performed in the same manner as in Example 2-16, and the results are shown in Table 4.

The thickness of the electrode was 508 µm. The thickness of the catalytic layer, which was determined by subtracting the thickness of the substrate for electrode for electrolysis from the thickness of the electrode, was 8 µm.

The mass per unit area was 152.5 (mg/cm²). The force applied per unit mass·unit area (1) was such a small value as 0.01 (N/mg·cm²). Thus, the result of evaluation of winding around column of 280 mm in diameter (2) was less than 5%, and the result of evaluation of winding around column of 145 mm in diameter (3) was less than 5%. The portions at which the electrode came off from the membrane increased. This is because the electrode was likely to come off when the membrane-integrated electrode was handled, the electrode came off and fell from the membrane during handled, and so on. The handling property was "4", which was also problematic. The membrane damage was evaluated as "0".

When a deformation test of the electrode was performed, the electrode did not recover and remained rolled up in the PVC pipe form. Thus, it was not possible to measure the values of L₁ and L₂.

When the ventilation resistance of the electrode was measured, the ventilation resistance was 0.07 (kPa·s/m) or less under the measurement condition 1 and 0.0072 (kPa·s/m) under the measurement condition 2.

### [Example 2-32]

In Example 2-32, a full-rolled titanium expanded metal having a gauge thickness having 800 µm and an opening ratio of 8% was used as the substrate for electrode for anode electrolysis. A blast treatment was performed with alumina of grain-size number 320. The opening ratio was not changed after the blast treatment. It is difficult to measure the surface roughness of the expanded metal. Thus, in Example 2-32, a titanium plate having a thickness of 1 mm was simultaneously subjected to the blast treatment during the blasting, and the surface roughness of the titanium plate was taken as the surface roughness of the wire mesh. The arithmetic average roughness Ra was 0.61 µm. The measurement of the surface roughness was performed under the same conditions as for the surface roughness measurement of the nickel plate subjected to the blast treatment. Except for the above described, the above evaluation was performed in the same manner as in Example 2-16, and the results are shown in Table 4.

The thickness of the electrode was 808 µm. The thickness of the catalytic layer, which was determined by subtracting the thickness of the substrate for electrode for electrolysis from the thickness of the electrode, was 8 µm.

The mass per unit area was 251.3 (mg/cm²). The force applied per unit mass·unit area (1) was such a small value as 0.01 (N/mg·cm²). Thus, the result of evaluation of winding around column of 280 mm in diameter (2) was less than 5%, and the result of evaluation of winding around column of 145 mm in diameter (3) was less than 5%. The portions at which the electrode came off from the membrane increased. This is because the electrode was likely to come off when the membrane-integrated electrode was handled, the electrode came off and fell from the membrane during handled, and so on. The handling property was "4", which was also problematic. The membrane damage was evaluated as "0".

When a deformation test of the electrode was performed, the electrode did not recover and remained rolled up in the PVC pipe form. Thus, it was not possible to measure the values of L₁ and L₂.

When the ventilation resistance of the electrode was measured, the ventilation resistance was 0.07 (kPa·s/m) or less under the measurement condition 1 and 0.0172 (kPa·s/m) under the measurement condition 2.

### [Example 2-33]

In Example 2-33, a full-rolled titanium expanded metal having a gauge thickness of 1000 µm and an opening ratio of 46% was used as the substrate for electrode for anode electrolysis. A blast treatment was performed with alumina of grain-size number 320. The opening ratio was not changed after the blast treatment. It is difficult to measure the surface roughness of the expanded metal. Thus, in Example 2-33, a titanium plate having a thickness of 1 mm was simultaneously subjected to the blast treatment during the blasting, and the surface roughness of the titanium plate was taken as the surface roughness of the wire mesh. The arithmetic average roughness Ra was 0.59 µm. The measurement of the surface roughness was performed under the same conditions as for the surface roughness measurement of the nickel plate subjected to the blast treatment. Except for the above described, the above evaluation was performed in the same manner as in Example 2-16, and the results are shown in Table 4.

The thickness of the electrode was 1011 µm. The thickness of the catalytic layer, which was determined by subtracting the thickness of the substrate for electrode for electrolysis from the thickness of the electrode, was 11 µm.

The mass per unit area was 245.5 (mg/cm²). The force applied per unit mass·unit area (1) was such a small value as 0.01 (N/mg·cm²). Thus, the result of evaluation of winding around column of 280 mm in diameter (2) was less than 5%, and the result of evaluation of winding around column of 145 mm in diameter (3) was less than 5%. The portions at which the electrode came off from the membrane increased. This is because the electrode was likely to come off when the membrane-integrated electrode was handled, the electrode came off and fell from the membrane during handled, and so on. The handling property was "4", which was also problematic. The membrane damage was evaluated as "0".

When a deformation test of the electrode was performed, the electrode did not recover and remained rolled up in the PVC pipe form. Thus, it was not possible to measure the values of L₁ and L₂.

When the ventilation resistance of the electrode was measured, the ventilation resistance was 0.07 (kPa·s/m) or less under the measurement condition 1 and 0.0027 (kPa·s/m) under the measurement condition 2.

### [Example 2-34]

A nickel line having a gauge thickness of 150 µm was provided as the substrate for electrode for cathode electrolysis. A roughening treatment by this nickel line was performed. It is difficult to measure the surface roughness of the nickel line. Thus, in Example 2-34, a nickel plate having a thickness of 1 mm was simultaneously subjected to the blast treatment during the blasting, and the surface roughness of the nickel plate was taken as the surface roughness of the nickel line. A blast treatment was performed with alumina of grain-size number 320. The arithmetic average roughness Ra was 0.64 µm.

A coating liquid for use in forming an electrode catalyst was prepared by the following procedure. A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088 (trade name), thickness 10 mm) around a polyvinyl chloride (PVC) cylinder was always in contact with the above coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). Then, after drying at 50°C for 10 minutes, preliminary baking at 150°C for 3 minutes, and baking at 350°C for 10 minutes were performed. A series of these coating, drying, preliminary baking, and baking operations was repeated until a predetermined amount of coating was achieved. The thickness of one nickel line produced in Example 2-34 was 158 µm.

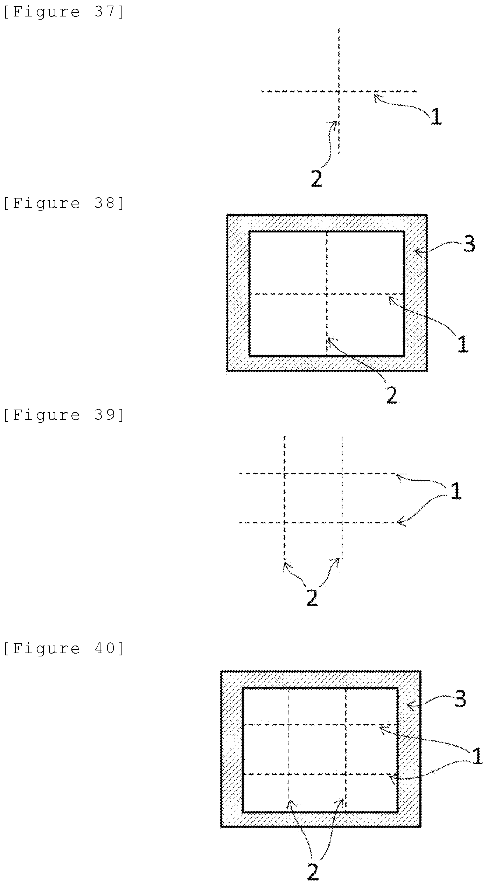

The nickel line produced by the above method was cut into a length of 110 mm and a length of 95 mm. As shown in Figure 37, the 110 mm nickel line and the 95 mm nickel line were placed such that the nickel lines vertically overlapped each other at the center of each of the nickel lines and bonded to each other at the intersection with an instant adhesive (Aron Alpha(R), TOAGOSEI CO., LTD.) to produce an electrode. The electrode was evaluated, and the results are shown in Table 4.

The portion of the electrode at which the nickel lines overlapped had the largest thickness, and the thickness of the electrode was 306 µm. The thickness of the catalytic layer was 6 µm. The opening ratio was 99.7%.

The mass per unit area of the electrode was 0.5 (mg/cm²). The forces applied per unit mass·unit area (1) and (2) were both equal to or less than the measurement lower limit of the tensile testing machine. Thus, the result of evaluation of winding around column of 280 mm in diameter (1) was less than 5%, and the portions at which the electrode came off from the membrane increased. The handling property was "4", which was also problematic. The membrane damage was evaluated as "0".

When a deformation test of the electrode was performed, the average value of L₁ and L₂ was 15 mm.

When the ventilation resistance of the electrode was measured, the ventilation resistance was 0.001 (kPa·s/m) or less under the measurement condition 2. When measured under the measurement condition 2 with SENSE (measurement range) set at H (high) of the ventilation resistance measurement apparatus, the ventilation resistance value was 0.0002 (kPa·s/m).

Additionally, the structure shown in Figure 38 was used to place the electrode (cathode) on the Ni mesh feed conductor, and electrolytic evaluation of the electrode was performed by the method described in (9) Electrolytic evaluation. As a result, the voltage was as high as 3.16

### V.

### [Example 2-35]

In Example 2-35, the electrode produced in Example 2-34 was used. As shown in Figure 39, the 110 mm nickel line and the 95 mm nickel line were placed such that the nickel lines vertically overlapped each other at the center of each of the nickel lines and bonded to each other at the intersection with an instant adhesive (Aron Alpha(R), TOAGOSEI CO., LTD.) to produce an electrode. The electrode was evaluated, and the results are shown in Table 4.

The portion of the electrode at which the nickel lines overlapped had the largest thickness, and the thickness of the electrode was 306 µm. The thickness of the catalytic layer was 6 µm. The opening ratio was 99.4%.

The mass per unit area of the electrode was 0.9 (mg/cm²). The forces applied per unit mass·unit area (1) and (2) were both equal to or less than the measurement lower limit of the tensile testing machine. Thus, the result of evaluation of winding around column of 280 mm in diameter (1) was less than 5%, and the portions at which the electrode came off from the membrane increased. The handling property was "4", which was also problematic. The membrane damage was evaluated as "0".

When a deformation test of the electrode was performed, the average value of L₁ and L₂ was 16 mm.

When the ventilation resistance of the electrode was measured, the ventilation resistance was 0.001 (kPa·s/m) or less under the measurement condition 2. When measured under the measurement condition 2 with SENSE (measurement range) set at H (high) of the ventilation resistance measurement apparatus, the ventilation resistance was 0.0004 (kPa·s/m).

Additionally, the structure shown in Figure 40 was used to place the electrode (cathode) on the Ni mesh feed conductor, and electrolytic evaluation of the electrode was performed by the method described in (9) Electrolytic evaluation. As a result, the voltage was as high as 3.18 V.

### [Example 2-36]

In Example 2-36, the electrode produced in Example 2-34 was used. As shown in Figure 41, the 110 mm nickel line and the 95 mm nickel line were placed such that the nickel lines vertically overlapped each other at the center of each of the nickel lines and bonded to each other at the intersection with an instant adhesive (Aron Alpha(R), TOAGOSEI CO., LTD.) to produce an electrode. The electrode was evaluated, and the results are shown in Table 4.

The portion of the electrode at which the nickel lines overlapped had the largest thickness, and the thickness of the electrode was 306 µm. The thickness of the catalytic layer was 6 µm. The opening ratio was 98.8%.

The mass per unit area of the electrode was 1.9 (mg/cm²). The forces applied per unit mass·unit area (1) and (2) were both equal to or less than the measurement lower limit of the tensile testing machine. Thus, the result of evaluation of winding around column of 280 mm in diameter (1) was less than 5%, and the portions at which the electrode came off from the membrane increased. The handling property was "4", which was also problematic. The membrane damage was evaluated as "0".

When a deformation test of the electrode was performed, the average value of L₁ and L₂ was 14 mm.

When the ventilation resistance of the electrode was measured, the ventilation resistance was 0.001 (kPa·s/m) or less under the measurement condition 2. When measured under the measurement condition 2 with SENSE (measurement range) set at H (high) of the ventilation resistance measurement apparatus, the ventilation resistance was 0.0005 (kPa·s/m).

Additionally, the structure shown in Figure 42 was used to place the electrode (cathode) on the Ni mesh feed conductor, and electrolytic evaluation of the electrode was performed by the method described in (9) Electrolytic evaluation. As a result, the voltage was as high as 3.18 V.

### [Comparative Example 2-1]

In Comparative Example 2-1, a thermal compressed assembly was produced by thermally compressing an electrode onto a membrane with reference to a prior art document (Examples of Japanese Patent Laid-Open No. 58-48686).

A nickel expanded metal having a gauge thickness of 100 µm and an opening ratio of 33% was used as the substrate for electrode for cathode electrolysis to perform electrode coating in the same manner as in Example 2-1. Thereafter, one surface of the electrode was subjected to an inactivation treatment in the following procedure. Polyimide adhesive tape (Chukoh Chemical Industries, Ltd.) was attached to one surface of the electrode. A PTFE dispersion (Dupont-Mitsui Fluorochemicals Co., Ltd., 31-JR (trade name)) was applied onto the other surface and dried in a muffle furnace at 120°C for 10 minutes. The polyimide tape was peeled off, and a sintering treatment was performed in a muffle furnace set at 380°C for 10 minutes. This operation was repeated twice to inactivate the one surface of the electrode.

Produced was a membrane formed by two layers of a perfluorocarbon polymer of which terminal functional group is "-COOCH₃" (C polymer) and a perfluorocarbon polymer of which terminal functional group is "-SO₂F" (S polymer). The thickness of the C polymer layer was 3 mils, and the thickness of the S polymer layer was 4 mils. This two-layer membrane was subjected to a saponification treatment to thereby introduce ion exchange groups to the terminals of the polymer by hydrolysis. The C polymer terminals were hydrolyzed into carboxylic acid groups and the S polymer terminals into sulfo groups. The ion exchange capacity as the sulfonic acid group was 1.0 meq/g, and the ion exchange capacity as the carboxylic acid group was 0.9 meq/g.

The inactivated electrode surface was oppositely disposed to and thermally pressed onto the surface having carboxylic acid groups as the ion exchange groups to integrate the ion exchange membrane and the electrode. The one surface of the electrode was exposed even after the thermal compression, and the electrode passed through no portion of the membrane.

Thereafter, in order to suppress attachment of bubbles to be generated during electrolysis to the membrane, a mixture of zirconium oxide and a perfluorocarbon polymer into which sulfo groups had been introduced was applied onto both the surfaces. Thus, the thermal compressed assembly of Comparative Example 2-1 was produced.

When the force applied per unit mass·unit area (1) was measured using this thermal compressed assembly, the electrode did not move upward because the electrode and the membrane were tightly bonded to each other via thermal compression. Then, the ion exchange membrane and nickel plate were fixed so as not to move, and the electrode was pulled upward by a stronger force. When a force of 1.50 (N/mg·cm²) was applied, a portion of the membrane was broken. The thermal compressed assembly of Comparative Example 2-1 had a force applied per unit mass·unit area (1) of at least 1.50 (N/mg·cm²) and was strongly bonded.

When evaluation of winding around column of 280 mm in diameter (1) was performed, the area in contact with the plastic pipe was less than 5%. Meanwhile, when evaluation of winding around column of 280 mm in diameter (2) was performed, the electrode and the membrane were 100% bonded to each other, but the membrane was not wound around the column in the first place. The result of evaluation of winding around column of 145 mm in diameter (3) was the same. The result meant that the integrated electrode impaired the handling property of the membrane to thereby make it difficult to roll the membrane into a roll and fold the membrane. The handling property was "3", which was problematic. The membrane damage was evaluated as "0". Additionally, when electrolytic evaluation was performed, the voltage was high, the current efficiency was low, the common salt concentration in caustic soda (value converted on the basis of 50%) was raised, and the electrolytic performance deteriorated.

The thickness of the electrode was 114 µm. The thickness of the catalytic layer, which was determined by subtracting the thickness of the substrate for electrode for electrolysis from the thickness of the electrode, was 14 µm.

When a deformation test of the electrode was performed, the average value of L₁ and L₂ was 13 mm.

When the ventilation resistance of the electrode was measured, the ventilation resistance was 0.07 (kPa·s/m) or less under the measurement condition 1 and 0.0168 (kPa·s/m) under the measurement condition 2.

### [Comparative Example 2-2]

In Comparative Example 2-2, a 40-mesh nickel mesh having a line diameter of 150 µm, a gauge thickness of 300 µm, and an opening ratio of 58% was used as the substrate for electrode for cathode electrolysis. Except for the above described, a thermal compressed assembly was produced in the same manner as in Comparative Example 2-1.

When the force applied per unit mass·unit area (1) was measured using this thermal compressed assembly, the electrode did not move upward because the electrode and the membrane were tightly bonded to each other via thermal compression. Then, the ion exchange membrane and nickel plate were fixed so as not to move, and the electrode was pulled upward by a stronger force. When a force of 1.60 (N/mg·cm²) was applied, a portion of the membrane was broken. The thermal compressed assembly of Comparative Example 2-2 had a force applied per unit mass·unit area (1) of at least 1.60 (N/mg·cm²) and was strongly bonded.

When evaluation of winding around column of 280 mm in diameter (1) was performed using this thermal compressed assembly, the contact area with the plastic pipe was less than 5%. Meanwhile, when evaluation of winding around column of 280 mm in diameter (2) was performed, the electrode and the membrane were 100% bonded to each other, but the membrane was not wound around the column in the first place. The result of evaluation of winding around column of 145 mm (3) was the same. The result meant that the integrated electrode impaired the handling property of the membrane to thereby make it difficult to roll the membrane into a roll and fold the membrane. The handling property was "3", which was problematic. Additionally, when electrolytic evaluation was performed, the voltage was high, the current efficiency was low, the common salt concentration in caustic soda was raised, and the electrolytic performance deteriorated.

The thickness of the electrode was 308 µm. The thickness of the catalytic layer, which was determined by subtracting the thickness of the substrate for electrode for electrolysis from the thickness of the electrode, was 8 µm.

When a deformation test of the electrode was performed, the average value of L₁ and L₂ was 23 mm.

When the ventilation resistance of the electrode was measured, the ventilation resistance was 0.07 (kPa·s/m) or less under the measurement condition 1 and 0.0034 (kPa·s/m) under the measurement condition 2.

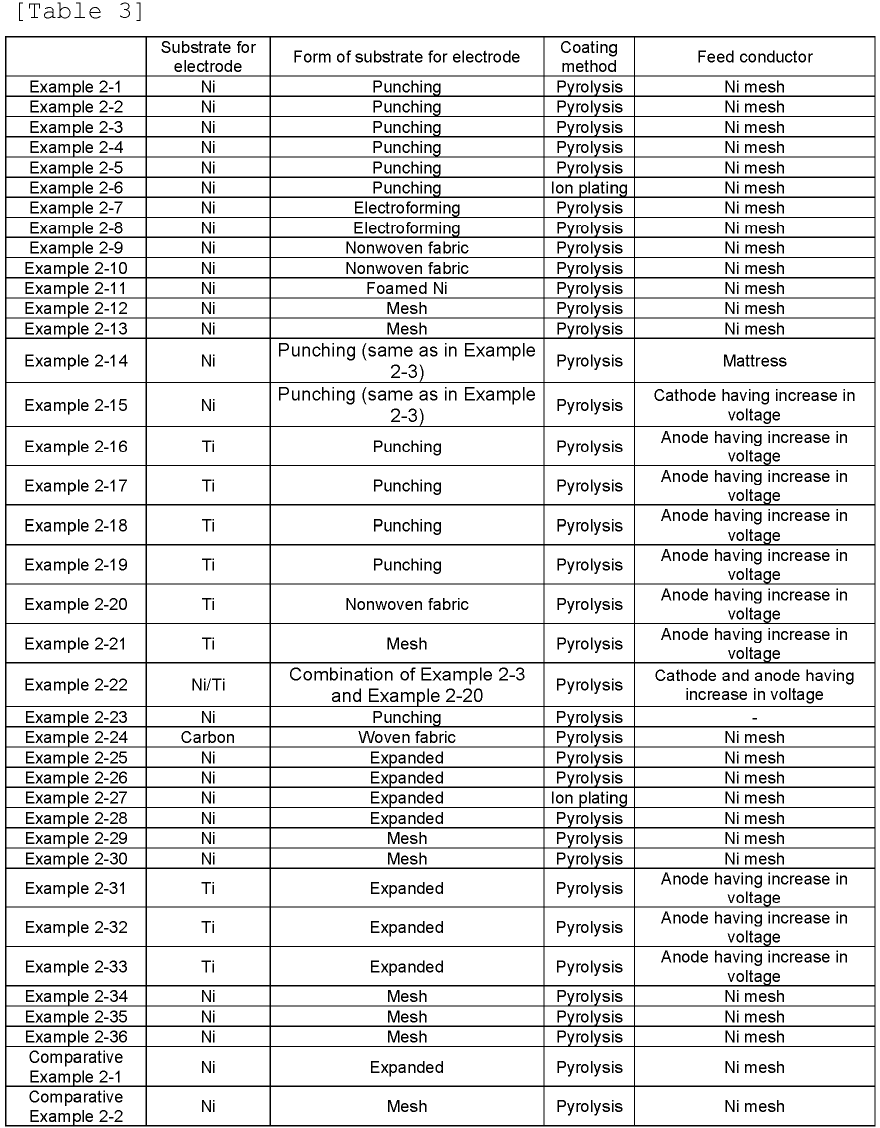

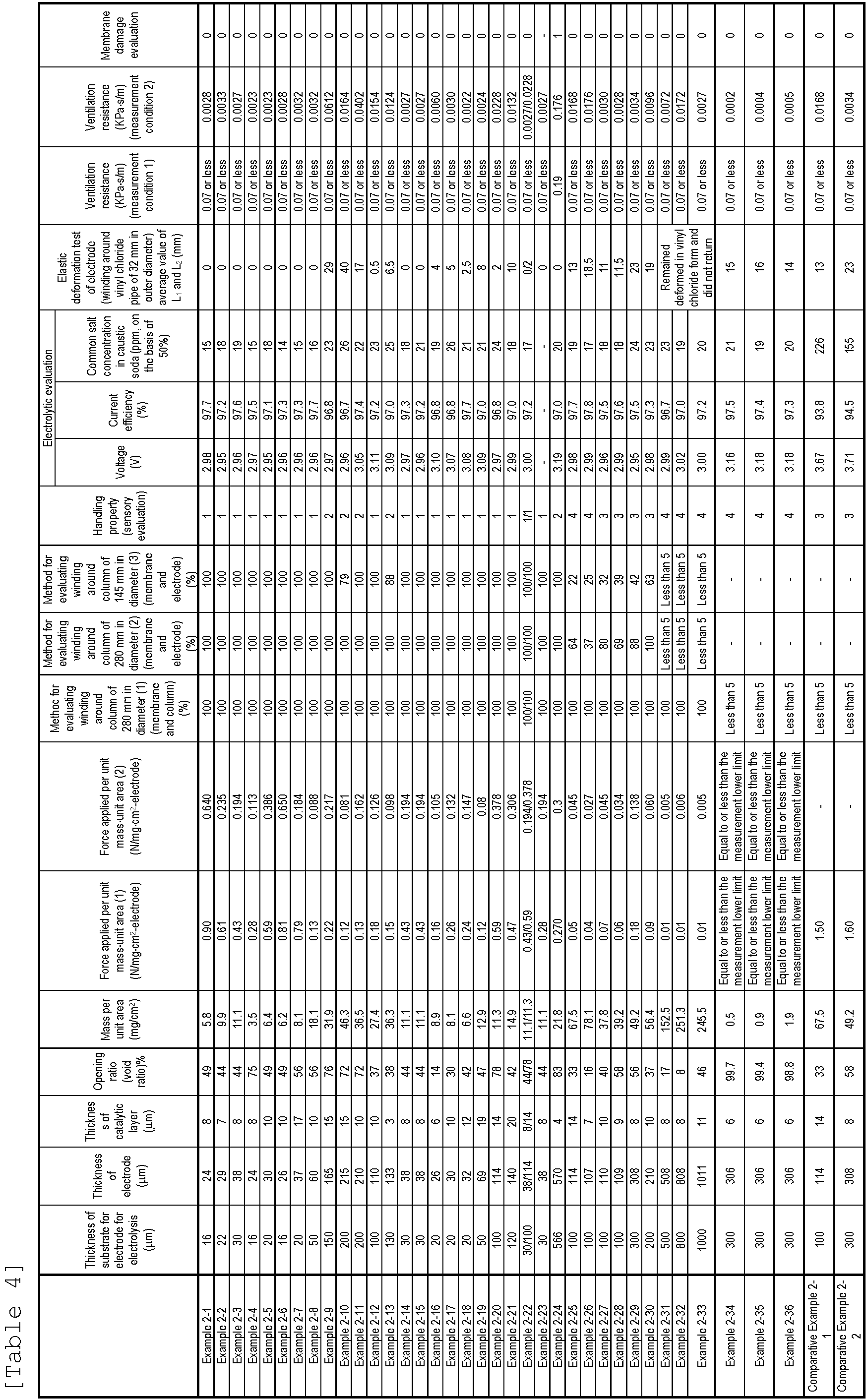

In Table 4, all the samples were able to stand by themselves by the surface tension before measurement of "force applied per unit mass·unit area (1)" and "force applied per unit mass·unit area (2)" (i.e., did not slip down) .

### <Verification of third embodiment> (third embodiment not in accordance with the invention as claimed)

As will be described below, Experiment Examples according to the third embodiment (in the section of <Verification of third embodiment> hereinbelow, simply referred to as "Examples") and Experiment Examples not according to the third embodiment (in the section of <Verification of third embodiment> hereinbelow, simply referred to as "Comparative Examples") were provided, and evaluated by the following method. The details will be described with reference to Figures 57 to 62 as appropriate.

### (1) Electrolytic evaluation (voltage (V), current efficiency(%))

The electrolytic performance was evaluated by the following electrolytic experiment.

A titanium anode cell having an anode chamber in which an anode was provided (anode terminal cell) and a cathode cell having a nickel cathode chamber in which a cathode was provided (cathode terminal cell) were oppositely disposed. A pair of gaskets was arranged between the cells, and an ion exchange membrane was sandwiched between the gaskets. Then, the anode cell, the gasket, the ion exchange membrane, the gasket, and the cathode were brought into close contact together to obtain an electrolytic cell.

The anode was produced by applying a mixed solution of ruthenium chloride, iridium chloride, and titanium tetrachloride onto a titanium substrate subjected to blasting and acid etching treatment as the pretreatment, followed by drying and baking. The anode was fixed in the anode chamber by welding. As the cathode, one described in each of Examples and Comparative Examples was used. As the collector of the cathode chamber, a nickel expanded metal was used. The collector had a size of 95 mm in length × 110 mm in width. As a metal elastic body, a mattress formed by knitting nickel fine wire was used. The mattress as the metal elastic body was placed on the collector. Nickel mesh formed by plain-weaving nickel wire having a diameter of 150 µm in a sieve mesh size of 40 was placed thereover, and a string made of Teflon(R) was used to fix the four corners of the Ni mesh to the collector. This Ni mesh was used as a feed conductor. In this electrolytic cell, the repulsive force of the mattress as the metal elastic body was used so as to achieve a zero-gap structure. As the gaskets, ethylene propylene diene (EPDM) rubber gaskets were used. As the membrane, an ion exchange membrane below was used.

As reinforcement core materials, 90 denier monofilaments made of polytetrafluoroethylene (PTFE) were used (hereinafter referred to as PTFE yarns). As the sacrifice yarns, yarns obtained by twisting six 35 denier filaments of polyethylene terephthalate (PET) 200 times/m were used. First, in each of the TD and the MD, the PTFE yarns and the sacrifice yarns were plain-woven with 24 PTFE yarns/inch so that two sacrifice yarns were arranged between adjacent PTFE yarns, to obtain a woven fabric. The resulting woven fabric was pressure-bonded by a roll to obtain a woven fabric having a thickness of 70 µm.

Next, a resin A of a dry resin that was a copolymer of CF₂=CF₂ and CF₂=CFOCF₂CF(CF₃)OCF₂CF₂COOCH₃ and had an ion exchange capacity of 0.85 mg equivalent/g, and a resin B of a dry resin that was a copolymer of CF₂=CF₂ and CF₂=CFOCF₂CF(CF₂)OCF₂CF₂SO₂F and had an ion exchange capacity of 1.03 mg equivalent/g were provided.

Using these resins A and B, a two-layer film X in which the thickness of a resin A layer was 15 µm and the thickness of a resin B layer was 104 µm was obtained by a coextrusion T die method.

Subsequently, release paper (embossed in a conical shape having a height of 50 µm), a reinforcing material, and the film X were laminated in this order on a hot plate having a heat source and a vacuum source inside and having micropores on its surface, heated and depressurized under the conditions of a hot plate surface temperature of 223°C and a degree of reduced pressure of 0.067 MPa for 2 minutes, and then the release paper was removed to obtain a composite membrane.

The resulting composite membrane was immersed in an aqueous solution at 80°C comprising 30% by mass of dimethyl sulfoxide (DMSO) and 15% by mass of potassium hydroxide (KOH) for 20 minutes for saponification. Then, the composite membrane was immersed in an aqueous solution at 50°C comprising 0.5 N sodium hydroxide (NaOH) for 1 hour to replace the counterion of the ion exchange group by Na, and then washed with water. Further, the membrane was dried at 60°C.

Further, 20% by mass of zirconium oxide having an average particle size (primary particle size) of 1 µm was added to a 5% by mass ethanol solution of the acid-type resin of the resin B and dispersed to prepare a suspension, and the suspension was sprayed onto both the surfaces of the above composite membrane by a suspension spray method to form coatings of zirconium oxide on the surfaces of the composite membrane to obtain an ion exchange membrane. The coating density of zirconium oxide measured by fluorescent X-ray measurement was 0.5 mg/cm². The average particle size was measured by a particle size analyzer (e.g., manufactured by SHIMADZU CORPORATION, "SALD(R) 2200").

The above electrolytic cell was used to perform electrolysis of common salt. The brine concentration (sodium chloride concentration) in the anode chamber was adjusted to 205 g/L. The sodium hydroxide concentration in the cathode chamber was adjusted to 32% by mass. The temperature each in the anode chamber and the cathode chamber was adjusted such that the temperature in each electrolytic cell reached 90°C. Common salt electrolysis was performed at a current density of 6 kA/m² to measure the voltage and current density. The current efficiency here is the proportion of the amount of the produced caustic soda to the passed current, and when impurity ions and hydroxide ions rather than sodium ions move through the ion exchange membrane due to the passed current, the current efficiency decreases. The current efficiency was obtained by dividing the number of moles of caustic soda produced for a certain time period by the number of moles of the electrons of the current passing during that time period. The number of moles of caustic soda was obtained by recovering caustic soda produced by the electrolysis in a plastic container and measuring its mass.

### (2) Handling property (response evaluation)

(A) The ion exchange membrane (membrane) mentioned above was cut into a 170 mm square, and the electrode obtained each of Examples and Comparative Examples mentioned below was cut into a size of 95 × 110 mm. The ion exchange membrane and the electrode were laminated and placed still on a Teflon plate. The interval between the anode cell and the cathode cell used in the electrolytic evaluation was set at about 3 cm. The laminate placed still was lifted, and an operation of inserting and holding the laminate therebetween was conducted. This operation was conducted while the electrode was checked for dislocation and dropping.
(B) The laminate was placed still on a Teflon plate in the same manner as in the above (A). The adjacent two corners of the membrane portion of the laminate were held by hands to lift the laminate so as to be vertical. The two corners held by hands were moved from this state to be close to each other such that the membrane was protruded or recessed. This operation was repeated again to check the conformability of the electrode to the membrane. The results were evaluated on a four level scale of 1 to 4 on the basis of the following indices:
   1: good handling property
   2: capable of being handled
   3: difficult to handle
   4: substantially incapable of being handled

Here, with respect to the samples of Examples 3-4 and 3-6, samples having the same size as that of the large electrolytic cell were also subjected to handling property evaluation, as mentioned below. The evaluation results of Example 3-4 and 3-6 were used as indices to evaluate the difference between the evaluation of the above (A) and (B) and that of the large-sized ones. That is, in the case where the evaluation result of a small laminate was "1" or "2", it was judged that the handling property becomes good even if the laminate was provided in a larger size.

### (3) Proportion of fixed region

The area of the surface opposed to the electrode for electrolysis in the ion exchange membrane (the total of the portion corresponding to the conducting surface and the portion corresponding to non-conducting surface) was calculated as an area S1. Next, the area of the electrode for electrolysis was calculated as an area of the conducting surface S2. The areas S1 and S2 were identified with the area of the laminate of the ion exchange membrane and electrode for electrolysis when viewed from the side of the electrode for electrolysis (see Figure 57). With respect to the shape of the electrode for electrolysis, even an electrode having openings had an opening ratio of less than 90%. Thus, the electrode for electrolysis was considered a flat plate (the opening portion was to be included in the area).

The area of the fixed region S3 was also identified as the area when the laminate was viewed from the top as in Figure 57 (the same applies to the area of the portion only corresponding to the conducting surface S3'). In the case where PTFE tape mentioned below was fixed as a fixing member, the overlapping portion of the tape was not to be included in the area. Alternatively, in the case where PTFE yarns and an adhesive mentioned below were fixed as fixing members, the area present on the back sides of the electrode and the membrane was included into the area.

As described above, 100 × (S3/S1) was calculated as the proportion of the area of fixed region α(%) relative to the area of the surface opposed to the electrode for electrolysis in the ion exchange membrane. Additionally, 100 × S3'/S2 was calculated as the proportion of the area of the portion only corresponding to the conducting surface of the fixed region β relative to the area of the conducting surface.

### [Example 3-1]

As a substrate for electrode for cathode electrolysis, an electrolytic nickel foil having a gauge thickness of 22 µm was provided. One surface of this nickel foil was subjected to a roughening treatment by means of electrolytic nickel plating. The arithmetic average roughness Ra of the roughened surface was 0.96 µm. The measurement of the surface roughness was performed under the same conditions as for the surface roughness measurement of the nickel plate subjected to the blast treatment.

A porous foil was formed by perforating this nickel foil with circular holes by punching. The opening ratio was 44%.

A coating liquid for use in forming an electrode catalyst was prepared by the following procedure. A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). Then, after drying at 50°C for 10 minutes, preliminary baking at 150°C for 3 minutes, and baking at 350°C for 10 minutes were performed. A series of these coating, drying, preliminary baking, and baking operations was repeated until a predetermined amount of coating was achieved. The thickness of the electrode produced in Example 3-1 was 24 µm. The thickness of the catalytic layer containing ruthenium oxide and cerium oxide, which was determined by subtracting the thickness of the substrate for electrode for electrolysis from the thickness of the electrode, was 8 µm. The coating was formed also on the surface not roughened.

The electrode produced by the above method was cut into a size of 95 mm in length and 110 mm in width for electrolytic evaluation. The roughened surface of the electrode was oppositely disposed on a substantial center position of the carboxylic acid layer side of the ion exchange membrane (size: 160 mm × 160 mm) equilibrated with a 0.1 N NaOH aqueous solution. PTFE tape (manufactured by NITTO DENKO CORPORATION) was used to fix the four sides such that the ion exchange membrane and the electrode were sandwiched as shown in Figure 57 (note that Figure 57 illustrates a schematic view for illustrative purposes only, and the dimensions are not necessarily accurate. The same applies to the following figures). In Example 3-1, the PTFE tape was the fixing member, the proportion α was 60%, and the proportion β was 1.0%.

Even when the four corners of the membrane portion of the membrane-integrated electrode, which was formed by integrating the membrane with the electrode, were pinched and hung such that the membrane-integrated electrode was in parallel with the ground by allowing the electrode to face the ground side, the electrode did not come off or was not displaced. Also when both ends of one side were pinched and hung such that the membrane-integrated electrode was vertical to the ground, the electrode did not come off or was not displaced.

The above membrane-integrated electrode was sandwiched between the anode cell and the cathode cell such that the surface onto which the electrode was attached was allowed to face the cathode chamber side. In the sectional structure, the collector, the mattress, the nickel mesh feed conductor, the electrode, the membrane, and the anode are arranged in this order from the cathode chamber side to form a zero-gap structure.

The resulting electrode was subjected to evaluation. The results are shown in Table 5.

The electrode exhibited a low voltage and high current efficiency. The handling property was also relatively good: "2".

### [Example 3-2]

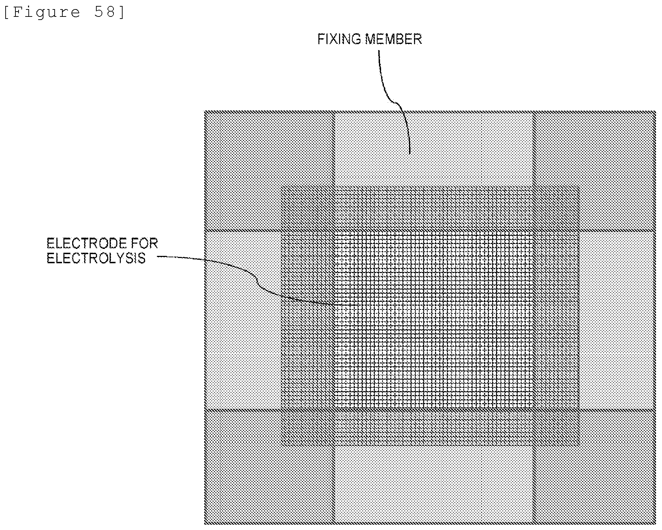

Evaluation was performed in the same manner as in Example 3-1 except for increasing the area at which the PTFE tape overlapped the electrolytic surface as shown in Figure 58. That is, in Example 3-2, the area of the PTFE tape was allowed to increase in the in-plane direction of the electrode for electrolysis, and thus, the area of the electrolytic surface in the electrode for electrolysis decreased than in Example 3-1. In Example 3-2, the proportion α was 69%, and the proportion β was 23%. The evaluation results are shown in Table 5.

The electrode exhibited a low voltage and high current efficiency. The handling property was also good: "1".

### [Example 3-3]

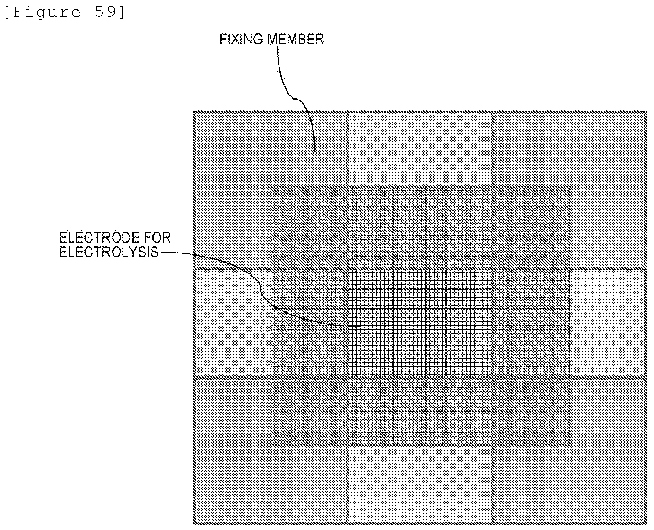

Evaluation was performed in the same manner as in Example 3-1 except for increasing the area at which the PTFE tape overlapped the electrolytic surface as shown in Figure 59. That is, in Example 3-3, the area of the PTFE tape was allowed to increase in the in-plane direction of the electrode for electrolysis, and thus, the area of the electrolytic surface in the electrode for electrolysis decreased than in Example 3-1. In Example 3-3, the proportion α was 87%, and the proportion β was 67%. The evaluation results are shown in Table 5.

The electrode exhibited a low voltage and high current efficiency. The handling property was also good: "1".

### [Example 3-4]

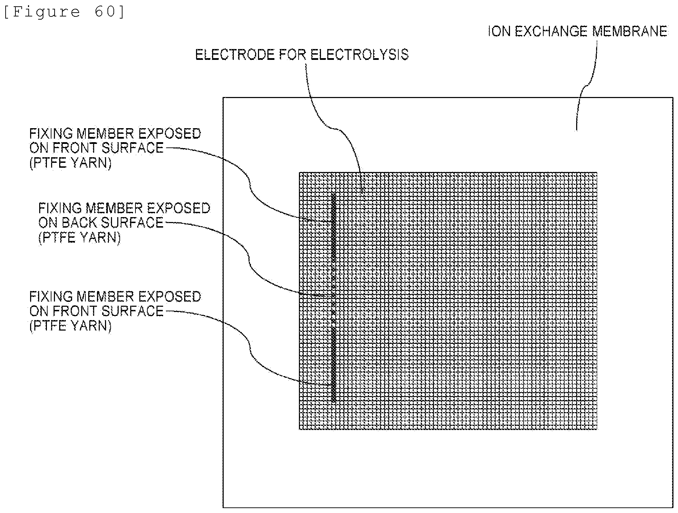

An electrode identical to that of Example 3-1 was provided and cut into a size of 95 mm in length and 110 mm in width for electrolytic evaluation. The roughened surface of the electrode was oppositely disposed on a substantial center position of the carboxylic acid layer side of the ion exchange membrane (size: 160 mm × 160 mm) equilibrated with a 0.1 N NaOH aqueous solution. PTFE yarn was used to sew the electrode at the left side thereof in a vertical direction onto the ion exchange membrane, as shown in Figure 60. The PTFE yarn was allowed to pass through a portion at a vertical distance of 10 mm and a horizontal distance of 10 mm from a corner of the electrode, from the back side of the sheet of Figure 60 to the front side thereof, allowed to pass through a portion at a vertical distance of 35 mm and a horizontal distance of 10 mm, from the front side of the sheet to the back side, allowed to pass through a portion at a vertical distance of 60 mm and a horizontal distance of 10 mm, again from the back side of the sheet to the front side thereof, and allowed to pass through a portion at a vertical distance of 85 mm and a horizontal distance of 10 mm, from the front side of the sheet to the back side thereof. A solution obtained by dispersing an acid-type resin S of a resin that was a copolymer of CF₂=CF₂ and CF₂=CFOCF₂CF(CF₂)OCF₂CF₂SO₂F and had an ion exchange capacity of 1.03 mg equivalent/g at a content of 5% by mass in ethanol was applied onto the portions at which the yarn passed through the ion exchange membrane.

As described above, in Example 3-4, the proportion α was 0.35%, and the proportion β was 0.86%.

Even when the four corners of the membrane portion of the membrane-integrated electrode, which was formed by integrating the membrane with the electrode, were pinched and hung such that the membrane-integrated electrode was in parallel with the ground by allowing the electrode to face the ground side, the electrode did not fall off. Even when both the ends of one side were pinched and hung such that the membrane-integrated electrode was vertical to the ground, the electrode did not fall off.

The resulting electrode was subjected to evaluation. The results are shown in Table 5.

The electrode exhibited a low voltage and high current efficiency. The handling property was also relatively good: "2".

Additionally, an ion exchange membrane and an electrode each formed in a larger size were provided in Example 3-4. An ion exchange membrane having a size of 1.5 m in length and 2.5 m in width and four cathodes having a size of 0.3 m in length and 2.4 m in width were provided. The cathodes were arranged without any gap on the carboxylic acid layer side of the ion exchange membrane, and the cathodes were bonded to the ion exchange membrane by PTFE yarn to produce a laminate. In this Example, the proportion α was 0.013%, and the proportion β was 0.017%.

When an operation of fitting a large electrolyzer with the membrane-integrated electrode, which was formed by integrating the membrane with the electrode, was performed, it was possible to achieve smooth fitting.

### [Example 3-5]

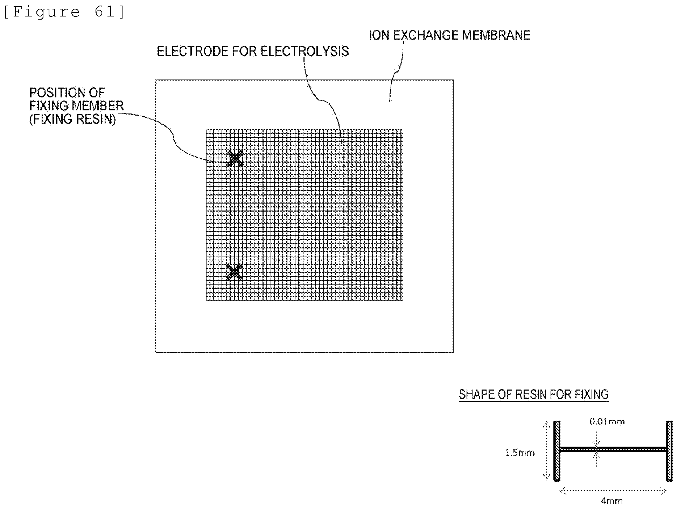

An electrode identical to that of Example 3-1 was provided and cut into a size of 95 mm in length and 110 mm in width for electrolytic evaluation. The roughened surface of the electrode was oppositely disposed on a substantial center position of the carboxylic acid layer side of the ion exchange membrane (size: 160 mm × 160 mm) equilibrated with a 0.1 N NaOH aqueous solution. A fixing resin made of polypropylene shown in Figure 61 was used to fix the ion exchange membrane and the electrode. That is, the resin was placed at two portions in total: a portion at a vertical distance of 20 mm and a horizontal distance of 20 mm from a corner of the electrode, and additionally, a portion at a vertical distance of 20 mm and a horizontal distance of 20 mm from the corner located therebelow. Onto the portions at which the fixing resin passed through the ion exchange membrane, a solution similar to that of Example 3-4 was applied.

As described above, in Example 3-5, the fixing resin and the resin S served as fixing members, the proportion α was 0.47%, and the proportion β was 1.1%.

Even when the four corners of the membrane portion of the membrane-integrated electrode, which was formed by integrating the membrane with the electrode, were pinched and hung such that the membrane-integrated electrode was in parallel with the ground by allowing the electrode to face the ground side, the electrode did not fall off. Even when both ends of one side were pinched and hung such that the membrane-integrated electrode was vertical to the ground, the electrode did not fall off.

The resulting electrode was subjected to evaluation. The results are shown in Table 5.

The electrode exhibited a low voltage and high current efficiency. The handling property was also relatively good: "2".

### [Example 3-6]

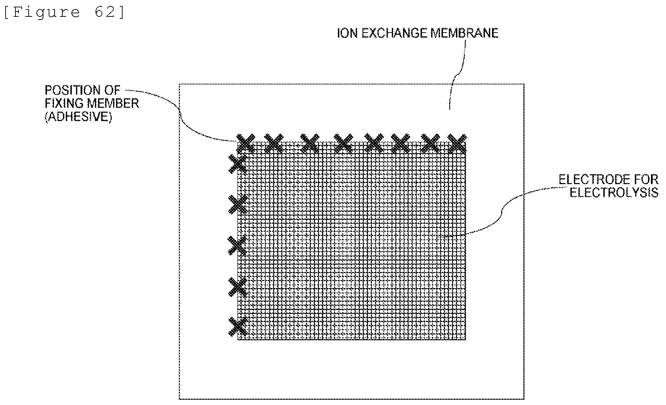

An electrode identical to that of Example 3-1 was provided and cut into a size of 95 mm in length and 110 mm in width for electrolytic evaluation. The roughened surface of the electrode was oppositely disposed on a substantial center position of the carboxylic acid layer side of the ion exchange membrane (size: 160 mm × 160 mm) equilibrated with a 0.1 N NaOH aqueous solution. As shown in Figure 62, a cyanoacrylate adhesive (trade name: Aron Alpha, TOAGOSEI CO., LTD.) was used to fix the ion exchange membrane and the electrode. That is, the membrane and the electrode were fixed with the adhesive at five points on a vertical side of the electrode (the points were each equally spaced) and eight points on a horizontal side of the electrode (the points were each equally spaced).

As described above, in Example 3-6, the adhesive served as fixing members, the proportion α of 0.78%, and the proportion β was 1.9%.

Even when the four corners of the membrane portion of the membrane-integrated electrode, which was formed by integrating the membrane with the electrode, were pinched and hung such that the membrane-integrated electrode was in parallel with the ground by allowing the electrode to face the ground side, the electrode did not fall off. Even when both the ends of one side were pinched and hung such that the membrane-integrated electrode was vertical to the ground, the electrode did not fall off.

The resulting electrode was subjected to evaluation. The results are shown in Table 5.

The electrode exhibited a low voltage and high current efficiency. The handling property was also relatively good: "1".

Additionally, an ion exchange membrane and an electrode each formed in a larger size were provided in Example 3-6. An ion exchange membrane having a size of 1.5 m in length and 2.5 m in width and four cathodes having a size of 0.3 m in length and 2.4 m in width were provided. The edge of one horizontal side of each four cathodes was connected to each other with the adhesive above to form one large cathode (1.2 m in length and 2.4 m in width). This large cathode was bonded to the center portion on the carboxylic acid layer side of the ion exchange membrane with Aron Alpha to produce a laminate. That is, the membrane and the electrode were fixed with the adhesive at five points on a vertical side of the electrode (the points were each equally spaced) and eight points on a horizontal side of the electrode (the points were each equally spaced), in the same manner as in Figure 62. In this Example, the proportion α was 0.019%, and the proportion β was 0.024%.

When an operation of fitting a large electrolyzer with the membrane-integrated electrode, which was formed by integrating the membrane with the electrode, was performed, it was possible to achieve smooth fitting.

### [Example 3-7]

An electrode identical to that of Example 3-1 was provided and cut into a size of 95 mm in length and 110 mm in width for electrolytic evaluation. The roughened surface of the electrode was oppositely disposed on a substantial center position of the carboxylic acid layer side of the ion exchange membrane (size: 160 mm × 160 mm) equilibrated with a 0.1 N NaOH aqueous solution. A solution similar to that of Example 3-4 was applied to fix the ion exchange membrane and the electrode. That is, the resin was placed at two portions in total: a portion at a vertical distance of 20 mm and a horizontal distance of 20 mm from a corner of the electrode, and additionally, a portion at a vertical distance of 20 mm and a horizontal distance of 20 mm from the corner located therebelow (see Figure 61).

As described above, in Example 3-7, the resin S served as fixing members, the proportion α was 2.0%, and the proportion β was 4.8%.

Even when the four corners of the membrane portion of the membrane-integrated electrode, which was formed by integrating the membrane with the electrode were pinched and hung such that the membrane-integrated electrode was in parallel with the ground by allowing the electrode to face the ground side, the electrode did not fall off. Even when both the ends of one side were pinched and hung such that the membrane-integrated electrode was vertical to the ground, the electrode did not fall off.

The resulting electrode was subjected to evaluation. The results are shown in Table 5.

The electrode exhibited a low voltage and high current efficiency. The handling property was also relatively good: "2".

### [Comparative Example 3-1]

Evaluation was performed in the same manner as in Example 3-1 except for increasing the area at which the PTFE tape overlapped the electrolytic surface. That is, in Comparative Example 3-1, the area of the PTFE tape was allowed to increase in the in-plane direction of the electrode for electrolysis, and thus, the area of the electrolytic surface in the electrode for electrolysis decreased than in Example 3-1. In Comparative Example 3-1, the proportion α is 93%, and the proportion β is 83%. The evaluation results are shown in Table 5.

The voltage was high, and the current efficiency was also low. The handling property was good: "1".

### [Comparative Example 3-2]

Evaluation was performed in the same manner as in Example 3-1 except for increasing the area at which the PTFE tape overlapped the electrolytic surface. The evaluation results are shown in Table 5. That is, in Comparative Example 3-2, the area of the PTFE tape was allowed to increase in the in-plane direction of the electrode for electrolysis.

In Comparative Example 3-2, the proportion α and the proportion β were 100%, and the entire electrolytic surface was a fixed region covered with PTFE. Accordingly, it was not possible to supply an electrolyte solution, and thus, it was not possible to perform electrolysis. The handling property was good: "1".

### [Comparative Example 3-3]

Evaluation was performed in the same manner as in Example 3-1 except no PTFE tape was used, that is, the proportion α and the proportion β were 0%. The evaluation results are shown in Table 5.

The electrode exhibited a low voltage and high current efficiency. Meanwhile, since there were no fixed region of the membrane and the electrode, it was not possible to handle the membrane and the electrode as a laminate (integrated piece), and thus, the handling property was "4".

The evaluation results of Examples 3-1 to 7 and Comparative Examples 3-1 to 3 were also shown in Table 5 below.

**[Table 5]**

| | Area of membrane | Area of substrate for electrode for electrolysis | Area of fixed region | Area of fixed region corresponding only to conducting surface | Proportion α | Proportion β | Handling property (sensory evaluation) | Electrolytic evaluation | |
|---|---|---|---|---|---|---|---|---|---|
| | S1 | S2 | S3 | S3' | 100*S3/S1(%) | 100*S3'/S2 (%) | | Voltage (V) | Current efficiency (%) |
| Example 3-1 | 256 | 104.5 | 153 | 1.0 | 60 | 1.0 | 2 | 2.98 | 97.8 |
| Example 3-2 | 256 | 104.5 | 176 | 24 | 69 | 23 | 1 | 3.11 | 97.7 |
| Example 3-3 | 256 | 104.5 | 222 | 70 | 87 | 67 | 1 | 3.85 | 96.1 |
| Example 3-4 | 256 | 104.5 | 0.90 | 0.90 | 0.35 | 0.86 | 2 | 2.99 | 92.2 |
| Example 3-5 | 256 | 104.5 | 1.2 | 1.2 | 0.47 | 1.1 | 2 | 3.00 | 92.5 |
| Example 3-6 | 256 | 104.5 | 2.0 | 2.0 | 0.78 | 1.9 | 2 | 2.97 | 97.5 |
| Example 3-7 | 256 | 104.5 | 5.0 | 5.0 | 2.0 | 4.8 | 2 | 2.99 | 97.0 |
| Comparative Example 3-1 | 256 | 104.5 | 239 | 87 | 93 | 83 | 1 | 5.50 | 86.8 |
| Comparative Example 3-2 | 256 | 104.5 | 256 | 104.5 | 100 | 100 | 1 | Impossible to electrolyze | |
| Comparative Example 3-3 | 256 | 104.5 | 0 | 0 | 0 | 0 | 4 | 2.97 | 97.5 |

### <Verification of fourth embodiment> (fourth embodiment not in accordance with the invention as claimed)

As will be described below, Experiment Examples according to the fourth embodiment (in the section of <Verification of fourth embodiment> hereinbelow, simply referred to as "Examples") and Experiment Examples not according to the fourth embodiment (in the section of <Verification of fourth embodiment> hereinbelow, simply referred to as "Comparative Examples") were provided, and evaluated by the following method. The details will be described with reference to Figures 79 to 90 as appropriate.

### [Evaluation method]

### (1) Opening ratio

An electrode was cut into a size of 130 mm × 100 mm. A digimatic thickness gauge (manufactured by Mitutoyo Corporation, minimum scale 0.001 mm) was used to calculate an average value of 10 points obtained by measuring evenly in the plane. The value was used as the thickness of the electrode (gauge thickness) to calculate the volume. Thereafter, an electronic balance was used to measure the mass. From the specific gravity of each metal (specific gravity of nickel = 8.908 g/cm³, specific gravity of titanium = 4.506 g/cm³), the opening ratio or void ratio was calculated. Opening ratio (Void ratio) (%) = (1 - (electrode mass)/(electrode volume × metal specific gravity)) × 100

### (2) Mass per unit area (mg/cm²)

An electrode was cut into a size of 130 mm × 100 mm, and the mass thereof was measured by an electronic balance. The value was divided by the area (130 mm × 100 mm) to calculate the mass per unit area.

### (3) Force applied per unit mass·unit area (1) (adhesive force) (N/mg·cm²))

### [Method (i)]

A tensile and compression testing machine was used for measurement (Imada-SS Corporation, main testing machine: SDT-52NA type tensile and compression testing machine, load cell: SL-6001 type load cell).

A 200 mm square nickel plate having a thickness of 1.2 mm was subjected to blast processing with alumina of grain-size number 320. The arithmetic average surface roughness (Ra) of the nickel plate after the blast treatment was 0.7 µm. For surface roughness measurement herein, a probe type surface roughness measurement instrument SJ-310 (Mitutoyo Corporation) was used. A measurement sample was placed on the surface plate parallel to the ground surface to measure the arithmetic average roughness Ra under measurement conditions as described below. The measurement was repeated 6 times, and the average value was listed.

<Probe shape> conical taper angle = 60°, tip radius = 2 µm, static measuring force = 0.75 mN
<Roughness standard> JIS2001
<Evaluation curve> R
<Filter> GAUSS
<Cutoff value λc> 0.8 mm
<Cutoff value λs> 2.5 µm
<Number of sections> 5
<Pre-running, post-running> available

This nickel plate was vertically fixed on the lower chuck of the tensile and compression testing machine.

As the membrane, an ion exchange membrane A below was used.

As reinforcement core materials, 90 denier monofilaments made of polytetrafluoroethylene (PTFE) were used (hereinafter referred to as PTFE yarns). As sacrifice yarns, yarns obtained by twisting six 35 denier filaments of polyethylene terephthalate (PET) 200 times/m were used (hereinafter referred to as PET yarns). First, in each of the TD and the MD, the PTFE yarns and the sacrifice yarns were plain-woven with 24 PTFE yarns/inch so that two sacrifice yarns were arranged between adjacent PTFE yarns, to obtain a woven fabric. The resulting woven fabric was pressure-bonded by a roll to obtain a woven fabric having a thickness of 70 µm.

Next, a resin A of a dry resin that was a copolymer of CF₂=CF₂ and CF₂=CFOCF₂CF(CF₃)OCF₂CF₂COOCH₃ and had an ion exchange capacity of 0.85 mg equivalent/g, and a resin B of a dry resin that was a copolymer of CF₂=CF₂ and CF₂=CFOCF₂CF(CF₃)OCF₂CF₂SO₂F and had an ion exchange capacity of 1.03 mg equivalent/g were provided.

Using these resins A and B, a two-layer film X in which the thickness of a resin A layer was 15 µm and the thickness of a resin B layer was 104 µm was obtained by a coextrusion T die method.

Subsequently, release paper (embossed in a conical shape having a height of 50 µm), a reinforcing material, and the film X were laminated in this order on a hot plate having a heat source and a vacuum source inside and having micropores on its surface, heated and depressurized under the conditions of a hot plate surface temperature of 223°C and a degree of reduced pressure of 0.067 MPa for 2 minutes, and then the release paper was removed to obtain a composite membrane.

The resulting composite membrane was immersed in an aqueous solution at 80°C comprising 30% by mass of dimethyl sulfoxide (DMSO) and 15% by mass of potassium hydroxide (KOH) for 20 minutes for saponification. Then, the composite membrane was immersed in an aqueous solution at 50°C comprising 0.5 N sodium hydroxide (NaOH) for an hour to replace the counterion of the ion exchange group by Na, and then washed with water. Then, the membrane was dried at 60°C.

Further, 20% by mass of zirconium oxide having a primary particle size of 1 µm was added to a 5% by mass ethanol solution of the acid-type resin of the resin B and dispersed to prepare a suspension, and the suspension was sprayed onto both the surfaces of the above composite membrane by a suspension spray method to form coatings of zirconium oxide on the surfaces of the composite membrane to obtain an ion exchange membrane A. The coating density of zirconium oxide measured by fluorescent X-ray measurement was 0.5 mg/cm². The average particle size was measured by a particle size analyzer (manufactured by SHIMADZU CORPORATION, "SALD(R) 2200").

The ion exchange membrane (membrane) obtained above was immersed in pure water for 12 hours or more and then used for the test. The membrane was brought into contact with the above nickel plate sufficiently moistened with pure water and allowed to adhere to the plate by the tension of water. At this time, the nickel plate and the ion exchange membrane were placed so as to align the upper ends thereof.

A sample of electrode for electrolysis (electrode) to be used for measurement was cut into a 130 mm square. The ion exchange membrane A was cut into a 170 mm square. One side of the electrode was sandwiched by two stainless plates (thickness: 1 mm, length: 9 mm, width: 170 mm). After positioning so as to align the center of the stainless plates with the center of the electrode, four clips were used for uniformly fixing the electrode and plates. The center of the stainless plates was clamped by the upper chuck of the tensile and compression testing machine to hang the electrode. The load applied on the testing machine at this time was set to 0 N. The integrated piece of the stainless plates, electrode, and clips was once removed from the tensile and compression testing machine, and immersed in a vat containing pure water in order to moisten the electrode sufficiently with pure water. Thereafter, the center of the stainless plates was clamped again by the upper chuck of the tensile and compression testing machine to hang the electrode.

The upper chuck of the tensile and compression testing machine was lowered, and the sample of electrode for electrolysis was allowed to adhere to the surface of the ion exchange membrane by the surface tension of pure water. The size of the adhesive surface at this time was 130 mm in width and 110 mm in length. Pure water in a wash bottle was sprayed to the electrode and the ion exchange membrane entirely so as to sufficiently moisten the membrane and the electrode again. Thereafter, a roller formed by winding a closed-cell type EPDM sponge rubber having a thickness of 5 mm around a vinyl chloride pipe (outer diameter: 38 mm) was rolled downward from above with lightly pressed over the electrode to remove excess pure water. The roller was rolled only once.

The electrode was raised at a rate of 10 mm/minute to begin load measurement, and the load when the size of the overlapping portion of the electrode and the membrane reached 130 mm in width and 100 mm in length was recorded. This measurement was repeated three times, and the average value was calculated.

This average value was divided by the area of the overlapping portion of the electrode and the ion exchange membrane and the mass of the electrode of the portion overlapping the ion exchange membrane to calculate the force applied per unit mass·unit area (1). The mass of the electrode of the portion overlapping the ion exchange membrane was determined through proportional calculation from the value obtained in (2) Mass per unit area (mg/cm²) described above.

As for the environment of the measuring chamber, the temperature was 23±2°C and the relative humidity was 30±5%.

The electrode used in Examples and Comparative Examples was able to stand by itself and adhere without slipping down or coming off when allowed to adhere to the ion exchange membrane that adhered to a vertically-fixed nickel plate via the surface tension.

A schematic view of a method for evaluating the force applied (1) is shown in Figure 79.

The measurement lower limit of the tensile testing machine was 0.01 (N).

### (4) Force applied per unit mass·unit area (2) (adhesive force) (N/mg·cm²))

### [Method (ii)]

A tensile and compression testing machine was used for measurement (Imada-SS Corporation, main testing machine: SDT-52NA type tensile and compression testing machine, load cell: SL-6001 type load cell).

A nickel plate identical to that in Method (i) was vertically fixed on the lower chuck of the tensile and compression testing machine.

A sample of electrode for electrolysis (electrode) to be used for measurement was cut into a 130 mm square. The ion exchange membrane A was cut into a 170 mm square. One side of the electrode was sandwiched by two stainless plates (thickness: 1 mm, length: 9 mm, width: 170 mm). After positioning so as to align the center of the stainless plates with the center of the electrode, four clips were used for uniformly fixing the electrode and plates. The center of the stainless plates was clamped by the upper chuck of the tensile and compression testing machine to hang the electrode. The load applied on the testing machine at this time was set to 0 N. The integrated piece of the stainless plates, electrode, and clips was once removed from the tensile and compression testing machine, and immersed in a vat containing pure water in order to moisten the electrode sufficiently with pure water. Thereafter, the center of the stainless plates was clamped again by the upper chuck of the tensile and compression testing machine to hang the electrode.

The upper chuck of the tensile and compression testing machine was lowered, and the sample of electrode for electrolysis was allowed to adhere to the surface of the nickel plate via the surface tension of a solution. The size of the adhesive surface at this time was 130 mm in width and 110 mm in length. Pure water in a wash bottle was sprayed to the electrode and the nickel plate entirely so as to sufficiently moisten the nickel plate and the electrode again. Thereafter, a roller formed by winding a closed-cell type EPDM sponge rubber having a thickness of 5 mm around a vinyl chloride pipe (outer diameter: 38 mm) was rolled downward from above with lightly pressed over the electrode to remove excess solution. The roller was rolled only once.

The electrode was raised at a rate of 10 mm/minute to begin load measurement, and the load when the size of the overlapping portion of the electrode and the nickel plate in the longitudinal direction reached 100 mm was recorded. This measurement was repeated three times, and the average value was calculated.

This average value was divided by the area of the overlapping portion of the electrode and the nickel plate and the mass of the electrode of the portion overlapping the nickel plate to calculate the force applied per unit mass·unit area (2). The mass of the electrode of the portion overlapping the membrane was determined through proportional calculation from the value obtained in (2) Mass per unit area (mg/cm²) described above.

As for the environment of the measuring chamber, the temperature was 23±2°C and the relative humidity was 30±5%.

The electrode used in Examples and Comparative Examples was able to stand by itself and adhere without slipping down or coming off when allowed to adhere to a vertically-fixed nickel plate via the surface tension.

The measurement lower limit of the tensile testing machine was 0.01 (N).

### (5) Method for evaluating winding around column of 280 mm in diameter (1) (%)

### (Membrane and column)

The evaluation method (1) was conducted by the following procedure.

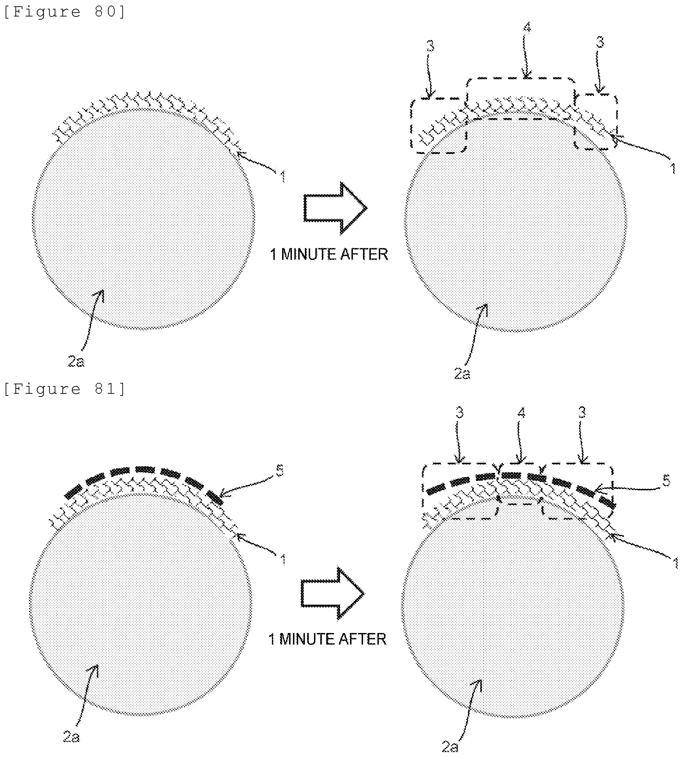

The ion exchange membrane A (membrane) produced in [Method (i)] was cut into a 170 mm square. The ion exchange membrane was immersed in pure water for 12 hours or more and then used for the test. In Examples 33 and 34, the electrode had been integrated with the ion exchange membrane by thermal pressing, and thus, an integrated piece of an ion exchange membrane and an electrode was provided (electrode of a 130 mm square). After the ion exchange membrane was sufficiently immersed in pure water, the membrane was placed on the curved surface of a plastic (polyethylene) pipe having an outer diameter of 280 mm. Thereafter, excess solution was removed with a roller formed by winding a closed-cell type EPDM sponge rubber having a thickness of 5 mm around a vinyl chloride pipe (outer diameter: 38 mm). The roller was rolled over the ion exchange membrane from the left to the right of the schematic view shown in Figure 80. The roller was rolled only once. One minute after, the proportion of a portion at which the ion exchange membrane was brought into a close contact with the plastic pipe electrode having an outer diameter of 280 mm was measured.

### (6) Method for evaluating winding around column of 280 mm in diameter (2) (%)

### (Membrane and electrode)

The evaluation method (2) was conducted by the following procedure.

The ion exchange membrane A (membrane) produced in [Method (i)] was cut into a 170 mm square, and the electrode was cut into a 130 mm square. The ion exchange membrane was immersed in pure water for 12 hours or more and then used for the test. The ion exchange membrane and the electrode were sufficiently immersed in pure water and then laminated. This laminate was placed on the curved surface of a plastic (polyethylene) pipe having an outer diameter of 280 mm such that the electrode was located outside. Thereafter, a roller formed by winding a closed-cell type EPDM sponge rubber having a thickness of 5 mm around a vinyl chloride pipe (outer diameter: 38 mm) was rolled from the left to the right of the schematic view shown in Figure 81 with lightly pressed over the electrode to remove excess solution. The roller was rolled only once. One minute after, the proportion of a portion at which the ion exchange membrane was brought into a close contact with the electrode was measured.

### (7) Method for evaluating winding around column of 145 mm in diameter (3) (%)

### (Membrane and electrode)

The evaluation method (3) was conducted by the following procedure.

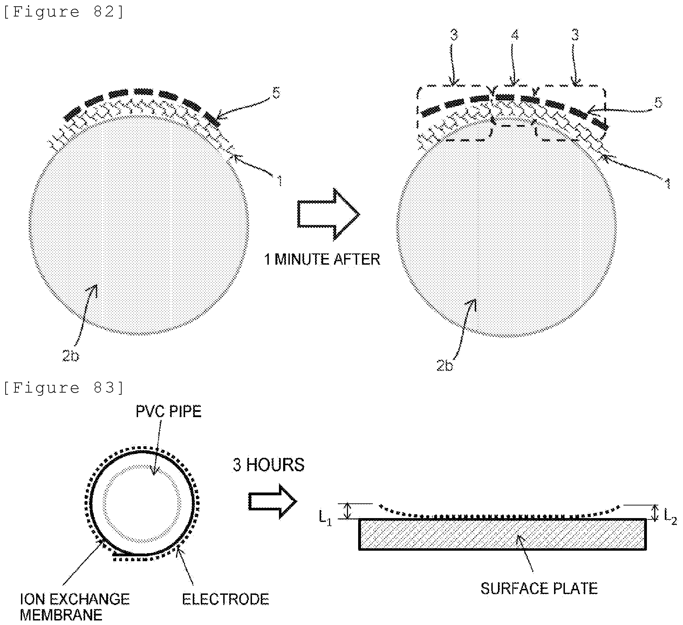

The ion exchange membrane A (membrane) produced in [Method (i)] was cut into a 170 mm square, and the electrode was cut into a 130 mm square. The ion exchange membrane was immersed in pure water for 12 hours or more and then used for the test. The ion exchange membrane and the electrode were sufficiently immersed in pure water and then laminated. This laminate was placed on the curved surface of a plastic (polyethylene) pipe having an outer diameter of 145 mm such that the electrode was located outside. Thereafter, a roller formed by winding a closed-cell type EPDM sponge rubber having a thickness of 5 mm around a vinyl chloride pipe (outer diameter: 38 mm) was rolled from the left to the right of the schematic view shown in Figure 82 with lightly pressed over the electrode to remove excess solution. The roller was rolled only once. One minute after, the proportion of a portion at which the ion exchange membrane was brought into a close contact with the electrode was measured.

### (8) Handling property (response evaluation)

(A) The ion exchange membrane A (membrane) produced in [Method (i)] was cut into a 170 mm square, and the electrode was cut into a size of 95 × 110 mm. The ion exchange membrane was immersed in pure water for 12 hours or more and then used for the test. In each Example, the ion exchange membrane and electrode were sufficiently immersed in three solutions: sodium bicarbonate aqueous solution, 0.1N NaOH aqueous solution, and pure water, then laminated, and placed still on a Teflon plate. The interval between the anode cell and the cathode cell used in the electrolytic evaluation was set at about 3 cm. The laminate placed still was lifted, and an operation of inserting and holding the laminate therebetween was conducted. This operation was conducted while the electrode was checked for dislocation and dropping.
(B) The ion exchange membrane A (membrane) produced in [Method (i)] was cut into a 170 mm square, and the electrode was cut into a size of 95 × 110 mm. The ion exchange membrane was immersed in pure water for 12 hours or more and then used for the test. In each Example, the ion exchange membrane and electrode were sufficiently immersed in three solutions: a sodium bicarbonate aqueous solution, a 0.1N NaOH aqueous solution, and pure water, then laminated, and placed still on a Teflon plate. The adjacent two corners of the membrane portion of the laminate were held by hands to lift the laminate so as to be vertical. The two corners held by hands were moved from this state to be close to each other such that the membrane was protruded or recessed. This move was repeated again to check the conformability of the electrode to the membrane. The results were evaluated on a four level scale of 1 to 4 on the basis of the following indices:
   1: good handling property
   2: capable of being handled
   3: difficult to handle
   4: substantially incapable of being handled

Here, the sample of Example 4-28, provided in a size equivalent to that of a large electrolytic cell including an electrode in a size of 1.3 m × 2.5 m and an ion exchange membrane in a size of 1.5 m × 2.8 m, was subjected to handling. The evaluation result of Example 28 ("3" as described below) was used as an index to evaluate the difference between the evaluation of the above (A) and (B) and that of the large-sized one. That is, in the case where the evaluation result of a small laminate was "1" or "2", it was judged that there was no problem in the handling property even if the laminate was provided in a larger size.

### (9) Electrolytic evaluation (voltage (V), current efficiency (%), common salt concentration in caustic soda (ppm, on the basis of 50%))

The electrolytic performance was evaluated by the following electrolytic experiment.

A titanium anode cell having an anode chamber in which an anode was provided (anode terminal cell) and a cathode cell having a nickel cathode chamber in which a cathode was provided (cathode terminal cell) were oppositely disposed. A pair of gaskets was arranged between the cells, and a laminate (a laminate of the ion exchange membrane A and an electrode for electrolysis) was sandwiched between the gaskets. Here, both the ion exchange membrane A and the electrode for electrolysis were sandwiched directly between the gaskets. Then, the anode cell, the gasket, the laminate, the gasket, and the cathode were brought into close contact together to obtain an electrolytic cell, and an electrolyzer including the cell was provided.

The anode was produced by applying a mixed solution of ruthenium chloride, iridium chloride, and titanium tetrachloride onto a titanium substrate subjected to blasting and acid etching treatment as the pretreatment, followed by drying and baking. The anode was fixed in the anode chamber by welding. As the cathode, one described in each of Examples and Comparative Examples was used. As the collector of the cathode chamber, a nickel expanded metal was used. The collector had a size of 95 mm in length × 110 mm in width. As a metal elastic body, a mattress formed by knitting nickel fine wire was used. The mattress as the metal elastic body was placed on the collector. Nickel mesh formed by plain-weaving nickel wire having a diameter of 150 µm in a sieve mesh size of 40 was placed thereover, and a string made of Teflon(R) was used to fix the four corners of the Ni mesh to the collector. This Ni mesh was used as a feed conductor. This electrolytic cell has a zero-gap structure by use of the repulsive force of the mattress as the metal elastic body. As the gaskets, ethylene propylene diene (EPDM) rubber gaskets were used. As the membrane, the ion exchange membrane A (160 mm square) produced in [Method (i)] was used.

The above electrolytic cell was used to perform electrolysis of common salt. The brine concentration (sodium chloride concentration) in the anode chamber was adjusted to 205 g/L. The sodium hydroxide concentration in the cathode chamber was adjusted to 32% by mass. The temperature each in the anode chamber and the cathode chamber was adjusted so as to allow the temperature in each electrolytic cell to reach 90°C. Common salt electrolysis was performed at a current density of 6 kA/m² to measure the voltage, current efficiency, and common salt concentration in caustic soda. The current efficiency here is the proportion of the amount of the produced caustic soda to the passed current, and when impurity ions and hydroxide ions rather than sodium ions move through the ion exchange membrane due to the passed current, the current efficiency decreases. The current efficiency was obtained by dividing the number of moles of caustic soda produced for a certain time by the number of moles of the electrons of the current passing during that time. The number of moles of caustic soda was obtained by recovering caustic soda produced by the electrolysis in a plastic container and measuring its mass. As the common salt concentration in caustic soda, a value obtained by converting the caustic soda concentration on the basis of 50% was shown.

The specification of the electrode and the feed conductor used in each of Examples and Comparative Examples is shown in Table 6.

### (11) Measurement of thickness of catalytic layer, substrate for electrode for electrolysis, and thickness of electrode

For the thickness of the substrate for electrode for electrolysis, a digimatic thickness gauge (manufactured by Mitutoyo Corporation, minimum scale 0.001 mm) was used to calculate an average value of 10 points obtained by measuring evenly in the plane. The value was used as the thickness of the substrate for electrode for electrolysis (gauge thickness). For the thickness of the electrode, a digimatic thickness gauge was used to calculate an average value of 10 points obtained by measuring evenly in the plane, in the same manner as for the substrate for electrode. The value was used as the thickness of the electrode (gauge thickness). The thickness of the catalytic layer was determined by subtracting the thickness of the substrate for electrode for electrolysis from the thickness of the electrode.

### (12) Elastic deformation test of electrode

The ion exchange membrane A (membrane) and the electrode produced in [Method (i)] were each cut into a 110 mm square. The ion exchange membrane was immersed in pure water for 12 hours or more and then used for the test. After the ion exchange membrane and the electrode were laminated to produce a laminate under conditions of a temperature: 23±2°C and a relative humidity: 30±5%, the laminate was wound around a PVC pipe having an outer diameter of ϕ32 mm and a length of 20 cm without any gap, as shown in Figure 83. The laminate was fixed using a polyethylene cable tie such that the laminate wound did not come off from the PVC pipe or loosen. The laminate was retained in this state for 6 hours. Thereafter, the cable tie was removed, and the laminate was unwound from the PVC pipe. Only the electrode was placed on a surface plate, and the heights L₁ and L₂ of a portion lifted from the surface plate were measured to determine an average value. This value was used as the index of the electrode deformation. That is, a smaller value means that the laminate is unlikely to deform.

When an expanded metal is used, there are two winding direction: the SW direction and the LW direction. In this test, the laminate was wound in the SW direction.

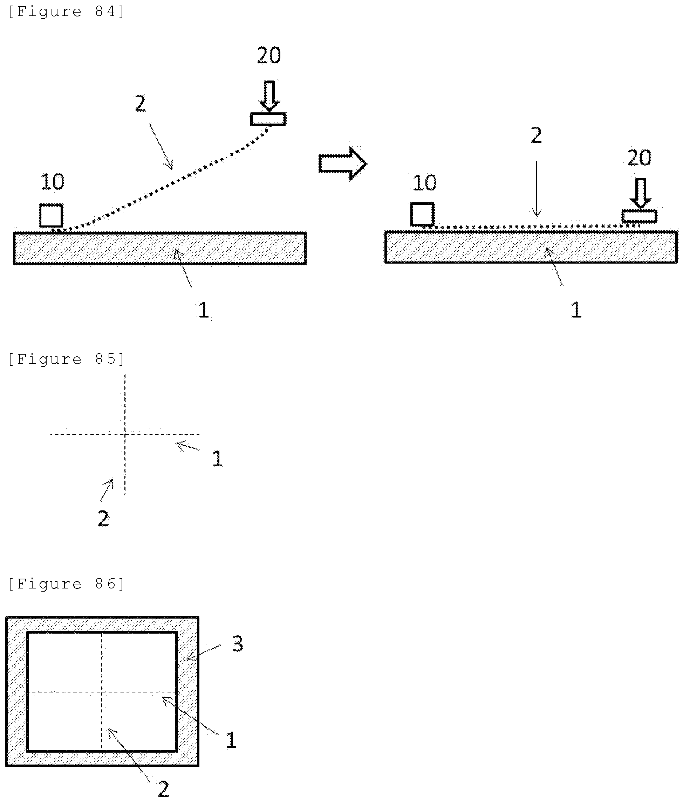

Deformed electrodes (electrodes that did not return to their original flat state) were evaluated for softness after plastic deformation in accordance with a method as shown in Figure 84. That is, a deformed electrode was placed on a membrane sufficiently immersed in pure water. One end of the electrode was fixed, and the other lifted end was pressed onto the membrane to release a force, and an evaluation was performed whether the deformed electrode conformed to the membrane.

### (13) Membrane damage evaluation

As the membrane, an ion exchange membrane B below was used.

As reinforcement core materials, those obtained by twisting 100 denier tape yarns of polytetrafluoroethylene (PTFE) 900 times/m into a thread form were used (hereinafter referred to as PTFE yarns). As warp sacrifice yarns, yarns obtained by twisting eight 35 denier filaments of polyethylene terephthalate (PET) 200 times/m were used (hereinafter referred to as PET yarns). As weft sacrifice yarns, yarns obtained by twisting eight 35 denier filaments of polyethylene terephthalate (PET) 200 times/m were used. First, the PTFE yarns and the sacrifice yarns were plain-woven with 24 PTFE yarns/inch so that two sacrifice yarns were arranged between adjacent PTFE yarns, to obtain a woven fabric having a thickness of 100 µm.

Next, a polymer (A1) of a dry resin that was a copolymer of CF₂=CF₂ and CF₂=CFOCF₂CF(CF₃)OCF₂CF₂COOCH₃ and had an ion exchange capacity of 0.92 mg equivalent/g and a polymer (B1) of a dry resin that was a copolymer of CF₂=CF₂ and CF₂=CFOCF₂CF(CF₃)OCF₂CF₂SO₂F and had an ion exchange capacity of 1.10 mg equivalent/g were provided. Using these polymers (A1) and (B1), a two-layer film X in which the thickness of a polymer (A1) layer was 25 µm and the thickness of a polymer (B1) layer was 89 µm was obtained by a coextrusion T die method. As the ion exchange capacity of each polymer, shown was the ion exchange capacity in the case of hydrolyzing the ion exchange group precursors of each polymer for conversion into ion exchange groups.

Separately, a polymer (B2) of a dry resin that was a copolymer of CF₂=CF₂ and CF₂=CFOCF₂CF(CF₃)OCF₂CF₂SO₂F and had an ion exchange capacity of 1.10 mg equivalent/g was provided. This polymer was single-layer extruded to obtain a film Y having a thickness of 20 µm.

Subsequently, release paper, the film Y, a reinforcing material, and the film X were laminated in this order on a hot plate having a heat source and a vacuum source inside and having micropores on its surface, heated and depressurized under the conditions of a hot plate temperature of 225°C and a degree of reduced pressure of 0.022 MPa for two minutes, and then the release paper was removed to obtain a composite membrane. The resulting composite membrane was immersed in an aqueous solution comprising dimethyl sulfoxide (DMSO) and potassium hydroxide (KOH) for an hour for saponification. Thereafter, the membrane was immersed in 0.5N NaOH for an hour to replace the ions attached to the ion exchange groups by Na, and then washed with water. Further, the membrane was dried at 60°C.

Additionally, a polymer (B3) of a dry resin that was a copolymer of CF₂=CF₂ and CF₂=CFOCF₂CF(CF₃)OCF₂CF₂SO₂F and had an ion exchange capacity of 1.05 mg equivalent/g were hydrolyzed and then was turned into an acid type with hydrochloric acid. Zirconium oxide particles having an average particle size of primary particles of 0.02 µm were added to a 50/50 (mass ratio) mixed solution of water and ethanol in which the polymer (B3') of this acid type was dissolved in a proportion of 5% by mass such that the mass ratio of the polymer (B3') to the zirconium oxide particles was 20/80. Thereafter, the polymer (B3') was dispersed in a suspension of the zirconium oxide particles with a ball mill to obtain a suspension.

This suspension was applied by a spray method onto both the surfaces of the ion exchange membrane and dried to obtain an ion exchange membrane B having a coating layer containing the polymer (B3') and the zirconium oxide particles. The coating density of zirconium oxide measured by fluorescent X-ray measurement was 0.35 mg/cm².

The anode used was the same as in (9) Electrolytic evaluation.

The cathode used was one described in each of Examples and Comparative Examples. The collector, mattress, and feed conductor of the cathode chamber used were the same as in (9) Electrolytic evaluation. That is, a zero-gap structure had been provided by use of Ni mesh as the feed conductor and the repulsive force of the mattress as the metal elastic body. The gaskets used were the same as in (9) Electrolytic evaluation. As the membrane, the ion exchange membrane B produced by the method mentioned above was used. That is, an electrolyzer equivalent to that in (9) was provided except that the laminate of the ion exchange membrane B and the electrode for electrolysis was sandwiched between a pair of gaskets.

The above electrolytic cell was used to perform electrolysis of common salt. The brine concentration (sodium chloride concentration) in the anode chamber was adjusted to 205 g/L. The sodium hydroxide concentration in the cathode chamber was adjusted to 32% by mass. The temperature each in the anode chamber and the cathode chamber was adjusted such that the temperature in each electrolytic cell reached 70°C. Common salt electrolysis was performed at a current density of 8 kA/m². The electrolysis was stopped 12 hours after the start of the electrolysis, and the ion exchange membrane B was removed and observed for its damage condition.

"○" means no damage. "×" means that damage was present on the substantially entire surface of the ion exchange membrane.

### (14) Ventilation resistance of electrode

The ventilation resistance of the electrode was measured using an air permeability tester KES-F8 (trade name, KATO TECH CO., LTD.). The unit for the ventilation resistance value is kPa·s/m. The measurement was repeated 5 times, and the average value was listed in Table 7. The measurement was conducted under the following two conditions. The temperature of the measuring chamber was 24°C and the relative humidity was 32%.
·Measurement condition 1 (ventilation resistance 1)
   Piston speed: 0.2 cm/s
   Ventilation volume: 0.4 cc/cm²/s
   Measurement range: SENSE L (low)
   Sample size: 50 mm × 50 mm
·Measurement condition 2 (ventilation resistance 2)
   Piston speed: 2 cm/s
   Ventilation volume: 4 cc/cm²/s
   Measurement range: SENSE M (medium) or H (high)
   Sample size: 50 mm × 50 mm

### [Example 4-1]

As a substrate for electrode for cathode electrolysis, an electrolytic nickel foil having a gauge thickness of 16 µm was provided. One surface of this nickel foil was subjected to a roughening treatment by means of electrolytic nickel plating. The arithmetic average roughness Ra of the roughened surface was 0.71 µm. The measurement of the surface roughness was performed under the same conditions as for the surface roughness measurement of the nickel plate subjected to the blast treatment.

A porous foil was formed by perforating this nickel foil with circular holes by punching. The opening ratio was 49%.

A coating liquid for use in forming an electrode catalyst was prepared by the following procedure. A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). Then, after drying at 50°C for 10 minutes, preliminary baking at 150°C for 3 minutes, and baking at 350°C for 10 minutes were performed. A series of these coating, drying, preliminary baking, and baking operations was repeated until a predetermined amount of coating was achieved. The thickness of the electrode produced in Example 4-1 was 24 µm.The thickness of the catalytic layer, which was determined by subtracting the thickness of the substrate for electrode for electrolysis from the thickness of the electrode, was 8 µm. The coating was formed also on the surface not roughened. The thickness was the total thickness of ruthenium oxide and cerium oxide.

The measurement results of the adhesive force of the electrode produced by the above method are shown in Table 7. A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0028 (kPa·s/m) under the measurement condition 2.

The electrode produced by the above method was cut into a size of 95 mm in length and 110 mm in width for electrolytic evaluation. The roughened surface of the electrode was oppositely disposed on a substantial center position of the carboxylic acid layer side of the ion exchange membrane A (size: 160 mm × 160 mm), produced in [Method (i)] and equilibrated with a 0.1 N NaOH aqueous solution, and allowed to adhere thereto via the surface tension of the aqueous solution.

Even when the four corners of the membrane portion of the membrane-integrated electrode, which was formed by integrating the membrane with the electrode, were pinched and hung such that the membrane-integrated electrode was in parallel with the ground by allowing the electrode to face the ground side, the electrode did not come off or was not displaced. Also when both the ends of one side were pinched and hung such that the membrane-integrated electrode was vertical to the ground, the electrode did not come off or was not displaced.

The above membrane-integrated electrode was sandwiched between the anode cell and the cathode cell such that the surface onto which the electrode was attached was allowed to face the cathode chamber side. In the sectional structure, the collector, the mattress, the nickel mesh feed conductor, the electrode, the membrane, and the anode are arranged in the order mentioned from the cathode chamber side to form a zero-gap structure.

The resulting electrode was subjected to electrolytic evaluation. The results are shown in Table 7.

The electrode exhibited a low voltage, high current efficiency, and a low common salt concentration in caustic soda. The handling property was also good: "1". The membrane damage was also evaluated as good: "0".

When the amount of coating after the electrolysis was measured by fluorescent X-ray analysis (XRF), substantially 100% of the coating remained on the roughened surface, and the coating on the surface not roughened was reduced. This indicates that the surface opposed to the membrane (roughened surface) contributes to the electrolysis and the other surface not opposed to the membrane can achieve satisfactory electrolytic performance when the amount of coating is small or no coating is present.

### [Example 4-2]

In Example 4-2, an electrolytic nickel foil having a gauge thickness of 22 µm was used as the substrate for electrode for cathode electrolysis. One surface of this nickel foil was subjected to roughening treatment by means of electrolytic nickel plating. The arithmetic average roughness Ra of the roughened surface was 0.96 µm. The measurement of the surface roughness was performed under the same conditions as for the surface roughness measurement of the nickel plate subjected to the blast treatment. The opening ratio was 44%. Except for the above described, evaluation was performed in the same manner as in Example 4-1, and the results are shown in Table 7.

The thickness of the electrode was 29 µm.The thickness of the catalytic layer, which was determined by subtracting the thickness of the substrate for electrode for electrolysis from the thickness of the electrode, was 7 µm. The coating was formed also on the surface not roughened.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0033 (kPa·s/m) under the measurement condition 2.

Additionally, the electrode exhibited a low voltage, high current efficiency, and a low common salt concentration in caustic soda. The handling property was also as good as "1". The membrane damage was also evaluated as good: "0".

When the amount of coating after the electrolysis was measured by XRF, substantially 100% of the coating remained on the roughened surface, and the coating on the surface not roughened was reduced. This indicates that the surface opposed to the membrane (roughened surface) contributes to the electrolysis and the other surface not opposed to the membrane can achieve satisfactory electrolytic performance when the amount of coating is small or no coating is present.

### [Example 4-3]

In Example 4-3, an electrolytic nickel foil having a gauge thickness of 30 µm was used as the substrate for electrode for cathode electrolysis. One surface of this nickel foil was subjected to roughening treatment by means of electrolytic nickel plating. The arithmetic average roughness Ra of the roughened surface was 1.38 µm. The measurement of the surface roughness was performed under the same conditions as for the surface roughness measurement of the nickel plate subjected to the blast treatment. The opening ratio was 44%. Except for the above described, evaluation was performed in the same manner as in Example 4-1, and the results are shown in Table 7.

The thickness of the electrode was 38 µm.The thickness of the catalytic layer, which was determined by subtracting the thickness of the substrate for electrode for electrolysis from the thickness of the electrode, was 8 µm.The coating was formed also on the surface not roughened.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0027 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

When the amount of coating after the electrolysis was measured by XRF, substantially 100% of the coating remained on the roughened surface, and the coating on the surface not roughened was reduced. This indicates that the surface opposed to the membrane (roughened surface) contributes to the electrolysis and the other surface not opposed to the membrane can achieve satisfactory electrolytic performance when the amount of coating is small or no coating is present.

### [Example 4-4]

In Example 4-4, an electrolytic nickel foil having a gauge thickness of 16 µm was used as the substrate for electrode for cathode electrolysis. One surface of this nickel foil was subjected to a roughening treatment by means of electrolytic nickel plating. The arithmetic average roughness Ra of the roughened surface was 0.71 µm. The measurement of the surface roughness was performed under the same conditions as for the surface roughness measurement of the nickel plate subjected to the blast treatment. The opening ratio was 75%. Except for the above described, evaluation was performed in the same manner as in Example 4-1, and the results are shown in Table 7.

The thickness of the electrode was 24 µm.The thickness of the catalytic layer, which was determined by subtracting the thickness of the substrate for electrode for electrolysis from the thickness of the electrode, was 8 µm.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0023 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

When the amount of coating after the electrolysis was measured by XRF, substantially 100% of the coating remained on the roughened surface, and the coating on the surface not roughened was reduced. This indicates that the surface opposed to the membrane (roughened surface) contributes to the electrolysis and the other surface not opposed to the membrane can achieve satisfactory electrolytic performance when the amount of coating is small or no coating is present.

### [Example 4-5]

In Example 4-5, an electrolytic nickel foil having a gauge thickness of 20 µm was provided as the substrate for electrode for cathode electrolysis. Both the surface of this nickel foil was subjected to a roughening treatment by means of electrolytic nickel plating. The arithmetic average roughness Ra of the roughened surface was 0.96 µm. Both the surfaces had the same roughness. The measurement of the surface roughness was performed under the same conditions as for the surface roughness measurement of the nickel plate subjected to the blast treatment. The opening ratio was 49%. Except for the above described, evaluation was performed in the same manner as in Example 4-1, and the results are shown in Table 7.

The thickness of the electrode was 30 µm. The thickness of the catalytic layer, which was determined by subtracting the thickness of the substrate for electrode for electrolysis from the thickness of the electrode, was 10 µm. The coating was formed also on the surface not roughened.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0023 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

Additionally, when the amount of coating after the electrolysis was measured by XRF, substantially 100% of the coating remained on both the surfaces. In consideration of comparison with Examples 4-1 to 4-4, this indicates that the other surface not opposed to the membrane can achieve satisfactory electrolytic performance when the amount of coating is small or no coating is present.

### [Example 4-6]

In Example 4-6, evaluation was performed in the same manner as in Example 4-1 except that coating of the substrate for electrode for cathode electrolysis was performed by ion plating, and the results are shown in Table 7. In the ion plating, film forming was performed using a heating temperature of 200°C and Ru metal target under an argon/oxygen atmosphere at a film forming pressure of 7 × 10⁻² Pa. The coating formed was ruthenium oxide.

The thickness of the electrode was 26 µm. The thickness of the catalytic layer, which was determined by subtracting the thickness of the substrate for electrode for electrolysis from the thickness of the electrode, was 10 µm.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0028 (kPa·s/m) under the measurement condition 2.

Additionally, the electrode exhibited a low voltage, high current efficiency and a low common salt concentration in caustic soda. The handling property was also good: "1". The membrane damage was also evaluated as good: "0".

### [Example 4-7]

In Example 4-7, the substrate for electrode for cathode electrolysis was produced by an electroforming method. The photomask had a shape formed by vertically and horizontally arranging 0.485 mm × 0.485 mm squares at an interval of 0.15 mm. Exposure, development, and electroplating were sequentially performed to obtain a nickel porous foil having a gauge thickness of 20 µm and an opening ratio of 56%. The arithmetic average roughness Ra of the surface was 0.71 µm. The measurement of the surface roughness was performed under the same conditions as for the surface roughness measurement of the nickel plate subjected to the blast treatment. Except for the above described, evaluation was performed in the same manner as in Example 4-1, and the results are shown in Table 7.

The thickness of the electrode was 37 µm. The thickness of the catalytic layer, which was determined by subtracting the thickness of the substrate for electrode for electrolysis from the thickness of the electrode, was 17 µm.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0032 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 4-8]

In Example 4-8, the substrate for electrode for cathode electrolysis was produced by an electroforming method. The substrate had a gauge thickness of 50 µm and an opening ratio of 56%. The arithmetic average roughness Ra of the surface was 0.73 µm. The measurement of the surface roughness was performed under the same conditions as for the surface roughness measurement of the nickel plate subjected to the blast treatment. Except for the above described, evaluation was performed in the same manner as in Example 4-1, and the results are shown in Table 7.

The thickness of the electrode was 60 µm. The thickness of the catalytic layer, which was determined by subtracting the thickness of the substrate for electrode for electrolysis from the thickness of the electrode, was 10 µm.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0032 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 4-9]

In Example 4-9, a nickel nonwoven fabric having a gauge thickness of 150 µm and a void ratio of 76% (manufactured by NIKKO TECHNO, Ltd.) was used as the substrate for electrode for cathode electrolysis. The nonwoven fabric had a nickel fiber diameter of about 40 µm and a basis weight of 300 g/m². Except for the above described, evaluation was performed in the same manner as in Example 4-1, and the results are shown in Table 7.

The thickness of the electrode was 165 µm. The thickness of the catalytic layer, which was determined by subtracting the thickness of the substrate for electrode for electrolysis from the thickness of the electrode, was 15 µm.

A sufficient adhesive force was observed.

When a deformation test of the electrode was performed, the average value of L₁ and L₂ was 29 mm, and the electrode did not return to the original flat state. Then, when softness after plastic deformation was evaluated, the electrode conformed to the membrane due to the surface tension. Thus, it was observed that the electrode was able to be brought into contact with the membrane by a small force even if the electrode was plastically deformed and this electrode had a satisfactory handling property.

When the ventilation resistance of the electrode was measured, the ventilation resistance was 0.07 (kPa·s/m) or less under the measurement condition 1 and 0.0612 (kPa·s/m) under the measurement condition 2.

Additionally, the electrode exhibited a low voltage, high current efficiency, and a low common salt concentration in caustic soda. The electrode had a handling property of "2" and was determined to be handleable as a large laminate. The membrane damage was evaluated as good: "0".

### [Example 4-10]

In Example 4-10, a nickel nonwoven fabric having a gauge thickness of 200 µm and a void ratio of 72% (manufactured by NIKKO TECHNO, Ltd.) was used as the substrate for electrode for cathode electrolysis. The nonwoven fabric had a nickel fiber diameter of about 40 µm and a basis weight of 500 g/m². Except for the above described, evaluation was performed in the same manner as in Example 4-1, and the results are shown in Table 7.

The thickness of the electrode was 215 µm. The thickness of the catalytic layer, which was determined by subtracting the thickness of the substrate for electrode for electrolysis from the thickness of the electrode, was 15 µm.

A sufficient adhesive force was observed.

When a deformation test of the electrode was performed, the average value of L₁ and L₂ was 40 mm, and the electrode did not return to the original flat state. Then, when softness after plastic deformation was evaluated, the electrode conformed to the membrane due to the surface tension. Thus, it was observed that the electrode was able to be brought into contact with the membrane by a small force even if the electrode was plastically deformed and this electrode had a satisfactory handling property.

When the ventilation resistance of the electrode was measured, the ventilation resistance was 0.07 (kPa·s/m) or less under the measurement condition 1 and 0.0164 (kPa·s/m) under the measurement condition 2.

Additionally, the electrode exhibited a low voltage, high current efficiency, and a low common salt concentration in caustic soda. The electrode had a handling property of "2" and was determined to be handleable as a large laminate. The membrane damage was evaluated as good: "0".

### [Example 4-11]

In Example 4-11, foamed nickel having a gauge thickness of 200 µm and a void ratio of 72% (manufactured by Mitsubishi Materials Corporation) was used as the substrate for electrode for cathode electrolysis. Except for the above described, evaluation was performed in the same manner as in Example 4-1, and the results are shown in Table 7.

The thickness of the electrode was 210 µm. The thickness of the catalytic layer, which was determined by subtracting the thickness of the substrate for electrode for electrolysis from the thickness of the electrode, was 10 µm.

A sufficient adhesive force was observed.

When a deformation test of the electrode was performed, the average value of L₁ and L₂ was 17 mm, and the electrode did not return to the original flat state. Then, when softness after plastic deformation was evaluated, the electrode conformed to the membrane due to the surface tension. Thus, it was observed that the electrode was able to be brought into contact with the membrane by a small force even if the electrode was plastically deformed and this electrode had a satisfactory handling property.

When the ventilation resistance of the electrode was measured, the ventilation resistance was 0.07 (kPa·s/m) or less under the measurement condition 1 and 0.0402 (kPa·s/m) under the measurement condition 2.

Additionally, the electrode exhibited a low voltage, high current efficiency, and a low common salt concentration in caustic soda. The electrode had a handling property of "2" and was determined to be handleable as a large laminate. The membrane damage was evaluated as good: "0".

### [Example 4-12]

In Example 4-12, a 200-mesh nickel mesh having a line diameter of 50 µm, a gauge thickness of 100 µm, and an opening ratio of 37% was used as the substrate for electrode for cathode electrolysis. A blast treatment was performed with alumina of grain-size number 320. The blast treatment did not change the opening ratio. It is difficult to measure the roughness of the surface of the metal net. Thus, in Example 4-12, a nickel plate having a thickness of 1 mm was simultaneously subjected to the blast treatment during the blasting, and the surface roughness of the nickel plate was taken as the surface roughness of the wire mesh. The arithmetic average roughness Ra of a wire piece of the wire mesh was 0.64 µm. The measurement of the surface roughness was performed under the same conditions as for the surface roughness measurement of the nickel plate subjected to the blast treatment. Except for the above described, evaluation was performed in the same manner as in Example 4-1, and the results are shown in Table 7.

The thickness of the electrode was 110 µm.The thickness of the catalytic layer, which was determined by subtracting the thickness of the substrate for electrode for electrolysis from the thickness of the electrode, was 10 µm.

A sufficient adhesive force was observed.

When a deformation test of the electrode was performed, the average value of L₁ and L₂ was 0.5 mm. It was found that the electrode had a broad elastic deformation region.

When the ventilation resistance of the electrode was measured, the ventilation resistance was 0.07 (kPa·s/m) or less under the measurement condition 1 and 0.0154 (kPa·s/m) under the measurement condition 2.

Additionally, the electrode exhibited a low voltage, high current efficiency, and a low common salt concentration in caustic soda. The handling property was also as good as "1". The membrane damage was also evaluated as good: "0".

### [Example 4-13]

In Example 4-13, a 150-mesh nickel mesh having a line diameter of 65 µm, a gauge thickness of 130 µm, and an opening ratio of 38% was used as the substrate for electrode for cathode electrolysis. A blast treatment was performed with alumina of grain-size number 320. The blast treatment did not change the opening ratio. It is difficult to measure the roughness of the surface of the metal net. Thus, in Example 4-13, a nickel plate having a thickness of 1 mm was simultaneously subjected to the blast treatment during the blasting, and the surface roughness of the nickel plate was taken as the surface roughness of the wire mesh. The arithmetic average roughness Ra was 0.66 µm. The measurement of the surface roughness was performed under the same conditions as for the surface roughness measurement of the nickel plate subjected to the blast treatment. Except for the above described, the above evaluation was performed in the same manner as in Example 4-1, and the results are shown in Table 7.

The thickness of the electrode was 133 µm. The thickness of the catalytic layer, which was determined by subtracting the thickness of the substrate for electrode for electrolysis from the thickness of the electrode, was 3 µm.

A sufficient adhesive force was observed.

When a deformation test of the electrode was performed, the average value of L₁ and L₂ was 6.5 mm. It was found that the electrode had a broad elastic deformation region.

When the ventilation resistance of the electrode was measured, the ventilation resistance was 0.07 (kPa·s/m) or less under the measurement condition 1 and 0.0124 (kPa·s/m) under the measurement condition 2.

Additionally, the electrode exhibited a low voltage, high current efficiency, and a low common salt concentration in caustic soda. The electrode had a handling property of "2" and was determined to be handleable as a large laminate. The membrane damage was also evaluated as good: "0".

### [Example 4-14]

In Example 4-14, a substrate identical to that of Example 4-3 (gauge thickness of 30 µm and opening ratio of 44%) was used as the substrate for electrode for cathode electrolysis. Electrolytic evaluation was performed with a structure identical to that of Example 4-1 except that no nickel mesh feed conductor was included. That is, in the sectional structure of the cell, the collector, the mattress, the membrane-integrated electrode, and the anode are arranged in the order mentioned from the cathode chamber side to form a zero-gap structure, and the mattress serves as the feed conductor. Except for the above described, evaluation was performed in the same manner as in Example 4-1, and the results are shown in Table 7.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0027 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 4-15]

In Example 4-15, a substrate identical to that of Example 4-3 (gauge thickness of 30 µm and opening ratio of 44%) was used as the substrate for electrode for cathode electrolysis. The cathode used in Reference Example 1, which was degraded and had an enhanced electrolytic voltage, was placed instead of the nickel mesh feed conductor. Except for the above described, electrolytic evaluation was performed with a structure identical to that of Example 4-1. That is, in the sectional structure of the cell, the collector, the mattress, the cathode that was degraded and had an enhanced electrolytic voltage (serves as the feed conductor), the cathode, the membrane, and the anode are arranged in the order mentioned from the cathode chamber side to form a zero-gap structure, and the cathode that is degraded and has an enhanced electrolytic voltage serves as the feed conductor. Except for the above described, evaluation was performed in the same manner as in Example 4-1, and the results are shown in Table 7.

A sufficient adhesive force was observed.

When a deformation test of the electrode was performed, the average value of L₁ and L₂ was 0 mm. It was found that the electrode had a broad elastic deformation region.

When the ventilation resistance of the electrode was measured, the ventilation resistance was 0.07 (kPa·s/m) or less under the measurement condition 1 and 0.0027 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 4-16]

A titanium foil having a gauge thickness of 20 µm was provided as the substrate for electrode for anode electrolysis. Both the surfaces of the titanium foil were subjected to a roughening treatment. A porous foil was formed by perforating this titanium foil with circular holes by punching. The hole diameter was 1 mm, and the opening ratio was 14%. The arithmetic average roughness Ra of the surface was 0.37 µm. The measurement of the surface roughness was performed under the same conditions as for the surface roughness measurement of the nickel plate subjected to the blast treatment.

A coating liquid for use in forming an electrode catalyst was prepared by the following procedure. A ruthenium chloride solution having a ruthenium concentration of 100 g/L (Tanaka Kikinzoku Kogyo K.K.), iridium chloride having an iridium concentration of 100 g/L (Tanaka Kikinzoku Kogyo K.K.), and titanium tetrachloride (Wako Pure Chemical Industries, Ltd.) were mixed such that the molar ratio among the ruthenium element, the iridium element, and the titanium element was 0.25:0.25:0.5. This mixed solution was sufficiently stirred and used as an anode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). After the above coating liquid was applied onto the titanium porous foil, drying at 60°C for 10 minutes and baking at 475°C for 10 minutes were performed. A series of these coating, drying, preliminary baking, and baking operations was repeatedly performed, and then baking at 520°C was performed for an hour.

The electrode produced by the above method was cut into a size of 95 mm in length and 110 mm in width for electrolytic evaluation. The cut electrode was allowed to adhere via the surface tension of the aqueous solution to a substantial center position of the sulfonic acid layer side of the ion exchange membrane A (size: 160 mm × 160 mm) produced in [Method (i)] and equilibrated with a 0.1 N NaOH aqueous solution.

The cathode was prepared in the following procedure. First, a 40-mesh nickel wire mesh having a line diameter of 150 µm was provided as the substrate. After blasted with alumina as pretreatment, the wire mesh was immersed in 6 N hydrochloric acid for 5 minutes, sufficiently washed with pure water, and dried.

Next, a ruthenium chloride solution having a ruthenium concentration of 100 g/L (Tanaka Kikinzoku Kogyo K.K.) and cerium chloride (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). Then, after drying at 50°C for 10 minutes, preliminary baking at 300°C for 3 minutes, and baking at 550°C for 10 minutes were performed. Thereafter, baking at 550°C for an hour was performed. A series of these coating, drying, preliminary baking, and baking operations was repeated.

As the collector of the cathode chamber, a nickel expanded metal was used. The collector had a size of 95 mm in length × 110 mm in width. As a metal elastic body, a mattress formed by knitting nickel fine wire was used. The mattress as the metal elastic body was placed on the collector. The cathode produced by the above method was placed thereover, and a string made of Teflon(R) was used to fix the four corners of the mesh to the collector.

Even when the four corners of the membrane portion of the membrane-integrated electrode, which was formed by integrating the membrane with the anodes, were pinched and hung such that the membrane-integrated electrode was in parallel with the ground by allowing the electrode to face the ground side, the electrode did not come off or was not displaced. Also when both the ends of one side were pinched and hung such that the membrane-integrated electrode was vertical to the ground, the electrode did not come off or was not displaced.

The anode used in Reference Example 3, which was degraded and had an enhanced electrolytic voltage, was fixed to the anode cell by welding, and the above membrane-integrated electrode was sandwiched between the anode cell and the cathode cell such that the surface onto which the electrode was attached was allowed to face the anode chamber side. That is, in the sectional structure of the cell, the collector, the mattress, the cathode, the membrane, the titanium porous foil anode, and the anode that was degraded and had an enhanced electrolytic voltage were arranged in the order mentioned from the cathode chamber side to form a zero-gap structure. The anode that was degraded and had an enhanced electrolytic voltage served as the feed conductor. The titanium porous foil anode and the anode that was degraded and had an enhanced electrolytic voltage were only in physical contact with each other and were not fixed with each other by welding.

Evaluation on this structure was performed in the same manner as in Example 4-1, and the results are shown in Table 7.

The thickness of the electrode was 26 µm. The thickness of the catalytic layer, which was determined by subtracting the thickness of the substrate for electrode for electrolysis from the thickness of the electrode, was 6 µm.

A sufficient adhesive force was observed.

When a deformation test of the electrode was performed, the average value of L₁ and L₂ was 4 mm. It was found that the electrode had a broad elastic deformation region.

When the ventilation resistance of the electrode was measured, the ventilation resistance was 0.07 (kPa·s/m) or less under the measurement condition 1 and 0.0060 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 4-17]

In Example 4-17, a titanium foil having a gauge thickness of 20 µm and an opening ratio of 30% was used as the substrate for electrode for anode electrolysis. The arithmetic average roughness Ra of the surface was 0.37 µm. The measurement of the surface roughness was performed under the same conditions as for the surface roughness measurement of the nickel plate subjected to the blast treatment. Except for the above described, evaluation was performed in the same manner as in Example 4-16, and the results are shown in Table 7.

The thickness of the electrode was 30 µm. The thickness of the catalytic layer, which was determined by subtracting the thickness of the substrate for electrode for electrolysis from the thickness of the electrode, was 10 µm.

A sufficient adhesive force was observed.

When a deformation test of the electrode was performed, the average value of L₁ and L₂ was 5 mm. It was found that the electrode had a broad elastic deformation region.

When the ventilation resistance of the electrode was measured, the ventilation resistance was 0.07 (kPa·s/m) or less under the measurement condition 1 and 0.0030 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 4-18]

In Example 4-18, a titanium foil having a gauge thickness of 20 µm and an opening ratio of 42% was used as the substrate for electrode for anode electrolysis. The arithmetic average roughness Ra of the surface was 0.38 µm. The measurement of the surface roughness was performed under the same conditions as for the surface roughness measurement of the nickel plate subjected to the blast treatment. Except for the above described, evaluation was performed in the same manner as in Example 4-16, and the results are shown in Table 7.

The thickness of the electrode was 32 µm. The thickness of the catalytic layer, which was determined by subtracting the thickness of the substrate for electrode for electrolysis from the thickness of the electrode, was 12 µm.

A sufficient adhesive force was observed.

When a deformation test of the electrode was performed, the average value of L₁ and L₂ was 2.5 mm. It was found that the electrode had a broad elastic deformation region.

When the ventilation resistance of the electrode was measured, the ventilation resistance was 0.07 (kPa·s/m) or less under the measurement condition 1 and 0.0022 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 4-19]

In Example 4-19, a titanium foil having a gauge thickness of 50 µm and an opening ratio of 47% was used as the substrate for electrode for anode electrolysis. The arithmetic average roughness Ra of the surface was 0.40 µm. The measurement of the surface roughness was performed under the same conditions as for the surface roughness measurement of the nickel plate subjected to the blast treatment. Except for the above described, evaluation was performed in the same manner as in Example 4-16, and the results are shown in Table 7.

The thickness of the electrode was 69 µm. The thickness of the catalytic layer, which was determined by subtracting the thickness of the substrate for electrode for electrolysis from the thickness of the electrode, was 19 µm.

A sufficient adhesive force was observed.

When a deformation test of the electrode was performed, the average value of L₁ and L₂ was 8 mm. It was found that the electrode had a broad elastic deformation region.

When the ventilation resistance of the electrode was measured, the ventilation resistance was 0.07 (kPa·s/m) or less under the measurement condition 1 and 0.0024 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 4-20]

In Example 4-20, a titanium nonwoven fabric having a gauge thickness of 100 µm, a titanium fiber diameter of about 20 µm, a basis weight of 100 g/m², and an opening ratio of 78% was used as the substrate for electrode for anode electrolysis. Except for the above described, evaluation was performed in the same manner as in Example 4-16, and the results are shown in Table 7.

The thickness of the electrode was 114 µm. The thickness of the catalytic layer, which was determined by subtracting the thickness of the substrate for electrode for electrolysis from the thickness of the electrode, was 14 µm.

A sufficient adhesive force was observed.

When a deformation test of the electrode was performed, the average value of L₁ and L₂ was 2 mm. It was found that the electrode had a broad elastic deformation region.

When the ventilation resistance of the electrode was measured, the ventilation resistance was 0.07 (kPa·s/m) or less under the measurement condition 1 and 0.0228 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 4-21]

In Example 4-21, a 150-mesh titanium wire mesh having a gauge thickness of 120 µm and a titanium fiber diameter of about 60 µm was used as the substrate for electrode for anode electrolysis. The opening ratio was 42%. A blast treatment was performed with alumina of grain-size number 320. It is difficult to measure the roughness of the surface of the metal net. Thus, in Example 4-21, a titanium plate having a thickness of 1 mm was simultaneously subjected to the blast treatment during the blasting, and the surface roughness of the titanium plate was taken as the surface roughness of the wire mesh. The arithmetic average roughness Ra was 0.60 µm. The measurement of the surface roughness was performed under the same conditions as for the surface roughness measurement of the nickel plate subjected to the blast treatment. Except for the above described, evaluation was performed in the same manner as in Example 4-16, and the results are shown in Table 7.

The thickness of the electrode was 140 µm. The thickness of the catalytic layer, which was determined by subtracting the thickness of the substrate for electrode for electrolysis from the thickness of the electrode, was 20 µm.

A sufficient adhesive force was observed.

When a deformation test of the electrode was performed, the average value of L₁ and L₂ was 10 mm. It was found that the electrode had a broad elastic deformation region.

When the ventilation resistance of the electrode was measured, the ventilation resistance was 0.07 (kPa·s/m) or less under the measurement condition 1 and 0.0132 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0".

### [Example 4-22]

In Example 4-22, an anode that was degraded and had an enhanced electrolytic voltage was used in the same manner as in Example 4-16 as the anode feed conductor, and a titanium nonwoven fabric identical to that of Example 4-20 was used as the anode. A cathode that was degraded and had an enhanced electrolytic voltage was used in the same manner as in Example 4-15 as the cathode feed conductor, and a nickel foil electrode identical to that of Example 4-3 was used as the cathode. In the sectional structure of the cell, the collector, the mattress, the cathode that was degraded and had an enhanced voltage, the nickel porous foil cathode, the membrane, the titanium nonwoven fabric anode, and the anode that was degraded and had an enhanced electrolytic voltage are arranged in the order mentioned from the cathode chamber side to form a zero-gap structure, and the cathode and anode degraded and having an enhanced electrolytic voltage serve as the feed conductor. Except for the above described, evaluation was performed in the same manner as in Example 4-1, and the results are shown in Table 7.

The thickness of the electrode (anode) was 114 µm, and the thickness of the catalytic layer, which was determined by subtracting the thickness of the substrate for electrode for electrolysis from the thickness of the electrode (anode), was 14 µm. The thickness of the electrode (cathode) was 38 µm, and the thickness of the catalytic layer, which was determined by subtracting the thickness of the substrate for electrode for electrolysis from the thickness of the electrode (cathode), was 8 µm.

A sufficient adhesive force was observed both in the anode and the cathode.

When a deformation test of the electrode (anode) was performed, the average value of L₁ and L₂ was 2 mm. When a deformation test of the electrode (cathode) was performed, the average value of L₁ and L₂ was 0 mm.

When the ventilation resistance of the electrode (anode) was measured, the ventilation resistance was 0.07 (kPa·s/m) or less under the measurement condition 1 and 0.0228 (kPa·s/m) under the measurement condition 2. When the ventilation resistance of the electrode (cathode) was measured, the ventilation resistance was 0.07 (kPa·s/m) or less under the measurement condition 1 and 0.0027 (kPa·s/m) under the measurement condition 2.

Additionally, the electrode exhibited a low voltage, high current efficiency, and a low common salt concentration in caustic soda. The handling property was also good: "1". The membrane damage was also evaluated as good: "0" both in the anode and the cathode. In Example 4-22, the cathode and the anodes were combined by attaching the cathode to one surface of the membrane and the anode to the other surface and subjected to the membrane damage evaluation.

### [Example 4-23]

In Example 4-23, a microporous membrane "Zirfon Perl UTP 500" manufactured by Agfa was used.

The Zirfon membrane was immersed in pure water for 12 hours or more and used for the test. Except for the above described, the above evaluation was performed in the same manner as in Example 4-3, and the results are shown in Table 7.

When a deformation test of the electrode was performed, the average value of L₁ and L₂ was 0 mm. It was found that the electrode had a broad elastic deformation region.

Similarly to the case where an ion exchange membrane was used as the membrane, a sufficient adhesive force was observed. The microporous membrane was brought into a close contact with the electrode via the surface tension, and the handling property was good: "1".

### [Reference Example 1]

In Reference Example 1, used was a cathode used as the cathode in a large electrolyzer for eight years, degraded, and having an enhanced electrolytic voltage. The above cathode was placed instead of the nickel mesh feed conductor on the mattress of the cathode chamber, and the ion exchange membrane A produced in [Method (i)] was sandwiched therebetween. Then, electrolytic evaluation was performed. In Reference Example 1, no membrane-integrated electrode was used. In the sectional structure of the cell, the collector, the mattress, the cathode that was degraded and had an enhanced electrolytic voltage, the ion exchange membrane A, and the anodes were arranged in the order mentioned from the cathode chamber side to form a zero-gap structure.

As a result of the electrolytic evaluation with this structure, the voltage was 3.04 V, the current efficiency was 97.0%, the common salt concentration in caustic soda (value converted on the basis of 50%) was 20 ppm. Consequently, due to degradation of the cathode, the voltage was high.

### [Reference Example 2]

In Reference Example 2, a nickel mesh feed conductor was used as the cathode. That is, electrolysis was performed on nickel mesh having no catalyst coating thereon.

The nickel mesh cathode was placed on the mattress of the cathode chamber, and the ion exchange membrane A produced in [Method (i)] was sandwiched therebetween. Then, electrolytic evaluation was performed. In the sectional structure of the electric cell of Reference Example 2, the collector, the mattress, the nickel mesh, the ion exchange membrane A, and the anodes were arranged in the order mentioned from the cathode chamber side to form a zero-gap structure.

As a result of the electrolytic evaluation with this structure, the voltage was 3.38 V, the current efficiency was 97.7%, the common salt concentration in caustic soda (value converted on the basis of 50%) was 24 ppm. Consequently, the voltage was high because the cathode catalyst had no coating.

### [Reference Example 3]

In Reference Example 3, used was an anode used as the anode in a large electrolyzer for about eight years, degraded, and having an enhanced electrolytic voltage.

In the sectional structure of the electrolytic cell of Reference Example 3, the collector, the mattress, the cathode, the ion exchange membrane A produced in [Method (i)], and the anode that was degraded and had an enhanced electrolytic voltage were arranged in the order mentioned from the cathode chamber side to form a zero-gap structure.

As a result of the electrolytic evaluation with this structure, the voltage was 3.18 V, the current efficiency was 97.0%, the common salt concentration in caustic soda (value converted on the basis of 50%) was 22 ppm. Consequently, due to degradation of the anode, the voltage was high.

### [Example 4-24]

In Example 4-24, a fully-rolled nickel expanded metal having a gauge thickness of 100 µm and an opening ratio of 33% was used as the substrate for electrode for cathode electrolysis. A blast treatment was performed with alumina of grain-size number 320. The opening ratio was not changed after the blast treatment. It is difficult to measure the surface roughness of the expanded metal. Thus, in Example 4-24, a nickel plate having a thickness of 1 mm was simultaneously subjected to the blast treatment during the blasting, and the surface roughness of the nickel plate was taken as the surface roughness of the wire mesh. The arithmetic average roughness Ra was 0.68 µm. The measurement of the surface roughness was performed under the same conditions as for the surface roughness measurement of the nickel plate subjected to the blast treatment. Except for the above described, evaluation was performed in the same manner as in Example 4-1, and the results are shown in Table 7.

The thickness of the electrode was 114 µm. The thickness of the catalytic layer, which was determined by subtracting the thickness of the substrate for electrode for electrolysis from the thickness of the electrode, was 14 µm.

The mass per unit area was 67.5 (mg/cm²). The force applied per unit mass·unit area (1) was such a small value as 0.05 (N/mg·cm²). Thus, the result of evaluation of winding around column of 280 mm in diameter (2) was 64%, and the result of evaluation of winding around column of 145 mm in diameter (3) was 22%. The portions at which the electrode came off from the membrane increased. This is because there were problems in that the electrode was likely to come off when the membrane-integrated electrode was handled and in that the electrode came off and fell from the membrane during handled. The handling property was "4", which was also problematic. The membrane damage was evaluated as "0".

When a deformation test of the electrode was performed, the average value of L₁ and L₂ was 13 mm.

When the ventilation resistance of the electrode was measured, the ventilation resistance was 0.07 (kPa·s/m) or less under the measurement condition 1 and 0.0168 (kPa·s/m) under the measurement condition 2.

### [Example 4-25]

In Example 4-25, a fully-rolled nickel expanded metal having a gauge thickness of 100 µm and an opening ratio of 16% was used as the substrate for electrode for cathode electrolysis. A blast treatment was performed with alumina of grain-size number 320. The opening ratio was not changed after the blast treatment. It is difficult to measure the surface roughness of the expanded metal. Thus, in Example 4-25, a nickel plate having a thickness of 1 mm was simultaneously subjected to the blast treatment during the blasting, and the surface roughness of the nickel plate was taken as the surface roughness of the wire mesh. The arithmetic average roughness Ra was 0.64 µm. The measurement of the surface roughness was performed under the same conditions as for the surface roughness measurement of the nickel plate subjected to the blast treatment. Except for the above described, evaluation was performed in the same manner as in Example 4-1, and the results are shown in Table 7.

The thickness of the electrode was 107 µm. The thickness of the catalytic layer, which was determined by subtracting the thickness of the substrate for electrode for electrolysis from the thickness of the electrode, was 7 µm.

The mass per unit area was 78.1 (mg/cm²). The force applied per unit mass·unit area (1) was such a small value as 0.04 (N/mg·cm²). Thus, the result of evaluation of winding around column of 280 mm in diameter (2) was 37%, and the result of evaluation of winding around column of 145 mm in diameter (3) was 25%. The portions at which the electrode came off from the membrane increased. This is because there were problems in that the electrode was likely to come off when the membrane-integrated electrode was handled and in that the electrode came off and fell from the membrane during handled. The handling property was "4", which was also problematic. The membrane damage was evaluated as "0".

When a deformation test of the electrode was performed, the average value of L₁ and L₂ was 18.5 mm.

When the ventilation resistance of the electrode was measured, the ventilation resistance was 0.07 (kPa·s/m) or less under the measurement condition 1 and 0.0176 (kPa·s/m) under the measurement condition 2.

### [Example 4-26]

In Example 4-26, a fully-rolled nickel expanded metal having a gauge thickness of 100 µm and an opening ratio of 40% was used as the substrate for electrode for cathode electrolysis. A blast treatment was performed with alumina of grain-size number 320. The opening ratio was not changed after the blast treatment. It is difficult to measure the surface roughness of the expanded metal. Thus, in Example 4-26, a nickel plate having a thickness of 1 mm was simultaneously subjected to the blast treatment during the blasting, and the surface roughness of the nickel plate was taken as the surface roughness of the wire mesh. The arithmetic average roughness Ra was 0.70 µm. The measurement of the surface roughness was performed under the same conditions as for the surface roughness measurement of the nickel plate subjected to the blast treatment. Coating of the substrate for electrode for electrolysis was performed by ion plating in the same manner as in Example 4-6. Except for the above described, evaluation was performed in the same manner as in Example 4-1, and the results are shown in Table 7.

The thickness of the electrode was 110 µm. The thickness of the catalytic layer, which was determined by subtracting the thickness of the substrate for electrode for electrolysis from the thickness of the electrode, was 10 µm.

The force applied per unit mass·unit area (1) was such a small value as 0.07 (N/mg·cm²). Thus, the result of evaluation of winding around column of 280 mm in diameter (2) was 80%, and the result of evaluation of winding around column of 145 mm in diameter (3) was 32%. The portions at which the electrode came off from the membrane increased. This is because there were problems in that the electrode was likely to come off when the membrane-integrated electrode was handled and in that the electrode came off and fell from the membrane during handled. The handling property was "3", which was also problematic. The membrane damage was evaluated as "0".

When a deformation test of the electrode was performed, the average value of L₁ and L₂ was 11 mm.

When the ventilation resistance of the electrode was measured, the ventilation resistance was 0.07 (kPa·s/m) or less under the measurement condition 1 and 0.0030 (kPa·s/m) under the measurement condition 2.

### [Example 4-27]

In Example 4-27, a fully-rolled nickel expanded metal having a gauge thickness of 100 µm and an opening ratio of 58% was used as the substrate for electrode for cathode electrolysis. A blast treatment was performed with alumina of grain-size number 320. The opening ratio was not changed after the blast treatment. It is difficult to measure the surface roughness of the expanded metal. Thus, in Example 4-27, a nickel plate having a thickness of 1 mm was simultaneously subjected to the blast treatment during the blasting, and the surface roughness of the nickel plate was taken as the surface roughness of the wire mesh. The arithmetic average roughness Ra was 0.64 µm. The measurement of the surface roughness was performed under the same conditions as for the surface roughness measurement of the nickel plate subjected to the blast treatment. Except for the above described, evaluation was performed in the same manner as in Example 4-1, and the results are shown in Table 7.

The thickness of the electrode was 109 µm. The thickness of the catalytic layer, which was determined by subtracting the thickness of the substrate for electrode for electrolysis from the thickness of the electrode, was 9 µm.

The force applied per unit mass·unit area (1) was such a small value as 0.06 (N/mg·cm²). Thus, the result of evaluation of winding around column of 280 mm in diameter (2) was 69%, and the result of evaluation of winding around column of 145 mm in diameter (3) was 39%. The portions at which the electrode came off from the membrane increased. This is because there were problems in that the electrode was likely to come off when the membrane-integrated electrode was handled and in that the electrode came off and fell from the membrane during handled. The handling property was "3", which was also problematic. The membrane damage was evaluated as "0".

When a deformation test of the electrode was performed, the average value of L₁ and L₂ was 11.5 mm.

When the ventilation resistance of the electrode was measured, the ventilation resistance was 0.07 (kPa·s/m) or less under the measurement condition 1 and 0.0028 (kPa·s/m) under the measurement condition 2.

### [Example 4-28]

In Example 4-28, a nickel wire mesh having a gauge thickness of 300 µm and an opening ratio of 56% was used as the substrate for electrode for cathode electrolysis. It is difficult to measure the surface roughness of the wire mesh. Thus, in Example 4-28, a nickel plate having a thickness of 1 mm was simultaneously subjected to the blast treatment during the blasting, and the surface roughness of the nickel plate was taken as the surface roughness of the wire mesh. A blast treatment was performed with alumina of grain-size number 320. The opening ratio was not changed after the blast treatment. The arithmetic average roughness Ra was 0.64 µm. The measurement of the surface roughness was performed under the same conditions as for the surface roughness measurement of the nickel plate subjected to the blast treatment. Except for the above described, evaluation was performed in the same manner as in Example 4-1, and the results are shown in Table 7.

The thickness of the electrode was 308 µm. The thickness of the catalytic layer, which was determined by subtracting the thickness of the substrate for electrode for electrolysis from the thickness of the electrode, was 8 µm.

The mass per unit area was 49.2 (mg/cm²). Thus, the result of evaluation of winding around column of 280 mm in diameter (2) was 88%, and the result of evaluation of winding around column of 145 mm in diameter (3) was 42%. The portions at which the electrode came off from the membrane increased. This is because the electrode was likely to come off when the membrane-integrated electrode is handled and the electrode may come off and fall from the membrane during handled. There was a problem in the handling property, which was evaluated as "3". When the large size electrode was actually operated, it was possible to evaluate the handling property as "3". The membrane damage was evaluated as "0".

When a deformation test of the electrode was performed, the average value of L₁ and L₂ was 23 mm.

When the ventilation resistance of the electrode was measured, the ventilation resistance was 0.07 (kPa·s/m) or less under the measurement condition 1 and 0.0034 (kPa·s/m) under the measurement condition 2.

### [Example 4-29]

In Example 4-29, a nickel wire mesh having a gauge thickness of 200 µm and an opening ratio of 37% was used as the substrate for electrode for cathode electrolysis. A blast treatment was performed with alumina of grain-size number 320. The opening ratio was not changed after the blast treatment. It is difficult to measure the surface roughness of the wire mesh. Thus, in Example 4-29, a nickel plate having a thickness of 1 mm was simultaneously subjected to the blast treatment during the blasting, and the surface roughness of the nickel plate was taken as the surface roughness of the wire mesh. The arithmetic average roughness Ra was 0.65 µm. The measurement of the surface roughness was performed under the same conditions as for the surface roughness measurement of the nickel plate subjected to the blast treatment. Except for the above described, evaluation of electrode electrolysis, measurement results of the adhesive force, and adhesiveness were performed in the same manner as in Example 4-1. The results are shown in Table 7.

The thickness of the electrode was 210 µm. The thickness of the catalytic layer, which was determined by subtracting the thickness of the substrate for electrode for electrolysis from the thickness of the electrode, was 10 µm.

The mass per unit area was 56.4 (mg/cm²). Thus, the result of evaluation method of winding around column of 145 mm in diameter (3) was 63%, and the adhesiveness between the electrode and the membrane was poor. This is because the electrode was likely to come off when the membrane-integrated electrode is handled and the electrode may come off and fall from the membrane during handled. There was a problem in the handling property, which was evaluated as "3". The membrane damage was evaluated as "0".

When a deformation test of the electrode was performed, the average value of L₁ and L₂ was 19 mm.

When the ventilation resistance of the electrode was measured, the ventilation resistance was 0.07 (kPa·s/m) or less under the measurement condition 1 and 0.0096 (kPa·s/m) under the measurement condition 2.

### [Example 4-30]

In Example 4-30, a full-rolled titanium expanded metal having a gauge thickness of 500 µm and an opening ratio of 17% was used as the substrate for electrode for anode electrolysis. A blast treatment was performed with alumina of grain-size number 320. The opening ratio was not changed after the blast treatment. It is difficult to measure the surface roughness of the expanded metal. Thus, in Example 4-30, a titanium plate having a thickness of 1 mm was simultaneously subjected to the blast treatment during the blasting, and the surface roughness of the titanium plate was taken as the surface roughness of the wire mesh. The arithmetic average roughness Ra was 0.60 µm. The measurement of the surface roughness was performed under the same conditions as for the surface roughness measurement of the nickel plate subjected to the blast treatment. Except for the above described, evaluation was performed in the same manner as in Example 4-16, and the results are shown in Table 7.

The thickness of the electrode was 508 µm. The thickness of the catalytic layer, which was determined by subtracting the thickness of the substrate for electrode for electrolysis from the thickness of the electrode, was 8 µm.

The mass per unit area was 152.5 (mg/cm²). The force applied per unit mass·unit area (1) was such a small value as 0.01 (N/mg·cm²). Thus, the result of evaluation of winding around column of 280 mm in diameter (2) was less than 5%, and the result of evaluation of winding around column of 145 mm in diameter (3) was less than 5%. The portions at which the electrode came off from the membrane increased. This is because the electrode was likely to come off when the membrane-integrated electrode was handled, the electrode came off and fell from the membrane during handled, and so on. The handling property was "4", which was also problematic. The membrane damage was evaluated as "0".

When a deformation test of the electrode was performed, the electrode did not recover and remained rolled up in the PVC pipe form. Thus, it was not possible to measure the values of L₁ and L₂.

When the ventilation resistance of the electrode was measured, the ventilation resistance was 0.07 (kPa·s/m) or less under the measurement condition 1 and 0.0072 (kPa·s/m) under the measurement condition 2.

### [Example 4-31]

In Example 4-31, a full-rolled titanium expanded metal having a gauge thickness of 800 µm and an opening ratio of 8% was used as the substrate for electrode for anode electrolysis. A blast treatment was performed with alumina of grain-size number 320. The opening ratio was not changed after the blast treatment. It is difficult to measure the surface roughness of the expanded metal. Thus, in Example 4-31, a titanium plate having a thickness of 1 mm was simultaneously subjected to the blast treatment during the blasting, and the surface roughness of the titanium plate was taken as the surface roughness of the wire mesh. The arithmetic average roughness Ra was 0.61 µm. The measurement of the surface roughness was performed under the same conditions as for the surface roughness measurement of the nickel plate subjected to the blast treatment. Except for the above described, the above evaluation was performed in the same manner as in Example 4-16, and the results are shown in Table 7.

The thickness of the electrode was 808 µm. The thickness of the catalytic layer, which was determined by subtracting the thickness of the substrate for electrode for electrolysis from the thickness of the electrode, was 8 µm.

The mass per unit area was 251.3 (mg/cm²). The force applied per unit mass·unit area (1) was such a small value as 0.01 (N/mg·cm²). Thus, the result of evaluation of winding around column of 280 mm in diameter (2) was less than 5%, and the result of evaluation of winding around column of 145 mm in diameter (3) was less than 5%. The portions at which the electrode came off from the membrane increased. This is because the electrode was likely to come off when the membrane-integrated electrode was handled, the electrode came off and fell from the membrane during handled, and so on. The handling property was "4", which was also problematic. The membrane damage was evaluated as "0".

When a deformation test of the electrode was performed, the electrode did not recover and remained rolled up in the PVC pipe form. Thus, it was not possible to measure the values of L₁ and L₂.

When the ventilation resistance of the electrode was measured, the ventilation resistance was 0.07 (kPa·s/m) or less under the measurement condition 1 and 0.0172 (kPa·s/m) under the measurement condition 2.

### [Example 4-32]

In Example 4-32, a full-rolled titanium expanded metal having a gauge thickness of 1000 µm and an opening ratio of 46% was used as the substrate for electrode for anode electrolysis. A blast treatment was performed with alumina of grain-size number 320. The opening ratio was not changed after the blast treatment. It is difficult to measure the surface roughness of the expanded metal. Thus, in Example 4-32, a titanium plate having a thickness of 1 mm was simultaneously subjected to the blast treatment during the blasting, and the surface roughness of the titanium plate was taken as the surface roughness of the wire mesh. The arithmetic average roughness Ra was 0.59 µm. The measurement of the surface roughness was performed under the same conditions as for the surface roughness measurement of the nickel plate subjected to the blast treatment. Except for the above described, the above evaluation was performed in the same manner as in Example 4-16, and the results are shown in Table 7.

The thickness of the electrode was 1011 µm. The thickness of the catalytic layer, which was determined by subtracting the thickness of the substrate for electrode for electrolysis from the thickness of the electrode, was 11 µm.

The mass per unit area was 245.5 (mg/cm²). The force applied per unit mass·unit area (1) was such a small value as 0.01 (N/mg·cm²). Thus, the result of evaluation of winding around column of 280 mm in diameter (2) was less than 5%, and the result of evaluation of winding around column of 145 mm in diameter (3) was less than 5%. The portions at which the electrode came off from the membrane increased. This is because the electrode was likely to come off when the membrane-integrated electrode was handled, the electrode came off and fell from the membrane during handled, and so on. The handling property was "4", which was also problematic. The membrane damage was evaluated as "0".

When a deformation test of the electrode was performed, the electrode did not recover and remained rolled up in the PVC pipe form. Thus, it was not possible to measure the values of L₁ and L₂.

When the ventilation resistance of the electrode was measured, the ventilation resistance was 0.07 (kPa·s/m) or less under the measurement condition 1 and 0.0027 (kPa·s/m) under the measurement condition 2.

### [Example 4-33]

In Example 4-33, a membrane electrode assembly was produced by thermally compressing an electrode onto a membrane with reference to a prior art document (Examples of Japanese Patent Laid-Open No. 58-48686).

A nickel expanded metal having a gauge thickness of 100 µm and an opening ratio of 33% was used as the substrate for electrode for cathode electrolysis to perform electrode coating in the same manner as in Example 4-1. Thereafter, one surface of the electrode was subjected to an inactivation treatment in the following procedure. Polyimide adhesive tape (Chukoh Chemical Industries, Ltd.) was attached to one surface of the electrode. A PTFE dispersion (Dupont-Mitsui Fluorochemicals Co., Ltd., 31-JR (trade name)) was applied onto the other surface and dried in a muffle furnace at 120°C for 10 minutes. The polyimide tape was peeled off, and a sintering treatment was performed in a muffle furnace set at 380°C for 10 minutes. This operation was repeated twice to inactivate the one surface of the electrode.

Produced was a membrane formed by two layers of a perfluorocarbon polymer of which terminal functional group is "-COOCH₃" (C polymer) and a perfluorocarbon polymer of which terminal functional group is "-SO₂F" (S polymer). The thickness of the C polymer layer was 3 mils, and the thickness of the S polymer layer was 4 mils. This two-layer membrane was subjected to a saponification treatment to thereby introduce ion exchange groups to the terminals of the polymer by hydrolysis. The C polymer terminals were hydrolyzed into carboxylic acid groups and the S polymer terminals into sulfo groups. The ion exchange capacity as the sulfonic acid group was 1.0 meq/g, and the ion exchange capacity as the carboxylic acid group was 0.9 meq/g.

The inactivated electrode surface was oppositely disposed to and thermally pressed onto the surface having carboxylic acid groups as the ion exchange groups to integrate the ion exchange membrane and the electrode. The one surface of the electrode was exposed even after the thermal compression, and the electrode passed through no portion of the membrane.

Thereafter, in order to suppress attachment of bubbles to be generated during electrolysis to the membrane, a mixture of zirconium oxide and a perfluorocarbon polymer into which sulfo groups had been introduced was applied onto both the surfaces. Thus, the membrane electrode assembly of Example 4-33 was produced.

When the force applied per unit mass·unit area (1) was measured using this membrane electrode assembly, the electrode did not move upward because the electrode and the membrane were tightly bonded to each other via thermal compression. Then, the ion exchange membrane and nickel plate were fixed so as not to move, and the electrode was pulled upward by a stronger force. When a force of 1.50 (N/mg·cm²) was applied, a portion of the membrane was broken. The membrane electrode assembly of Example 4-33 had a force applied per unit mass·unit area (1) of at least 1.50 (N/mg·cm²) and was strongly bonded.

When evaluation of winding around column of 280 mm in diameter (1) was performed, the area in contact with the plastic pipe was less than 5%. Meanwhile, when evaluation of winding around column of 280 mm in diameter (2) was performed, the electrode and the membrane were 100% bonded to each other, but the membrane was not wound around the column in the first place. The result of evaluation of winding around column of 145 mm (3) was the same. The result meant that the integrated electrode impaired the handling property of the membrane to thereby make it difficult to roll the membrane into a roll and fold the membrane. The handling property was "3", which was problematic. The membrane damage was evaluated as "0". Additionally, when electrolytic evaluation was performed, the voltage was high, the current efficiency was low, the common salt concentration in caustic soda (value converted on the basis of 50%) was raised, and the electrolytic performance deteriorated.

The thickness of the electrode was 114 µm. The thickness of the catalytic layer, which was determined by subtracting the thickness of the substrate for electrode for electrolysis from the thickness of the electrode, was 14 µm.

When a deformation test of the electrode was performed, the average value of L₁ and L₂ was 13 mm.

When the ventilation resistance of the electrode was measured, the ventilation resistance was 0.07 (kPa·s/m) or less under the measurement condition 1 and 0.0168 (kPa·s/m) under the measurement condition 2.

### [Example 4-34]

In Example 4-34, a 40-mesh nickel mesh having a line diameter of 150 µm, a gauge thickness of 300 µm, and an opening ratio of 58% was used as the substrate for electrode for cathode electrolysis. Except for the above described, a membrane electrode assembly was produced in the same manner as in Example 4-33.

When the force applied per unit mass·unit area (1) was measured using this membrane electrode assembly, the electrode did not move upward because the electrode and the membrane were tightly bonded to each other via thermal compression. Then, the ion exchange membrane and nickel plate were fixed so as not to move, and the electrode was pulled upward by a stronger force. When a force of 1.60 (N/mg·cm²) was applied, a portion of the membrane was broken. The membrane electrode assembly of Example 4-34 had a force applied per unit mass·unit area (1) of at least 1.60 (N/mg·cm²) and was strongly bonded.

When evaluation of winding around column of 280 mm in diameter (1) was performed using this membrane electrode assembly, the contact area with the plastic pipe was less than 5%. Meanwhile, when evaluation of winding around column of 280 mm in diameter (2) was performed, the electrode and the membrane were 100% bonded to each other, but the membrane was not wound around the column in the first place. The result of evaluation of winding around column of 145 mm (3) was the same. The result meant that the integrated electrode impaired the handling property of the membrane to thereby make it difficult to roll the membrane into a roll and fold the membrane. The handling property was "3", which was problematic. Additionally, when electrolytic evaluation was performed, the voltage was high, the current efficiency was low, the common salt concentration in caustic soda was raised, and the electrolytic performance deteriorated.

The thickness of the electrode was 308 µm. The thickness of the catalytic layer, which was determined by subtracting the thickness of the substrate for electrode for electrolysis from the thickness of the electrode, was 8 µm.

When a deformation test of the electrode was performed, the average value of L₁ and L₂ was 23 mm.

When the ventilation resistance of the electrode was measured, the ventilation resistance was 0.07 (kPa·s/m) or less under the measurement condition 1 and 0.0034 (kPa·s/m) under the measurement condition 2.

### [Example 4-35]

A nickel line having a gauge thickness of 150 µm was provided as the substrate for electrode for cathode electrolysis. A roughening treatment by this nickel line was performed. It is difficult to measure the surface roughness of the nickel line. Thus, in Example 4-35, a nickel plate having a thickness of 1 mm was simultaneously subjected to the blast treatment during the blasting, and the surface roughness of the nickel plate was taken as the surface roughness of the nickel line. A blast treatment was performed with alumina of grain-size number 320. The arithmetic average roughness Ra was 0.64 µm.

A coating liquid for use in forming an electrode catalyst was prepared by the following procedure. A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088 (trade name), thickness 10 mm) around a polyvinyl chloride (PVC) cylinder was always in contact with the above coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). Then, after drying at 50°C for 10 minutes, preliminary baking at 150°C for 3 minutes, and baking at 350°C for 10 minutes were performed. A series of these coating, drying, preliminary baking, and baking operations was repeated until a predetermined amount of coating was achieved. The thickness of one nickel line produced in Example 4-35 was 158 µm.

The nickel line produced by the above method was cut into a length of 110 mm and a length of 95 mm. As shown in Figure 85, the 110 mm nickel line and the 95 mm nickel line were placed such that the nickel lines vertically overlapped each other at the center of each of the nickel lines and bonded to each other at the intersection with Aron Alpha to produce an electrode. The electrode was evaluated, and the results are shown in Table 7.

The portion of the electrode at which the nickel lines overlapped had the largest thickness, and the thickness of the electrode was 306 µm. The thickness of the catalytic layer was 6 µm. The opening ratio was 99.7%.

The mass per unit area of the electrode was 0.5 (mg/cm²). The forces applied per unit mass·unit area (1) and (2) were both equal to or less than the measurement lower limit of the tensile testing machine. Thus, the result of evaluation of winding around column of 280 mm in diameter (1) was less than 5%, and the portions at which the electrode came off from the membrane increased. The handling property was "4", which was also problematic. The membrane damage was evaluated as "0".

When a deformation test of the electrode was performed, the average value of L₁ and L₂ was 15 mm.

When the ventilation resistance of the electrode was measured, the ventilation resistance was 0.001 (kPa·s/m) or less under the measurement condition 2. When measured under the measurement condition 2 with SENSE (measurement range) set at H (high) of the ventilation resistance measurement apparatus, the ventilation resistance value was 0.0002 (kPa·s/m).

Additionally, the structure shown in Figure 86 was used to place the electrode (cathode) on the Ni mesh feed conductor, and electrolytic evaluation of the electrode was performed by the method described in (9) Electrolytic evaluation. As a result, the voltage was as high as 3.16 V.

### [Example 4-36]

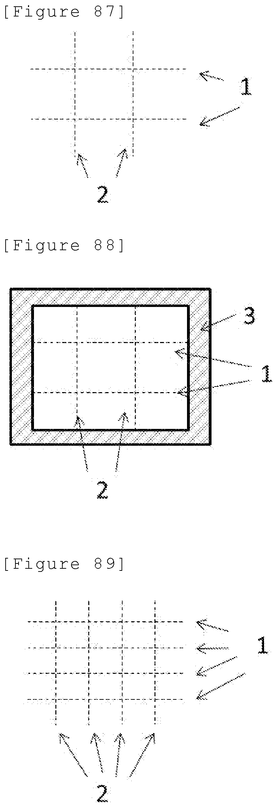

In Example 4-36, the electrode produced in Example 4-35 was used. As shown in Figure 87, the 110 mm nickel line and the 95 mm nickel line were placed such that the nickel lines vertically overlapped each other at the center of each of the nickel lines and bonded to each other at the intersection with Aron Alpha to produce an electrode. The electrode was evaluated, and the results are shown in Table 7.

The portion of the electrode at which the nickel lines overlapped had the largest thickness, and the thickness of the electrode was 306 µm. The thickness of the catalytic layer was 6 µm. The opening ratio was 99.4%.

The mass per unit area of the electrode was 0.9 (mg/cm²). The forces applied per unit mass·unit area (1) and (2) were both equal to or less than the measurement lower limit of the tensile testing machine. Thus, the result of evaluation of winding around column of 280 mm in diameter (1) was less than 5%, and the portions at which the electrode came off from the membrane increased. The handling property was "4", which was also problematic. The membrane damage was evaluated as "0".

When a deformation test of the electrode was performed, the average value of L₁ and L₂ was 16 mm.

When the ventilation resistance of the electrode was measured, the ventilation resistance was 0.001 (kPa·s/m) or less under the measurement condition 2. When measured under the measurement condition 2 with SENSE (measurement range) set at H (high) of the ventilation resistance measurement apparatus, the ventilation resistance was 0.0004 (kPa·s/m).

Additionally, the structure shown in Figure 88 was used to place the electrode (cathode) on the Ni mesh feed conductor, and electrolytic evaluation of the electrode was performed by the method described in (9) Electrolytic evaluation. As a result, the voltage was as high as 3.18 V.

### [Example 4-37]

In Example 4-37, the electrode produced in Example 4-35 was used. As shown in Figure 89, the 110 mm nickel line and the 95 mm nickel line were placed such that the nickel lines vertically overlapped each other at the center of each of the nickel lines and bonded to each other at the intersection with Aron Alpha to produce an electrode. The electrode was evaluated, and the results are shown in Table 7.

The portion of the electrode at which the nickel lines overlapped had the largest thickness, and the thickness of the electrode was 306 µm. The thickness of the catalytic layer was 6 µm. The opening ratio was 98.8%.

The mass per unit area of the electrode was 1.9 (mg/cm²). The forces applied per unit mass·unit area (1) and (2) were both equal to or less than the measurement lower limit of the tensile testing machine. Thus, the result of evaluation of winding around column of 280 mm in diameter (1) was less than 5%, and the portions at which the electrode came off from the membrane increased. The handling property was "4", which was also problematic. The membrane damage was evaluated as "0".

When a deformation test of the electrode was performed, the average value of L₁ and L₂ was 14 mm.

When the ventilation resistance of the electrode was measured, the ventilation resistance was 0.001 (kPa·s/m) or less under the measurement condition 2. When measured under the measurement condition 2 with SENSE (measurement range) set at H (high) of the ventilation resistance measurement apparatus, the ventilation resistance was 0.0005 (kPa·s/m).

Additionally, the structure shown in Figure 90 was used to place the electrode (cathode) on the Ni mesh feed conductor, and electrolytic evaluation of the electrode was performed by the method described in (9) Electrolytic evaluation. As a result, the voltage was as high as 3.18 V.

### [Comparative Example 4-1]

### (Preparation of catalyst)

A metal salt aqueous solution was produced by adding 0.728 g of silver nitrate (Wako Pure Chemical Industries, Ltd.) and 1.86 g of cerium nitrate hexahydrate (Wako Pure Chemical Industries, Ltd.) to 150 ml of pure water. An alkali solution was produced by adding 240 g of pure water to 100 g of a 15% tetramethylammonium hydroxide aqueous solution (Wako Pure Chemical Industries, Ltd.). While the alkali solution was stirred using a magnetic stirrer, the metal salt aqueous solution was added thereto dropwise at 5 ml/minute using a buret. A suspension containing the resulting metal hydroxide particulates was suction-filtered and then washed with water to remove the alkali content. Thereafter, the residue was transferred into 200 ml of 2-propanol (KISHIDA CHEMICAL Co., Ltd.) and redispersed by an ultrasonic dispersing apparatus (US-600T, NISSEI Corporation) for 10 minutes to obtain a uniform suspension.

A suspension of carbon black was obtained by dispersing 0.36 g of hydrophobic carbon black (DENKA BLACK(R) AB-7 (trade name), Denka Company Limited) and 0.84 g of hydrophilic carbon black (Ketjenblack(R) EC-600JD (trade name), Mitsubishi Chemical Corporation) in 100 ml of 2-propanol and dispersing the mixture by the ultrasonic dispersing apparatus for 10 minutes. The metal hydroxide precursor suspension and the carbon black suspension were mixed and dispersed by the ultrasonic dispersing apparatus for 10 minutes. This suspension was suction-filtered and dried at room temperature for half a day to obtain carbon black containing the metal hydroxide precursor dispersed and fixed. Subsequently, an inert gas baking furnace (VMF165 type, YAMADA DENKI CO., LTD.) was used to perform baking in a nitrogen atmosphere at 400°C for an hour to obtain carbon black A containing an electrode catalyst dispersed and fixed.

### (Production of powder for reaction layer)

To 1.6 g of the carbon black A containing an electrode catalyst dispersed and fixed, 0.84 ml of a surfactant Triton(R) X-100(trade name, ICN Biomedicals) diluted to 20% by weight with pure water and 15 ml of pure water, and the mixture was dispersed by an ultrasonic dispersing apparatus for 10 minutes. To this dispersion, 0.664 g of a polytetrafluoroethylene (PTFE) dispersion (PTFE30J (trade name), Dupont-Mitsui Fluorochemicals Co., Ltd.) was added. After the mixture was stirred for five minutes, suction filtration was performed. Additionally, the residue was dried in a dryer at 80°C for an hour, and pulverization was performed by a mill to obtain a powder for reaction layer A.

### (Production of powder for gas diffusion layer)

Dispersed were 20 g of hydrophobic carbon black (DENKA BLACK(R) AB-7 (trade name)), 50 ml of a surfactant Triton(R) X-100(trade name) diluted to 20% by weight with pure water, and 360 ml of pure water by an ultrasonic dispersing apparatus for 10 minutes. To the resulting dispersion, 22.32 g of the PTFE dispersion was added. The mixture was stirred for 5 minutes, and then, filtration was performed. Additionally, the residue was dried in a dryer at 80°C for an hour, and pulverization was performed by a mill to obtain a powder for gas diffusion layer A.

### (Production of gas diffusion electrode)

To 4 g of the powder for gas diffusion layer A, 8.7 ml of ethanol was added, and the mixture was kneaded into a paste form. This powder for gas diffusion layer in a paste form was formed into a sheet form by a roll former. Silver mesh (SW = 1, LW = 2, and thickness = 0.3 mm) as the collector was embedded into the sheet and finally formed into a sheet form having a thickness of 1.8 mm. To 1 g of the powder for reaction layer A, 2.2 ml of ethanol was added, and the mixture was kneaded into a paste form. This powder for reaction layer in a paste form was formed into a sheet form having a thickness of 0.2 mm by a roll former. Additionally, the two sheets, that is, the sheet obtained by using the powder for gas diffusion layer A produced and the sheet obtained by using the powder for reaction layer A were laminated and formed into a sheet form having a thickness of 1.8 mm by a roll former. This laminated sheet was dried at room temperature for a whole day and night to remove ethanol. Further, in order to remove the remaining surfactant, the sheet was subjected to a pyrolysis treatment in air at 300°C for an hour. The sheet was wrapped in an aluminum foil, and subjected to hot pressing by a hot pressing machine (SA303(trade name), TESTER SANGYO CO,. LTD.) at 360°C and 50 kgf/cm² for 1 minute to obtain a gas diffusion electrode. The thickness of the gas diffusion electrode was 412 µm.

The resulting electrode was used to perform electrolytic evaluation. In the sectional structure of the electrolytic cell, the collector, the mattress, the nickel mesh feed conductor, the electrode, the membrane, and the anode are arranged in the order mentioned from the cathode chamber side to form a zero-gap structure. The results are shown in Table 7.

When a deformation test of the electrode was performed, the average value of L₁ and L₂ was 19 mm.

When the ventilation resistance of the electrode was measured, the ventilation resistance was 25.88 (kPa·s/m) under the measurement condition 1.

The handling property was "3", which was problematic. Additionally, when electrolytic evaluation was performed, the current efficiency was low, the common salt concentration in caustic soda was raised, and the electrolytic performance markedly deteriorated. The membrane damage, which was evaluated as "3", also had a problem.

These results have revealed that the gas diffusion electrode obtained in Comparative Example 4-1 had markedly poor electrolytic performance. Additionally, damage was observed on the substantially entire surface of the ion exchange membrane. It was conceived that this is because NaOH that had been generated in the electrode accumulated on the interface between the electrode and the membrane to elevate the concentration thereof, due to the markedly high ventilation resistance of the gas diffusion electrode of Comparative Example 4-1.

**[Table 6]**

| | Substrate for electrode | Form of substrate for electrode | Coating method | Feed conductor |
|---|---|---|---|---|
| Example 4-1 | Ni | Punching | Pyrolysis | Ni mesh |
| Example 4-2 | Ni | Punching | Pyrolysis | Ni mesh |
| Example 4-3 | Ni | Punching | Pyrolysis | Ni mesh |
| Example 4-4 | Ni | Punching | Pyrolysis | Ni mesh |
| Example 4-5 | Ni | Punching | Pyrolysis | Ni mesh |
| Example 4-6 | Ni | Punching | Ion plating | Ni mesh |
| Example 4-7 | Ni | Electroforming | Pyrolysis | Ni mesh |
| Example 4-8 | Ni | Electroforming | Pyrolysis | Ni mesh |
| Example 4-9 | Ni | Nonwoven fabric | Pyrolysis | Ni mesh |
| Example 4-10 | Ni | Nonwoven fabric | Pyrolysis | Ni mesh |
| Example 4-11 | Ni | Foamed Ni | Pyrolysis | Ni mesh |
| Example 4-12 | Ni | Mesh | Pyrolysis | Ni mesh |
| Example 4-13 | Ni | Mesh | Pyrolysis | Ni mesh |
| Example 4-14 | Ni | Punching (same as in Example 4-3) | Pyrolysis | Mattress |
| Example 4-15 | Ni | Punching (same as in Example 4-3) | Pyrolysis | Cathode having increase in voltage |
| Example 4-16 | Ti | Punching | Pyrolysis | Anode having increase in voltage |
| Example 4-17 | Ti | Punching | Pyrolysis | Anode having increase in voltage |
| Example 4-18 | Ti | Punching | Pyrolysis | Anode having increase in voltage |
| Example 4-19 | Ti | Punching | Pyrolysis | Anode having increase in voltage |
| Example 4-20 | Ti | Nonwoven fabric | Pyrolysis | Anode having increase in voltage |
| Example 4-21 | Ti | Mesh | Pyrolysis | Anode having increase in voltage |
| Example 4-22 | Ni/Ti | Combination of Example 4-3 and Example 4-20 | Pyrolysis | Cathode and anode having increase in voltage |
| Example 4-23 | Ni | Punching | Pyrolysis | - |
| Example 4-24 | Ni | Expanded | Pyrolysis | Ni mesh |
| Example 4-25 | Ni | Expanded | Pyrolysis | Ni mesh |
| Example 4-26 | Ni | Expanded | Ion plating | Ni mesh |
| Example 4-27 | Ni | Expanded | Pyrolysis | Ni mesh |
| Example 4-28 | Ni | Mesh | Pyrolysis | Ni mesh |
| Example 4-29 | Ni | Mesh | Pyrolysis | Ni mesh |
| Example 4-30 | Ti | Expanded | Pyrolysis | Anode having increase in voltage |
| Example 4-31 | Ti | Expanded | Pyrolysis | Anode having increase in voltage |
| Example 4-32 | Ti | Expanded | Pyrolysis | Anode having increase in voltage |
| Example 4-33 | Ni | Expanded | Pyrolysis | Ni mesh |
| Example 4-34 | Ni | Mesh | Pyrolysis | Ni mesh |
| Example 4-35 | Ni | Mesh | Pyrolysis | Ni mesh |
| Example 4-36 | Ni | Mesh | Pyrolysis | Ni mesh |
| Example 4-37 | Ni | Mesh | Pyrolysis | Ni mesh |
| Comparative Example 4-1 | Carbon | Powder | Pyrolysis | Ni mesh |

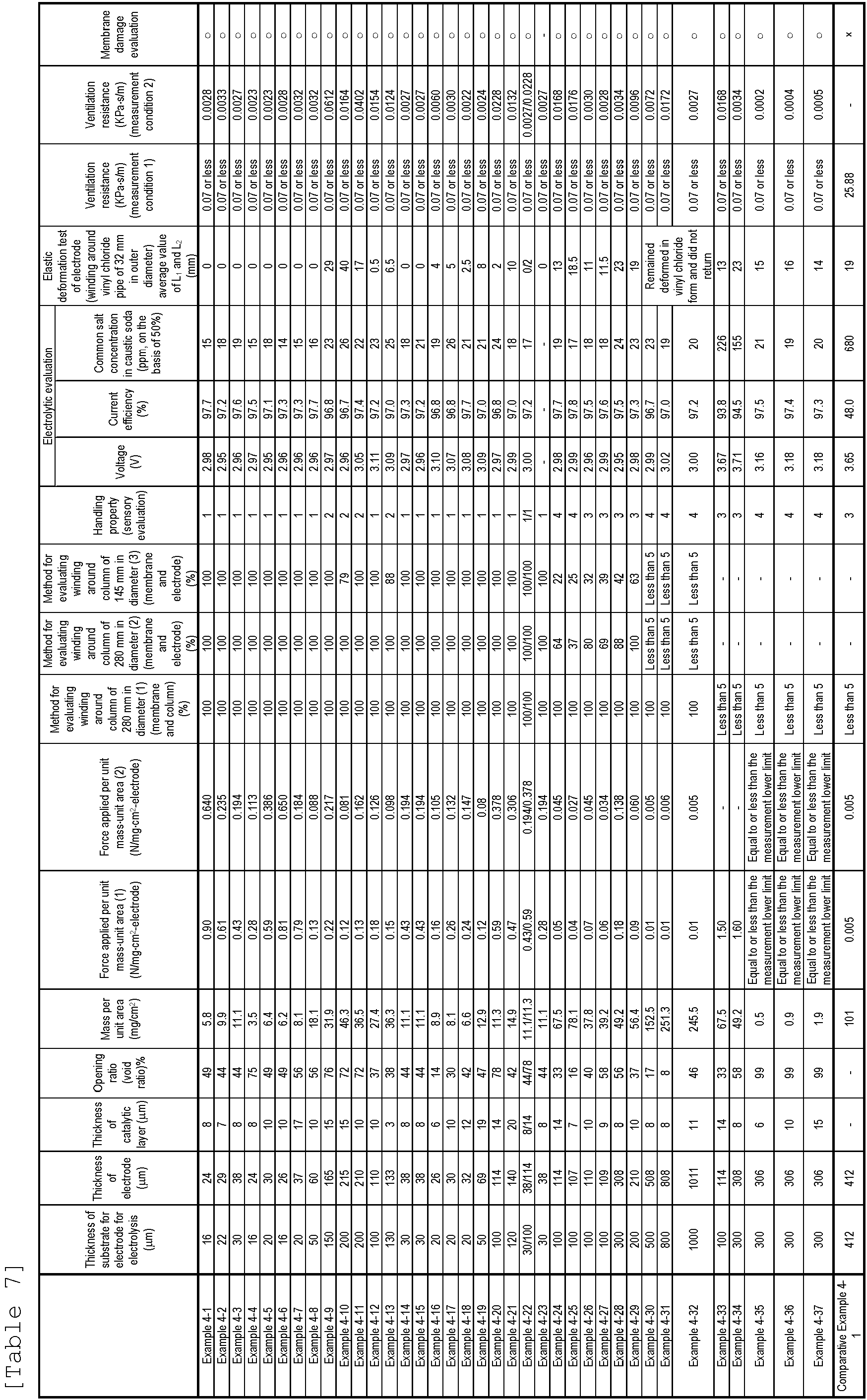

In Table 7, all the samples were able to stand by themselves by the surface tension before measurement of "force applied per unit mass·unit area (1)" and "force applied per unit mass·unit area (2)" (i.e., did not slip down) .

### <Verification of fifth embodiment> (fifth embodiment not in accordance with the invention as claimed)

As will be described below, Experiment Examples according to the fifth embodiment (in the section of <Verification of fifth embodiment> hereinbelow, simply referred to as "Examples") and Experiment Examples not according to the fifth embodiment (in the section of <Verification of fifth embodiment> hereinbelow, simply referred to as "Comparative Examples") were provided, and evaluated by the following method. The details will be described with reference to Figures 93 to 94 and 100 to 102 as appropriate.

As the membrane, an ion exchange membrane A produced as described below was used.

As reinforcement core materials, 90 denier monofilaments made of polytetrafluoroethylene (PTFE) were used (hereinafter referred to as PTFE yarns). As the sacrifice yarns, yarns obtained by twisting six 35 denier filaments of polyethylene terephthalate (PET) 200 times/m were used (hereinafter referred to as PET yarns). First, in each of the TD and the MD, the PTFE yarns and the sacrifice yarns were plain-woven with 24 PTFE yarns/inch so that two sacrifice yarns were arranged between adjacent PTFE yarns, to obtain a woven fabric. The resulting woven fabric was pressure-bonded by a roll to obtain a woven fabric having a thickness of 70 µm.

Next, a resin A of a dry resin that was a copolymer of CF₂=CF₂ and CF₂=CFOCF₂CF(CF₃)OCF₂CF₂COOCH₃ and had an ion exchange capacity of 0.85 mg equivalent/g, and a resin B of a dry resin that was a copolymer of CF₂=CF₂ and CF₂=CFOCF₂CF(CF₃)OCF₂CF₂SO₂F and had an ion exchange capacity of 1.03 mg equivalent/g were provided.

Using these resins A and B, a two-layer film X in which the thickness of a resin A layer was 15 µm and the thickness of a resin B layer was 104 µm was obtained by a coextrusion T die method.

Subsequently, release paper (embossed in a conical shape having a height of 50 µm), a reinforcing material, and the film X were laminated in this order on a hot plate having a heat source and a vacuum source inside and having micropores on its surface, heated and depressurized under the conditions of a hot plate surface temperature of 223°C and a degree of reduced pressure of 0.067 MPa for 2 minutes, and then the release paper was removed to obtain a composite membrane.

The resulting composite membrane was immersed in an aqueous solution at 80°C comprising 30% by mass of dimethyl sulfoxide (DMSO) and 15% by mass of potassium hydroxide (KOH) for 20 minutes for saponification. Then, the composite membrane was immersed in an aqueous solution at 50°C comprising 0.5 N sodium hydroxide (NaOH) for an hour to replace the counterion of the ion exchange group by Na, and then washed with water. Then, the membrane was dried at 60°C.

Further, 20% by mass of zirconium oxide having a primary particle size of 1 µm was added to a 5% by mass ethanol solution of the acid-type resin of the resin B and dispersed to prepare a suspension, and the suspension was sprayed onto both the surfaces of the above composite membrane by a suspension spray method to form coatings of zirconium oxide on the surfaces of the composite membrane to obtain an ion exchange membrane A. The coating density of zirconium oxide measured by fluorescent X-ray measurement was 0.5 mg/cm². Here, the average particle size was measured by a particle size analyzer (manufactured by SHIMADZU CORPORATION, "SALD(R) 2200").

As the electrode, a cathode and an anode below were used.

As a substrate for electrode for cathode electrolysis, an electrolytic nickel foil having a gauge thickness of 22 µm was provided. One surface of this nickel foil was subjected to a roughening treatment by means of electrolytic nickel plating. The arithmetic average roughness Ra of the roughened surface was 0.95 µm. The measurement of the surface roughness was performed under the same conditions as for the surface roughness measurement of the nickel plate subjected to the blast treatment.

A porous foil was formed by perforating this nickel foil with circular holes by punching. The opening ratio was 44%.

A coating liquid for use in forming an electrode catalyst was prepared by the following procedure. A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). Then, after drying at 50°C for 10 minutes, preliminary baking at 150°C for 3 minutes, and baking at 350°C for 10 minutes were performed. A series of these coating, drying, preliminary baking, and baking operations was repeated until a predetermined amount of coating was achieved. The thickness of the electrode produced was 29 µm. The thickness of the catalytic layer containing ruthenium oxide and cerium oxide, which was determined by subtracting the thickness of the substrate for electrode for electrolysis from the thickness of the electrode, was 7 µm. The coating was formed also on the surface not roughened.

A titanium nonwoven fabric having a gauge thickness of 100 µm, a titanium fiber diameter of about 20 µm, a basis weight of 100 g/m², and an opening ratio of 78% was used as the substrate for electrode for anode electrolysis.

A coating liquid for use in forming an electrode catalyst was prepared by the following procedure. A ruthenium chloride solution having a ruthenium concentration of 100 g/L (Tanaka Kikinzoku Kogyo K.K.), iridium chloride having an iridium concentration of 100 g/L (Tanaka Kikinzoku Kogyo K.K.), and titanium tetrachloride (Wako Pure Chemical Industries, Ltd.) were mixed such that the molar ratio among the ruthenium element, the iridium element, and the titanium element was 0.25:0.25:0.5. This mixed solution was sufficiently stirred and used as an anode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). After the above coating liquid was applied onto the titanium porous foil, drying at 60°C for 10 minutes, and baking at 475°C for 10 minutes were performed. A series of these coating, drying, preliminary baking, and baking operations was repeatedly performed, and then baking at 520°C was performed for an hour.

### [Example 5-1]

### (Example of use of cathode-membrane laminate)

A wound body was produced in advance as follows. First, an ion exchange membrane having a size of 1.5 m in length and 2.5 m in width was provided in accordance with the method mentioned above. Additionally, four cathodes having a size of 0.3 m in length and 2.4 m in width were provided in accordance with the method mentioned above.

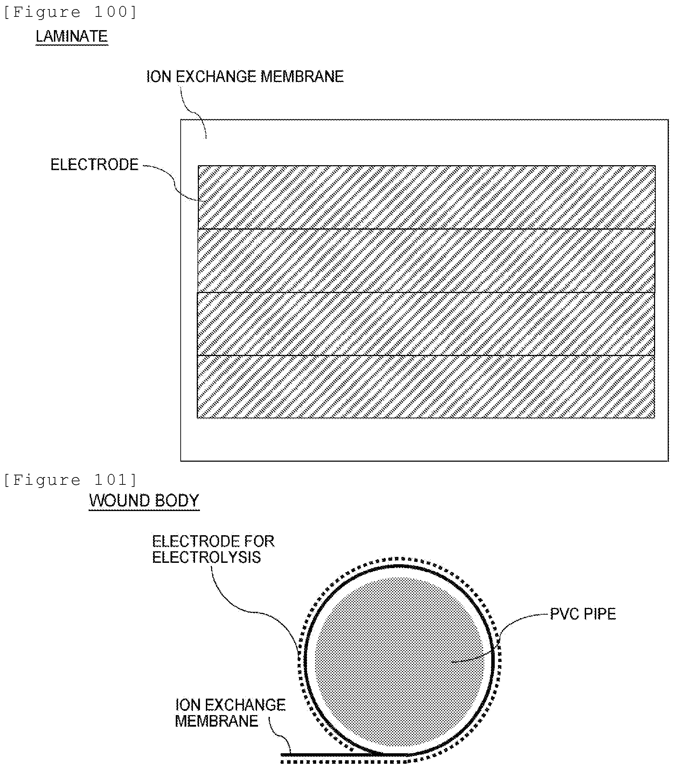

After the ion exchange membrane was immersed in a 2% sodium bicarbonate solution for a whole day and night, the cathodes were arranged without any gap on the carboxylic acid layer side of the ion exchange membrane to produce a laminate of the cathodes and the ion exchange membrane (see Figure 100). When the cathodes were placed on the membrane, the contact with the sodium bicarbonate aqueous solution caused surface tension to function, and the cathodes and the membrane were integrated as if they stick together. No pressure was applied for such integration. The temperature at the integration was 23°C. The resulting laminate was wound around a polyvinyl chloride (PVC) pipe having an outer diameter of 76 mm and a length of 1.7 m as shown in Figure 101 to produce a wound body. The wound body was in a cylindrical form having an outer diameter of 84 mm and a length of 1.7 m, and it was possible to downsize the laminate.

Next, in an existing large electrolyzer (electrolyzer having a structure similar to those shown in Figures 93 and 94), a fixed state of the adjacent electrolytic cells and the ion exchange membrane by means of a press device was released, and the existing membrane was removed out to provide a gap between the electrolytic cells. Thereafter, the wound body was conveyed onto the large electrolyzer. On the large electrolyzer, while the PVC pipe was upright, the wound state was released so as to pull out the wound laminate. At this time, the laminate was maintained substantially vertically to the ground, but the cathode did not come off. Then, after the laminate was inserted between the electrolytic cells, the electrolytic cells were moved to sandwich the laminate therebetween.

It was possible to replace the electrode and the membrane easier than in conventional ones. It was judged that renewing of the electrode and replace of the membrane can be completed in several tens of minutes per one cell when a laminate wound body is provided in advance during the electrolytic operation.

### [Example 5-2]

### (Example of use of anode-membrane laminate)

A wound body was produced in advance as follows. First, an ion exchange membrane having a size of 1.5 m in length and 2.5 m in width was provided in accordance with the method mentioned above. Additionally, four anodes having a size of 0.3 m in length and 2.4 m in width were provided in accordance with the method mentioned above.

After the ion exchange membrane was immersed in a 2% sodium bicarbonate solution for a whole day and night, the anodes were arranged without any gap on the sulfonic acid layer side in the same manner as in Example 5-1 to produce a laminate of the anodes and the ion exchange membrane. When the anodes were placed on the membrane, the contact with the sodium bicarbonate aqueous solution caused surface tension to function, and the anodes and the membrane were integrated as if they stick together. No pressure was applied for such integration. The temperature at the integration was 23°C. The resulting laminate was wound around a polyvinyl chloride (PVC) pipe having an outer diameter of 76 mm and a length of 1.7 m to produce a wound body in the same manner as in Example 5-1. The wound body was in a cylindrical form having an outer diameter of 86 mm and a length of 1.7 m, and it was possible to downsize the laminate.

Next, in an existing large electrolyzer (electrolyzer similar to that in Example 5-1), a fixed state of the adjacent electrolytic cells and the ion exchange membrane by means of a press device was released, and the existing membrane was removed out to provide a gap between the electrolytic cells. Thereafter, the wound body was conveyed onto the large electrolyzer. On the large electrolyzer, while the PVC pipe was upright, the wound state was released so as to pull out the wound laminate. At this time, the laminate was maintained substantially vertically to the ground, but the anode did not come off. Then, after the laminate was inserted between the electrolytic cells, the electrolytic cells were moved to sandwich the laminate therebetween.

It was possible to replace the electrode and the membrane easier than in conventional ones. It was judged that renewing of the electrode and replace of the membrane can be completed in several tens of minutes per one cell when a laminate wound body is provided in advance during the electrolytic operation.

### [Example 5-3]

### (Example of use of anode/cathode-membrane laminate)

A wound body was produced in advance as follows. First, an ion exchange membrane having a size of 1.5 m in length and 2.5 m in width was provided in accordance with the method mentioned above. Additionally, four anodes and four cathodes each having a size of 0.3 m in length and 2.4 m in width were provided in accordance with the method mentioned above.

After the ion exchange membrane was immersed in a 2% sodium bicarbonate solution for a whole day and night, the cathodes were arranged on the carboxylic acid layer side and the anodes were arranged on the sulfonic acid layer side without any gap in the same manner as in Example 5-1 to produce a laminate of the cathodes, the anodes, and the ion exchange membrane. When the cathodes and the anodes were placed on the membrane, the contact with the sodium bicarbonate aqueous solution caused surface tension to function, and the cathodes, the anodes, and the membrane were integrated as if they stick together. No pressure was applied for such integration. The temperature at the integration was 23°C. The resulting laminate was wound around a polyvinyl chloride (PVC) pipe having an outer diameter of 76 mm and a length of 1.7 m to produce a wound body in the same manner as in Example 5-1. The wound body was in a cylindrical form having an outer diameter of 88 mm and a length of 1.7 m, and it was possible to downsize the laminate.

Next, in an existing large electrolyzer (electrolyzer similar to that in Example 5-1), a fixed state of the adjacent electrolytic cells and the ion exchange membrane by means of a press device was released, and the existing membrane was removed out to provide a gap between the electrolytic cells. Thereafter, the wound body was conveyed onto the large electrolyzer. On the large electrolyzer, while the PVC pipe was upright, the wound state was released so as to pull out the wound laminate. At this time, the laminate was maintained substantially vertically to the ground, but the anode did not come off. Then, after the laminate was inserted between the electrolytic cells, the electrolytic cells were moved to sandwich the laminate therebetween.

It was possible to replace the electrode and the membrane easier than in conventional ones. It was judged that renewing of the electrode and replace of the membrane can be completed in several tens of minutes per one cell when a laminate wound body is provided in advance during the electrolytic operation.

### [Example 5-4]

### (Example of use of cathodes)

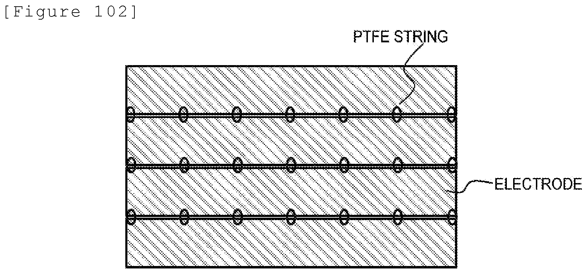

A wound body was produced in advance as follows. First, four cathodes having a size of 0.3 m in length and 2.4 m in width were provided in accordance with the method mentioned above. The four cathodes were arranged without any gap so as to achieve a size of 1.2 m in length and 2.4 in width. Adjacent cathodes were tied together and fixed such that the cathodes were not separated by threading a PTFE string through openings of each cathode (not shown) as shown in Figure 102. In the operation, no pressure was applied, and the temperature was 23°C. These cathodes were wound around a polyvinyl chloride (PVC) pipe having an outer diameter of 76 mm and a length of 1.7 m to produce a wound body in the same manner as in Example 5-1. The wound body was in a cylindrical form having an outer diameter of 78 mm and a length of 1.7 m, and it was possible to downsize the laminate.

Next, in an existing large electrolyzer (electrolyzer similar to that in Example 5-1), a fixed state of the adjacent electrolytic cells and the ion exchange membrane by means of a press device was released, and the existing membrane was removed out to provide a gap between the electrolytic cells. Thereafter, the wound body was conveyed onto the large electrolyzer. On the large electrolyzer, while the PVC pipe was upright, the wound state was released so as to pull out the wound cathodes. At this time, the cathodes were maintained substantially vertically to the ground, but the cathodes did not come off. Then, after the cathodes were inserted between the electrolytic cells, the electrolytic cells were moved to sandwich the laminate therebetween.

It was possible to replace cathodes easier than in conventional ones. It was judged that renewing of the cathodes can be completed in several tens of minutes per one cell when a cathode wound body is provided in advance during the electrolytic operation.

### [Example 5-5]

### (Example of use of anodes)

A wound body was produced in advance as follows. First, four anodes having a size of 0.3 m in length and 2.4 m in width were provided in accordance with the method mentioned above. The four anodes were arranged without any gap so as to achieve a size of 1.2 m in length and 2.4 in width. Adjacent anodes were tied together with a PTFE string and fixed such that the anodes were not separated, in the same manner as in Example 5-4. In the operation, no pressure was applied, and the temperature was 23°C. These anodes were wound around a polyvinyl chloride (PVC) pipe having an outer diameter of 76 mm and a length of 1.7 m to produce a wound body in the same manner as in Example 5-1. The wound body was in a cylindrical form having an outer diameter of 81 mm and a length of 1.7 m, and it was possible to downsize the laminate.

Next, in an existing large electrolyzer (electrolyzer similar to that in Example 5-1), a fixed state of the adjacent electrolytic cells and the ion exchange membrane by means of a press device was released, and the existing membrane was removed out to provide a gap between the electrolytic cells. Thereafter, the wound body was conveyed onto the large electrolyzer. On the large electrolyzer, while the PVC pipe was upright, the wound state was released so as to pull out the wound anodes. At this time, the anodes were maintained substantially vertically to the ground, but the anodes did not come off. Then, after the anodes were inserted between the electrolytic cells, the electrolytic cells were moved to sandwich the laminate therebetween.

It was possible to replace anodes easier than in conventional ones. It was judged that renewing of the anodes can be completed in several tens of minutes per one cell when an anode wound body is provided in advance during the electrolytic operation.

### [Comparative Example 5-1]

### (Conventional renewing of electrode)

In an existing large electrolyzer (electrolyzer similar to that in Example 5-1), a fixed state of the adjacent electrolytic cells and the ion exchange membrane by means of a press device was released, and the existing membrane was removed out to provide a gap between the electrolytic cells. Thereafter, the electrolytic cells were hoisted out from the large electrolyzer with a hoist. The electrolytic cells removed were conveyed to a plant where welding was available.

After the anode fixed by welding on the rib of the electrolytic cell was stripped off, burrs or the like at the portion from which the anode was stripped off with a grinder and so on to smooth the portion. The cathode was stripped off by removing the portion fixed by folding the portion into the collector.

Thereafter, a new anode was placed on the rib of the anode chamber, and the new anode was fixed to the electrolytic cell by spot welding. Similarly in the case of the cathode, a new cathode was placed on the cathode side and fixed by folding the cathode into the collector.

The renewed electrolytic cell was conveyed to the position of the large electrolyzer, and the electrolytic cell was returned in the electrolyzer using a hoist.

The period required from the release of the fixed state of the electrolytic cell and the ion exchange membrane to the refixing of the electrolytic cell was one day or more.

### <Verification of sixth embodiment>

As will be described below, Experiment Examples according to the sixth embodiment (in the section of <Verification of sixth embodiment> hereinbelow, simply referred to as "Examples") and Experiment Examples not according to the sixth embodiment (in the section of <Verification of sixth embodiment> hereinbelow, simply referred to as "Comparative Examples") were provided, and evaluated by the following method. The details will be described with reference to Figures 105 and 106 as appropriate.

As the membrane, an ion exchange membrane b produced as described below was used.

As reinforcement core materials, 90 denier monofilaments made of polytetrafluoroethylene (PTFE) were used (hereinafter referred to as PTFE yarns). As the sacrifice yarns, yarns obtained by twisting six 35 denier filaments of polyethylene terephthalate (PET) 200 times/m were used (hereinafter referred to as PET yarns). First, in each of the TD and the MD, the PTFE yarns and the sacrifice yarns were plain-woven with 24 PTFE yarns/inch so that two sacrifice yarns were arranged between adjacent PTFE yarns, to obtain a woven fabric. The resulting woven fabric was pressure-bonded by a roll to obtain a woven fabric having a thickness of 70 µm.

Next, a resin A of a dry resin that was a copolymer of CF₂=CF₂ and CF₂=CFOCF₂CF(CF₃)OCF₂CF₂COOCH₃ and had an ion exchange capacity of 0.85 mg equivalent/g, and a resin B of a dry resin that was a copolymer of CF₂=CF₂ and CF₂=CFOCF₂CF(CF₃)OCF₂CF₂SO₂F and had an ion exchange capacity of 1.03 mg equivalent/g were provided.

Using these resins A and B, a two-layer film X in which the thickness of a resin A layer was 15 µm and the thickness of a resin B layer was 104 µm was obtained by a coextrusion T die method.

Subsequently, release paper (embossed in a conical shape having a height of 50 µm), a reinforcing material, and the film X were laminated in this order on a hot plate having a heat source and a vacuum source inside and having micropores on its surface, heated and depressurized under the conditions of a hot plate surface temperature of 223°C and a degree of reduced pressure of 0.067 MPa for 2 minutes, and then the release paper was removed to obtain a composite membrane.

The resulting composite membrane was immersed in an aqueous solution at 80°C comprising 30% by mass of dimethyl sulfoxide (DMSO) and 15% by mass of potassium hydroxide (KOH) for 20 minutes for saponification. Then, the composite membrane was immersed in an aqueous solution at 50°C comprising 0.5 N sodium hydroxide (NaOH) for an hour to replace the counterion of the ion exchange group by Na, and then washed with water. Then, the membrane was dried at 60°C.

Further, 20% by mass of zirconium oxide having a primary particle size of 1 µm was added to a 5% by mass ethanol solution of the acid-type resin of the resin B and dispersed to prepare a suspension, and the suspension was sprayed onto both the surfaces of the above composite membrane by a suspension spray method to form coatings of zirconium oxide on the surfaces of the composite membrane to obtain an ion exchange membrane A. The coating density of zirconium oxide measured by fluorescent X-ray measurement was 0.5 mg/cm². Here, the average particle size was measured by a particle size analyzer (manufactured by SHIMADZU CORPORATION, "SALD(R) 2200").

As the electrode, a cathode and an anode below were used.

As a substrate for electrode for cathode electrolysis, an electrolytic nickel foil having a gauge thickness of 22 µm was provided. One surface of this nickel foil was subjected to a roughening treatment by means of electrolytic nickel plating. The arithmetic average roughness Ra of the roughened surface was 0.95 µm. The measurement of the surface roughness was performed under the same conditions as for the surface roughness measurement of the nickel plate subjected to the blast treatment.

A porous foil was formed by perforating this nickel foil with circular holes by punching. The opening ratio was 44%.

A coating liquid for use in forming an electrode catalyst was prepared by the following procedure. A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). Then, after drying at 50°C for 10 minutes, preliminary baking at 150°C for 3 minutes, and baking at 350°C for 10 minutes were performed. A series of these coating, drying, preliminary baking, and baking operations was repeated until a predetermined amount of coating was achieved. The thickness of the electrode produced was 29 µm. The thickness of the catalytic layer containing ruthenium oxide and cerium oxide, which was determined by subtracting the thickness of the substrate for electrode for electrolysis from the thickness of the electrode, was 7 µm. The coating was formed also on the surface not roughened.

A titanium nonwoven fabric having a gauge thickness of 100 µm, a titanium fiber diameter of about 20 µm, a basis weight of 100 g/m², and an opening ratio of 78% was used as the substrate for electrode for anode electrolysis.

A coating liquid for use in forming an electrode catalyst was prepared by the following procedure. A ruthenium chloride solution having a ruthenium concentration of 100 g/L (Tanaka Kikinzoku Kogyo K.K.), iridium chloride having an iridium concentration of 100 g/L (Tanaka Kikinzoku Kogyo K.K.), and titanium tetrachloride (Wako Pure Chemical Industries, Ltd.) were mixed such that the molar ratio among the ruthenium element, the iridium element, and the titanium element was 0.25:0.25:0.5. This mixed solution was sufficiently stirred and used as an anode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). After the above coating liquid was applied onto the titanium porous foil, drying at 60°C for 10 minutes, and baking at 475°C for 10 minutes were performed. A series of these coating, drying, preliminary baking, and baking operations was repeatedly performed, and then baking at 520°C was performed for an hour.

### [Example 6-1]

### (Example of use of cathode-membrane laminate)

A wound body was produced in advance as follows. First, an ion exchange membrane b having a size of 1.5 m in length and 2.5 m in width was provided in accordance with the method mentioned above. Additionally, four cathodes having a size of 0.3 m in length and 2.4 m in width were provided in accordance with the method mentioned above.

After the ion exchange membrane b was immersed in a 2% sodium bicarbonate solution for a whole day and night, the cathodes were arranged without any gap on the carboxylic acid layer side of the ion exchange membrane to produce a laminate of the cathodes and the ion exchange membrane b. When the cathodes were placed on the membrane, the contact with the sodium bicarbonate aqueous solution caused surface tension to function, and the cathodes and the membrane were integrated as if they stick together. No pressure was applied for such integration. The temperature at the integration was 23°C. This laminate was wound around a polyvinyl chloride (PVC) pipe having an outer diameter of 76 mm and a length of 1.7 m to produce a wound body. In order to melt the ion exchange membrane b, a temperature of 200°C or more is required. In the present example, the ion exchange membrane did not melt during integration.

Next, in an existing large electrolyzer (electrolyzer having a structure similar to those shown in Figures 105 and 106), a fixed state of the adjacent electrolytic cells and the ion exchange membrane by means of a press device was released, and the existing membrane was removed out to provide a gap between the electrolytic cells. Thereafter, the wound body was conveyed onto the large electrolyzer. On the large electrolyzer, while the PVC pipe was upright, the wound state was released so as to pull out the wound laminate. At this time, the laminate was maintained substantially vertically to the ground, but the cathode did not come off. Then, after the laminate was inserted between the electrolytic cells, the electrolytic cells were moved to sandwich the laminate therebetween.

It was possible to replace the electrode and the membrane easier than in conventional ones. It was judged that renewing of the electrode and replace of the membrane can be completed in several tens of minutes per one cell.

### [Example 6-2]

### (Example of use of anode-membrane laminate)

A wound body was produced in advance as follows. First, an ion exchange membrane b having a size of 1.5 m in length and 2.5 m in width was provided in accordance with the method mentioned above. Additionally, four anodes having a size of 0.3 m in length and 2.4 m in width were provided in accordance with the method mentioned above.

After the ion exchange membrane b was immersed in a 2% sodium bicarbonate solution for a whole day and night, the anodes were arranged without any gap on the sulfonic acid layer side of the ion exchange membrane to produce a laminate of the anodes and the ion exchange membrane. When the anodes were placed on the membrane, the contact with the sodium bicarbonate aqueous solution caused surface tension to function, and the anodes and the membrane were integrated as if they stick together. No pressure was applied for such integration. The temperature at the integration was 23°C. This laminate was wound around a polyvinyl chloride (PVC) pipe having an outer diameter of 76 mm and a length of 1.7 m to produce a wound body.

Next, in an existing large electrolyzer (electrolyzer similar to that in Example 6-1), a fixed state of the adjacent electrolytic cells and the ion exchange membrane by means of a press device was released, and the existing membrane was removed out to provide a gap between the electrolytic cells. Thereafter, the wound body was conveyed onto the large electrolyzer. On the large electrolyzer, while the PVC pipe was upright, the wound state was released so as to pull out the wound laminate. At this time, the laminate was maintained substantially vertically to the ground, but the anode did not come off. Then, after the laminate was inserted between the electrolytic cells, the electrolytic cells were moved to sandwich the laminate therebetween.

It was possible to replace the electrode and the membrane easier than in conventional ones. It was judged that renewing of the electrode and replace of the membrane can be completed in several tens of minutes per one cell.

### [Example 6-3]

### (Example of use of anode/cathode-membrane laminate)

A wound body was produced in advance as follows. First, an ion exchange membrane b having a size of 1.5 m in length and 2.5 m in width was provided in accordance with the method mentioned above. Additionally, four anodes and four cathodes each having a size of 0.3 m in length and 2.4 m in width were provided in accordance with the method mentioned above.

After the ion exchange membrane b was immersed in a 2% sodium bicarbonate solution for a whole day and night, the cathodes were arranged on the carboxylic acid layer side of the ion exchange membrane and the anodes were arranged on the sulfonic acid layer side of the ion exchange membrane without any gap to produce a laminate of the cathodes, the anodes, and the ion exchange membrane b. When the cathodes and the anodes were placed on the membrane, the contact with the sodium bicarbonate aqueous solution caused surface tension to function, and the cathodes, the anodes, and the membrane were integrated as if they stick together. No pressure was applied for such integration. The temperature at the integration was 23°C. This laminate was wound around a polyvinyl chloride (PVC) pipe having an outer diameter of 76 mm and a length of 1.7 m to produce a wound body.

Next, in an existing large electrolyzer (electrolyzer similar to that in Example 6-1), a fixed state of the adjacent electrolytic cells and the ion exchange membrane by means of a press device was released, and the existing membrane was removed out to provide a gap between the electrolytic cells. Thereafter, the wound body was conveyed onto the large electrolyzer. On the large electrolyzer, while the PVC pipe was upright, the wound state was released so as to pull out the wound laminate. At this time, the laminate was maintained substantially vertically to the ground, but the anode did not come off. Then, after the laminate was inserted between the electrolytic cells, the electrolytic cells were moved to sandwich the laminate therebetween.

It was possible to replace the electrode and the membrane easier than in conventional ones. It was judged that renewing of the electrode and replace of the membrane can be completed in several tens of minutes per one cell.

### [Comparative Example 6-1]

A membrane electrode laminate was produced by thermally compressing an electrode onto a membrane as follows, with reference to Examples of Japanese Patent Laid-Open No. 58-48686.

A nickel expanded metal having a gauge thickness of 100 µm and an opening ratio of 33% was used as the substrate for electrode for cathode electrolysis to perform electrode coating in the same manner as in Example 6-1. The electrode had a size of 200 mm × 200 mm, and the number of the electrodes was 72. Thereafter, one surface of each electrode was subjected to an inactivation treatment in the following procedure. Polyimide adhesive tape (Chukoh Chemical Industries, Ltd.) was attached to one surface of the electrodes. A PTFE dispersion (Dupont-Mitsui Fluorochemicals Co., Ltd., 31-JR (trade name)) was applied onto the other surface and dried in a muffle furnace at 120°C for 10 minutes. The polyimide tape was peeled off, and a sintering treatment was performed in a muffle furnace set at 380°C for 10 minutes. This operation was repeated twice to inactivate the one surface of the electrodes.

Produced was a membrane formed by two layers of a perfluorocarbon polymer of which terminal functional group is "-COOCH₃" (C polymer) and a perfluorocarbon polymer of which terminal group is "-SO₂F" (S polymer). The thickness of the C polymer layer was 3 mils, and the thickness of the S polymer layer was 4 mils. This two-layer membrane was subjected to a saponification treatment to thereby introduce ion exchange groups to the terminals of the polymer by hydrolysis. The C polymer terminals were hydrolyzed into carboxylic acid groups and the S polymer terminals into sulfo groups. The ion exchange capacity as the sulfonic acid group was 1.0 meq/g, and the ion exchange capacity as the carboxylic acid group was 0.9 meq/g. The size of the resulting ion exchange membrane was similar to that in Example 6-1.

The inactivated electrode surface of the above electrode was oppositely disposed to and thermally pressed (thermally compressed) onto the surface having carboxylic acid groups as the ion exchange groups to integrate the ion exchange membrane and the electrodes. That is, under a temperature at which the ion exchange membrane melted, the 72 electrodes of 200 mm square were integrated onto one ion exchange membrane having a size of 1500 mm in length and 2500 mm in width. The one surface of each electrode was exposed even after the thermal compression, and the electrodes passed through no portion of the membrane.

For the large size of 1500 mm × 2500 mm, a period of one day or more was required for the process of integrating the ion exchange membrane and the electrodes via thermal compression. That is, it was judged that Comparative Example 6-1 required a longer period for renewing of the electrode and replacement of the membrane than in Examples.

### <Verification of seventh embodiment> (seventh embodiment not in accordance with the invention as claimed)

As will be described below, Experiment Examples according to the seventh embodiment (in the section of <Verification of seventh embodiment> hereinbelow, simply referred to as "Examples") and Experiment Examples not according to the seventh embodiment (in the section of <Verification of seventh embodiment> hereinbelow, simply referred to as "Comparative Examples") were provided, and evaluated by the following method. The details will be described with reference to Figures 114 and 115 as appropriate.

As the membrane, an ion exchange membrane produced as described below was used.

As reinforcement core materials, 90 denier monofilaments made of polytetrafluoroethylene (PTFE) were used (hereinafter referred to as PTFE yarns). As the sacrifice yarns, yarns obtained by twisting six 35 denier filaments of polyethylene terephthalate (PET) 200 times/m were used (hereinafter referred to as PET yarns). First, in each of the TD and the MD, the PTFE yarns and the sacrifice yarns were plain-woven with 24 PTFE yarns/inch so that two sacrifice yarns were arranged between adjacent PTFE yarns, to obtain a woven fabric. The resulting woven fabric was pressure-bonded by a roll to obtain a woven fabric having a thickness of 70 µm.

Next, a resin A of a dry resin that was a copolymer of CF₂=CF₂ and CF₂=CFOCF₂CF(CF₃)OCF₂CF₂COOCH₃ and had an ion exchange capacity of 0.85 mg equivalent/g, and a resin B of a dry resin that was a copolymer of CF₂=CF₂ and CF₂=CFOCF₂CF(CF₃)OCF₂CF₂SO₂F and had an ion exchange capacity of 1.03 mg equivalent/g were provided.

Using these resins A and B, a two-layer film X in which the thickness of a resin A layer was 15 µm and the thickness of a resin B layer was 104 µm was obtained by a coextrusion T die method.

Subsequently, release paper (embossed in a conical shape having a height of 50 µm), a reinforcing material, and the film X were laminated in this order on a hot plate having a heat source and a vacuum source inside and having micropores on its surface, heated and depressurized under the conditions of a hot plate surface temperature of 223°C and a degree of reduced pressure of 0.067 MPa for 2 minutes, and then the release paper was removed to obtain a composite membrane.

The resulting composite membrane was immersed in an aqueous solution at 80°C comprising 30% by mass of dimethyl sulfoxide (DMSO) and 15% by mass of potassium hydroxide (KOH) for 20 minutes for saponification. Then, the composite membrane was immersed in an aqueous solution at 50°C comprising 0.5 N sodium hydroxide (NaOH) for an hour to replace the counterion of the ion exchange group by Na, and then washed with water. Then, the membrane was dried at 60°C.

Further, 20% by mass of zirconium oxide having a primary particle size of 1 µm was added to a 5% by mass ethanol solution of the acid-type resin of the resin B and dispersed to prepare a suspension, and the suspension was sprayed onto both the surfaces of the above composite membrane by a suspension spray method to form coatings of zirconium oxide on the surfaces of the composite membrane to obtain an ion exchange membrane A. The coating density of zirconium oxide measured by fluorescent X-ray measurement was 0.5 mg/cm². Here, the average particle size was measured by a particle size analyzer (manufactured by SHIMADZU CORPORATION, "SALD(R) 2200").

As the electrode, a cathode and an anode below were used.

As a substrate for electrode for cathode electrolysis, an electrolytic nickel foil having a gauge thickness of 22 µm was provided. One surface of this nickel foil was subjected to a roughening treatment by means of electrolytic nickel plating. The arithmetic average roughness Ra of the roughened surface was 0.95 µm. The measurement of the surface roughness was performed under the same conditions as for the surface roughness measurement of the nickel plate subjected to the blast treatment.

A porous foil was formed by perforating this nickel foil with circular holes by punching. The opening ratio was 44%.

A coating liquid for use in forming an electrode catalyst was prepared by the following procedure. A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). Then, after drying at 50°C for 10 minutes, preliminary baking at 150°C for 3 minutes, and baking at 350°C for 10 minutes were performed. A series of these coating, drying, preliminary baking, and baking operations was repeated until a predetermined amount of coating was achieved. The thickness of the electrode produced was 29 µm. The thickness of the catalytic layer containing ruthenium oxide and cerium oxide, which was determined by subtracting the thickness of the substrate for electrode for electrolysis from the thickness of the electrode, was 7 µm. The coating was formed also on the surface not roughened.

A titanium nonwoven fabric having a gauge thickness of 100 µm, a titanium fiber diameter of about 20 µm, a basis weight of 100 g/m², and an opening ratio of 78% was used as the substrate for electrode for anode electrolysis.

A coating liquid for use in forming an electrode catalyst was prepared by the following procedure. A ruthenium chloride solution having a ruthenium concentration of 100 g/L (Tanaka Kikinzoku Kogyo K.K.), iridium chloride having an iridium concentration of 100 g/L (Tanaka Kikinzoku Kogyo K.K.), and titanium tetrachloride (Wako Pure Chemical Industries, Ltd.) were mixed such that the molar ratio among the ruthenium element, the iridium element, and the titanium element was 0.25:0.25:0.5. This mixed solution was sufficiently stirred and used as an anode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). After the above coating liquid was applied onto the titanium porous foil, drying at 60°C for 10 minutes, and baking at 475°C for 10 minutes were performed. A series of these coating, drying, preliminary baking, and baking operations was repeatedly performed, and then baking at 520°C was performed for an hour.

### [Example 7-1]

### (Example of use of cathode-membrane laminate)

A wound body was produced in advance as follows. First, an ion exchange membrane having a size of 1.5 m in length and 2.5 m in width was provided in accordance with the method mentioned above. Additionally, four cathodes having a size of 0.3 m in length and 2.4 m in width were provided in accordance with the method mentioned above.

After the ion exchange membrane was immersed in a 2% sodium bicarbonate solution for a whole day and night, the cathodes were arranged without any gap on the carboxylic acid layer side of the ion exchange membrane to produce a laminate of the cathodes and the ion exchange membrane. When the cathodes were placed on the membrane, the contact with the sodium bicarbonate aqueous solution caused surface tension to function, and the cathodes and the membrane were integrated as if they stick together. No pressure was applied for such integration. The temperature at the integration was 23°C. This laminate was wound around a polyvinyl chloride (PVC) pipe having an outer diameter of 76 mm and a length of 1.7 m to produce a wound body.

Next, in an existing large electrolyzer (electrolyzer having a structure similar to those shown in Figures 114 and 115), a fixed state of the adjacent electrolytic cells and the ion exchange membrane by means of a press device was released, and the existing membrane was removed out to provide a gap between the electrolytic cells. Thereafter, the wound body was conveyed onto the large electrolyzer. On the large electrolyzer, while the PVC pipe was upright, the wound state was released so as to pull out the wound laminate. At this time, the laminate was maintained substantially vertically to the ground, but the cathode did not come off. Then, after the laminate was inserted between the electrolytic cells, the electrolytic cells were moved to sandwich the laminate therebetween.

It was possible to replace the electrode and the membrane easier than in conventional ones. It was judged that renewing of the electrode and replace of the membrane can be completed in several tens of minutes per one cell when a laminate wound body is provided in advance during the electrolytic operation.

### [Example 7-2]

### (Example of use of anode-membrane laminate)

A wound body was produced in advance as follows. First, an ion exchange membrane having a size of 1.5 m in length and 2.5 m in width was provided in accordance with the method mentioned above. Additionally, four anodes having a size of 0.3 m in length and 2.4 m in width were provided in accordance with the method mentioned above.

After the ion exchange membrane was immersed in a 2% sodium bicarbonate solution for a whole day and night, the anodes were arranged without any gap on the sulfonic acid layer side of the ion exchange membrane to produce a laminate of the anodes and the ion exchange membrane. When the anodes were placed on the membrane, the contact with the sodium bicarbonate aqueous solution caused surface tension to function, and the anodes and the membrane were integrated as if they stick together. No pressure was applied for such integration. The temperature at the integration was 23°C. This laminate was wound around a polyvinyl chloride (PVC) pipe having an outer diameter of 76 mm and a length of 1.7 m to produce a wound body.

Next, in an existing large electrolyzer (electrolyzer similar to that in Example 7-1), a fixed state of the adjacent electrolytic cells and the ion exchange membrane by means of a press device was released, and the existing membrane was removed out to provide a gap between the electrolytic cells. Thereafter, the wound body was conveyed onto the large electrolyzer. On the large electrolyzer, while the PVC pipe was upright, the wound state was released so as to pull out the wound laminate. At this time, the laminate was maintained substantially vertically to the ground, but the anode did not come off. Then, after the laminate was inserted between the electrolytic cells, the electrolytic cells were moved to sandwich the laminate therebetween.

It was possible to replace the electrode and the membrane easier than in conventional ones. It was judged that renewing of the electrode and replace of the membrane can be completed in several tens of minutes per one cell when a laminate wound body is provided in advance during the electrolytic operation.

### [Example 7-3]

### (Example of use of anode/cathode-membrane laminate)

A wound body was produced in advance as follows. First, an ion exchange membrane having a size of 1.5 m in length and 2.5 m in width was provided in accordance with the method mentioned above. Additionally, four anodes and four cathodes each having a size of 0.3 m in length and 2.4 m in width were provided in accordance with the method mentioned above.

After the ion exchange membrane was immersed in a 2% sodium bicarbonate solution for a whole day and night, the cathodes were arranged on the carboxylic acid layer side of the ion exchange membrane and the anodes were arranged on the sulfonic acid layer side of the ion exchange membrane without any gap to produce a laminate of the cathodes, the anodes, and the ion exchange membrane. When the cathodes and the anodes were placed on the membrane, the contact with the sodium bicarbonate aqueous solution caused surface tension to function, and the cathodes, the anodes, and the membrane were integrated as if they stick together. No pressure was applied for such integration. The temperature at the integration was 23°C. This laminate was wound around a polyvinyl chloride (PVC) pipe having an outer diameter of 76 mm and a length of 1.7 m to produce a wound body.

Next, in an existing large electrolyzer (electrolyzer similar to that in Example 7-1), a fixed state of the adjacent electrolytic cells and the ion exchange membrane by means of a press device was released, and the existing membrane was removed out to provide a gap between the electrolytic cells. Thereafter, the wound body was conveyed onto the large electrolyzer. On the large electrolyzer, while the PVC pipe was upright, the wound state was released so as to pull out the wound laminate. At this time, the laminate was maintained substantially vertically to the ground, but the anode did not come off. Then, after the laminate was inserted between the electrolytic cells, the electrolytic cells were moved to sandwich the laminate therebetween.

It was possible to replace the electrode and the membrane easier than in conventional ones. It was judged that renewing of the electrode and replace of the membrane can be completed in several tens of minutes per one cell when a laminate wound body is provided in advance during the electrolytic operation.

### [Example 7-4]

### (Example of use of cathodes)

A wound body was produced in advance as follows. First, four cathodes having a size of 0.3 m in length and 2.4 m in width were provided in accordance with the method mentioned above. The four cathodes were arranged without any gap so as to achieve a size of 1.2 m in length and 2.4 m in width. Adjacent cathodes were tied together with a PTFE string and fixed such that the cathodes were not separated. In the operation, no pressure was applied, and the temperature was 23°C. These cathodes were wound around a polyvinyl chloride (PVC) pipe having an outer diameter of 76 mm and a length of 1.7 m to produce a wound body.

Next, in an existing large electrolyzer (electrolyzer similar to that in Example 7-1), a fixed state of the adjacent electrolytic cells and the ion exchange membrane by means of a press device was released, and the existing membrane was removed out to provide a gap between the electrolytic cells. Thereafter, the wound body was conveyed onto the large electrolyzer. On the large electrolyzer, while the PVC pipe was upright, the wound state was released so as to pull out the wound cathodes. At this time, the cathodes were maintained substantially vertically to the ground, but the cathodes did not come off. Then, after the cathodes were inserted between the electrolytic cells, the electrolytic cells were moved to sandwich the cathodes therebetween.

It was possible to replace cathodes easier than in conventional ones. It was judged that renewing of the cathodes can be completed in several tens of minutes per one cell when a cathode wound body is provided in advance during the electrolytic operation.

### [Example 7-5]

### (Example of use of anodes)

A wound body was produced in advance as follows. First, four anodes having a size of 0.3 m in length and 2.4 m in width were provided in accordance with the method mentioned above. The four anodes were arranged without any gap so as to achieve a size of 1.2 m in length and 2.4 m in width. Adjacent anodes were tied together with a PTFE string and fixed such that the anodes were not separated. In the operation, no pressure was applied, and the temperature was 23°C. These anodes were wound around a polyvinyl chloride (PVC) pipe having an outer diameter of 76 mm and a length of 1.7 m to produce a wound body.

Next, in an existing large electrolyzer (electrolyzer similar to that in Example 7-1), a fixed state of the adjacent electrolytic cells and the ion exchange membrane by means of a press device was released, and the existing membrane was removed out to provide a gap between the electrolytic cells. Thereafter, the wound body was conveyed onto the large electrolyzer. On the large electrolyzer, while the PVC pipe was upright, the wound state was released so as to pull out the wound anodes. At this time, the anodes were maintained substantially vertically to the ground, but the anodes did not come off. Then, after the anodes were inserted between the electrolytic cells, the electrolytic cells were moved to sandwich the anodes therebetween.

It was possible to replace anodes easier than in conventional ones. It was judged that renewing of the anodes can be completed in several tens of minutes per one cell when an anode wound body is provided in advance during the electrolytic operation.

### [Comparative Example 7-1]

### (Conventional renewing of electrode)

In an existing large electrolyzer (electrolyzer similar to that in Example 7-1), a fixed state of the adjacent electrolytic cells and the ion exchange membrane by means of a press device was released, and the existing membrane was removed out to provide a gap between the electrolytic cells. Thereafter, the electrolytic cells were hoisted out from the large electrolyzer with a hoist. The electrolytic cells removed were conveyed to a plant where welding was available.

After the anode fixed by welding on the rib of the electrolytic cell was stripped off, burrs or the like at the portion from which the anode was stripped off with a grinder to smooth the portion. The cathode was stripped off by removing the portion fixed by folding the portion into the collector.

Thereafter, a new anode was placed on the rib of the anode chamber, and the new anode was fixed to the electrolytic cell by spot welding. Similarly in the case of the cathode, a new cathode was placed on the cathode side and fixed by folding the cathode into the collector.

The renewed electrolytic cell was conveyed to the position of the large electrolyzer, and the electrolytic cell was returned in the electrolyzer using a hoist.

The period required from the release of the fixed state of the electrolytic cell and the ion exchange membrane to the refixing of the electrolytic cell was one day or more.

The present application is based on Japanese Patent Applications filed on March 22, 2017 (Japanese Patent Applications No. 2017-056524 and No. 2017-056525) and Japanese Patent Applications filed on March 20, 2018 (Japanese Patent Applications No. 2018-053217, No. 2018-053146, No. 2018-053144, No. 2018-053231, No. 2018-053145, No. 2018-053149, and No.2018-053139), the contents of which are herein incorporated by reference.

### Reference Signs List

### <Figures for first embodiment>

### Reference signs list for Figure 1

- 10: substrate for electrode for electrolysis
- 20: first layer
- 30: second layer
- 100: electrode for electrolysis

### Reference signs list for Figures 2 to 4

- 1: ion exchange membrane
- 2: carboxylic acid layer
- 3: sulfonic acid layer
- 4: reinforcement core material
- 10: membrane body
- 11a, 11b: coating layer
- 21, 22: reinforcement core material
- 100: electrolyzer
- 200: anode
- 300: cathode
- 52: reinforcement yarn
- 504a: sacrifice yarn
- 504: continuous hole

### Reference signs list for Figures 5 to 9

- 1: electrolytic cell
- 2: ion exchange membrane
- 4: electrolyzer
- 5: press device
- 6: cathode terminal
- 7: anode terminal
- 10: anode chamber
- 11: anode
- 12: anode gasket
- 13: cathode gasket
- 18: reverse current absorber
- 18a: substrate
- 18b: reverse current absorbing layer
- 19: bottom of anode chamber
- 20: cathode chamber
- 21: cathode
- 22: metal elastic body
- 23: collector
- 24: support
- 30: partition wall
- 40: cathode structure for electrolysis

### Reference signs list for Figure 10

1 ... pinch jig (SUS)
2 ... electrode
3 ...membrane
4 ... nickel plate (blasted with alumina of grain-size number 320)
100 ... front face
200 ... side face

### Reference signs list for Figures 11 to 13

1 ... membrane
2a ... polyethylene pipe having an outer diameter of 280 mm
2b ... polyethylene pipe having an outer diameter of 145 mm
3 ... delaminated portion
4 ... close contact portion
5 ... electrode

### Reference signs list for Figure 14

- 1: polyvinyl chloride (PVC) pipe
- 2: ion exchange membrane
- 3: electrode
- 4: surface plate

### Reference signs list for Figure 15

- 1: surface plate
- 2: deformed electrode
- 10: jig for fixing electrode
- 20: direction in which a force is applied

### Reference signs list for Figures 16 to 21

- 1: 110 mm nickel line
- 2: 950 mm nickel line
- 3: frame

### <Figures for second embodiment>

### Reference signs list for Figure 22

- 10: substrate for electrode for electrolysis
- 20: first layer
- 30: second layer
- 100: electrode for electrolysis

### Reference signs list for Figures 23 to 25

- 1: ion exchange membrane
- 2: carboxylic acid layer
- 3: sulfonic acid layer
- 4: reinforcement core material
- 10: membrane body
- 11a, 11b: coating layer
- 21, 22: reinforcement core material
- 100: electrolyzer
- 200: anode
- 300: cathode
- 52: reinforcement yarn
- 504a: sacrifice yarn
- 504: continuous hole

### Reference signs list for Figures 26 to 30

- 1: electrolytic cell
- 2: ion exchange membrane
- 4: electrolyzer
- 5: press device
- 6: cathode terminal
- 7: anode terminal
- 10: anode chamber
- 11: anode
- 12: anode gasket
- 13: cathode gasket
- 18: reverse current absorber
- 18a: substrate
- 18b: reverse current absorbing layer
- 19: bottom of anode chamber
- 20: cathode chamber
- 21: cathode
- 22: metal elastic body
- 23: collector
- 24: support
- 30: partition wall
- 40: cathode structure for electrolysis

### Reference signs list for Figure 31

1 ... pinch jig (SUS)
2 ... electrode
3 ... membrane
4 ... nickel plate (blasted with alumina of grainsize number 320)
100 ... front face
200 ... side face

### Reference signs list for Figures 32 to 34

1 ... membrane
2a ... polyethylene pipe having an outer diameter of 280 mm
2b ... polyethylene pipe having an outer diameter of 145 mm
3 ... delaminated portion
4 ... close contact portion
5 ... electrode

### Reference signs list for Figure 35

- 1: polyvinyl chloride (PVC) pipe
- 2: ion exchange membrane
- 3: electrode
- 4: surface plate

### Reference signs list for Figure 36

- 1: surface plate
- 2: deformed electrode
- 10: jig for fixing electrode
- 20: direction in which a force is applied

### Reference signs list for Figures 37 to 42

- 1: 110 mm nickel line
- 2: 950 mm nickel line
- 3: frame

### <Figures for third embodiment>

### Reference signs list for Figure 43

- 10: substrate for electrode for electrolysis
- 20: first layer
- 30: second layer
- 100: electrode for electrolysis

### Reference signs list for Figures 44 to 46

- 1: ion exchange membrane
- 2: carboxylic acid layer
- 3: sulfonic acid layer
- 4: reinforcement core material
- 10: membrane body
- 11a, 11b: coating layer
- 21, 22: reinforcement core material
- 100: electrolyzer
- 200: anode
- 300: cathode
- 52: reinforcement yarn
- 504a: sacrifice yarn
- 504: continuous hole 504

### Reference signs list for Figures 47 to 51

- 1: laminate
- 2: electrode for electrolysis
- 2a: inner surface of electrode for electrolysis
- 2b: outer surface of electrode for electrolysis
- 3: membrane
- 3a: inner surface of membrane
- 3b: uter surface of membrane
- 7: fixing member

### Reference signs list for Figures 52 to 56

- 1: electrolytic cell
- 2: ion exchange membrane
- 4: electrolyzer
- 5: press device
- 6: athode terminal
- 7: anode terminal
- 10: anode chamber
- 11: anode
- 12: anode gasket
- 13: cathode gasket
- 18: reverse current absorber
- 18a: ubstrate
- 18b: reverse current absorbing layer
- 19: bottom of anode chamber
- 20: cathode chamber
- 21: cathode
- 22: metal elastic body
- 23: collector
- 24: support
- 30: partition wall
- 40: cathode structure for electrolysis

### <Figures for fourth embodiment>

### Reference signs list for Figures 63 to 67

- 1: electrolytic cell
- 2: ion exchange membrane
- 4: electrolyzer
- 5: press device
- 6: cathode terminal
- 7: anode terminal
- 10: anode chamber
- 11: anode
- 12: anode gasket
- 13: cathode gasket
- 18: reverse current absorber
- 18a: substrate
- 18b: reverse current absorbing layer
- 19: bottom of anode chamber
- 20: cathode chamber
- 21: cathode
- 22: metal elastic body
- 23: collector
- 24: support
- 30: partition wall
- 40: cathode structure for electrolysis

### Reference signs list for Figure 68

- 10: substrate for electrode for electrolysis
- 20: first layer
- 30: second layer
- 100: electrode for electrolysis

### Reference signs list for Figures 69 to 71

- 1: ion exchange membrane
- 2: carboxylic acid layer
- 3: sulfonic acid layer
- 4: reinforcement core material
- 10: membrane body
- 11a, 11b: coating layer
- 21, 22: reinforcement core material
- 100: electrolyzer
- 200: anode
- 300: cathode
- 52: reinforcement yarn
- 504a: sacrifice yarn
- 504: continuous hole

### Reference signs list for Figures 72 to 78

- 1: laminate
- 2: electrode for electrolysis
- 2a: inner surface of electrode for electrolysis
- 2b: outer surface of electrode for electrolysis
- 3: membrane
- 3a: inner surface of membrane
- 3b: outer surface of membrane
- 7: fixing member
- A: gasket
- B: membrane
- C: electrode for electrolysis
- A1: outermost perimeter of gasket
- B1: outermost perimeter of membrane
- C1: outermost perimeter of electrode for electrolysis

### Reference signs list for Figure 79

1 ... pinch jig (SUS)
2 ... electrode
3 ... membrane
4 ... nickel plate (blasted with alumina of grainsize number 320)
100 ... front face
200 ... side face

### Reference signs list for Figures 80 to 82

1 ... membrane
2a ... polyethylene pipe having an outer diameter of 280 mm
2b ... polyethylene pipe having an outer diameter of 145 mm
3 ... delaminated portion
4 ... close contact portion
5 ... electrode

### Reference signs list for Figure 84

- 1: surface plate
- 2: deformed electrode
- 10: jig for fixing electrode
- 20: direction in which a force is applied

### Reference signs list for Figures 85 to 90

- 1: 110 mm nickel line
- 2: 950 mm nickel line
- 3: frame

### <Figures for fifth embodiment>

### Reference signs list for Figures 91 to 95

- 1: electrolytic cell
- 2: ion exchange membrane
- 4: electrolyzer
- 5: press device
- 6: cathode terminal
- 7: anode terminal
- 10: anode chamber
- 11: anode
- 12: anode gasket
- 13: cathode gasket
- 18: reverse current absorber
- 18a: substrate
- 18b: reverse current absorbing layer
- 19: bottom of anode chamber
- 20: cathode chamber
- 21: cathode
- 22: metal elastic body
- 23: collector
- 24: support
- 30: partition wall
- 40: cathode structure for electrolysis

### Reference signs list for Figure 96

- 10: substrate for electrode for electrolysis
- 20: first layer
- 30: second layer
- 100: electrode for electrolysis

### Reference signs list for Figures 97 to 99

- 1: ion exchange membrane
- 2: carboxylic acid layer
- 3: sulfonic acid layer
- 4: reinforcement core material
- 10: membrane body
- 11a, 11b: coating layer
- 21, 22: reinforcement core material
- 100: electrolyzer
- 200: anode
- 300: cathode
- 52: reinforcement yarn
- 504a: sacrifice yarn
- 504: continuous hole

### <Figures for sixth embodiment>

### Reference signs list for Figures 103 to 107

- 1: electrolytic cell
- 2: ion exchange membrane
- 4: electrolyzer
- 5: press device
- 6: cathode terminal
- 7: anode terminal
- 10: anode chamber
- 11: anode
- 12: node gasket
- 13: cathode gasket
- 18: reverse current absorber
- 18a: substrate
- 18b: reverse current absorbing layer
- 19: bottom of anode chamber
- 20: cathode chamber
- 21: cathode
- 22: metal elastic body
- 23: collector
- 24: support
- 30: partition wall
- 40: cathode structure for electrolysis

### Reference signs list for Figure 108

- 10: substrate for electrode for electrolysis
- 20: first layer
- 30: second layer
- 100: electrode for electrolysis

### Reference signs list for Figures 109 to 111

- 1: ion exchange membrane
- 2: carboxylic acid layer
- 3: sulfonic acid layer
- 4: reinforcement core material
- 10: membrane body
- 11a, 11b: coating layer
- 21, 22: reinforcement core material
- 100: electrolyzer
- 200: anode
- 300: cathode
- 52: reinforcement yarn
- 504a: sacrifice yarn
- 504: continuous hole

### <Figures for seventh embodiment>

### Reference signs list for Figures 112 to 118

- 1: electrolytic cell
- 2: ion exchange membrane
- 2a: new ion exchange membrane
- 4: electrolyzer
- 5: press device
- 6: cathode terminal
- 7: anode terminal
- 8: electrolyzer frame
- 9: laminate
- 10: anode chamber
- 11: anode
- 12: anode gasket
- 13: cathode gasket
- 18: reverse current absorber
- 18a: substrate
- 18b: reverse current absorbing layer
- 19: bottom of anode chamber
- 20: cathode chamber
- 21: cathode
- 22: metal elastic body
- 23: collector
- 24: support
- 30: partition wall
- 40: cathode structure for electrolysis
- 100: electrode for electrolysis

### Reference signs list for Figure 119

- 10: substrate for electrode for electrolysis
- 20: first layer
- 30: second layer
- 100: electrode for electrolysis

### Reference signs list for Figures 120 to 122

- 1: ion exchange membrane
- 2: carboxylic acid layer
- 3: sulfonic acid layer
- 4: reinforcement core material
- 10: membrane body
- 11a, 11b: coating layer
- 21, 22: reinforcement core material
- 100: electrolyzer
- 200: anode
- 300: cathode
- 52: reinforcement yarn
- 504a: sacrifice yarn
- 504: continuous hole

## Claims

1. A method for producing a new electrolyzer by arranging a laminate in an existing electrolyzer comprising an anode, a cathode that is opposed to the anode, and a membrane that is arranged between the anode and the cathode, the method comprising:
a step (A) of integrating an electrode for electrolysis with a new membrane at a temperature at which the membrane does not melt to thereby obtain the laminate, wherein the method for the integration is a method in which a liquid is interposed between the electrode for electrolysis and the new membrane, wherein the surface tension of the liquid integrates the electrode and the new membrane and wherein a temperature at which the membrane does not melt is a temperature below the softening point of the membrane; and
a step (B) of replacing the membrane in the existing electrolyzer by the laminate after the step (A), wherein the laminate is arranged on the surface of the anode or the cathode of the existing electrolyzer.

2. The method for producing the electrolyzer according to claim 1, wherein the integration is carried out under normal pressure.

## Patentansprüche

1. Verfahren zur Herstellung eines neuen Elektrolyseurs durch Anordnen eines Laminats in einem vorhandenen Elektrolyseur, der eine Anode, eine Kathode, die der Anode gegenüberliegt, und eine Membran, die zwischen der Anode und der Kathode angeordnet ist, umfasst, wobei das Verfahren umfasst:
einen Schritt (A), in dem eine Elektrode für die Elektrolyse bei einer Temperatur, bei der die Membran nicht schmilzt, mit einer neuen Membran integriert wird, um dadurch das Laminat zu erhalten, wobei das Verfahren für die Integration ein Verfahren ist, bei dem eine Flüssigkeit zwischen der Elektrode für die Elektrolyse und der neuen Membran platziert wird, wobei die Oberflächenspannung der Flüssigkeit die Elektrode und die neue Membran miteinander integriert, und wobei die Temperatur, bei der die Membran nicht schmilzt, eine Temperatur unterhalb des Erweichungspunkts der Membran ist; und
einen Schritt (B), bei dem die Membran in dem vorhandenen Elektrolyseur nach dem Schritt (A) durch das Laminat ersetzt wird, wobei das Laminat auf der Oberfläche der Anode oder der Kathode des vorhandenen Elektrolyseurs angeordnet ist.

2. Verfahren zur Herstellung des Elektrolyseurs gemäß Anspruch 1, wobei die Integration unter normalem Druck durchgeführt wird.

## Revendications

1. Procédé de production d'un nouvel électrolyseur par disposition d'un stratifié dans un électrolyseur existant comprenant une anode, une cathode qui fait face à l'anode et une membrane qui est disposée entre l'anode et la cathode, le procédé comprenant :
une étape (A) d'intégration d'une électrode pour électrolyse avec une nouvelle membrane à une température à laquelle la membrane ne fond pas pour obtenir ainsi le stratifié, le procédé d'intégration étant un procédé dans lequel un liquide est interposé entre l'électrode pour électrolyse et la nouvelle membrane, la tension superficielle du liquide intégrant l'électrode et la nouvelle membrane et une température à laquelle la membrane ne fond pas est une température inférieure au point de ramollissement de la membrane ; et
une étape (B) de remplacement de la membrane dans l'électrolyseur existant par le stratifié après l'étape (A), le stratifié étant disposé sur la surface de l'anode ou de la cathode de l'électrolyseur existant.

2. Procédé de fabrication de l'électrolyseur selon la revendication 1, dans lequel l'intégration est réalisée sous pression normale.
